# EUROPEAN PATENT APPLICATION

(11) **EP 2 248 423 A1**
(43) Date of publication of application: **10.11.2010**
(21) Application number: 09715069.2
(22) Date of filing: 27.02.2009
(51) Int. Cl.: A01N 43/40, A01N 43/78, A01N 47/02, A01P 3/00, C07D 213/82, C07D 405/12, C07D 409/12, C07D 417/12

(54) **COMPOSITION FOR AGRICULTURAL USE FOR CONTROLLING OR PREVENTING PLANT DISEASES CAUSED BY PLANT PATHOGENS**

(30) Priority: 27.02.2008 JP 2008045846; 02.09.2008 JP 2008224469
(71) Applicant: Sumitomo Chemical Company, Limited, Tokyo 104-8260 (JP)
(72) Inventor: MATSUZAKI, Yuichi, Toyonaka-shi Osaka 560-0021 (JP); KOMORI, Takashi, Tokyo 176-0013 (JP); INOUE, Tohru, Nishinomiya-shi Hyogo 663-8101 (JP)
(74) Representative: Vossius & Partner
(86) International application number: PCT/JP2009/053646
(87) International publication number: WO 2009/107764

(57) **Abstract**

Disclosed is a composition for agricultural use, which is used for controlling or preventing plant diseases caused by plant pathogens. The composition for agricultural use contains a compound represented by formula (1), a salt thereof or a hydrate of the compound or the salt. (1) [In the formula, Z represents an oxygen atom, a sulfur atom or NR^{z}; and E represents a furyl group, a thienyl group, a pyrrolyl group, a tetrazolyl group, a thiazolyl group, a pyrazolyl group, a phenyl group or the like.]

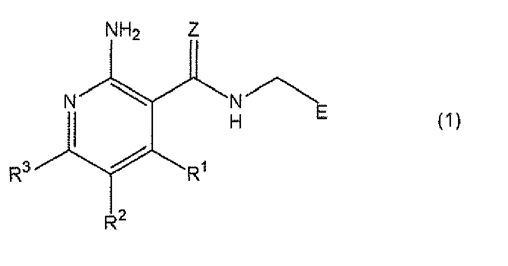

## Description

### TECHNICAL FIELD

The present invention relates to an agricultural composition for controlling or preventing plant diseases caused by plant pathogenic microbes, comprising an amide compound, a salt thereof or a hydrate thereof, and a method for controlling or preventing plant diseases caused by plant pathogenic microbes, which comprises applying an effective amount of the aforementioned agricultural composition to useful crops.

### BACKGROUND ART

Agricultural compositions for controlling plant diseases have conventionally been known. However, it has always desired to produce a more highly active agricultural composition for controlling plant diseases. On the other hand, the amide compound described in PATENT DOCUMENT 1 and the like have been disclosed and thus have been publicly known.

PATENT DOCUMENT 1: International Patent Publication WO2005/033079

### DISCLOSURE OF THE INVENTION

### PROBLEMS TO BE SOLVED BY THE INVENTION

It is an object of the present invention to provide: an agricultural composition for controlling or preventing plant diseases caused by plant pathogenic microbes; a method for controlling or preventing plant diseases caused by plant pathogenic microbes, which comprises applying an effective amount of the aforementioned agricultural composition to useful crops; etc.

### MEANS FOR SOLVING THE PROBLEMS

As a result of intensive studies, the present inventor has found that a compound represented by the following formula (1) has an excellent effect for controlling or preventing plant diseases caused by plant pathogenic microbes, thereby completing the present invention. Compound represented by formula (1): 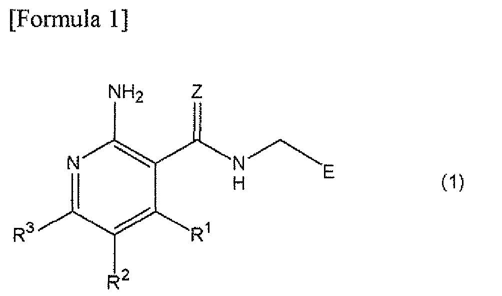 wherein Z represents an oxygen atom, a sulfur atom, or NR^{Z} wherein R^{Z} represents a C1-6 alkoxy group or a cyano group;
E represents a furry group that may optionally have one or two substituents selected from the following substituent group a-1 and substituent group a-2, a thienyl group that may optionally have one or two substituents selected from the following substituent group a-1 and substituent group a-2, a pyrrolyl group that may optionally have one or two substituents selected from the following substituent group a-1 and substituent group a-2, a tetrazolyl group that may optionally have one or two substituents selected from the following substituent group a-1 and substituent group a-2, a thiazolyl group that may optionally have one or two substituents selected from the following substituent group a-1 and substituent group a-2, a pyrazolyl group that may optionally have one or two substituents selected from the following substituent group a-1 and substituent group a-2, or a phenyl group that may optionally have one or two substituents selected from the following substituent group a-1 and substituent group a-2; and
each of R¹, R² and R³ independently represents a hydrogen atom or a group selected from the substituent group a-1 and the substituent group a-2;

### [Substituent group a-1]

halogen atom, amino group, hydroxyl group, mercapto group, cyano group, formyl group, carboxyl group, C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C3-8 cycloalkylidene C1-6 alkyl group, C6-10 aryl C1-6 alkyl group, C6-10 aryl C2-6 alkenyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5- to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-C1-8 alkylamino group, C1-8 alkylcarbonyl group, C6-10 arylcarbonyl group, C1-8 alkoxycarbonyl group, C1-8 alkylsulfonyl group, C1-8 alkylsulfinyl group, a group represented by a formula - C(=N-R^{a1})R^{a2} (wherein R^{a1} represents a hydroxyl group or a C1-8 alkoxy group; and R^{a2} represents a hydrogen atom or a C1-8 alkyl group), C6-10 aryloxy C1-6 alkyl group, 5- to 10-membered heterocyclic oxy C1-6 alkyl group and C1-3 trialkylsilyl C2-9 alkynyl group; and

### [Substituent group a-2]

C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5-to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-C1-8 alkylamino group, C6-10 aryloxy C1-6 alkyl group and 5- to 10-membered heterocyclic oxy C1-6 alkyl group;
wherein each group described in the substituent group a-2 has one to three substituents selected from the following substituent group b:

### [Substituent group b]

halogen atom, hydroxyl group, mercapto group, cyano group, carboxyl group, amino group, carbamoyl group, nitro group, C1-6 alkyl group, C3-8 cycloalkyl group, C6-10 aryl group, 5- to 10-membered heterocyclic group, C1-6 alkoxy group, C6-10 aryloxy group, 5- to 10-membered heterocyclic oxy group, C1-6 alkoxycarbonyl group, C1-6 alkylthio group, C1-6 alkylsulfonyl group, trifluoromethyl group, trifluoromethoxy group, mono-C1-6 alkylamino group, di-C1-6 alkylamino group, mono-C6-10 arylamino group optionally having one amino group or one aminosulfonyl group, and N-C6-10 aryl C1-6 alkyl-N-C1-6 alkylamino group optionally having one amino group; a salt thereof or a hydrate thereof.

That is to say, the present invention provides the following (1) to (3):
(1) an agricultural composition (hereinafter referred to as the agricultural composition of the present invention at times) comprising the compound represented by the above formula (1), a salt thereof or a hydrate thereof (hereinafter referred to as the present compound at times), which is used for controlling or preventing plant diseases caused by plant pathogenic microbes (except for Aspergillus),
(2) a method for controlling or preventing plant diseases caused by plant pathogenic microbes (except for Aspergillus), comprising applying an effective amount of the agricultural composition to useful crops, and
(3) use of the compound represented by formula (1), a salt thereof or a hydrate thereof for production of the agricultural composition of the present invention.

### ADVANTAGE OF THE INVENTION

According to the present invention, it becomes possible to provide an agricultural composition for controlling or preventing plant diseases caused by plant pathogenic microbes (except for Aspergillus), a method for controlling or preventing plant diseases caused by plant pathogenic microbes (except for Aspergillus), comprising applying an effective amount of the agricultural composition to useful crops etc.

### BEST MODE FOR CARRYING OUT THE INVENTION

In the formula (1) that represents the present compound, each of R¹, R² and R³ independently represents a hydrogen atom or a group selected from the aforementioned substituent group a-1 and substituent group a-2, and preferably represents a hydrogen atom or a group selected from the following substituent group c-1 and substituent group c-2:

### [Substituent group c-1]

halogen atom, amino group, C1-6 alkyl group, C2-6 alkenyl group, C2-6 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, C6-10 aryl C2-6 alkenyl group, 5- to 10-membered heterocyclic C1-6 alkyl group, C1-6 alkoxy group, C3-6 alkenyloxy group, C3-6 alkynyloxy group, C3-8 cycloalkyl C1-6 alkoxy group, C6-10 aryl C1-6 alkoxy group, 5- to 10-membered heterocyclic C1-6 alkoxy group, mono-C1-6 alkylamino group, mono-C3-6 alkenylamino group, mono-C3-6 alkynylamino group, mono-C3-8 cycloalkylamino group, mono-C1-6 arylamino group, mono-C6-10 cycloalkyl C1-6 alkylamino group, mono-C1-6 aryl C1-6 alkylamino group, mono-5- to 10-membered heterocyclic C1-6 alkylamino group, C2-6 alkylcarbonyl group and a group represented by a formula -C(=N-OH)R^{a2} wherein R^{a2} has the same meanings as defined above; and

### [Substituent group c-2]

C1-6 alkyl group, C2-6 alkenyl group, C2-6 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, 5- to 10-membered heterocyclic C1-6 alkyl group, C1-6 alkoxy group, C3-6 alkenyloxy group, C3-6 alkynyloxy group, C3-8 cycloalkyl C1-6 alkoxy group, C6-10 aryl C1-6 alkoxy group, 5- to 10-membered heterocyclic C1-6 alkoxy group, mono-C1-6 alkylamino group, mono-C3-6 alkenylamino group, mono-C3-6 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group and mono-5- to 10-membered heterocyclic C1-6 alkylamino group; wherein each group described in the substituent group c-2 has one to three substituents selected from the following substituent group d:

### [Substituent group d]

halogen atom, hydroxyl group, carboxyl group, amino group, carbamoyl group, C1-6 alkyl group, C1-6 alkoxy group, C1-6 alkylthio group, mono-C1-6 alkylamino group, di-C1-6 alkylamino group, mono-C6- 10 arylamino group optionally having one amino group or one aminosulfonyl group, N-C6-10 aryl C1-6 alkyl-N-C1-6 alkylamino group optionally having one amino group, cyano group, C6-10 aryl group, 5- to 10-membered heterocyclic group and C1-6 alkoxycarbonyl group.

In the formula (1), each of R¹, R² and R³ more preferably represents a hydrogen atom or a group selected from the following substituent group c-11 and substituent group c-12:

### [Substituent group c-11]

halogen atom, amino group, C1-6 alkyl group, C2-6 alkenyl group, C2-6 alkynyl group, C3-8 cycloalkyl group, C3-8 cycloalkyl C1-6 alkyl group, C1-6 alkoxy group, C3-6 alkenyloxy group, C3-6 alkynyloxy group, C3-8 cycloalkyl C1-6 alkoxy group, mono-C1-6 alkylamino group, mono-C3-6 alkenylamino group, mono-C3-6 alkynylamino group, mono-C3-8 cycloalkylamino group and mono-C3-8 cycloalkyl C1-6 alkylamino group; and

### [Substituent group c-12]

C1-6 alkyl group, C2-6 alkenyl group, C2-6 alkynyl group, C3-8 cycloalkyl group, C3-8 cycloalkyl C1-6 alkyl group, C1-6 alkoxy group, C3-6 alkenyloxy group, C3-6 alkynyloxy group, C3-8 cycloalkyl C1-6 alkoxy group, mono-C1-6 alkylamino group, mono-C3-6 alkenylamino group, mono-C3-6 alkynylamina group, mono-C3-8 cycloalkylamino group, and mono-C3-8 cycloalkyl C1-6 alkylamino group;
wherein each group described in the substituent group c-12 has one to three substituents selected from the following substituent group d1:

### [Substituent group d1]

halogen atom, hydroxyl group, carboxyl group, amino group, carbamoyl group, C1-6 alkyl group, C1-6 alkoxy group, C1-6 alkylthio group, mono-C1-6 alkylamino group, di-C1-6 alkylamino group, and cyano group.

In the formula (1), each of R¹, R² and R³ further preferably represents a hydrogen atom or a group selected from the following substituent group c-21 and substituent group c-22:

### [Substituent group c-21]

halogen atom, amino group, C1-6 alkyl group, C1-6 alkoxy group and mono-C1-6 alkylamino group; and

### [Substituent group c-22]

C1-6 alkyl group, C1-6 alkoxy group and mono-C1-6 alkylamino group;
wherein each group described in the substituent group c-22 has one to three substituents selected from the following substituent group d2:

### [Substituent group d2]

halogen atom, C1-6 alkoxy group and C1-6 alkylthio group.

In the formula (1), still further preferably, R¹ represents a hydrogen atom, R² represents a hydrogen atom or a halogen atom (particularly, a fluorine atom or a chlorine atom), and R³ represents a hydrogen atom, a halogen atom (particularly, a fluorine atom or a chlorine atom), an amino group, a mono-C1-3 alkylamino group, C1-3 alkyl group, C1-3 alkoxy group, or a C1-3 alkoxy C1-3 alkyl group.

Moreover, as a combination of R¹, R²and R³ in the compound represented by the formula (1), a combination in which R¹ represents a hydrogen atom, R² represents a hydrogen atom or a halogen atom, and R³ represents a hydrogen atom or a group selected from the substituent group c-21 and the substituent group c-22, is preferable. Further, a combination in which R¹, R² and R³ are all hydrogen atoms is more preferable.

Z in the formula (1) representing the present compound represents an oxygen atom, a sulfur atom, or NR^{Z} wherein R^{Z} represents a C1-6 alkoxy group or a cyano group, and such Z preferably represents an oxygen atom.

E in the formula (1) representing the present compound represents a furyl group that may optionally have one or two substituents selected from the following substituent group a-1 and substituent group a-2, a thienyl group that may optionally have one or two substituents selected from the following substituent group a-1 and substituent group a-2, a pyrrolyl group that may optionally have one or two substituents selected from the following substituent group a-1 and substituent group a-2, a tetrazolyl group that may optionally have one or two substituents selected from the following substituent group a-1 and substituent group a-2, a thiazolyl group that may optionally have one or two substituents selected from the following substituent group a-1 and substituent group a-2, a pyrazolyl group that may optionally have one or two substituents selected from the following substituent group a-1 and substituent group a-2, or a phenyl group that may optionally have one or two substituents selected from the following substituent group a-1 and substituent group a-2:

### [Substituent group a-1]

halogen atom, amino group, hydroxyl group, mercapto group, cyano group, formyl group, carboxyl group, C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C3-8 cycloalkylidene C1-6 alkyl group, C6-10 aryl C1-6 alkyl group, C6-10 aryl C2-6 alkenyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5- to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-Cl-8 alkylamino group, C1-8 alkylcarbonyl group, C6-10 arylcarbonyl group, C1-8 alkoxycarbonyl group, C1-8 alkylsulfonyl group, C1-8 alkylsulfinyl group, a group represented by a formula - C(=N-R^{a1})R^{a2} (wherein R^{a1} represents a hydroxyl group or a C1-8 alkoxy group; and R^{a2} represents a hydrogen atom or a C1-8 alkyl group), C6-10 aryloxy C1-6 alkyl group, 5- to 10-membered heterocyclic oxy C1-6 alkyl group and C1-3 trialkylsilyl C2-9 alkynyl group; and

### [Substituent group a-2]

C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5- to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-C1-8 alkylamino group, C6-10 aryloxy C1-6 alkyl group and 5- to 10-membered heterocyclic oxy C1-6 alkyl group;
wherein each group described in the substituent group a-2 has one to three substituents selected from the following substituent group b:

### [Substituent group b]

halogen atom, hydroxyl group, mercapto group, cyano group, carboxyl group, amino group, carbamoyl group, nitro group, C1-6 alkyl group, C3-8 cycloalkyl group, C6-10 aryl group, 5- to 10-membered heterocyclic group, C1-6 alkoxy group, C6-10 aryloxy group, 5- to 10-membered heterocyclic oxy group, C1-6 alkoxycarbonyl group, C1-6 alkylthio group, C1-6 alkylsulfonyl group, trifluoromethyl group, trifluoromethoxy group, mono-C1-6 alkylamino group, di-C1-6 alkylamino group, mono-C6-10 arylamino group optionally having one amino group or one aminosulfonyl group and N-C6-10 aryl C1-6 alkyl-N-C1-6 alkylamino group optionally having one amino group.

E preferably represents a furyl group that may optionally have one or two substituents selected from the following substituent group e-1 and substituent group e-2, a thienyl group that may optionally have one or two substituents selected from the following substituent group e-1 and substituent group e-2, a pyrrolyl group that may optionally have one or two substituents selected from the following substituent group e-1 and substituent group e-2, or a phenyl group that may optionally have one or two substituents selected from the following substituent group e-1 and substituent group e-2:

### [Substituent group e-1]

halogen atom, C1-6 alkyl group, C2-6 alkenyl group, C2-6 alkynyl group, C6-10 aryl group, C3-8 cycloalkyl C1-6 alkyl group, C3-8 cycloalkylidene C1-6 alkyl group, C6-10 aryl C1-6 alkyl group, C6-10 aryl C2-6 alkenyl group, 5- to 10-membered heterocyclic C1-6 alkyl group, C1-6 alkoxy group, C3-6 alkenyloxy group, C3-6 alkynyloxy group, C6-10 aryloxy group, C3-8 cycloalkyl C1-6 alkoxy group, C6-10 aryl C1-6 alkoxy group, 5- to 10-membered heterocyclic C1-6 alkoxy group, C6-10 arylthio group, C6-10 aryl C1-6 alkylthio group, mono-C6-10 arylamino group, mono-C6-10 aryl C1-6 alkylamino group, N-C6-10 aryl-N-C1-6 alkylamino group, N-C6-10 aryl C1-6 alkyl-N-C1-6 alkylamino group, C6-10 aryloxy C1-6 alkyl group, and 5- to 10-membered heterocyclic oxy C1-6 alkyl group; and

### [Substituent group e-2]

C1-6 alkyl group, C2-6 alkenyl group, C2-6 alkynyl group, C6-10 aryl group, C3-8 cycloalkyl C1-6 alkyl group, C6-10 aryl C1-6 alkyl group, 5- to 10-membered heterocyclic C1-6 alkyl group, C1-6 alkoxy group, C3-6 alkenyloxy group, C3-6 alkynyloxy group, C6-10 aryloxy group, C3-8 cycloalkyl C1-6 alkoxy group, C6-10 aryl C1-6 alkoxy group, 5- to 10-membered heterocyclic C1-6 alkoxy group, C6-10 arylthio group, C6-10 aryl C1-6 alkylthio group, mono-C6-10 arylamino group, mono-C6-10 aryl C1-6 alkylamino group, N-C6-10 aryl-N-C1-6 alkylamino group, N-C6-10 aryl C1-6 alkyl-N-C1-6 alkylamino group, C6-10 aryloxy C1-6 alkyl group and 5- to 10-membered heterocyclic oxy C1-6 alkyl group;
wherein each group described in the substituent group e-2 has one to three substituents selected from the following substituent group f:

### [Substituent group f]

halogen atom, hydroxyl group, cyano group, amino group, nitro group, C3-8 cycloalkyl group, C1-6 alkoxy group, C1-6 alkylthio group, C6-10 aryloxy group, 5- to 10-membered heterocyclic oxy group, C1-6 alkoxycarbonyl group, C1-6 alkylsulfonyl group, mono-C6-10 arylamino group, trifluoromethyl group, trifluoromethoxy group and C1-6 alkyl group.

More preferably, E represents a furyl group that may optionally have one or two substituents selected from the following substituent group g-1 and substituent group g-2, a thienyl group that may optionally have one or two substituents selected from the following substituent group g-1 and substituent group g-2, a pyrrolyl group that may optionally have one or two substituents selected from the following substituent group g-1 and substituent group g-2 or a phenyl group that may optionally have one or two substituents selected from the following substituent group g-1 and substituent group g-2.
Further preferably, E represents a furyl group that may optionally have one substituent selected from the following substituent group g-1 and substituent group g-2, a thienyl group that may optionally have one substituent selected from the following substituent group g-1 and substituent group g-2, a pyrrolyl group that may optionally have one substituent selected from the following substituent group g-1 and substituent group g-2, or a phenyl group that may optionally have one substituent selected from the following substituent group g-1 and substituent group g-2:

### [Substituent group g-1]

C1-6 alkyl group, C2-6 alkenyl group, C2-6 alkynyl group, C3-8 cycloalkyl C1-6 alkyl group, phenyl C1-6 alkyl group, furyl C1-6 alkyl group, thienyl C1-6 alkyl group, benzofuryl C1-6 alkyl group, benzothienyl C1-6 alkyl group, C1-6 alkoxy group, C3-6 alkenyloxy group, C3-6 alkynyloxy group, phenoxy group, C3-8 cycloalkyl C1-6 alkoxy group, phenyl C1-6 alkoxy group, furyl C1-6 alkoxy group, thienyl C1-6 alkoxy group, pyridyl C1-6 alkoxy group, phenoxy C1-6 alkyl group and pyridyloxy C1-6 alkyl group; and

### [Substituent group g-2]

C1-6 alkyl group, C2-6 alkenyl group, C2-6 alkynyl group, C3-8 cycloalkyl C1-6 alkyl group, phenyl C1-6 alkyl group, furyl C1-6 alkyl group, thienyl C1-6 alkyl group, benzofuryl C1-6 alkyl group, benzothienyl C1-6 alkyl group, C1-6 alkoxy group, C3-6 alkenyloxy group, C3-6 alkynyloxy group, phenoxy group, C3-8 cycloalkyl C1-6 alkoxy group, phenyl C1-6 alkoxy group, furyl C1-6 alkoxy group, thienyl C1-6 alkoxy group, pyridyl C1-6 alkoxy group, phenoxy C1-6 alkyl group and pyridyloxy C1-6 alkyl group;
wherein each group described in the substituent group g-2 has one to three substituents selected from the following substituent group h:

### [Substituent group h]

halogen atom, hydroxyl group, cyano group, trifluoromethyl group, C1-6 alkyl group, C1-6 alkoxy group and C1-6 alkylthio group.

Still further preferably, such E may be a group, wherein one or two hydrogen atoms of any one of a 2-furyl group, a 2-thienyl group, a pyrrolyl group, and a phenyl group may be substituted with (more preferably, may be monosubstituted with) [a fluorine atom, a chlorine atom, a C1-6 alkyl group (optionally substituted with one to three halogen atoms, C3-5 cycloalkyl groups, C1-6 alkoxy groups, phenoxy groups, 5- or 6-membered heterocyclic oxy groups or C1-6 alkyl groups), a C2-6 alkenyl group (optionally substituted with one to three halogen atoms, C3-5 cycloalkyl groups, C1-6 alkoxy groups, phenoxy groups, 5- or 6-membered heterocyclic oxy groups or C1-6 alkyl groups), a C2-6 alkynyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenyl group (optionally substituted with one to three halogen atoms, C3-5 cycloalkyl groups, C1-6 alkoxy groups, or C1-6 alkyl groups), a C3-5 cycloalkyl C1-6 alkyl group (optionally substituted with one to three halogen atoms or C1-6 alkyl groups), a C3-5 cycloalkylidene C1-6 alkyl group (optionally substituted with one to three halogen atoms or C1-6 alkyl groups), a phenyl C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenyl C2-6 alkenyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a 5- or 6-membered heterocyclic C1-6 alkyl group (optionally substituted with one to three halogen atoms, C3-5 cycloalkyl groups, C1-6 alkoxy groups, phenoxy groups, 5- or 6-membered heterocyclic oxy groups or C1-6 alkyl groups), a C1-6 alkoxy group (optionally substituted with one to three halogen atoms or C1-6 alkyl groups), a C3-6 alkenyloxy group (optionally substituted with one to three halogen atoms or C1-6 alkyl groups), a C3-6 alkynyloxy group (optionally substituted with one to three halogen atoms or C1-6 alkyl groups), a phenoxy group (optionally substituted with one to three halogen atoms, C3-5 cycloalkyl groups, C1-6 alkoxy groups, phenoxy groups, 5- or 6-membered heterocyclic oxy groups or C1-6 alkyl groups), a C3-6 cycloalkyl C1-6 alkoxy group optionally substituted with one to three halogen atoms, a phenyl C1-6 alkoxy group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a 5- or 6-membered heterocyclic C1-6 alkoxy group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenoxy C1-6 alkyl group (optionally substituted with one to three halogen atoms, C3-5 cycloalkyl groups, C1-6 alkoxy groups, phenoxy groups, or 5- or 6-membered heterocyclic oxy groups) or a 5- or 6-membered heterocyclic oxy C1-6 alkyl group (optionally substituted with one to three halogen atoms, C3-5 cycloalkyl groups, or C1-6 alkoxy groups).

Particularly preferably, such E may be a group, wherein one or two hydrogen atoms of any one of a 2-furyl group, a 2-thienyl group, and a phenyl group may be substituted with (more preferably, may be monosubstituted with) [a fluorine atom, a chlorine atom, a C1-6 alkyl group (optionally substituted with one to three halogen atoms, C3-5 cycloalkyl groups, C1-6 alkoxy groups, phenoxy groups, 5- or 6-membered heterocyclic oxy groups or C1-6 alkyl groups), a C2-6 alkenyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a C2-6 alkynyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenyl group (optionally substituted with one to three halogen atoms, C3-5 cycloalkyl groups, C1-6 alkoxy groups, or C1-6 alkyl groups), a C3-5 cycloalkyl C1-6 alkyl group (optionally substituted with one to three halogen atoms or C1-6 alkyl groups), a C3-5 cycloalkylidene C1-6 alkyl group (optionally substituted with one to three halogen atoms or C1-6 alkyl groups), a phenyl C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenyl C2-6 alkenyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a 5-or 6-membered heterocyclic C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a C1-6 alkoxy group (optionally substituted with one to three halogen atoms or C1-6 alkyl groups), a C3-6 alkenyloxy group (optionally substituted with one to three halogen atoms or C1-6 alkyl groups), a C3-6 alkynyloxy group (optionally substituted with one to three halogen atoms or C1-6 alkyl groups), a phenoxy group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a C3-6 cycloalkyl C1-6 alkoxy group optionally substituted with one to three halogen atoms, a phenyl C1-6 alkoxy group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a 5- or 6-membered heterocyclic C1-6 alkoxy group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenoxy C1-6 alkyl group (optionally substituted with one to three halogen atoms, C3-5 cycloalkyl groups, C1-6 alkoxy groups, phenoxy groups, or 5- or 6-membered heterocyclic oxy groups), or a 5- or 6-membered heterocyclic oxy C1-6 alkyl group (optionally substituted with one to three halogen atoms, C3-5 cycloalkyl groups, or C1-6 alkoxy groups)]; or
a 3-pyrrolyl group whose N (nitrogen atom) may be substituted with [a C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a C2-6 alkenyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a C2-6 alkynyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenyl group (optionally substituted with one to three halogen atoms, C3-5 cycloalkyl groups, C1-6 alkoxy groups, or C1-6 alkyl groups), a C3-5 cycloalkyl C1-6 alkyl group (optionally substituted with one to three halogen atoms or C1-6 alkyl groups), a C3-5 cycloalkylidene C1-6 alkyl group (optionally substituted with one to three halogen atoms or C1-6 alkyl groups), a phenol C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a 5- or 6-membered heterocyclic C1-6 alkyl group (optionally substituted with one to three halogen atoms, C3-5 cycloalkyl groups, C1-6 alkoxy groups, phenoxy groups, 5- or 6-membered heterocyclic oxy groups, or C1-6 alkyl groups), a phenoxy C1-6 alkyl group (optionally substituted with one to three halogen atoms, C3-5 cycloalkyl groups, C1-6 alkoxy groups, phenoxy groups, or 5- or 6-membered heterocyclic oxy groups), or a 5- or 6-membered heterocyclic oxy C1-6 alkyl group (optionally substituted with one to three halogen atoms, C3-5 cycloalkyl groups, or C1-6 alkoxy groups)].

In the present specification, examples of a halogen atom may include a fluorine atom, a chlorine atom, and a bromine atom. Examples of a C1-6 alkyl group may include a methyl group, an ethyl group, an n-propyl group, an iso-propyl group, an n-butyl group, an isobutyl group, an n-pentyl group, an iso-pentyl group, an n-hexyl group, a 4-methylpentyl group, and a 3-methylpentyl group. Examples of a C2-6 alkenyl group may include a vinyl group, an allyl group, a 2-butenyl group, a 3-butenyl group, a 2-pentenyl group, a 3-pentenyl group, a prenyl group, a 3-methyl-3-butenyl group, a 2-hexenyl group, a 3-hexenyl group, a 4-hexenyl group, a 4trmethyl-4-pentenyl group, and a 4-anethyl-3-pentenyl group. Examples of a C2-6 alkynyl group may include an ethynyl group, a propargyl group, a 2-butynyl group, a 3-butynyl group, a 2-pentynyl group, a 3-pentynyl group, a 4-pentynyl group, a 2-hexynyl group, a 3-hexynyl group, a 4-hexynyl group, and a 5-hexynyl group. Examples of a C3-8 cycloalkyl group may include a cyclolaropyl group, a cyclobutyl group, a cyclopentyl group, a cyclohexyl group, a cyclaheptyl group, and a cyclooctyl group. Examples of a C6-10 aryl group may include a phenyl group, an indennyl group, and a naphthyl group. Examples of a 5- to 10-membered heterocyclic group may include a furyl group, a thienyl group, a thiazolyl group, a pyrazolyl group, a pyridyl group, a pyrimidinyl group, a pyrazinyl group, a pyridazinyl group, a benzofuranyl group, a benzothienyl group, a benzothiazolyl group, a chromenyl group, an isocromenyl group, a thiocromenyl group, and an isathiocromenyl group. Examples of a C3-8 cycloalkyl C1-6 alkyl group may include a cyclopropylmethyl group, a cyclopropylethyl group, a cyclopropylpropyl group, a cyclopropylbutyl group, a cyclopropylpentyl group, a cyclopropylhexyl group, a cyclobutylmethyl group, a cyclobutylethyl group, a cyclobutylpropyl group, a cyclobutylbutyl group, a cyclobutylpentyl group, a cyclapentylethyl group, a cyclopentylpropyl group, a cydopentylbutyl group, a cyclohexylethyl group, and a cyclohexylpropyl group. Examples of a C3-8 cycloalkylidene C1-6 alkyl group may include a cyclopropylidenemethyl group, a cyclopropylideneethyl group, a cyclopropylidenepropyl group, a cyclopropylidenebutyl group, a cyclopropylidenepentyl group, a cyclopropylidenehexyl group, a cyclobutylidenemethyl group, a cyclobutylideneethyl group, a cyclobutylidenepropyl group, a cyclobutylidenebutyl group, a cyclobutylidenepentyl group, a cyclopentylideneethyl group, a cyclopentylidenepropyl group, a cyclopentylidenebutyl group, a cyclohexylideneethyl group, and a cyclohexylidenepropyl group. Examples of a C1-10 aryl C1-6 alkyl group may include a benzyl group, a phenethyl group, a phenylpropyl group, a phenylbutyl group, a phenylpentyl group, a 2-methyl-4-phenylbutyl group, a 2-methyl-5-phenylpentyl group, a 3-methyl-5-phenylpentyl group, and a (2-naphthyl)ethyl group. Examples of a 5- to 10-membered heterocyclic C1-6 alkyl group may include a furylmethyl group, a furylethyl group, a furylpropyl group, a furylbutyl group, a furylpentyl group, a furylhexyl group, a thienylmethyl group, a thienylethyl group, a thienylpropyl group, a thienylbutyl group, a thienylpentyl group, and a thienylhexyl group. Examples of a C1-6 alkoxy group may include a methoxy group, an ethoxy group, an n-propyloxy group, an iso-propoxy group, an n-butoxy group, an iso-butoxy group, a sec-butoxy group, an n-pentyloxy group, an iso-pentyloxy group, a sec-pentyloxy group, an n-hexyloxy group, an iso-hexyloxy group, a sec-hexyloxy group, and a 2,3-dimethylbutoxy group. Examples of a C3-6 alkenyloxy group may include an allyloxy group, a 1-methyl-2-prapenylaxy group a 2-butenyloxy group, a 3-butenyloxy group, a 2-pentenyloxy group, a 3-pentenyloxy group, a prenyloxy group, a 3-methyl-3-butenyloxy group, a 2-hexenyloxy group, a 3-hexenyloxy group, a 4-hexenyloxy group, a 4-methyl-4-pentenyloxy group, and a 4-methyl-3-pentenyloxy group. Examples of a C3-6 alkynyloxy group may include a propargyloxy group, a 2-butynyloxy group, a 3-butynyloxy group, a 2-pentynyloxy group, a 3-pentynyloxy group, a 4-pentynyloxy group, a 2-hexynyloxy group, a 3-hexynyloxy group, a 4-hexynyloxy group, and a 5-hexynyloxy group. Examples of a C3-8 cycloalkoxy group may include a cyclopropyloxy group, a cyclobutyloxy group, a cyclopentyloxy group, a cyclohexyloxy group, a cycloheptyloxy group, and a cyclooctyloxy group. Examples of a C6-10 aryloxy group may include a phenoxy group and a naphthoxy group. Examples of a C3-8 cycloalkyl C1-6 alkoxy group may include a cyclopropylmethoxy group, a cyclopropylethoxy group, a cyclopropylpropoxy group, a cyclopropylbutoxy group, a cyclopropylpentyloxy group, a cyclopropylhexyloxy group, a cyclobutylmethoxy group, a cyclobutylethoxy group, a cyclobutylpropoxy group, a cyclobutylbutoxy group, a cyclobutylpentyloxy group, a cyclopentylethoxy group, a cyclopentylpropoxy group, a cyclopentylbutoxy group, a cyclohexylethoxy group, and a cyclohexylpropoxy group. Examples of a C6-10 aryl C1-6 alkoxy group may include a benzyloxy group, a phenethyloxy group, a phenylpropyloxy group, a phenylbutyloxy group, a phenylpentyloxy group, a 2-methyl-4-phenylbutyloxy group, a 2-methyl-5-phenylpentylaxy group, a 3-methyl-5-phenylpentyloxy group and a (2-naphthyl)ethyloxy group. Examples of a 5- to 10-membered heterocyclic C1-6 alkoxy group may include a furylmethoxy group, a furylethoxy group, a furylpropyloxy group, a furylbutyloxy group, a furylpentyloxy group, a furylhexylaxy group, a thienylmethoxy group, a thienylethoxy group, a thienylpropyloxy group, a thienylbutyloxy group, a thienylpentyloxy group, and a thienylhexyloxy group. Examples of a C1-6 alkylthio group may include a methylthio group, an ethylthio group, an n-propylthio group, an iso-propylthio group, an n-butylthio group, an iso-butylthio group, an n-penylthio group, an iso-pentylthio group, an n-hexylthio group, a 4-methylpentylthio group, and a 3-methylpentylthio group. Examples of a C3-6 alkenylthio group may include an allylthio group, a 1-methyl-2-prapenylthio group, a 2-butenylthio group, a 3-butenylthio group, a 2-pentenylthio group, a 3-pentenylthio group, a prenylthio group, a 3-methyl-3-butenylthio group, a 2-hexenylthio group, a 3-hexenylthio group, a 4-laexenyltlaio group, a 4-methyl-4-pentenylthio group and a 4-methyl-3-pentenylthio group. Examples of a C3-6 alkynylthio group may include a propargylthio group, a 2-butynylthio group, a 3-butynylthio group, a 2-pentynylthio group, a 3-pentynylthio group, a 4-pentynylthio group, a 2-hexynylthio group, a 3-hexynylthio group, a 4-hexynylthio group, and a 5-hexynylthio group. Examples of a C3-8 cycloalkylthio group may include a cycloprapylthio group, a cyclobutylthio group, a cyclopentylthio group, a cyclohexylthio group, a cycloheptylthio group, and a cyclooctylthio group. Examples of a C6-10 arylthio group may include phenylthio group and naphthylthio group. Examples of a C3-8 cycloalkyl C1-6 alkylthio group may include a cyclopropylmethylthio group, a cyclopropylethylthio group, a cyclopropylpropylthio group, a cyclopropylbutylthio group, a cyclopropylpentylthio group, a cyclopropylhexylthio group, a cyclobutylmethylthio group, a cyclobutylethylthio group, a cyclobutylpropylthio group, a cyclobutylbutylthio group, a cyclobutylpentylthio group, a cyclopentylethylthio group, a cyclopentyiprapylthia group, a cyclopentylbutylthio group, a cyclohexylethylthio group, and a cyclohexylpropylthio group. Examples of a C6-10 aryl C1-5 alkylthio group may include a benzylthio group, a phenethylthio group, a phenylpropylthio group, a phenylbutylthio group, a phenylpentylthio group, a 2-methyl-4-phenylbutylthio group, a 2-methyl-5-phenylpentylthio group, and a 3-methyl-5-phenylpentylthio group. Examples of a 5- to 10-membered heterocyclic C1-6 alkylthio group may include a furylmethylthio group, a furylethylthio group, a furylpropylthio group, a furylbutylthio group, a furylpentylthio group, a furylhexylthio group, a thienylethylthio group, a thienylmethylthio group, a thienylpropylthio group, a thienylbutylthio group, a thienylpentylthio group, and a thienylhexylthio group. Examples of a mono-C1-6 alkylamino group may include a methylamino group, an ethylamino group, an n-propylamino group, an iso-propylamino group, an n-butylamino group, an iso-butylamino group, an n-pentylamino group, an iso-pentylamino group, an n-hexylamino group, a 4-methylpentylamino group, and a 3-methylpentylamino group. Examples of a mono-C3-6 alkenylamino group may include an allylamino group, a 2-butenylamino group, a 3-butenylamino group, a 2-pentenylamino group, a 3-pentenylarnino group, a prenylamino group, a 3-methyl-3-butenylamino group, a 2-hexenylamino group, a 3-hexenylamino group, a 4-hexenylamino group, a 4-methyl-4-pentenylamino group and a 4-methyl-3-pentenylamino group. Examples of a mono-C3-6 alkynylamino group may include a propargylamino group, a 2-butynylamino group, a 3-butynyl group amino, a 2-pentynylamino group, a 3-pentynylamino group, a 4-pentynylamino group, a 2-hexynylamino group, a 3-hexynylamino group, a 4-hexynylamino group, and a 5-hexynylamino group. Examples of a mono-C3-8 cycloalkylamino group may include a cyclopropylamino group, a cyclabutylamino group, a cyclopentylamino group, a cyclohexylamino group, a cycloheptylamino group, and a cyclooctylamino group. Examples of a mono-C6-10 arylamino group may include a phenylamino group and a naphthylamino group. Examples of a mono-C3-8 cycloalkyl C1-6 alkylamino group may include a cyclopropylmethylamino group, a cyclopropylethylamino group, a cyclopropylpropylamino group, a cyclopropylbutylamino group, a cycloprapylpentylamino group, a cyclopropylhexylamino group, a cyclobutylmethylamino group, a cyclobutylethylamino group, a cyclobutylpropylamino group, a cyclobutylbutylamino group, a cyclobutylpentylamino group, a cyclopentylethylamino group, a cyclopentylpropylamino group, a cyclopentylbutylamino group, a cyclohexylethylamino group, and a cyclohexylpropylamino group. Examples of a mono-C6-10 aryl C1-6 alkylamino group may include a benzylamino group, a phenethylamino group, a phenylpropylamino group, a phenylbutylamino group, a phenylpentylamino group, a 2-methyl-4-phenylbutylamino group, a 2-methyl-5-phenylpentylamino group, a 3-methyl-5-phenylpentylamino group and a (2-naphthyl)ethylamino group. Examples of a mono-5- to 10-membered heterocyclic C1-6 alkylamino group may include a furylmethylamino group, a furylethylamino group, a furylpropylamino group, a furylbutylamino group, a furylpentylamino group, a frurylhexylamino group, a thienylethylamino group, a thienylmethylamino group, a thienylpropylamino group, a thienylbutylamino group, a thienylpentylamino group and a thienylhexylamino group. Examples of a di-C1-6 alkylamino group may include a dimethylamino group, a methylethylamino group, a diethylamino group, a methylpropylamino group, and a methylbutylamino group. Examples of an N-C3-6 alkenyl-N-C 1-6 alkylamino group may include an N-allyl-N-methylamino group, an N-(2-butenyl)-N-methylamino group, and an N-(3-butenyl)-N-methylamino group. Examples of an N-C3-6 alkynyl-N-C1-6 alkylamino group may include an N-methyl-N-propargylamino group, an N-(2-butynyl)-N-methylamino group, and an N-(3-butynyl)-N-methylamino group. Examples of an N-C3-8 cycloalkyl-N-C1-6 alkylamino group may include an N-cyclopropyl-N-methylamino group, an N-cyclobutyl-N-methylamino group, and an N-cyclopentyl-N-methylamino group. An example of an N-C6-10 aryl-N-C1-6 alkylamino group may include an N-methylanilino group. Examples of an N-C3-8 cycloalkyl C1-6 alkyl-N-C1-6 alkylamino group may include an N-cyclopropylmethyl-N-methylamino group, an N-cyclopropylethyl-N-methylamino group, an N-cyclopropylpropyl-N-methylamino group, an N-cyclobutylmethyl-N-methylamino group, an N-cyclobutylethyl-N-methylamino group and an N-cyclobutylpropyl-N-methylamino group. Examples of an N-C6-10 aryl C1-6 alkyl-N-C1-6 alkylamino group may include an N-benzyl-N-methylamino group, an N-phenethyl-N-methylarnino group, an N-phenylpropyl-N-methylamino group, an N-phenylbutyl-N-methylamino group, and an N-phenylpentyl-N-methylamino group. Examples of an N-5- to 10-membered heterocyclic C1-6 heterocyclic C1-6 alkyl-N-C1-6 alkylamino group may include an N-furylmethyl-N-methylamino group, an N-furylethyl-N-methylamino group, an N-furylpropyl-N-methylamino group, an N-furylbutyl-N-methylamino group, an N-furylpentyl-N-methylamino group, an N-thienyl-N-methylamino group, an N-thienylethyl-N-methylamino group, an N-thienylpropyl-N-methylamino group, an N-thienylbutyl-N-methylamino group and an N-thienylpentyl-N-methylamino group. Examples of a C1-6 alkoxycarbonyl group may include a methoxycarbonyl group, an ethoxycarbonyl group, an n-propyloxycarbonyl group, an iso-propoxycarbonyl group, an n-butoxycarbonyl group, an iso-butoxycarbonyl group, a sec-butoxycarbonyl group, an n-pentyloxycarbonyl group, an iso-pentyloxycarbonyl group, a sec-pentyloxycarbonyl group, an n-hexyloxycarbonyl group, an iso-hexyloxycarbonyl group and a sec-hexyloxycarbonyl group. Examples of a C1-6 alkylsulfonyl group may include a methanesulfonyl group, an ethanesulfonyl group, a propanesulfonyl group, a butanesulfonyl group, a pentanesulfonyl group, and a hexanesulfonyl group. Examples of a group represented by a formula -C(=N-R^{a1})R^{a2} may include a hydroxyiminomethyl group, a hydroxyiminoethyl group, a methoxyiminomethyl group, an ethoxyiminomethyl group, and a methoxyiminoethyl group. Examples of a C6-10 aryloxy C1-6 alkyl group may include a benzyloxymethyl group, a benzyloxyethyl group, a benzyloxypropyl group, a benzyloxybutyl group, a benzyloxypentyl group, and a (2-naphthyl)oxymethyl group. Examples of a 5- to 10-membered heterocyclic oxy C1-6 alkyl group may include a furyloxynethyl group, a furyloxyethyl group, a furyloxypropyl group, a furyloxybutyl group, a furylaxypentyl group, a thienyloxymethyl group, a thienyloxyethyl group, a thienyloxypropyl group, a thienyloxybutyl group, a thienyloxypentyl group, a pyridyloxymethyl group, a pyridyloxyethyl group, a benzofuranyloxymethyl group, and a benzothienyloxymethyl group. Examples of a C6-10 aryl C2-6 alkenyl group may include a styryl group and a phenylpropenyl group.

More specific examples of such E may include a phenyl group, a 2-furyl group, a 3-furyl group, a 2-thienyl group, a 3-thienyl group, a 5-phenylfuran-2-yl group, a 5-phenoxyfuran-2-yl group, a 5-(4-fluorophenoxy)furan-2-yl group, a 5-(3-fluaraphenaxy)furan-2-yl group, a 5-(4-methylphenoxy)furan-2-yl group, a 5-(4-chlorophenoxy)furan-2-yl group, a 5-(3-chlorophenoxy)furan-2-yl group, a 5-(3-methylphenoxy)furan-2-yl group, a 5-(4-rnethaxyphenaxy)furan-2-yl group, a 5-(3-methoxyphenoxy)furan-2-yl group, a 5-benzylfuran-2-yl group, a 5-(4-fluorophenyl)methylfuran-2-yl group, a 5-(3-fluorophenyl)methylfuran-2-yl group, a 5-(4-methylphenyl)methylfuran-2-yl group, a 5-(4-chlorophenyl)methylfuran-2-yl group, a 5-(3-chlorophenyl)methylfuran-2-yl group, a 5-(3-methylphenyl)methylfuran-2-yl group, a 5-(4-methoxyphenyl)methylfuran-2-yl group, a 5-(3-methoxyphenyl)methylfuran-2-yl group, a S-phenaxythiaphen-2-yl group, a 5-(4-fluorophenoxy)thiophen-2-yl group, a 5-(3-fluorophenoxy)thiophen-2-yl group, a 5-(2-fluorophenoxy)thiophen-2-yl group, a 5-(4-znethylphenoxy)thiophen-2-yl group, a 5-(4-chlorophenoxy)thiophen-2-yl group, a 5-(3-chlorophenoxy)thiophen-2-yl group, a 5-(3-methylphenoxy)thiophen-2-yl group, a 5-(4-methoxyphenoxy)thiophen-2-yl group, a 5-(3-methoxyphenoxy)thiophen-2-yl group, a 5-(3-cyanophenoxy)thiophen-2-yl group, a 5-benzyloxythiophen-2-yl group, a 5-benzylthiophen-2-yl group, a 5-(4-fluorophenyl)methylthiophen-2-yl group, a 5-(3-fluorophenyl)methylthiophen-2-yl group, a 5-(4-methylphenyl)methylthiophen-2-yl group, a 5-(4-chlorophenyl)methylthiophen-2-yl group, a 5-(3-chlorophenyl)methylthiophen-2-yl group, a 5-(3-methylphenyl)methylthiophen-2-yl group, a 5-(4-methoxyphenyl)methylthiophen-2-yl group, a 5-(3-methoxyphenyl)methylthiophen-2-yl group, a 5-(2-thienyl)methylthiophen-2-yl group, a 5-(2-pyridyl)methylthiophen-2-yl group, a 5-(2-benzofuranyl)methylthiophen-2-yl group, a 5-phenoxythioplzen-3-yl group, a 5-(4-fluorophenoxy)thiophen-3-yl group, a 5-(3-fluorophenoxy)thiophen-3- yl group, a 5-(4-methylphenoxy)thiophen-3- yl group, a 5-(4-chlorophenoxy)thiophen-3-yl group, a 5-(3-chlorophenoxy)thiophen-3-yl group, a 5-(3-methylphenoxy)thiophen-3-yl group, a 5-(4-methoxyphenoxy)thiophen-3-yl group, a 5-(3-methoxyphenaxy)thiophen-3-yl group, a 3-methylphenyl group, a 3-ethylphenyl group, a 3-propylphenyl group, a 3-butylphenyl group, a 3-pentylphenyl group, a 3-hexylphenyl group, a 3-heptylphenyl group, a 3-isobutylphenyl group, a 3-(2-isobutenyl)phenyl group, a 3-cyclopentylmethylidenephenyl group, a 3-biphenylyl group, 3-benzylphenyl group, a 3-phenylaminophenyl group, a 3-(N-phenyl-N-methytamino)phenyl group, a 3-phenylthiophenyl group, a 3-phenoxyphenyl group, a 3-(2-fluorophenoxy)phenyl group, a 3-(3-fluorophenoxy)phenyl group, a 3-(4-fluoraphenoxy)phenyl group, a 3-(3,5-difluorophenoxy)phenyl group, a 3-(2-chlorophenoxy)phenyl group, a 3-(3-chlaraphenoxy)phenyl group, a 3-(4-chlorophenoxy)phenyl group, a 3-(2-methylphenoxy)phenyl group, a 3-(3-rnethylphenaxy)phenyl group, a 3-(4-methylphenoxy)phenyl group, a 3-(2-methoxyphenoxy)phenyl group, a 3-(3-methoxyphenoxy)phenyl group, a 3-(4-methoxyphenoxy)phenyl group, a 3-(2-cyanophenoxy)phenyl group, a 3-(3-cyanophenoxy)phenyl group, a 3-(4-cyanophenoxy)phenyl group, a 3-benzyloxyphenyl group, a 3-(2-fluorophenylmethoxy)phenyl group, a 3-(3-fluorophenylmethoxy)phenyl group, a 3-(4-fluorophenylmethoxy)phenyl group, a 3-(3,5-difluorophenylmethoxy)phenyl group, a 3-(2-chlorophenylmethoxy)phenyl group, a 3-(3-chlorophenylmethoxy)phenyl group, a 3-(4-chlorophenylmethoxy)phenyl group, a 3-(2-methylphenylmethoxy)phenyl group, a 3-(3-methylphenylmethoxy)phenyl group, a 3-(4-methylphenylmethoxy)phenyl group, a 3-(2-methoxyphenylmethoxy)phenyl group, a 3-(3-methoxyphenylmethoxy)phenyl group, a 3-(4-methoxyphenylmethoxy)phenyl group, a 3-(2-cyanophenylmethoxy)phenyl group, a 3-(3-cyanophenylmethoxy)phenyl group, a 3-(4-cyanophenylmethoxy)phenyl group, a 3-benzylaminophenyl group, a 3-(N-benzyl-N-methylamino)phenyl group, a 3-(2-furylmethoxy)phenyl group, a 3-(3-furylmethoxy)phenyl group, a 3-(2-thienylrnethoxy)phenyl group, 3-(3-thienylmethoxy)phenyl group, a 3-(2-pyridylmethoxy)phenyl group, a 3-(3-pyridylmethoxy)phenyl group, a 3-(4-pyridylmethoxy)phenyl group, a 3-(2-pyridyloxy)phenyl group, a 3-(3-pyridyloxy)phenyl group, a 3-(4-pyridyloxy)phenyl group, a 3-(6-tnfluoromethylpyndin-2-yloxy)phenyl group, a 3-(5-trifluoromethylpyldin-2-yloxy)phenyl group, a 3-(3-chloro-5-trifluoromethylpyridin-2-yloxy)phenyl group, a 3-(2-pyrazinyloxy)phenyl group, a 3-(6-chlaropyridazin-3-yloxy)phenyl group, a 3-methoxyphenyl group, a 3-ethoxyphenyl group, a 3-propoxyphenyl group, a 3-(2-methylethoxy)phenyl group, a 3-butoxyphenyl group, a 3-(2-methylbutoxy)phenyl group, a 3-(3-methylbutoxy)phenyl group, a 3-pentyloxyphenyl group, a 3-hexyloxyphenyl group, a 3-heptyloxyphenyl group, a 3-isoprenyloxyphenyl group, a 3-(2-fluoroethoxy)phenyl group, a 3-(3-fluoropropoxy)phenyl group, a 3-(4-fluorobutoxy)phenyl group, a 3-(5-fluoropentyloxy)phenyl group, a 3-(6-fluorohexyloxy)phenyl group, a 3-(7-fluoroheptyloxy)phenyl group, a 3-(2-chloroethoxy)phenyl group, a 3-(3-chlaropropoxy)phenyl group, a 3-(4-chlorobutoxy)phenyl group, a 3-(5-chloropentyloxy)phenyl group, a 3-(6-chlorohexyloxy)phenyl group, a 3-(7-chloroheptyloxy)phenyl group, a 3-(2-propenyoxy)phenyl group, a 3-(2-butenyloxy)phenyl group, a 3-(3-butenyloxy)phenyl group, a 3-(2-pentenyloxy)phenyl group, a 3-(3-pentenyloxy)phenyl group, a 3-(4-pentenyloxy)phenyl group, a 3-(2-hexenyloxy)phenyl group, a 3-(3-hexenyloxy)phenyl group, a 3-(4-hexenyloxy)phenyl group, a 3-(5-hexenyloxy)phenyl group, a 3-(2-heptenyloxy)phenyl group, a 3-(3-heptenyloxy)phenyl group, a 3-(4-heptenyloxy)phenyl group, a 3-(5-heptenyloxy)phenyl group, a 3-(6-heptenyloxy)phenyl group, a 3-(3-chloro-2-propenyloxy)phenyl group, a 3-(3,3-dichloro-2-propenyloxy)phenyl group, a 3-(2-methyl-2-butenyloxy)phenyl group, a 3-(3-methyl-2-butenyloxy)phenyl group, a 3-(2-propynyloxy)phenyl group, a 3-(2-butynyloxy)phenyl group, a 3-(3-butynyloxy)phenyl group, a 3-(2-pentynyloxy)phenyl group, a 3-(3-pentynyloxy)phenyl group, a 3-(4-pentynyloxy)plenyl group, a 3-(2-hexynyloxy)phenyl group, a 3-(3-hexynyloxy)phenyl group, a 3-(4-hexynyloxy)phenyl group, a 3-(5-hexynyloxy)phenyl group, a 3-(2-heptynyloxy)phenyl group, a 3-(3-heptynyloxy)phenyl group, a 3-(4-heptynyloxy)phenyl group, a 3-(5-heptynyloxy)phenyl group, a 3-(6-heptynyloxy)phenyl group, a 3-(2-methoxyethoxy)phenyl group, a 3-(3-methoxypropoxy)phenyl group, a 3-(4-methoxybutoxy)phenyl group, a 3-(5-methoxypentyloxy)phenyl group, a 3-(6-methoxyhexyloxy)phenyl group, a 3-(7-methoxyheptyloxy)phenyl group, a 3-(2-ethoxyethoxy)phenyl group, a 3-(3-ethoxypropoxy)phenyl group, a 3-(4-ethoxybutoxy)phenyl group, a 3-(5-ethoxypentyloxy)phenyl group, a 3-(6-ethoxyhexyloxy)phenyl group, a 3-(7-ethoxyheptyloxy)phenyl group, a 3-cyclopropylmethoxyphenyl group, a 3-(2-cyclopropylethoxy)phenyl group, a 3-(3-cyclopropylpropoxy)phenyl group, a 3-(4-cyclopropylbutoxy)phenyl group, a 3-(5-cyclopropylpentyloxy)phenyl group, a 3-(6-cyclopropylhexyloxy)phenyl group, a 3-(7-cyclopropylheptyloxy)phenyl group, a 3-phenoxymethylphenyl group, a 3-(2-phenylethyl)phenyl group, a 3-(3-phenylpropyl)phenyl group, a 3-(4-phenylbutyl)phenyl group, a 3-(5-phenylpentyl)phenyl group, a 3-(2-phenylethoxy)phenyl group, a 3-(3-phenylpropoxy)phenyl group, a 3-(4-phenylbutoxy)phenyl group, a 3-(5-phenylpentyloxy)phenyl group, a (Z)-3-styrylphenyl group, a 2-fluoro-3-methylphenyl group, a 2-fluoro-3-ethylphenyl group, a 2-fluoro-3-propylphenyl group, a 2-fluoro-3-butylphenyl group, a 2-fluoro-3-pentylphenyl group, a 2-fluoro-3-hexylphenyl group, a 2-fluoro-3-heptylphenyl group, a 2-fluoro-3-isobutylphenyl group, a 2-fluoro-3-(2-isobutenyl)phenyl group, a 2-fluoro-3-cyclopentylmethylidenephenyl group, a 2-fluoro-3-biphenylyl group, a 2-fluoro-3-benzylphenyl group, a 2-fluoro-3-phenylaminaphenyl group, a 2-fluoro-3-(N-phenyl-N-methylamino)phenyl group, a 2-fluoro-3-phenylthiophenyl group, a 2-fluoro-3-phenoxyphenyl group, a 2-fluoro-3-(2-fluorophenoxy)phenyl group, a 2-fluoro-3-(3-fluorophenoxy)phenyl group, a 2-fluoro-3-(4-fluorophenoxy)phenyl group, a 2-fluoro-3-(3,5-difluarophenoxy)phenyl group, a 2-fluoro-3-(2-chlorophenoxy)phenyl group, a 2-fluoro-3-(3-chlorophenoxy)phenyl group, a 2-fluoro-3-(4-chiorophenoxy)phenyl group, a 2-fluoro-3-(2-methylphenoxy)phenyl group, a 2-fluoro-3-(3-methylphenoxy)phenyl group, a 2-fluoro-3-(4-methylphenoxy)phenyl group, a 2-fluoro-3-(2-methoxyphenoxy)phenyl group, a 2-fluoro-3-(3-methoxyphenoxy)phenyl group, a 2-fluoro-3-(4-methoxyphenoxy)phenyl group, a 2-fluoro-3-(2-cyanophenoxy)phenyl group, a 2-fluoro-3-(3-cyanophenoxy)phenyl group, a 2-fluoro-3-(4-cyanophenoxy)phenyl group, a 3-benzyloxyphenyl group, a 2-fluoro-3-(2-fluorophenylmethoxy)phenyl group, a 2-fluoro-3-(3-fluorophenylmethoxy)phenyl group, a 2-fluoro-3-(4-fluorophenylmethoxy)phenyl group, a 2-fluoro-3-(3,5-difluorophenylmethoxy)phenyl group, a 2-fluoro-3-(2-chlorophenylmethoxy)phenyl group, a 2-fluoro-3-(3-chloxophenylmethoxy)phenyl group, a 2-fluoro-3-(4-chlorophenylmethoxy)phenyl group, a 2-fluoro-3-(2-methylphenylmethoxy)phenyl group, a 2-fluoro-3-(3-methylphenylmethoxy)phenyl group, a 2-fluoro-3-(4-methylphenylmethoxy)phenyl group, a 2-fluoro-3-(2-methoxyphenylmethoxy)phenyl group, a 2-fluoro-3-(3-methoxyphenylmethoxy)phenyl group, a 2-fluoro-3-(4-methoxyphenylmethoxy)phenyl group, a 2-fluoro-3-(2-cyanophenylmethoxy)phenyl group, a 2-fluoro-3-(3-cyanophenylmethoxy)phenyl group, a 2-fluoro-3-(4-cyanophenylmethoxy)phenyl group, a 2-fluoro-3-benzylaminophenyl group, a 2-fluoro-3-(N-benzyl-N-methylamino)phenyl group, a 2-fluoro-3-(2-furylmethoxy)phenyl group, a 2-fluoro-3-(3-furylmethoxy)phenyl group, a 2-fluoro-3-(2-thienylmethoxy)phenyl group, a 2-fluoro-3-(3-thienylmethoxy)phenyl group, a 2-fluoro-3-(2-pyridylmethoxy)phenyl group, a 2-fluoro-3-(3-pyridylmethoxy)phenyl group, a 2-fluoro-3-(4-pyridylmethoxy)phenyl group, a 2-fluoro-3-(2-pyridyloxy)phenyl group, a 2-fluoro-3-(3-pyridyloxy)phenyl group, a 2-fluoro-3-(4-pyridyloxy)phenyl group, a 2-fluoro-3-(6-trifluoromethylpyridin-2-yloxy)phenyl group, a 2-fluoro-3-(5-trifluoromethylpyridin-2-yloxy)phenyl group, a 2-fluoro-3-(3-chloro-5-trifluoromethylpyridin-2-yloxy)phenyl group, a 2-fluoro-3-(2-pyrazinyloxy)phenyl group, a 2-fluoro-3-(6-chloropyridazin-3-yloxy)phenyl group, a 2-fluoro-3-methoxyphenyl group, a 2-fluoro-3-ethoxyphenyl group, a 2-fluoro-3-propoxyphenyl group, a 2-fluoro-3-(2-methylethoxy)phenyl group, a 2-fluoro-3-butoxyphenyl group, a 2-fluoro-3-(2-methylbutoxy)phenyl group, a 2-fluoro-3-(3-methylbutoxy)phenyl group, a 2-fluoro-3-pentyloxyphenyl group, a 2-fluoro-3-hexyloxyphenyl group, a 2-fluoro-3-heptyloxyphenyl group, a 2-fluoro-3-isoprenyloxyphenyl group, a 2-fluoro-3-(2-fluoroethoxy)phenyl group, a 2-fluoro-3-(3-fluoropropoxy)phenyl group, a 2-fluoro-3-(4-fluorobutoxy)phenyl group, a 2-fluoro-3-(5-fluoropentyloxy)phenyl group, a 2-fluoro-3-(6-fluorohexyloxy)phenyl group, a 2-fluoro-3-(7-fluoroheptyloxy)phenyl group, a 2-fluoro-3-(2-chloroethoxy)phenyl group, a 2-fluoro-3-(3-chloropropoxy)phenyl group, a 2-fluoro-3-(4-chlorabutoxy)phenyl group, a 2-fluoro-3-(5-chloropentyloxy)phenyl group, a 2-fluoro-3-(6-chlorohexyloxy)phenyl group, a 2-fluoro -3-(7-chloroheptyloxy)phenyl group, a 2-fluoro-3-(2-propenyloxy)phenyl group, a 2-fluoro-3-(2-butenyloxy)phenyl group, a 2-fluoro-3-(3-butenyloxy)phenyl group, a 2-fluoro-3-(2-pentenyloxy)phenyl group, a 2-fluoro-3-(3-pentenyloxy)phenyl group, a 2-fluoro-3-(4-pentenyloxy)phenyl group, a 2-fluoro-3-(2-hexenyloxy)phenyl group, a 2-fluoro-3-(3-hexenyloxy)phenyl group, a 2-fluoro-3-(4-hexenyloxy)phenyl group, a 2-fluoro-3-(5-hexenyloxy)phenyl group, a 2-fluoro-3-(2-heptenyloxy)phenyl group, a 2-fluoro-3-(3-heptenyloxy)phenyl group, a 2-fluoro-3-(4-heptenyloxy)phenyl group, a 2-fluoro-3-(5-heptenyloxy)phenyl group, a 2-fluoro-3-(6-heptenyloxy)phenyl group, a 2-fluoro-3-(3-chloro-2-propenyloxy)phenyl group, a 2-fluoro-3-(3,3-dichloro-2-propenyloxy)phenyl group, a 2-fluoro-3-(2-methyl-2-butenyloxy)phenyl group, a 2-fluoro-3-(3-methyl-2-butenyloxy)phenyl group, a 2-fluoro-3-(2-propynyloxy)phenyl group, a 2-fluoro-3-(2-butynyloxy)phenyl group, a 2-fluoro-3-(3-butynyloxy)phenyl group, a 2-fluoro-3-(2-pentynyloxy)phenyl group, a 2-fluoro-3-(3-pentynyloxy)phenyl group, a 2-fluoro-3-(4-pentynyloxy)phenyl group, a 2-fluoro-3-(2-hexynyloxy)phenyl group, a 2-fluoro-3-(3-hexynyloxy)phenyl group, a 2-fluoro-3-(4-hexynyloxy)phenyl group, a 2-fluoro-3-(5-hexynyloxy)phenyl group, a 2-fluoro-3-(2-heptynyloxy)phenyl group, a 2-fluoro-3-(3-heptynyloxy)phenyl group, a 2-fluoro-3-(4-heptynyloxy)phenyl group, a 2-fluoro-3-(5-heptynyloxy)phenyl group, a 2-fluoro-3-(6-heptynyloxy)phenyl group, a 3-(2-methoxyethoxy)phenyl group, a 2-fluoro-3-(3-methoxypropoxy)phenyl group, a 2-fluoro-3-(4-methoxybutoxy)phenyl group, a 2-fluoro-3-(5-methoxypentyloxy)phenyl group, a 2-fluoro-3-(6-methoxyhexyloxy)phenyl group, a 2-fluoro-3-(7-methoxyheptyloxy)phenyl group, a 2-fluoro-3-(2-ethoxyethoxy)phenyl group, a 2-fluoro-3-(3-ethoxypropoxy)phenyl group, a 2-fluoro-3-(4-ethoxybutoxy)phenyl group, a 2-fluoro-3-(5-ethoxypentyloxy)phenyl group, a 2-fluoro-3-(6-ethoxyhexyloxy)phenyl group, a 2-fluoro-3-(7-ethoxyheptyloxy)phenyl group, a 2-fluoro-3-cyclopropylmethoxyphenyl group, a 2-fluoro-3-(2-cyclopropylethoxy)phenyl group, a 2-fluoro-3-(3-cyclopropylpropoxy)phenyl group, a 2-fluoro-3-(4-cyclopropylbutoxy)phenyl group, a 2-fluoro-3-(5-cydopropylpentyloxy)phenyl group, a 2-fluoro-3-(6-cydopropylhexyloxy)phenyl group, a 2-fluoro-3-(7-cyclopropylheptyloxy)phenyl group, a 2-fluoro-3-phenoxymethylphenyl group, a 2-fluoro-3-(2-phenylethyl)phenyl group, a 2-fluoro-3-(3-phenylpropyl)phenyl group, a 2-fluoro-3-(4-phenylbutyl)phenyl group, a 2-fluoro-3-(5-phenylpentyl)phenyl group, a 2-fluoro-3-(2-phenylethoxy)phenyl group, a 2-fluoro-3-(3-phenylpropoxy)phenyl group, a 2-fluoro-3-(4-phenylbutoxy)phenyl group, a 2-fluoro-3-(5-phenylpentyloxy)phenyl group, a (Z)-2-fluoro-3-styrylphenyl group, a 4-methylphenyl group, a 4-ethylphenyl group, a 4-propylphenyl group, a 4-butylphenyl group, a 4-pentylphenyl group, a 4-hexylphenyl group, a 4-heptylphenyl group, a 4-isobutylphenyl group, a 4-(2-isobutenyl)phenyl group, a 4-cyclopentylmethylidenephenyl group, a 4-biphenylyl group, a 4-benzylphenyl group, a 4-phenylaminophenyl group, a 4-(N-phenyl-N-methylamino)phenyl group, a 4-phenylthiophenyl group, a 4-phenoxyphenyl group, a 4-(2-fluorophenoxy)phenyl group, a 4-(3-fluorophenoxy)phenyl group, a 4-(4-fluorophenoxy)phenyl group, a 4-(3,5-difluorophenoxy)phenyl group, a 4-(2-chlorophenoxy)phenyl group, a 4-(3-chlorophonoxy)phenyl group, a 4-(4-chlorophenoxy)phenyl group, a 4-(2-methylphenoxy)phenyl group, a 4-(3-methylphenaxy)phenyl group, a 4-(4-methylphenoxy)phenyl group, a 4-(2-methoxyphenoxy)phenyl group, a 4-(3-methoxyphenoxy)phenyl group, a 4-(4-methoxyphenoxy)phenyl group, a 4-(2-cyanophenoxy)phenyl group, a 4-(3-cyanophenoxy)phenyl group, a 4-(4-cyanophenoxy)phenyl group, a 4-benzyloxyphenyl group, a 4-(2-fluorophenylmethoxy)phenyl group, a 4-(3-fluorophenylmethoxy)phenyl group, a 4-(4-fluorophenylmethoxy)phenyl group, a 4-(3,5-difluorophenylmethoxy)phenyl group, a 4-(2-chlorophenylmethoxy)phenyl group, a 4-(3-chlorophenylmethoxy)phenyl group, a 4-(4-chlorophenylmethoxy)phenyl group, a 4-(2-methylphenylmethoxy)phenyl group, a 4-(3-methylphenylmethoxy)phenyl group, a 4-(4-methylphenylmethoxy)phenyl group, a 4-(2-methoxyphenylmethoxy)phenyl group, a 4-(3-methoxyphenylmethoxy)phenyl group, a 4-(4-methoxyphenylmethoxy)phenyl group, a 4-(2-cyanophenylmethoxy)phenyl group, a 4-(3-cyanophenylmethoxy)phenyl group, a 4-(4-cyanophenylmethoxy)phenyl group, a 4-benzylaminophenyl group, a 4-(N-benzyl-N-methylamino)phenyl group, a 4-(2-furylmethoxy)phenyl group, a 4-(3-furylmethoxy)phenyl group, a 4-(2-thienylmethoxy)phenyl group, a 4-(3-thienylmethoxy)phenyl group, a 4-(2-pyridylmethoxy)phenyl group, a 4-(3-pyridylmethoxy)phenyl group, a 4-(4-pyridylmethoxy)phenyl group, a 4-(2-pyridyloxy)phenyl group, a 4-(3-pyridyloxy)phenyl group, a 4-(4-pyridyloxy)phenyl group, a 4-(6-trifluoromethylpyridin-2-yloxy)phenyl group, a 4-(5-trifuoromethylpyridin-2-yloxy)phenyl group, a 4-(3-chloro-5-trifluoromethylpyridin-2-yloxy)phenyl group, a 4-(2-pyrazinyloxy)phenyl group, a 4-(6-chloropyridazin-3-yloxy)phenyl group, a 4-methoxyphenyl group, a 4-ethoxyphenyl group, a 4-propoxyphenyl group, a 4-(2-methylethoxy)phenyl group, a 4-butoxyphenyl group, a 4-(2-methylbutoxy)phenyl group, a 4-(3-methylbutoxy)phenyl group, a 4-pentyloxyphenyl group, a 4-hexyloxyphenyl group, a 4-heptyloxyphenyl group, a 4-isoprenyloxyphenyl group, a 4-(2-fluoroethoxy)phenyl group, a 4-(3-fluoropropoxy)phenyl group, a 4-(4-fluorobutoxy)phenyl group, a 4-(5-fluoropentyloxy)phenyl group, a 4-(6-fluorohexyloxy)phenyl group, a 4-(7-fluoroheptyloxy)phenyl group, a 4-(2-chloroethoxy)phenyl group, a 4-(3-chloropropoxy)phenyl group, a 4-(4-chlorobutoxy)phenyl group, a 4-(5-chloropentyloxy)phenyl group, a 4-(6-chlorohexyloxy)phenyl group, a 4-(7-chloroheptyloxy)phenyl group, a 4-(2-propenyloxy)phenyl group, a 4-(2-butenyloxy)phenyl group, a 4-(3-butenyloxy)phenyl group, a 4-(2-pentenyloxy)phenyl group, a 4-(3-pentenyloxy)phenyl group, a 4-(4-pentenyloxy)phenyl group, a 4-(2-hexenyloxy)phenyl group, a 4-(3-hexenyloxy)phenyl group, a 4-(4-hexenyloxy)phenyl group, a 4-(5-hexenyloxy)phenyl group, a 4-(2-heptenyloxy)phenyl group, a 4-(3-heptenyloxy)phenyl group, a 4-(4-heptenyloxy)phenyl group, a 4-(5-heptenyloxy)phenyl group, a 4-(6-heptenyloxy)phenyl group, a 4-(3-chloro-2-propenyloxy)phonyl group, a 4-(3,3-dichloro-2-propenyloxy)phenyl group, a 4-(2-methyl-2-butenyloxy)phenyl group, a 4-(3-methyl-2-butenyloxy)phenyl group, a 4-(2-propynyloxy)phenyl group, a 4-(2-butynyloxy)phenyl group, a 4-(3-butynyloxy)phenyl group, a 4-(2-pentynyloxy)phenyl group, a 4-(3-pentynyloxy)phenyl group, a 4-(4-pentynyloxy)phenyl group, a 4-(2-hexynyloxy)phenyl group, a 4-(3-hexynyloxy)phenyl group, a 4-(4-hexynyloxy)phenyl group, a 4-(5-hexynyloxy)phenyl group, a 4-(2-heptynyloxy)phenyl group, a 4-(3-heptynytoxy)phenyl group, a 4-(4-heptynyloxy)phenyl group, a 4-(5-heptynyloxy)phenyl group, a 4-(6-heptynyloxy)phenyl group, a 4-(2-methoxyethoxy)phenyl group, a 4-(3-methoxypropoxy)phenyl group, a 4-(4-methoxybutoxy)phenyl group, a 4-(5-methoxypentyloxy)phenyl group, a 4-(6-methoxyhexyloxy)phenyl group, a 4-(7-methoxyheptytoxy)phenyl group, a 4-(2-ethoxyethoxy)phenyl group, a 4-(3-ethoxypropoxy)phenyl group, a 4-(4-ethoxybutoxy)phenyl group, a 4-(5-ethoxy pentyloxy)phenyl group, a 4-(6-ethoxyhexyloxy)phenyl group, a 4-(7-ethoxyheptyloxy)phenyl group, a 4-cyclopropylmethoxyphenyl group, a 4-(2-cyclopropylethoxy)phenyl group, a 4-(3-cyclopropylpropoxy)phenyl group, a 4-(4-cyclopropylbutoxy)phenyl group, a 4-(5-cyclopropylpentyloxy)phenyl group, a 4-(6-cyclopropylhexyloxy)phenyl group, a 4-(7-cyclopropylheptyloxy)phenyl group, a 4-phenoxymethylphenyl group, a 4-(2-phenylethyl)phenyl group, a 4-(3-phenylpropyl)phenyl group, a 4-(4-phenylbutyl)phenyl group, a 4-(5-phenylpentyl)phenyl group, a 4-(2-phenylethoxy)phenyl group, a 4-(3-phenylpropoxy)phenyl group, a 4-(4-phenylbutoxy)phenyl group, a 4-(5-phenylpentyloxy)phenyl group, a (Z)-4-styrylphenyl group, a 2-fluoro-4-methylphenyl group, a 2-fluoro-4-ethylphenyl group, a 2-fluoro-4-propylphenyl group, a 2-fluoro-4-butylphenyl group, a 2-fluoro-4-pentylphenyl group, a 2-fluoro-4-hexylphenyl group, a 2-fluoro-4-heptylphenyl group, a 2-fluoro-4-isobutylphenyl group, a 2-fluoro-4-(2-isobutenyl)phenyl group, a 2-fluoro-4-cyclopentylmethylidenephenyt group, a 2-fluoro-4-phenylphenyl group, a 2-fluoro-4-benzylphenyl group, a 2-fluoro-4-phenylaminophenyl group, a 2-fluoro-4-(N-phenyl-N-methylamino)phenyl group, a 2-fluoro-4-phenylthiophenyl group, a 2-fluoro-4-phenoxyphenyl group, a 2-fluoro-4-(2-fluorophenoxy)phenyl group, a 2-fluoro-4-(3-fluorophenoxy)phenyl group, a 2-fluoro-4-(4-fluorophenoxy)phenyl group, a 2-fluoro-4-(3,5-difluorophenoxy)phenyl group, a 2-fluoro-4-(2-chlorophenoxy)phenyl group, a 2-fluoro-4-(3-chlorophenoxy)phenyl group, a 2-fluoro-4-(4-chlorophenoxy)phenyl group, a 2-fluoro-4-(2-methylphenoxy)phenyl group, a 2-fluoro-4-(3-methylphenoxy)phenyl group, a 2-fluoro-4-(4-methylphenoxy)phenyl group, a 2-fluoro-4-(2-methoxyphenoxy)phenyl group, a 2-fluoro-4-(3-methoxyphenoxy)phenyl group, a 2-fluoro-4-(4-methoxyphenoxy)phenyl group, a 2-fluoro-4-(2-cyanophenoxy)phenyl group, a 2-fluoro-4-(3-cyanophenoxy)phenyl group, a 2-fluoro-4-(4-cyanophenoxy)phenyl group,
a 4-benzyloxyphenyl group, a 2-fluoro-4-(2-fluorophenylmethoxy)phenyl group, a 2-fluoro-4-(3-fluorophenylmethoxy)phenyl group, a 2-fluoro-4-(4-fluorophenylmethoxy)phenyl group, a 2-fluoro-4-(3,5-difluorophenylmethoxy)phenyl group, a 2-fluoro-4-(2-chlorophenylmethoxy)phenyl group, a 2-fluoro-4-(3-chlorophenylmethoxy)phenyl group, a 2-fluoro-4-(4-chlorophenylmethoxy)phenyl group, a 2-fluoro-4-(2-methylphenylmethoxy)phenyl group, a 2-fluoro-4-(3-methylphenylmethoxy)phenyl group, a 2-fluoro-4-(4-methylphenylmethoxy)phenyl group, a 2-fluoro-4-(2-methoxyphenylmethoxy)phenyl group, a 2-fluoro-4-(3-methoxyphenylmethoxy)phenyl group, a 2-fluoro-4-(4-methoxyphenylmethoxy)phenyl group, a 2-fluoro-4-(2-cyanophenylmethoxy)phenyl group, a 2-fluoro-4-(3-cyanophenylmethoxy)phenyl group, a 2-fluoro-4-(4-cyanophenylmethoxy)phenyl group, a 2-fluoro-4-benzylaminophenyl group, a 2-fluoro-4-(N-benzyl-N-methylamino)phenyl group, a 2-fluoro-4-(2-furylmethoxy)phenyl group, a 2-fluoro-4-(3-furylmethoxy)phenyl group, a 2-fluoro-4-(2-thienylmethoxy)phenyl group, a 2-fluoro-4-(3-thienylmethoxy)phenyl group, a 2-fluoro-4-(2-pyridylmethoxy)phenyl group, a 2-fluoro-4-(3-pyridylmethoxy)phenyl group, a 2-fluoro-4-(4-pyridylmethoxy)phenyl group, a 2-fluoro-4-(2-pyridyloxy)phenyl group, a 2-fluoro-4-(3-pyridyloxy)phenyl group, a 2-fluoro-4-(4-pyridyloxy)phenyl group, a 2-fluoro-4-(6-trifluoromethylpyridin-2-yloxy)phenyl group, a 2-fluoro-4-(5-trifluoromethylpyridin-2-yloxy)phenyl group, a 2-fluoro-4-(3-chloro-5-trifluoromethylpyridin-2-yloxy)phenyl group, a 2-fluoro-4-(2-pyrazinyloxy)phenyl group, a 2-fluoro-4-(6-chloropyridazin-3-yloxy)phenyl group, a 2-fluoro-4-methoxyphenyl group, a 2-fluoro-4-ethoxyphenyl group, a 2-fluoro-4-propoxyphenyl group, a 2-fluoro-4-(2-methylethoxy)phenyl group, a 2-fluoro-4-butoxyphenyl group, a 2-fluoro-4-(2-methylbutoxy)phenyl group, a 2-fluoro-4-(3-methylbutoxy)phenyl group, a 2-fluoro-4-pentyloxyphenyl group, a 2-fluoro-4-hexyloxyphenyl group, a 2-fluoro-4-heptyloxyphenyl group, a 2-fluoro-4-isoprenyloxyphenyl group, a 2-fluoro-4-(2-fluoroethoxy)phenyl group, a 2-fluoro-4-(3-fluoropropoxy)phenyl group, a 2-fluoro-4-(4-fluorobutoxy)phenyl group, a 2-fluoro-4-(5-fluoropentyloxy)phenyl group, a 2-fluoro-4-(6-fluorohexyloxy)phenyl group, a 2-fluoro-4-(7-fluoroheptyloxy)phenyl group, a 2-fluoro-4-(2-chloroethoxy)phenyl group, a 2-fluoro-4-(3-chloropropoxy)phenyl group, a 2-fluoro-4-(4-chlorobutoxy)phenyl group, a 2-fluoro-4-(5-chloropentyloxy)phenyl group, a 2-fluoro-4-(6-chlorohexyloxy)phenyl group, a 2-fluoro-4-(7-chloroheptyloxy)phenyl group, a 2-fluoro-4-(2-propenyloxy)phenyl group, a 2-fluoro-4-(2-butenyloxy)phenyl group, a 2-fluoro-4-(3-butenyloxy)phenyl group, a 2-fluoro-4-(2-pentenyloxy)phenyl group, a 2-fluoro-4-(3-pentenyloxy)phenyl group, a 2-fluoro-4-(4-pentenyloxy)phenyl group, a 2-fluoro-4-(2-hexenyloxy)phenyl group, a 2-fluoro-4-(3-hexenyloxy)phenyl group, a 2-fluoro-4-(4-hexenyloxy)phenyl group, a 2-fluoro-4-(5-hexenyloxy)phenyl group, a 2-fluoro-4-(2-heptenyloxy)phenyl group, a 2-fluoro-4-(3-heptenyloxy)phenyl group, a 2-fluoro-4-(4-heptenyloxy)phenyl group, a 2-fluoro-4-(5-heptenyloxy)phenyl group, a 2-fluoro-4-(6-heptenyloxy)phenyl group, a 2-fluoro-4-(3-chloro-2-propenyloxy)phenyl group, a 2-fluoro-4-(3,3-dichloro-2-propenyloxy)phenyl group, a 2-fluoro-4-(2-methyl-2-butenyloxy)phenyl group, a 2-fluoro-4-(3-methyl-2-butenyloxy)phenyl group, a 2-fluoro-4-(2-propynyloxy)phenyl group, a 2-fluoro-4-(2-butynyloxy)phenyl group, a 2-fluoro-4-(3-butynyloxy)phenyl group, a 2-fluoro-4-(2-pentynyloxy)phenyl group, a 2-fluoro-4-(3-pentynyloxy)phenyl group, a 2-fluoro-4-(4-pentynyloxy)phenyl group, a 2-fluoro-4-(2-hexynyloxy)phenyl group, a 2-fluoro-4-(3-hexynyloxy)phenyl group, a 2-fluoro-4-(4-hexynyloxy)phenyl group, a 2-fluoro-4-(5-hexynyloxy)phenyl group, a 2-fluoro-4-(2-heptynyloxy)phenyl group, a 2-fluoro-4-(3-heptynyloxy)phenyl group, a 2-fluoro-4-(4-heptynyloxy)phenyl group, a 2-fluoro-4-(5-heptynyloxy)phenyl group, a 2-fluoro-4-(6-heptynyloxy)phenyl group, a 4-(2-methoxyethoxy)phenyl group, a 2-fluoro-4-(3-methoxypropoxy)phenyl group, a 2-fluoro-4-(4-methoxybutoxy)phenyl group, a 2-fluoro-4-(5-methoxypentyloxy)phenyl group, a 2-fluoro-4-(6-methoxyhexyloxy)phenyl group, a 2-fluoro-4-(7-methoxyheptyloxy)phenyl group, a 2-fluoro-4-(2-ethoxyethoxy)phenyl group, a 2-fluoro-4-(3-ethoxypropoxy)phenyl group, a 2-fluoro-4-(4-ethoxybutoxy)phenyl group, a 2-fluoro-4-(5-ethoxypentyloxy)phenyl group, a 2-fluoro-4-(6-ethoxyhexyloxy)phenyl group, a 2-fluoro-4-(7-ethoxyheptyloxy)phenyl group, a 2-fluoro-4-cyclopropylmethoxyphenyl group, a 2-fluoro-4-(2-cyclopropylethoxy)phenyl group, a 2-fluoro-4-(3-cyclopropylpropoxy)phenyl group, a 2-fluoro-4-(4-cyclopropylbutoxy)phenyl group, a 2-fluoro-4-(5-cyclopropylpentyloxy)phenyl group, a 2-fluoro-4-(6-cyclopropylhexyloxy)phenyl group, a 2-fluoro-4-(7-cyclopropylheptyloxy)phenyl group, a 2-fluoro-4-phenoxymethylphenyl group, a 2-fluoro-4-(2-phenylethyl)phenyl group, a 2-fluoro-4-(3-phenylpropyl)phenyl group, a 2-fluoro-4-(4-phenylbutyl)phenyl group, a 2-fluoro-4-(5-phenylpentyl)phenyl group, a 2-fluoro-4-(2-phenylethoxy)phenyl group, a 2-fluoro-4-(3-phenylpropoxy)phenyl group, a 2-fluoro-4-(4-phenylbutoxy)phenyl group, a 2-fluoro-4-(5-phenylpentyloxy)phenyl group, a (Z)-2-fluoro-4-styrylphenyl group, a 1-benzylpyrrol-3-yl group, a 1-(2-fluorophenylmethyl)pyrrol-3-yl group, a 1-(3-fluorophenylmethyl)pyrrol-3-yl group, a 1-(4-fluorophenylmethyl)pyrrol-3-yl group, a 1-(2-phenylethyl)pyrrol-3-yl group, a 1-benzylpyrazol-4-yl group, a 1-phenylpyrazol-4-yl group, a 2-methoxythiazol-5-yl group, a 2-ethoxythiazol-5-yl group, a 2-propoxythiazol-5-yl group, a 2-butoxythiazol-5-yl group, a 2-pentyloxythiazol-5-yl group, a 2-benzyloxythiazol-5-yl group, a 2-phenoxythiazol-5-yl group, a 2-methylthiazol-5-yl group, a 2-butylthiazol-5-yl group, a 2-phenylthiazol-5-yl group and a 2-benzylthiazol-5-yl group.

A preferred example of the present compound may be a compound wherein Z represents an oxygen atom; E represents a 2-furyl group that may optionally have one substituent selected from the substituent group g-1 and the substituent group g-2, a 2-thienyl group that may optionally have one substituent selected from the substituent group g-1 and the substituent group g-2, a 3-pyrrolyl group that may optionally have one substituent selected from the substituent group g-1 and the substituent group g-2, or a phenyl group that may optionally have one substituent selected from the substituent group g-1 and the substituent group g-2; R¹ represents a hydrogen atom; R² represents a hydrogen atom or a halogen atom; and R³ represents a group selected from the substituent group c-21 and the substituent group c-22.

Examples of the present compound include the following compounds.
An amide compound represented by formula (2): 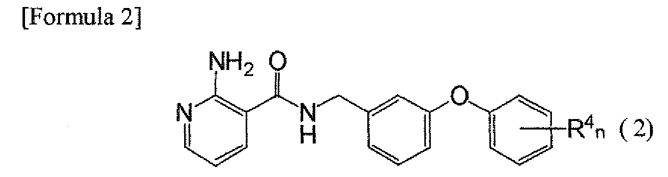 wherein R⁴ represents a halogen atom, a C1-C3 alkyl group, an ethynyl group, a C1-C4 alkoxy group, a methylthio group, a trifluoromethyl group or a trifluoromethoxy group, n represents 1 or 2 wherein in the case of n being 2, R in each occurrence is the same or different from each other; an amide compound of the formula (2) wherein n is 1;
an amide compound of the formula (2) wherein n is 1, the binding position of R⁴ is the 3-position or the 4-position;
an amide compound of the formula (2) wherein R⁴ is a fluorine atom, a trifluoromethyl group or a trifluoromethoxy group bound to the 3-position or the 4-position;
an amide compound of the formula (2) wherein R⁴n is one or two halogen atoms;
an amide compound of the formula (2) wherein R⁴n is one or two C1-C3 alkyl groups;
an amide compound of the formula (2) wherein R⁴n is one or two ethynyl groups;
an amide compound of the formula (2) wherein R⁴n is one or two C1-C4 alkoxy groups;
an amide compound of the formula (2) wherein R⁴n is one or two methylthio groups;
an amide compound of the formula (2) wherein R⁴n is one or two trifluoromethyl groups;
an amide compound of the formula (2) wherein R⁴n is one or two trifluoromethoxy groups;
an amide compound of the formula (2) wherein n is 1;
an amide compound of the formula (2) wherein n is 2;
an amide compound of the formula (2) wherein n is 1 and the binding position of R⁴ is the 3-position;
an amide compound of the formula (2) wherein n is 1 and the binding position of R⁴ is the 4-position;
an amide compound of the formula (2) wherein n is 1, the binding position of R⁴ is the 3-position, and R is a halogen atom;
an amide compound of the formula (2) wherein n is 1, the binding position of R⁴ is the 3-position, and R is a C1-C3 alkyl group;
an amide compound of the formula (2) wherein n is 1, the binding position of R⁴ is the 3-position, and R is a C1-C4 alkoxy group;
an amide compound of the formula (2) wherein n is 1, the binding position of R⁴ is the 4-position, and R is a halogen atom;
an amide compound of the formula (2) wherein n is 1, the binding position of R⁴ is the 4-position, and R is a C1-C3 alkyl group, and
an amide compound of the formula (2) wherein n is 1, the binding position of R⁴ is the 4-position and R is a a C1-C4 alkoxy group.

An amide compound represented by formula (3) 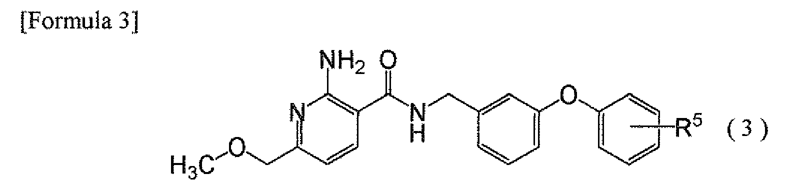 wherein R⁵ represents a hydrogen atom, a halogen atom, a methyl group, a methoxy group, a trifluoromethyl group or a trifluoromethoxy group;
an amide compound of formula (3) wherein the binding potion of R⁵ is the 3-position or the 4-position;
an amide compound of formula (3) wherein R⁵ is a fluorine atom bound to the 3-position, a fluorine atom bound to the 4-position, a trifluoromethyl group bound to the 3-position, a trifluoromethyl group bound to the 4-position, a trifluoromethoxy group bound to the 3-position or a trifluoromethoxy group bound to the 4-position;
an amide compound of formula (3) wherein R⁵ is a hydrogen atom;
an amide compound of formula (3) wherein R⁵ is a halogen atom;
an amide compound of formula (3) wherein R⁵ is a methyl group;
an amide compound of formula (3) wherein R⁵ is a methoxy group;
an amide compound of formula (3) wherein R⁵ is a trifluoromethyl group;
an amide compound of formula (3) wherein R⁵ is a trifluoromethoxy group;
an amide compound of formula (3) wherein the binding position of R⁵ is the 2-position;
an amide compound of formula (3) wherein the binding position of R⁵ is the 3-position;
an amide compound of formula (3) wherein the binding position of R⁵ is the 4-position;
an amide compound of formula (3) wherein the binding position of R⁵ is the 2-position and R⁵ is a halogen atom;
an amide compound of formula (3) wherein the binding position of R⁵ is the 3-position and R⁵ is a halogen atom, and
an amide compound of formula (3) wherein the binding position of R⁵ is the 4-position and R⁵ is a halogen atom.

An amide compound represented by formula (4) 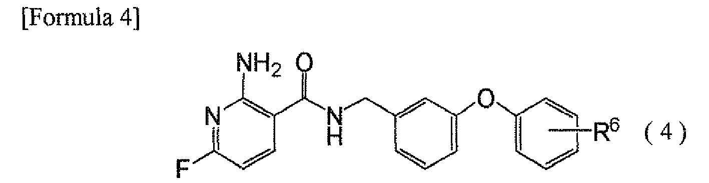 wherein R⁶ represents a hydrogen atom, a halogen atom, a methyl group, a methoxy group, a trifluoromethyl group or a trifluoromethoxy group;
an amide compound of the formula (4) wherein the binding position of R⁶ is the 3-position or the 4-position;
an amide compound of the formula (4) wherein R⁶ is a fluorine atom bound to the 3-position, a fluorine atom bound to the 4-position, a trifluoromethyl group bound to the 3-position; a trifluoromethyl group bound to the 4-position, a trifluoromethoxy group bound to the 3-position or a trifluoromethoxy group bound to the 4-position;
an amide compound of the formula (4) wherein R⁶ is a halogen atom;
an amide compound of the formula (4) wherein R⁶ is a methyl group;
an amide compound of the formula (4) wherein R⁶ is a methoxy group;
an amide compound of the formula (4) wherein R⁶ is a trifluoromethyl group;
an amide compound of the formula (4) wherein R⁶ is a trifluoromethoxy group;
an amide compound of the formula (4) wherein the binding position of R⁶ is the 2-position;
an amide compound of the formula (4) wherein the binding position of R⁶ is the 3-position;
an amide compound of the formula (4) wherein the binding position of R⁶ is the 4-position;
an amide compound of the formula (4) wherein the binding position of R⁶ is the 2-position and R⁶ is a halogen atom;
an amide compound of the formula (4) wherein the binding position of R⁶ is the 3-position and R⁶ is a halogen atom; and
an amide compound of the formula (4) wherein the binding position of R⁶ is the 4-position and R⁶ is a halogen atom.

An amide compound represented by formula (5) 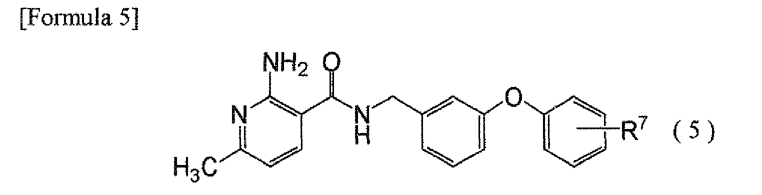 wherein R⁷ represents a hydrogen atom, a halogen atom, a methyl group, a methoxy group, a trifluoromethyl group or a trifluoromethoxy group;
an amide compound of the formula (5) wherein the binding position of R⁷ is the 3-position or the 4-position;
an amide compound of the formula (5) wherein R⁷ is a fluorine atom bound to the 3-position, a fluorine atom bound to the 4-position, a trifluoromethyl group bound to the 3-position, a trifluoromethyl group bound to the 4-position, a trifluoromethoxy group bound to the 3-position or a trifluoromethoxy group bound to the 4-position;
an amide compound of the formula (5) wherein R⁷ is a hydrogen atom;
an amide compound of the formula (5) wherein R⁷ is a halogen atom;
an amide compound of the formula (5) wherein R⁷ is a methyl group;
an amide compound of the formula (5) wherein R⁷ is a methoxy group;
an amide compound of the formula (5) wherein R⁷ is a trifluoromethyl group;
an amide compound of the formula (5) wherein R⁷ is a trifluoromethoxy group;
an amide compound of the formula (5) wherein the binding position of R⁷ is the 2-position;
an amide compound of the formula (5) wherein the binding position of R⁷ is the 3-position;
an amide compound of the formula (5) wherein the binding position of R⁷ is the 4-position;
an amide compound of the formula (5) wherein the binding position of R⁷ is the 2-position and R⁷ is a halogen atom;
an amide compound of the formula (5) wherein the binding position of R⁷ is the 3-position and R⁷ is a halogen atom;
an amide compound of the formula (5) wherein the binding position of R⁷ is the 4-position and R⁷ is a halogen atom;
an amide compound of the formula (5) wherein the binding position of R⁷ is the 2-position and R⁷ is a methyl group;
an amide compound of the formula (5) wherein the binding position of R⁷ is the 3-position and R⁷ is a methyl group;
an amide compound of the formula (5) wherein the binding position of R⁷ is the 4-position and R⁷ is a methyl group;
an amide compound of the formula (5) wherein the binding position of R⁷ is the 2-position and R⁷ is a methoxy group;
an amide compound of the formula (5) wherein the binding position of R⁷ is the 3-position and R⁷ is a methoxy group;
an amide compound of the formula (5) wherein the binding position of R⁷ is the 4-position and R⁷ is a methoxy group;
an amide compound of the formula (5) wherein the binding position of R⁷ is the 2-position and R⁷ is a trifluoromethyl group;
an amide compound of the formula (5) wherein the binding position of R⁷ is the 3-position and R⁷ is a trifluoromethyl group;
an amide compound of the formula (5) wherein the binding position of R⁷ is the 4-position and R⁷ is a trifluoromethyl group;
an amide compound of the formula (5) wherein the binding position of R⁷ is the 2-position and R⁷ is a trifluoromethoxy group;
an amide compound of the formula (5) wherein the binding position of R⁷ is the 3-position and R⁷ is a trifluoromethoxy group; and
an amide compound of the formula (5) wherein the binding position of R⁷ is the 4-position and R⁷ is a trifluoromethoxy group.

An amide compound represented by formula (6) 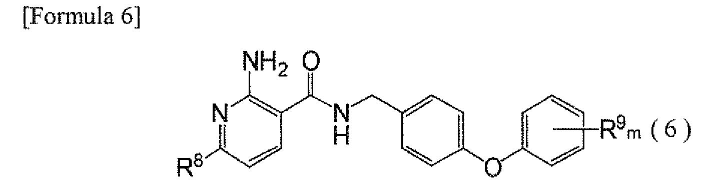 wherein R⁸ represents a hydrogen atom, a fluorine atom, a methyl group or a methoxymethyl group, R⁹ represents a hydrogen atom, a halogen atom, a C1-5 alkyl group, a C1-4 linear alkoxy group, a C1-2 alkylthio group, a trifluoromethyl group, a trifluoromethoxy group or a cyano group, m represents 1, 2 or 3, wherein when m is 2 or 3, R⁹'s are the same or different from each other;
an amide compound of the formula (6) wherein m is 1, the binding position of R⁹ is the 3-position or the 4-position;
an amide compound of the formula (6) wherein m is 1 and R⁹ is a fluorine atom bound to the 3-position, a fluorine atom bound to the 4-position, a trifluoromethyl group bound to the 3-position, a trifluoromethyl group bound to the 4-position, a trifluoromethoxy group bound to the 3-position or a trifluoromethoxy group bound to the 4-position;
an amide compound of the formula (6) wherein R⁸ is a hydrogen atom;
an amide compound of the formula (6) wherein R⁸ is a fluorine atom;
an amide compound of the formula (6) wherein R⁸ is a methyl group;
an amide compound of the formula (6) wherein R⁸ is a methoxymethyl group;
an amide compound of the formula (6) wherein R⁹ is a hydrogen atom;
an amide compound of the formula (6) wherein R⁹ is one, two or three halogen atoms;
an amide compound of the formula (6) wherein R⁹ is one, two or three C1-5 alkyl groups;
an amide compound of the formula (6) wherein R⁹ is one, two or three C1-4 linear alkoxy groups;
an amide compound of the formula (6) wherein R⁹ is one, two or three C1-2 alkylthio groups;
an amide compound of the formula (6) wherein R⁹ is one, two or three trifluoromethyl groups;
an amide compound of the formula (6) wherein R⁹ is one, two or three trifluoromethoxy groups;
an amide compound of the formula (6) wherein R⁹ is one, two or three cyano groups;
an amide compound of the formula (6) wherein m is 1;
an amide compound of the formula (6) wherein m is 2;
an amide compound of the formula (6) wherein m is 3;
an amide compound of the formula (6) wherein m is 1 and the binding position of R⁹ is the 2-position;
an amide compound of the formula (6) wherein m is 1 and the binding position of R⁹ is the 3-position;
an amide compound of the formula (6) wherein m is 1 and the binding position of R⁹ is the 4-position;
an amide compound of the formula (6) wherein R⁸ is a hydrogen atom, m is 1 and the binding position of R⁹ is the 2-position;
an amide compound of the formula (6) wherein R⁸ is a hydrogen atom, m is 1 and the binding position of R⁹ is the 3-position;
an amide compound of the formula (6) wherein R⁸ is a hydrogen atom, m is 1 and the binding position of R⁹ is the 4-position;
an amide compound of the formula (6) wherein R⁸ is a fluorine atom, m is 1 and the binding position of R⁹ is the 2-position;
an amide compound of the formula (6) wherein R⁸ is a fluorine atom, m is 1 and the binding position of R⁹ is the 3-position;
an amide compound of the formula (6) wherein R⁸ is a fluorine atom, m is 1 and the binding position of R⁹ is the 4-position;
an amide compound of the formula (6) wherein R⁸ is a methyl group, m is 1 and the binding position of R⁹ is the 2-position;
an amide compound of the formula (6) wherein R⁸ is a methyl group, m is 1 and the binding position of R⁹ is the 3-position;
an amide compound of the formula (6) wherein R⁸ is a methyl group, m is 1 and the binding position of R⁹ is the 4-position;
an amide compound of the formula (6) wherein R⁸ is a methoxymethyl group, m is 1 and the binding position of R⁹ is the 2-position;
an amide compound of the formula (6) wherein R⁸ is a methoxymethyl group, m is 1 and the binding position of R⁹ is the 3-position;
an amide compound of the formula (6) wherein R⁸ is a methoxymethyl group, m is 1 and the binding position of R⁹ is the 4-position;

an amide compound of the formula (6) wherein R⁸ is a hydrogen atom, m is 1 and R⁹ is a halogen atom;
an amide compound of the formula (6) wherein R⁸ is a hydrogen atom, m is 1 and R⁹ is a C1-5 alkyl group;
an amide compound of the formula (6) wherein R⁸ is a hydrogen atom, m is 1 and R⁹ is a C1-4 linear alkoxy group;
an amide compound of the formula (6) wherein R⁸ is a hydrogen atom, m is 1 and R⁹ is a C1-2 alkylthio group;
an amide compound of the formula (6) wherein R⁸ is a hydrogen atom, m is 1 and R⁹ is a trifluoromethyl group;
an amide compound of the formula (6) wherein R⁸ is a hydrogen atom, m is 1 and R⁹ is a trifluoromethoxy group;
an amide compound of the formula (6) wherein R⁸ is a hydrogen atom, m is 1 and R⁹ is a cyano group;
an amide compound of the formula (6) wherein R⁸ is a fluorine atom, m is 1 and R⁹ is a halogen atom;
an amide compound of the formula (6) wherein R⁸ is a fluorine atom, m is 1 and R⁹ is a C1-5 alkyl group;
an amide compound of the formula (6) wherein R⁸ is a fluorine atom, m is 1 and R⁹ is a C1-4 linear alkoxy group;
an amide compound of the formula (6) wherein R⁸ is a fluorine atom, m is 1 and R⁹ is a C1-2 alkylthio group;
an amide compound of the formula (6) wherein R⁸ is a fluorine atom, m is 1 and R⁹ is a trifluoromethyl group;
an amide compound of the formula (6) wherein R⁸ is a fluorine atom, m is 1 and R⁹ is a trifluoromethoxy group;
an amide compound of the formula (6) wherein R⁸ is a fluorine atom, m is 1 and R⁹ is a cyano group;
an amide compound of the formula (6) wherein R⁸ is a methyl group, m is 1 and R⁹ is a halogen atom;
an amide compound of the formula (6) wherein R⁸ is a methyl group, m is 1 and R⁹ is a C1-5 alkyl group;
an amide compound of the formula (6) wherein R⁸ is a methyl group, m is 1 and R⁹ is a C1-4 linear alkoxy group;
an amide compound of the formula (6) wherein R⁸ is a methyl group, m is 1 and R⁹ is a C1-2 alkylthio group;
an amide compound of the formula (6) wherein R⁸ is a methyl group, m is 1 and R⁹ is a trifluoromethyl group;
an amide compound of the formula (6) wherein R⁸ is a methyl group, m is 1 and R⁹ is a trifluoromethoxy group;
an amide compound of the formula (6) wherein R⁸ is a methyl group, m is 1 and R⁹ is a cyano group;
an amide compound of the formula (6) wherein R⁸ is a methoxymethyl group, m is 1 and R⁹ is a halogen atom;
an amide compound of the formula (6) wherein R⁹ is a methoxymethyl group, m is 1 and R⁹ is a C1-5 alkyl group;
an amide compound of the formula (6) wherein R⁸ is a methoxymethyl group, m is 1 and R⁹ is a C1-4 linear alkoxy group;
an amide compound of the formula (6) wherein R⁸ is a methoxymethyl group, m is 1 and R⁹ is a C1-2 alkylthio group;
an amide compound of the formula (6) wherein R⁸ is a methoxymethyl group, m is 1 and R⁹ is a trifluoromethyl group;
an amide compound of the formula (6) wherein R⁸ is a methoxymethyl group, m is 1 and R⁹ is a trifluoromethoxy group;
an amide compound of the formula (6) wherein R⁸ is a methoxymethyl group, m is 1 and R⁹ is a cyano group;

an amide compound of the formula (6) wherein m is 1, the binding position of R⁹ is the 2-position and R⁹ is a halogen atom;
an amide compound of the formula (6) wherein m is 1, the binding position of R⁹ is the 2-position and R⁹ is a C1-5 alkyl group;
an amide compound of the formula (6) wherein m is 1, the binding position of R⁹ is the 2-position and R⁹ is a C1-4 linear alkoxy group;
an amide compound of the formula (6) wherein m is 1, the binding position of R⁹ is the 2-position and R⁹ is a C1-2 alkylthio group;
an amide compound of the formula (6) wherein m is 1, the binding position of R⁹ is the 2-position and R⁹ is a trifluoromethyl group;
an amide compound of the formula (6) wherein m is 1, the binding position of R⁹ is the 2-position and R⁹ is a trifluoromethoxy group;
an amide compound of the formula (6) wherein m is 1, the binding position of R⁹ is the 2-position and R⁹ is a cyano group;
an amide compound of the formula (6) wherein m is 1, the binding position of R⁹ is the 3-position and R⁹ is a halogen atom;
an amide compound of the formula (6) wherein m is 1, the binding position of R⁹ is the 3-position and R⁹ is a C1-5 alkyl group;
an amide compound of the formula (6) wherein m is 1, the binding position of R⁹ is the 3-position and R⁹ is a C1-4 linear alkoxy group;
an amide compound of the formula (6) wherein m is 1, the binding position of R⁹ is the 3-position and R⁹ is a C1-2 alkylthio group;
an amide compound of the formula (6) wherein m is 1, the binding position of R⁹ is the 3-position and R⁹ is a trifluoromethyl group;
an amide compound of the formula (6) wherein m is 1, the binding position of R⁹ is the 3-position and R⁹ is a trifluoromethoxy group;
an amide compound of the formula (6) wherein m is 1, the binding position of R⁹ is the 3-position and R⁹ is a cyano group;
an amide compound of the formula (6) wherein m is 1, the binding position of R⁹ is the 4-position and R⁹ is a halogen atom;
an amide compound of the formula (6) wherein m is 1, the binding position of R⁹ is the 4-position and R⁹ is a C1-5 alkyl group;
an amide compound of the formula (6) wherein m is 1, the binding position of R⁹ is the 4-position and R⁹ is a C1-4 linear alkoxy group;
an amide compound of the formula (6) wherein m is 1, the binding position of R⁹ is the 4-position and R⁹ is a C1-2 alkylthio group;
an amide compound of the formula (6) wherein m is 1, the binding position of R⁹ is the 4-position and R⁹ is a trifluoromethyl group;
an amide compound of the formula (6) wherein m is 1, the binding position of R⁹ is the 4-position and R⁹ is a trifluoromethoxy group;
an amide compound of the formula (6) wherein m is 1, the binding position of R⁹ is the 4-position and R⁹ is a cyano group;
an amide compound of the formula (6) wherein R⁸ is a hydrogen atom, m is 1 and R⁹ is a halogen atom;
an amide compound of the formula (6) wherein R⁸ is a hydrogen atom, m is 1 and R⁹ is a C1-5 alkyl group;
an amide compound of the formula (6) wherein R⁸ is a hydrogen atom, m is 1 and R⁹ is a C1-4 linear alkoxy group;
an amide compound of the formula (6) wherein R⁸ is a hydrogen atom, m is 1 and R⁹ is a C1-2 alkylthio group;
an amide compound of the formula (6) wherein R⁸ is a hydrogen atom, m is 1 and R⁹ is a trifluoromethyl group;
an amide compound of the formula (6) wherein R⁸ is a hydrogen atom, m is 1 and R⁹ is a trifluoromethoxy group;
an amide compound of the formula (6) wherein R⁸ is a hydrogen atom, m is 1 and R⁹ is a cyano group;
an amide compound of the formula (6) wherein R⁸ is a fluorine atom, m is 1 and R⁹ is a halogen atom;
an amide compound of the formula (6) wherein R⁸ is a fluorine atom, m is 1 and R⁹ is a C1-5 alkyl group;
an amide compound of the formula (6) wherein R⁸ is a fluorine atom, m is 1 and R⁹ is a C1-4 linear alkoxy group;
an amide compound of the formula (6) wherein R⁸ is a fluorine atom, m is 1 and R⁹ is a C1-2 alkylthio group;
an amide compound of the formula (6) wherein R⁸ is a fluorine atom, m is 1 and R⁹ is a trifluoromethyl group;
an amide compound of the formula (6) wherein R⁸ is a fluorine atom, m is 1 and R⁹ is a trifluoromethoxy group;
an amide compound of the formula (6) wherein R⁸ is a fluorine atom, m is 1 and R⁹ is a cyano group;
an amide compound of the formula (6) wherein R⁸ is a methyl group, m is 1 and R⁹ is a halogen atom;
an amide compound of the formula (6) wherein R⁸ is a methyl group, m is 1 and R⁹ is a C1-5 alkyl group;
an amide compound of the formula (6) wherein R⁸ is a methyl group, m is 1 and R⁹ is a C1-4 linear alkoxy group;
an amide compound of the formula (6) wherein R⁸ is a methyl group, m is 1 and R⁹ is a C1-2 alkylthio group;
an amide compound of the formula (6) wherein R⁸ is a methyl group, m is 1 and R⁹ is a trifluoromethyl group;
an amide compound of the formula (6) wherein R⁸ is a methyl group, m is 1 and R⁹ is a trifluoromethoxy group;
an amide compound of the formula (6) wherein R⁸ is a methyl group, m is 1 and R⁹ is a cyano group;
an amide compound of the formula (6) wherein R⁸ is a methoxymethyl group, m is 1 and R⁹ is a halogen atom;
an amide compound of the formula (6) wherein R⁸ is a methoxymethyl group, m is 1 and R⁹ is a C1-5 alkyl group;
an amide compound of the formula (6) wherein R⁸ is a methoxymethyl group, m is 1 and R⁹ is a C1-4 linear alkoxy group;
an amide compound of the formula (6) wherein R⁸ is a methoxymethyl group, m is 1 and R⁹ is a C1-2 alkylthio group;
an amide compound of the formula (6) wherein R⁸ is a methoxymethyl group, m is 1 and R⁹ is a trifluoromethyl group;
an amide compound of the formula (6) wherein R⁸ is a methoxymethyl group, m is 1 and R⁹ is a trifluoromethoxy group;
an amide compound of the formula (6) wherein R⁸ is a methoxymethyl group, m is 1 and R⁹ is a cyano group;

an amide compound of the formula (6) wherein m is 1, the binding position of R⁹ is the 2-position and R⁹ is a halogen atom;
an amide compound of the formula (6) wherein m is 1, the binding position of R⁹ is the 2-position and R⁹ is a C1-5 alkyl group;
an amide compound of the formula (6) wherein m is 1, the binding position of R⁹ is the 2-position and R⁹ is a C1-4 linear alkoxy group;
an amide compound of the formula (6) wherein m is 1, the binding position of R⁹ is the 2-position and R⁹ is a C1-2 alkylthio group;
an amide compound of the formula (6) wherein m is 1, the binding position of R⁹ is the 2-position and R⁹ is a trifluoromethyl group;
an amide compound of the formula (6) wherein m is 1, the binding position of R⁹ is the 2-position and R⁹ is a trifluoromethoxy group;
an amide compound of the formula (6) wherein m is 1, the binding position of R⁹ is the 2-position and R⁹ is a cyano group;
an amide compound of the formula (6) wherein m is 1, the binding position of R⁹ is the 3-position and R⁹ is a halogen atom;
an amide compound of the formula (6) wherein m is 1, the binding position of R⁹ is the 3-position and R⁹ is a C1-5 alkyl group;
an amide compound of the formula (6) wherein m is 1, the binding position of R⁹ is the 3-position and R⁹ is a C1-4 linear alkoxy group;
an amide compound of the formula (6) wherein m is 1, the binding position of R⁹ is the 3-position and R⁹ is a C1-2 alkylthio group;
an amide compound of the formula (6) wherein m is 1, the binding position of R⁹ is the 3-position and R⁹ is a trifluoromethyl group;
an amide compound of the formula (6) wherein m is 1, the binding position of R⁹ is the 3-position and R⁹ is a trifluoromethoxy group;
an amide compound of the formula (6) wherein m is 1, the binding position of R⁹ is the 3-position and R⁹ is a cyano group;
an amide compound of the formula (6) wherein m is 1, the binding position of R⁹ is the 4-position and R⁹ is a halogen atom;
an amide compound of the formula (6) wherein m is 1, the binding position of R⁹ is the 4-position and R⁹ is a C1-5 alkyl group;
an amide compound of the formula (6) wherein m is 1, the binding position of R⁹ is the 4-position and R⁹ is a C1-4 linear alkoxy group;
an amide compound of the formula (6) wherein m is 1, the binding position of R⁹ is the 4-position and R⁹ is a C1-2 alkylthio group;
an amide compound of the formula (6) wherein m is 1, the binding position of R⁹ is the 4-position and R⁹ is a trifluoromethyl group;
an amide compound of the formula (6) wherein m is 1, the binding position of R⁹ is the 4-position and R⁹ is a trifluoromethoxy group;
an amide compound of the formula (6) wherein m is 1, the binding position of R⁹ is the 4-position and R⁹ is a cyano group;

an amide compound of the formula (6) wherein R⁸ is a hydrogen atom and R⁹ is a hydrogen atom;
an amide compound of the formula (6) wherein R⁹ is a hydrogen atom, m is 1, the binding position of R⁹ is the 2-position and R⁹ is a halogen atom;
an amide compound of the formula (6) wherein R⁸ is a hydrogen atom, m is 1, the binding position of R⁹ is the 2-position and R⁹ is a C1-5 alkyl group;
an amide compound of the formula (6) wherein R⁸ is a hydrogen atom, m is 1, the binding position of R⁹ is the 2-position and R⁹ is a C1-4 linear alkoxy group;
an amide compound of the formula (6) wherein R⁸ is a hydrogen atom, m is 1, the binding position of R⁹ is the 2-position and R⁹ is a C1-2 alkylthio group;
an amide compound of the formula (6) wherein R⁸ is a hydrogen atom, m is 1, the binding position of R⁹ is the 2-position and R⁹ is a trifluoromethyl group;
an amide compound of the formula (6) wherein R⁸ is a hydrogen atom, m is 1, the binding position of R⁹ is the 2-position and R⁹ is a trifluoromethoxy group;
an amide compound of the formula (6) wherein R⁸ is a hydrogen atom, m is 1, the binding position of R⁹ is the 2-position and R⁹ is a cyano group;
an amide compound of the formula (6) wherein R⁸ is a fluorine atom and R⁹ is a hydrogen atom;
an amide compound of the formula (6) wherein R⁸ is a fluorine atom, m is 1, the binding position of R⁹ is the 2-position and R⁹ is a halogen atom;
an amide compound of the formula (6) wherein R⁸ is a fluorine atom, m is 1, the binding position of R⁹ is the 2-position and R⁹ is a C1-5 alkyl group;
an amide compound of the formula (6) wherein R⁸ is a fluorine atom, m is 1, the binding position of R⁹ is the 2-position and R⁹ is a C1-4 linear alkoxy group;
an amide compound of the formula (6) wherein R⁸ is a fluorine atom, m is 1, the binding position of R⁹ is the 2-position and R⁹ is a C1-2 alkylthio group;
an amide compound of the formula (6) wherein R⁸ is a fluorine atom, m is 1, the binding position of R⁹ is the 2-position and R⁹ is a trifluoromethyl group;
an amide compound of the formula (6) wherein R⁸ is a fluorine atom, m is 1, the binding position of R⁹ is the 2-position and R⁹ is a trifluoromethoxy group;
an amide compound of the formula (6) wherein R⁸ is a fluorine atom, m is 1, the binding position of R⁹ is the 2-position and R⁹ is a cyano group;
an amide compound of the formula (6) wherein R⁸ is a methyl group and R⁹ is a hydrogen atom;
an amide compound of the formula (6) wherein R⁸ is a methyl group, m is 1, the binding position of R⁹ is the 2-position and R⁹ is a halogen atom;
an amide compound of the formula (6) wherein R⁸ is a methyl group, m is 1, the binding position of R⁹ is the 2-position and R⁹ is a C1-5 alkyl group;
an amide compound of the formula (6) wherein R⁸ is a methyl group, m is 1, the binding position of R⁹ is the 2-position and R⁹ is a C1-4 linear alkoxy group;
an amide compound of the formula (6) wherein R⁸ is a methyl group, m is 1, the binding position of R⁹ is the 2-position and R⁹ is a C1-2 alkylthio group;
an amide compound of the formula (6) wherein R⁸ is a methyl group, m is 1, the binding position of R⁹ is the 2-position and R⁹ is a trifluoromethyl group;
an amide compound of the formula (6) wherein R⁸ is a methyl group, m is 1, the binding position of R⁹ is the 2-position and R⁹ is a trifluoromethoxy group;
an amide compound of the formula (6) wherein R⁸ is a methyl group, m is 1, the binding position of R⁹ is the 2-position and R⁹ is a cyano group;
an amide compound of the formula (6) wherein R⁸ is a methoxymethyl group and R⁹ is a hydrogen atom;
an amide compound of the formula (6) wherein R⁸ is a methoxymethyl group, m is 1, the binding position of R⁹ is the 2-position and R⁹ is a halogen atom;
an amide compound of the formula (6) wherein R⁸ is a methoxymethyl group, m is 1, the binding position of R⁹ is the 2-position and R⁹ is a C1-5 alkyl group;
an amide compound of the formula (6) wherein R⁸ is a methoxymethyl group, m is 1, the binding position of R⁹ is the 2-position and R⁹ is a C1-4 linear alkoxy group;
an amide compound of the formula (6) wherein R⁸ is a methoxymethyl group, m is 1, the binding position of R⁹ is the 2-position and R⁹ is a C1-2 alkylthio group;
an amide compound of the formula (6) wherein R⁸ is a methoxymethyl group, m is 1, the binding position of R⁹ is the 2-position and R⁹ is a trifluoromethyl group;
an amide compound of the formula (6) wherein R⁸ is a methoxymethyl group, m is 1, the binding position of R⁹ is the 2-position and R⁹ is a trifluoromethoxy group;
an amide compound of the formula (6) wherein R⁸ is a methoxymethyl group, m is 1, the binding position of R⁹ is the 2-position and R⁹ is a cyano group;
an amide compound of the formula (6) wherein R⁸ is a hydrogen atom, m is 1, the binding position of R⁹ is the 3-position and R⁹ is a halogen atom;
an amide compound of the formula (6) wherein R⁸ is a hydrogen atom, m is 1, the binding position of R⁹ is the 3-position and R⁹ is a C1-5 alkyl group;
an amide compound of the formula (6) wherein R⁸ is a hydrogen atom, m is 1, the binding position of R⁹ is the 3-position and R⁹ is a C1-4 linear alkoxy group;
an amide compound of the formula (6) wherein R⁸ is a hydrogen atom, m is 1, the binding position of R⁹ is the 3-position and R⁹ is a C1-2 alkylthio group;
an amide compound of the formula (6) wherein R⁸ is a hydrogen atom, m is 1, the binding position of R⁹ is the 3-position and R⁹ is a trifluoromethyl group;
an amide compound of the formula (6) wherein R⁸ is a hydrogen atom, m is 1, the binding position of R⁹ is the 3-position and R⁹ is a trifluoromethoxy group;
an amide compound of the formula (6) wherein R⁸ is a hydrogen atom, m is 1, the binding position of R⁹ is the 3-position and R⁹ is a cyano group;
an amide compound of the formula (6) wherein R⁸ is a fluorine atom and R⁹ is a hydrogen atom;
an amide compound of the formula (6) wherein R⁸ is a fluorine atom, m is 1, the binding position of R⁹ is the 3-position and R⁹ is a halogen atom;
an amide compound of the formula (6) wherein R⁸ is a fluorine atom, m is 1, the binding position of R⁹ is the 3-position and R⁹ is a C1-5 alkyl group;
an amide compound of the formula (6) wherein R⁸ is a fluorine atom, m is 1, the binding position of R⁹ is the 3-position and R⁹ is a C1-4 linear alkoxy group;
an amide compound of the formula (6) wherein R⁸ is a fluorine atom, m is 1, the binding position of R⁹ is the 3-position and R⁹ is a C1-2 alkylthio group;
an amide compound of the formula (6) wherein R⁸ is a fluorine atom, m is 1, the binding position of R⁹ is the 3-position and R⁹ is a trifluoromethyl group;
an amide compound of the formula (6) wherein R⁸ is a fluorine atom, m is 1, the binding position of R⁹ is the 3-position and R⁹ is a trifluoromethoxy group;
an amide compound of the formula (6) wherein R⁸ is a fluorine atom, m is 1, the binding position of R⁹ is the 3-position and R⁹ is a cyano group;
an amide compound of the formula (6) wherein R⁸ is a methyl group and R⁹ is a hydrogen atom; an amide compound of the formula (6) wherein R⁸ is a methyl group, m is 1, the binding position of R⁹ is the 3-position and R⁹ is a halogen atom;
an amide compound of the formula (6) wherein R⁸ is a methyl group, m is 1, the binding position of R⁹ is the 3-position and R⁹ is a C1-5 alkyl group;
an amide compound of the formula (6) wherein R⁸ is a methyl group, m is 1, the binding position of R⁹ is the 3-position and R⁹ is a C1-4 linear alkoxy group;
an amide compound of the formula (6) wherein R⁸ is a methyl group, m is 1, the binding position of R⁹ is the 3-position and R⁹ is a C1-2 alkylthio group;
an amide compound of the formula (6) wherein R⁸ is a methyl group, m is 1, the binding position of R⁹ is the 3-position and R⁹ is a trifluoromethyl group;
an amide compound of the formula (6) wherein R⁸ is a methyl group, m is 1, the binding position of R⁹ is the 3-position and R⁹ is a trifluoromethoxy group;
an amide compound of the formula (6) wherein R⁸ is a methyl group, m is 1, the binding position of R⁹ is the 3-position and R⁹ is a cyano group;
an amide compound of the formula (6) wherein R⁸ is a methylmethoxy group and R⁹ is a hydrogen atom;
an amide compound of the formula (6) wherein R⁸ is a methylmethoxy group, m is 1, the binding position of R⁹ is the 3-position and R⁹ is a halogen atom;
an amide compound of the formula (6) wherein R⁸ is a methylmethoxy group, m is 1, the binding position of R⁹ is the 3-position and R⁹ is a C1-5 alkyl group;
an amide compound of the formula (6) wherein R⁸ is a methylmethoxy group, m is 1, the binding position of R⁹ is the 3-position and R⁹ is a C1-4 linear alkoxy group;
an amide compound of the formula (6) wherein R⁸ is a methylmethoxy group, m is 1, the binding position of R⁹ is the 3-position and R⁹ is a C1-2 alkylthio group;
an amide compound of the formula (6) wherein R⁸ is a methylmethoxy group, m is 1, the binding position of R⁹ is the 3-position and R⁹ is a trifluoromethyl group;
an amide compound of the formula (6) wherein R⁸ is a methylmethoxy group, m is 1, the binding position of R⁹ is the 3-position and R⁹ is a trifluoromethoxy group;
an amide compound of the formula (6) wherein R⁸ is a methylmethoxy group, m is 1, the binding position of R⁹ is the 3-position and R⁹ is a cyano group;
an amide compound of the formula (6) wherein R⁸ is a hydrogen atom, m is 1, the binding position of R⁹ is the 4-position and R⁹ is a halogen atom;
an amide compound of the formula (6) wherein R⁸ is a hydrogen atom, m is 1, the binding position of R⁹ is the 4-position and R⁹ is a C1-5 alkyl group;
an amide compound of the formula (6) wherein R⁸ is a hydrogen atom, m is 1, the binding position of R⁹ is the 4-position and R⁹ is a C1-4 linear alkoxy group;
an amide compound of the formula (6) wherein R⁸ is a hydrogen atom, m is 1, the binding position of R⁹ is the 4-position and R⁹ is a C1-2 alkylthio group;
an amide compound of the formula (6) wherein R⁸ is a hydrogen atom, m is 1, the binding position of R⁹ is the 4-position and R⁹ is a trifluoromethyl group;
an amide compound of the formula (6) wherein R⁸ is a hydrogen atom, m is 1, the binding position of R⁹ is the 4-position and R⁹ is a trifluoromethoxy group;
an amide compound of the formula (6) wherein R⁸ is a hydrogen atom, m is 1, the binding position of R⁹ is the 4-position and R⁹ is a cyano group;
an amide compound of the formula (6) wherein R⁸ is a fluorine atom and R⁹ is a hydrogen atom;
an amide compound of the formula (6) wherein R⁸ is a fluorine atom, m is 1, the binding position of R⁹ is the 4-position and R⁹R⁷ is a halogen atom;
an amide compound of the formula (6) wherein R⁸ is a fluorine atom, m is 1, the binding position of R⁹ is the 4-position and R⁹ is a C1-5 alkyl group;
an amide compound of the formula (6) wherein R⁸ is a fluorine atom, m is 1, the binding position of R⁹ is the 4-position and R⁹ is a C1-4 linear alkoxy group;
an amide compound of the formula (6) wherein R⁸ is a fluorine atom, m is 1, the binding position of R⁹ is the 4-position and R⁹ is a C1-2 alkylthio group;
an amide compound of the formula (6) wherein R⁸ is a fluorine atom, m is 1, the binding position of R⁹ is the 4-position and R⁹ is a trifluoromethyl group;
an amide compound of the formula (6) wherein R⁸ is a fluorine atom, m is 1, the binding position of R⁹ is the 4-position and R⁹ is a trifluoromethoxy group;
an amide compound of the formula (6) wherein R⁸ is a fluorine atom, m is 1, the binding position of R⁹ is the 4-position and R⁹ is a cyano group;
an amide compound of the formula (6) wherein R⁸ is a methyl group and R⁹ is a hydrogen atom;
an amide compound of the formula (6) wherein R⁸ is a methyl group, m is 1, the binding position of R⁹ is the 4-position and R⁹ is a halogen atom;
an amide compound of the formula (6) wherein R⁸ is a methyl group, m is 1, the binding position of R⁹ is the 4-position and R⁹ is a C1-5 alkyl group;
an amide compound of the formula (6) wherein R⁸ is a methyl group, m is 1, the binding position of R⁹ is the 4-position and R⁹ is a C1-4 linear alkoxy group;
an amide compound of the formula (6) wherein R⁸ is a methyl group, m is 1, the binding position of R⁹ is the 4-position and R⁹ is a C1-2 alkylthio group;
an amide compound of the formula (6) wherein R⁸ is a methyl group, m is 1, the binding position of R⁹ is the 4-position and R⁹ is a trifluoromethyl group;
an amide compound of the formula (6) wherein R⁸ is a methyl group, m is 1, the binding position of R⁹ is the 4-position and R⁹ is a trifluoromethoxy group;
an amide compound of the formula (6) wherein R⁸ is a methyl group, m is 1, the binding position of R⁹ is the 4-position and R⁹ is a cyano group;
an amide compound of the formula (6) wherein R⁸ is a methylmethoxy group and R⁹ is a hydrogen atom;
an amide compound of the formula (6) wherein R⁸ is a methylmethoxy group, m is 1, the binding position of R⁹ is the 4-position and R⁹ is a halogen atom;
an amide compound of the formula (6) wherein R⁸ is a methylmethoxy group, m is 1, the binding position of R⁹ is the 4-position and R⁹ is a C1-5 alkyl group;
an amide compound of the formula (6) wherein R⁸ is a methylmethoxy group, m is 1, the binding position of R⁹ is the 4-position and R⁹ is a C1-4 linear alkoxy group;
an amide compound of the formula (6) wherein R⁸ is a methylmethoxy group, m is 1, the binding position of R⁹ is the 4-position and R⁹ is a C1-2 alkylthio group;
an amide compound of the formula (6) wherein R⁸ is a methylmethoxy group, m is 1, the binding position of R⁹ is the 4-position and R⁹ is a trifluoromethyl group;
an amide compound of the formula (6) wherein R⁸ is a methylmethoxy group, m is 1, the binding position of R⁹ is the 4-position and R⁹ is a trifluoromethoxy group; and
an amide compound of the formula (6) wherein R⁸ is a methylmethoxy group, m is 1, the binding position of R⁹ is the 4-position and R⁹ is a cyano group.

An amide compound represented by formula (7) 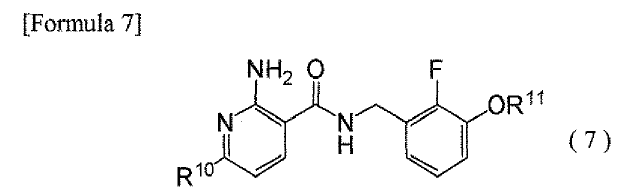 wherein R¹⁰ represents a hydrogen atom, a halogen atom, a methyl group, a methoxy group, a trifluoromethyl group or a trifluoromethoxy group, R¹¹ represents a C1-C⁷ linear alkyl group, a C3-C7 linear alkenyl group or a C3-C7 linear alkynyl group;
an amide compound of the formula (7) wherein R¹¹ is a methyl group, a pentyl group, a pentenyl group or a pentynyl group;
an amide compound of the formula (7) wherein R¹⁰ is a hydrogen atom;
an amide compound of the formula (7) wherein R¹⁰ is a fluorine atom;
an amide compound of the formula (7) wherein R¹⁰ is a methyl group;
an amide compound of the formula (7) wherein R¹⁰ is a methoxymethyl group;

an amide compound of the formula (7) wherein R¹¹ is a C1-C7 linear alkyl group;
an amide compound of the formula (7) wherein R¹¹ is a C3-C7 linear alkenyl group;
an amide compound of the formula (7) wherein R¹¹ is a C3-C7 linear alkynyl group;

an amide compound of the formula (7) wherein R¹⁰ is a hydrogen atom and R¹¹ is a C1-C7 linear alkyl group;
an amide compound of the formula (7) wherein R¹⁰ is a hydrogen atom and R¹¹ is a C3-C7 linear alkenyl group;
an amide compound of the formula (7) wherein R¹⁰ is a hydrogen atom and R¹¹ is a C3-C7 linear alkynyl group;
an amide compound of the formula (7) wherein R¹⁰ is a fluorine atom and R¹¹ is a C1-C7 linear alkyl group;
an amide compound of the formula (7) wherein R¹⁰ is a fluorine atom and R¹¹ is a C3-C7 linear alkenyl group;
an amide compound of the formula (7) wherein R¹⁰ is a fluorine atom and R¹¹ is a C3-C7 linear alkynyl group;
an amide compound of the formula (7) wherein R¹⁰ is a methyl group and R¹¹ is a C1-C7 linear alkyl group;
an amide compound of the formula (7) wherein R¹⁰ is a methyl group and R¹¹ is a C3-C7 linear alkenyl group;
an amide compound of the formula (7) wherein R¹⁰ is a methyl group and R¹¹ is a C3-C7 linear alkynyl group;
an amide compound of the formula (7) wherein R¹⁰ is a methoxymethyl group and R¹¹ is a C1-C7 linear alkyl group;
an amide compound of the formula (7) wherein R¹⁰ is a methoxymethyl group and R¹¹ is a C3-C7 linear alkenyl group, and
an amide compound of the formula (7) wherein R¹⁰ is a methoxymethyl group and R¹¹ is a C3-C7 linear alkynyl group.

An amide compound represented by formula (8) 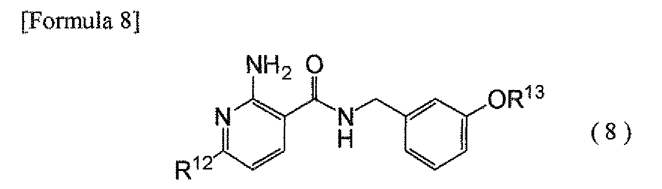 wherein R¹² represents a hydrogen atom, a halogen atom, a methyl group, a methoxy group, a trifluoromethyl group or a trifluoromethoxy group, R¹³ represents a C5-C7 linear alkyl group, a C5-C7 linear alkynyl group or a C5-C7 linear alkenyl group;
an amide compound of the formula (8) wherein R¹³ is a pentyl group, a pentenyl group or a pentynyl group;
an amide compound of the formula (8) wherein R¹² is a hydrogen atom ;
an amide compound of the formula (8) wherein R¹² is a fluorine atom;
an amide compound of the formula (8) wherein R¹² is a methyl group;
an amide compound of the formula (8) wherein R¹² is a methoxymethyl group;
an amide compound of the formula (8) wherein R¹³ is a C5-C7 linear alkyl group;
an amide compound of the formula (8) wherein R¹³ is a C5-C7 linear alkynyl group;
an amide compound of the formula (8) wherein R¹³ is a C5-C7 linear alkynyl group;
an amide compound of the formula (8) wherein R¹² is a hydrogen atom and R¹³ is a C5-C7 linear alkyl group;
an amide compound of the formula (8) wherein R¹² is a hydrogen atom and R¹³ is a C5-C7 linear alkenyl group;
an amide compound of the formula (8) wherein R¹² is a hydrogen atom and R¹³ is a C5-C7 linear alkynyl group;
an amide compound of the formula (8) wherein R¹² is a fluorine atom and R¹³ is a C5-C7 linear alkyl group;
an amide compound of the formula (8) wherein R¹² is a fluorine atom and R¹³ is a C5-C7 linear alkenyl group;
an amide compound of the formula (8) wherein R¹² is a fluorine atom and R¹³ is a C5-C7 linear alkynyl group;
an amide compound of the formula (8) wherein R¹² is a methyl group and R¹³ is a C5-C7 linear alkyl group;
an amide compound of the formula (8) wherein R¹² is a methyl group and R¹³ is a C5-C7 linear alkenyl group;
an amide compound of the formula (8) wherein R¹² is a methyl group and R¹³ is a C5-C7 linear alkynyl group;
an amide compound of the formula (8) wherein R¹² is a methoxymethyl group and R¹³ is a C5-C7 linear alkyl group;
an amide compound of the formula (8) wherein R¹² is a methoxymethyl group and R¹³ is a C5-C7 linear alkenyl group and
an amide compound of the formula (8) wherein R¹² is a methoxymethyl group and R¹³ is a C5-C7 linear alkynyl group.

An amide compound represented by formula (9) 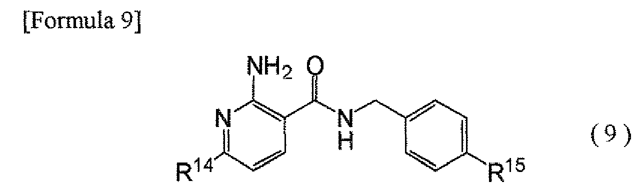 wherein R¹⁴ represents a hydrogen atom, a halogen atom, a methyl group, a methoxy group, a trifluoromethyl group or a trifluoromethoxy group, R¹⁵ represents a C3-7 linear alkyl group; an amide compound of the formula (9) wherein R¹⁴ is a hydrogen atom, R¹⁵ is a pentyl group or a hexyl group;
an amide compound of the formula (9) wherein R¹⁴ is a hydrogen atom;
an amide compound of the formula (9) wherein R¹⁴ is a fluorine atom;
an amide compound of the formula (9) wherein R¹⁴ is a methyl group;
an amide compound of the formula (9) wherein R¹⁴ is a methoxymethyl group;
an amide compound of the formula (9) wherein R¹⁵ is a propyl group;
an amide compound of the formula (9) wherein R¹⁵ is a butyl group;
an amide compound of the formula (9) wherein R¹⁵ is a pentyl group;
an amide compound of the formula (9) wherein R¹⁵ is a hexyl group and
an amide compound of the formula (9) wherein R¹⁵ is a heptyl group.

The following compounds 1 to 248 as shown in Tables 1 to 10 are specific examples of the present compound. These compounds are shown as combinations of R¹, R², R³, Z and E in the following formula (2).

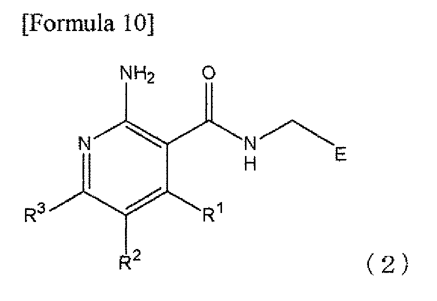

**[Table 1]**

| Present compound | R¹ | R² | R³ | E |
|---|---|---|---|---|
| 1 | H | H | H | phenyl |
| 2 | H | H | H | 4-fluorophenyl |
| 3 | H | H | H | 4-phenoxyphenyl |
| 4 | H | H | H | 4-biphenylyl |
| 5 | H | H | H | 3-biphenylyl |
| 6 | H | H | H | 3-phenoxyphenyl |
| 7 | H | H | H | 3-benzyloxyphenyl |
| 8 | H | H | H | 3-methoxyphenyl |
| 9 | H | H | H | 4-methoxyphenyl |
| 10 | H | H | H | 4-pentylphenyl |
| 11 | H | H | H | 3-pentylphenyl |
| 12 | H | H | NH₂ | 2-fluorophenyl |
| 13 | H | H | NH₂ | 2-fluoro-3-methoxyphenyl |
| 14 | H | H | NH₂ | 4-benzyloxyphenyl |
| 15 | H | H | NH₂ | 3-phenoxyphenyl |
| 16 | H | H | NH₂ | 4-(4-fluorophenyloxy)phenyl |
| 17 | H | H | NH₂ | 4-phenoxyphenyl |
| 18 | H | H | H | 2-fluoro-3-methoxyphenyl |
| 19 | H | H | F | 4-(4-fluorophenoxy)phenyl |
| 20 | H | H | H | 3-(3-methylphenoxy)phenyl |
| 21 | H | H | H | 4-(4-methylphenoxy)phenyl |
| 22 | H | H | H | 3-phenoxymethylphenyl |
| 23 | H | H | H | 4-phenoxymethylphenyl |
| 24 | H | H | H | 3-(2-phenylethyl)phenyl |
| 25 | H | H | H | 4-(2-phenylethyl)phenyl |

**[Table 2]**

| Present compound | R¹ | R² | R³ | E |
|---|---|---|---|---|
| 26 | H | H | H | 3-(2-phenylethoxy)phenyl |
| 27 | H | H | H | 4-(2-phenylethoxy)phenyl |
| 28 | H | H | H | 4-(3-fluorophenyl)methoxyphenyl |
| 29 | H | H | Me | 4-phenoxyphenyl |
| 30 | H | H | NH₂ | 4-(3-chlorophenyl)methoxyphenyl |
| 31 | H | H | H | 4-benzyloxyphenyl |
| 32 | H | H | H | 4-(4-fluorophenyl)methoxyphenyl |
| 33 | H | H | H | 4-fluoro-3-phenoxyphenyl |
| 34 | H | H | H | 4-(4-fluorophenoxy)phenyl |
| 35 | H | H | H | 5-phenoxyfuran-2-yl |
| 36 | H | H | H | 5-(3-fluorophenyl)methylfuran-2-yl |
| 37 | H | H | H | 5-phenoxythiophen-2-yl |
| 38 | H | H | NH₂ | 5-phenoxythiophen-2-y.1 |
| 39 | H | H | H | 5-(3-fluorophenyloxy)thiophen-2-yl |
| 40 | H | H | H | 5-benzylthiophen-2-yl |
| 41 | H | H | H | 5-(3-chlorophenyl)methylthiophen-2-yl |
| 42 | H | H | H | 2-phenoxythiazol-5-yl |
| 43 | H | H | H | 2-benzyloxythiazol-5-yl |
| 44 | H | H | H | 2-butoxythiazol-5-yl |
| 45 | H | H | Cl | 4-benzyloxyphenyl |
| 46 | H | H | F | 4-phenoxyphenyl |
| 47 | H | H | H | 4-(2-methoxyphenoxy)phenyl |
| 48 | H | H | H | 4-(3-methoxyphenoxy)phenyl |
| 49 | H | H | H | 4-(4-methoxyphenoxy)phenyl |
| 50 | H | H | H | 3-(2-methoxyphenoxy)phenyl |

**[Table 3]**

| Present compound | R¹ | R² | R³ | E |
|---|---|---|---|---|
| 51 | H | H | H | 3-(3-methoxyphenoxy)phenyl |
| 52 | H | H | H | 3-(4-methoxyphenoxy)phenyl |
| 53 | H | F | Cl | 4-phenoxyphenyl |
| 54 | H | F | NH₂ | 4-phenoxyphenyl |
| 55 | H | H | H | 2-fluoro-4-benzyloxyphenyl |
| 56 | H | H | H | 4-(2-nitrophenyl)methoxyphenyl |
| 57 | H | H | H | 4-(2-fluorophenyl)methoxyphenyl |
| 58 | H | H | H | 4-(2-methylphenyl)methoxyphenyl |
| 59 | H | H | H | 4-(3-methylphenyl)methoxyphenyl |
| 60 | H | H | H | 4-(4-methylphenyl)methoxyphenyl |
| 61 | H | H | Cl | 4-phenoxyphenyl |
| 62 | H | H | CH₂OMe | 4-phenoxyphenyl |
| 63 | H | Br | H | 4-phenoxyphenyl |
| 64 | H | H | H | 4-ethoxyphenyl |
| 65 | H | H | H | 4-butoxyphenyl |
| 66 | H | H | H | 4-pentyloxyphenyl |
| 67 | H | H | H | 4-heptyloxyphenyl |
| 68 | H | H | H | 4-hydroxyphenyl |
| 69 | H | H | H | 1-(3-fluorophenyl)methylpyrrol-3-yl |
| 70 | H | H | H | furan-2-yl |
| 71 | H | H | H | 4-(3-methoxypropoxy)phenyl |
| 72 | H | H | H | 4-(5-methoxypentyloxy)phenyl |
| 73 | H | H | H | 4-(6-methaxyhexyloxy)phenyl |
| 74 | H | H | H | 4-(7-methoxyheptyloxy)phenyl |
| 75 | H | H | H | 4-(2-ethoxyethoxy)phenyl |

**[Table 4]**

| Present compound | R¹ | R² | R³ | E |
|---|---|---|---|---|
| 76 | H | H | H | 4-(4-ethoxybutoxy)phenyl |
| 77 | H | H | CH₃ | 4-benzyloxyphenyl |
| 78 | H | Cl | H | 4-phenoxyphenyl |
| 79 | H | H | CH₃ | 4-(3-methoxyphenoxy)phenyl |
| 80 | H | H | CH₃ | 3-(4-methoxyphenoxy)phenyl |
| 81 | H | H | CH₃ | 4-(2-phenylethyl)phenyl |
| 82 | H | H | CH₃ | 4-(4-fluorophenoxy)phenyl |
| 83 | H | H | CH₃ | 5-phenoxythiophen-2-yl |
| 84 | H | H | CH₃ | 4-benzylphenyl |
| 85 | H | H | H | 4-(4-pentynyloxy)phenyl |
| 86 | H | H | H | 4-(5-hexynyloxy)phenyl |
| 87 | H | H | H | 4-(2-chlorophenylmethoxy)phenyl |
| 88 | H | H | H | 4-(3-chlorophenylmethoxy)phenyl |
| 89 | H | H | H | 4-(2-methoxyphenylmethoxy)phenyl |
| 90 | H | H | H | 4-(3-methoxyphenylmethoxy)phenyl |
| 91 | H | H | H | 4-(4-methoxyphenylmethoxy)phenyl |
| 92 | H | H | CH₃ | 3-phenoxyphenyl |
| 93 | H | H | CH₂OMe | 2-fluorophenyl |
| 94 | H | H | CH₃ | 2-fluoro-3-methoxyphenyl |
| 95 | H | H | CH₃ | 3-methoxyphenyl |
| 96 | H | H | CH₃ | 4-(4-methylphenoxy)phenyl |
| 97 | H | H | CH₃ | 3-(3-methylphenoxy)phenyl |
| 98 | H | H | CH₃ | 3-pentylphenyl |
| 99 | H | H | CH₃ | 4-pentylphenyl |
| 100 | H | H | CH₃ | 4-phenoxymethylphenyl |

**[Table 5]**

| Present compound | R¹ | R² | R³ | E |
|---|---|---|---|---|
| 101 | H | H | Cl | 2-fluorophenyl |
| 102 | H | H | H | 4-(2-propynyloxy)phenyl |
| 103 | H | H | H | 4-(2-propenyloxy)phenyl |
| 104 | H | H | H | 3-fluaraphenyl |
| 105 | H | H | H | 3-methylphenyl |
| 106 | H | H | H | 4-methylphenyl |
| 107 | H | H | H | 4-ethylphenyl |
| 108 | H | H | H | 2-methylphenyl |
| 109 | H | H | H | 4-butylphenyl |
| 110 | H | H | H | 4-hexylphenyl |
| 111 | H | H | H | 4-heptylphenyl |
| 112 | H | H | H | 3-fluoro-4-phenoxyphenyl |
| 113 | H | H | H | 4-[(3,5-difluorophenyl)methoxy]phenyl |
| 114 | H | H | H | 4-[(2-fluoro-3-methoxyphenyl)methoxy]phenyl |
| 115 | H | H | H | 4-(3-chloro-4-fluorophenoxy)phenyl |
| 117 | H | H | H | 4-(4-chloro-3-ethylphenoxy)phenyl |
| 118 | H | H | H | 4-(2,4-dimethylphenoxy)phenyl |
| 119 | H | H | H | 4-(3,4-dimethylphenoxy)phenyl |
| 120 | H | H | H | 4-(2,4,6-trimethylphenoxy)phenyl |
| 121 | H | H | H | 4-(2,3,6-trimethylphenoxy)phenyl |
| 122 | H | H | H | 4-(3-ethylphenoxy)phenyl |
| 123 | H | H | H | 4-[3-(1-methylethyl)phenoxy]phenyl |
| 124 | H | H | H | 4-(4-propylphenoxy)phenyl |
| 125 | H | H | H | 4-(4-butylphenoxy)phenyl |

**[Table 6]**

| Present compound | R¹ | R² | R³ | E |
|---|---|---|---|---|
| 126 | H | H | H | 4-(2-chlorophenoxy)phenyl |
| 127 | H | H | H | 4-(3,5-dichlorophenoxy)phenyl |
| 128 | H | H | H | 4-(3,4-dichlorophenoxy)phenyl |
| 129 | H | H | H | 4-(2-chloro-4,5-diemethylphenoxy)phenyl |
| 130 | H | H | H | thiophen-2-yl |
| 131 | H | H | H | 4-(4-trifluoromethoxyphenoxy)phenyl |
| 132 | H | H | H | 4-(2,5-dimethylphenoxy)phenyl |
| 133 | H | H | H | 4-(4-trifluoromethylphenoxy)phenyl |
| 134 | H | H | H | 3-(4-methylphenoxy)phenyl |
| 135 | H | H | H | 4-(3-methylphenoxy)phenyl |
| 136 | H | H | H | 3-ethylphenyl |
| 137 | H | H | H | 3-propylphenyl |
| 138 | H | H | H | 3-butylphenyl |
| 139 | H | H | H | 3-hexylphenyl |
| 140 | H | H | H | 3-(2-methylpropyl)phenyl |
| 141 | H | H | H | 3-[(2-fluorophenyl)methoxy]phenyl |
| 142 | H | H | H | 3-[(3-fluorophenyl)methoxy]phenyl |
| 143 | H | H | H | 3-[(4-fluorophenyl)methoxy]phenyl |
| 144 | H | H | H | 3-[(2-methylphenyl)methoxy]phenyl |
| 145 | H | H | H | 3-[(3-methylphenyl)methoxy]phenyl |
| 146 | H | H | H | 3-[(2-methoxyphenyl)methoxy]phenyl |
| 147 | H | H | H | 3-[(3-methoxyphenyl)methoxy]phenyl |
| 148 | H | H | H | 3-[(4-methoxyphenyl)methoxy]phenyl |
| 149 | H | H | H | 4-(4-ethylphenoxy)phenyl |
| 150 | H | H | H | 4-(5,6,7,8-tetrahydronaphthalen-2-yloxy)phenyl |

**[Table 7]**

| Present compound | R¹ | R² | R³ | E |
|---|---|---|---|---|
| 151 | H | H | H | 4-(3-methylphenylthio)phenyl |
| 152 | H | H | H | 4-(3-methoxyphenylthio)phenyl |
| 153 | H | H | H | 4-(4-methoxyphenylthio)phenyl |
| 154 | H | H | H | 4-(4-methylthiophenoxy)phenyl |
| 155 | H | H | H | 4-(2-methyl-4-methylthiophenoxy)phenyl |
| 156 | H | H | H | 4-(2,3-dimethyl-4-methylthiophenoxy)phenyl |
| 157 | H | H | H | 4-(4-chloro-3,5-dimethylphenoxy)phenyl |
| 158 | H | H | H | 4-(3-ethyl-4-methylthiophenoxy)phenyl |
| 159 | H | H | H | 3-(4-methylthiophenoxy)phenyl |
| 160 | H | H | H | 4-(3-chloro-4-methylthiophenoxy)phenyl |
| 161 | H | H | H | 4-(3-chloro-4-ethylthiophenoxy)phenyl |
| 162 | H | H | H | 4-(3-methoxy-4-methylthiophenoxy)phenyl |
| 163 | H | H | H | 4-(2,6-dimethylphenoxy)phenyl |
| 164 | H | H | H | 4-(4-bromophenoxy)phenyl |
| 165 | H | H | H | 3-ethoxyphenyl |
| 166 | H | H | H | 3-propoxyphenyl |
| 167 | H | H | H | 3-butoxyphenyl |
| 168 | H | H | H | 3-pentyloxyphenyl |
| 169 | H | H | H | 3-hexyloxxyphenyl |
| 170 | H | H | H | 3-heptyloxyphenyl |
| 171 | H | H | H | 3-(4-pentynyloxy)phenyl |
| 172 | H | H | H | 4-(5-hexynyloxy)phenyl |
| 173 | H | H | H | 3-(2-butynyloxy)phenyl |
| 174 | H | H | H | 3-(2-pentynyloxy)phenyl |
| 175 | H | H | H | 4-(3-chlorophenoxy)phenyl |

**[Table 8]**

| Present compound | R¹ | R² | R³ | E |
|---|---|---|---|---|
| 176 | H | H | H | 4-(3-fluorophenoxy)phenyl |
| 177 | H | H | CH₃ | 2-fluoro-3-(4-pentynyloxy)phenyl |
| 178 | H | H | H | 4-(3-trifluoromethylphenoxy)phenyl |
| 179 | H | H | H | 4-(3-trifluoromethoxyphenoxy)phenyl |
| 180 | H | H | H | 4-(2-methylphenoxy)phenyl |
| 181 | H | H | H | 4-(2-fluorophenoxy)phenyl |
| 182 | H | H | H | 5-(2-methylphenoxy)thiophen-2-yl |
| 183 | H | H | H | 4-(2-trifluoromethylphenoxy)phenyl |
| 184 | H | H | H | 4-(4-chlorophenoxy)phenyl |
| 185 | CH₃ | H | CH₃ | 4-phenoxyphenyl |
| 186 | H | H | H | 4-(4-ethoxyphenoxy)phenyl |
| 187 | H | H | H | 4-(4-propoxyphenoxy)phenyl |
| 188 | H | H | H | 4-(3-ethoxyphenoxy)phenyl |
| 189 | H | H | H | 4-(3-butoxyphenoxy)phenyl |
| 190 | H | H | H | 4-(indan-5-yloxy)phenyl |
| 191 | H | H | H | 4-(benzo[1,3]dioxol-5-yloxy)phenyl |
| 192 | H | H | H | 4-(naphthalen-2-yloxy)phenyl |
| 193 | H | H | H | 4-(pyridin-3-yloxy)phenyl |
| 194 | H | H | H | 3-(4-methoxybutoxy)phenyl |
| 195 | H | H | H | 3-(4-ethoxybutoxy)phenyl |
| 196 | H | H | H | 3-(3-ethoxypropoxy)phenyl |
| 197 | H | H | H | 3-benzylphenyl |
| 198 | H | H | CH₃ | 4-(3-methylphenoxy)phenyl |
| 199 | H | H | H | 3-(4-pentenyloxy)phenyl |
| 200 | H | H | H | 3-(5-hexenyloxy)phenyl |

**[Table 9]**

| Present compound | R¹ | R² | R³ | E |
|---|---|---|---|---|
| 201 | H | H | H | 3-(2-methylphenoxy)phenyl |
| 202 | H | H | H | 3-(2-fluorophenoxy)phenyl |
| 203 | H | H | H | 3-(2-chlorophenoxy)phenyl |
| 204 | H | H | H | 3-(3-chlorophenoxy)phenyl |
| 205 | H | H | H | 3-(3-trifluoromethylphenoxy)phenyl |
| 206 | H | H | H | 3-(3-trifluoromethoxylphenoxy)phenyl |
| 207 | H | H | H | 3-(3-ethoxylphenoxy)phenyl |
| 208 | H | H | H | 3-(3-ethylphenoxy)phenyl |
| 209 | H | H | H | 3-(3-fluorophenoxy)phenyl |
| 210 | H | H | H | 2-fluoro-3-(4-pentynyloxy)phenyl |
| 211 | H | H | H | 3-(4-fluorophenoxy)phenyl |
| 212 | H | H | H | 3-(4-chlorophenoxy)phenyl |
| 213 | H | H | H | 3-(4-trifluoromethoxylphenoxy)phenyl |
| 214 | H | H | H | 3-(4-ethoxyphenoxy)phenyl |
| 215 | H | H | H | 3-(4-ethylphenoxy)phenyl |
| 216 | H | H | H | 3-(4-propylphenoxy)phenyl |
| 217 | H | H | H | 3-phenylthiophenyl |
| 218 | H | H | H | 4-phenylthiophenyl |
| 219 | H | H | H | 3-(indan-5-yloxy)phenyl |
| 220 | H | H | H | 3-(5,6,7,8-tetrahydronaphthalen-2-yloxy)phenyl |
| 221 | H | H | H | 3-(benzo[1,3]dioxol-5-yloxy)phenyl |
| 222 | H | H | H | 3-(naphthalen-2-yloxy)phenyl |
| 223 | H | H | H | 3-(pyridin-3-yloxy)phenyl |
| 224 | H | H | H | 2-fluoro-3-butoxyphenyl |
| 225 | H | H | H | 2-fluoro-3-pentyloxyphenyl |

**[Table 10]**

| Present compound | R¹ | R² | R³ | E |
|---|---|---|---|---|
| 226 | H | H | H | 2-fluoro-3-hexyloxyphenyl |
| 227 | H | H | H | 2-fluoro-3-heptyloxyphenyl |
| 228 | H | H | H | 2-fluoro-3-phenoxyphenyl |
| 229 | H | H | H | 2-fluorophenyl |
| 230 | H | H | H | 2-chlorophenyl |
| 231 | H | H | H | 3-trifluoromethylphenyl |
| 232 | H | H | H | 2-fluoro-3-propoxyphenyl |
| 233 | H | H | H | 2-fluoro-3-(2-propenyloxy)phenyl |
| 234 | H | H | H | 3-(2-propynyloxy)phenyl |
| 235 | H | H | H | 2-fluoro-3-(2-propynyloxy)phenyl |
| 236 | H | H | H | 5-(4-methylphenoxy)thiophen-2-yl |
| 237 | H | H | H | 2,6-difluorophenyl |
| 238 | H | H | H | 3,5-difluorophenyl |
| 239 | H | H | H | 3,4-difluorophenyl |
| 240 | H | H | H | 5-(3-methylphenyloxy)thiophen-2-yl |
| 241 | H | H | CH₃ | 5-(3-methylphenyloxy)thiophen-2-yl |
| 242 | H | H | H | 5-(4-chlorophenyloxy)thiophen-2-yl |
| 243 | H | H | H | 2-fluoro-5-phenoxyphenyl |
| 244 | H | H | CH₃ | 5-(4-methylphenyloxy)thiophen-2-yl |
| 245 | H | H | H | 5-(3-chlorophenyloxy)thiophen-2-yl |
| 246 | H | H | H | 5-(4-fluorophenyloxy)thiophen-2-yl |
| 247 | H | H | H | 3-(4-trifluoromethylphenoxy)phenyl |
| 248 | H | H | H | 4-(3,5-dimethylphenoxy)phenyl |

As the present compound, the following compounds are specifically mentioned.
N-[3-(3-methylphenyloxy)phenyl]methyl-2-aminonicotinic acid amide,
N-[3-(2-methoxyphenyloxy)phenyl]methyl-2-aminonicotinic acid amide,
N-[3-(3-methoxyphenyloxy)phenyl]methyl-2-aminonicotinic acid amide,
N-[3-(4-methoxyphenyloxy)phenyl]methyl-2-aminonicotinic acid amide,
N-[3-(4-methylphenyloxy)phenyl]methyl-2-aminonicotinic acid amide,
N-[3-(4-methylthiophenyloxy)phenyl]methyl-2-aminonicotinic acid amide,
N-[3-(2-methylphenyloxy)phenyl]methyl-2-aminonicotinic acid amide,
N-[3-(2-fluorophenyloxy)phenyl]methyl-2-aminonicotinic acid amide,
N-[3-(2-chlorophenyloxy)phenyl]methyl-2-aminonicotinic acid amide,
N-[3-(3-chlorophenyloxy)phenyl]methyl-2-aminonicotinic acid amide,
N-[3-(3-trifluoromethylphenyloxy)phenyl]methyl-2-aminonicotinic acid amide,
N-[3-(3-trifluoromethoxyphenyloxy)phenyl]methyl-2-aminonicotinic acid amide,
N-[3-(3-ethoxyphenyloxy)phenyl]methyl-2-aminonicotinic acid amide,
N-[3-(3-ethylphenyloxy)phenyl]methyl-2-aminonicotinic acid amide,
N-[3-(3-fluorophenyloxy)phenyl]methyl-2-aminonicotinic acid amide,
N-[3-(4-fluorophenyloxy)phenyl]methyl-2-aminonicotinic acid amide,
N-[3-(4-chlorophenyloxy)phenyl]methyl-2-aminonicotinic acid amide,
N-[3-(4-trifluoromethoxyphenyloxy)phenyl]methyl-2-aminonicotinic acid amide,
N-[3-(4-ethoxyphenyloxy)phenyl]methyl-2-aminonicotinic acid amide,
N-[3-(4-ethylphenyloxy)phenyl]methyl-2-aminonicotinic acid amide,
N-[3-(4-propylphenyloxy)phenyl]methyl-2-aminonicotinic acid amide,
N-[3-(4-trifluoromethylphenyloxy)phenyl]methyl-2-aminonicotinic acid amide,
N-[3-(3,5-dimethylphenyloxy)phenyl]methyl-2-aminonicotinic acid amide,
N-[3-(3-ethynylphenyloxy)phenyl]methyl-2-aminonicotinic acid amide,
N-[3-(2-ethylphenyloxy)phenyl]methyl-2-aminonicotinic acid amide,
N-[3-(2-propylphenyloxy)phenyl]methyl-2-aminonicotinic acid amide,
N-[3-(3-propylphenyloxy)phenyl]methyl-2-aminonicotinic acid amide,
N-[3-(2-isopropylphenyloxy)phenyl]methyl-2-aminonicotinic acid amide,
N-[3-(3-isopropylphenyloxy)phenyl]methyl-2-aminonicotinic acid amide,
N-[3-(4-isopropylphenyloxy)phenyl]methyl-2-aminonicotinic acid amide,
N-[3-(2-ethoxyphenyloxy)phenyl]methyl-2-aminonicotinic acid amide,
N-[3-(2-ethynylphenyloxy)phenyl]methyl-2-aminonicotinic acid amide,
N-[3-(4-ethynylphenyloxy)phenyl]methyl-2-aminonicotintc acid amide,
N-[3-(2-methylthiophenyloxy)phenyl]methyl-2-aminonicotinic acid amide,
N-[3-(3-methylthiophenyloxy)phenyl]methyl-2-aminonicotinic acid amide,
N-[3-(2-trifluoromethylphenyloxy)phenyl]methyl-2-aminonicotinic acid amide,
N-[3-(2-trifluoromethoxyphenyloxy)phenyl]methyl-2-aminonicotinic acid amide,
N-[3-(2-bromophenyloxy)phenyl]methyl-2-aminonicotinic acid amide,
N-[3-(3-bromophenyloxy)phenyl]methyl-2-aminonicotinic acid amide,
N-[3-(4-bromophenyloxy)phenyl]methyl-2-aminonicotinic acid amide,
N-[3-(2-iodophenyloxy)phenyl]methyl-2-aminonicotinic acid amide,
N-[3-(3-iodophenyloxy)phenyl]methyl-2-aminonicotinic acid amide,
N-[3-(4-iodophenyloxy)phenyl]methyl-2-aminonicotinic acid amide,
N-[3-(2-isopropoxyphenyloxy)phenyl]methyl-2-aminonicotinic acid amide,
N-[3-(3-isopropoxyphenyloxy)phenyl]methyl-2-aminonicotinic acid amide,
N-[3-(4-isopropoxyphenyloxy)phenyl]methyl-2-aminonicotinic acid amide,
N-[3-(2-propoxyphenyloxy)phenyl]methyl-2-aminonicotinic acid amide,
N-[3-(3-propoxyphenyloxy)phenyl]methyl-2-aminonicotinic acid amide,
N-[3-(4-propoxyphenyloxy)phenyl]methyl-2-aminonicotinic acid amide,
N-[3-(2-fluoro-4-trifluoromethylphenyloxy)phenyl]methyl-2-aminonicotinic acid amide,
N-[3-(3-fluoro-4-trifluoromethylphenyloxy)phenyl]methyl-2-aminonicotinic acid amide,
N-[3-(2-fluoro-4-trifluoromethoxyphenyloxy)phenyl]methyl-2-aminonicotinic acid amide,
N-[3-(3-fluoro-4-trifluoromethoxyphenyloxy)phenyl]methyl-2-aminonicotinic acid amide,
N-[3-(2-fluoro-3-trifluoromethylphenyloxy)phenyl]methyl-2-aminonicotinic acid amide,
N-[3-(4-fluoro-3-trifluoromethylphenyloxy)phenyl]methyl-2-aminonicotinic acid amide,
N-[3-(2-fluoro-5-trifluoromethylphenyloxy)phenyl]methyl-2-aminonicotinic acid amide,
N-[3-(3-fluoro-5-trifluoromethylphenyloxy)phenyl]methyl-2-aminonicotinic acid amide,
N-[3-(2-fluoro-3-trifluoromethoxyphenyloxy)phenyl]methyl-2-aminonicotinic acid amide,
N-[3-(4-fluoro-3-trifluoromethoxyphenyloxy)phenyl]methyl-2-aminonicotinic acid amide,
N-[3-(2-butoxyphenyloxy)phenyl]methyl-2-aminonicotinic acid amide,
N-[3-(3-butoxyphenyloxy)phenyl]methyl-2-aminonicotinic acid amide,
N-[3-(4-butoxyphenyloxy)phenyl]methyl-2-aminonicotinic acid amide,
N-[3-(2-isobutoxyphenyloxy)phenyl]methyl-2-aminonicotinic acid amide,
N-[3-(3-isobutoxyphenyloxy)phenyl]methyl-2-aminonicotinic acid amide,
N-[3-(4-isobutoxyphenyloxy)phenyl]methyl-2-aminonicotinic acid amide,
N-[3-(2-sec-butoxyphenyloxy)phenyl]methyl-2-aminonicotinic acid amide, N-[3-(3-sec-butoxyphenyloxy)phenyl]methyl-2-aminonicotinic acid amide,
N-[3-(4-sec-butoxyphenyloxy)phenyl]methyl-2-aminonicotinic acid amide,
N-[3-(2-tert-butoxyphenyloxy)phenyl]methyl-2-aminonicotinic acid amide,
N-[3-(3-tert-butoxyphenyloxy)phenyl]methyl-2-aminonicotimc acid amide,
N-[3-(4-tert-butoxyphenyloxy)phenyl]methyl-2-aminonicotinic acid amide,
N-[3-(2-fluoro-5-trifluoromethoxyphenyloxy)phenyl]methyl-2-aminonicotinic acid amide,
N-[3-(3-fluoro-5-trifluoromethoxyphenyloxy)phenyl]methyl-2-aminonicotinic acid amide.

N-(3-phenyloxyphenyl)methyl-2-amino-6-methoxymethylnicotinic acid amide,
N-[3-(2-fluorophenyloxy)phenyl]methyl-2-amino-6-methoxymethylnicotinic acid amide,
N-[3-(3-fluorophenyloxy)phenyl]methyl-2-amino-6-methoxymethylnicotinic acid amide,
N-[3-(4-fluorophenyloxy)phenyl]methyl-2-amino-6-methoxymethylnicotinic acid amide,
N-[3-(2-chlorophenyloxy)phenyl]methyl-2-amino-6-methoxymethylnicotinic acid amide,
N-[3-(3-chlorophenyloxy)phenyl]methyl-2-amino-6-methoxymethylnicotinic acid amide,
N-[3-(4-chlorophenyloxy)phenyl]methyl-2-amino-6-methoxymethylnicotinic acid amide,
N-[3-(2-iodophenyloxy)phenyl]methyl-2-amino-6-methoxymethylnicotinic acid amide,
N-[3-(3-iodophenyloxy)phenyl]methyl-2-amino-6-methoxymethylnicotinic acid amide,
N-[3-(4-iodophenyloxy)phenyl]methyl-2-amino-6-methoxymethylnicotinic acid amide,
N-[3-(2-bromophenyloxy)phenyl]methyl-2-amino-6-methoxymethylnicotinic acid amide,
N-[3-(3-bromophenyloxy)phenyl]methyl-2-amino-6-methoxymethylnicotinic acid amide,
N-[3-(4-bromophenyloxy)phenyl]methyl-2-amino-6-methoxymethylnicotinic acid amide,
N-[3-(2-methylphenyloxy)phenyl]methyl-2-amino-6-methoxymethylnicotinic acid amide,
N-[3-(3-methylphenyloxy)phenyl]methyl-2-amino-6-methoxymethylnicotinic acid amide,
N-[3-(4-methylphenyloxy)phenyl]methyl-2-amino-6-methoxymethylnicotinic acid amide,
N-[3-(2-methoxyphenyloxy)phenyl]methyl-2-amino-6-methoxymethylnicotinic acid amide,
N-[3-(3-methoxyphenyloxy)phenyl]methyl-2-amino-6-methoxymethylnicotinic acid amide,
N-[3-(4-methoxyphenyloxy)phenyl]methyl-2-amino-6-methoxymethylnicotinic acid amide,
N-[3-(2-trifluoromethylphenyloxy)phenyl]methyl-2-amino-6-methoxymethylnicotinic acid amide,
N-[3-(3-trifluoromethylphenyloxy)phenyl]methyl-2-amino-6-methoxymethylnicotinic acid amide,
N-[3-(4-trifluoromethylphenyloxy)phenyl]methyl-2-amino-6-methoxymethylnicotinic acid amide,
N-[3-(2-trifluoromethoxyphenyloxy)phenyl]methyl-2-amino-6-methoxymethylnicotinic acid amide,
N-[3-(3-trifluoromethoxyphenyloxy)phenyl]methyl-2-amino-6-methoxymethylnicotinic acid amide,
N-[3-(4-trifluoromethoxyphenyloxy)phenyl]methyl-2-amino-6-methoxymethylnicotinic acid amide.

N-(3-phenyloxyphenyl)methyl-2-amino-6-fluoronicotinic acid amide,
N-[3-(2-fluorophenyloxy)phenyl]methyl-2-amino-6-fluoronicotinic acid amide,
N-[3-(3-fluorophenyloxy)phenyl]methyl-2-amino-6-fluoronicotinic acid amide,
N-[3-(4-fluorophenyloxy)phenyl]methyl-2-amino-6-fluoronicotinic acid amide,
N-[3-(2-chlorophenyloxy)phenyl]methyl-2-amino-6-fluoronicotinic acid amide,
N-[3-(3-chlorophenyloxy)phenyl]methyl-2-amino-6-fluoronicotinic acid amide,
N-[3-(4-chlorophenyloxy)phenyl]methyl-2-amino-6-fluoronicotinic acid amide,
N-[3-(2-bromophenyloxy)phenyl]methyl-2-amino-6-fluoronicotinic acid amide,
N-[3-(3-bromophenyloxy)phenyl]methyl-2-amino-6-fluoronicotinic acid amide,
N-[3-(4-bromophenyloxy)phenyl]methyl-2-amino-6-fluoronicotinic acid amide,
N-[3-(2-iodophenyloxy)phenyl]methyl-2-amino-6-fluoronicotinic acid amide,
N-[3-(3-iodophenyloxy)phenyl]methyl-2-amino-6-fluoronicotinic acid amide,
N-[3-(4-iodophenyloxy)phenyl]methyl-2-amino-6-fluoronicotinic acid amide,
N-[3-(2-methylphenyloxy)phenyl]methyl-2-amino-6-fluoronicotinic acid amide,
N-[3-(3-methylphenyloxy)phenyl]methyl-2-amino-6-fluoronicotinic acid amide,
N-[3-(4-methylphenyloxy)phenyl]methyl-2-amino-6-fluoronicotinic acid amide,
N-[3-(2-methoxyphenyloxy)phenyl]methyl-2-amino-6-fluoronicotinic acid amide,
N-[3-(3-methoxyphenyloxy)phenyl]methyl-2-amino-6-fluoronicotinic acid amide,
N-[3-(4-methoxyphenyloxy)phenyl]methyl-2-amino-6-fluoronicotinic acid amide,
N-[3-(2-trifluoromethylphenyloxy)phenyl]methyl-2-amino-6-fluoronicotinic acid amide,
N-[3-(3-trifluoromethylphenyloxy)phenyl]methyl-2-amino-6-fluoronicotinic acid amide,
N-[3-(4-trifluoromethylphenyloxy)phenyl]methyl-2-amino-6-fluoronicotinic acid amide,
N-[3-(2-trifluoromethoxyphenyloxy)phenyl]methyl-2-amino-6-fluoronicotinic acid amide,
N-[3-(3-trifluorothoxyphenyloxy)phenyl]methyl-2-amino-6-fluoronicotinic acid amide,
N-[3-(4-trifluoromethoxyphenyloxy)phenyl]methyl-2-amino-6-fluoronicotinic acid amide,

N-[3-(4-methoxyphenyloxy)phenyl]methyl-2-amino-6-methylnicotinic acid amide,
N-(3-phenoxyphenyl)methyl-2-amino-6-methylnicotinic acid amide,
N-[3-(3-methylphenyloxy)phenyl]methyl-2-amino-6-methylnicotinic acid amide,
N-[3-(2-fluorophenyloxy)phenyl]methyl-2-amino-6-methylnicotinic acid amide,
N-[3-(3-fluorophenyloxy)phenyl]methyl-2-amino-6-methylnicotinic acid amide,
N-[3-(4-fluorophenyloxy)phenyl]methyl-2-amino-6-methylnicotinic acid amide,
N-[3-(2-chlorophenyloxy)phenyl]methyl-2-amino-6-methylnicotinic acid amide,
N-[3-(4-chlorophenyloxy)phenyl]methyl-2-amino-6-methylnicotinic acid amide,
N-[3-(2-methylphenyloxy)phonyl]methyl-2-amino-6-methylnicotinic acid amide,
N-[3-(4-methylphenyloxy)phenyl]methyl-2-amino-6-methylnicotinic acid amide,
N-[3-(2-trifluoromethylphenyloxy)phenyl]methyl-2-amino-6-methylnicotinic acid amide,
N-[3-(3-trifluoromethylphenyloxy)phenyl]methyl-2-amino-6-methylnicotinic acid amide
N-[3-(4-trifluoromethylphenyloxy)phenyl]methyl-2-amino-6-methylnicotinic acid amide,
N-[3-(2-methoxyphenyloxy)phenyl]methyl-2-amino-6-methylnicotinic acid amide,
N-[3-(3-methoxyphenyloxy)phenyl]methyl-2-amino-6-methylnicotinic acid amide,
N-[3-(3-trifluoromethoxyphenyloxy)phenyl]methyl-2-amino-6-methylnicotinic acid amide,
N-[3-(4-trifluoromethoxyphenyloxy)phenyl]methyl-2-amino-6-methylnicotinic acid amide,
N-[3-(3-chlorophenyloxy)phenyl]methyl-2-amino-6-methylnicotinic acid amide,
N-[3-(3-bromophenyloxy)phenyl]methyl-2-amino-6-methylnicotinic acid amide,
N-[3-(4-bromophenyloxy)phenyl]methyl-2-amino-6-methylnicotinic acid amide,
N-[3-(2-iodophenyloxy)phenyl]methyl-2-amino-6-methylnicotinic acid amide,
N-[3-(3-iodophenyloxy)phenyl]methyl-2-amino-6-methylnicotinic acid amide,
N-[3-(4-iodophenyloxy)phenyl]methyl-2-amino-6-methylnicotinic acid amide,
N-[3-(2-bromophenyloxy)phenyl]methyl-2-amino-6-methylnicotinic acid amide,
N-[3-(2-methoxyphenyloxy)phenyl]methyl-2-amino-6-methylnicotinic acid amide,
N-(3-phenoxyphenyl)methyl-2-amino-6-methylnicotinic acid amide.

N-(4-phenyloxyphenyl)methyl-2-aminonicotinic acid amide,
N-(4-phenyloxyphenyl)methyl-2-amino-6-fluoronicotinic acid amide,
N-(4-phenyloxyphenyl)methyl-2-amino-6-methylnicotinic acid amide,
N-(4-phenyloxyphenyl)methyl-2-amino-6-methoxyniethylnicotinic acid amide,
N-[4-(2-fluorophenyloxy)phenyl]methyl-2-aminonicotinic acid amide,
N-[4-(3-fluorophenyloxy)phenyl]methyl-2-aminonicotinic acid amide,
N-[4-(4-fluorophenyloxy)phenyl]methyl-2-aminonicotinic acid amide,
N-[4-(2-chlorophenyloxy)phenyl]methyl-2-aminonicotinic acid amide,
N-[4-(3-chlorophenyloxy)phenyl]methyl-2-aminonicotinic acid amide,
N-[4-(4-chlorophenyloxy)phenyl]methyl-2-aminonicotinic acid amide,
N-[4-(2-bromophenyloxy)phenyl]methyl-2-aminonicotinic acid amide,
N-[4-(3-bromophenyloxy)phenyl]methyl-2-aminonicotinic acid amide,
N-[4-(4-bromophenyloxy)phenyl]methyl-2-aminonicotinic acid amide,
N-[4-(2-iodophenyloxy)phenyl]methyl-2-aminonicotinic acid amide,
N-[4-(3-iodophenyloxy)phenyl]methyl-2-aminonicotinic acid amide,
N-[4-(4-iodophenyloxy)phenyl]methyl-2-aminonicotinic acid amide,
N-[4-(2-methylphenyloxy)phenyl]methyl-2-aminonicotinic acid amide,
N-[4-(3-methylphenyloxy)phenyl]methyl-2-aminonicotinic acid amide,
N-[4-(4-methylphenyloxy)phenyl]methyl-2-aminonicotinic acid amide,
N-[4-(2-ethylphenyloxy)phenyl]methyl-2-aminonicotinic acid amide,
N-[4-(3-ethylphenyloxy)phenyl]methyl-2-aminonicotinic acid amide,
N-[4-(4-ethylphenyloxy)phenyl]methyl-2-aminonicotinic acid amide,
N-[4-(2-propylphenyloxy)phenyl]methyl-2-aminonicotinic acid amide,
N-[4-(3-propylphenyloxy)phenyl]methyl-2-aminonicotinic acid amide,
N-[4-(4-propylphenyloxy)phenyl]methyl-2-aminonicotinic acid amide,
N-{4-[2-(2-methylethyl)phenyloxy]phenyl}methyl-2-aminonicotinic acid amide,
N-{4-[3-(2-methylethyl)phenyloxy]phenyl}methyl-2-aminonicotinic acid amide,
N-{4-[4-(2-methylethyl)phenyloxy]phenyl}methyl-2-aminonicotinic acid amide,
N-[4-(2-butylphenyloxy)phenyl]methyl-2-aminonicotinic acid amide,
N-[4-(3-butylphenyloxy)phenyl]methyl-2-aminonicotinic acid amide,
N-[4-(4-butylphenyloxy)phenyl]methyl-2-aminonicotinic acid amide,
N-{4-[2-(2-methylpropyl)phenyloxy]phenyl}methyl-2-aminonicotinic acid amide,
N-{4-[3-(2-methylpropyl)phenyloxy]phenyl}methyl-2-aminonicotinic acid amide,
N-{4-[4-(2-methylpropyl)phenyloxy]phenyl}methyl-2-aminonicotinic acid amide,
N-{4-[2-(3-methylpropyl)phenyloxy]phenyl}methyl-2-aminonicotinic acid amide,
N-{4-[3-(3-methylpropyl)phenyloxy]phenyl}methyl-2-aminonicotinic acid amide,
N-{4-[4-(3-methylpropyl)phenyloxy]phenyl}methyl-2-aminonicotinic acid amide,
N-{4-[2-(2,2-dimethylpropyl)phenyloxy]phenyl}methyl-2-aminonicotinic acid amide,
N-{4-[3-(2,2-dimethylpropyl)phenyloxy]phenyl}methyl-2-aminonicotinic acid amide,
N-{4-[4-(2,2-dimethylpropyl)phenyloxy]phenyl}methyl-2-aminonicotinic acid amide,
N-[4-(2-pentylphenyloxy)phenyl]methyl-2-aminonicotinic acid amide,
N-[4-(3-pentylphenyloxy)phenyl]methyl-2-aminonicotinic acid amide,
N-[4-(4-pentylphenyloxy)phenyl]methyl-2-aminonicotinic acid amide,
N-{4-[2-(1-methylbutyl)phenyloxy]phenyl}methyl-2-aminonicotinic acid amide,
N-{4-[3-(1-methylbutyl)phenyloxy]phenyl}methyl-2-aminonicotinic acid amide,
N-{4-[4-(1-methylbutyl)phenyloxy]phenyl}methyl-2-aminonicotinic acid amide,
N-{4-[2-(2-methylbutyl)phenyloxy]phenyl}methyl-2-aminonicotinic acid amide,
N-{4-[3-(2-methylbutyl)phenyloxy]phenyl}methyl-2-aminonicotinic acid amide,
N-{4-[4-(2-methylbutyl)phenyloxy]phenyl}methyl-2-aminonicotinic acid amide,
N-{4-[2-(3-methylbutyl)phenyloxy]phenyl}methyl-2-aminonicotinic acid amide,
N-{4-[3-(3-methylbutyl)phenyloxy]phenyl}methyl-2-aminonicotinic acid amide,
N-{4-[4-(3-methylbutyl)phenyloxy]phenyl}methyl-2-aminonicotinic acid amide,
N-{4-[2-(1-ethylpropyl)phenyloxy]phenyl}methyl-2-aminonicotinic acid amide,
N-{4-[3-(1-ethylpropyl)phenyloxy]phenyl}methyl-2-aminonicotinic acid amide,
N-{4-[4-(1-ethylpropyl)phenyloxy]phenyl}methyl-2-aminonicotinic acid amide,
N-{4-[2-(1,2-dimethylpropyl)phenyloxy]phenyl}methyl-2-aminonicotinic acid amide,
N-{4-[3-(1,2-dimethylpropyl)phenyloxy]phenyl}methyl-2-aminonicotimc acid amide,
N-{4-[4-(1,2-dimethylpropyl)phenyloxy]phenyl}methyl-2-aminonicotinic acid amide,
N-[4-(2-methoxyphenyloxy)phenyl]methyl-2-aminonicotinic acid amide,
N-[4-(3-methoxyphenyloxy)phenyl]methyl-2-aminonicotinic acid amide,
N-[4-(4-methoxyphenyloxy)phenyl]methyl-2-aminonicotinic acid amide,
N-[4-(2-ethoxyphenyloxy)phenyl]methyl-2-aminonicotinic acid amide,
N-[4-(3-ethoxyphenyloxy)phenyl]methyl-2-aminonicotinic acid amide,
N-[4-(4-ethoxyphenyloxy)phenyl]methyl-2-aminonicotinic acid amide,
N-[4-(2-propoxyphenyloxy)phenyl]methyl-2-aminonicotinic acid amide,
N-[4-(3-propoxyphenyloxy)phenyl]methyl-2-aminonicotinic acid amide,
N-[4-(4-propoxyphenyloxy)phenyl]methyl-2-aminonicotinic acid amide,
N-[4-(2-butoxyphenyloxy)phenyl]methyl-2-aminonicotinic acid amide,
N-[4-(3-butoxyphenyloxy)phenyl]methyl-2-aminonicotinic acid amide,
N-[4-(4-butoxyphenyloxy)phenyl]methyl-2-aminonicotinic acid amide,
N-[4-(2-methylthiophenyloxy)phenyl]methyl-2-aminonicotinic acid amide,
N-[4-(3-methylthiophenyloxy)phenyl]methyl-2-aminonicotinic acid amide,
N-[4-(4-methylthiophenyloxy)phenyl]methyl-2-aminonicotinic acid amide,
N-[4-(2-ethylthiophenyloxy)phenyl]methyl-2-aminonicotinic acid amide,
N-[4-(3-ethylthiophenyloxy)phenyl]methyl-2-aminonicotinic acid amide,
N-[4-(4-ethylthiophenyloxy)phenyl]methyl-2-aminonicotinic acid amide,
N'-[4-(2-trifluoromethylphenyloxy)phenyl]methyl-2-aminonicotinic acid amide,
N-[4-(3-trifluoromethytphenyloxy)phenyl]methyl-2-aminonicotinic acid amide,
N-[4-(4-trifluoromethylphenyloxy)phenyl]methyl-2-aminonicotinic acid amide,
N-[4-(2-trifluoromethoxyphenyloxyl)phenyl]methyl-2-aminonicotinic acid amide,
N-[4-(3-trifluoromethoxyphenyloxy)phenyl]methyl-2-aminonicotinic acid amide,
N-[4-(4-trifluoromethoxyphenyloxy)phenyl]methyl-2-aminonicotinic acid amide,
N-[4-(2-cyanophenyloxy)phenyl]methyl-2-aminonicotinic acid amide,
N-[4-(3-cyanophenyloxy)phenyl]methyl-2-aminonicotinic acid amide,
N-[4-(4-cyanophenyloxy)phenyl]methyl-2-aminonicotinic acid amide,
N-[4-(2-fluorophenyloxy)phenyl]methyl-2-amino-6-fluoronicotinic acid amide,
N-[4-(3-fluorophenyloxyl)phenyl]methyl-2-amino-6-fluoronicotinic acid amide,
N-[4-(4-fluorophenyloxy)phenyl]methyl-2-amino-6-fluoronicotinic acid amide,
N-[4-(2-chlorophenyloxy)phenyl]methyl-2-amino-6-fluoronicotinic acid amide,
N-[4-(3-chlorophenyloxy)phenyl]methyl-2-amino-6-fluoronicotinic acid amide,
N-[4-(4-chlorophenyloxy)phenyl]methyl-2-amino-6-fluoronicotinic acid amide,
N-[4-(2-bromophenyloxy)phenyl]methyl-2-amino-6-fluoronicotinic acid amide,
N-[4-(3-bromophenyloxy)phenyl]methyl-2-amino-6-fluoronicotinic acid amide,
N-[4-(4-bromophenyloxy)phenyl]methyl-2-amino-6-fluoronicotinic acid amide,
N-[4-(2-iodophenyloxy)phenyl]methyl-2-amino-6-fluoronicotinic acid amide,
N-[4-(3-iodophenyloxy)phenyl]methyl-2-amino-6-fluoronicotinic acid amide,
N-[4-(4-iodophenyloxy)phenyl]methyl-2-amino-6-fluoronicotinic acid amide,
N-[4-(2-methylphenyloxy)phenyl]methyl-2-amino-6-fluoronicotinic acid amide,
N-[4-(3-methylphenyloxy)phenyl]methyl-2-amino-6-fluoronicotinic acid amide,
N-[4-(4-methylphenyloxy)phenyl]methyl-2-amino-6-fuoronicotinic acid amide,
N-[4-(2-ethylphenyloxy)phenyl]methyl-2-amino-6-fluoronicotinic acid amide,
N-[4-(3-ethylphenyloxy)phenyl]methyl-2-amino-6-fluoronicotinic acid amide,
N-[4-(4-ethylphenyloxy)phenyl]methyl-2-amino-6-fluoronicotinic acid amide,
N-[4-(2-propylphenyloxy)phenyl]methyl-2-amino-6-fluoronicotinic acid amide,
N-[4-(3-propylphenyloxy)phenyl]methyl-2-amino-6-fluoronicotinic acid amide,
N-[4-(4-propylphenyloxy)phenyl]methyl-2-amino-6-fluoronicotinic acid amide,
N-{4-[2-(2-methylethyl)phenyloxy]phenyl}methyl-2-amino-6-fluoronicotinic acid amide,
N-{4-[3-(2-methylethyl)phenyloxy]phenyl}methyl-2-amino-6-fluoronicotinic acid amide,
N-{4-[4-(2-methylethyl)phenyloxy]phenyl}methyl-2-amino-6-fluoronicotinic acid amide,
N-[4-(2-butylphenyloxy)phenyl]methyl-2-amino-6-fluoronicotinic acid amide,
N-[4-(3-butylphenyloxy)phenyl]methyl-2-amino-6-fluoronicotinic acid amide,
N-[4-(4-butylphenyloxy)phenyl]methyl-2-amino-6-fluoronicotinic acid amide,
N-{4-[2-(2-methylpropyl)phenyloxy]phenyl}methyl-2-amino-6-fluoronicotinic acid amide,
N-{4-[3-(2-methylpropyl)phenyloxy]phenyl}methyl-2-amino-6-fluoronicotinic acid amide,
N-{4-[4-(2-methylpropyl)phenyloxy]phenyl}methyl-2-amino-6-fluoronicotinic acid amide,
N-{4-[2-(3-methylpropyl)phenyloxy]phenyl}methyl-2-amino-6-fluoronicotinic acid amide,
N-{4-[3-(3-methylpropyl)phenyloxy]phenyl}methyl-2-amino-6-fluoronicotinic acid amide,
N-{4-[4-(3-methylpropyl)phenyloxy]phenyl}methyl-2-amino-6-fluoronicotinic acid amide,
N-{4-[2-(2,2-dimethylpropyl)phenyloxy]phenyl}methyl-2-amino-6-fluoronicotinic acid amide,
N-{4-[3-(2,2-dimethylpropyl)phenyloxy]phenyl}methyl-2-amino-6-fluoronicotinic acid amide,
N-{4-[4-(2,2-dimethylpropyl)phenyloxy]phenyl}methyl-2-amino-6-fluoronicotinic acid amide,
N-[4-(2-pentylphenyloxy)phenyl]methyl-2-amino-6-fluoronicotinic acid amide,
N-[4-(3-pentylphenyloxy)phenyl]methyl-2-amino-6-fluoronicotinic acid amide,
N-[4-(4-pentylphenyloxy)phenyl]methyl-2-amino-6-fluoronicotinic acid amide,
N-{4-[2-(1-methylbutyl)phenyloxy]phenyl}methyl-2-amino-6-fluoronicotinic acid amide,
N-{4-[3-(1-methylbutyl)phenyloxy]phenyl}methyl-2-amino-6-fluoronicotinic acid amide,
N-{4-[4-(1-methylbutyl)phenyloxy]phenyl}methyl-2-amino-6-fluoronicotinic acid amide,
N-{4-[2-(2-methylbutyl)phenyloxy]phenyl}methyl-2-amino-6-fluoronicotinic acid amide,
N-{4-[3-(2-methylbutyl)phenyloxy]phenyl}methyl-2-amino-6-fluoronicotinic acid amide,
N-{4-[4-(2-methylbutyl)phenyloxy]phenyl}methyl-2-amino-6-fluoronicotinic acid amide,
N-{4-[2-(3-methylbutyl)phenyloxy]phenyl}methyl-2-amino-6-fluoronicotinic acid amide,
N-{4-[3-(3-methylbutyl)phenyloxy]phenyl}methyl-2-amino-6-fluoronicotinic acid amide,
N-{4-[4-(3-methylbutyl)phenyloxy]phenyl}methyl-2-amino-6-fluoronicotinic acid amide,
N-{4-[2-(1-ethylpropyl)phenyloxy]phenyl}methyl-2-amino-6-fluoronicotinic acid amide,
N-{4-[3-(1-ethylpropyl)phenyloxy]phenyl}methyl-2-amino-2-fluoronicotinic acid amide,
N-4-[4-(1-ethylpropyl)phenyloxy]phenyl}methyl-2-amino-6-fluoronicotinic acid amide,
N-{4-[2-(1,2-dimethylpropyl)phenyloxy]phenyl}methyl-2-amino-6-fluoronicotinic acid amide,
N-{4-[3-(1,2-dimethylpropyl)phenyloxy]phenyl}methyl-2-amino-6-fluoromcotinic acid amide,
N-{4-[4-(1,2-dimethylpropyl)phenyloxy]phenyl}methyl-2-amino-6-fluoronicotinic acid amide,
N-[4-(2-methoxyphenyloxy)phenyl]methyl-2-amino-6-fluoronicotinic acid amide,
N-[4-(3-methoxyphenyloxy)phenyl]methyl-2-amino-6-fluoronicotinic acid amide,
N-[4-(4-methoxyphenyloxy)phenyl]methyl-2-amino-6-fluoronicotinic acid amide,
N-[4-(2-ethoxyphenyloxy)phenyl]methyl-2-amino-6-fluoronicotinic acid amide,
N-[4-(3-ethoxyphenyloxy)phenyl]methyl-2-amino-6-fluoronicotinic acid amide,
N-[4-(4-ethoxyphenyloxy)phenyl]methyl-2-amino-6-fluoronicotinic acid amide,
N-[4-(2-propoxyphenyloxy)phenyl]methyl-2-amino-6-fluoronicotinic acid amide,
N-[4-(3-propoxyphenyloxy)phenyl]methyl-2-amino-6-fluoronicotinic acid amide,
N-[4-(4-propoxyphenyloxy)phenyl]methyl-2-amino-6-fluoronicotinic acid amide,
N-[4-(2-butoxyphenyloxy)phenyl]methyl-2-amino-6-fluoronicotinic acid amide,
N-[4-(3-butoxyphenyloxy)phenyl]methyl-2-amino-6-fluoronicotinic acid amide,
N-[4-(4-butoxyphenyloxy)phenyl]methyl-2-amino-6-fluoronicotinic acid amide,
N-[4-(2-methylthiophenyloxy)phenyl]methyl-2-amino-6-fluoronicotinic acid amide,
N-[4-(3-methylthiophenyloxy)phenyl]methyl-2-amino-6-fluoronicotinic acid amide,
N-[4-(4-methylthiophenyloxy)phenyl]methyl-2-amino-6-fluoronicotinic acid amide,
N-[4-(2-ethylthiophenyloxy)phenyl]methyl-2-amino-6-fluoronicotinic acid amide,
N-[4-(3-ethylthiophenyloxy)phenyl]methyl-2-amino-6-fluoronicotinic acid amide,
N-[4-(4-ethylthiophenyloxy)phenyl]methyl-2-amino-6-fluoronicotinic acid amide,
N-[4-(2-trifluoromethylphenyloxy)phenyl]methyl-2-amino-6-fluoronicotinic acid amide,
N-[4-(3-trifluoromethylphenyloxy)phenyl]methyl-2-amino-6-fluoronicotinic acid amide,
N-[4-(4-trifluoronlethylphenyloxy)phenyl]methyl-2-amino-6-fluoronicotinic acid amide,
N-[4-(2-trifluoromethoxyphenyloxy)phenyl]methyl-2-amino-6-fluoronicotinic acid amide,
N-[4-(3-trifluoromethoxyphenyloxy)phenyl]methyl-2-amino-6-fluoronicotinic acid amide,
N-[4-(4-trifluoromethoxyphenyloxy)phenyl]methyl-2-amino-6-fluoronicotinic acid amide,
N-[4-(2-cyanophenyloxy)phenyl]methyl-2-amino-6-fluoronicotinic acid amide,
N-[4-(3-cyanophenyloxy)phenyl]methyl-2-amino-6-fluoronicotinic acid amide,
N-[4-(4-cyanophenyloxy)phenyl]methyl-2-amino-6-fluoronicotinic acid amide,
N-[4-(2-fluorophenyloxy)phenyl]methyl-2-amino-6-methylnicotinic acid amide,
N-[4-(3-fluorophenyloxy)phenyl]methyl-2-amino-6-methylnicotinic acid amide,
N-[4-(4-fluorophenyloxy)phenyl]methyl-2-amino--6-methylicotinic acid amide,
N-[4-(2-chlorophenyloxy)phenyl]methyl-2-amino-6-methylnicotinic acid amide,
N-[4-(3-chlorophenyloxy)phenyl]methyl-2-amino-6-methylnicotinic acid amide,
N-[4-(4-chlorophenyloxy)phenyl]methyl-2-amino-6-methylnicotinic acid amide,
N-[4-(2-bromophenyloxy)phenyl]methyl-2-amino-6-methylnicotinic acid amide,
N-[4-(3-bromophenyloxy)phenyl]methyl-2-amino-6-methylnicotinic acid amide,
N-[4-(4-bromophenyloxy)phenyl]methyl-2-amino-6-methylnicotinic acid amide,
N-[4-(2-iodophenyloxy)phenyl]methyl-2-amino-6-methylnicotinic acid amide,
N-[4-(3-iodophenyloxy)phenyl]methyl-2-amino-6-methylnicotinic acid amide,
N-[4-(4-iodophenyloxy)phenyl]methyl-2-amino-6-methylnicotinic acid amide,
N-[4-(2-methylphenyloxy)phenyl]methyl-2-amino-6-methylnicotinic acid amide,
N-[4-(3-methylphenyloxy)phenyl]methyl-2-amino-6-methylnicotinic acid amide,
N-[4-(4-methylphenyloxy)phenyl]methyl-2-amino-6-methylnicotinic acid amide,
N-[4-(2-ethylphenyloxy)phenyl]methyl-2-amino-6-methylnicotinic acid amide,
N-[4-(3-ethylphenyloxy)phenyl]methyl-2-amino-6-methylnicotinic acid amide,
N-[4-(4-ethylphenyloxy)phenyl]methyl-2-amino-6-methylnicotinic acid amide,
N-[4-(2-propylphenyloxy)phenyl]methyl-2-amino-6-methylnicotinic acid amide,
N-[4-(3-propylphenyloxy)phenyl]methyl-2-amino-6-methylnicotinic acid amide,
N-[4-(4-propylphenyloxy)phenyl]methyl-2-amino-6-methylnicotinic acid amide,
N-{4-[2-(2-methylethyl)phenyloxy]phenyl}methyl-2-amino-6-methylnicotinic acid amide,
N-{4-[3-(2-methylethyl)phenyloxy]phenyl}methyl-2-amino-6-methylnicotinic acid amide,
N-{4-[4-(2-methylethyl)phenyloxy]phenyl}methyl-2-amino-6-methylnicotinic acid amide,
N-[4-(2-butylphenyloxy)phenyl]methyl-2-amino-6-methylnicotinic acid amide,
N-[4-(3-butylphenyloxy)phenyl]methyl-2-amino-6-methylnicotinic acid amide,
N-[4-(4-butylphenyloxy)phenyl]methyl-2-amino-6-methylnicotinic acid amide,
N-{4-[2-(2-methylpropyl)phenyloxy]phenyl}methyl-2-amino-6-methylnicotinic acid amide,
N-{4-[3-(2-methylpropyl)phenyloxyl]phenyl}methyl-2-amino-6-methylnicotinic acid amide,
N-{4-[4-(2-methylpropyl)phenyloxy]phenyl}methyl-2-amino-6-methylnicotinic acid amide,
N-{4-[2-(3-methylpropyl)phenyloxy]phenyl}methyl-2-amino-6-methylnicotinic acid amide,
N-{4-[3-(3-methylpropyl)phenyloxy]phenyl]methyl-2-amino-6-methylnlcotinic acid amide,
N-{4-[4-(3-methylpropyl)phenyloxy]phenyl}methyl-2-amino-6-methylnicotinic acid amide,
N-{4-[2-(2,2-dimethylpropyl)phenyloxy]phenyl}methyl-2-amino-6-methylnicotinic acid amide,
N-{4-[3-(2,2-dimethylpropyl)phenyloxy]phenyl}methyl-2-amino-6-methylnicotinic acid amide,
N-{4-[4-(2,2-dimethylpropyl)phenyloxy]phenyl}methyl-2-amino-6-methylnicotinic acid amide,
N-[4-(2-pentylphenyloxy)phenyl]methyl-2-amino-6-methylnicotinic acid amide,
N-[4-(3-pentylphenyloxy)phenyl]methyl-2-amino-6-methylnicotinic acid amide,
N-[4-(4-pentylphenyloxy)phenyl]methyl-2-amino-6-methylnicotinic acid amide,
N-{4-[2-(1-methylbutyl)phenyloxy]phenyl}methyl-2-amino-6-methylnicotinic acid amide,
N-{4-[3-(1-methylbutyl)phenyloxy]phenyl}methyl-2-amino-6-methylnicotinic acid amide,
N-{4-[4-(1-methylbutyl)phenyloxy]phenyl}methyl-2-amino-6-methylnicotinic acid amide,
N-{4-[2-(2-methylbutyl)phenyloxy]phenyl}methyl-2-amino-6-methylnicotinic acid amide,
N-{4-[3-(2-methylbutyl)phenyloxy]phenyl}methyl-2-amino-6-methylnicotinic acid amide,
N-{4-[4-(2-methylbutyl)phenyloxy]phenyl}methyl-2-amino-6-methylnicotinic acid amide,
N-{4-[2-(3-methylbutyl)phenyloxy]phenyl}methyl-2-amino-6-methylnicotinic acid amide,
N-{4-[3-(3-methylbutyl)phenyloxy]phenyl}methyl-2-amino-6-methylnicotinic acid amide,
N-{4-[4-(3-methylbutyl)phenyloxy]phenyl}methyl-2-amino-6-methylnicotinic acid amide,
N-{4-[2-(1-ethylpropyl)phenyloxy]phenyl}methyl-2-amino-6-methylnicotinic acid amide,
N-{4-[3-(1-ethylpropyl)phenyloxy]phenyl}methyl-2-amino-6-methylnicotinic acid amide,
N-{4-[4-(1-ethylpropyl)phenyloxy]phenyl}methyl-2-amino-6-methylnicotinic acid amide,
N-{4-[2-(1,2-dimethylpropyl)phenyloxy]phenyl}methyl-2-amino-6-methylnicotinic acid amide,
N-{4-[3-(1,2-dimethylpropyl)phenyloxy]phenyl}methyl-2-amino-5-methylnicotinic acid amide,
N-{4-[4-(1,2-dimethylpropyl)phenyloxy]phenyl}methyl-2-amino-6-methylnicotinic acid amide,
N-[4-(2-methoxyphenyloxy)phenyl]methyl-2-amino-6-methylnicotinic acid amide,
N-[4-(3-methoxyphenyloxy)phenyl}methyl-2-amino-6-methylnicotinic acid amide,
N-[4-(4-methoxyphenyloxy)phenyl]methyl-2-amino-6-methylnicotinic acid amide,
N-[4-(2-ethoxyphenyloxy)phenyl]methyl-2-amino-6-methylnicotinic acid amide,
N-[4-(3-ethoxyphenyloxy)phenyl]methyl-2-amino-6-methylnicotinic acid amide,
N-[4-(4-ethoxyphenyloxy)phenyl]methyl-2-amino-6-methylnicotinic acid amide,
N-[4-(2-propoxyphenyloxy)phenyl]methyl-2-amino-6-methylnicotinic acid amide,
N-[4-(3-propoxyphenyloxy)phenyl]methyl-2-amino-6-methylnicotinic acid amide,
N-[4-(4-propoxyphenyloxy)phenyl]methyl-2-amino-6-methylnicotinic acid amide,
N-[4-(2-butoxyphenyloxy)phenyl]methyl-2-amino-6-methylnicotinic acid amide,
N-[4-(3-butoxyphenyloxy)phenyl]methyl-2-amino-6-methylnicotinic acid amide,
N-[4-(4-butoxyphenyloxy)phenyl]methyl-2-amino-6-methylnicotinic acid amide,
N-[4-(2-methylthiophenyloxy)phenyl]methyl-2-amino-6-methylnicotinic acid amide,
N-[4-(3-methylthiophenyloxy)phenyl]methyl-2-amino-6-methylnicotinic acid amide,
N-[4-(4-methylthiophenyloxy)phenyl]methyl-2-amino-6-methylnicotinic acid amide,
N-[4-(2-ethylthiophenyloxy)phenyl]methyl-2-amino-6-methylnicotinic acid amide,
N-[4-(3-ethylthiophenyloxy)phenyl]methyl-2-amino-6-methylnicotinic acid amide,
N-[4-(4-ethylthiophenyloxy)phenyl]methyl-2-amino-6-methylnicotinic acid amide,
N-[4-(2-trifluoromethylphenytoxy)phenyl]methyl-2-amino-6-methylnicotinic acid amide,
N-[4-(3-trifluoromethylphenyloxy)phenyl]methyl-2-amino-6-methylnicotinic acid amide,
N-[4-(4-trifluoromethylphenyloxy)phenyl]methyl-2-amino-6-methylnicotinic acid amide,
N-[4-(2-trifluoromethoxyphenyloxy)phenyl]methyl-2-amino-6-methylnicotinic acid amide,
N-[4-(3-trifluoromethoxyphenyloxy)phenyl]methyl-2-amino-6-methylnicotinic acid amide,
N-[4-(4-trifluoromethoxyphenyloxy)phenyl]methyl-2-amino-6-methylnicotinic acid amide,
N-[4-(2-cyanophenyloxy)phenyl]methyl-2-amino-6-methylnicotinic acid amide,
N-[4-(3-cyanophenyloxy)phenyl]methyl-2-amino-6-methylnicotinic acid amide,
N-[4-(4-cyanophenyloxy)phenyl]methyl-2-amino-6-methylnicotinic acid amide,
N-[4-(2-fluorophenyloxy)phenyl]methyl-2-amino-6-methoxymethylnicotmic acid amide,
N-[4-(3-fluorophenyloxy)phenyl]methyl-2-amino-6-methoxymethylnicotinic acid amide,
N-[4-(4-fluorophenyloxy)phenyl]methyl-2-amino-6-methoxymethylnicotinic acid amide,
N-[4-(2-chlorophenyloxy)phenyl]methyl-2-amino-6-methoxymethylnicotinic acid amide,
N-[4-(3-chlorophenyloxy)phenyl]methyl-2-amino-6-methoxymethylnicotinic acid amide,
N-[4-(4-chlorophenyloxy)phenyl]methyl-2-amino-6-methoxymethylnicotinic acid amide,
N-[4-(2-bromophenyloxy)phenyl]methyl-2-amino-6-methoxymethylnicotinic acid amide,
N-[4-(3-bromophenyloxy)phenyl]methyl-2-amino-6-methoxymethylnicotinic acid amide,
N-[4-(4-bromophenyloxy)phenyl]methyl-2-amino-6-methoxymethylnicotinic acid amide,
N-[4-(2-iodophenyloxy)phenyl]methyl-2-amino-6-methoxymethylnicotinic acid amide,
N-[4-(3-iodophenyloxy)phenyl]methyl-2-amino-6-methoxymethylnicotinic acid amide,
N-[4-(4-iodophenyloxy)phenyl]methyl-2-amino-6-methoxymethylnicotinic acid amide,
N-[4-(2-methylphenyloxy)phenyl]methyl-2-amino-6-methoxymethylnicotinic acid amide,
N-[4-(3-methylphenyloxy)phenyl]methyl-2-amino-6-methoxymethylnicotinic acid amide,
N-[4-(4-methylphenyloxy)phenyl]methyl-2-amino-6-methoxymethylnicotinic acid amide,
N-[4-(2-cthylphenyloxy)phenyl]methyl-2-amino-6-methoxymethylnicotinic acid amide,
N-[4-(3-ethylphenyloxy)phenyl]methyl-2-amino-6-methoxymethylnicotinic acid amide,
N-[4-(4-ethylphenyloxy)phenyl]methyl-2-amino-6-methoxymethylnicotinic acid amide,
N-[4-(2-propylphenyloxy)phenyl]methyl-2-amino-6-methoxymethylnicotinic acid amide,
N-[4-(3-propylphenyloxy)phenyl]methyl-2-amino-6-methoxymethylnicotinic acid amide,
N-[4-(4-propylphenyloxy)phenyl]methyl-2-amino-6-methoxymethylnicotinic acid amide,
N-{4-[2-(2-methylethyl)phenyloxy]phenyl}methyl-2-amino-6-methoxymethylnicotinic acid amide,
N-{4-[3-(2-methylethyl)phenyloxy]phenyl}methyl-2-amino-6-methoxymethylnicotinic acid amide,
N-{4-[4-(2-methylethyl)phenyloxy]phenyl}methyl-2-amino-6-methoxymethylnicotinic acid amide,
N-[4-(2-butylphenyloxy)phenyl]methyl-2-amino-6-methocymethylnicotinic acid amide,
N-[4-(3-butylphenyloxy)phenyl]methyl-2-amino-6-methoxymethylnicotinic acid amide,
N-[4-(4-butylphenyloxy)phenyl]methyl-2-amino-6-methoxymethylnicotinic acid amide,
N-{4-[2-(2-methylpropyl)phenyloxy]phenyl}methyl-2-amino-6-methoxymethylnicotinic acid amide,
N-{4-[3-(2-methylpropyl)phenyloxy]phenyl}methyl-2-amino-6-methoxymethylnicotinic acid amide,
N-{4-[4-(2-methylpropyl)phenyloxy]phenyl}methyl-2-amino-6-methoxymethylnicotinic acid amide,
N-{4-[2-(3-methylpropyl)phenyloxy]phenyl}methyl-2-amino-6-methoxymethylnicotinic acid amide,
N-{4-[3-(3-methylpropyl)phenyloxy]phenyl}methyl-2-amino-6-methoxymethylnicotinic acid amide,
N-{4-[4-(3-methylpropyl)phenyloxy]phenyl}methyl-2-amino-6-methoxymethylnicotinic acid amide,
N-{4-[2-(2,2-dimethylpropyl)phenyloxy]phenyl}methyl-2-amino-6-methoxymethylmicotinic acid amide,
N-{4-[3-(2,2-dimethylpropyl)phenyloxy]phenyl}methyl-2-amino-6-methoxymethylnicotinic acid amide,
N-{4-[4-(2,2-dimethylpropyl)phenyloxy]phenyl}methyl-2-amino-6-methoxymethylnicotinic acid amide,
N-[4-(2-pentylphenyloxy)phenyl]methyl-2-amino-6-methoxymethylnicotinic acid amide,
N-[4-(3-pentylphenyloxy)phenyl]methyl-2-amino-6-methoxymethylnicotinic acid amide,
N-[4-(4-pentylphenyloxy)phenyl]methyl-2-amino-6-methoxymethylnicotinic acid amide,
N-{4-[2-(1-methylbutyl)phenyloxy]phenyl}methyl-2-amino-6-methoxymethylnicotinic acid amide,
N-{4-[3-(1-methylbutyl)phenyloxy]phenyl}methyl-2-amino-5-methoxymethylnicotinic acid amide,
N-{4-[4-(1-methylbutyl)phenyloxy]phenyl}methyl-2-amino-6-methoxymethylnicotinic acid amide,
N-{4-[2-(2-methylbutyl)phenyloxy]phenyl}methyl-2-amino-6-methoxymethylnicotinic acid amide,
N-{4-[3-(2-methylbutyl)phenyloxy]phenyl}methyl-2-amino-6-methoxymethylnicotinic acid amide,
N-{4-[4-(2-methylbutyl)phenyloxy]phenyl}methyl-2-amino-6-methoxymethylnicotinic acid amide,
N-{4-[2-(3-methylbutyl)phenyloxy]phenyl}methyl-2-amino-6-methoxymethylnicotinic acid amide,
N-{4-[3-(3-methylbutyl)phenyloxy]phenyl}methyl-2-amino-6-methoxymethylnicotinic acid amide,
N-{4-[4-(3-methylbutyl)phenyloxy]phenyl}methyl-2-amino-6-methoxymethylnicotinic acid amide,
N-{4-[2-(1-ethylpropyl)phenyloxy]phenyl}methyl-2-amino-6-methoxymethylnicotinic acid amide,
N-{4-[3-(1-ethylpropyl)phenyloxy]phenyl}methyl-2-amino-6-methoxymethylnicotinic acid amide,
N-{4-[4-(1-ethylpropyl)phenyloxy]phenyl}methyl-2-amino-6-methoxymethylnicotinic acid amide,
N-{4-[2-(1,2-diamethylpropyl)phenyloxy]pheny}methyl-2-amino-6-methoxymethylnicotinic acid amide,
N-{4-[3-(1,2-dimethylpropyl)phenyloxy]phenyl}methyl-2-amino-6-methoxymethylnicotinic acid amide,
N-{4-[4-(1,2-dimethylpropyl)phenyloxy]phenyl}methyl-2-amino-6-methoxymethynicotinic acid amide,
N-[4-(2-methoxyphenyloxy)phenyl]methyl-2-amino-6-methoxymethylnicotinic acid amide,
N-[4-(3-methoxyphenyloxy)phenyl]methyl-2-amino-6-methoxymethylnicotinic acid amide,
N-[4-(4-methoxyphenyloxy)phenyl]methyl-2-amino-6-methoxymethylnicotinic acid amide,
N-[4-(2-ethoxyphenyloxy)phenyl]methyl-2-amino-6-methoxymethylnicotinic acid amide,
N-[4-(3-ethoxyphenyloxy)phenyl]methyl-2-amino-6-methoxymethylnicotinic acid amide,
N-[4-(4-ethoxyphenyloxy)phenyl]methyl-2-amino-6-methoxymethylnicotinic acid amide,
N-[4-(2-propoxyphenyloxy)phenyl]methyl-2-amino-6-methoxymethylnicotinic acid amide,
N-[4-(3-propoxyphenyloxy)phenyl]methyl-2-amino-6-methoxymethylnicotinic acid amide,
N-[4-(4-propoxyphenyloxy)phenyl]methyl-2-amino-6-methoxymethylnicotinic acid amide,
N-[4-(2-butoxyphenyloxy)phenyl]methyl-2-amino-6-methoxymethylnicotinic acid amide,
N-[4-(3-butoxyphenyloxy)phenyl]methyl-2-amino-6-methoxymethylnicotinic acid amide,
N-[4-(4-butoxyphenyloxy)phenyl]methyl-2-amino-6-methoxymethylnicotinic acid amide,
N-[4-(2-methylthiophenyloxy)phenyl]methyl-2-amino-6-methoxymethylnicotinic acid amide,
N-[4-(3-methylthiophenyloxy)phenyl]methyl-2-amino-6-methoxymethylnicotinic acid amide,
N-[4-(4-methylthiophenyloxy)phenyl]methyl-2-amino-6-methoxymethylnicotinic acid amide,
N-[4-(2-ethylthiophenyloxy)phenyl]methyl-2-amino-6-methoxymethylnicotinic acid amide,
N-[4-(3-ethylthiophenyloxy)phenyl]methyl-2-amino-6-methoxymethylnicotinic acid amide
N-[4-(4-ethylthiophenyloxy)phenyl]methyl-2-amino-6-methoxymethylnicotinic acid amide,
N-[4-(2-trifluoromethylphenyloxy)phenyl]methyl-2-amino-6-methoxymethylnicotinic acid amide,
N-[4-(3-trifluoromethylphenyloxy)phenyl]methyl-2-amino-6-methoxymethylnicotinic acid amide,
N-[4-(4-trifluoromethylphenyloxy)phenyl]methyl-2-amino-6-methoxymethylnicotinic acid amide,
N-[4-(2-trifluoromethoxyphenyloxy)phenyl]methyl-2-amino-6-methoxymethylnicotinic acid amide,
N-[4-(3-trifluoromethoxyphenyloxy)phenyl]methyl-2-amino-6-methoxymethylnicotinic acid amide,
N-[4-(4-trifluoromethoxyphenyloxy)phenyl]methyl-2-amino-6-methoxymethylnicotinic acid amide.
N-[4-(2-cyanophenyloxy)phenyl]methyl-2-amino-6-methoxymethylnicotinic acid amide,
N-[4-(3-cyanophenyloxy)phenyl]methyl-2-amino-6-methoxymethylnicotinic acid amide,
N-[4-(4-cyanophenyloxy)phenyl]methyl-2-amino-6-methoxymethylnicotinic acid amide,
N-[4-(4-chloro-3,5-dimethylphenyloxy)phenyl]methyl-2-aminonicotinic acid amide,
N-[4-(2-chloro-4-trifluoromethylphenyloxy)phenyl]methyl-2-aminonicotinic acid amide,
N-[4-(3,5-dimethylphenyloxy)phenyl]methyl-2-aminonicotinic acid amide,
N-[4-(2,6-dimethylphenyloxy)phenyl]methyl-2-aminonicotinic acid amide,
N-[4-(3-methoxy-4-methylthiophenyloxy)phenyl]methyl-2-aminonicotinic acid amide,
N-[4-(3-chloro-4-ethylthiophenyloxy)phenyl]methyl-2-aminonicotinic acid amide,
N-[4-(3-chloro-4-methylthiophenyloxy)phenyl]methyl-2-aminonicotinic acid amide,
N-[4-(3-ethyl-4-methylthiophenyloxy)phenyl]methyl-2-aminonicotinic acid amide,
N-[4-(4-chloro-3,5-dimethylphenyloxy)phenyl]methyl-2-aminonicotinic acid amide,
N-[4-(2,3-dimethyl-4-methylthiophenyloxy)phenyl]methyl-2-aminonicotinic acid amide,
N-[4-(2-methyl-4-methylthiophenyloxy)phenyl]methyl-2-aminonicotinic acid amide,
N-[4-(2,5-dimethylphenyloxy)phenyl]methyl-2-aminonicotinic acid amide,
N-[4-(2-chloro-4,5-dimethylphenyloxy)phenyl]methyl-2-aminonicotinic acid amide,
N-[4-(3,4-dichlorophenyloxy)phenyl]methyl-2-aminonicotinic acid amide,
N-[4-(3,5-dichlorophenyloxy)phenyl]methyl-2-aminonicotinic acid amide,
N-[4-(2,3,6-trimethylphenyloxy)phenyl]methyl-2-aminonicotinic acid amide
N-[4-(2,4,6-trimethylphenoxy)phenyl]methyl-2-aminonicotinic acid amide,
N-[4-(3,4-dimethylphenyloxy)phenyl]methyl-2-aminonicotinic acid amide,
N-[4-(2,4-dimethylphenyloxy)phenyl]methyl-2-aminonicotinic acid amide,
N-[4-(4-chloro-3-ethylphenyloxy)phenyl]methyl-2-aminonicotinic acid amide,
N-[4-(3-chloro-4-fluorophenyloxy)phenyl]methyl-2-aminonicotinic acid amide,
N-[4-(2-fluoro-4-trifluoromethylphenyloxy)phenyl]methyl-2-aminonicotinic acid amide,
N-[4-(3-fluoro-4-trifluoromethylphenyloxy)phenyl]methyl-2-aminonicotinic acid amide,
N-[4-(2-fluoro-3-trifluoromethylphenyloxy)phenyl]methyl-2-aminonicotinic acid amide,
N-[4-(2-fluoro-5-trifluoromethylphenyloxy)phenyl]methyl-2-aminonicotinic acid amide,
N-[4-(3-fluoro-5-trifluoromethylphenyloxy)phenyl]methyl-2-aminonicotinic acid amide,
N-[4-(4-fluoro-3-trifluoromethylphenyloxy)phenyl]methyl-2-aminonicotinic acid amide,
N-[4-(2-fluoro-4-trifluoromethylphenyloxy)phenyl]methyl-2-amino-6-fluoronicotinic acid amide,
N-[4-(3-fluoro-4-trifluoromethylphenyloxy)phenyl]methyl-2-amino-6-fluoronicotinic acid amide,
N-[4-(2-fluoro-3-trifluoromethylphenyloxy)phenyl]methyl-2-amino-6-fluoronicotinic acid amide,
N-[4-(2-fluoro-5-trifluoromethylphenyloxy)phenyl]methyl-2-amino-6-fluoronicotinic acid amide,
N-[4-(3-fluoro-5-trifluoromethylphenyloxy)phenyl]methyl-2-amino-6-fluoronicotinic acid amide,
N-[4-(4-fluoro-3-trifluoromethylphenyloxy)phenyl]methyl-2-amino-6-fluoronicotinic acid amide,
N-[4-(2-fluoro-4-trifluoromethylphenyloxy)phenyl]methyl-2-amino-6-methylnicotinic acid amide,
N-[4-(3-fluoro-4-trifluoromethylphenyloxy)phenyl]methyl-2-amino-6-methylnicotinic acid amide,
N-[4-(2-fluoro-3-trifluoromethylphenyloxy)phenyl]methyl-2-amino-6-methylnicotinic acid amide,
N-[4-(2-fluoro-5-trifluoromethylphenyloxy)phenyl]methyl-2-amino-6-methylnicotinic acid amide,
N-[4-(3-fluoro-5-trifluoromethylphenyloxy)phenyl]methyl-2-amino-6-methylnicotinic acid amide,
N-[4-(4-fluoro-3-trifluoromethylphenyloxy)phenyl]methyl-2-amino-6-methylnicotinic acid amide,
N-[4-(2-fluoro-4-trifluoromethylphenyloxy)phenyl]methyl-2-amino-6-methoxymethylnicotinic acid amide,
N-[4-(3-fluoro-4-trifluoromethylphenyloxy)phenyl]methyl-2-amino-6-methoxymethylnicatinic acid amide,
N-[4-(2-fluoro-3-trifluoromethylphenyloxy)phenyl]methyl-2-amino-6-methoxymethylnicotinic acid amide,
N-[4-(2-fluoro-5-trifluoromethylphenyloxy)phenyl]methyl-2-amino-6-methoxymethylnicotinic acid amide,
N-[4-(3-fluoro-5-trifluoromethylphenyloxy)phenyl]methyl-2-amino-6-methoxymethylnicotinic acid amide,
N-[4-(4-fluoro-3-trifluoromethylphcnyloxy)phenyl]methyl-2-amino-6-methoxymethylnicotinic acid amide,
N-[4-(2-fluoro-4-trifluoromethoxyphenyloxy)phenyl]methyl-2-aminonicotinic acid amide,
N-[4-(3-fluoro-4-trifluoromethoxyphenyloxy)phenyl]methyl-2-aminonicotinic acid amide,
N-[4-(2-fluoro-3-trifluoromethoxyphenyloxy)phenyl]methyl-2-aminonicotinic acid amide,
N-[4-(2-fluoro-5-trifluoromethoxyphenyloxy)phenyl]methyl-2-aminonicotinic acid amide,
N-[4-(3-fluoro-5-trifluoromethoxyphenyloxy)phenyl]methyl-2-aminonicotinic acid amide,
N-[4-(4-fluoro-3-trifluoromethoxyphenyloxy)phenyl]methyl-2-aminonicotinic acid amide,
N-[4-(2-fluoro-4-trifluoromethoxyphenyloxy)phenyl]methyl-2-amino-6-fluoronicotinic acid amide,
N-[4-(3-fluoro-4-trifluoromethoxyphenyloxy)phenyl]methyl-2-amino-6-fluoronicotinic acid amide,
N-[4-(2-fluoro-3-trifluoromethoxyphenyloxy)phenyl]methyl-2-amino-6-fluoronicotinic acid amide,
N-[4-(2-fluoro-5-trifluoromethoxyphenyloxy)phenyl]methyl-2-amino-6-fluoronicotinic acid amide,
N-[4-(3-fluoro-5-trifluoromethoxyphenyloxy)phenyl]methyl-2-amino-6-fluoronicotinic acid amide,
N-[4-(4-fluoro-3-trifluoromethoxyphenyloxy)phenyl]methyl-2-amino-6-fluoronicotinic acid amide,
N-[4-(2-fluoro-4-trifluoromethoxyphenyloxy)phenyl]methyl-2-amino-6-methylnicotinic acid amide,
N-[4-(3-fluoro-4-trifluoromethoxyphenyloxy)phenyl]methyl-2-amino-6-methylnicotinic acid amide,
N-[4-(2-fluoro-3-trifluoromethoxyphenyloxy)phenyl]methyl-2-amino-6-methylnicotinic acid amide,
N-[4-(2-fluoro-5-trifluoromethoxyphenyloxy)phenyl]methyl-2-amino-6-methylnicotinic acid amide,
N-[4-(3-fluoro-5-trifluoromethoxyphenyloxy)phenyl]methyl-2-amino-6-methylnicotinic acid amide,
N-[4-(4-fluoro-3-trifluoromethoxyphenyloxy)phenyl]methyl-2-amino-6-methylnicotinic acid amide,
N-[4-(2-fluoro-4-trifluoromethoxyphenyloxy)phenyl]methyl-2-amino-6-methoxymethylnicotinic acid amide,
N-[4-(3-fluoro-4-trifluoromethoxyphenyloxy)phenyl]methyl-2-amino-6-methoxymethylnicotinic acid amide,
N-[4-(2-fluoro-3-trifluoromethoxyphenyloxy)phenyl]methyl-2-amino-6-methoxymethylnicotinic acid amide,
N-[4-(2-fluoro-5-trifluoromethoxyphenyloxy)phenyl]methyl-2-amino-6-methoxymethylnicotinic acid amide,
N-[4-(3-fluoro-5-trfluoromethoxyphenyloxy)phenyl]methyl-2-amino-6-methoxymethylnicotinic acid amide,
N-[4-(4-fluoro-3-trifluoromethoxyphenyloxy)phenyl]methyl-2-amino-6-methoxymethylnicotinic acid amide,

N-(2-fluoro-3-methoxyphenyl)methyl-2-aminonicotinic acid amide,
N-(2-fluoro-3-ethoxyphenyl)methyl-2-aminonicotinic acid amide,
N-(2-fluoro-3-propoxyphenyl)methyl-2-aminonicotinic acid amide,
N-(2-fluoro-3-butyloxyphenyl)methyl-2-aminonicotinic acid amide,
N-(2-fluoro-3-pentyloxyphenyl)methyl-2-aminonicotinic acid amide,
N-(2-fluoro-3-hexyloxyphenyl)methyl-2-aminonicotinic acid amide,
N-(2-fluoro-3-heptyloxyphenyl)methyl-2-aminonicotinic acid amide,
N-(2-fluoro-3-methoxyphenyl)methyl-2-amino-6-fluoronicotinic acid amide,
N-(2-fluoro-3-ethoxyphenyl)methyl-2-amino-6-fluoronicotinic acid amide,
N-(2-fluoro-3-propoxyphenyl)methyl-2-amino-6-fluoronicotinic acid amide,
N-(2-fluoro-3-butyloxyphenyl)methyl-2-amino-6-fluoronicotinic acid amide,
N-(2-fluoro-3-pentyloxyphenyl)methyl-2-amino-6-fluoronicotinic acid amide,
N-(2-fluoro-3-hexyloxyphenyl)methyl-2-amino-6-fluoronicotinic acid amide,
N-(2-fluoro-3-heptyloxyphenyl)methyl-2-amino-6-fluoronicotinic acid amide,
N-(2-fluoro-3-methoxyphenyl)methyl-2-amino-6-methylnicotinic acid amide,
N-(2-fluoro-3-ethoxyphenyl)methyl-2-amino-6-methylnicotinic acid amide,
N-(2-fluoro-3-propoxyphenyl)methyl-2-amino-6-methylnicotinic acid amide,
N-(2-fluoro-3-butyloxyphenyl)methyl-2-amino-6-methylnicotinic acid amide,
N-(2-fluoro-3-pentyloxyphenyl)methyl-2-amino-6-methylnicotinic acid amide,
N-(2-fluoro-3-hexyloxyphenyl)methyl-2-amino-6-methylnicotinic acid amide,
N-(2-fluoro-3-heptyloxyphenyl)methyl-2-amino-6-methylnicotinic acid amide,
N-(2-fluoro-3-methoxyphenyl)methyl-2-amino-6-methoxymethylnicotinic acid amide,
N-(2-fluoro-3-ethoxyphenyl)methyl-2-amino-6-methoxymethylnicotinic acid amide,
N-(2-fluoro-3-propoxyphenyl)methyl-2-amino-6-methoxymethylnicotinic acid amide,
N-(2-fluoro-3-butyloxyphenyl)methyl-2-amino-6-methoxymethylnicotinic acid amide,
N-(2-fluoro-3-pentyloxyphenyl)methyl-2-amino-6-methoxymethylnicotinic acid amide,
N-(2-fluoro-3-hexyloxyphenyl)methyl-2-amino-6-methoxymethylnicotinic acid amide,
N-(2-fluoro-3heptyloxyphenyl)methyl-2-amino-6-methoxymethylnicotinic acid amide,
N-[2-fluoro-3-(2-propenyloxy)phenyl]methyl-2-aminonicotinic acid amide,
N-[2-fluoro-3-(2-propenyloxy)phenyl]methyl-2-amino-6-fluoronicotinic acid amide,
N-[2-fluoro-3-(2-propenyloxy)phenyl]methyl-2-amino-6-methylnicotinic acid amide,
N-[2-fluoro-3-(2-propenyloxy)phenyl]methyl-2-amino-6-methoxymethylnicotinic acid amide,
N-[2-fluoro-3-(2-propynyloxy)phenyl]methyl-2-aminonicotinic acid amide,
N-[2-fluoro-3-(2-propynyloxy)phenyl]methyl-2-amino-6-fluoronicotinic acid amide,
N-[2-fluoro-3-(2-propynyloxy)phenyl]methyl-2-amino-6-methylnicotinic acid amide,
N-[2-fluoro-3-(2-propynyloxy)phenyl]methyl-2-amino-6-methoxymethylnicotinic acid amide,
N-[2-fluoro-3-(2-butenyloxy)phenyl]methyl-2-aminonicotinic acid amide,
N-[2-fluoro-3-(3-butenyloxy)phenyl]methyl-2-aminonicotinic acid amide,
N-[2-fluoro-3-(2-butenyloxy)phenyl]methyl-2-amino-fluoronicotinic acid amide,
N-[2-fluoro-3-(3-butenyloxy)phenyl]methyl-2-amino-6-fluoronicotinic acid amide,
N-[2-fluoro-3-(2-butenyloxy)phenyl]methyl-2-amino-6-methylnicotinic acid amide,
N-[2-fluoro-3-(3-butenyloxy)phenyl]methyl-2-amino-6-methylnicotinic acid amide,
N-[2-fluoro-3-(2-butenyloxy)phenyl]methyl-2-amino-6-methoxymethylnicotinic acid amide,
N-[2-fluoro-3-(3-butenyloxy)phenyl]methyl-2-amino-6-methoxymethylnicotinic acid amide,
N-[2-fluoro-3-(2-butynyloxy)phenyl]methyl-2-aminonicotinic acid amide,
N-[2-fluoro-3-(3-butynyloxy)phenyl]methyl-2-aminonicotinic acid amide,
N-[2-fluoro-3-(2-butynyloxy)phenyl]methyl-2-amino-6-fluoronicotinic acid amide,
N-[2-fluoro-3-(3-butynyloxy)phenyl]methyl-2-amino-6-fluoronicotinic acid amide,
N-[2-fluoro-3-(2-butynyloxy)phenyl]methyl-2-amino-6-methylnicotinic acid amide,
N-[2-fluoro-3-(3-butynyloxy)phenyl]methyl-2-amino-6-methylnicotinic acid amide,
N-[2-fluoro-3-(2-butynyloxy)phenyl]methyl-2-amino-6-methoxymethylnicotinic acid amide,
N-[2-fluoro-3-(3-butynyloxy)phenyl]methyl-2-amino-6-methoxymethylnicotinic acid amide,
N-[2-fluoro-3-(2-pentenyloxy)phenyl]methyl-2-aminonicotinic acid amide,
N-[2-fluoro-3-(3-pentenyloxy)phenyl]methyl-2-aminonicotinic acid amide,
N-[2-fluoro-3-(4-pentenyloxy)phenyl]methyl-2-aminonicotinic acid amide,
N-[2-fluoro-3-(2-pentenyloxy)phenyl]methyl-2-amino-6-fluoronicotinic acid amide,
N-[2-fluoro-3-(3-pentenyloxy)phenyl]methyl-2-amino-6-fluoronicotinic acid amide,
N-[2-fluoro-3-(4-pentenyloxy)phenyl]methyl-2-amino-6-fluoronicotinic acid amide,
N-[2-fluoro-3-(2-pentenyloxy)phenyl]methyl-2-amino-6-methylnicotinic acid amide,
N-[2-fluoro-3-(3-pentenyloxy)phenyl]methyl-2-amino-6-methylnicotinic acid amide,
N-[2-fluoro-3-(4-pentenyloxy)phenyl]methyl-2-amino-6-methylnicotinic acid amide,
N-[2-fluoro-3-(2-pentenyloxy)phenyl]methyl-2-amino-6-methoxymethylnicotinic acid amide,
N-[2-fluoro-3-(3-pentenyloxy)phenyl]methyl-2-amino-6-methoxymethylnicotinic acid amide,
N-[2-fluoro-3-(4-pentenyloxy)phenyl]methyl-2-amino-6-methoxymethylnicotinic acid amide,
N-[2-fluoro-3-(2-pentynyloxy)phenyl]methyl-2-aminonicotinic acid amide,
N-[2-fluoro-3-(3-pentynyloxy)phenyl]methyl-2-aminonicotinic acid amide,
N-[2-fluoro-3-(4-pentynyloxy)phenyl]methyl-2-aminonicotirnic acid amide,
N-[2-fluoro-3-(2-pentynyloxy)phenyl]methyl-2-amino-6-fluoronicotinic acid amide,
N-[2-fluoro-3-(3-pentynyloxy)phenyl]methyl-2-amino-6-fluoronicotinic acid amide,
N-[2-fluoro-3-(4-pentynyloxy)phenyl]methyl-2-amino-6-fluoronicotinic acid amide,
N-[2-fluoro-3-(2-pentynyloxy)phenyl]methyl-2-amino-6-methylnicotinic acid amide,
N-[2-fluoro-3-(3-pentynyloxy)phenyl]methyl-2-amino-6-methylnicotinic acid amide,
N-[2-fluoro-3-(4-pentynyloxy)phenyl]methyl-2-amino-6-methylnicotinic acid amide,
N-[2-fluoro-3-(2-pentynyloxy)phenyl]methyl-2-amino-6-methoxymethylnicotinic acid amide,
N-[2-fluoro-3-(3-pentynyloxy)phenyl]methyl-2-amino-6-methoxymethylnicotinic acid amide,
N-[2-fluoro-3-(4-pentynyloxy)phenyl]methyl-2-amino-6-methoxymethylnicotinic acid amide,
N-[2-fluoro-3-(2-hexenyloxy)phenyl]methyl-2-aminonicotinic acid amide,
N-[2-fluoro-3-(3-hexenyloxy)phenyl]methyl-2-aminonicotinic acid amide,
N-[2-fluoro-3-(4-hexenyloxy)phenyl]methyl-2-aminonicotinic acid amide,
N-[2-fluoro-3-(5-hexenyloxy)phenyl]methyl-2-aminonicotinic acid amide,
N-[2-fluoro-3-(2-hexenyloxy)phenyl]methyl-2-amino-6-fluoronicotinic acid amide,
N-[2-fluoro-3-(3-hexenyloxy)phenyl]methyl-2-amino-6-fluoronicotinic acid amide,
N-[2-fluoro-3-(4-hexenyloxy)phenyl]methyl-2-amino-6-fluoronicotinic acid amide,
N-[2-fluoro-3-(5-hexenyloxy)phenyl]methyl-2-amino-6-fluoronicotinic acid amide,
N-[2-fluoro-3-(2-hexenyloxy)phenyl]methyl-2-amino-6-methylnicotinic acid amide,
N-[2-fluoro-3-(3-hexenyloxy)phenyl]methyl-2-amino-6-methylnicotinic acid amide,
N-[2-fluoro-3-(4-hexenyloxy)phenyl]methyl-2-amino-6-methylnicotinic acid amide,
N-[2-fluoro-3-(5-hexenyloxy)phenyl]methyl-2-amino-6-methylnicotinic acid amide,
N-[2-fluoro-3-(2-hexenyloxy)phenyl]methyl-2-amino-6-methoxymethylnicotinic acid amide,
N-[2-fluoro-3-(3-hexenyloxy)phenyl]methyl-6-amino-6-methoxymethylnicotinic acid amide,
N-[2-fluoro-3-(4-hexenyloxy)phenyl]methyl-2-amino-6-methoxymethylnicotinic acid amide,
N-[2-fluoro-3-(5-hexenyloxy)phenyl]methyl-2-amino-6-methoxymethylnicotinic acid amide,
N-[2-fluoro-3-(2-hexynyloxy)phenyl]methyl-2-aminonicotinic acid amide,
N-[2-fluoro-3-(3-hexynyloxy)phenyl]methyl-2-aminonicotinic acid amide,
N-[2-fluoro-3-(4-hexynyloxy)phenyl]methyl-2-aminonicotinic acid amide,
N-[2-fluoro-3-(5-hexynyloxy)phenyl]methyl-2-aminonicotinic acid amide,
N-[2-fluoro-3-(2-hexynyloxy)phenyl]methyl-2-amino-6-fluoronicotinic acid amide,
N-[2-fluoro-3-(3-hexynyloxy)phenyl]methyl-2-amino-6-fluoronicotinic acid amide,
N-[2-fluoro-3-(4-hexynyloxy)phenyl]methyl-2-amino-6-fluoronicotinic acid amide,
N-[2-fluoro-3-(5-hexynyloxy)phenyl]methyl-2-amino-6-fluoronicotinic acid amide,
N-[2-fluoro-3-(2-hexynyloxy)phenyl]methyl-2-amino-6-methylnicotinic acid amide,
N-[2-fluoro-3-(3-hexynyloxy)phenyl]methyl-2-amino-6-methylnicotinic acid amide,
N-[2-fluoro-3-(4-hexynyloxy)phenyl]methyl-2-amino-6-methylnicotinic acid amide,
N-[2-fluoro-3-(5-hexynyloxy)phenyl]methyl-2-amino-6-methylnicotinic acid amide,
N-[2-fluoro-3-(2-hexynyloxy)phenyl]methyl-2-amino-6-methoxymethylnicotinic acid amide,
N-[2-fluoro-3-(3-hexynyloxy)phenyl]methyl-2-amino-6-methoxymethylnicotinic acid amide,
N-[2-fluoro-3-(4-hexynyloxy)phenyl]methyl-2-amino-6-methoxymethylnicotinic acid amide,
N-[2-fluoro-3-(5-hexynyloxy)phenyl]methyl-2-amino-6-methoxymethylnicotinic acid amide,
N-[2-fluoro-3-(2-heptenytoxy)phenyl]methyl-2-aminonicotinic acid amide,
N-[2-fluoro-3-(3-heptenyloxy)phenyl]methyl-2-aminonicotinic acid amide,
N-[2-fluoro-3-(4-heptenyloxy)phenyl]methyl-2-aminonicotinic acid amide,
N-[2-fluoro-3-(5-heptenyloxy)phenyl]methyl-2-aminonicotinic acid amide,
N-[2-fluoro-3-(6-heptenyloxy)phenyl]methyl-2-aminonicotinic acid amide,
N-[2-fluoro-3-(2-heptenyloxy)phenyl]methyl-2-amino-6-fluoronicotinic acid amide,
N-[2-fluoro-3-(3-heptenyloxy)phenyl]methyl-2-amino-6-fluoronicotinic acid amide,
N-[2-fluoro-3-(4-heptenyloxy)phenyl]methyl-2-amino-6-fluoronicotinic acid amide,
N-[2-fluoro-3-(5-heptenytoxy)phenyl]methyl-2-amino-6-fluoronicotinic acid amide,
N-[2-fluoro-3-(6-heptenytoxy)phenyl]methyl-2-amino-6-fluoronicotinic acid amide,
N-[2-fluoro-3-(2-heptenyloxy)phenyl]methyl-2-amino-6-methylnicotinic acid amide,
N-[2-fluoro-3-(3-heptenyloxy)phenyl]methyl-2-amino-6-methylnicotinic acid amide,
N-[2-fluoro-3-(4-heptenyloxy)phenyl]methyl-2-amino-6-methylnicotinic acid amide,
N-[2-fluoro-3-(5-heptenyloxy)phenyl]methyl-2-amino-6-methylnicotinic acid amide,
N-[2-fluoro-3-(6-heptenyloxy)phenyl]methyl-2-amino-6-methylnicotinic acid amide,
N-[2-fluoro-3-(2-heptenytoxy)phenyl]methyl-2-amino-6-methoxymethylnicotinic acid amide,
N-[2-fluoro-3-(3-heptenyloxy)phenyl]methyl-2-amino-6-methoxymethylnicotinic acid amide,
N-[2-fluoro-3-(4-heptenyloxy)phenyl]methyl-2-amino-6-methoxymethylnicotinic acid amide,
N-[2-fluoro-3-(5-heptenyloxy)phenyl]methyl-2-amino-6-methoxymethylnicotinic acid amide,
N-[2-fluoro-3-(6-heptenyloxy)phenyl]methyl-2-amino-6-methoxymethylnicotinic acid amide,
N-[2-fluara-3-(2-heptynyloxy)phenyl]methyl-2-aminonicatinic acid amide,
N-[2-fluoro-3-(3-heptynyloxy)phenyl]methyl-2-aminonicotinic acid amide,
N-[2-fluoro-3-(4-heptynyloxy)phenyl]methyl-2-aminonicotinic acid amide,
N-[2-fluoro-3-(5-heptynyloxy)phenyl]methyl-2-aminonicotinic acid amide,
N-[2-fluoro-3-(6-heptynyloxy)phenyl]methyl-2-aminonicotinic acid amide,
N-[2-fluoro-3-(2-heptynyloxy)phenyl]methyl-2-amino-6-fluoronicotinic acid amide,
N-[2-fluoro-3-(3-heptynyloxy)phenyl]methyl-2-amino-6-fluoronicotinic acid amide,
N-[2-fluoro-3-(4-heptynyloxy)phenyl]methyl-2-amino-6-fluoronicotinic acid amide,
N-[2-fluoro-3-(5-heptynyloxy)phenyl]methyl-2-amino-6-fluoronicotinic acid amide,
N-[2-fluoro-3-(6-heptynyloxy)phenyl]methyl-2-amino-6-fluoronicotinic acid amide,
N-[2-fluoro-3-(2-heptynyloxy)phenyl]methyl-2-amino-6-methylnicotinic acid amide
N-[2-fluoro-3-(3-heptynyl)oxyphenyl]methyl-2-amino-6-methylnicotinic acid amide,
N-[2-fluoro-3-(4-heptynyloxy)phenyl]methyl-2-amino-6-methylnicotinic acid amide,
N-[2-fluoro-3-(5-heptynyloxy)phenyl]methyl-2-amino-6-methylnicotinic acid amide,
N-[2-fluoro-3-(6-heptynyloxy)phenyl]methyl-2-amino-6-methylnicotinic acid amide,
N-[2-fluoro-3-(2-heptynyloxy)phenyl]methyl-2-amino-6-methoxymethylnicotinic acid amide,
N-[2-fluoro-3-(3-heptynyloxy)phenyl]methyl-2-amino-6-methoxymethylnicotinic acid amide,
N-[2-fluoro-3-(4-heptynyloxy)phenyl]methyl-2-amino-6-methoxymethylnicotinic acid amide,
N-[2-fluoro-3-(5-heptynyloxy)phenyl]methyl-2-amino-6-methoxymethylnicotinic acid amide,
N-[2-fluoro-3-(6-heptynyloxy)phenyl]methyl-2-amino-6-methoxymethylnicotinic acid amide.

N-(3-pentyloxyphenyl)methyl-2-aminonicotinic acid amide,
N-(3-hexyloxyphenyl)methyl-2-aminonicotinic acid amide,
N-(3-heptyloxyphenyl)methyl-2-aminonicotinic acid amide,
N-(3-pentyloxyphenyl)methyl-2-amino-6-fluoronicotinic acid amide,
N-(3-hexyloxyphenyl)methyl-2-amino-6-fluoronicotinic acid amide,
N-(3-heptyloxyphenyl)methyl-2-amino-6-fluoronicotinic acid amide,
N-(3-pentyloxyphenyl)methyl-2-amino-6-methylnlcotinic acid amide,
N-(3-hexyloxyphenyl)methyl-2-amino-6-methylnicotinic acid amide,
N-(3-heptyloxyphenyl)methyl-2-amino-6-methylnicotinic acid amide,
N-(3-pentyloxyphenyl)methyl-2-amino-6-methoxymethylnicotinic acid amide,
N-(3-hexyloxyphenyl)methyl-2-amino-6-methoxymethylnicotinic acid amide,
N-(3-heptyloxyphenyl)methyl-2-amino-6-methoxymethylnicotinic acid amide,
N-[3-(2-pentenyloxy)phenyl]methyl-2-aminonicotinic acid amide,
N-[3-(3-pentenyloxy)phenyl]methyl-2-aminonicotinic acid amide,
N-[3-(4-pentenyloxy)phenyl]methyl-2-aminonicotinic acid amide,
N-[3-(2-pentenyloxy)phenyl]methyl-2-amino-6-fluoronicotinic acid amide,
N-[3-(3-pentenyloxy)phenyl]methyl-2-amino-6-fluoronicotinic acid amide,
N-[3-(4-pentenyloxy)phenyl]methyl-2-amino-6-fluoronicotinic acid amide,
N-[3-(2-pentenyloxy)phenyl]methyl-2-amino-6-methylnicotinic acid amide,
N-[3-(3-pentenyloxy)phenyl]methyl-2-amino-6-methylnicotinic acid amide,
N-[3-(3-pentenyloxy)phenyl]methyl-2-amino-6-methylnicotinic acid amide,
N-[3-(2-pentenyloxy)phenyl]methyl-2-amino-6-methoxymethylnicotinic acid amide,
N-[3-(3-pentenyloxy)phenyl]methyl-2-amino-6-methoxymethylnicotinic acid amide,
N-[3-(4-pentenyloxy)phenyl]methyl-2-amino-6-methoxymethylnicotinic acid amide,
N-[3-(2-pentynyloxy)phenyl]methyl-2-aminonicotinic acid amide,
N-[3-(3-pentynyloxy)phenyl]methyl-2-aminonicntinic acid amide,
N-[3-(4-pentynyloxy)phenyl]methyl-2-aminonicotinic acid amide,
N-[3-(2-pentynyloxy)phenyl]methyl-2-amino-6-fluoronicotinic acid amide,
N-[3-(3-pentynyloxy)phenyl]methyl-2-amino-6-fluoronicotinic acid amide,
N-[3-(4-pentynyloxy)phenyl]methyl-2-amino-6-fluoronicotinic acid amide,
N-[3-(2-pentynyloxy)phenyl]methyl-2-amino-6-methylnicotinic acid amide,
N-[3-(3-pentynyloxy)phenyl]methyl-2-amino-6-methylnicotinic acid amide,
N-[3-(4-pentynyloxy)phenyl]methyl-2-amino-6-methylnicotinic acid amide,
N-[3-(2-pentynyloxy)phenyl]methyl-2-amino-6-methoxymethylnicotinic acid amide,
N-[3-(3-pentynyloxy)phenyl]methyl-2-amino-6-methoxymethylnicotinic acid amide,
N-[3-(4-pentynyloxy)phenyl]methyl-2-amino-6-methoxymethylnicotinic acid amide,
N-[3-(2-hexenyloxy)phenyl]methyl-2-aminonicotinic acid amide,
N-[3-(3-hexenyloxy)phenyl]methyl-2-aminonicotinic acid amide,
N-[3-(4-hexenyloxy)phenyl]methyl-2-aminonicotinic acid amide,
N-[3-(5-hexenyloxy)phenyl]methyl-2-aminonicotinic acid amide,
N-[3-(2-hexenyloxy)phenyl]methyl-2-amino-6-fluoronicotinic acid amide,
N-[3-(3-hexenyloxy)phenyl]methyl-2-amino-6-fluoronicotinic acid amide,
N-[3-(4-hexenyloxy)phenyl]methyl-2-amino-6-fluoronicotinic acid amide,
N-[3-(5-hexenyloxy)phenyl]methyl-2-amino-6-fluoronicotinic acid amide,
N-[3-(2-hexenyloxy)phenyl]methyl-2-amino-6-methylnicotinic acid amide,
N-[3-(3-hexenyloxy)phenyl]methyl-2-amino-6-methylnicotinic acid amide,
N-[3-(4-hexenyloxy)phenyl]methyl-2-amino-6-methylnicotinic acid amide,
N-[3-(5-hexenyloxy)phenyl]methyl-2-amino-6-methylnicotinic acid amide,
N-[3-(2-hexenyloxy)phenyl]methyl-2-amino-6-methoxymethylnicotinic acid amide,
N-[3-(3-hexenyloxy)phenyl]methyl-2-amino-6-methoxymethylnicotinic acid amide,
N-[3-(4-hexenyloxy)phenyl]methyl-2-amino-6-methoxymethylnicotinic acid amide,
N-[3-(5-hexenyloxy)phenyl]methyl-2-amino-6-methoxymethylnicotinic acid amide,
N-[3-(2-hexynyloxy)phenyl]methyl-2-aminonicotinic acid amide,
N-[3-(3-hexynyloxy)phenyl]methyl-2-aminonicotinic acid amide,
N-[3-(4-hexynyloxy)phenyl]methyl-2-aminonicotinic acid amide,
N-[3-(5-hexynyloxy)phenyl]methyl-2-aminonicotinic acid amide,
N-[3-(2-hexynyioxy)phenyl]methyl-2-amino-6-fluoronicotinic acid amide,
N-[3-(3-hexynyloxy)phenyl]methyl-2-amino-6-fluoronicotinic acid amide,
N-[3-(4-hexynyloxy)phenyl]methyl-2-amino-6-fluoronicotinic acid amide,
N-[3-(5-hexynyloxy)phenyl]methyl-2-amino-6-fluoronicotinic acid amide,
N-[3-(2-hexynyloxy)phenyl]methyl-2-amino-6-methylnicotinic acid amide,
N-[3-(3-hexynyloxy)phenyl]methyl-2-amino-6-methylnicotinic acid amide,
N-[3-(4-hexynyloxy)phenyl]methyl-2-amino-6-methylnicotinic acid amide,
N-[3-(5-hexynyloxy)phenyl]methyl-2-amino-6-methylnicotinic acid amide,
N-[3-(2-hexynyloxy)phenyl]methyl-2-amino-6-methoxymethylnicotinic acid amide,
N-[3-(3-hexynyloxy)phenyl]methyl-2-amino-6-methoxymethylnicotinic acid amide,
N-[3-(4-hexynyloxy)phenyl]methyl-2-amino-6-methoxymethylnicotinic acid amide,
N-[3-(5-hexynyloxy)phenyl]methyl-2-amino-6-methoxymethylnicotinic acid amide,
N-[3-(2-heptenyloxy)phenyl]methyl-2-aminonicotinic acid amide,
N-[3-(3-heptenyloxy)phenyl]methyl-2-aminonicotinic acid amide,
N-[3-(4-heptenyloxy)phenyl]methyl-2-aminonicotinic acid amide,
N-[3-(5-heptenyloxy)phenyl]methyl-2-aminonicotinic acid amide,
N-[3-(6-hoptenyloxy)phenyl]methyl-2-aminonicotinic acid amide,
N-[3-(2-heptenyloxy)phenyl]methyl-2-amino-6-fluoronicotinic acid amide,
N-[3-(3-heptenyloxy)phenyl]methyl-2-amino-6-fluoronicotinic acid amide,
N-[3-(4-heptenyloxy)phenyl]methyl-2-amino-6-fluoronicotinic acid amide,
N-[3-(5-heptenyloxy)phenyl]methyl-2-amino-6-fluoronicotinic acid amide,
N-[3-(6-heptenyloxy)phenyl]methyl-2-amino-6-fluoronicotinic acid amide,
N-[3-(2-heptenyloxy)phenyl]methyl-2-amino-6-methylnicotinic acid amide,
N-[3-(3-heptenyloxy)phenyl]methyl-2-amino-6-methylnicotinic acid amide,
N-[3-(4-heptenyloxy)phenyl]methyl-2-amino-6-methylnicotinic acid amide,
N-[3-(5-heptenyloxy)phenyl]methyl-2-amino-6-methylnicotinic acid amide,
N-[3-(6-heptenyloxy)phenyl]methyl-2-amino-6-methylnicotinic acid amide,
N-[3-(2-heptenyloxy)phenyl]methyl-2-amino-6-methoxymethylnicotinic acid amide,
N-[3-(3-heptenyloxy)phenyl]methyl-2-amino-6-methoxymethylnicotinic acid amide,
N-[3-(4-heptenyloxy)phenyl]methyl-2-amino-6-methoxymethylnicotinic acid amide,
N-[3-(5-heptenyloxy)phenyl]methyl-2-amino-6-methoxymethylnicotinic acid amide,
N-[3-(6-heptenyloxy)phenyl]methyl-2-amino-6-methoxymethylnicotitinc acid amide,
N-[3-(2-heptynyloxy)phenyl]methyl-2-aminonicotinic acid amide,
N-[3-(3-heptynyloxy)phenyl]methyl-2-aminonicotinic acid amide,
N-[3-(4-heptynyloxy)phenyl]methyl-2-aminonicotinic acid amide,
N-[3-(5-heptynyloxy)phenyl]methyl-2-aminonicotinic acid amide,
N-[3-(6-heptynyloxy)phenyl]methyl-2-aminonicotinic acid amide,
N-[3-(2-heptynyloxy)phenyl]methyl-2-amino-6-fluoronicotinic acid amide,
N-[3-(3-heptynyloxy)phenyl]methyl-2-amino-6-fluoronicotinic acid amide,
N-[3-(4-heptynyioxy)phenyl]methyl-2-amino-6-fluoronicotinic acid amide,
N-[3-(5-heptynyloxy)phenyl]methyl-2-amino-6-fluoronicotinic acid amide,
N-[3-(6-heptynyloxy)phenyl]methyl-2-amino-6-fluoronicotinic acid amide,
N-[3-(2-heptynyloxy)phenyl]methyl-2-amino-6-methylnicotinic acid amide
N-[3-(3-heptynyl)oxyphenyl]methyl-2-amino-6-methylnicotinic acid amide,
N-[3-(4-heptynyloxy)phenyl]methyl-2-amino-6-methylnicotinic acid amide,
N-[3-(5-heptynyloxy)phenyl]methyl-2-amino-6-methylnicotinic acid amide,
N-[3-(6-heptynyloxy)phenyl]methyl-2-amino-6-methylnicotinic acid amide,
N-[3-(2-heptynyloxy)phenyl]methyl-2-amino-6-methoxymethylnicotinic acid amide,
N-[3-(3-heptynyloxy)phenyl]methyl-2-amino-6-methoxymethylnicotinic acid amide,
N-[3-(4-heptynyloxy)phenyl]methyl-2-amino-6-methoxymethylnicotinic acid amide, N-[3-(5-heptynyloxy)phenyl]methyl-2-amino-6-methoxymethylnicotinic acid amide, and
N-[3-(6-heptynyloxy)phenyl]methyl-2-amino-6-methoxymethylnicotinic acid amide.

N-(4-propylphenyl)methyl-2-aminonicotinic acid amide,
N-(4-butylphenyl)methyl-2-aminonicotinic acid amide,
N-(4-pentylphenyl)methyl-2-aminonicotinic acid amide,
N-(4-hexylphenyl)methyl-2-aminonicotinic acid amide,
N-(4-peptylphenyl)methyl-2-aminonicotinic acid amide,
N-(4-propylphenyl)methyl-2-amino-6-fluoronicotinic acid amide,
N-(4-butylphenyl)methyl-2-amino-6-fluoronicotinic acid amide,
N-(4-pentylphenyl)methyl-2-amino-6-fluoronicotinic acid amide,
N-(4-hexylphenyl)methyl-2-amino-6-fluoronicotinic acid amide,
N-(4-peptylphenyl)methyl-2-amino-6-fluoronicotinic acid amide,
N-(4-propylphenyl)methyl-2-amino-6-methylnicotinic acid amide,
N-(4-butylphenyl)methyl-2-amino-6-methylnicotinic acid amide,
N-(4-pentylphenyl)methyl-2-amino-6-methylnicotinic acid amide,
N-(4-hexylphenyl)methyl-2-amino-6-methylnicotinic acid amide,
N-(4-peptylphenyl)methyl-2-amino-6-methylnicotinic acid amide,
N-(4-propylphenyl)methyl-2-amino-6-methoxymethylnicotinic acid amide,
N-(4-butylphenyl)methyl-2-amino-6-methoxymethylnicotinic acid amide,
N-(4-pentylphenyl)methyl-2-amino-6-methoxymethylnicotinic acid amide,
N-(4-hexylphenyl)methyl-2-amino-6-methoxymethylnicotinic acid amide and
N-(4-peptylphenyl)methyl-2-amino-6-methoxymethylnicotinic acid amide.

In the present specification, as a matter of convenience, the structural formulae of compounds may indicate certain isomers. However, the present invention includes all active isomers such as geometric isomers, optical isomers, steric isomers and tautomers and isomeric mixtures, which are generated due to the structures of compounds. Thus, the present invention is not limited to the descriptions of such convenient formulae. The present invention may include either such an isomer or such a mixture. Accordingly, the compound of the present invention may have an asymmetric carbon atom in a molecule thereof, and optically active compounds and racemic compounds may be present. However, in the present invention, such optically active compounds or racemic compounds is not particularly limited, and all these cases are included in the present invention.

The present compound can be produced by the production method described in International Patent Application No. WO2005/033079, or by the after-mentioned (production method 1) to (production method 5).

### (Production method 1)

Among the present compounds, compound (4) wherein Z represents an oxygen atom can be produced by allowing compound (2) or a salt thereof (a hydrochloride, for example) to react with compound (3) in the presence of a dehydrating condensing reagent, 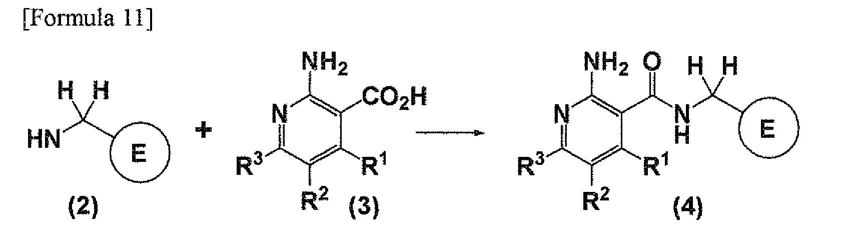 wherein R¹ R², R³ and E have the same meanings as defined above.

This reaction is generally carried out in the presence of a solvent.

Examples of a solvent used in the reaction include: ethers such as tetrahydrofuran (hereinafter referred to as THF, at times), ethylene glycol dimethyl ether, or tert-butyl methyl ether (hereinafter referred to as MTBE, at times); aliphatic hydrocarbons such as hexane, heptane, or octane; aromatic hydrocarbons such as toluene or xylene; halogenated hydrocarbons such as chlorobenzene; esters such as butyl acetate or ethyl acetate; nitriles such as acetonitrile; acid amides such as N,N-dimethylformamide (hereinafter referred to as DMF, at times); sulfoxides such as dimethyl sulfoxide (hereinafter referred to as DMSO, at times); and the mixtures thereof

Examples of a dehydrating condensing reagent used in the reaction include: carbodiimides such as 1-ethyl-3-(3-dimethylaminopropyl)carbodiimide hydrochloride (hereinafter referred to as WSC) and 1,3-dicyclohexylcarbodiimide; and phosphonium salts such as (benzotriazol-1-yloxy)tris(dimethylamino)phosphonium hexafluorophosphate (hereinafter referred to as a "BOP reagent").

Compound (3) is generally used in an amount of 1 to 3 moles with respect to 1 mole of compound (2). Such a dehydrating condensing reagent is generally used in an amount of 1 to 5 moles with respect to 1 mole of compound (2).

The reaction temperature applied to the reaction is generally between 0°C and 140°C. The reaction time is generally between 1 and 24 hours.

After completion of the reaction, the reaction mixture is filtrated, and the filtrate is then extracted with an organic solvent. The organic layer is dried and is then concentrated, so as to isolate compound (4). The isolated compound (4) may be subjected to chromatography, recrystallization, etc., so that it can be further purified.

### (Production method 2)

Among the present compounds, compound (6) wherein Z represents a sulfur atom can be produced by allowing the compound (4) wherein Z represents an oxygen atom to react with 2,4-bis(4-methoxyphenyl)-1,3-dithia-2,4-diphosphetan-2,4-disulfide (hereinafter referred to as a "Lawesson's reagent") or a sulfurizing reagent such as phosphorus pentasulfide, 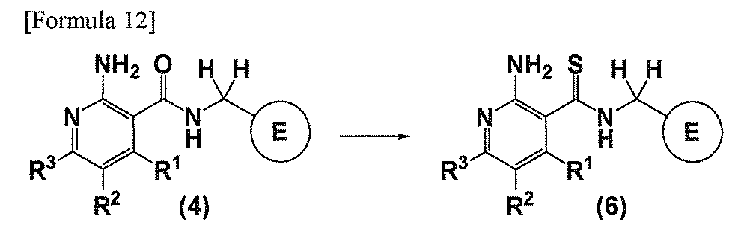 wherein R¹ R², R³ and E have the same meanings as defined above.

This reaction is generally carried out in the presence of a solvent.

Examples of a solvent used in the reaction include: ethers such as THE, ethylene glycol dimethyl ether, or MTBE; aliphatic hydrocarbons such as hexane, heptane, or octane; aromatic hydrocarbons such as toluene or xylene; halogenated hydrocarbons such as chlorobenzene; organic nitrides such as acetonitrile or butyronitrile; sulfoxides such as dimethyl sulfoxide; and the mixtures thereof

The Lawesson's reagent is generally used in an amount of 1 to 2 moles with respect to 1 mole of compound (4).

The reaction temperature applied to the reaction is generally between 25 °C and 150°C. The reaction time is generally between 0.1 and 24 hours.

After completion of the reaction, the reaction mixture is extracted with an organic solvent. Thereafter, the organic layer is dried, and it is then concentrated, so as to isolate compound (6). The isolated compound (6) may be subjected to chromatography, recrystallization, etc., so that it can be further purified.

### (Production method 3)

Among the present compounds, compound (9) can be produced by allowing compound (7) to react with compound (8) in the presence of a base, 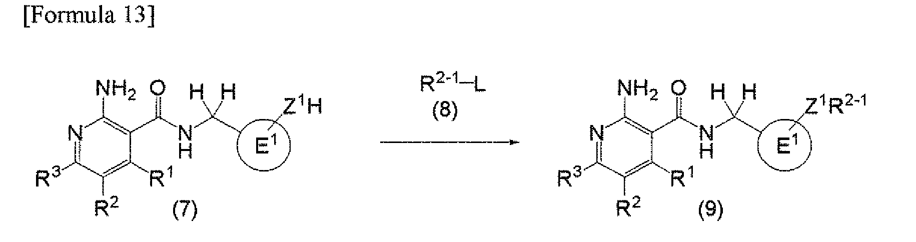 wherein R¹ R² and R³ have the same meanings as defined above; E¹ represents a furry group, a thienyl group, a pyrrolyl group, a tetrazolyl group, a thiazolyl group, a pyrazolyl group, or a phenyl group wherein E¹ may have one substituent selected from the aforementioned substituent group a-1 and substituent group a-2; L represents a chlorine atom, a bromine atom, an iodine atom, a methanesulfonyloxy group, a trifluoromethanesulfonyloxy group or a p-toluenesulfonyloxy group; R²⁻¹ represents a substituent selected from the following substituent group e-1 and substituent group e-2:

### [Substituent group e-1]

C1-8 alkyl group, C3-9 alkenyl group, C3-9 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, and 5- to 10-membered heterocylic C1-6 alkyl group; and

### [Substituent group e-2]

C1-8 alkyl group, C3-9 alkenyl group, C3-9 alkynyl group, C3-8 cycloalkyl group, 5- to 10-membered heterocyclic group, C3-8 cycloalkyl C1-6 alkyl group, C6-10 aryl C1-6 alkyl group, and 5- to 10-membered heterocylic C1-6 alkyl group;
wherein each group described in the substituent group e-2 has one to three substituents selected from the following substituent group f:

### [Substituent group f]

halogen atom, cyano group, C1-6 alkyl group, C1-6 alkoxy group, and trifluoromethyl group.

This reaction is generally carried out in the presence of a solvent.

Examples of a solvent used in the reaction include: ethers such as THE, ethylene glycol dimethyl ether, or MTBE; aromatic hydrocarbons such as toluene or xylene; halogenated hydrocarbons such as chlorobenzene; nitriles such as acetonitrile; acid amides such as DMF; sulfoxides such as dimethyl sulfoxide; ketones such as acetone, methyl ethyl ketone, or methyl isobutyl ketone; water; and the mixtures thereof.

Examples of a base used in the reaction include: alkali metal carbonates such as sodium carbonate, potassium carbonate, or cesium carbonate; alkali metal hydroxides such as sodium hydroxide; and alkali metal hydrides such as sodium hydride.

Compound (8) is generally used in an amount of 1 to 10 moles with respect to 1 mole of compound (7), and a base is generally used in an amount of 1 to 5 moles with respect to 1 mole of compound (7).

The reaction temperature applied to the reaction is generally between -20°C and 100°C. The reaction time is generally between 0.1 and 24 hours.

After completion of the reaction, water is added to the reaction mixture. When a solid is precipitated, it is filtrated to isolate compound (9). When such a solid is not precipitated, the reaction mixture is extracted with an organic solvent, and the organic layer is then dried and concentrated, so as to isolate compound (9). The isolated compound (9) may be subjected to chromatography, recrystallization, etc., so that the organic layer can be further purified.

### (Production method 4)

The compound (4) can also be produced by the following scheme: 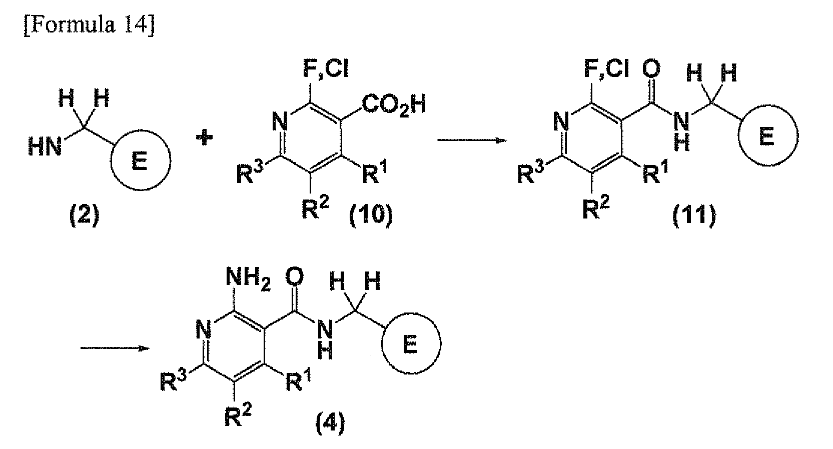 wherein R¹ R², R³ and E have the same meanings as defined above.

### (Step 5-1)

Compound (11) can be produced by allowing compound (2) or a salt thereof (a hydrochloride, for example) to react with compound (10) according to the method described in production method 1.

### (Step 5-2)

Compound (4) can be produced by allowing compound (11) to react with ammonia.

This reaction is generally carried out in the presence of a solvent.

Examples of a solvent used in the reaction include: ethers such as THF, ethylene glycol dimethyl ether, or MTBE; aromatic hydrocarbons such as toluene or xylene; halogenated hydrocarbons such as chlorobenzene; nitriles such as acetonitrile; acid amides such as DMF; sulfoxides such as dimethyl sulfoxide; alcohols such as methanol, ethanol, or 1,1-dimethylethanol; water; and the mixtures thereof.

Ammonia is generally used in an amount ranging from 1 mole to an excessive amount with respect to 1 mole of compound (11).

The reaction temperature applied to the reaction is generally between -10°C and 250°C. The reaction time is generally between 0.1 and 24 hours.

After completion of the reaction, water is added to the reaction mixture. When a solid is precipitated, it is filtrated to isolate compound (4). When such a solid is not precipitated, the reaction mixture is extracted with an organic solvent, and the organic layer is then dried and concentrated, so as to isolate compound (4). The isolated compound (4) may be subjected to chromatography, recrystallization, etc., so that the organic layer can be further purified.

### (Production method 5)

The compound (4) can also be produced by the following scheme: 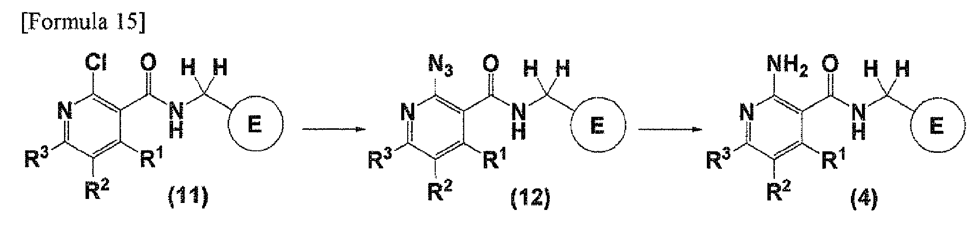 wherein R¹, R², R³ and E have the same meanings as defined above.

### (Step 5-1)

Compound (12) can be produced by allowing compound (11) to react with an azide compound.

This reaction is generally carried out in the presence of a solvent.

Examples of a solvent used in the reaction include: ethers such as THF, ethylene glycol dimethyl ether, or MTBE; aromatic hydrocarbons such as toluene or xylene; halogenated hydrocarbons such as chlorobenzene; nitriles such as acetonitrile; acid amides such as DMF; sulfoxides such as dimethyl sulfoxide; water; and the mixtures thereof.

As an azide compound, sodium azide, trimethylsilylazide, etc. can be used.

Such an azide compound is generally used in an amount of 1 mole to in an excessive amount with respect to 1 mole of compound (11).

The reaction temperature applied to the reaction is generally between 50°C and 150°C. The reaction time is generally between 0.1 and 24 hours.

After completion of the reaction, water is added to the reaction mixture. When a solid is precipitated, it is filtrated to isolate compound (12). When such a solid is not precipitated, the reaction mixture is extracted with an organic solvent, and the organic layer is then dried and concentrated, so as to isolate compound (12). The isolated compound (12) may be subjected to chromatography, recrystallization, etc., so that it can be further purified.

### (Step 5-2)

The compound (4) can be produced by allowing the compound (12) to react with a reducing reagent.

This reaction is generally carried out in the presence of a solvent.

Examples of a solvent used in the reaction include: ethers such as THF, ethylene glycol dimethyl ether, or MTBE; aromatic hydrocarbons such as toluene or xylene; halogenated hydrocarbons such as chlorobenzene; nitriles such as acetonitrile; acid amides such as DMF; sulfoxides such as dimethyl sulfoxide; water; and the mixtures thereof.

A reducing reagent is generally used in an amount ranging from 1 mole to an excessive amount with respect to 1 mole of compound (12).

Examples of such a reducing reagent include tin chloride, hydrogen + palladium catalyst, and triphenylphosphine + water.

The reaction temperature applied to the reaction is generally between -20°C and 150°C. The reaction time is generally between 0.1 and 24 hours.

After completion of the reaction, water is added to the reaction mixture. When a solid is precipitated, it is filtrated to isolate compound (4). When such a solid is not precipitated, the reaction mixture is extracted with an organic solvent, and the organic layer is then dried and concentrated, so as to isolate compound (4). The isolated compound (4) may be subjected to chromatography, recrystallization, etc., so that it can be further purified.

In the case of the agricultural composition of the present invention, in general, the present compound is mixed with a liquid carrier, a solid carrier, a gas carrier, a surfactants, etc. Thereafter, formulation auxiliary reagents such as a binder or a thickener are added thereto, as necessary, so that the mixture can be formulated into a wettable powder, a granulated wettable powder, a flowable reagent, a granule, a dry flowable reagent, an emulsion, an aqueous liquid reagent, an oil reagent, a smoking reagent, an aerosol, a microcapsule, etc., and the thus produced formulations can be then used. The present compound is comprised in such a formulation at a weight ratio generally between 0.1% and 99%, and preferably between 0.2% and 90%.

Examples of a liquid carrier used in formulation include water, alcohols (e.g. methanol, ethanol, 1-propanol, 2-propanol, ethylene glycol, etc.), ketones (e.g. acetone, methyl ethyl ketone, etc.), ethers (e.g. dioxane, tetrahydrofuran, ethylene glycol monomethyl ether, diethylene glycol monomethyl ether, propylene glycol monomethyl ether, etc.), aliphatic hydrocarbons (e.g. hexane, octane, cyclohexane, coal oil, fuel oil, machine oil, etc.), aromatic hydrocarbons (e.g. benzene, toluene, xylene, solvent naphta, methylnaphthalene, etc.), halogenated hydrocarbons (e.g. dichloromethane, chloroform, carbon tetrachloride, etc.), acid amides (e.g. dimethylformamide, dimethylacetamide, N-methylpyrrolidone, etc.), esters (e.g. ethyl acetate, butyl acetate, fatty acid glycerin ester, etc.), and nitriles (e.g. acetonitrile, propionitrile, etc.). Two or more types of such liquid carriers can be mixed at an appropriate ratio and can be then used.

Examples of a solid carrier used in formulation include vegetable powders (e.g. soybean powder, tobacco powder, wheat flour, wood flour, etc.), mineral powders (e.g. clays such as kaoline, bentonite, acid clay, or clay; talcs such as talcum powder or pyrophyllite powder; silicas such as diatomaceous earth or mica powder; etc.), alumina, sulfur powder, activated carbon, sugars (e.g. lactose, glucose, etc.), inorganic salts (e.g. calcium carbonate, sodium bicarbonate, etc.), and a glass hollow body (produced by subjecting a natural holohyaline to a burning process and then encapsulating air bubbles therein). Two or more types of such solid carriers can be mixed at an appropriate ratio and can be then used. Such liquid carrier or solid carrier is used at a ratio generally between 1% to 99% by weight, and preferably between approximately 10% and 99% by weight, based on the total weight of a pharmaceutical.

As an emulsifier, a dispersant, a spreader, a penetrant, a moisturizer, or the like used in the formulation, a surfactant is generally used. Examples of such a surfactant include: anionic surfactants such as alkyl sulfate ester salts, alkylaryl sulfonates, dialkyl sulfosuccinates, polyoxyethylene alkyl aryl ether phosphates, lignosulfonates, or naphthalenesulfonate formamide polycondensates; and nonionic surfactants such as a polyoxyethylene alkyl ether, a polyoxyethylene alkyl aryl ether, a polyoxyethylene alkyl polyoxy propylene block copolymer, or a sorbitan fatty acid ester. These surfactants can also be used in combination of two or more types. Such a surfactant is used at a ratio generally between 0.1% and 50% by weight, and preferably between approximately 0.1% and 25% by weight, based on the total weight of a pharmaceutical.

Examples of a binder or a thickener include dextrin, sodium salts of carboxymethyl cellulose, a polycarboxylic acid polymer, polyvinylpyrrolidone, polyvinyl alcohol, sodium lignosulfonate, calcium lignosulfonate, sodium polyacrylate, gum Arabic, sodium alginate, mannitol, sorbitol, bentonite mineral matter, polyacrylic acid and a derivative thereof, sodium salts of carboxymethyl cellulose, white carbon, and natural sugar derivatives (e.g. xanthan gum, Cyamoposis Gum, etc.).

Moreover, the agricultural composition of the present invention can be mixed with other types of disinfectants, insecticides, acaricides, nematicides, herbicides, plant growth regulators, fertilizers, or soil improvers, and they can be used. Otherwise, the present agricultural composition can be used together with the aforementioned reagents, without mixing with them.

Examples of such other disinfectants include: azole disinfectant compounds such as propiconazole, prothioconazole, triadimenol, prochloraz, penconazole, tebuconazole, flusilazole, diniconazole, bromuconazole, epoxiconazole, difenoconazole, cyproconazole, metconazole, triflumizole, tetraconazole, microbutanil, fenbuconazole, hexaconazole, fluquinconazole, triticonazole, bitertanol, imazalil, flutriafol, simeconazole, or ipconazole; cyclic amine disinfectant compounds such as fenpropimorph, tridemorph, or fenprapiclin; benzimidazole disinfectant compounds such as carbendazim, benomyl, thiabendazole, or thiophanate-methyl; procymidone; cyprodinil; pyrimethanil; diethofencarb; thiuram; fluaziriam, mancozeb; iprodione; vinclozolin, chlorothalonil; captan; mepanipyrim, fenpiclonil, fludioxonil; dichlofluanid; folpet; kresoxim-methyl; azoxystrobin; trifloxystrobin; fluoxastrobin; picoxystrobin; pyraclostrobin; dimoxystrobin; pyribencarb; metominostrobin; enestroburin; spiroxamine; quinoxyfen; fenhexamid; famoxadone; fenamidone; zoxamide; etaboxam; amisulbrom; iprovalicarb; benthiavalicarb; cyazofamid; mandipropamid; boscalid; penthiopyrad; metrafenone; fluopyran; bixafen; cyflufenamid; proquinazid; orysastrobin; furametpyr; thifluzamide; mepronil; flutolanil; flusulfamide; fluopicolide; metalaxyl M; kiralaxyl; fosetyl; cymoxanil; pencycuron; tolclofos methyl; carpropamid; diclocymet; fenoxanil; tricyclazole; pyroquilon; probenazole; isotianil; tiadinil; tebufroquin; diclomezine; kasugamycin; ferimzone; fthalide; validamycin; hydroxyisoxazole; iminoctadin-acetate; isoprothiolane; oxolinic acid; oxytetracycline; streptomycin; basic copper chloride; cupric hydroxide; basic copper sulfate; organic copper; and sulfur.

Examples of other insecticides include the following compounds:

### (1) Organophosphorus compounds

acephate, Aluminium phosphide, butathiofos, cadusafos, chlorethoxyfos, chlorfenvinphos, chlorpyrifos, chlorpyrifos-methyl, cyanophos: CYAP, diazinon, DCIP(dichlorodiisopropyl ether), dichlofenthion: ECP, dichlorvos: DDVP, dimethoate, dimethylvinphos, disulfoton, EPN, ethion, ethoprophos, etrimfos, fenthion: MPP, fenitrothion: MEP, fosthiazate, formothion, Hydrogen phosphide, isofenphos, isoxathion, malathion, mesulfenfos, methidathion: DMTP, monocrotophos, naled: BRP, oxydeprofos: ESP, parathion, phosalone, phosmet: PMP, pirimiphos-methyl, pyridafenthion, quinalphos, phenthoate: PAP, profenofos, propaphos, prothiofos, pyraclorfos, salithion, sulprofos, tebupirimfos, temephos, tetrachlorvinphos, terbufos, thiometon, trichlorphon: DEP, vamidothion, phorate, cadusafos, etc.;

### (2) Carbamate compounds

alanycarb, bendiocarb, benfuracarb, BPMC, carbaryl, carbofuran, carbosulfan, cloethocarb, ethiofencarb, fenobucarb, fenothiocarb, fenoxycarb, furathiocarb, isoprocarb: MIPC, metolcarb, methomyl, methiocarb, NAC, oxamyl, pirimicarb, propoxur: PHC, XMC, thiodicarb, xylylcarb, aldicarb, etc.;

### (3) Synthetic pyrethroid compounds

acrinathrin, allethrin, benfluthrin, beta-cyfluthrin, bifenthrin, cycloprothrin, cyfluthrin, cyhalothrin, cypermethrin, deltamethrin, esfenvalerate, ethofenprox, fenpropathrin, fenvalerate, flucythrinate, flufenoprox, flumethrin, fluvalinate, halfenprox, imiprothrin, permethrin, prallethrin, pyrethrins, resmethrin, sigma-cypermethrin, silafluofen, tefluthrin, tralomethrin, transfluthrin, tetramethrin, phenothrin, cyphenothrin, alpha-cypermethrin, zeta-cypermethrin, lambda-cyhalothrin, furamethrin, tau-fluvalinate, 2,3,5,6-tetrafluoro-4-(methoxymethyl)benzyl(EZ)-(1RS, 3RS; 1RS, 3SR)-2,2-dimethyl-3-prop-1-enyl cyclopropane carboxylate, 2,3,5,6-tetrafluoro-4-methylbenzyl(EZ)-(1RS, 3RS; 1RS, 3SR)-2,2-dimethyl-3-prop-1-enyl cyclopropane carboxylate, 2,3,5,6-tetrafluoro-4-(methoxymethyl)benzyl(1RS, 3RS; 1RS, 3SR)-2,2-dimethyl-3-(2-methyl-1-propenyl) cyclopropane carboxylate, etc.;

### (4) Nereistoxin compounds

cartap, bensultap, thiocyclam, monosultap, bisultap, etc.;

### (5) Neonicotinoid compounds

imidacloprid, nitenpyram, acetamiprid, thiamethoxam, thiacloprid, dinotefuran, clothianidin, etc.;

### (6) Benzoylurea compounds

chlorfluazuron, bistrifluron, diafenthiuron, diflubenzuron, fluazuron, flucycloxuron, flufenoxuron, hexaflumuron, lufenuron, novaluron, noviflumuron, teflubenzuron, triflumuron, triazlon, etc.;

### (7) Phenylpyrazole compounds

acetoprole, ethiprole, fipronil, vaniliprole, pyriprole, pyrafluprole, etc.;

### (8) Bt toxin insecticides

Fresh spores derived from *Bacillus thuringiensis,* crystalline toxins generated therefrom, and the mixtures thereof;

### (9) Hydrazine compounds

chromafenozide, halofenozide, methoxyfenozide, tebufenozide, etc.;

### (10) Organochlorine compounds

aldrin, dieldrin, dienochlor, endosulfan, methoxychlor, etc.;

### (11) Natural insecticides

machine oil and nicotine-sulfate, and

### (12) Other insecticides

avermectin-B, bromopropylate, buprofezin, chlorphenapyr, cyromazine, D-D(1, 3-Dichloropropene), emamectin-benzoate, fenazaquin, flupyrazofos, hydroprene, methoprene, indoxacarb, metoxadiazone, milbemycin-A, pymetrozine, pyridalyl, pyriproxyfen, spinosad, sulfluramid, tolfenpyrad, triazamate, flubendiamide, lepimectin, Arsenic acid, benclothiaz, Calcium cyanamide, Calcium polysulfide, chlordane, DDT, DSP, fluferierim, flonicamid, flurimfen, formetanate, metam-ammonium, metam-sodium, Methyl bromide, nidinotefuran, Potassium oleate, protrifenbute, spiromesifen, Sulfur, metaflumizone, spirotetramat, pyrifluquinazone, spinetoram, and chlorantraniliprole.

Examples of other types of acaricides (acarcidal active ingredients) include acequinocyl, amitraz, benzoximate, bifenaate, bromopropylate, chinomethionat, chlorobenzilate, CPCBS (chlorfenson), clofentezine, cyflumetofen, kelthane (dicofol), etoxazole, fenbutatin oxide, fenothiocarb, fenpyroximate, fluacrypyrim, fluproxyfen, hexythiazox, propargite: BPPS, polynactins, pyridaben, Pyrimidifen, tebufenpyrad, tetradifon, spirodiclofen, spiromesifen, spirotetramat, amidoflumet, and cyenopyrafen.

Examples of such other types of nematicides (nematicidal active ingredients) include DCIP, fosthiazate, levamisol hydrochloride, methylisothiocyanate; moraltel tartarate, and imicyafos.

The weight ratio between the agricultural composition of the present invention and a disinfectant mixed with or used together with the aforementioned agricultural composition is generally between 1 : 0.01 and 1 : 100, and preferably between 1 : 0.1 and 1 : 10, in terms of active ingredient.
The weight ratio between the agricultural composition of the present invention and an insecticide mixed with or used together with the aforementioned agricultural composition is generally between 1 : 0.01 and 1 : 100, and preferably between 1 : 0.1 and 1 : 10, in terms of active ingredient.
The weight ratio between the agricultural composition of the present invention and an acaricide mixed with or used together with the aforementioned agricultural composition is generally between 1 : 0.01 and 1 : 100, and preferably between 1 : 0.1 and 1 : 10, in terms of active ingredient.
The weight ratio between the agricultural composition of the present invention and a nematicide mixed with or used together with the aforementioned agricultural composition is generally between 1 : 0.01 and 1 : 100, and preferably between 1 : 0.1 and 1 : 10, in terms of active ingredient.
The weight ratio between the agricultural composition of the present invention and a herbicide mixed with or used together with the aforementioned agricultural composition is generally between 1 : 0.01 and 1 : 100, and preferably between 1 : 0.1 and 1 : 10, in terms of active ingredient.
The weight ratio between the agricultural composition of the present invention and a plant growth regulator mixed with or used together with the aforementioned agricultural composition is generally between 1 : 0.00001 and 1 : 100, and preferably between 1 : 0.0001 and 1 : 1, in terms of active ingredient.
The weight ratio between the agricultural composition of the present invention and a fertilizer or soil improver mixed with or used together with the aforementioned agricultural composition is generally between 1 : 0.1 and 1 : 1000, and preferably between 1 : 1 and 1 : 200.

The type of a method of applying the agricultural composition of the present invention is not particularly limited, as long as the agricultural composition of the present invention can be substantially applied by the method. Examples of such an application method: include application of the present agricultural composition to the plant bodies of useful plants, such as foliage application; application of the present agricultural composition to a field in which useful plants are planted or are to be planted, such as a soil treatment; and application of the present agricultural composition to seeds, such as seed sterilization.

The applied amount of the agricultural composition of the present invention differs depending on a climatic condition, a dosage form, an application period, an application method, an application site, a target disease, target crops, etc. In terms of the weight of the present compound contained in the agricultural composition of the present invention, the applied amount is generally between 1 and 500 g, and preferably 2 and 200 g, per 10 ares. An emulsion, a wettable powder, a suspension, etc. are generally diluted with water for application. In such a case, the concentration of the present compound after dilution is generally between 0.0005% and 2 % by weight, and preferably between 0.005% and 1% by weight. On the other hand, a powder, a granule, etc. are directly applied without being diluted. When the agricultural composition of the present invention is applied to seeds, the present compound contained in the agricultural composition of the present invention is applied within a range generally between 0.001 and 100 g, and preferably between 0.01 and 50 g, per kg of seeds.

The agricultural composition of the present invention can be used as a reagent for controlling plant diseases caused by plant pathogenic microbes in agricultural lands such as fields, paddy fields, lawns, or orchards. The agricultural composition of the present invention is able to control or prevent plant diseases caused by plant pathogenic microbes in agricultural lands for cultivating the following "crops."

Examples of the crops are as follows:
crops: corn, rice, wheat, barley, rye, oat, sorghum, cotton, soybean, peanut, buckwheat, beet, rapeseed, sunflower, sugar cane, tobacco, etc.; vegetables: solanaceous vegetables (eggplant, tomato, pimento, pepper, potato, etc.), cucurbitaceous vegetables (cucumber, pumpkin, zucchini, water melon, melon, etc.), cruciferous vegetables (Japanese radish, white turnip, horseradish, kohlrabi, Chinese cabbage, cabbage, leaf mustard, broccoli, cauliflower, etc.), asteraceous vegetables (burdock, crown daisy, artichoke, lettuce, etc.), liliaceous vegetables (green onion, onion, garlic, and asparagus), ammiaceous vegetables (carrot, parsley, celery, parsnip, etc.), chenopodiaceous vegetables (spinach, Swiss chard, etc.), lamiaceous vegetables (Perilla frutescens, mint, basil, etc.), strawberry, sweet potato, Dioscorea japonica, colocasia, etc.,
flowers;
foliage plants;
fruits: pomaceous fruits (apple, pear, Japanese pear, Chinese quince, quince, etc.), stone fleshy fruits (peach, plum, nectarine, Prunus mume, cherry fruit, apricot, prune, etc.), citrus fruits (Citrus unshiu, orange, lemon, rime, grapefruit, etc.), nuts (chestnuts, walnuts, hazelnuts, almond, pistachio, cashew nuts, macadamia nuts, etc.), berries (blueberry, cranberry, blackberry, raspberry, etc.), grape, kaki fruit, olive, Japanese plum, banana, coffee, date palm, coconuts, etc.,
trees other than fruit trees; tea, mulberry, flowering plant, roadside trees (ash, birch, dogwood, Eucalyptus, Ginkgo biloba, lilac, maple, Quercus, poplar, Judas tree, Liquidambar formosana, plane tree, zelkova, Japanese arborvitae, fir wood, hemlock, juniper, Pinus, Picea, and Taxus cuspidate), etc.

The aforementioned "crops" include crops, to which resistance to HPPD inhibitors such as isaxaflutole, ALS inhibitors such as imazethapyr or thifensulfuron-methyl, EPSP synthetase inhibitors, glutamine synthetase inhibitors, and herbicides such as bromoxynil, has been imparted by a classical breeding method or genetic recombination.

Examples of "crops" to which resistance is imparted by a classical breeding method include Clearfield (registered trademark) canola that is resistant to imidazolinone herbicides such as imazethapyr, and STS soybean that is resistant to sulfonylurea ALS inhibitory herbicides such as thifensulfuron-methyl. In addition, examples of "crops" to which resistance is imparted by genetic recombination include corn varieties resistant to glyphosate or glufosinate. Such corn varieties have already been on the market with product names such as "RoundupReady (registered trademark)" and "LibertyLink (registered trademark)."

The aforementioned "crops" include genetically recombinant crops produced using such genetic recombination techniques, which, for example, are able to synthesize selective toxins as known in genus Bacillus.
Examples of toxins expressed in such genetically recombinant crops include: insecticidal proteins derived from *Bacillus cereus* or *Bacillus popilliae*; δ-endotoxins such as Cry1Ab, Cry1Ac, Cry1F, Cry1Fa2, Cry2Ab, Cry3A, Cry3Bb1 or Cry9C, derived from *Bacillus thuringiensis*; insecticidal proteins such as VIP1, VIP2, VIP3, or VIP3A; insecticidal proteins derived from nematodes; toxins generated by animals, such as scorpion toxin, spider toxin, bee toxin, or insect-specific neurotoxins; mold fungi toxins; plant lectin; agglutinin; protease inhibitors such as a trypsin inhibitor, a serine protease inhibitor, patatin, cystatin, or a papain inhibitor; ribosome-inactivating proteins (RIP) such as lycine, corn-RIP, abrin, luffin, saporin, or briodin; steroid-metabolizing enzymes such as 3-hydroxysteroid oxidase, ecdysteroid-UDP- glucosyl transferase, or cholesterol oxidase; an ecdysone inhibitor; HMG-COA reductase; ion channel inhibitors such as a sodium channel inhibitor or calcium channel inhibitor; juvenile hormone esterase; a diuretic hormone receptor; stilbene synthase; bibenzyl synthase; chitinase; and glucanase.

Moreover, toxins expressed in such genetically recombinant crops also include: hybrid toxins of δ-endotoxin proteins such as Cry1Ab, Cry1Ac, Cry1F, Cry1Fa2, Cry2Ab, Cry3A, Cry3Bb1 or Cry9C, and insecticidal proteins such as VIP1, VIP2, VIP3 or VIP3A; partially deleted toxins; and modified toxins. Such hybrid toxins are produced from a new combination of the different domains of such proteins, using a genetic recombination technique. As a partially deleted toxin, Cry1Ab comprising a deletion of a portion of an amino acid sequence has been known. A modified toxin is produced by substitution of one or multiple amino acids of natural toxins.
Examples of such toxins and recombinant plants capable of synthesizing such toxins are described in EP-A-0 374 753, WO 93/07278, WO 95/34656, EP-A-0 427 529, EP-A-451 878, WO 03/052073, etc.
Toxins contained in such recombinant plants are able to impart resistance particularly to insect pests belonging to Coleoptera, Diptera and Lepidoptera, to the plants.

Furthermore, genetically recombinant plants, which comprise one or multiple insecticidal pest-resistant genes and which express one or multiple toxins, have already been known, and some of such genetically recombinant plants have already been on the market. Examples of such genetically recombinant plants include YieldGard (registered trademark) (a corn variety for expressing Cry1Ab toxin), YieldGard Rootworm (registered trademark) (a corn variety for expressing Cry3Bb1 toxin), YieldGard Plus (registered trademark) (a corn variety for expressing Cry1Ab and Cry3Bb1 toxins), Herculex (registered trademark) (a corn variety for expressing phosphinotricine N-acetyl transferase (PAT) so as to impart resistance to Cry1Fa2 toxin and gluphosinate), NuCOTN33B (a cotton variety for expressing Cry1Ac toxin), Bollgard I (registered trademark) (a cotton variety for expressing Cry1Ac toxin), Bollgard II (registered trademark) (a cotton variety for expressing Cry1Ac and Cry2Ab toxins), VIPCOT (registered trademark) (a cotton variety for expressing VIP toxin), NewLeaf (registered trademark) (a potato variety for expressing Cry3A toxin), NatureGard (registered trademark) Agrisure (registered trademark) GT Advantage (GA21 glyphosate-resistant trait), Agrisure (registered trademark) CB Advantage (Bt11 corn borer (CB) trait), and Protecta (registered trademark).

The aforementioned "crops" also include crops produced using a genetic recombinant technique, which have ability to generate antipathogenic substances having selective action.
A PR protein and the like have been known as such antipathogenic substances (PRPs, EP-A-0 392 225). Such antipathogenic substances and genetically recombinant crops that generate them are described in EP-A-0 392 225, WO 95/33818, EP-A-0 353 191, etc.
Examples of such antipathogenic substances expressed in genetically recombinant crops include: ion channel inhibitors such as a sodium channel inhibitor or a calcium channel inhibitor (KP1, KP4 and KP6 toxins, etc., which are produced by viruses, have been known); stilbene synthase; bibenzyl synthase; chitinase; glucanase; a PR protein; and antipathogenic substances generated by microorganisms, such as a peptide antibiotic, an antibiotic having a hetero ring, a protein factor associated with resistance to plant diseases (which is called a plant disease-resistant gene and is described in WO 03/000906).

Examples of plant diseases that can be controlled by the present invention include plant diseases caused by plant pathogenic microbes. More specific examples include the following plant diseases, but examples are not limited thereto.

Magnaporthe grisea, Cochliobolus miyabeanus, Rhizoctonia solani, Cribberella fujikuroi and Sclerophthora macrospora; Erysiphe graminis, Fusarium graminearum, F. avenacerum, F. culmorum, Microdochium nivale, Puccina striiformis, P. graminis, P. recondita, P. hordei, Typhula sp., Micronectriella nivalis, Ustilago tritici, U. nuda, Tilletia caries, Pseudocercosporella herpotrichoides, Rhynchosporium secalis, Septoria tritici, Leptosphaeria nodorum, Pyrenophora teres Drechsler, Gaeumannomyces graminis and Pyrenophoratriticirepentis; Diaporthe citri, Elsinoe fawcetti, Penicillium digitatum and P. italicum; Monilinia mali, Valsa ceratosperma, Podosphaera leucotricha, Alternaria alternata apple pathotype, Venturia inaequalis and Glomerella cingulata; Venturia nashicola, V. pirina, Alternaria alternata Japanese pear pathotype and Gymnosporangium haraeanum; Monilinia fructicola, Cladosporium carpophilum and Phomopsis sp.; Elsinoe ampelina, Glomerella cingulata, Uncinula necator, Phakopsora ampelopsidis, Guignardia bidwellii and Plasmopara viticola; Gloeosporium kaki, Cercospora kaki and Mycosphaerella nawae; Colletotrichum lagenarium, Sphaerotheca fuliginea, Mycosphaerella melonis, Fusarium oxysporum, Pseudoperonospora cubensis, Phytophthora sp. and Pythium sp.; Alternaria solani, Cladosporium fulvum and Phytophthora infestans; Phomopsis vexans and Erysiphe cichoracearum; Alternaria japonica, Cercosporella brassicae, Plasmodiophora brassicae and Peronospora parasitica; Puccinia allii, Cercospora kikuchii, Elsinoe glycines, Diaporthe phaseolorum var. sojae, Phakopsora pachyrhizi, Colletotrichum lindemthianum, Cercospora personata, Cercospora arachidicola and Sclerotium rolfsii; Erysiphe pisi; Alternaria solani, Phytophthora infestans, Verticillium albo-atrum, V dahliae and V. nigrescens; Sphaerotheca humuli; Exobasidium reticulatum; Elsinoe leucospila, Pestalotiopsis sp., Colletotrichum theae-sinensis, Alternaria longipes, Erysiphe cichoracearum, Colletotrichum tabacum, Peronospora tabacina and Phytophthora nicotianae; Cercospora beticola, Thanatephorus cucumeris, Thanatephorus cucumeris and Aphanomyces sochlioides; Diplocarpon rosae and Sphaerotheca pannosa; Septoria chrysanthemi-indici and Puccinia horiana; Botrytis cinerea, B. byssoidea, B. squamosa and Botrytis alli; Botrytis squamosa, Botrytis cinerea and Sclerotinia sclerotiorum; Alternaria brassicicola; Sclerotinia homeocarpa and Rhizoctonia solani; Hemileia vastatrix; and Mycosphaerella fijiensis and Mycosphaerella musicola.

### EXAMPLES

Next, the present invention will be more specifically described in the following examples such as production examples, formulation examples, and test examples. However, these examples are not intended to limit the scope of the present invention.

### Production example 1

1.80 g of 2-chloronicotinic acid chloride, 1.20 g of benzylamine, and 1.50 g of triethylamine were added to 5 ml of THF. The obtained mixture was stirred at a room temperature for 2 hours. Thereafter, the reaction mixture was concentrated, and the obtained residue was then subjected to silica gel column chromatography, so as to obtain 2.50 g of N-phenylmethyl-2-chloronicotinic acid amide.

### N-phenylmethyl-2-chloronicotinic acid amide

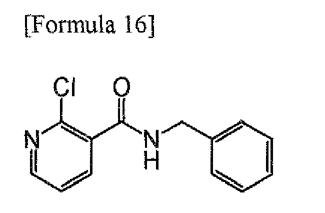

¹H-NMR (CDCl₃) δ: 4.62 (2H, d, J = 5.6 Hz), 6.95 (1H, br s), 7.25-7.40 (6H, m), 8.03 (1H, dd, J = 7.7, 1.9 Hz), 8.39 (1H, dd, J = 4.8, 1.9 Hz).
0.50 g of N-phenylmethyl-2-chloronicotinic acid amide and 1 ml of 1,4-dioxane were added to 4 ml of 28% aqueous ammonia. The obtained mixture was subjected to a microwave reactor (production name: Discover; manufactured by CEM) at 18 kgf/cm² at 140°C for 2 hours. After, water was added to the reaction mixture, it was then extracted with chloroform. The organic layer was concentrated under reduced pressure. The obtained residue was subjected to silica gel column chromatography, so as to obtain 0.36 g of N-phenylmethyl-2-aminonicotinic acid amide (hereinafter referred to as the present compound 1).

### The present compound 1

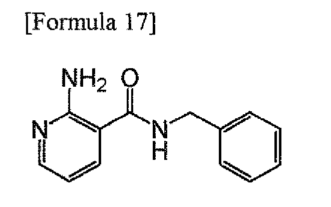

¹H-NMR (CDCl₃) δ: 4.59 (2H, d, J = 5.8 Hz), 6.27-6.48 (3H, br m), 6.56 (1H, dd, J = 7.7, 4.8 Hz), 7.28-7.38 (5H, m), 7.59 (1H, dd, J = 7.7, 1.7 Hz), 8.14 (1H, dd, J = 4.8, 1.7 Hz).

### Production example 2

A mixture of 0.27 g of 2-aminonicotinic acid, 0.30 g of 1-hydroxybenzotriazole, 0.40 g of WSC, 0.25 g of 4-fluorobenzylamine and 10 ml ofDMF was stirred at 100°C for 5 minutes, and then at a room temperature for 1 hour. After, water was added to the reaction mixture, it was then extracted with ethyl acetate. The extract was dried over magnesium sulfate, and it was then concentrated under reduced pressure. The obtained residue was subjected to silica gel column chromatography, so as to obtain 0.30 g of N-(4-fluorophenyl)methyl-2-aminonicotinic acid amide (hereinafter referred to as the present compound 2).

### The present compound 2

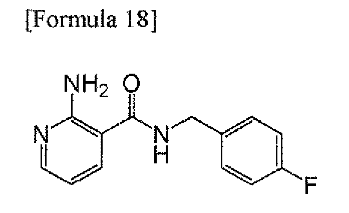

¹H-NMR (CDCl₃) δ: 4.57 (2H, d, J = 5.9 Hz), 6.29-6.41 (3H, br m), 6.58 (1H, dd, J = 7.7, 4.9 Hz), 7.01-7.08 (2H, m), 7.29-7.34 (2H, m), 7.59 (1H, dd, J = 7.7, 1.7 Hz), 8.16 (1H, dd, J = 4.9, 1.7 Hz).

### Production example 3

0.88 g of a BOP reagent and 0.40 g of triethylamine were successively added to a mixture of 0.28 g of 2-aminonicotinic acid, 0.40 g of 4-phenoxybenzylamine and 10 ml of DMF. The obtained mixture was stirred at a room temperature for 4 hours. Thereafter, ice and a saline solution were successively added to the reaction mixture, and it was then extracted with ethyl acetate. The organic layer was further washed with a saline solution 3 times, and it was then dried over anhydrous magnesium sulfate, followed by concentration under reduced pressure. 0.80 g of the obtained residue was subjected to silica gel column chromatography, so as to obtain 0.62 g of N-(4-phenoxyphenyl)methyl-2-aminonicotinic acid amide (hereinafter referred to as the present compound 3).

### The present compound 3

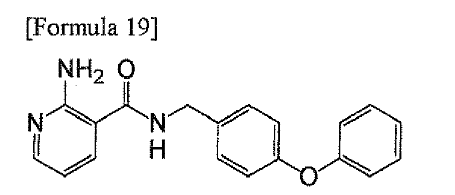

1H-NMR (DMSO-D6) δ: 4.42 (2H, d, J = 5.9 Hz), 6.59 (1H, dd, J = 7.8, 4.9 Hz), 6.97-6.99 (4H, m), 7.08 (2H, br), 7.10-7.13 (1H, m), 7.32-7.40 (4H, m), 7.95 (1H, dd, J = 7.8, 1.7 Hz), 8.08 (1H, dd, J = 4.9, 1.7 Hz), 8.98 (1H, t, J = 5.9 Hz).

### Production example 4

0.88 g of a BOP reagent and 4.44 g of triethylamine were successively added to a mixture of 0.28 g of 2-aminonicotinic acid, 0.37 g of 4-phenylbenzylamine and 10 ml of DMF. The obtained mixture was stirred at a room temperature for 4 hours. Thereafter, ice and a saline solution were successively added to the reaction mixture, and it was then extracted with ethyl acetate. The organic layer was further washed with a saline solution 3 times, and it was then dried over anhydrous magnesium sulfate, followed by concentration under reduced pressure. 0.71 g of the obtained residue was subjected to silica gel column chromatography, so as to obtain 0.53 g of N-(4-phenylphenyl)methyl-2-aminonicotinic acid amide (hereinafter referred to as the present compound 4).

### The present compound 4

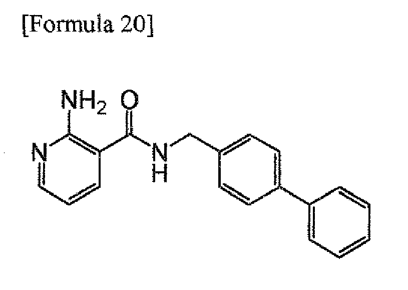

¹H-NMR (DMSO-D_{b}) δ: 4.48 (2H, d, J = 5.8 Hz), 6.60 (1H, dd, J = 7.8, 4.9 Hz), 7.09 (2H, br), 7.33-7.48 (5H, m), 7.62-7.65 (4H, m), 7.98 (1H, dd, J = 7.8, 1.5 Hz), 8.09 (1H, m), 9.01-9.04 (1H, m).

### Production example 5

0.88 g of a BOP reagent and 0.40 g of triethylamine were successively added to a mixture of 0.28 g of 2-aminonicotinic acid, 0.37 g of 3-phenylbenzylamine and 10 ml of DMF. The obtained mixture was stirred at a room temperature for 4 hours. Thereafter, ice and a saline solution were successively added to the reaction mixture, and it was then extracted with ethyl acetate. The organic layer was further washed with a saline solution 3 times, and it was then dried over anhydrous magnesium sulfate, followed by concentration under reduced pressure. 0.77 g of the obtained residue was subjected to silica gel column chromatography, so as to obtain 0.58 g of N-(3-phenylphenyl)methyl-2-aminonicotinic acid amide (hereinafter referred to as the present compound 5).

### The present compound 5

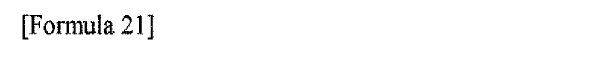

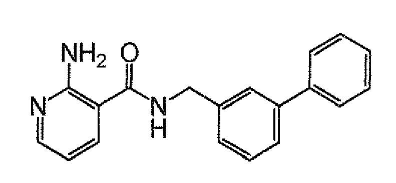

¹H-NMR (DMSO-D₆) δ: 4.52 (2H, d, J = 5.8 Hz), 6.60 (1H, dd, J = 7.8, 4.9 Hz), 7.07 (2H, br), 7.31-7.49 (5H, m), 7.53-7.55 (1H, m), 7.61-7.65 (3H, m), 7.97 (1H, dd, J = 7.8, 2.0 Hz), 8.07-8.09 (1H, m), 9.01-9.04 (1H, m).

### Production example 6

0.88 g of a BOP reagent and 0.40 g of triethylamine were successively added to a mixture of 0.28 g of 2-aminonicotinic acid, 0.43 g of 3-benzyloxybenzylamine and 10 ml of DMF. The obtained mixture was stirred at a room temperature for 4 hours. Thereafter, ice and a saline solution were successively added to the reaction mixture, and it was then extracted with ethyl acetate. The organic layer was further washed with a saline solution 3 times, and it was then dried over anhydrous magnesium sulfate, followed by concentration under reduced pressure. 0.87 g of the obtained residue was subjected to silica gel column chromatography, so as to obtain 0.70 g of N-(3-benzyloxyphenyl)methyl-2-aminonicotinic acid amide (hereinafter referred to as the present compound 7).

### The present compound 7

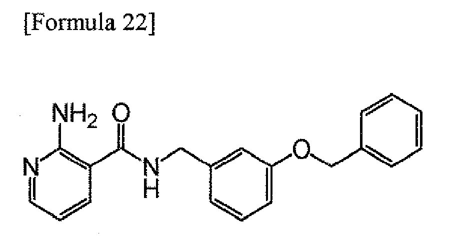

¹H-NMR (DMSO-D₆) δ: 4.40 (2H, d, J = 5.9 Hz), 5.08 (2H, s), 6.58-6.60 (1H, m), 6.87-6.89 (2H, m), 6.95 (1H, br), 7.06 (2H, br), 7.24 (1H, t, J = 7.2 Hz), 7.29-7.38 (3H, m), 7.42-7.44 (2H, m), 7.93-7.95 (1H, m), 8.07-8.08 (1H, m), 8.94-8.97 (1H, m).

### Production example 7

0.88 g of a BOP reagent and 0.40 g of triethylamine were successively added to a mixture of 0.28 g of 2-aminonicotinic acid, 0.27 g of 3-methoxybenzylamine and 7 ml of DMF. The obtained mixture was stirred at a room temperature for 4 hours. Thereafter, ice and a saline solution were successively added to the reaction mixture and it was then extracted with ethyl acetate. The organic layer was further washed with a saline solution 3 times, and it was then dried over anhydrous magnesium sulfate, followed by concentration under reduced pressure. 0.62 g of the obtained residue was subjected to silica gel column chromatography, so as to obtain 0.52 g of N-(3-methoxyphenyl)methyl-2-aminonicotinic acid amide (hereinafter referred to as the present compound 8).

### The present compound 8

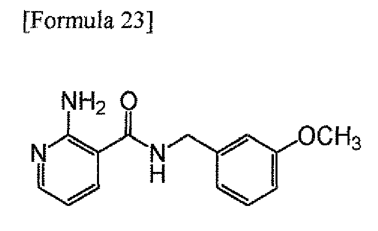

¹H-NMR (DMSO-D₆) δ: 3.73 (3H, s), 4.41 (2H, d, J = 5.9 Hz), 6.58-6.61 (1H, m), 6.80-6.83 (1H, m), 6.87-6.95 (2H, m), 7.06 (2H, br), 7.22-7.26 (1H, m), 7.95 (1H, dd, J = 7.6, 1.7 Hz), 8.08 (1H, dd, J = 4.6, 1.4 Hz), 8.96 (1H, t, J = 5.9 Hz).

### Production example 8

A mixture of 0.18 g of 2-aminonicotinic acid, 0.18 g of 4-methoxybenzylamine, 0.33 g of WSC and 5 ml of pyridine was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure, so as to obtain 0.14 g of N-(4-methoxyphenyl)methyl-2-aminonicotinic acid amide (hereinafter referred to as the present compound 9).

### The present compound 9

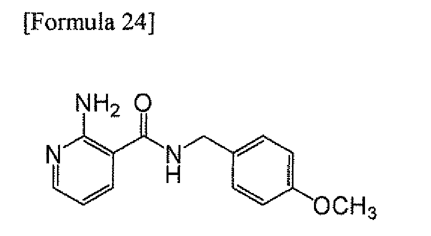

¹H-NMR (CDCl₃) δ: 3.81 (3H, s), 4.53 (2H, d, J = 5.6 Hz), 6.21 (1H, br s), 6.35 (2H, br s), 6.57 (1H, dd, J = 7.6, 4.9 Hz), 6.88-6.91 (2H, m), 7.25-7.29 (2H, m), 7.57 (1H, dd, J = 7.6, 1.7 Hz), 8.16 (1H, dd, J= 4.9, 1.7 Hz).

### Production example 9

0.44 g of a BOP reagent and 0.20 g of triethylamine were successively added to a mixture of 0.14 g of 2-aminonicotinic acid, 0.18 g of 4-pentylbenzylamine and 3 ml of DMF. The obtained mixture was stirred at a room temperature for 4 hours. Thereafter, ice and 30 ml of water were added to the reaction mixture, and the obtained mixture was stirred at a room temperature for 30 minutes, and then under cooling on ice for 30 minutes. Thereafter, the precipitated solid was collected by filtration, and it was then successively washed with water and MTBE. The resultant was dried, so as to obtain 0.29 g of N-(4-pentylphenyl)methyl-2-aminonicotinic acid amide (hereinafter referred to as the present compound 10).

### The present compound 10

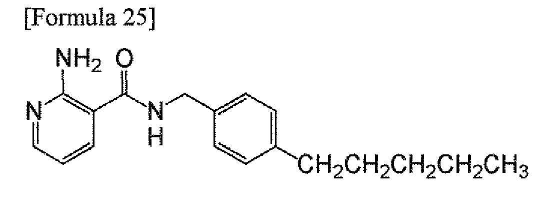

1H-NMR (CDCl3) δ: 0.88-0.91 (3H, m), 1.28-1.35 (4H, m), 1,58-1.68 (2H, m), 2.58-2_{.}62 (2H, m), 4.56 (2H, d, J = 5.7 Hz), 6.23 (1H, br), 6.36 (2H, br), 6.57 (1H, dd, J = 7.8, 4.9 Hz), 7.14-7.19 (2H, m), 7.21-7.27 (2H, m), 7.58 (1H, dd, J = 7.6, 1.7 Hz), 8.16 (1H, dd, J = 4.9, 1.7 Hz).

### Production example 10

0.44 g of a BOP reagent and 0.20 g of triethylamine were successively added to a mixture of 0.14 g of 2-aminonicotinic acid, 0.18 g of 3-pentylbenzylamine and 3 ml of DMF. The obtained mixture was stirred at a room temperature for 4 hours. Thereafter, ice and 30 ml of water were added to the reaction mixture, and the obtained mixture was stirred at a room temperature for 30 minutes, and then under cooling on ice for 30 minutes. Thereafter, the precipitated solid was collected by filtration, and it was then successively washed with water and cold MTBE. The resultant was dried, so as to obtain 0.15 g of N-(3-pcntylphenyl)methyl-2-aminonicotinic acid amide (hereinafter referred to as the present compound 11).

### The present compound 11

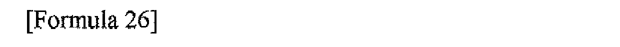

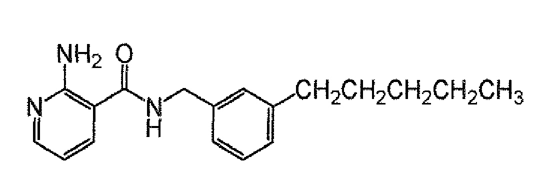

¹H-NMR (CDCl₃) δ: 0.87-0.91 (3H, m), 1.28-1.38 (4H, m), 1.55-1.65 (2H, m), 2.58-2.63 (2H, m), 4.58 (2H, d, J = 5.6 Hz), 6.25 (1H, br), 6.36 (2H, br), 6.57-6.60 (1H, m), 7.12-7,16 (3H, m), 7.26-7.30 (1H, m), 7.58 (1H, dd, J = 7.6, 1.7 Hz), 8.16 (1H, dd, J = 4.9, 1.7 Hz).

### Production example 11

A mixture of 0.50 g of 2,6-diaminonicotinic acid, 0.53 g of 1-hydroxybenzotriazole, 0.75 g of WSC, 0.49 g of 2-fluorobenzylamine and 10 ml of DMF was stirred at a room temperature for 8 hours. After, water was added to the reaction mixture, it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.30 g of N-(2-fluorophenyl)methyl-2,6-diaminonicotinic acid amide (hereinafter referred to as the present compound 12).

### The present compound 12

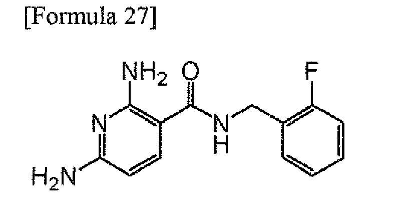

¹H-NMR (CDCl₃) δ: 4.50 (2H, br s), 4.62 (2H, d, J = 5.8 Hz), 5.78 (1H, dd, J = 8.5, 0.5 Hz), 6.11-6.14 (1H, br m), 6.42 (2H, br s), 7.03-7.14 (2H, m), 7.24-7.30 (1H, m), 7.36-7.42 (2H, m).

### Production example 12

A mixture of 0.53 g of 2,6-diaminonicotinic acid, 0.59 g of 1-hydroxybenzotriazole, 0.79 g of WSC, 0.77 g of 2-fluoro-3-methoxybenzylamine hydrochloride, 2 ml of triethylamine and 3 ml of DMF was stirred at a room temperature for 8 hours. Thereafter, water was added to the reaction mixture, and the precipitated solid was then collected by filtration. The solid was successively washed with a sodium hydroxide aqueous solution, water and hexane, so as to obtain 0.35 g of N-(2-fluoro-3-methoxyphenyl)methyl-2,6-diaminonicotinic acid amide (hereinafter referred to as the present compound 13).

### The present compound 13

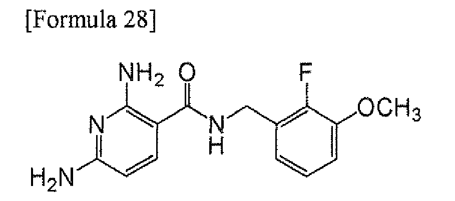

¹H-NMR (CDCl₃) δ: 3.89 (3H, s), 4.51 (2H, br s), 4.61 (2H, d, J = 5.9 Hz), 5.77 (1H, d, J = 8.3 Hz), 6.15 (1H, br s), 6.42 (2H, br s), 6.88-6.97 (2H, m), 7.02-7.06 (1H, m), 7.38 (1H, d, J = 8.3 Hz).

### Production example 13

A mixture of 0.50 g of 2,6-diaminonicotinic acid, 0.53 g of 1-hydroxybenzotriazole, 0.75 g of WSC, 0.93 g of 3-phenoxybenzylamine hydrochloride and 10 ml of DMF was stirred at a room temperature for 8 hours. After, water was added to the reaction mixture, it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.52 g of N-(3-phenoxyphenyl)methyl-2,6-diaminonicotinic acid amide (hereinafter referred to as the present compound 15).

### The present compound 15

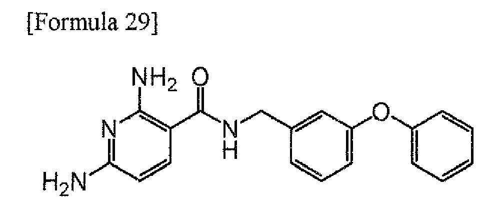

¹H-NMR (CDCl₃) δ: 4.53 (2H, d, J = 5.6 Hz), 4.61 (2H, br s), 5.76 (1H, d, J = 8.5 Hz), 6.13-6.20 (1H, br m), 6.46 (2H, br s), 6.87-6.91 (1H, m), 6.96-7.13 (5H, m), 7.28-7.40 (4H, m).

### Production example 14

A mixture of 1.0 g of 2,6-diaminonicotinic acid, 0.81 g of 1-hydroxybenzotriazole, 1.2 g of WSC, 1.0 g of 4-(4-fluorophenyloxy)benzylamine and 5 ml of pyridine was stirred under heating to reflux for 10 minutes, and then at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 1.2 g of N-[4-(4-fluorophenyloxy)phenyl]methyl-2,6-diaminonicotinic acid amide (hereinafter referred to as the present compound 16).

### The present compound 16

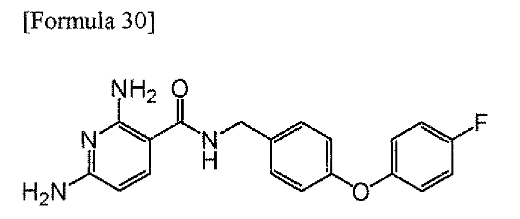

¹H-NMR (CDCl₃) δ: 4.52 (2H, br s), 4.53 (2H, d, J = 5.6 Hz), 5.77 (1H, d, J = 8.5 Hz), 6.03 (1H, br s), 6.45 (2H, br s), 6.92-7.05 (6H, m), 7.29 (2H, d, J = 8.8 Hz), 7.38 (1H, d, J = 8.5 Hz).

### Production example 15

A mixture of 0.50 g of 2,6-diaminonicotinic acid, 0.57 g of 1-hydroxybenzotriazole, 0.82 g of WSC, 0.65 g of 4-phenoxybenzylamine, 0.50 g of triethylamine and 4 ml of DMF was stirred at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.37 g of N-(4-phenoxyphenyl)methyl-2,6-diaminonicotinic acid amide (hereinafter referred to as the present compound 17).

### The present compound 17

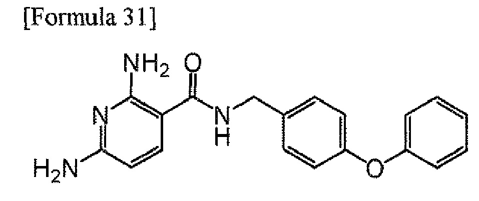

¹H-NMR (CDCl₃) δ: 4.50 (2H, br s), 4.54 (2H, d, J = 5.6 Hz), 5.78 (1H, dd, J = 8.5, 1.2 Hz), 6.02 (1H, br s), 6.45 (2H, br s), 6.97-7.02 (4H, m), 7.08-7.13 (1H, m), 7.29-7.40 (5H, m).

### Production example 16

A mixture of 0.28 g of 2-fluoro-3-methoxybenzylamine hydrochloride, 0.20 g of 2-aminonicotinic acid, 0.35 g of WSC and 3 ml of pyridine was stirred at a room temperature for 8 hours. Thereafter, water was added to the reaction mixture, and the precipitated solid was then collected by filtration. The solid was successively washed with a sodium hydroxide aqueous solution, water and hexane, so as to obtain 0.16 g of N-(2-fluoro-3-methoxyphenyl)methyl-2-aminonicotinic acid amide (hereinafter referred to as the present compound 18).

### The present compound 18

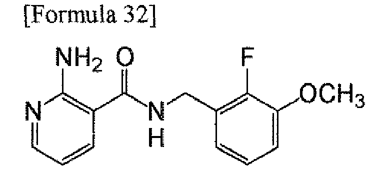

1H-NMR (DMSO-D₆) δ: 3.83 (3H, s), 4.46 (2H, d, J = 5.6 Hz), 6.57-6.62 (1H, m), 6.88-6.91 (1H, m), 7.01-7.11 (4H, m), 7.93-7.96 (1H, m), 8.05-8.09 (1H, m), 8.93-8.98 (1H, m).

### Production example 17

A mixture of 0.45 g of 2,6-difluoronicotinic acid, 0.49 g of 1-hydroxybenzotriazole, 0.69 g of WSC, 0.60 g of 4-(4-fluorophenoxy)benzylamine and 4 ml of pyridine was stirred under heating to reflux for 10 minutes, and then at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.80 g of N-[4-(4-fluorophenoxy)phenyl]methyl-2,6-difluoronicotinic acid amide.

### N-[4-(4-fluorophenoxy)phenyl]methyl-2,6-difluoronicotinic acid amide

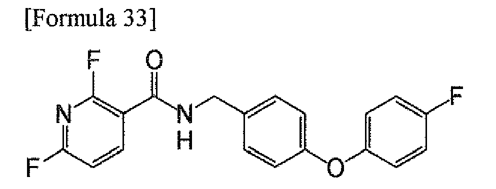

1H-NMR (CDCl3) δ: 4.64 (2H, d, J = 5.1 Hz), 6.92-7.09 (8H, m), 7.28-7.35 (2H, m), 8.67-8.78 (1H, m).

700 mg of N-[4-(4-fluorophenoxy)phenyl]methyl-2,6-difluoronicotinic acid amide was added to 2 ml of 28% aqueous ammonia. The obtained mixture was subjected to a microwave reactor (production name: Discover; manufactured by CEM) at 18 kgf/cm² at 100°C for 10 minutes. The reaction mixture was concentrated under reduced pressure, and the obtained residue was then subjected to silica gel column chromatography, so as to obtain 181 mg of N-[4-(4-fluorophenoxy)phenyl]methyl-2-amino-6-fluoronicotinic acid amide (hereinafter referred to as the present compound 19), 216 mg of N-[4-(4-fluorophenoxy)phenyl]methyl-6-amino-2-fluoronicotinic acid amide and 124 mg of N-[4-(4-fluorophenoxy)phenyl]methyl-2,6-diaminofluoronicotinic acid amide.

### The present compound 19

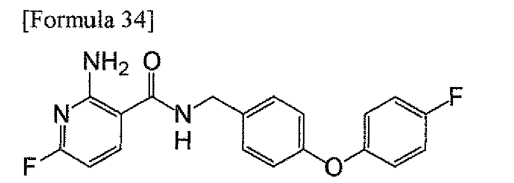

1H-NMR (CDCl3) δ: 4.55 (2H, d, J = 5.6 Hz), 6.15 (1H, dd, J = 8.3, 2.9 Hz), 6.18 (1H, br s), 6.61 (2H, br s), 6.93-7.06 (6H, m), 7.28-7.31 (2H, m), 7.68 (1H, dd, J = 8.0, 8.3 Hz). N-[4-(4-fluorophenyloxy)phenyl]methyl-6-amino-2-fluoronicotinic acid amide 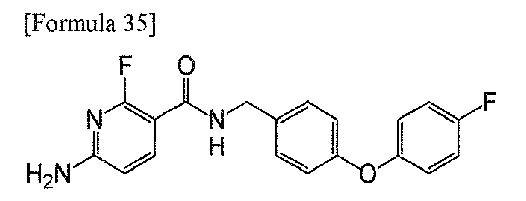 1H-NMR (CDCl3) δ: 4.61 (2H, d, J = 5.1 Hz), 4.88 (2H, br s), 6.42 (1H, dd, J = 8.3, 2.7 Hz), 6,93-7.05 (7H, m), 7.29-7.32 (2H, m), 8.32 (1H, dd, J = 10.2, 8.3 Hz).

### Production example 18

A mixture of 0.40 g of 2-aminonicotinic acid, 0.51 g of 1-hydroxybenzotriazole, 0.72 g of WSC, 0.62 g of 3-(3-methylphenoxy)benzylamine and 4 ml of DMF was stirred under heating to reflux for 15 minutes, and then at a room temperature for 4 hours. Thereafter, water was added to the reaction mixture, and the precipitated solid was collected by filtration. The obtained solid was washed with a sodium bicarbonate aqueous solution and water, and it was then dried under reduced pressure, so as to obtain 0.58 g of N-[3-(3-methylphenoxy)phenyl]methyl-2-aminonicotinic acid amide (hereinafter referred to as the present compound 20).

### The present compound 20

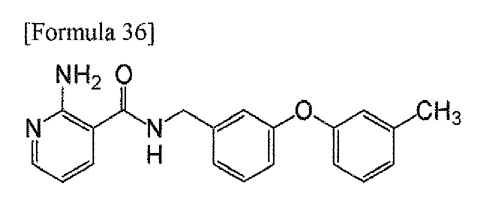

1H-NMR (CDCl3) δ: 2.32 (3H, s), 4.56 (2H, d, J = 5.6 Hz), 6.34 (2H, br s), 6.42 (1H, br s), 6.54-6.60 (1H, m), 6.79-6.84 (2H, m), 6.89-7.07 (4H, m), 7.19-7.32 (2H, m), 7.57-7.60 (1H, m), 8.14 (1H, dd, J = 4.8, 1.7 Hz).

### Production example 19

A mixture of 0.40 g of 2-aminonicotinic acid, 0.51 g of 1-hydroxybenzotriazole, 0.72 g of WSC, 0.62 g of 4-(4-methylphenoxy)benzylamine and 4 ml of DMF was stirred under heating to reflux for 15 minutes, and then at a room temperature for 4 hours. Thereafter, water was added to the reaction mixture, and the precipitated solid was collected by filtration. The obtained solid was washed with a sodium bicarbonate aqueous solution and water, and it was then dried under reduced pressure, so as to obtain 0.80 g of N-[4-(4-methylphenoxy)phenyl]methyl-2-aminonicotinic acid amide (hereinafter referred to as the present compound 21).

### The present compound 21

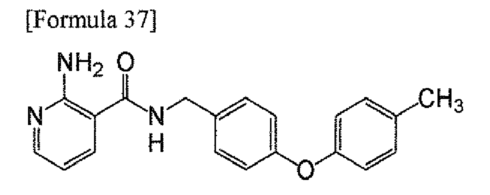

1H-NMR (CDCl3) δ: 2.33 (3H, s), 4.55 (2H, d, J = 4.8 Hz), 6.30-6.39 (3H, br m), 6.57 (1H, dd, J = 7.2, 5.1 Hz), 6.91 (2H, d, J = 8.5 Hz), 6.96 (2H, d, J = 8.5 Hz), 7.14 (2H, d, J = 8.7 Hz), 7.25-7.34 (2H, m), 7.57-7.61 (1H, m), 8.14-8.16 (1H, m).

### Production example 20

0.44 g of a BOP reagent and 0.20 g of triethylamine were successively added to a mixture of 0.14 g of 2-aminonicotinic acid, 0.21 g of 3-(phenoxymethyl)benzylamine and 3 ml of DMF. The obtained mixture was stirred at a room temperature for 4 hours. Thereafter, ice and 30 ml of water were added to the reaction mixture, and the obtained mixture was stirred at a room temperature for 30 minutes, and then under cooling on ice for 30 minutes. Thereafter, the precipitated solid was collected by filtration, and it was then successively washed with water and cold MTBE. The resultant was dried, so as to obtain 0.23 g of N-[3-(phenoxymethyl)phenyl]methyl-2-aminonicotinic acid amide (hereinafter referred to as the present compound 22).

### The present compound 22

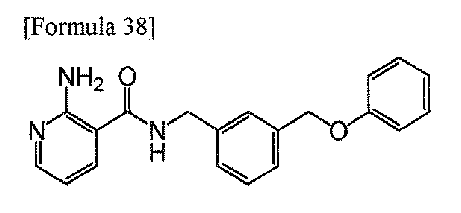

¹H-NMR (CDCl₃) δ: 4.62 (2H, d, J = 5.4 Hz), 5.07 (2H, s), 6.36 (3H, br), 6.56-6.59 (1H, m), 6.96-6.98 (3H, m), 7.29-7.41 (6H, m), 7.56-7.58 (1H, m), 8.15-8.16 (1H, m).

### Production example 21

0.44 g of a BOP reagent and 0.20 g of triethylamine were successively added to a mixture of 0.14 g of 2-aminonicotinic acid, 0.21 g of 4-(phenoxymethyl)benzylamine and 3 ml of DMF. The obtained mixture was stirred at a room temperature for 4 hours. Thereafter, ice and 30 ml of water were added to the reaction mixture, and the obtained mixture was stirred at a room temperature for 30 minutes, and then under cooling on ice for 30 minutes. Thereafter, the precipitated solid was collected by filtration, and it was then successively washed with water and cold MTBE. The resultant was dried, so as to obtain 0.34 g of N-[4-(phenoxymethyl)phonyl]methyl-2-aminonicotinic acid amide (hereinafter referred to as the present compound 23).

### The present compound 23

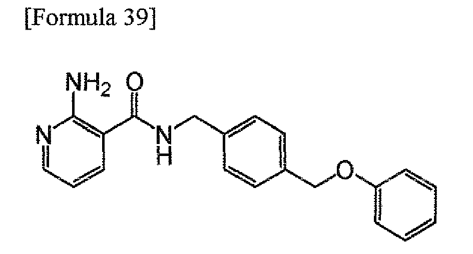

¹H-NMR (CDCl₃) δ: 4.61 (2H, d, J = 5.6 Hz), 5.07 (2H, s), 6.30 (1H, br), 6.36 (2H, br), 6.58 (1H, dd, J = 7.9, 4.9 Hz), 6.96-6.98 (3H, m), 7.27-7.45 (6H, m), 7.58-7.60 (1H, m), 8.16-8.17 (1H, m).

### Production example 22

0.44 g of a BOP reagent and 0.20 g of triethylamine were successively added to a mixture of 0.14 g of 2-aminonicotinic acid, 0.21 g of 3-(2-phenylethyl)benzylamine and 3 ml of DMF. The obtained mixture was stirred at a room temperature for 4 hours. Thereafter, ice and a saline solution were successively added to the reaction mixture, and the obtained mixture was then extracted with ethyl acetate. The organic layer was further washed with a saline solution 3 times, and it was then dried over anhydrous magnesium sulfate, followed by concentration under reduced pressure. The obtained residue was subjected to silica gel column chromatography, so as to obtain 0.24 g of N-[3-(2-phenylethyl)phenyl]methyl-2-aminonicotinic acid amide (hereinafter referred to as the present compound 24).

### The present compound 24

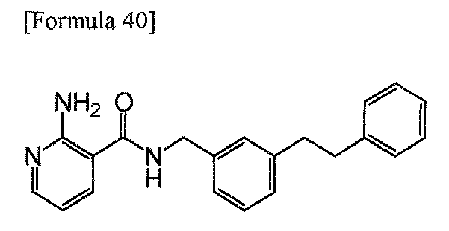

¹H-NMR (CDCl₃) δ: 2.91 (4H, s), 4.55 (2H, d, J = 5.6 Hz), 6.25 (1H, br), 6.37 (2H, br), 6.57-6.60 (1H, m), 7.10-7.30 (9H, m), 7.56 (1H, dd, J = 7.8, 1.7 Hz), 8.15 (1H, dd, J= 4.9, 1.7 Hz).

### Production example 23

0.44 g of a BOP reagent and 0.20 g of triethylamine were successively added to a mixture of 0.14 g of 2-aminonicotinic acid, 0.21 g of 4-(2-phenylethyl)benzylamine and 3 ml of DMF. The obtained mixture was stirred at a room temperature for 4 hours. Thereafter, ice and 30 ml of water were added to the reaction mixture. The obtained mixture was stirred at a room temperature for 30 minutes, and then under cooling on ice for 30 minutes. Thereafter, the precipitated solid was collected by filtration, and it was then successively washed with water and cold MTBE. The resultant was dried, so as to obtain 0.24 g of N-[4-(2-phenylethyl)phenyl]methyl-2-aminonicotinic acid amide (hereinafter referred to as the present compound 25).

### The present compound 25

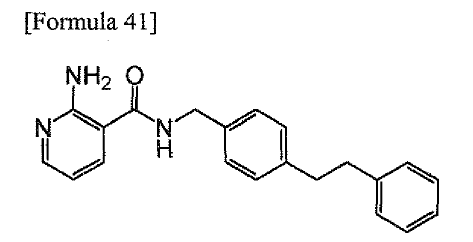

¹H-NMR (CDCl₃) δ: 2.88-2.99 (4H, m), 4.57 (2H, d, J = 5.4 Hz), 6.25 (1H, br), 6.36 (2H, br), 6.56-6.59 (1H, m), 7.1.8-7.30 (9H, m), 7.57-7.59 (1H, m), 8.15-8.16 (1H, m).

### Production example 24

0.44 g of a BOP reagent and 0.20 g of triethylamine were successively added to a mixture of 0.14 g of 2-aminonicotinic acid, 0.23 g of 3-(2-phenylethyloxy)benzylamitie and 3 ml of DMF. The obtained mixture was stirred at a room temperature for 4 hours. Thereafter, ice and a saline solution were successively added to the reaction mixture, and the obtained mixture was then extracted with ethyl acetate. The organic layer was further washed with a saline solution 3 times, and it was then dried over anhydrous magnesium sulfate, followed by concentration under reduced pressure. The obtained residue was subjected to silica gel column chromatography, so as to obtain 0.24 g of N-[3-(2-phenylethoxy)phenyl]methyl-2-aminonicotinic acid amide (hereinafter referred to as the present compound 26).

### The present compound 26

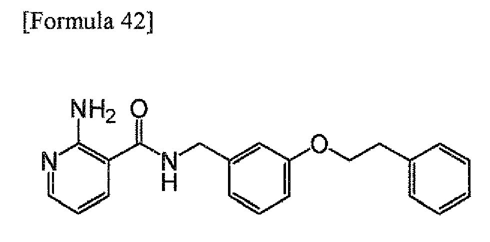

¹H-NMR (CDCl₃) δ: 3.07-3.10 (2H, m), 4.17 (2H, t, J = 7.1 Hz), 4.54 (2H, d, J = 5.4 Hz), 6.36 (3H, br), 6.56 (1H, dd, J = 7.9, 4.9 Hz), 6.81-6.90 (3H, m), 7.21-7.32 (6H, m), 7.58 (1H, dd, J = 7.9, 1.7 Hz), 8.13 (1H, dd, J = 4.9, 1.7 Hz).

### Production example 25

0.44 g of a BOP reagent and 0.20 g of triethylamine were successively added to a mixture of 0.14 g of 2-aminonicotinic acid, 0.23 g of 4-(2-phenylethyloxy)benzylamine and 3 ml of DMF. The obtained mixture was stirred at a room temperature for 4 hours. Thereafter, ice and 30 ml of water were added to the reaction mixture. The obtained mixture was stirred at a room temperature for 30 minutes, and then under cooling on ice for 30 minutes. Thereafter, the precipitated solid was collected by filtration, and it was then successively washed with water and cold MTBE. The resultant was dried, so as to obtain 0.28 g of N-[4-(2-phenylethoxy)phenyl]methyl-2-aminonicotinic acid amide (hereinafter referred to as the present compound 27).

### The present compound 27

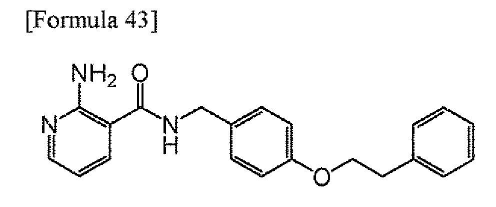

¹H-NMR (CDCl₃) δ: 3.08-3.12 (2H, m), 4.15-4.19 (2H, m), 4.52 (2H, d, J = 5.4 Hz), 6.19 (1H, br), 6.35 (2H, br), 6.57 (1H, dd, J = 7.8,4.9 Hz), 6.87-6.90 (2H, m), 7.22-7.34 (7H, m), 7.56 (1H, dd, J = 7.8, 1.7 Hz), 8.15-8.16 (1H, m).

### Production example 26

0.50 g of 2-chloro-6-methyl-nicotinic acid, 0.64 g of 4-phenoxybenzylamine and 0.64 g of WSC were mixed with 5 ml of DMF. The obtained mixture was stirred under heating at 100°C for 5 minutes, and it was then stirred at a room temperature for 1 day. Thereafter, water was added to the reaction mixture, and it was then extracted with ethyl acetate. The organic layer was washed with a sodium bicarbonate aqueous solution, and it was then dried over magnesium sulfate, followed by concentration under reduced pressure. The obtained residue was subjected to silica gel column chromatography, so as to obtain 0.60 g of N-(4-phenoxyphenyl)methyl-2-chloro-6-methyl-nicotinic acid amide. 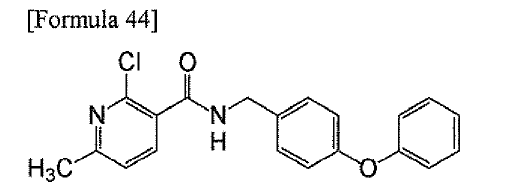 1H-NMR (CDCl3) δ: 2.57 (3H, s), 4.64 (2H, d, J = 5.8 Hz), 6.87 (1H, br s), 6.98-7.02 (4H, m), 7.09-7.13 (1H, m), 7.20 (1H, d, J = 7.7 Hz), 7.31-7.37 (4H, m), 8.09 (1H, d, J = 7.7 Hz).
0.30 g of the thus obtained N-(4-phenoxyphenyl)methyl-2-chloro-6-methyl-nicotinic acid amide, 1 ml of 1,4-dioxane and 3 ml of 28% aqueous ammonia were mixed. The obtained mixture was subjected to a microwave reactor at 100°C for 3 hours to react. The reaction mixture was concentrated under reduced pressure. The obtained residue was subjected to silica gel column chromatography, so as to obtain 0.13 g of N-(4-phenoxyphenyl)methyl-2-amino-6-methyl-nicotinic acid amide (hereinafter referred to as the present compound 29).

### The present compound 29

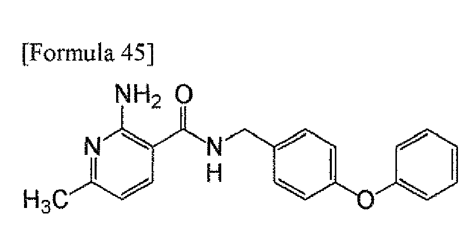

1H-NMR (CDCl3) δ: 2.38 (3H, s), 4.56 (2H, d, J = 5.6 Hz), 6.23 (1H, br s), 6.38 (2H, br s), 6.44 (1H, d, J = 8.4 Hz), 6.98-7.02 (4H, m), 7.09-7.13 (1H, m), 7.28-7.36 (4H, m), 7.49 (1H, d, J = 7.7 Hz).

### Production example 27

A mixture of 0.20 g of 2-aminonicotinic acid, 0.24 g of 1-hydroxybenzotriazole, 0.34 g of WSC, 0.37 g of 4-fluoro-3-phenoxybenzylamine and 4 ml of DMF was stirred at 50°C for 8 hours. After, water was added to the reaction mixture, it was then extracted with ethyl acetate. The organic layer was successively washed with water and a saline solution, and it was then dried over magnesium sulfate, followed by concentration under reduced pressure. The obtained residue was subjected to silica gel column chromatography, so as to obtain 0.30 g ofN-(4-fluoro-3-phenoxyphenyl)methyl-2-aminonicotinic acid amide (hereinafter referred to as the present compound 33).

### The present compound 33

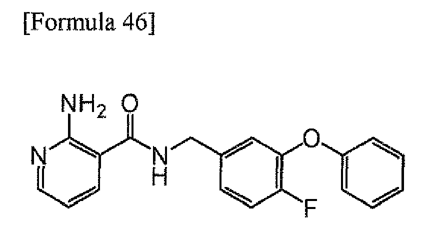

¹H-NMR (CDCl₃) δ: 4.50 (2H, d, J = 5.6 Hz), 6.34 (2H, br s), 6.49 (1H, br s), 6.55 (1H, dd, J = 7.6, 4.9 Hz), 6.95-7.16 (6H, m), 7.29-7.35 (2H, m), 7.57 (1H, dd, J = 7.8, 1.7 Hz), 8.13 (1H, dd, J = 4.9, 1.7 Hz).

### Production example 28

A mixture of 0.20 g of 2-aminonicotinic acid, 0.24 g of 1-hydroxybenzotriazole, 0.34 g of WSC, 0.38 g of 4-(4-fluorophenoxy)benzylamine and 4 ml of DMF was stirred at a room temperature for 8 hours, and then at 80°C for 2 hours. Thereafter, water was added to the reaction mixture, and it was then extracted with ethyl acetate. The organic layer was successively washed with water and a saline solution, and it was then dried over magnesium sulfate, followed by concentration under reduced pressure. The obtained residue was subjected to silica gel column chromatography, so as to obtain 0.50 g of N-[4-(4-fluorophenoxy)phenyl]methyl-2-aminonicotinic acid amide (hereinafter referred to as the present compound 34).

### The present compound 34

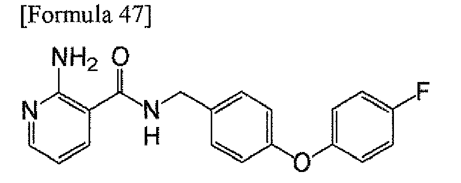

1H-NMR (CDCl3) δ: 4.57 (2H, d, J = 5.6 Hz), 6.29 (1H, br s), 6.36 (2H, br s), 6.58 (1H, dd, J = 7.8, 4.8 Hz), 6.93-7.06 (6H, m), 7.30 (2H, d, J = 8.8 Hz), 7.59 (1H, dd, J = 7.8, 1.7 Hz), 8.16 (1H, dd, J = 4.9, 1.7 Hz).

### Production example 29

0.44 g of a BOP reagent and 0.20 g of triethylamine were successively added to a mixture of 4.14 g of 2-aminonicotinic acid, 0.19 g of 2-aminomethyl-5-phenoxyfuran and 3 ml of DMF. The obtained mixture was stirred at a room temperature for 4 hours. Thereafter, ice and a saline solution were successively added to the reaction mixture, and the obtained mixture was then extracted with ethyl acetate. The organic layer was further washed with a saline solution 3 times, and it was then dried over anhydrous magnesium sulfate, followed by concentration under reduced pressure. The obtained residue was subjected to silica gel column chromatography, so as to obtain 0.27 g of N-(5-phenoxyfuran-2-yl)methyl-2-aminonicotinic acid amide (hereinafter referred to as the present compound 3 5).

### The present compound 35

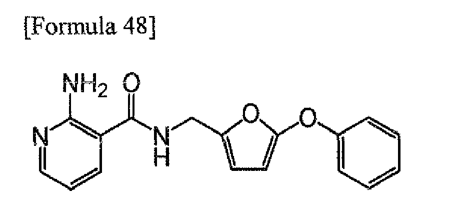

¹H-NMR (CDCl₃) δ: 4.52 (2H, d, J = 5.4 Hz), 5.51 (1H, d, J = 2.9 Hz), 6.27 (1H, d, J = 2.9 Hz), 6.31 (3H, br), 6.59 (1H, dd, J = 7.6, 4.9 Hz), 7.04-7.06 (2H, m), 7.12-7.15 (1H, m), 7.32-7.36 (2H, m), 7.59-7.60 (1H, m), 8.16-8.17 (1H, m).

### Production example 30

A mixture of 2.0 g of 2-aminonicotinic acid, 2.0 g of 1-hydroxybenzotriazole, 4.1 g of WSC, 4.0 g of (2-chlorothiazol-5-yl)methylamine hydrobromide, 5.0 g of triethylamine and 20 ml of DMF was stirred at 50°C for 3 hours. After, water was added to the reaction mixture, it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.20 g of N-(2-chlorothiazol-5-yl)methyl-2-aminonicotinic acid amide. 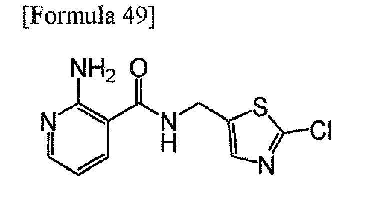 ¹H-NMR (CDCl₃) δ: 4.68 (2H, dd, J = 5.9, 0.8 Hz), 6.36 (2H, br s), 6.47 (1H, br s), 6.60 (1H, dd, J = 7.8, 4.8 Hz), 7.45 (1H, s), 7.58 (1H, dd, J = 7.8, 1.8 Hz), 8.19 (1H, dd, J = 4.8, 1.8 Hz).
0.70 g of N-(2-chlorothiazol-5-yl)methyl-2-aminonicotinic acid amide, 1.40 g of benzyl alcohol, and 1.2 g of potassium 1,1-dimethylethoxide were added to 20 ml of 1,2-dimethoxyethane. The obtained mixture was heated to reflux for 4 hours. After, water was added to the reaction mixture, the mixture was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.13 g of N-(2-benzyloxythiazol-5-yl)methyl-2-aminonicotinic acid amide (hereinafter referred to as the present compound 43).

### The present compound 43

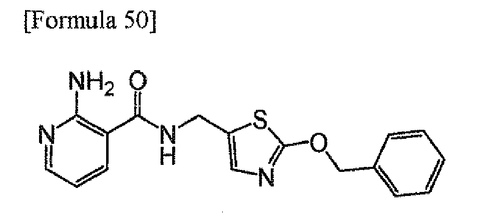

¹H-NMR (CDCl₃) δ: 4.61 (2H, dd, J = 5.8, 0.7 Hz), 5.41 (2H, s), 6.27-6.37 (3H, br m), 6.59 (1H, dd, J = 7.7, 4.8 Hz), 7.05 (1H, s), 7.35-7.45 (5H, m), 7.56 (1H, dd, J = 7.7, 1.7 Hz), 8.17 (1H, dd, J = 4.8, 1.7 Hz).

### Production example 31

A mixture of 0.30 g of 2-aminonicotinic acid, 0.30 g of 1-hydroxybenzotriazole, 0.63 g of WSC, 0.60 g of 2-butoxythiazol-5-ylmethylamine and 4 ml of DMF was stirred at a room temperature for I day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.53 g of N-(2-butoxythiazol-5-yl)methyl-2-aminonicotinic acid amide (hereinafter referred to as the present compound 44).

### The present compound 44

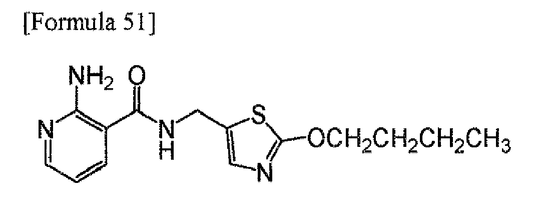

¹H-NMR (CDCl₃) δ: 0.96 (3H, t, J = 7.4 Hz), 1.41-1.50 (2H, m), 1.73-1.81 (2H, m), 4.36 (2H, t, J = 6.6 Hz), 4.60 (2H, dd, J = 5.6, 0.7 Hz), 6.31-6.40 (3H, br m), 6.58 (1H, dd, J = 7.8, 4.8 Hz), 7.01 (1H, s), 7.58 (1H, dd, J = 7.8, 1.7 Hz), 8.16 (1H, dd, J = 4.8, 1.7 Hz).

### Production example 32

A mixture of 1.0 g of 2,6-difluoronicotinic acid, 1.4 g of WSC, 1.4 g of 4-phenoxybenzylamine and 5 ml of DMF was stirred at a room temperature for 2 days. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.90 g of N-(4-phenoxyphenyl)methyl-2,6-difluoronicotinic acid amide. 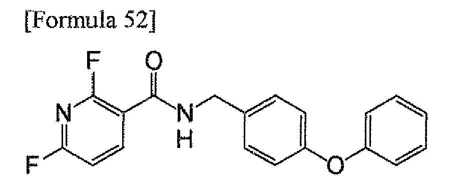 1H-NMR (CDCl3) δ: 4.64 (2H, d, J = 5.4 Hz), 6.97-7.03 (6H, m), 7.09-7.14 (1H, m), 7.30-7.36 (4H, m), 8.69-8.76 (1H, m).
A mixture of 0.90 g of N-(4-phenoxypheny)methyl-2,6-difluoronicotinic acid amide, I ml of 1,4-dioxane and I ml of 28% aqueous ammonia was subjected to a microwave reactor (production name: Discover; manufactured by CEM) at 18 kgf/cm² at 80°C for 10 minutes. After the reaction, the reaction mixture was concentrated under reduced pressure, the obtained residue was subjected to silica gel column chromatography, so as to obtain 205 mg of N-(4-phenoxypheny)methyl-2-amino-6-fluoronicotinic acid amide (hereinafter referred to as the present compound 46), 191 mg of N-(4-phenoxypheny)methyl-6-amino-2-fluoronicotinic acid amide and 155 mg of N-(4-phenoxypheny)methyl-2,6-diaminonicotinic acid amide.

### The present compound 46

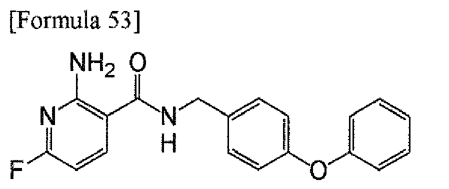

1H-NMR (CDCl3) δ: 4.56 (2H, d, J = 5.6 Hz), 6.13-6.19 (1H, br m), 6.15 (1H, dd, J = 8.2, 2.7 Hz), 6.61 (2H, br s), 6.98-7.02 (4H, m), 7.09-7.14 (1H, m), 7.28-7.37 (4H, m), 7.69 (1H, t, J = 8.1 Hz).

### N-(4-phenoxypheny)methyl-6-amino-2-fluoronicotinic acid amide

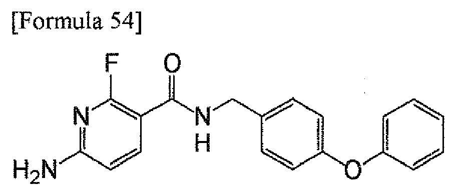

1H-NMR (CDCl3) δ: 4.61 (2H, d, J = 5.1 Hz), 4.88 (2H, br s), 6.42 (1H, dd, J = 8.2, 2.7 Hz), 6.92-7.04 (5H, m), 7.07-7.13 (1H, m), 7.30-7.35 (4H, m), 8.32 (1H, dd, J = 10.3, 8.3 Hz).

### Production Example 33

A mixture of 0.50 g of 4-(2-methoxyphenoxy)benzylamine, 0.25 g of 2-aminonicotinic acid, 0.25 g of 1-hydroxybenzotriazole, 0.50 g of WSC and 4 ml of DMF was stirred at 140°C for 4 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.34 g of N-[4-(2-methoxyphenoxy)phenyl]methyl-2-aminonicotinic acid amide (hereinafter referred to as the present compound 47).

### The present compound 47

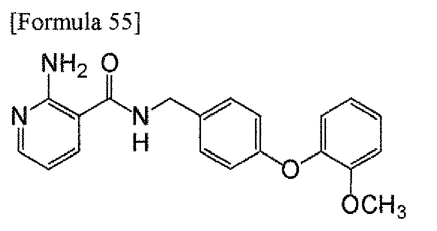

1H-NMR (CDCl3) δ: 3.84 (3H, s), 4.55 (2H, d, J = 5.6 Hz), 6.28 (1H, br s), 6.35 (2H, br s), 6.58 (1H, dd, J = 7.7, 4.8 Hz), 6.90-7.03 (5H, m), 7.15 (1H, ddd, J = 8.5, 6.8, 1.4 Hz), 7.24-7.28 (2H, m), 7.58 (1H, dd, J = 7.7, 1.8 Hz), 8.15 (1H, dd, J = 4.8, 1.8 Hz).

### Production Example 34

2.0 g of 4-(3-methoxyphenoxy)benzonitrile and 0.50 g of lithium aluminum hydride were added to 40 ml of THE The obtained mixture was stirred at a room temperature for 4 hours. Thereafter, water, 15% sodium hydroxide aqueous solution and water were successively added to the reaction mixture, and the obtained mixture was then left at a room temperature overnight. Thereafter, the reaction mixture was filtrated with Celite (registered trade mark), and the filtrate was then concentrated under reduced pressure. MTBE was added to the residue, and potassium carbonate was then added to the mixture. The obtained mixture was dried, and it was then filtrated with Celite (registered trade mark). The filtrate was concentrated under reduced pressure, so as to obtain 1.8 g of crude 4-(3-methoxyphenoxy)benzylamine. 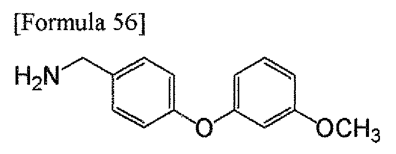 A mixture of 0.50 g of the thus obtained crude 4-(3-methoxyphenoxy)benzylamine, 0.25 g of 2,-aminonicotinic acid, 0.25 g of 1-hydroxybenzotriazole, 0.50 g of WSC and 4 ml of DMF was stirred at 140°C for 4 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.49 g of N-[4-(3-methoxyphenoxy)phenyl]methyl-2-aminonicotinic acid amide (hereinafter referred to as the present compound 48).

### The present compound 48

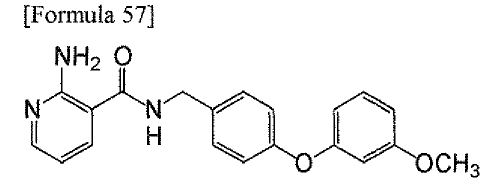

1H-NMR (CDCl3) δ: 3.78 (3H, s), 4.57 (2H, d, J = 5.6 Hz), 6.31-6.42 (3H, br m), 6.56-6.60 (3H, m), 6.64-6.68 (1H, m), 6.98-7.03 (2H, m), 7.20-7.25 (1H, m), 7.29-7.32 (2H, m), 7.60 (1H, dd, J = 7.8, 1.8 Hz), 8,16 (1H, dd, J = 5.0, 1.8 Hz).

### Production Example 35

2.0 g of 4-(4-methoxyphenoxy)benzonitrile and 0.5 g of lithium aluminum hydride were added to 40 ml of THF. The obtained mixture was stirred at a room temperature for 4 hours. Thereafter, water, 15% sodium hydroxide aqueous solution and water were successively added to the reaction mixture, and the obtained mixture was then left at a room temperature overnight. Thereafter, the reaction mixture was filtrated with Celite (registered trade mark), and the filtrate was then concentrated under reduced pressure. MTBE was added to the residue, and potassium carbonate was then added to the mixture. The obtained mixture was dried, and it was then filtrated with Celite (registered trade mark). The filtrate was concentrated under reduced pressure, so as to obtain 1.9 g of crude 4-(4-methoxyp henoxy)benzyl amine. 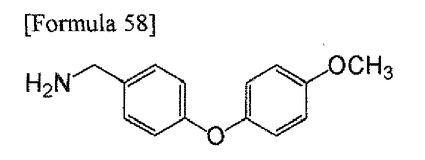 A mixture of 0.50 g of the thus obtained crude 4-(4-methoxyphenoxy)benzylamine, 0.25 g of 2,-aminonicotinic acid, 0.25 g of 1-hydroxybenzotriazole, 0.50 g of WSC and 4 ml of DMF was stirred at 140°C for 4 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.29 g of N-[4-(4-methoxyphenoxy)phenyl]methyl-2-aminonicotinic acid amide (hereinafter referred to as the present compound 49).

### The present compound 49

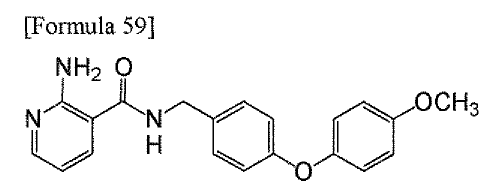

1H-NMR (CDCl3) δ: 3.81 (3H, s), 4.55 (2H, d, J = 5.6 Hz), 6.26 (1H, br s), 6.35 (2H, br s), 6.58 (1H, dd, J = 7.7, 4.7 Hz), 6,87-7.00 (6H, m), 7.25-7.29 (2H, m), 7.58 (1H, dd, J = 7.7, 1.5 Hz), 8.16 (1H, dd, J = 4.7, 1.5 Hz).

### Production Example 36

A mixture of 0.35 g of 3-(2-methoxyphenoxy)benzylamine, 0.20 g of 2-aminonicotinic acid, 0.20 g of 1-hydroxybenzotriazole, 0.35 g of WSC and 2 ml of DMF was stirred at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.47 g of N-[3-(2-methoxyphenoxy)phenyl]methyl-2-aminonicotinic acid amide (hereinafter referred to as the present compound 50).

### The present compound 50

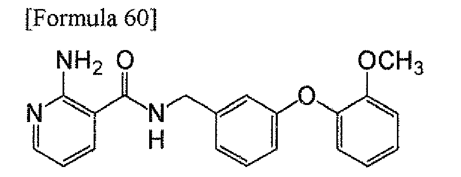

1H-NMR (CDCl3) δ: 3.82 (3H, s), 4.56 (2H, d, J = 5.8 Hz), 6.29 (1H, br s), 6.33 (2H, br s), 6.58 (1H, dd, J = 7.6, 4.8 Hz), 6.83 (1H, dd, J = 8.2, 1.9 Hz), 6.91-7.02 (5H, m), 7.12-7.18 (1H, m), 7.26 (2H, dd, J = 8.1, 7.6 Hz), 7.57 (1H, dd, J = 7.6, 1.7 Hz), 8.16 (1H, dd, J = 4.8, 1.7 Hz).

### Production Example 37

A mixture of 5.4 g of 3-fluorobenzonitrile, 5.8 g of 3-methoxyphenol, 15.9 g of cesium carbonate and 30 ml of DMF was stirred at 140°C for 3 hours. Thereafter, the reaction mixture solution was cooled to a room temperature, and water was then added thereto, followed by extraction with ethyl acetate. The organic layer was successively washed with a 15% sodium hydroxide aqueous solution, diluted hydrochloric acid, and a saturated saline solution. The resultant was dried over magnesium sulfate, and it was then concentrated under reduced pressure. The obtained residue was subjected to silica gel column chromatography, so as to obtain 1.1 g of 3-(3-methoxyphenoxy)benzonitrile.

### 3-(3-methoxyphenoxy)benzonitrile

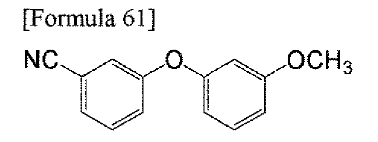

¹ H-NMR (CDCl₃ ) δ: 3.80 (3H, s), 6.58-6.61 (2H, m), 6.75 (1H, ddd, J = 8.4, 2.4, 0.8 Hz), 7.23-7.44 (5H, m).
A mixture of 0.34 g of lithium aluminum hydride and 30 ml ofTHF was stirred under cooling on ice. A mixture solution of 1.0 g of 3-(3-methoxyphenoxy)benzonitrile and 20 ml of THF was added dropwise to the reaction mixture. The obtained mixture was stirred at a room temperature for 2 hours. Thereafter, the reaction mixture solution was cooled to 0°C, and 0.3 ml of water, 0.3 ml of 15% sodium hydroxide aqueous solution and 0.9 ml of water were then successively added to the reaction mixture. The mixture was stirred for 1 hour. The mixture was filtrated through Celite (registered trade mark), and the resultant was then concentrated under reduced pressure, so as to obtain 0.8 g of crude 3-(3-methoxyphenoxy)benzylamine. 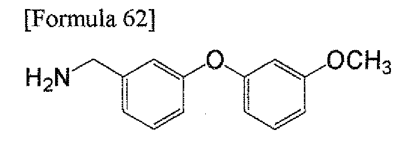 A mixture of 0.35 g of the thus obtained crude 3-(3-methoxyphenoxy)benzylamine, 0.20 g of 2-aminonicotinic acid, 0.20 g of 1-hydroxybenzotriazole, 0.35 g of WSC and 2 ml of DMF was stirred at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.36 g of N-[3-(3-methoxyphenoxy)phenyl]methyl-2-aminonicotinic acid amide (hereinafter referred to as the present compound 51).

### The present compound 51

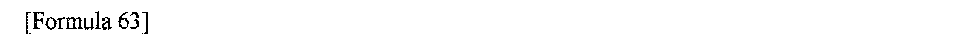

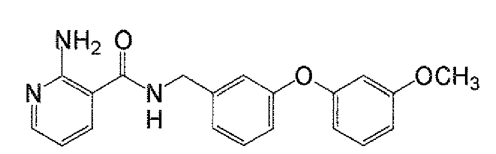

1H-NMR (CDCl3) δ: 3.78 (3H, s), 4.58 (2H, d, J = 5.6 Hz), 6.30-6.38 (3H, br m), 6.57-6.60 (3H, m), 6.65-6.69 (1H, m), 6.94 (1H, dd, J = 7.8, 2.1 Hz), 6.99-7.01 (1H, m), 7.07 (1H, d, J = 7.5 Hz), 7.21-7.25 (1H, m), 7.29-7.34 (1H, m), 7.59 (1H, dd, J = 7.7, 1.7 Hz), 8.16 (1H, dd, J = 4.8, 1.9 Hz).

### Production Example 38

A mixture of 0.35 g of 3-(4-methoxyphenoxy)benzylamine, 0.20 g of 2-aminonicotinic acid, 0.20 g of 1-hydroxybenzotriazoie, 0.35 g of WSC and 2 ml of DMF was stirred at a room temperature for 1 day. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.37 g of N-[3-(4-methoxyphenoxy)phenyl]methyl-2-aminonicotinic acid amide (hereinafter referred to as the present compound 52).

### The present compound 52

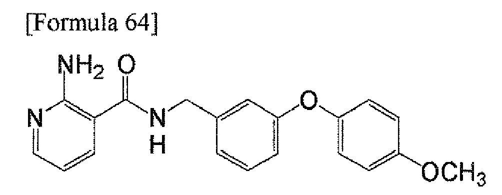

1H-NMR (CDCl3) δ: 3.81 (3H, s), 4.55 (2H, d, J = 5.8 Hz), 6.27-6.37 (3H, br m), 6.58 (1H, dd, J = 7.7, 4.8 Hz), 6.84-6.91 (4H, m), 6.97-7.02 (3H, m), 7.25-7.29 (1H, m), 7.57 (1H, dd, J = 7.7, 1.7 Hz), 8.15-8.17 (1H, m).

### Production example 39

1.0 g of 2,6-dichloro-5-fluoronicotinic acid and 1.0 g of thionyl chloride were added to 20 ml of toluene, and the obtained mixture was heated to reflux for 1 hour. Thereafter, the reaction mixture was concentrated under reduced pressure, so as to obtain crude 2,6-dichloro-5-fluoronicotinic acid chloride.

The thus obtained crude 2,6-dichloro-5-fluoronicotinic acid chloride was dissolved in 20 ml ofTHF. A mixture solution of 1.0g of 4-phenoxybenzylamine, 2.0 g of triethylalmine and 5 ml of THF was then added dropwise to the above obtained solution at 0°C The obtained solution was stirred at a room temperature for 4 hours. Thereafter, diluted hydrochloric acid was added to the reaction mixture, and it was then extracted with ethyl acetate. The organic layer was washed with a sodium bicarbonate aqueous solution, and it was then dried over magnesium sulfate, followed by concentration under reduced pressure. The obtained residue was subjected to silica gel column chromatography, so as to obtain 1.25 g of N-(4-phenoxyphenyl)methyl-2,6-dichloro-5-fluoronicotinic acid amide.

### N-(4-phenoxyphenyl)methyl-2,6-dichloro-5-fluoronicotinic acid amide

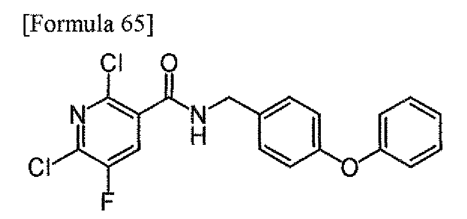

¹H-NMR (CDCl₃) δ: 4.64 (2H, d, J = 5.6 Hz), 6.90 (1H, br s), 6.98-7.03 (4H, m), 7.10-7.15 (1H, m), 7.30-7.37 (4H, m), 8.04 (1H, d, J = 7.5 Hz).

A mixture of 1.0 g of N-(4-phenoxyphenyl)methyl-2,6-dichloro-5-fluoronicotinic acid amide and 2 ml of 28% aqueous ammonia was subjected to a microwave reactor (production name: Discover; manufactured by CEM) at 18 kgf/cm² at 80°C for 40 minutes. After completion of the reaction, the reaction mixture was concentrated under reduced pressure. The obtained residue was subjected to silica gel column chromatography, so as to obtain 85 mg ofN-(4-phenoxyphenyl)methyl-2-amino-6-chloro-5-fluoronicotinic acid amide (hereinafter referred to as the present compound 53) and 600 mg of N-(4-phenoxyphenyl)methyl-6-amino-2-chloro-5-fluoronicotinic acid amide.

### The present compound 53

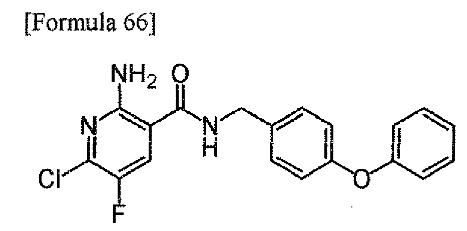

¹H-NMR (CDCl₃) δ: 4.56 (2H, d, J = 5.6 Hz), 6.16 (1H, br s), 6.38 (2H, br s), 6.98-7.03 (4H, m), 7.10-7.14 (1H, m), 7.27-7.37 (4H, m), 7.42 (1H, d, J = 8.0 Hz).

### N-(4-phenoxyphenyl)methyl-6-amino-2-chloro-5-fluoronicotinic acid amide

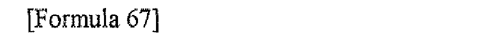

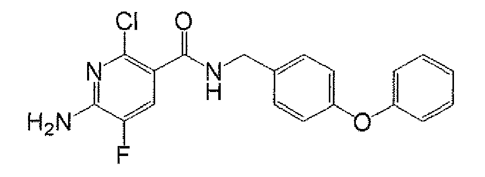

1H-NMR (CDCl₃) δ: 4.62 (2H, d, J = 5.6 Hz), 5.02 (2H, br s), 6.98-7.03 (4H, m), 7.09-7.18 (2H, m), 7.30-7.36 (4H, m), 7.93 (1H, d, J = 10.4 Hz).

### Production example 40

0.30 g of N-(4-phenoxyphenyl)methyl-6-amino-2-chloro-5-fluoronicotinic acid amide and 0.5 ml of 1,4-dioxane were added to 2 ml of 28% aqueous ammonia. The obtained mixture was subjected to a microwave reactor (production name: Discover; manufactured by CEM) at 18 kgf/cm² at 120°C for 5 hours. After, water was added to the reaction mixture, it was then extracted with ethyl acetate. The organic layer was successively washed with water and a saturated saline solution, and it was then concentrated under reduced pressure. The obtained residue was subjected to silica gel column chromatography, so as to obtain 0.22 g of N-(4-phenoxyphenyl)methyl-2,6-diamino-5-fluoronicotinic acid amide (hereinafter referred to as the present compound 54).

### The present compound 54

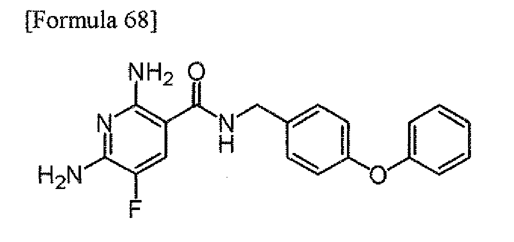

¹H-NMR (CDCl₃) δ: 4.53 (2H, d, J = 5.6 Hz), 4.73 (2H, br s), 5.94 (1H, br s), 6.29 (2H, br s), 6.96-7.02 (4H, m), 7.08-7.13 (1H, m), 7.19 (1H, d, J = 10.7 Hz), 7.27-7.37 (4H, m).

### Production example 41

A mixture of 0.14 g of 2-aminonicotinic acid, 0.23 g of 4-benzyloxy-2-fluorobenzylamine, 0.25 g of WSC and 3 ml of pyridine was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 0.15 g of N-(4-benzyloxy-2-fluorophenyl)methyl-2-aminonicotinic acid amide (hereinafter referred to as the present compound 55).

### The present compound 55

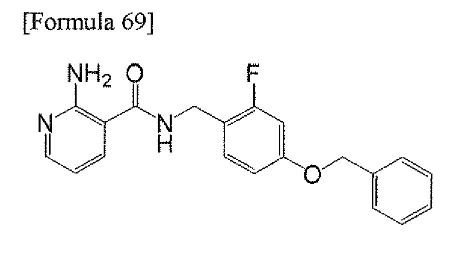

¹H-NMR (CDCl₃) δ: 4.57 (2H, d, J = 5.6 Hz), 5.05 (2H, s), 6.32 (3H, br s), 6.56-6.60 (1H, m), 6.69-6.76 (2H, m), 7.26-7.41 (6H, m), 7.57 (1H, dd, J = 7.7, 1.7 Hz), 8.15 (1H, dd, J = 4.6, 1.7 Hz).

### Production example 42

A mixture of 0.34 g of sodium {4-[(2-aminopyridin-3-carbonyl)-amino]-methyl}-phenolate, 0.19 g of 2-methylbenzyl bromide and 3 ml of DMF was stirred at a room temperature for 2 hours. Subsequently, 0.39 g of cesium carbonate was added thereto, and the obtained mixture was then stirred at a room temperature for 3 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 55 mg of N-[4-(2-methy lbenzyloxy)phenyl]methyl-2-aminonicotinic acid amide (hereinafter referred to as the present compound 58).

### The present compound 58

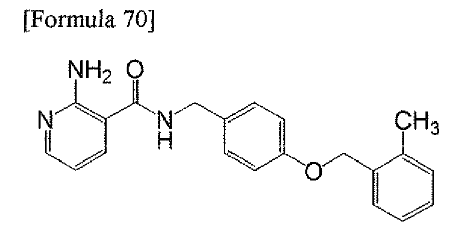

¹H-NMR (CDCl₃) δ: 2.37 (3H, s), 4.54 (2H, d, J = 5.6 Hz), 5.04 (2H, s), 6.22 (1H, br s), 6.36 (2H, br s), 6.56-6.59 (1H, m), 6.96-7.00 (2H, m), 7.20-7.30 (5H, m), 7.38-7.41 (1H, m), 7.56-7.58 (1H, m), 8.15 (1H, dd, J=4,9, 1.7 Hz).

### Production example 43

A mixture of 0.34 g of sodium 4-{[(2-aminopyridin-3-carbonyl)-amino]-methyl}-phenolate, 0.14 g of 3-methylbenzyl chloride, 0.39 g of cesium carbonate and 3 ml of DMF was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 0.16 g of N-[4-(3-methylbenzyloxy)phenyl]methyl-2-aminonicotinic acid amide (hereinafter referred to as the present compound 59).

### The present compound 59

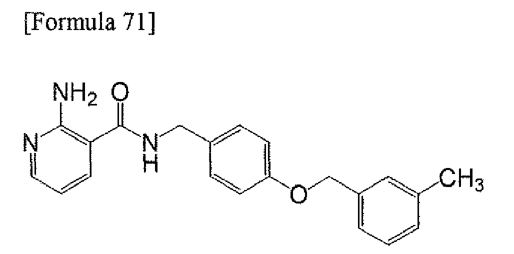

¹H-NMR (CDCl₃) δ: 2.37 (3H, s), 4.53 (2H, d, J = 5.4 Hz), 5.03 (2H, s), 6.20 (1H, br s), 6.35 (2H, br s), 6.57 (1H, dd, J = 7.8, 4.9 Hz), 6.95-6.98 (2H, m), 7.15-7.29 (6H, m), 7.57 (1H, dd, J = 7.8, 1.7 Hz), 8.16(1H, dd, J = 4.9, 1.7 Hz).

### Production example 44

A mixture of 0.34 g of sodium 4-{[(2-aminopyridin-3-carbonyl)-amino]-methyl}-phenolate, 0.14 g of 4-methylbenzyl chloride, 0.39 g of cesium carbonate and 3 ml of DMF was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 0.17 g of N-[4-(4-methylbenzyloxy)phenyl]methyl-2-aminonicotinic acid amide (hereinafter referred to as the present compound 60).

### The present compound 60

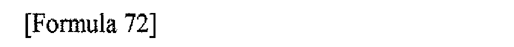

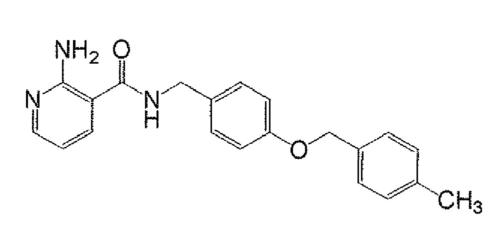

¹H-NMR (CDCl₃) δ: 2.36 (3H, s), 4.53 (2H, d, J = 5.6 Hz), 5.02 (2H, s), 6.20 (1H, br s), 6.35 (2H, br s), 6.57 (1H, dd, J = 7.8, 4.9 Hz), 6.94-6.97 (2H, m), 7.19 (2H, d, J = 7.8 Hz), 7.25-7.27 (2H, m), 7.31 (2H, d, J = 7.8 Hz), 7.56 (1H, dd, J = 7.8, 1.7 Hz), 8.16 (1H, dd, J = 4.9, 1.7 Hz).

### Production example 45

A mixture of 1.0 g of 2,6-dichloronicotinic acid, 1.3 g of WSC, 1.3 g of 4-phenoxybenzylamine and 5 ml of DMF was stirred at 100°C for 4 hours. After, water was added to the reaction mixture, it was then extracted with ethyl acetate. The organic layer was successively washed with water and a saturated saline solution, and it was then dried over magnesium sulfate, followed by concentration under reduced pressure. The obtained residue was subjected to silica gel column chromatography, so as to obtain 0.37 g of N-(4-phenoxyphenyl)methyl-2,6-dichloronicotinic acid amide. 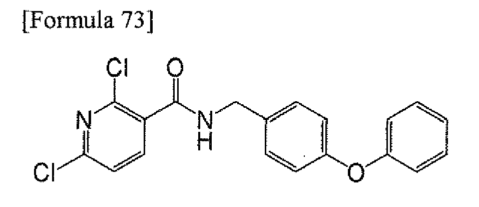 ¹H-NMR (CDCl₃) δ: 4.64 (2H, d, J = 5.8 Hz), 6.79 (1H, br s), 6.98-7.03 (4H, m), 7.10-7.14 (1H, m), 7.31-7.37 (4H, m), 7.39 (1H, d, J = 8.0 Hz), 8.15 (1H, d, J = 8.0 Hz).
A mixture of 0.30 g of N-(4-phenoxyphenyl)methyl-2,6-dichloronicotinic acid amide, 0.5 ml of 1.4-dioxane, and 2 ml of 28% aqueous ammonia was subjected to a microwave reactor (production name: Discover; manufactured by CEM) at 18 kgf/cm² at 120°C for 20 minutes. After completion of the reaction, the reaction mixture was concentrated under reduced pressure. The obtained residue was subjected to silica gel column chromatography, so as to obtain 120 mg of N-(4-phenoxyphenyl)methyl-2-amino-6-chloronicotinic acid amide (hereinafter referred to as the present compound 61) and 63 mg of N-(4-phenoxyphenyl)methyl-6-amino-2-chloronicotinic acid amide.

### The present compound 61

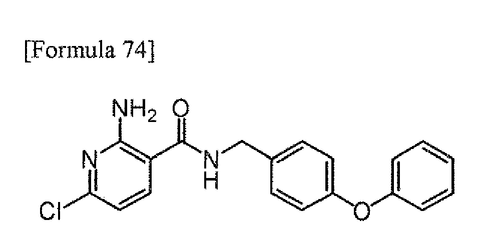

¹H-NMR (CDCl₃) δ: 4.56 (2H, d, J = 5.6 Hz), 6.21 (1H, br s), 6.55-6.63 (3H, m), 6.98-7.02 (4H, m), 7.09-7.15 (1H, m), 7.29-7.36 (4H, m), 7.53 (1H, d, J = 8.2.Hz).

### N-(4-phenoxyphenyl)methyl-6-amino-2-chloronicotinic acid amide

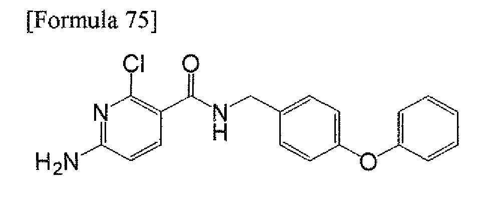

¹H-NMR (CDCl₃) δ: 4.62 (2H, d, J = 5.6 Hz), 4.86 (2H, br s), 6.47 (1H, d, J = 8.5 Hz), 6.98-7.13 (6H, m), 7.30-7.37 (4H, m), 8.08 (1H, d, J = 8.5 Hz).

### Production example 46

0.13 g of 2-amino-6-methoxymethylnicotinic acid, 0.20 g of 4-phenoxybenzylamine, 0.27 g of triethylamine and 0.55 g of a BOP reagent were added to 2 ml of DMF. The obtained mixture was stirred at a room temperature for 16 hours. Thereafter, water was added to the reaction mixture, and it was then extracted with ethyl acetate. The organic layer was washed with water, and it was then dried over magnesium sulfate, followed by concentration under reduced pressure. The obtained residue was subjected to silica gel column chromatography, so as to obtain 0.17 g of N-(4-phenoxyphenyl)methyl-2-amino-6-methoxymethylnicotinic acid amide (hereinafter referred to as the present compound 62).

### The present compound 62

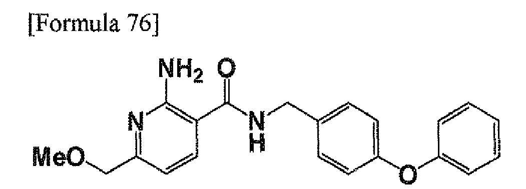

¹H-NMR (CDCl3) δ: 3.45 (3H, s), 4.40 (2H, s), 4.57 (2H, d, J = 5.8 Hz), 6.23-6.30 (1H, br m), 6.40 (2H, br s), 6.70 (1H, d, J = 8.0 Hz), 6.98-7.02 (4H, m), 7.09-7.13 (1H, m), 7.29-7.36 (4H, m), 7.61 (1H, d, J = 8.0 Hz).

### Production example 47

0.30 g of N-(4-phenoxyphenyl)methyl-2-aminonicotinic acid amide and 0.18 g of N-bromosuccinimide were added to 10 ml of chlorofrom, and the obtained mixture was then stirred at a room temperature for 4 hours. Thereafter, the reaction mixture was concentrated under reduced pressure. The obtained residue was subjected to silica gel column chromatography, so as to obtain 0.16 g of N-(4-phenoxyphenyl)methyl-2-amino-5-bromonicotinic acid amide (hereinafter referred to as the present compound 63).

### The present compound 63

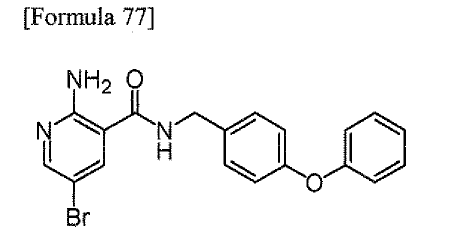

¹H-NMR (CDCl₃) δ: 4.56 (2H, d, J = 5.6 Hz), 6.25 (1H, br s), 6.38 (2H, br s), 6.98-7.03 (4H, m), 7.09-7.15 (1H, m), 7.28-7.38 (4H, m), 7.67 (1H, d, J = 2.4 Hz), 8.18 (1H, d, J = 2.4 Hz).

### Production example 48

A mixture of 0.34 g of sodium 4-{[(2-aminopyridin-3-carbonyl)-amino]-methyl}-phenolate, 0.16 g of ethyl iodide, 0.42 g of cesium carbonate and 3 ml of DMF was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 86 mg of N-(4-ethoxyphenyl)methyl-2-aminonicotinic acid amide (hereinafter referred to as the present compound 64).

### The present compound 64

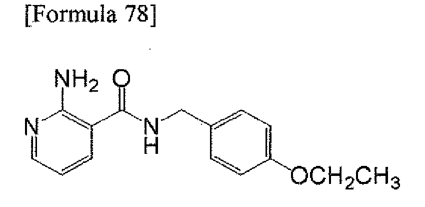

¹H-NMR (CDCl₃) δ: 1.42 (3H, t, J = 7.0 Hz), 4.03 (2H, q, J = 7.0 Hz), 4.53 (2H, d, J = 5.6 Hz), 6.21 (1H, br s), 6.35 (2H, br s), 6.57 (1H, dd, J = 7.6, 4.9 Hz), 6.86-6.90 (2H, m), 7.25-7.27 (2H, m), 7.57 (1H, dd, J = 7.8, 1.7 Hz), 8.15 (1H, dd, J = 4.9, 1.7 Hz).

### Production example 49

A mixture of 0.34 g of sodium **4-**{[(2-aminopyridin-3-carbonyl)-amino]-methyl}-phenolate, 0.14 g of bromobutane, 0.42 g of cesium carbonate and 3 ml of DMF was stirred at a room temperature for 20 hours. Thereafter, water was added to the reaction mixture, and the precipitated solid was collected by filtration. The obtained solid was subjected to silica gel chromatography, so as to obtain 0.12 g of N-(4-butoxyphenyl)methyl-2-aminonicotinic acid amide (hereinafter referred to as the present compound 65).

### The present compound 65

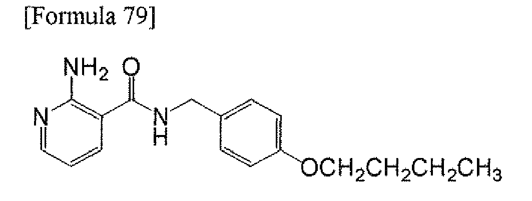

¹H-NMR (CDCl₃) δ: 0.97 (3H, t, J = 7.3 Hz), 1.46-1.53 (2H, m), 1.73-1.80 (2H, m), 3.96 (2H, t, J = 6.6 Hz), 4.52 (2H, d, J = 5.6 Hz), 6.20 (1H, br s), 6.35 (2H, br s), 6.57 (1H, dd, J = 7.8, 4.9 Hz), 6.87-6.90 (2H, m), 7.24-7.27 (2H, m), 7.56 (1H, dd, J = 7.6, 1.7 Hz), 8.15 (1H, dd, J = 4.9, 1.7 Hz).

### Production example 50

A mixture of 0.34 g of sodium 4-{[(2-aminopyridin-3-carbonyl)-amino]-methyl}-phenolate, 0.20g of 1-iodopentane, 0.42 g of cesium carbonate and 3 ml ofDMF was stirred at a room temperature for 20 hours. Thereafter, water was added to the reaction mixture, and the precipitated solid was collected by filtration. The obtained solid was subjected to silica gel chromatography, so as to obtain 0.19 g of N-(4-pentyloxyphenyl)methyl-2-aminonicotinic acid amide (hereinafter referred to as the present compound 66).

### The present compound 66

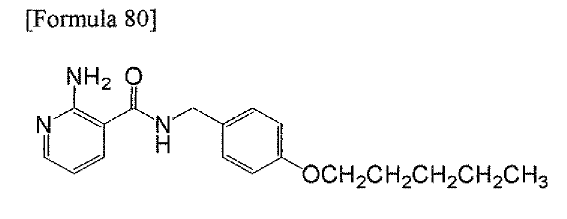

¹H-NMR (CDCl₃) δ: 0.93 (3H, t, J = 7.1 Hz), 1.35-1.48 (4H, m), 1.76-1.82 (2H, m), 3.95 (2H, t, J = 6.6 Hz), 4.52 (2H, d, J = 5.4 Hz), 6.22 (1H, s), 6.36 (2H, s), 6.57 (1H, dd, J = 7.6, 4.9 Hz), 6.86-6.90 (2H,m), 7.23-7.27 (2H,m), 7.57 (1H, dd, J = 7.8, 1.7 Hz), 8.15 (1H, dd, J = 4.9, 1.7 Hz).

### Production example 51

A mixture of 0.34 g of sodium 4-{[(2-ammopyridin-3-carbonyl)-amino]-methyl}-phenolate, 0.18 g of 1-bromoheptane, 0.42 g of cesium carbonate and 3 ml of DMF was stirred at a room temperature for 20 hours. After, water was added to the reaction mixture, it was then extracted with ethyl acetate. The extract was successively washed with water and a saturated saline solution, and it was then dried over anhydrous sodium sulfate, followed by concentration under reduced pressure. The obtained residue was subjected to silica gel chromatography, so as to obtain 0.18 g of N-(4-heptyloxyphenyl)methyl-2-aminonicotinic acid amide (hereinafter referred to as the present compound 67).

### The present compound 67

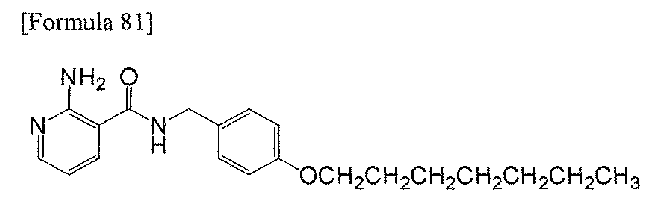

¹H-NMR (CDCl₃) δ: 0.89 (3H, t, J = 6.8 Hz), 1.25-1.49 (8H, m), 1.74-1.82 (2H, m), 3.95 (2H, t, J = 6.5 Hz), 4.52 (2H, d, J = 5.4 Hz), 6.19 (1H, br s), 6.37 (2H, br s), 6.57 (1H, dd, J = 7.8, 4.8 Hz), 6.86-6.89 (2H, m), 7.24-7.27 (2H, m), 7.57 (1H, dd, J = 7.8,1.8 Hz), 8.15 (1H, dd, J = 4.8, 1.8 Hz).

### Production example 52

14.8 g of triethylamine and 32.1 g of a BOP reagent were added to a mixture of 8.07 g of 2-aminonicotinic acid, 9.33 g of 4-hydroxybenzylamine hydrochloride and 100 ml of DMF. The obtained mixture was stirred at a room temperature for 20 hours. After, water was added to the reaction mixture, it was then extracted with ethyl acetate. The extract was dried over anhydrous sodium sulfate, and it was then concentrated under reduced pressure. The obtained residue was wased with water, hexane and MTBE, so as to obtain 6.5 g of N-(4-hydroxyphenyl)methyl-2-aminonicotinic acid amide.

### The present compound 68

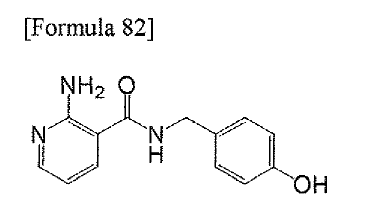

¹H-NMR (DMSO-D6) δ: 4.32 (2H, d, J = 5.9 Hz), 6.57 (1H, dd, J = 7.7, 4.8 Hz), 6.69-6.73 (2H, m), 7.06 (2H, br s), 7.09-7.14 (2H, m), 7.91 (1H, dd, J = 7.7, 1.8 Hz), 8.06 (1H, dd, J = 4.8, 1.8 Hz), 8.87 (1H, t, J = 5.9 Hz), 9.29 (1H, s).

### Production example 53

A mixture of 0.28 g of 2-aminonicotinic acid, 0.32 g of 1-hydroxybenzotriazole, 0.57 g of WSC, 0.23 g of 2-furylmethylamine and 2 ml of DMF was subjected to a microwave reactor (production name: WO-1000; manufactured by EYELA) at 500 W at 60°C for 5 minutes. Thereafter, a sodium bicarbonate aqueous solution was added to the reaction mixture, and the obtained mixture was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.33 g of N-(furan-2-yl)phenylmethyl-2-aminonicotinic acid amide (hereinafter referred to as the present compound 70).

### The present compound 70

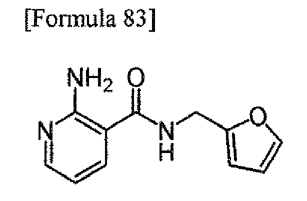

¹H-NMR (CDCl3) δ: 4.60 (2H d, J = 5.6 Hz), 6.29-6.37 (5H, m), 6.59 (1H, dd, J = 7.7, 4.9 Hz), 7.39 (1H, dd, J = 1.8, 0.8 Hz), 7.60 (1H, dd, J = 7.7, 1.7 Hz), 8.16 (1H, dd, J = 4.9, 1.7 Hz).

### Production Example 54

A mixture of 20 g of N-(4-phenoxyphenyl)methyl-2-chloro-6-methylnicotinic acid amide, 20 ml of 1,4-dioxane, 160 mg of copper(I) bromide and 100 ml of 28% aqueous ammonia was stirred at 180°C for 9 hours. Thereafter, a saturated saline solution was added to the reaction mixture, and it was then extracted with chloroform four times. The organic layer was dried over magnesium sulfate, followed by concentration under reduced pressure. The obtained residue was successively washed with MTBE, a sodium hydroxide aqueous solution and water, and it was then dried, so as to obtain 13 g of N-(4-phenoxyphenyl)methyl-2-amino-6-methylnicotinic acid amide.

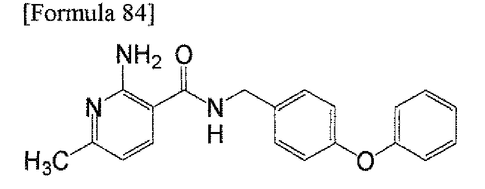

### Production example 55

A mixture of 0.24 g of N-(4-hydroxyphenyl)methyl-2-aminonicotinic acid amide, 0.19 g of 3-methoxypropane methane sulfonate, 0.42 g of cesium carbonate and 3 ml of DMF was stirred at 100°C for 2 hours. After, water was added to the reaction mixture, it was then extracted with ethyl acetate. The extract was washed with a sodium hydroxide aqueous solution, and it was then dried over anhydrous sodium sulfate, followed by concentration under reduced pressure, so as to obtain 0.20 g of N-[4-(3-methoxypropoxy)phenyl]methyl-2-aminonicotinic acid amide (hereinafter referred to as the present compound 71).

### The present compound 71

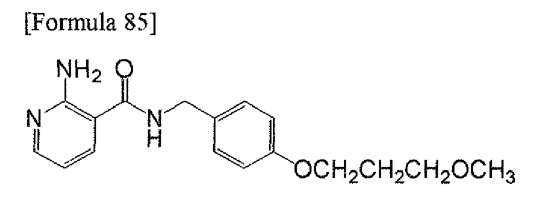

¹H-NMR (CDCl₃) δ: 2.01-2.08 (2H, m), 3.35 (3H, s), 3.55 (2H, t, J = 6.2 Hz), 4.05 (2H, t, J = 6.2 Hz), 4.52 (2H, d, J = 5.6 Hz), 6.33-6.38 (3H, m), 6.56 (1H dd, J = 7.6, 4.8 Hz), 6.87-6.89 (2H, m), 7.24-7.26 (2H, m), 7.58 (1H, dd, J = 7.6, 1.7 Hz), 8.14 (1H, dd, J = 4.8, 1.7 Hz).

### Production example 56

A mixture of 0.24 g of N-(4-hydroxyphenyl)methyl-2-aminonicotinic acid amide, 0.20 g of 1-bromo-5-methoxypentane, 0.42 g of cesium carbonate and 3 ml of DMF was stirred at 100°C for 2 hours. After, water was added to the reaction mixture, it was then extracted with ethyl acetate. The extract was washed with a sodium hydroxide aqueous solution, and it was then dried over anhydrous sodium sulfate, followed by concentration under reduced pressure. The obtained residue was subjected to silica gel chromatography, so as to obtain 0.20 g of N-[4-(5-methoxypentyloxy)phenyl]methyl-2-aminonicotinic acid amide (hereinafter referred to as the present compound 72).

### The present compound 72

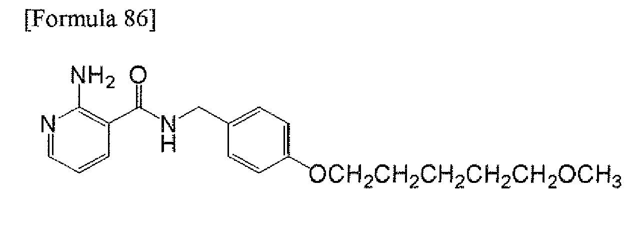

¹H-NMR (CDCl₃) δ: 1.50-1.68 (4H, m), 1.77-1.85 (2H, m), 3.34 (3H, s), 3.40 (2H, t, J = 6.3 Hz), 3.96 (2H, t, J = 6.6 Hz), 4. 52 (2H, d, J = 5.4 Hz), 6.20 (1H, s), 6.35 (2H, s), 6.57 (1H, dd, J = 7.6, 4.9 Hz), 6.86-6.89 (2H, m), 7.23-7.27 (2H, m), 7.57 (1H, dd, J = 7.6, 1.8 Hz), 8.15 (1H, dd, J = 4.9, 1.8 Hz).

### Production example 57

A mixture of 0.24 g of N-(4-hydroxyphenyl)methyl-2-aminonicotinic acid amide, 0.23 g of 6-methoxyhexane methane sulfonate, 0.42 g of cesium carbonate and 3 ml of DMF was stirred at 100°C for 2 hours. Thereafter, water was added to the reaction mixture, and the precipitated solid was then collected by filtration. The collected solid was successively washed with water and hexane, so as to obtain 0.28 g of N-[4-(6-methoxyhexyloxy)phenyl]methyl-2-aminonicotinic acid amide (hereinafter referred to as the present compound 73).

### The present compound 73

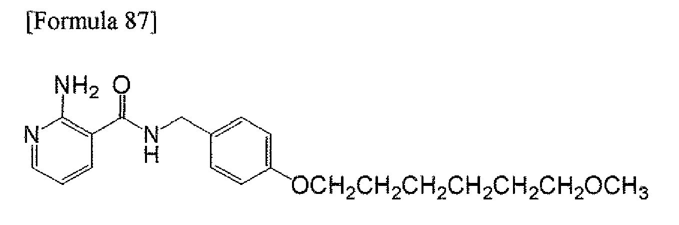

¹H-NMR (CDCl₃) δ: 1.36-1.63 (6H, m), 1.75-1.82 (2H, m), 3.33 (3H, s), 3.38 (2H, t, J = 6.6 Hz), 3.95 (2H, t, J = 6.5 Hz), 4.52 (2H, d, J = 5.6 Hz), 6.21 (1H, br s), 6.35 (2H, br s), 6.57 (1H, dd, J = 7.8, 4.9 Hz), 6.86-6.90 (2H, m), 7.24-728 (2H, m), 7.56 (1H, dd, J = 7.8, 1.6 Hz), 8.15 (1H, dd, J = 4.9, 1.6 Hz).

### Production example 58

A mixture of 0.24 g ofN-(4-hydroxyphenyl)methyl-2-aminonicotinic acid amide, 0.25 g of 7-methoxyheptane methane sulfonate, 0.42 g of cesium carbonate and 3 ml of DMF was stirred at 100°C for 2 hours. Thereafter, water was added to the reaction mixture, and the precipitated solid was then collected by filtration. The collected solid was successively washed with water and hexane, so as to obtain 0.33 g of N-[4-(7-methoxyheptyloxy)phenyl]methyl-2-aminonicotinic acid amide (hereinafter referred to as the present compound 74).

### The present compound 74

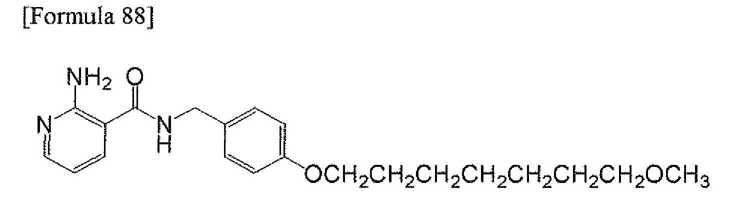

¹H-NMR (CDCl₃) δ: 1.36-1.60 (8H, m), 1.74-1.82 (2H, m), 3.33 (3H, s), 3.37 (2H, t, J = 6.6 Hz), 3.94 (2H, t, J = 6.6 Hz), 4.52 (2H, d, J = 5.4 Hz), 6.24 (1H, br s), 6,36 (2H, br s), 6.57 (1H, dd, J = 7.8, 4.9 Hz), 6.85-6.90 (2H, m), 7.23-7.28 (2H, m), 7.57 (1H, dd, J = 7.8, 1.7 Hz), 8.15 (1H, dd, J = 4.9, 1.7 Hz).

### Production example 59

A mixture of 0.24 g ofN-(4-hydroxyphenyl)methyl-2-aminonicotinic acid amide, 0.17 g of 1-bromo-2-ethoxyethane, 0.42 g of cesium carbonate and 3 ml of DMF was stirred at 100°C for 2 hours. Thereafter, water was added to the reaction mixture, and the precipitated solid was then collected by filtration. The collected solid was successively washed with water and hexane, so as to obtain 0.28 g of N-[4-(2-ethoxyethoxy)phenyl]methyl-2-aminonicotinic acid amide (hereinafter referred to as the present compound 75).

### The present compound 75

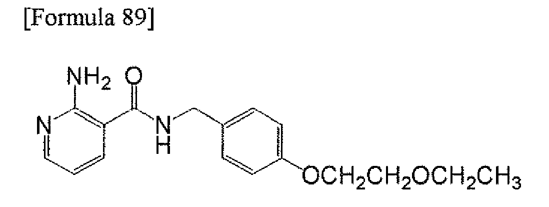

¹H-NMR (CDCl₃) δ: 1,25 (3H, t, J = 7.1 Hz), 3.60 (2H, q, J = 7.1 Hz), 3.76-3.82 (2H, m), 4.10-4.14 (2H, m), 4.53 (2H, d, J = 5.4 Hz), 6.21 (1H, br s), 6.35 (2H, br s), 6.57 (1H, dd, J = 7.6,4.9 Hz), 6.90-6.93 (2H, m), 7.24-7.27 (2H, m), 7.57 (1H, dd, J = 7.6, 1.7 Hz), 8.15 (1H, dd, J = 4,9, 1.7 Hz).

### Production example 60

A mixture of 0.35 g of N-(4-hydroxyphenyl)methyl-2-aminonicotinic acid amide, 0.43 g of 4-ethoxybutan-p-toluene sulfonate, 0.60 g of cesium carbonate and 5 ml of DMF was stirred at 100°C for 2 hours. Thereafter, water was added to the reaction mixture, and the precipitated solid was then collected by filtration. The collected solid was successively washed with water and hexane, so as to obtain 0.3 g of N-[4-(4-ethoxybutoxy)phenyl]methyl-2-aminonicotinic acid amide (hereinafter referred to as the present compound 76).

### The present compound 76

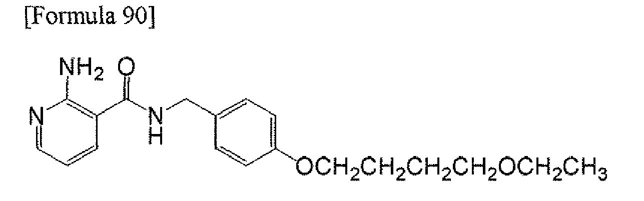

¹H-NMR (CDCl₃) δ: 1.20 (3H, t, J = 7.0 Hz), 1.73-1.90 (4H, m), 3.46-3.51 (4H, m), 3.98 (2H, t, J = 6.3 Hz), 4.53 (2H, d, J = 5.6 Hz), 6.19 (1H, br s), 6.35 (2H, br s), 6.57 (1H, dd, J = 7.7, 4.8 Hz), 6.87-6.90 (2H, m), 7.24-7.27 (2H, m), 7.57 (1H, dd, J = 7.7, 1.9 Hz), 8.15 (1H, dd, J = 4.8, 1.9 Hz).

### Production example 61

A mixture of 0.15 g of 2-amino-6-methylnicotinic acid, 0.20 g of 1-hydroxybenzotriazole, 0.30 g of 4-benzyloxybenzylamine hydrochloride, 0.30 of WSC and 10 ml of pyridine was heated to reflux for 2 hours. Thereafter, 8 ml of DMF was added to the reaction mixture, and the obtained mixture was then heated to reflux for 2 hours. Thereafter, a sodium bicarbonate aqueous solution was added to the reaction mixture, and it was then extracted with ethyl acetate. The organic layer was successively washed with water and a saturated saline solution, and it was then dried over magnesium sulfate, followed by concentration under reduced pressure. The obtained residue was subjected to silica gel column chromatography, so as to obtain 0.23 g of N-(4-benzyloxyphenyl)methyl-2-amino-6-methylnicotinic acid amide (hereinafter referred to as the present compound 77).

### The present compound 77

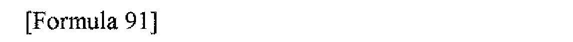

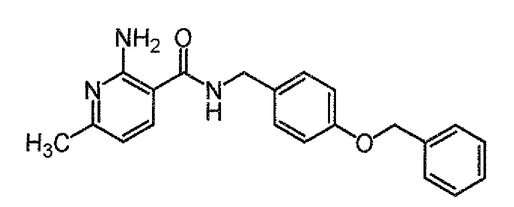

¹H-NMR (CDCl₃) δ: 2.38 (3H, s), 4.52 (2H, d, J = 5.3 Hz), 5.07 (2H, s), 6.17 (1H, br s), 6.39 (2H, br s), 6.43 (1H, d, J = 8.0 Hz), 6.94-6.98 (2H, m), 7.24-7.28 (2H, m), 7.30-7.48 (6H, m).

### Production example 62

0.30 g of N-(4-phenoxyphenyl)methyl-2-aminonicotinic acid amide and 0.14 g of N-chlorosuccinimide were added to 10 ml of chloroform. The obtained mixture was stirred at a room temperature for 4 hours. Thereafter, the reaction mixture was concentrated under reduced pressure. The obtained residue was subjected to silica gel column chromatography, so as to obtain 0.19 g of N-(4-phenoxyphenyl)methyl-2-amino-5-chloronicotinic acid amide (hereinafter referred to as the present compound 78).

### The present compound 78

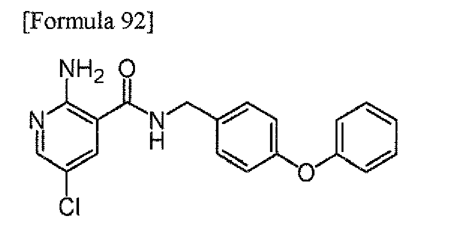

¹H-NMR (CDCl₃) δ: 4.56 (2H, d, J = 5.6 Hz), 6.25 (1H, br s), 6.36 (2H, br s), 6.98-7.03 (4H, m), 7.09-7.15 (1H, m), 7.28-7.38 (4H, m), 7.56 (1H, d, J = 2.4 Hz), 8.11 (1H, d, J = 2.4 Hz).

### Production example 63

A mixture of 0.27 g of 4-(3-methoxyphenoxy)benzylamine, 0.15 g of 2-amino-6-methylnicotinic acid, 0.15 g of 1-hydroxybenzotriazole, 0.25 g of WSC, 0.35 g of pyridine and 2 ml ofDMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.25 g of N-[4-(3-methoxyphenoxy)phenyl]methyl-2-amino-6-methylnicotinic acid amide (hereinafter referred to as the present compound 79).

### The present compound 79

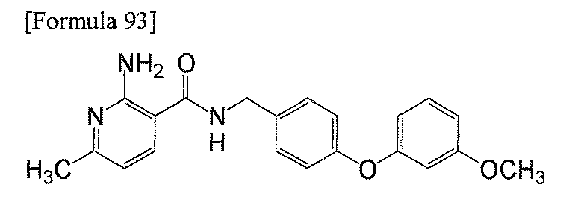

1H-NMR (CDCl3) δ: 2.38 (3H, s), 3.78 (3H, s), 4.56 (2H, d, J = 5.6 Hz), 6.24 (1H, br s), 6.38 (2H, br s), 6.44 (1H, d, J = 7.7 Hz), 6.53-6.68 (3H, m), 7.00 (2H, d, J = 8.7 Hz), 7.20-7.25 (1H, m), 7.28-7.32 (2H, m), 7.49 (1H, d, J = 7.7 Hz).

### Production example 64

A mixture of 0.27 g of 3-(4-methoxyphenoxy)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.31 g of N-[3-(4-methoxyphenoxy)phenyl]methyl-2-amino-6-methylnicotinic acid amide (hereinafter referred to as the present compound 80).

### The present compound 80

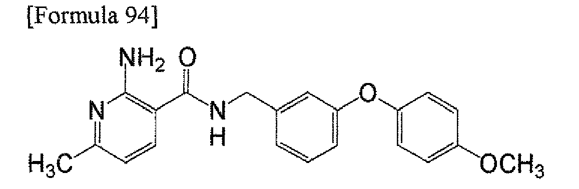

1H-NMR (CDCl3) δ: 2.38 (3H, s), 3.80 (3H, s), 4.54 (2H, d, J = 5.6 Hz), 6.25 (1H, br s), 6.35 (2H, br s), 6.44 (1H, d, J = 8.0 Hz), 6.82-7.02 (7H, m), 7.24-7.29 (1H, m), 7.47 (1H, d, J = 8.0 Hz).

### Production example 65

A mixture of 0.27 g of 4-(2-phenylethyl)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.16 g of N-[4-(2-phenylethyl)phenyl]methyl-2-amino-6-methylnicotinic acid amide (hereinafter referred to as the present compound 81).

### The present compound 81

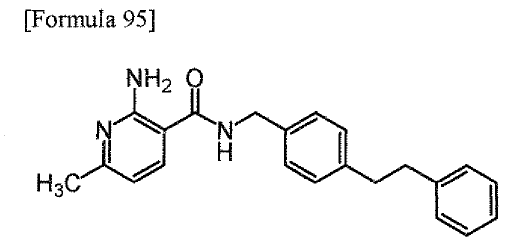

¹H-NMR (CDCl₃) δ: 2.38 (3H, s), 2.90-2.93 (4H, m), 4.56 (2H, d, J = 5.6 Hz), 6.19 (1H, br s), 6.38 (2H, br s), 6.43 (1H, d, J = 7.9 Hz), 7.16-7.31 (9H, m), 7.47 (1H, d, J = 7.9 Hz).

### Production example 66

A mixture of 0.29 g of 4-(4-fluorophenoxy)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.29 g of N-[4-(4-fluorophenoxy)phenyl]methyl-2-amino-6-methylnicotinic acid amide (hereinafter referred to as the present compound 82).

### The present compound 82

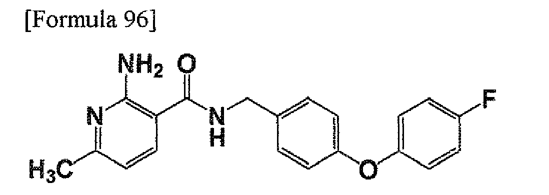

1H-NMR (CDCl3) δ: 2.38 (3H, s), 4.55 (2H, d, J = 5.6 Hz), 6.27 (1H, br s), 6.39 (2H, br s), 6.44 (1H, d, J = 7.8 Hz), 6.92-7.06 (6H, m), 7.25-7.31 (2H, m), 7.49 (1H, d, J = 7.8 Hz).

### Production example 67

A mixture of 0.28 g of 2-phenoxythiophen-5-ylmethylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.11 g of N-(2-phenoxythiophen-5-yl)methyl-2-amino-6-methylnicotinic acid amide (hereinafter referred to as the present compound 83).

### The present compound 83

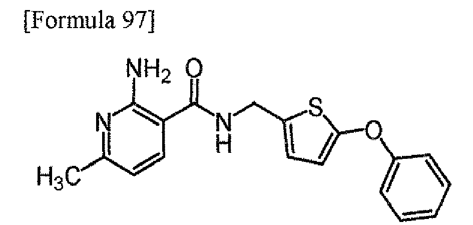

¹H-NMR (CHCl₃) δ: 2.38 (3H, s), 4.64 (2H, d, J = 5.1 Hz), 6.25 (1H, br s), 6.35 (2H, br s), 6.39 (1H, d, J = 3.9 Hz), 6.45 (1H, d, J = 7.8 Hz), 6.74 (1H, d, J = 3.9 Hz), 7.07-7.13 (3H, m), 7.30-7.36 (2H, m), 7.48 (1H, d, J = 7.8 Hz).

### Production example 68

A mixture of 0.27 g of 4-(benzyl)benzylamine hydrochloride, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried, so as to obtain 0.21 g of N-(4-benzylphenyl)methyl-2-amino-6-methylnicotinic acid amide (hereinafter referred to as the present compound 84).

### The present compound 84

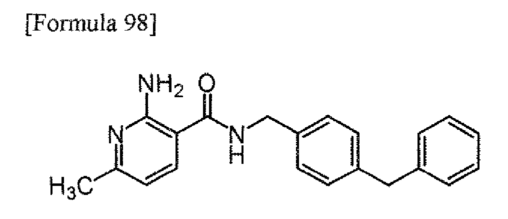

¹H-NMR (CDCl₃) δ: 2.37 (3H, s), 3.97 (2H, s), 4.54 (2H, d, J = 5.6 Hz), 6.20 (1H, br s), 6.38 (2H, br s), 6.42 (1H, d, J = 7.7 Hz), 7.16-7.31 (9H, m), 7.46 (1H, d, J = 7.7 Hz).

### Production example 69

A mixture of 0.24 g of N-(4-hydroxyphenyl)methyl-2-aminonicotinic acid amide, 0.11 g of 5-chloro-1-pentyne, 0.42 g of cesium carbonate, and 3 ml of DMF was stirred at 100°C for 6 hours. Thereafter, water was added to the reaction mixture, and the precipitated solid was collected by filtration. The obtained solid was successively washed with water and hexane, so as to obtain 0.26 g of N-[4-(4-pentynyloxy)phenyl]methyl-2-aminonicotinic acid amide (hereinafter referred to as the present compound 85).

### The present compound 85

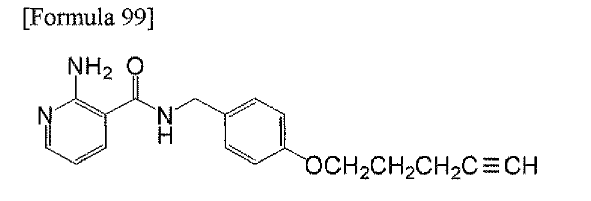

¹H-NMR (CDCl₃) δ: 1.97 (1H, t, J = 2.7 Hz), 1.97-2.04 (2H, m), 2.41 (2H, td, J = 7.0, 2.7 Hz), 4.07 (2H, t, J = 6.0 Hz), 4.53 (2H, d, J = 5.6 Hz), 6.21 (1H, br s), 6.35 (2H, br s), 6.57 (1H, dd, J = 7.7, 4.8 Hz), 6.87-6.92 (2H, m), 7.24-7.28 (2H, m), 7.57 (1H, dd, J = 7.7, 1.9 Hz), 8.15 (1H, dd, J = 4.8, 1.9 Hz).

### Production example 70

A mixture of 0.24 g of N-(4-hydroxyphenyl)methyl-2-aminonicotinic acid amide, 0.13 g of 6-chloro-1-hexyne, 0.42 g of cesium carbonate, and 3 ml of DMF was stirred at 80°C for 6 hours. Thereafter, water was added to the reaction mixture, and the precipitated solid was collected by filtration. The obtained solid was successively washed with water and hexane, so as to obtain 0.29 g of N-[4-(5-hexynyloxy)phenyl]methyl-2-aminonicotinic acid amide (hereinafter referred to as the present compound 86).

### The present compound 86

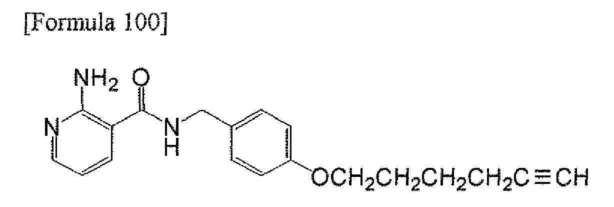

¹H-NMR (CDCl₃) δ: 1.69-1.76 (2H, m), 1.88-1.95 (2H, m), 1.97 (1H, t, J = 2.5 Hz), 228 (2H, td, J = 6.9, 2.6 Hz), 3.99 (2H, t, J = 6.3 Hz), 4.53 (2H, d, J = 5.3 Hz), 6.22 (1H, br s), 6.35 (2H, br s), 6.57 (1H, dd, J = 7.7, 4.8 Hz), 6.86-6.90 (2H, m), 7.24-7.28 (2H, m), 7.56-7.58 (1H, m), 8.15-8.17 (1H m).

### Production example 71

A mixture of 0.24 g of N-(4-hydroxyphenyl)methyl-2-aminonicotinic acid amide, 0.18 g of 2-chlorobenzyl chloride, 0.42 g of cesium carbonate and 3 ml of DMF was stirred at a room temperature for 20 hours. Thereafter, water was added to the reaction mixture, and the precipitated solid was collected by filtration. The obtained solid was successively washed with water and hexane, so as to obtain 0.28 g of N-[4-(2-chlorophenylmethoxy)phenyl]methyl-2-amino nicotinic acid amide (hereinafter referred to as the present compound 87).

### The present compound 87

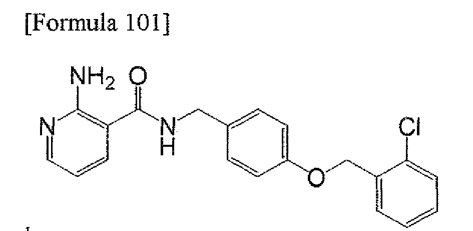

¹H-NMR (CDCl₃) δ: 4.53 (2H, d, J = 5.3 Hz), 5.17 (2H, s), 6.26 (1H, br s), 6.36 (2H, br s), 6.57 (1H, dd, J = 7.7, 4.8 Hz), 6.96-6.99 (2H, m), 7.25-7.30 (4H, m), 7.39-7.42 (1H, m), 7.53-7.58 (2H, m), 8.15 (1H, dd, J = 4.8, 1.7 Hz).

### Production example 72

A mixture of 0.24 g of N-(4-hydroxyphenyl)methyl-2-aminonicotinic acid amide, 0.18 g of 3-chlorobenzyl chloride, 0.42 g of cesium carbonate and 3 ml of DMF was stirred at a room temperature for 20 hours. Thereafter, water was added to the reaction mixture, and the precipitated solid was collected by filtration. The obtained solid was successively washed with water and hexane, so as to obtain 0.34 g of N-[4-(3-chlorobenzyloxy)phenyl]methyl-2-aminonicotinic acid amide (hereinafter referred to as the present compound 88).

### The present compound 88

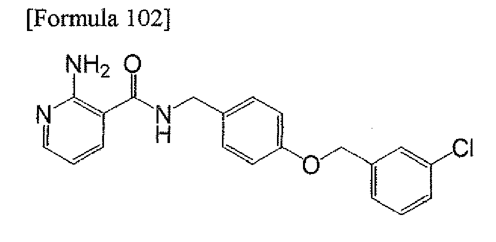

¹H-NMR (CDCl₃) δ: 4.53 (2H, d, J = 5.6 Hz), 5.04 (2H, s), 6.24 (1H, br s), 6.37 (2H, br s), 6.58 (1H, dd, J = 7.7, 4.8 Hz), 6.93-6.96 (2H, m), 7.26-7.31 (5H, m), 7.43 (1H, s), 7.58 (1H, dd, J = 7.7, 1.7 Hz), 8.15 (1H, dd, J = 4.8, 1.7 Hz).

### Production example 73

A mixture of 0.24 g of N-(4-hydroxyphenyl)methyl-2-aminonicotinic acid amide, 0.17 g of 2-methoxybenzyl chloride, 0.42 g of cesium carbonate and 3 ml of DMF was stirred at a room temperature for 20 hours. Thereafter, water was added to the reaction mixture, and the precipitated solid was collected by filtration. The obtained solid was successively washed with water and hexane, so as to obtain 0.35 g of N-[4-(2-methoxybenzyloxy)phenyl]methyl-2-aminonicotinic acid amide (hereinafter referred to as the present compound 89).

### The present compound 89

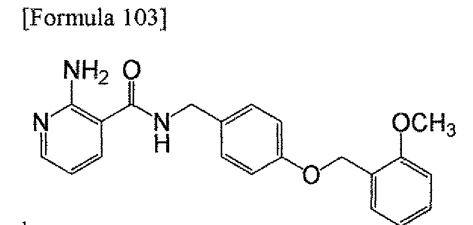

¹H-NMR (CDCl₃) δ: 3.87 (3H, s), 4.53 (2H, d, J = 5.4 Hz), 5.12 (2H, s), 6.20 (1H, br s), 6.36 (2H, br s), 6.57 (1H, dd, J = 7.6, 4.9 Hz), 6.90-7.00 (4H m), 7.25-7.32 (3H, m), 7.44 (1H, d, J = 7.6 Hz), 7.57 (1H, dd, J = 7.6, 1.7 Hz), 8.15 (1H, dd, J = 4.9, 1.7 Hz).

### Production example 74

A mixture of 0.24 g of N-(4-hydroxyphenyl)methyl-2-amino nicotinic acid amide, 0.17 g of 3-methoxybenzyl chloride, 0.42 g of cesium carbonate and 3 ml of DMF was stirred at a room temperature for 20 hours. Thereafter, water was added to the reaction mixture, and the precipitated solid was collected by filtration. The obtained solid was successively washed with water and hexane, so as to obtain 0.35 g of N-[4-(3-methoxybenzyloxy)phenyl]methyl-2-aminonicotinic acid amide (hereinafter referred to as the present compound 90).

### The present compound 90

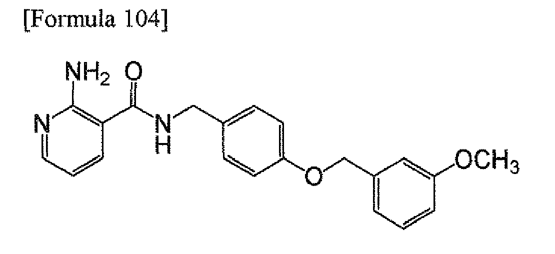

¹H-NMR (CDCl₃) δ: 3.82 (3H, s), 4.53 (2H, d, J = 5.6 Hz), 5.05 (2H, s), 6.21 (1H, br s), 6.35 (2H, br s), 6.57 (1H, dd, J = 7.6, 4.9 Hz), 6.86 (1H, dd, J = 8.2, 2.3 Hz), 6.94-7.01 (4H, m), 7.25-7.32 (3H, m), 7.57 (1H, dd, J = 7.6, 1.7 Hz), 8.15 (1H, dd, J = 4.9, 1.7 Hz).

### Production example 75

A mixture of 0.24 g of N-(4-hydroxyphenyl)methyl-2-aminonicotinic acid amide, 0.17 g of 4-methoxybenzyl chloride, 0.42 g of cesium carbonate and 3 ml ofDMF was stirred at a room temperature for 20 hours. Thereafter, water was added to the reaction mixture, and the precipitated solid was collected by filtration. The obtained solid was successively washed with water and hexane, so as to obtain 0.34 g of N-[4-(4-methoxybenzyloxy)phenyl]methyl-2-aminonicotinic acid amide (hereinafter referred to as the present compound 91).

### The present compound 91

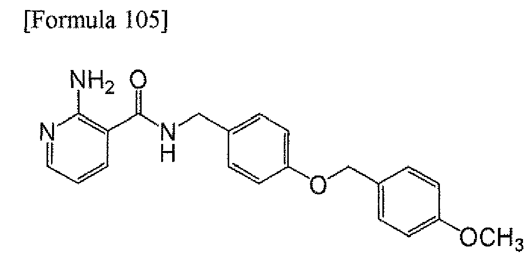

¹H-NMR (CDCl₃) δ: 3.82 (3H, s), 4.53 (2H, d, J = 5.4 Hz), 4.99 (2H, s), 6.37 (3H, br s), 6.57 (1H, dd, J = 8.0, 4.9 Hz), 6.90-6.96 (4H, m), 7.25-7.27 (2H, m), 7.33-7.36 (2H, m), 7.59 (1H, dd, J = 8.0, 1.6 Hz), 8.15 (1H, dd, J = 4.9, 1.6 Hz).

### Production example 76

A mixture of 0.28 g of 3-phenoxybenzylamine hydrochloride, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was successively washed with a sodium bicarbonate aqueous solution, water, MTBE and hexane, and it was then dried under reduced pressure, so as to obtain 0.20 g of N-(3-phenoxyphenyl)methyl-2-amino-6-methylnicotinic acid amide (hereinafter referred to as the present compound 92).

### The present compound 92

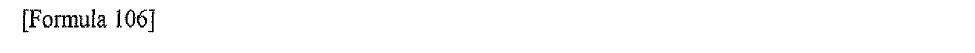

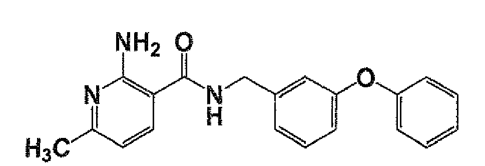

1H-NMR (CDCl3) δ: 2.38 (3H, s), 4.56 (2H, d, J = 5.8 Hz), 6.24 (1H, br s), 6.35 (2H, br s), 6.44 (1H, d, J = 7.8 Hz), 6.89-7.14 (6H, m), 7.29-7.36 (3H, m), 7.47 (1H, d, J = 7.8 Hz).

### Production example 77

A mixture of 0.18 g ofN-(2-fluorophenyl)methyl-2-amino-6-chloronicotinic acid amide, 0.27 g of tributyl(methoxymethyl) tin, 2 ml of N-methylpyrrolidone and 0.05 g of bistriphenylphosphine palladium dichloride was stirred at 130°C for 3 hours. Thereafter, ethyl acetate and diluted hydrochloric acid were added to the reaction mixture, and the obtained mixture was then stirred, so as to separate a water layer. Thereafter, sodium hydroxide was added to the water layer to adjust the pH value to pH 4, followed by extraction with ethyl acetate. The organic layer was dried over anhydrous sodium sulfate, and it was then concentrated under reduced pressure. The obtained residue was subjected to silica gel column chromatography, so as to obtain 0.06 g of N-(2-fluorophenyl)methyl-2-amino-6-methoxymethylnicotinic acid amide (hereinafter referred to as the present compound 93).

### The present compound 93

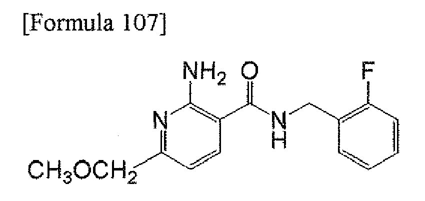

¹H-NMR (CDCl₃) δ: 3.45 (3H, s), 4.39 (2H, s), 4.65 (2H, d, J = 5.6 Hz), 6.32-6.43 (3H, br m), 6.70 (1H, d, J = 7.9 Hz), 7.05-7.16 (2H, m), 7.25-7.33 (1H, m), 7.37-7.43 (1H, m), 7.61 (1H, d, J = 7.9 Hz).

### Production example 78

A mixture of 0.18 g of 2-fluoro-3-methoxybenzylamine, 0.15 g of 2-amino-6-methylnicotinic acid, 0.15 g of 1-hydroxyhenzatriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.23 g of N-(2-fluoro-3-methoxyphenyl)methyl-2-amino-6-methylnicotinic acid amide (hereinafter referred to as the present compound 94).

### The present compound 94

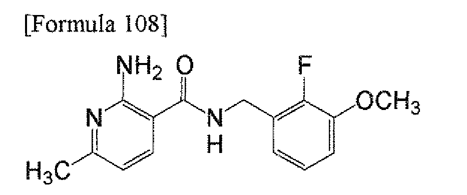

1H-NMR (CDCl3) δ: 2.38 (3H, s), 3.89 (3H, s), 4.64 (2H, dd, J = 5.8, 1.0 Hz), 6.32-6.39 (3H, br m), 6.44 (1H, d, J = 7.7 Hz), 6.89-6.98 (2H, m), 7.03-7.08 (1H, m), 7.49 (1H, d, J = 7.7 Hz).

### Production example 79

A mixture of 0.17 g of 3-methoxybenzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was then collected by filtration. The obtained solid was subjected to silica gel column chromatography, so as to obtain 0.22 g of N-(3-methoxyphenyl)methyl-2-amino-6-methylnicotinic acid amide (hereinafter referred to as the present compound 95).

### The present compound 95

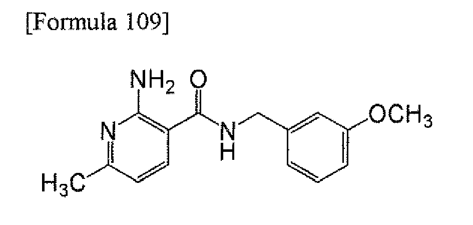

¹H-NMR (CDCl₃) δ: 2.38 (3H, s), 3.81 (3H, s), 4.56 (2H, d, J = 5.6 Hz), 6.23 (1H, br s), 6.39 (2H,br s), 6.44 (1H, d, J = 8.0 Hz), 6.82-6.94 (3H, m), 7.24-7.30 (1H, m), 7.49 (1H, d, J = 8.0 Hz).

### Production example 80

A mixture of 0.25 g of 4-(4-methylphenoxy)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.34 g of N-[4-(4-methylphenoxy)phenyl]methyl-2-amino-6-methylnicotinic acid amide (hereinafter referred to as the present compound 96).

### The present compound 96

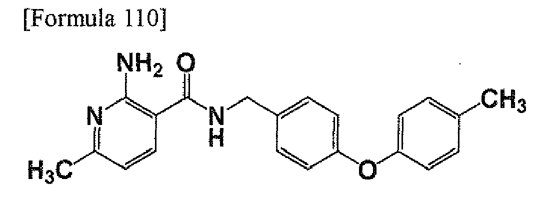

1H-NNM (CDCl3) δ: 2.34 (3H, s), 2.38 (3H, s), 4.55 (2H, d, J = 5.6 Hz), 6.21 (1H, br s), 6.38 (2H, br s), 6.44 (1H, d, J = 8.0 Hz), 6.89-6.98 (4H, m), 7.12-7.16 (2H, m), 7.26-7.32 (2H, m), 7.48 (1H, d, J = 8.0 Hz).

### Production example 81

A mixture of 0.25 g of 3-(3-methylphenoxy)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.27 g of N-[3-(3-methylphenoxy)phenyl]methyl-2-amino-6-methylnicotinic acid amide (hereinafter referred to as the present compound 97).

### The present compound 97

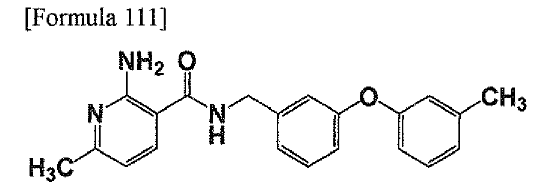

1H-NMR (CDCl3) δ: 2.33 (3H, s), 2.38 (3H, s), 4.56 (2H, d, J = 5.8 Hz), 6.25 (1H, br s), 6.37 (2H, br s), 6.44 (1H, d, J = 7.8 Hz), 6.79-6.84 (2H, m), 6.89-6.99 (3H, m), 7.03-7.08 (1H, m), 7.19-7.24 (1H, m), 7.27-7.32 (1H, m), 7.48 (1H, d, J = 7.8 Hz).

### Production example 82

A mixture of 0.21 g of 3-pentylbenzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was then collected by filtration. The obtained solid was subjected to silica gel column chromatography, so as to obtain 0.22 g of N-(3-pentylphenyl)methyl-2-amino-6-methylnicotinic acid amide (hereinafter referred to as the present compound 98).

### The present compound 98

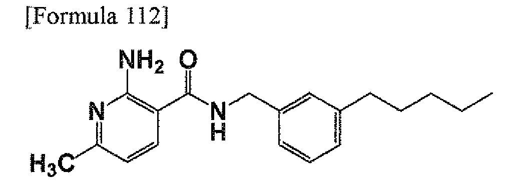

¹H-NMR (CDCl₃) δ: 0.86-0.91 (3H, m), 1.28-1.36 (4H, m), 1.57-1.66 (2H, m), 2.38 (3H, s), 2.57-2.53 (2H, m), 4.56 (2H, d, J = 5.6 Hz), 6.21 (1H, br s), 6.39 (2H, br s), 6.43 (1H, d, J = 7.8 Hz), 7.10-7.16 (3H, m), 7.25-7.29 (1H, m), 7.48 (1H, d, J = 7.8 Hz).

### Production example 83

A mixture of 0.21 g of 4-pentylbenzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.32 g of N-(4-pentylphenyl)methyl-2-amino-6-methylnicotinic acid amide (hereinafter referred to as the present compound 99).

### The present compound 99

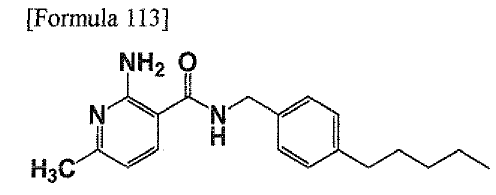

1H-NMR (CDCl3) δ: 0.87-0.91 (3H, m), 1.29-1.36 (4H, m), 1.57-1.64 (2H, m), 2.38 (3H, s), 2.57-2.62 (2H, m), 4.55 (2H, d, J = 5.3 Hz), 6.19 (1H, br s), 6.38 (2H, br s), 6.43 (1H, d, J = 7.7 Hz), 7.17 (2H, d, J = 8.0 Hz), 7.23-7.27 (2H, m), 7.47 (1H, d, J = 7.7 Hz).

### Production example 84

A mixture of 0.25 g of 4-(phenoxymethyt)benzylamine, 0.15 g of 2-amino-6-methylnicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was then collected by filtration. The obtained solid was subjected to silica gel column chromatography, so as to obtain 0.32 g of N-[4-(phenoxymethyl)phenyl]methyl-2-amino-6-methylnicotinic acid amide (hereinafter referred to as the present compound 100).

### The present compound 100

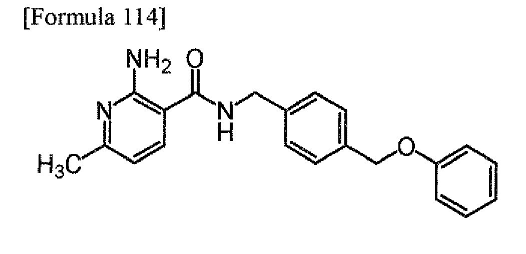

¹H-NMR (CDCl₃) δ: 2.38 (3H, s), 4.59 (2H, d, J = 5.6 Hz), 5.06 (2H, s), 6.27 (1H, br s), 6.40 (2H, br s), 6.43 (1H, d, J = 7.8 Hz), 6.94-7.00 (3H, m), 7.24-7.51 (7H, m).

### Production example 85

0.28 g of 2-amino-6-chloronicotinic acid, 0.27 g of 2-filuorobenzylarnine, 0.30 g of triethylamine and 0.90 g of a BOP reagent were added to 2 ml of DMF. The obtained mixture was stirred at a room temperature for 48 hours. After water was added to the reaction mixture, the mixture was extracted ethyl acetate. The organic layer was washed with water. The resultant was dried over sodium sulfate, and it was then concentrated under reduced pressure. The obtained residue was washed with hexane, so as to obtain 0.38 g of N-(2-fluorophenyl)methyl-2-amino-6-chloronicotinic acid amide (hereinafter referred to as the present compound 101).

### The present compound 101

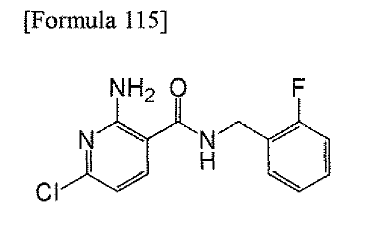

¹H-NMR (CDCl₃) δ: 4.63 (2H, d, J = 5.9 Hz), 6.34 (1H, br s), 6.56 (2H, br s), 6.58 (1H, d, J = 8.0 Hz), 7.05-7.16 (2H, m), 7.26-7.33 (1H, m), 7.36-7.41 (1H, m), 7.52 (1H, d, J = 8.0 Hz).

### Production example 86

A mixture of 0.24 g of N-(4-hydroxyphenyl)methyl-2-aminonicotinic acid amide, 81 mg of 3-bromo-1-propyne, 0.42 g of cesium carbonate and 2 ml of DMF was stirred at 60°C for 6 hours. Thereafter, water was added to the reaction mixture, and the precipitated solid was then collected by filtration. The obtained solid was successively washed with water and hexane, so as to obtain 0.22 g of N-[4-(2-propynyloxy)phenyl]methyl-2-aminonicotinic acid amide (hereinafter referred to as the present compound 102).

### The present compound 102

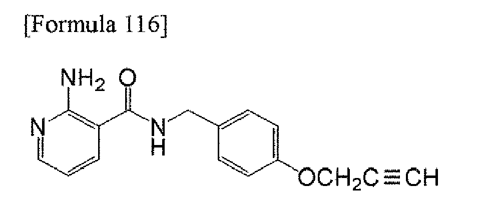

¹H-NMR (CDCl₃) δ: 2.52-2.53 (1H, m), 4.54 (2H, d, J = 5.6 Hz), 4.69-4.70 (2H, m), 6.24 (1H, br s), 6.36 (2H, br s), 6.58 (1H, dd, J = 7.6, 4.9 Hz), 6.95-7.00 (2H, m), 7.25-7.30 (2H, m), 7.57 (1H, d, J = 7.6 Hz), 8.16 (1H, d, J = 4.9 Hz).

### Production example 87

A mixture of 0.24 g of N-(4-hydroxyphenyl)methyl-2-aminonicotinic acid amide, 0.08 g of 3-bromo-1-propene, 0.42 g of cesium carbonate and 3 ml of DMF was stirred at 100°C for 6 hours. After, water was added to the reaction mixture, it was then extracted with ethyl acetate. The extract was washed with a sodium hydroxide aqueous solution, and it was then dried over anhydrous sodium sulfate, followed by concentration under reduced pressure, so as to obtain 0.14 g of N-[4-(2-propenyloxy)phenyl]methyl-2-aminonicotinic acid amide (hereinafter referred to as the present compound 103).

### The present compound 103

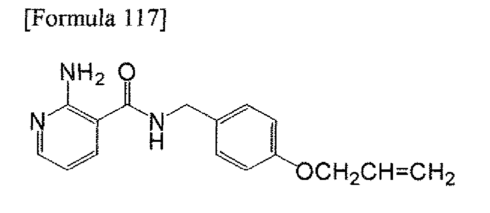

¹H-NMR (CDCl₃) δ: 4.52-4.56 (4H, m), 5.30 (1H, d, J = 10.7 Hz), 5.42 (1H, d, J = 17.3 Hz), 6.02-6.10 (1H, m), 6.21 (1H, br s), 6.36 (2H, br s), 6.56-6.60 (1H, m), 6.90-6.93 (2H, m), 7.25-7.29 (2H, m), 7.57 (1H, d, J = 7.8 Hz), 8.16 (1H, d, J = 4.9 Hz).

### Production example 88

A mixture of 0.21 g of 2-aminonicotinic acid, 0.23 g of 1-hydroxybenzotriazole, 0.37 g of WSC, 0.19 g of 3-fluorobenzylamine and 2 ml of DMF was stirred at a room temperature for 20 hours. After, water was added to the reaction mixture, it was then extracted with ethyl acetate. The extract was dried over anhydrous sodium sulfate, and it was then concentrated under reduced pressure. The obtained residue was subjected to silica gel column chromatography, so as to obtain 0.26 g of N-(3-fluorophenyl)methyl-2-aminonicotinic acid amide (hereinafter referred to as the present compound 104).

### The present compound 104

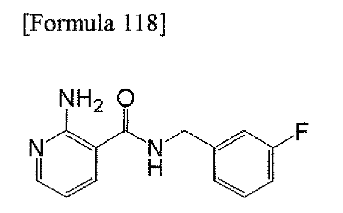

¹H-NMR (CDCl₃) δ: 4.60 (2H, d, J = 5.6 Hz), 6.34-6.43 (3H, m), 6.57-6.61 (1H, m), 6.96-7.13 (3H, m), 7.29-7.35 (1H, m), 7.62 (1H, d, J = 7.6 Hz), 8.16-8.18 (1H, m).

### Production example 89

A mixture of 0.21 g of 2-aminonicotinic acid, 0.23 g of 1-hydroxybenzotriazole, 0.37 g of WSC, 0.18 g of 3-methylbenzylamine and 2 ml of DMF was stirred at a room temperature for 20 hours. After, water was added to the reaction mixture, it was then extracted with ethyl acetate. The organic layer was successively washed with a saturated sodium bicarbonate solution, water, and a saturated saline solution. The resultant was dried over anhydrous sodium sulfate, and it was then concentrated under reduced pressure. The obtained residue was subjected to silica gel column chromatography, so as to obtain 0.19 g of N-(3-methylphenyl)methyl-2-aminonicotinic acid amide (hereinafter referred to as the present compound 105).

### The present compound 105

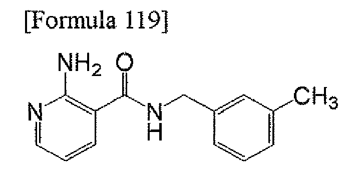

¹H-NNM (CDCl₃) δ: 2.36 (3H, s), 4.57 (2H, d, J = 5.4 Hz), 6.26 (1H, br s), 6.37 (2H, br s), 6.58 (1H, dd, J = 7.8, 4.9 Hz), 7.12-7.16 (3H, m), 7.24-7.27 (1H, m), 7.59 (1H, dd, J = 7.8, 1.7 Hz), 8.16 (1H, dd, J = 4.9, 1.7 Hz).

### Production example 90

A mixture of 0.21 g of 2-aminonicotinic acid, 0.23 g of 1-hydroxybenzotriazole, 0.37 g of WSC, 0.18 g of 4-methylbenzylamine and 3 ml of DMF was stirred at a room temperature for 20 hours. Thereafter, water was added to the reaction mixture, and the precipitated solid was then collected by filtration. The obtained solid was successively washed with water and hexane, so as to obtain 0.43 g of N-(4-methylphenyl)methyl-2-aminonicotinic acid amide (hereinafter referred to as the present compound 106).

### The present compound 106

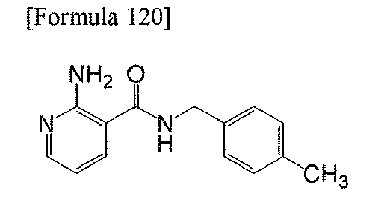

¹H-NMR (CDCl₃) δ: 2.35 (3H, s), 4.56 (2H, d, J = 5.6 Hz), 6.23 (1H, br s), 6.35 (2H, br s), 6.55-6.59 (1H, m), 7.16-7.26 (4H, m), 7.57 (1H, d, J = 7.6 Hz), 8.15-8.17 (1H, m).

### Production example 91

0.82 g of a BOP reagent and 0.20 g of triethylamine were successively added to a mixture of 0.21 g of 2-aminonicotinic acid, 0.20 g of 4-ethylbenzylarnine and 2 ml of DMF The obtained mixture was stirred at a room temperature for 20 hours. Thereafter, water and a saturated sodium bicarbonate solution were added to the reaction mixture, and the precipitated solid was then collected by filtration. The obtained solid was successively washed with water and hexane, so as to obtain 0.34 g of N-(4-ethylphenyl)methyl-2-aminonicotinic acid amide (hereinafter referred to as the present compound 107).

### The present compound 107

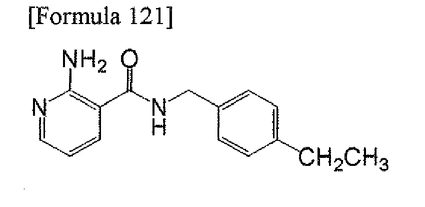

¹H-NMR (CDCl₃) δ: 1.24 (3H, t, J = 7.6 Hz), 2.65 (2H, q, J = 7.6 Hz), 4.57 (2H, d, J = 5.3 Hz), 6.23 (1H, br s), 6.36 (2H, br s), 6.57 (1H, dd, J = 7.7, 4.8 Hz), 7.19-7.22 (2H, m), 7.25-7.29 (2H, m), 7.57 (1H, dd, J = 7.7, 1.7 Hz), 8.16 (1H, dd, J = 4.8, 1.7 Hz).

### Production example 92

0.55 g of a BOP reagent and 0.13 g of triethylamine were successively added to a mixture of 0.14 g of 2-aminonicotinic acid, 0.12 g of 2-methylbenzylamine and 2 ml of DMF. The obtained mixture was stirred at a room temperature for 20 hours. Thereafter, water and a saturated sodium bicarbonate solution were added to the reaction mixture, and the precipitated solid was then collected by filtration. The obtained solid was successively washed with water and hexane, so as to obtain 0.21 g of N-(2-methylphenyl)methyl-2-aminonicotinic acid amide (hereinafter referred to as the present compound 108).

### The present compound 108

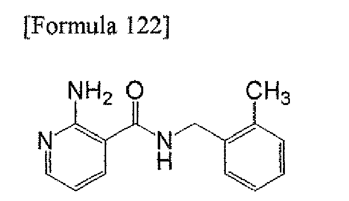

¹H-NMR (CDCl₃) δ: 2.37 (3H, s), 4.60 (2H, d, J = 5.1 Hz), 6.12 (1H, br s), 6.37 (2H, br s), 6.57 (1H, dd, J = 7.6, 4.9 Hz), 7.19-7.31 (4H, m), 7.57 (1H, dd, J = 7.6, 1.7 Hz), 8.15 (1H, dd, J = 4.9, 1.7 Hz).

### Production example 93

0.55 g of a BOP reagent and 0.25 g of triethylamine were successively added to a mixture of 0.14 g of 2-aminonicotinic acid, 0.20 g of 4-butylbenzylamine hydrochloride and 2 ml of DMF. The obtained mixture was stirred at a room temperature for 20 hours. Thereafter, water and a saturated sodium bicarbonate solution were added to the reaction mixture, and the precipitated solid was then collected by filtration. The obtained solid was successively washed with water and hexane, so as to obtain 0.26 g of N-(4-butylphenyl)methyl-2-aminonicotinic acid amide (hereinafter referred to as the present compound 109).

### The present compound 109

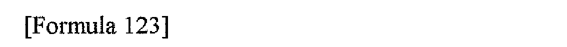

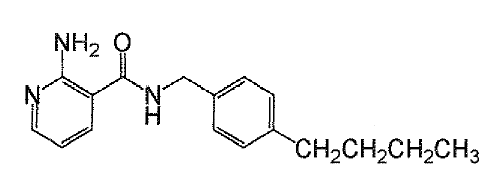

1H-NMR (CDCl3) δ: 0.93 (3H, t, J = 7.3 Hz), 1.32-1.39 (2H, m), 1.54-1.63 (2H, m), 2.61 (2H, t, J = 7.7 Hz), 4.56 (2H, d, J = 5.4 Hz), 6.24 (1H, br s), 6.36 (2H, br s), 6.57 (1H, dd, J = 7.7, 4.8 Hz), 7.17-7.19 (2H, m), 7.24-7.27 (2H, m), 7.58 (1H, dd, J = 7.6, 1.7 Hz), 8.16 (1H, dd, J = 4.9, 1.7 Hz).

### Production example 94

0.82 g of a BOP reagent and 0.20 g of triethylamine were successively added to a mixture of 0.21 g of 2-aminonicotinic acid, 0.29 g of 4-hexylbenzylaniine and 2 ml of DME The obtained mixture was stirred at a room temperature for 20 hours. Thereafter, water and a saturated sodium bicarbonate solution were added to the reaction mixture, and the precipitated solid was then collected by filtration. The obtained solid was successively washed with water and hexane, so as to obtain 0.40 g of N-(4-hexylphenyl)methyl-2-aminonicotinic acid amide (hereinafter referred to as the present compound 110).

### The present compound 110

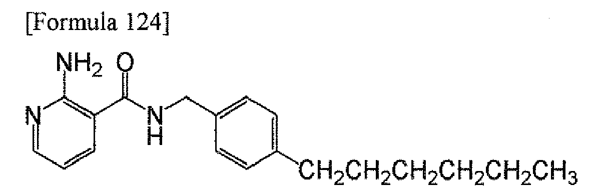

1H-NMR (CDCl3) δ: 0.88 (3H, t, J = 6.9 Hz), 1.27-1.35 (6H, m), 1.56-1.62 (2H, m), 2.60 (2H, t, J = 7.7 Hz), 4,56 (2H, d, J = 5.6 Hz), 6.24 (1H, br s), 6.36 (2H, br s), 6.57 (1H, dd, J = 7.7, 4.8 Hz), 7.16-7.20 (2H, m), 7.24-7.28 (2H, m), 7.58 (1H, dd, J = 7.7, 1.7 Hz), 8.16 (1H, dd, J = 4.8, 1.7 Hz).

### Production example 95

0.55 g of a BOP reagent and 0.13 g of triethylamine were successively added to a mixture of 0.14 g of 2-aminonicotinic acid, 0.23 g of 4-heptylbenzylamine and 2 ml of DMF. The obtained mixture was stirred at a room temperature for 20 hours. Thereafter, water and a saturated sodium bicarbonate solution were added to the reaction mixture, and the precipitated solid was then collected by filtration. The obtained solid was successively washed with water and hexane, so as to obtain 0.28 g of N-(4-heptylphenyl)methyl-2-aminonicotinic acid amide (hereinafter referred to as the present compound 111).

### The present compound 111

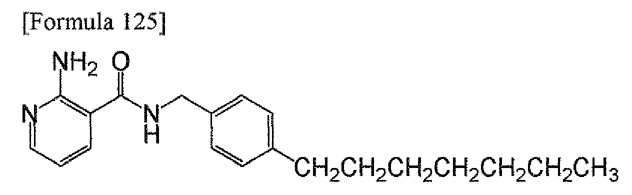

1H-NMR (CDCl3) δ: 0.88 (3H, t, J = 6.8 Hz), 1.26-1.34 (8H, m), 1.58-1.62 (2H, m), 2.60 (2H, t, J = 7.7 Hz), 4.56 (2H, d, J = 5.4 Hz), 6.23 (1H, br s), 6.36 (2H, br s), 6.57 (1H, dd, J = 7.7, 4.8 Hz), 7.16-7.19 (2H, m), 7.24-7.27 (2H, m), 7.58 (1H, dd, J = 7.6, 1.7 Hz), 8.16 (1H, dd, J = 4.9, 1.7 Hz).

### Production example 96

0.55 g of a BOP reagent and 0.13 g of triethylamine were successively added to a mixture of 0.14 g of 2-aminonicotinic acid, 0.22 g of 3-fluoro-4-phenoxybenzylamine and 2 ml of DMF. The obtained mixture was stirred at a room temperature for 20 hours. After, water was added to the reaction mixture, it was then extracted with ethyl acetate. The organic layer was successively washed with a saturated sodium bicarbonate solution, water and a saturated saline solution, and it was then dried over anhydrous sodium sulfate, followed by concentration under reduced pressure. The obtained residue was subjected to silica gel column chromatography, so as to obtain 0.28 g of N-(3-fluoro-4-phenoxyphenyl)methyl-2-aminonicotinic acid amide (hereinafter referred to as the present compound 112).

### The present compound 112

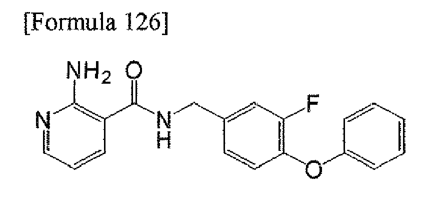

¹H-NMR (CDCl₃) δ: 4.58 (2H, d, J = 5.9 Hz), 6.39 (3H, br s), 6.59-6.62 (1H, m), 6.96-7.20 (6H, m), 7.30-7.35 (2H, m), 7.63 (1H, dd, J = 7.7, 1.6 Hz), 8.16-8.19 (1H, m).

### Production example 97

A mixture of 0.24 g of N-(4-hydroxyphenyl)methyl-2-amino nicotinic acid amide, 0.21 g of 3,5-difluorobenzyl bromide, 0.42 g of cesium carbonate and 2 ml of DMF was stirred at a room temperature for 20 hours. Thereafter, water was added to the reaction mixture, and the precipitated solid was then collected by filtration. The obtained solid was subjected to silica gel column chromatography, so as to obtain 0.16 g of N-[4-(3,5-difluorobenzyloxy)phenyl]methyl-2-aminonicotinic acid amide (hereinafter referred to as the present compound 113).

### The present compound 113

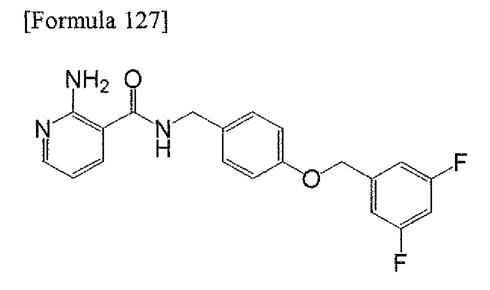

¹H-NMR (CDCl₃) δ: 4.54 (2H, d, J = 5.6 Hz), 5.05 (2H, s), 6.23 (1H, br s), 6.37 (2H, br s), 6.58 (1H, dd, J = 7.6, 4.9 Hz), 6.73-6.78 (1H, m), 6.92-6.97 (4H, m), 7.26-7.29 (2H, m), 7.57 (1H, dd, J = 7.6, 1.7 Hz), 8.16 (1H dd, J = 4.9, 1.7 Hz).

### Production example 98

A mixture of 0.24 g of N-(4-hydroxyphenyl)methyl-2-aminonicotinic acid amide, 0.23 g of 2-fluoro-3-methoxyphenylmethyl methanesulfonate, 0.42 g of cesium carbonate and 3 ml ofDMF was stirred at 100°C for 3 hours. After, water was added to the reaction mixture, it was then extracted with ethyl acetate. The organic layer was successively washed with a saturated sodium bicarbonate solution, water, and a saturated saline solution. The resultant was dried over anhydrous sodium sulfate, and it was then concentrated under reduced pressure. The obtained residue was subjected to silica gel column chromatography, so as to obtain 0.29 g ofN-[4-(2-fluoro-3-methoxybenzyloxy)phenyl]methyl-2-aminonicotinic acid amide (hereinafter referred to as the present compound 114).

### The present compound 114

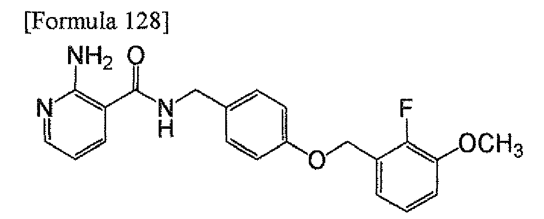

¹H-NMR (CDCl₃) δ: 3.90 (3H, s), 4.53 (2H, d, J = 5.4 Hz), 5.14 (2H, s), 6.22 (1H, br s), 6.36 (2H, br s), 6.57 (1H, dd, J = 7.6, 4.9 Hz), 6.92-7.00 (3H, m), 7.05-7.10 (2H, m), 7.26-7.28 (2H, m), 7.57 (1H, dd, J = 7.6, 1,7 Hz), 8.15 (1H, dd, J = 4.9, 1.7 Hz).

### Production example 99

A mixture of 248 mg of 2-aminonicotinic acid, 203 mg of 1-hydroxybenzotriazole, 430 mg of WSC, 312 mg of 4-(3-chloro-4-fluorophenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 200 mg of N-[4-(3-chloro-4-fluorophenoxy)phenyl]methyl-2-aminonicotinic acid amide (hereinafter referred to as the present compound 115).

### The present compound 115

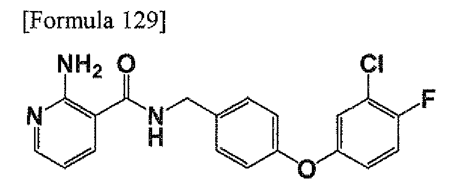

1H-NMR (CDCl3) δ: 4.58 (2H, d, J = 5.8 Hz), 6.32-6.41 (3H, br m), 6.58 (1H, dd, J = 7.7, 4.8 Hz), 6.86-6.91 (1H, m), 6.95-6.99 (2H, m), 7.01-7.06 (1H, m), 7.08-7.13 (1H, m), 7.31-7.34 (2H, m), 7.61 (1H, dd, J = 7.7, 1.8 Hz), 8.16 (1H, dd, J= 4. 8, 1.8 Hz).

### Production example 100

1.0 g of N-(4-phenoxyphenyl)methyl-2-amino-6-methylnicotinic acid amide and 0.91 g of 2,4-bis(4-methoxyphenyl)-1,3,2,4-dithiadiphosphetan-2,4-disulfide (a Lawesson's reagent) were added to 10 ml of 1,4-dioxane. The obtained mixture was heated to reflux for 8 hours. Thereafter, a sodium bicarbonate aqueous solution was added to the reaction mixture, and the mixture was then extracted with ethyl acetate. The organic layer was washed with water and a saturated saline solution, and it was then dried over magnesium sulfate, followed by concentration under reduced pressure. The obtained residue was subjected to silica gel column chromatography, so as to obtain 197 mg of N-(4-phenoxyphenyl)methyl-2-amino-6-methyl-nicotinic acid thioamide (hereinafter referred to as the present compound 116).

### The present compound 116

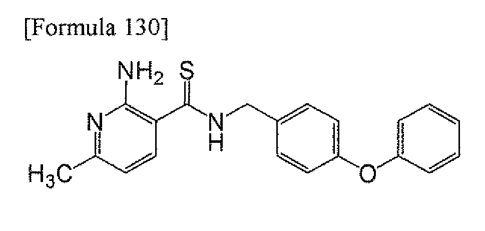

¹H-NMR (CDCl₃) δ: 2.36 (3H, s), 4.91 (2H, d, J = 5.1 Hz), 5.95 (2H, br s), 6.48 (1H d, J = 7.7 Hz), 6.99-7.04 (4H, m), 7.13 (1H, td, J = 7.4, 1.0 Hz), 7.31-7.38 (5H, m), 7.66 (1H, br s).

### Production example 101

A mixture of 248 mg of 2-aminonicotinic acid, 203 mg of 1-hydroxybenzotriazole, 430 mg of WSC, 332 mg of 4-(4-chloro-4-ethylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 244 mg of N-[4-(4-chloro-4-ethylphenoxy)phenyl]methyl-2-aminonicotinic acid amide (hereinafter referred to as the present compound 117).

### The present compound 117

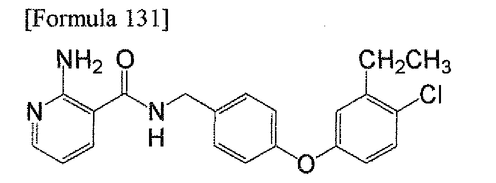

1H-NMR (CDCl₃) δ: 1.21 (3H, t, J = 7.5 Hz), 2.72 (2H, q, J = 7.5 Hz), 4.58 (2H, d, J = 5.6 Hz), 6.29 (1H, br s), 6.36 (2H, br s), 6.59 (1H, dd, J = 7.8, 4.8 Hz), 6.76 (1H, dd, J = 8.7, 2.9 Hz), 6.91 (1H, d, J = 2.9 Hz), 6.96-6.99 (2H, m), 7.28 (1H, d, J = 8.7 Hz), 7.31 (2H, d, J = 8.8 Hz), 7.60 (1H, dd, J = 7.8, 1.8 Hz), 8.17 (1H, dd, J = 4.8, 1.8 Hz).

### Production example 102

A mixture of 248 mg of 2-aminonicotinic acid, 203 mg of 1-hydroxybenzotriazole, 430 mg of WSC, 292 mg of 4-(2,4-dimethylphenoxy)benzylamine and 2 ml of DMF was stirred at 60°C for 3 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 266 mg of N-[4-(2,4-dimethylphenoxy)phenyl]methyl-2-aminonicotinic acid amide (hereinafter referred to as the present compound 118).

### The present compound 118

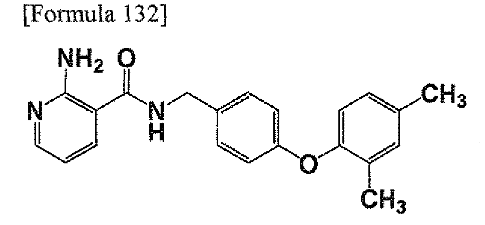

1H-NMR (CDCl3) δ: 2.17 (3H, s), 2.32 (3H, s), 4.53 (2H, d, J = 5.6 Hz), 6.33-6.43 (1H, br m), 6.48 (2H, br s), 6.56 (1H, dd, J = 7.6, 4.9 Hz), 6.81 (1H, d, J = 8.1 Hz), 6.82-6.87 (2H, m), 6.95-7.00 (1H, m), 7.06 (1H, s), 7.24 (2H, d, J = 8.6 Hz), 7.60 (1H, dd, J = 7.6, 1.8 Hz), 8.12 (1H, dd, J=4.9, 1.8 Hz).

### Production example 103

A mixture of 248 mg of 2-aminonicotinic acid, 203 mg of 1-hydroxybenzotriazole, 430 mg of WSC, 237 mg of 4-(3,4-dimethylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 214 mg of N-[4-(3,4-dimethylphenoxy)phenyl]methyl-2-aminonicotinic acid amide (hereinafter referred to as the present compound 119).

### The present compound 119

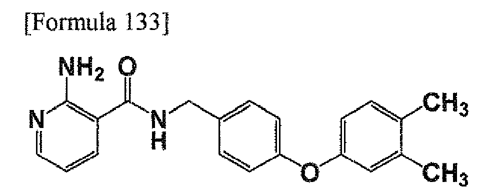

1H-NMR (CDCl3) δ: 2.24 (6H, s), 4.56 (2H, d, J = 5.6 Hz), 6.32 (1H, br s), 6.41 (2H, br s), 6.58 (1H, dd, J = 7.7, 4.9 Hz), 6.75 (1H, dd, J = 8.2, 2.4 Hz), 6.82 (1H, d, J = 2.4 Hz), 6.94-6.97 (2H, m), 7.09 (1H, d, J = 8.2 Hz), 7.28 (2H, d, J = 8.6 Hz), 7.60 (1H, dd, J = 7.7, 1.8 Hz), 8.15 (1H, dd, J = 4.9, 1.8 Hz).

### Production example 104

A mixture of 248 mg of 2-aminonicotinic acid, 203 mg of 1-hydroxybenzotriazole, 430 mg of WSC, 311 mg of 4-(2,4,6-trimethylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 246 mg of N-[4-(2,4,6-trimethylphenoxy)phenyl]methyl-2-aminonicotinic acid amide (hereinafter referred to as the present compound 120).

### The present compound 120

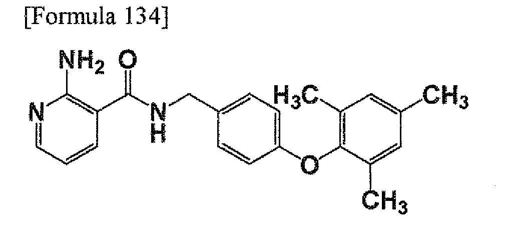

1H-NMR (CDCl3) δ: 2.07 (6H, s), 2.30 (3H, s), 4.52 (2H, d, J = 5.6 Hz), 6.28 (1H, br s), 6.39 (2H, br s), 6.57 (1H, dd, J = 7.8, 4.8 Hz), 6.72-6.76 (2H, m), 6.90 (2H, s), 7.21 (2H, d, J = 8.8 Hz), 7.58 (1H, dd, J = 7.8, 1.8 Hz), 8.14 (1H, dd, J = 4.8, 1.8 Hz).

### Production example 105

A mixture of 248 mg of 2-aminonicotinic acid, 203 mg of 1-hydroxybenzotriazole, 430 mg of WSC, 316 mg of 4-(2,3,6-trimethylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 242 mg of N-[4-(2,3,6-trimethylphenoxy)phenyl]methyl-2-aminonicotinic acid amide (hereinafter referred to as the present compound 121).

### The present compound 121

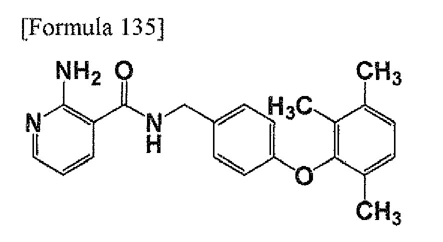

1H-NMR (CDCl3) δ: 2.03 (3H, s), 2.08 (3H, s), 2.27 (3H, s), 4.52 (2H, d, J = 5.6 Hz), 6.26 (1H, br s), 6.42 (2H, br s), 6.57 (1H, dd, J = 7.7, 4.9 Hz), 6.71-6.75 (2H, m), 6.96 (1H, d, J = 7.8 Hz), 6.99 (1H, d, J = 7.8 Hz), 7.22 (2H, d, J = 8.8 Hz), 7.59 (1H, dd, J = 7.7, 1.8 Hz), 8.14 (1H, dd, J = 4.9, 1.8 Hz).

### Production example 106

A mixture of 248 mg of 2-aminonicotinic acid, 203 mg of 1-hydroxybenzotriazole, 430 mg of WSC, 328 mg of 4-(3-ethylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 171 mg of N-[4-(3-ethylphenoxy)phenyl]methyl-2-aminonicotinic acid amide (hereinafter referred to as the present compound 122).

### The present compound 122

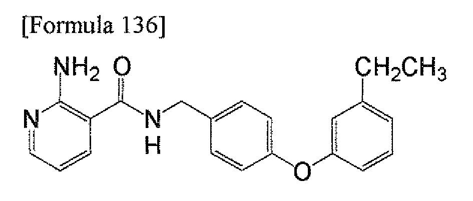

1H-NMR (CDCl3) δ: 1.22 (3H, t, J = 7.7 Hz), 2.63 (2H, q, J = 7.7 Hz), 4.57 (2H, d, J = 5.6 Hz), 6.37 (3H, br s), 6.58 (1H, dd, J = 7.7, 4.8 Hz), 6.81 (1H, dd, J = 8.0, 1.9 Hz), 6.86-6.88 (1H, m), 6.94-7.01 (3H, m), 7.23 (1H, d, J = 8.0 Hz), 7.29 (2H, d, J = 8.6 Hz), 7.60 (1H, dd, J = 7.7, 1.7 Hz), 8.15 (1H, dd, J = 4.8, 1.7 Hz).

### Production example 107

A mixture of 248 mg of 2-aminonicotinic acid, 203 mg of 1-hydroxybenzotriazole, 430 mg of WSC, 296 mg of 4-[3-(1-methylethyl)phenoxy]benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 194 mg of N-{4-[3-(1-methylethyl)phenoxy]phenyl}methyl-2-aminonicotinic acid amide (hereinafter referred to as the present compound 123).

### The present compound 123

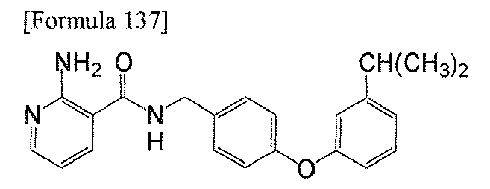

1H-NMR (CDCl3) δ: 1.24 (6H, d, J = 7.0 Hz), 2.83-2.94 (1H, m), 4.57 (2H, d, J = 5.6 Hz), 6.31-6.44 (3H, br m), 6.58 (1H, dd, J = 7.7, 4.9 Hz), 6.79 (1H, ddd, J = 8.0, 2.2, 1.0 Hz), 6.90-6.92 (1H, m), 6.97-7.01 (3H, m), 7.24 (1H, d, J = 8.0 Hz), 7.30 (2H, d, J = 8.6 Hz), 7.60 (1H, dd, J = 7.7, 1.8 Hz), 8.15 (1H, dd, J = 4.9, 1.8 Hz).

### Production example 108

A mixture of 248 mg of 2-aminonicotinic acid, 203 mg of 1-hydroxybenzotriazole, 430 mg of WSC, 302 mg of 4-(4-propylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 125 mg of N-[4-(4-propylphenoxy)phenyl]methyl-2-aminonicotinic acid amide (hereinafter referred to as the present compound 124).

### The present compound 124

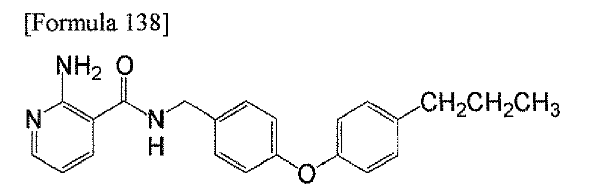

1H-NMR (CDCl3) δ: 0.95 (3H, t, J = 7.3 Hz), 1.58-1.69 (2H, m), 2.57 (2H, t, J = 7.6 Hz), 4.56 (2H, d, J = 5.6 Hz), 6.28 (1H, br s), 6.36 (2H, br s), 6.58 (1H, dd, J = 7.7, 4.9 Hz), 6.91-6.94 (2H, m), 6.95-6.99 (2H, m), 7.14 (2H, d, J = 8.6 Hz), 7.29 (2H, d, J = 8.6 Hz), 7.59 (1H, dd, J = 7.7, 1.7 Hz), 8.16 (1H, dd, J = 4.9, 1.7 Hz).

### Production example 109

A mixture of 248 mg of 2-aminonicotinic acid, 203 mg of 1-hydroxybenzotriazole, 430 mg of WSC, 330 mg of 4-(4-butylphenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 173 mg of N-[4-(4-butylphenoxy)phenyl]methyl-2-aminonicotinic acid amide (hereinafter referred to as the present compound 125).

### The present compound 125

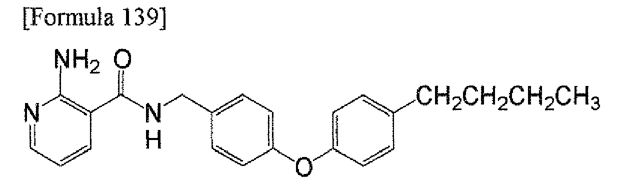

1H-NMR (CDCl3) δ: 0.93 (3H, t, J = 7.3 Hz), 1.31-1.41 (2H, m), 1.55-1.63 (2H, m), 2.59 (2H, t, J = 7.7 Hz), 4.56 (2H, d, J = 5.6 Hz), 6.24 (1H, br s), 6.36 (2H, br s), 6.58 (1H, dd, J = 7.7, 5.0 Hz), 6.90-6.94 (2H, m), 6.95-6.99 (2H, m), 7.14 (2H, d, J = 8.7 Hz), 7.29 (2H, d, J = 8.7 Hz), 7.59 (1H, dd, J = 7.7, 1.8 Hz), 8.16 (1H, dd, J = 5.0, 1.8 Hz).

### Production example 110

A mixture of 248 mg of 2-aminonicotinic acid, 203 mg of 1-hydroxybenzotriazole, 430 mg of WSC, 247 mg of 4-(2-chlorophenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 51 mg of N-[4-(2-chlorophenoxy)phenyl]methyl-2-aminonicotinic acid amide (hereinafter referred to as the present compound 126).

### The present compound 126

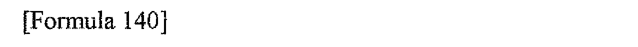

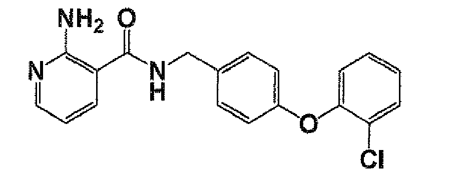

1H-NMR (CDCl3) δ: 4.57 (2H, d, J = 5.6 Hz), 6.26 (1H, br s), 6.48 (2H, br s), 6.59 (1H, dd, J = 7.7, 5.0 Hz), 6.92-6.96 (2H, m), 7.01 (1H, dd, J = 8.0, 1.5 Hz), 7.11 (1H, td, J = 7.7, 1.5 Hz), 7.21-7.27 (1H, m), 7.31 (2H, d, J = 8.8 Hz), 7.47 (1H, dd, J = 8.0, 1.6 Hz), 7.60 (1H, dd, J = 7.7, 1.8 Hz), 8.15 (1H, dd, J = 5.0, 1. 8 Hz).

### Production example 111

A mixture of 248 mg of 2-aminonicotinic acid, 203 mg of 1-hydroxybenzotriazole, 430 mg of WSC, 296 mg of 4-(3,5-dichlorophenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 112 mg of N-[4-(3,5-dichlorophenoxy)phenyl]methyl-2-aminonicotinic acid amide (hereinafter referred to as the present compound 127).

### The present compound 127

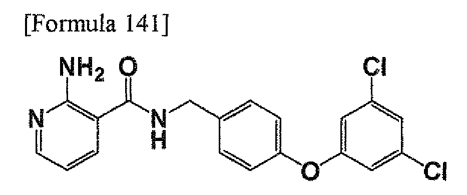

1H-NMR (CDCl3) δ: 4.61 (2H, d, J = 5.8 Hz), 6.33-6.42 (3H, br m), 6.59 (1H, dd, J = 7.7, 4.9 Hz), 6.86 (2H, d, J = 1.8 Hz), 7.00-7.04 (2H, m), 7.08 (1H, t, J =1.8 Hz), 7.34-7.38 (2H, m), 7.62 (1H, dd, J = 7.7, 1.8 Hz), 8.17 (1H, dd, J = 4.9, 1.8 Hz).

### Production example 112

A mixture of 248 mg of 2-aminonicotinic acid, 203 mg of 1-hydroxybenzotriazole, 430 mg of WSC, 316 mg of 4-(3,4-dichlorophenoxy)benzylamine and 2 ml of DMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 88 mg of N-[4-(3,4-dichlorophenoxy)phenyl]methyl-2-aminonicotinic acid amide (hereinafter referred to as the present compound 128).

### The present compound 128

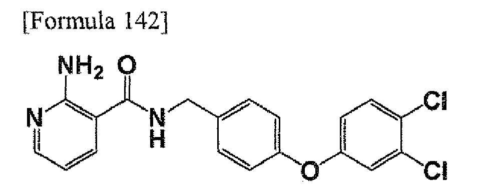

1H-NMR (CDCl3) δ: 4.60 (2H, d, J = 5.8 Hz), 6.30-6.43 (3H, br m), 6.59 (1H, dd, J = 7.7, 4.9 Hz), 6.86 (1H, dd, J = 8.7, 2.8 Hz), 6.98-7.02 (2H, m), 7.07 (1H, d, J = 2.8 Hz), 7.35 (2H, d, J = 8.6 Hz), 7.38 (1H, d, J = 8.7 Hz), 7.61 (1H, dd, J = 7.7, 1.7 Hz), 8.17 (1H, dd, J = 4.9, 1.7 Hz).

### Production example 113

A mixture of 248 mg of 2-aminonicotinic acid, 203 mg of 1-hydroxybenzotriazole, 430 mg of WSC, 293 mg of 4-(2-chloro-4,5-dimethylphenoxy)benzylamine and 2 ml ofDMF was stirred at 60°C for 8 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 139 mg of N-[4-(2-chloro-4,5-dimethylphenoxy)phenyl]methyl-2-aminonicotinic acid amide (hereinafter referred to as the present compound 129).

### The present compound 129

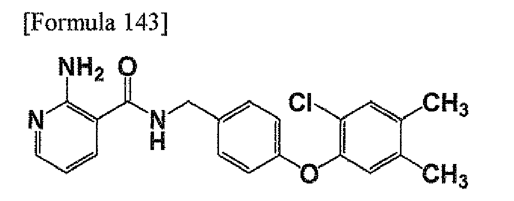

1H-NMR (CDCl3) δ: 2.19 (3H, s), 2.23 (3H, s), 4.55 (2H, d, J = 5.6 Hz), 6.31-6.39 (3H, br m), 6.57 (1H, dd, J = 7.7, 4.8 Hz), 6.82 (1H, s), 5.87-6.90 (2H, m), 7.21 (1H, s), 7.27 (2H, d, J = 8.6 Hz), 7.59 (1H, dd, J = 7.7, 1.7 Hz), 8.14 (1H, dd, J = 4.8, 1.7 Hz).

### Production example 114

A mixture of 0.28 g of 2-aminonicotinic acid, 0.32 g of 1-hydroxybenzotriazole, 0.57 g of WSC, 0.27 g of 2-thienylmethylamine and 2 ml of DMF was subjected to a microwave reactor (production name: MWO-1000; manufactured by EYELA) at 500 W at 60°C for 5 minutes. Thereafter, a sodium bicarbonate aqueous solution was added to the reaction mixture, and the obtained mixture was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.34 g of N-[(thiophen-2-yl)phenyl]methyl-2-aminonicotinic acid amide (hereinafter referred to as the present compound 130).

### The present compound 130

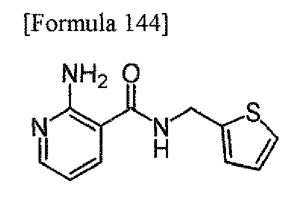

¹H-NMR (CDCl₃) δ: 4.78 (2H, d, J = 5.6 Hz), 6.29-6.39 (3H, br m), 6.58 (1H, dd, J = 7.7, 4.8 Hz), 6.98 (1H, dd, J = 5.1, 3.5 Hz), 7.03-7.05 (1H, m), 7.25-7.28 (1H, m), 7.58 (1H, dd, J = 7.7, 1.8Hz), 8.16 (1H, dd, J = 4.8, 1.8 Hz).

### Production example 115

A mixture of 1.0 g of N-(4-phenoxyphenyl)methyl-2-chloro-6-methylnicotinic acid amide, 1.9 g of sodium azide and 15 ml of DMF was heated to reflux for 2 hours. Thereafter, water was added to the reaction mixture, and it was then extracted with ethyl acetate. The organic layer was successively washed with water and a saturated saline solution, and it was then dried over magnesium sulfate, followed by concentration under reduced pressure. The obtained residue was subjected to silica gel column chromatography, so as to obtain 0.76 g ofN-(4-phenoxyphenyl)methyl-2-azide-6-methylnicotinic acid amide.

### N-(4-phenoxyphenyl)methyl-2-azide-6-methylnicotinic acid amide

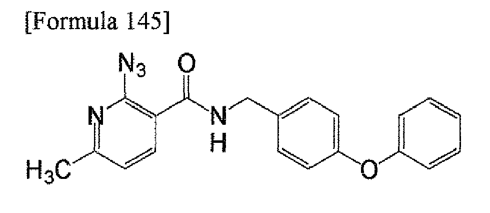

1H-NMR (CDCl3) δ: 3.03 (3H, d, J = 0.7 Hz), 4.76 (2H, d, J = 5.8 Hz), 6.97-7.03 (4H, m), 7.07-7.12 (1H, m), 7.18-7.21 (1H, m), 7.30-7.41 (4H, m), 8.56 (1H, d, J = 7.2 Hz), 9.37 (1H, br s).

A mixture of 0.76 g of N-(4-phenoxyphenyl)methyl-2-azide-6-methylnicotinic acid amide, 1.5 g of tin chloride dehydrate, 5 ml of methanol and 5 ml of 10N hydrochloric acid was heated to reflux for 1 hour. Thereafter, a sodium hydroxide aqueous solution was added to the reaction mixture, and it was then extracted with chloroform three times. The organic layer was dried over magnesium sulfate, and it was then concentrated under reduced pressure. The obtained residue was subjected to silica gel column chromatography, so as to obtain 0.50 g ofN-(4-phenoxyphenyl)methyl-2-amino-6-methylnicotinic acid amide.

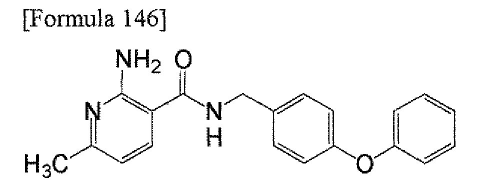

### Production example 1161

A mixture of 248 mg of 2-aminonicotinic acid, 203 mg of 1-hydroxybenzotriazole, 430 mg of WSC, 361 mg of 4-(4-trifluoromethoxyphenoxy)benzylamine and 2 ml of DMF was stirred at 60°C for 3 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 253 mg of N-[4-(4-trifluoromethoxyphenoxy)phenyl]methyl-2-aminonicotinic acid amide (hereinafter referred to as the present compound 131).

### The present compound 131

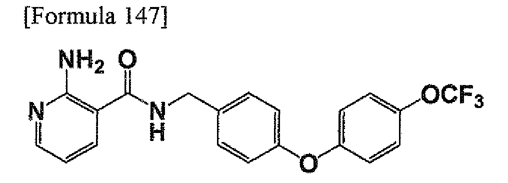

1H-NMR (CDCl3) δ: 4.59 (2H, d, J = 5.6 Hz), 6.28 (1H, br s), 6.36 (2H, br s), 6.59 (1H, dd, J = 7.7, 4.8 Hz), 6.98-7.02 (4H, m), 7.18 (2H, d, J = 8.3 Hz), 7.33 (2H, d, J = 8.8 Hz), 7.60 (1H, dd, J = 7.7, 1.8 Hz), 8.17 (1H, dd, J = 4.8, 1.8 Hz).

### Production example 117

A mixture of 248 mg of 2-aminonicotinic acid, 203 mg of 1-hydroxybenzotriazole, 430 mg of WSC, 285 mg of 4-(2,5-dimethylphenoxy)benzylamine and 2 ml of DMF was stirred at 60°C for 3 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 102 mg of N-[4-(2,5-dimethylphenoxy)phenyl]methyl-2-aminonicotinic acid amide (hereinafter referred to as the present compound 132).

### The present compound 132

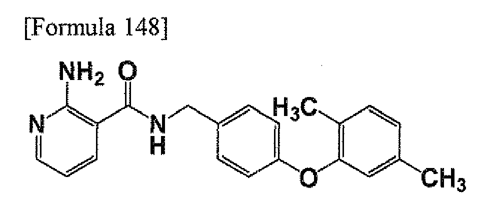

1H-NMR (CDCl3) δ: 2.17 (3H, s), 2.28 (3H, s), 4.55 (2H, d, J = 5.3 Hz), 6.23 (1H, br s), 6.36 (2H, br s), 6.58 (1H, dd, J = 7.6, 4.8 Hz), 6.73 (1H, s), 6.85-6.92 (3H, m), 7.13 (1H, d, J = 7.6 Hz), 7.25-7.29 (2H, m), 7.58 (1H, dd, J = 7.6, 1.8 Hz), 8.16 (1H, dd, J = 4.8, 1.8 Hz).

### Production example 118

A mixture of 248 mg of 2-aminonicotinic acid, 203 mg of 1-hydroxybenzotriazole, 430 mg of WSC, 342 mg of 4-(4-trifluoromethylphenoxy)benzylamine and 2 ml of DMF was stirred at 60°C for 3 hours. Thereafter, a sodium bicarbonate aqueous solution was added to the reaction mixture, and it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 234 mg of N-[4-(4-trifluoromethylphenoxy)phenyl]methyl-2-aminonicotinic acid amide (hereinafter referred to as the present compound 133).

### The present compound 133

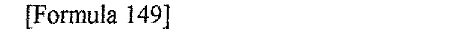

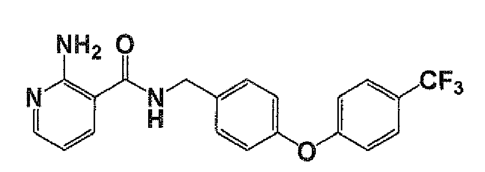

1H-NMR (CDCl3) δ: 4.61 (2H, d, J = 5.6 Hz), 6.37 (3H, br s), 6.59 (1H, dd, J = 7.6, 4.8 Hz), 7.02-7.06 (4H, m), 7.36 (2H, d, J = 8.6 Hz), 7.57 (2H, d, J = 8.3 Hz), 7.61 (1H, dd, J = 7.6, 1.7 Hz), 8.17 (1H, dd, J = 4.8, 1.7 Hz).

### Production example 119

A mixture of 0.30 g of 3-(4-methylphenoxy)benzylamine, 0.20 g of 2-aminonicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.42 g of N-[3-(4-methylphenoxy)phenyl]methyl-2-aminonicotinic acid amide (hereinafter referred to as the present compound 134).

### The present compound 134

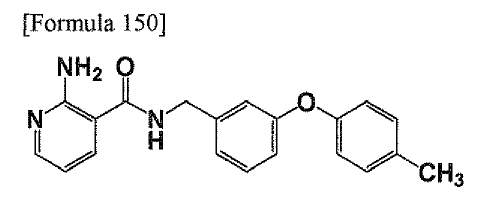

1H-NMR (CDCl3) δ: 2.34 (3H, s), 4.56 (2H, d, J = 5.6 Hz), 6.29 (1H, br s), 6.34 (2H, br s), 6.58 (1H, dd, J = 7.7, 4.8 Hz), 6.88-6.96 (4H, m), 7.03 (1H, d, J = 7.6 Hz), 7.14 (2H, d, J = 8.0 Hz), 7.29 (1H, dd, J = 7.6, 8.0 Hz), 7.58 (1H, dd, J = 7.7, 1.7 Hz), 8.16 (1H, dd, J = 4.8, 1.7 Hz).

### Production example 120

A mixture of 0.40 g of 4-(3-methylphenoxy)benzylamine, 0.20 g of 2-aminonicotinic acid, 0.15 g of 1-hydroxybenzotriazole, 0.25 g of WSC, 0.35 g of pyridine and 2 ml of DMF was stirred under heating to reflux for 30 minutes, and then at a room temperature for 1 day. Thereafter, water was added to the reaction mixture, and the precipitated solid was collected by filtration. The obtained solid was subjected to silica gel column chromatography, so as to obtain 0.44 g of N-[4-(3-methylphenoxy)phenyl]methyl-2-aminonicotinic acid amide (hereinafter referred to as the present compound 135).

### The present compound 135

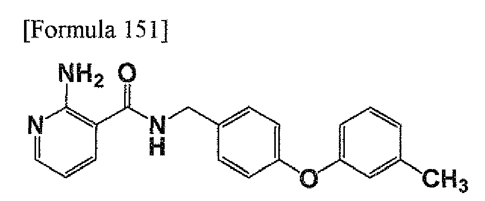

1H-NMR (CDCl3) δ: 2.33 (3H, s), 4.57 (2H, d, J = 5.6 Hz), 6.29 (1H, br s), 6.36 (2H, br s), 6.59 (1H, dd, J = 7.7, 4.8 Hz), 6.79-6.84 (2H, m), 6.91-6.95 (1H, m), 6.96-7.02 (2H, m), 7.19-7.24 (1H, m), 7.30 (2H, d, J = 8.5 Hz), 7.60 (1H, dd, J = 7.7, 1.7 Hz), 8.16 (1H, dd, J = 4.8, 1.7 Hz).

### Production example 121

0.51 g of a BOP reagent and 0.25 g of triethylamine were successively added to a mixture of 0.14 g of 2-aminonicotinic acid, 0.17 g of 3-ethylbenzylamine hydrochloride and 2 ml of DMF. The obtained mixture was stirred at a room temperature for 20 hours. Thereafter, water and a saturated sodium bicarbonate solution were added to the reaction mixture, and the precipitated solid was collected by filtration. The obtained solid was successively washed with water and hexane, so as to obtain 0.22 g of N-(3-ethylphenyl)methyl-2-aminonicotinic acid amide (hereinafter referred to as the present compound 136).

### The present compound 136

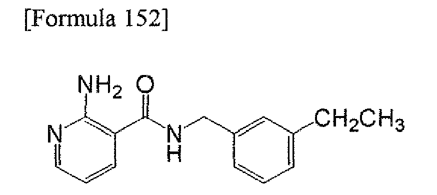

¹H-NMR (CDCl₃) δ: 1.24 (3H, t, J = 7.7 Hz), 2.66 (2H, q, J = 7.6 Hz), 4.58 (2H, d, J = 5.6 Hz), 6.26 (1H, br s), 6.36 (2H, br s), 6.58 (1H, dd, J=7.7, 4.8 Hz), 7.13-7.18 (3H, m), 7.27-7.30 (1H, m), 7.59 (1H, dd, J= 7.7, 1.8 Hz), 8.16 (1H, dd, J = 4.8, 1.8 Hz).

### Production example 122

0.51 g of a BOP reagent and 0.12 g of triethylamine were successively added to a mixture of 0.14 g of 2-aminonicotinic acid, 0.15 g of 3-propylbenzylamine and 2 ml of DMF. The obtained mixture was stirred at a room temperature for 20 hours. Thereafter, water and a saturated sodium bicarbonate solution were added to the reaction mixture, and the precipitated solid was collected by filtration. The obtained solid was successively washed with water and hexane, so as to obtain 0.21 g of N-(3-propylphenyl)methyl-2-aminonicotinic acid amide (hereinafter referred to as the present compound 137).

### The present compound 137

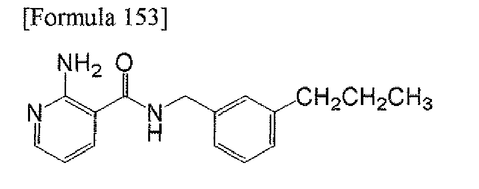

¹H-NMR (CDCl₃) δ: 0.95 (3H, t, J = 7.4 Hz), 1.60-1.69 (2H, m), 2.59 (2H, t, J = 7.7 Hz), 4.58 (2H, d, J = 5.6 Hz), 6.26 (1H, br s), 6.36 (2H, br s), 6.58 (1H, dd, J = 7.7, 4.8 Hz), 7.12-7.17 (3H, m), 7.26-7.30 (1H, m), 7.58 (1H, dd, J = 7.7, 1.7 Hz), 8.16 (1H, dd, J = 4.8, 1.7 Hz).

### Production example 123

0.51 g of a BOP reagent and 0.25 g of triethylamine were successively added to a mixture of 0.14 g of 2-aminonicotinic acid, 0.16 g of 3-butylbenzylamine and 2 ml of DMF. The obtained mixture was stirred at a room temperature for 20 hours. After, water was added to the reaction mixture, it was then extracted with ethyl acetate. The organic layer was successively washed with a saturated sodium bicarbonate solution, water, and a saturated saline solution. The resultant was dried over anhydrous sodium sulfate, and it was then concentrated under reduced pressure. The obtained residue was subjected to silica gel column chromatography, so as to obtain 0.13 g of N-(3-butylphenyl)methyl-2-aminonicotinic acid amide (hereinafter referred to as the present compound 138).

### The present compound 138

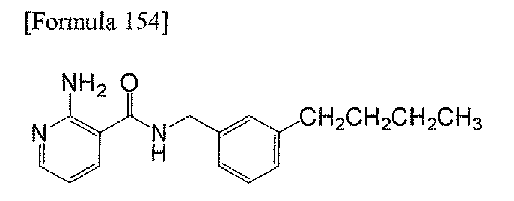

¹H-NMR (CDCl₃) δ: 0.93 (3H, t, J = 7.4 Hz), 1.34-1.39 (2H, m), 1.57-1.67 (2H, m), 2.61 (2H, t, J = 7.7 Hz), 4.58 (2H, d, J = 5.3 Hz), 6.24 (1H, br s), 6.39 (2H, br s), 6.58 (1H, dd, J = 7.7, 4.8 Hz), 7.10-7.16 (3H, m), 7.24-7.29 (1H, m), 7.59 (1H, dd, J = 7.7, 1.2 Hz), 8.16 (1H, dd, J = 4.8, 1.2 Hz).

### Production example 124

0.51 g of a BOP reagent and 0.25 g of triethylamine were successively added to a mixture of 0.14 g of 2-aminonicotinic acid, 0.19 g of 3-hexylbenzylamine and 2 ml of DMF. The obtained mixture was stirred at a room temperature for 20 hours. After, water was added to the reaction mixture, it was then extracted with ethyl acetate. The organic layer was successively washed with a saturated sodium bicarbonate solution, water and a saturated saline solution. The resultant was dried over anhydrous sodium sulfate, and it was then concentrated under reduced pressure. The obtained residue was subjected to silica gel column chromatography, so as to obtain 0.17 g of N-(3-hexylphenyl)methyl-2-aminonicotinic acid amide (hereinafter referred to as the present compound 139).

### The present compound 139

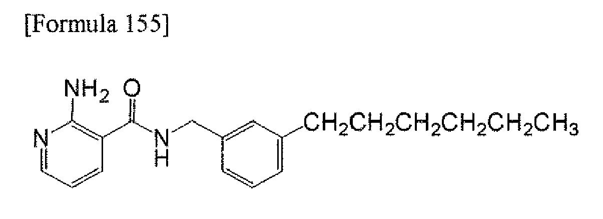

¹H-NMR (CDCl₃) δ: 0.88 (3H, t, J = 7.0 Hz), 1.23-1.34 (6H, m), 1.55-1.64 (2H, m), 2.60 (2H, t, J = 7.7 Hz), 4.57 (2H, d, J = 5.6 Hz), 6.26 (1H, br s), 6.50 (2H, br s), 6.59 (1H, dd, J = 7.8, 4.9 Hz), 7.12-7.16 (3H, m), 7.25-7.29 (1H, m), 7.60 (1H, dd, J = 7.8, 1.6 Hz), 8.14 (1H, dd, J = 4.9, 1.6 Hz).

### Production example 125

0.51 g of a BOP reagent was added to a mixture of 0.14 g of 2-aminonicotinic acid, 0.20 g of 3-isobutylbenzylamine hydrochloride, 0.25 g of triethylamine and 2 ml of DMF. The obtained mixture was stirred at a room temperature for 20 hours. After, water was added to the reaction mixture, it was then extracted with ethyl acetate. The organic layer was successively washed with a saturated sodium bicarbonate solution, water and a saturated saline solution. The resultant was dried over anhydrous sodium sulfate, and it was then concentrated under reduced pressure, so as to obtain 0.26 g of N-(3-isobutylphenyl)methyl-2-aminonicotinic acid amide (hereinafter referred to as the present compound 140).

### The present compound 140

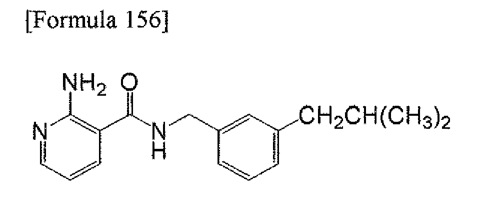

¹H-NMR (CDCl₃) δ: 0.90 (6H, d, J = 6.8 Hz), 1.82-1.90 (1H, m), 2.47 (2H, d, J = 7.2 Hz), 4.57 (2H, d, J = 5.6 Hz), 6.27 (1H, br s), 6.36 (2H, br s), 6.58 (1H, dd, J = 7.7, 4.8 Hz), 7.08-7.16 (3H, m), 7.25-7.29 (1H, m), 7.59 (1H, dd, J = 7.7, 1.4 Hz), 8.16 (1H, dd, J = 4.8, 1.4 Hz).

### Production example 126

A mixture of 0.24 g of N-(3-hydroxyphenyl)methyl-2-aminonicotinic acid amide, 0.15 g of 2-fluorophenylmethyl chloride, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.27 g of N-[3-(2-fluorobenzyloxy)phenyl]methyl-2-aminonicotinic acid amide (hereinafter referred to as the present compound 141).

### The present compound 141

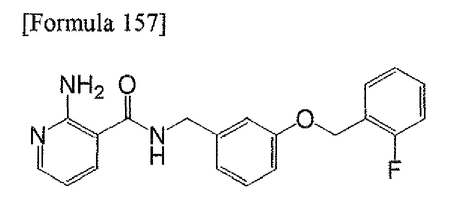

¹H-NMR (CDCl₃) δ: 4.58 (2H, d, J = 5.4 Hz), 5.13 (2H, s), 6.29 (1H, br s), 6.36 (2H, br s), 6.58 (1H, dd, J = 7.7, 4.8 Hz), 6.91-6.98 (3H, m), 7.05-7.18 (2H, m), 7.26-7.32 (2H, m), 7.46-7.51 (1H, m), 7.58 (1H, dd, J = 7.7, 1.7 Hz), 8.16 (1H, dd, J = 4.8, 1.7 Hz).

### Production example 127

A mixture of 0.24 g of N-(3-hydroxyphenyl)methyl-2-aminonicotinic acid amide, 0.19 g of 3-fluorophenylmethyl bromide, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.11 g of N-[3-(3-fluorobenzyloxy)phenyl]methyl-2-aminonicotinic acid amide (hereinafter referred to as the present compound 142).

### The present compound 142

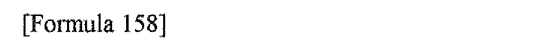

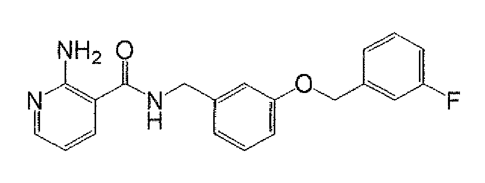

¹H-NMR (CDCl₃) δ: 4.57 (2H, d, J = 5.6 Hz), 5.06 (2H, s), 6.28 (1H, br s), 6.36 (2H, br s), 6.58 (1H, dd, J = 7.6, 4.9 Hz), 6.88-7.02 (4H, m), 7.12-7.19 (2H, m), 7.27-7.36 (2H, m), 7.57 (1H, dd, J = 7.6, 1.7 Hz), 8.17 (1H, dd, J = 4.9, 1.7 Hz).

### Production example 128

A mixture of 0.24 g of N-(3-hydroxyphenyl)methyl-2-aminonicotinic acid amide, 0.20 g of 4-fluorophenylmethyl methanesulfonate, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.21 g of N-[3-(4-fluorobenzyloxy)phenyl]methyl-2-aminonicotinic acid amide (hereinafter referred to as the present compound 143).

### The present compound 143

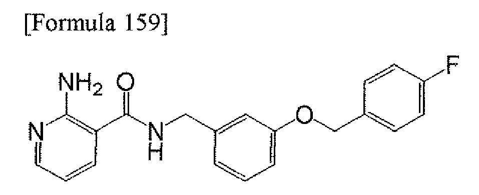

¹H-NMR (CDCl₃) δ: 4.57 (2H, d, J = 5.6 Hz), 5.03 (2H, s), 6.26 (1H, br s), 6.36 (2H, br s), 6.59 (1H, dd, J = 7.6, 4.9 Hz), 6.88-6.95 (3H, m), 7.03-7.08 (2H, m), 7.26-7.30 (1H, m), 7.37-7.42 (2H, m), 7.55-7.58 (1H, m), 8.17 (1H, dd, J = 4.9, 1.5 Hz).

### Production example 129

A mixture of 0.24 g of N-(3-hydroxyphenyl)methyl-2-aminonicotinic acid amide, 0.19 g of 2-methylphenylmethyl bromide, 0.42 g of cesium carbonate and 2 ml of DMF was stirred at a room temperature for 20 hours. Thereafter, water was added to the reaction mixture, and the precipitated solid was collected by filtration. The obtained solid was successively washed with water and hexane, so as to obtain 0.24 g of N-[3-(2-methylbenzyloxy)phenyl]methyl-2-aminonicotinic acid amide (hereinafter referred to as the present compound 144).

### The present compound 144

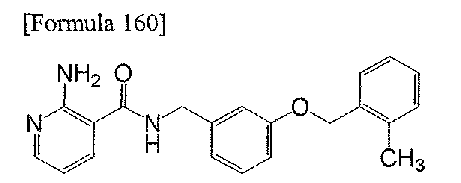

¹H-NMR (CDCl₃) δ: 2.37 (3H, s), 4.58 (2H, d, J = 5.6 Hz), 5.04 (2H, s), 6.26 (1H, br s), 6.36 (2H, br s), 6.58 (1H, dd, J = 7.8, 4.9 Hz), 6.92-6.98 (3H, m), 7.19-7.31 (4H, m), 7.39 (1H, d, J = 7.3 Hz), 7.57 (1H, dd, J = 7.8, 1.7 Hz), 8.17 (1H, dd, J = 4.9, 1.7 Hz).

### Production example 130

A mixture of 0.24 g of N-(3-hydroxyphenyl)methyl-2-aminonicotinic acid amide, 0.14 g of 3-methylphenylmethyl chloride, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure. The obtained residue was subjected to silica gel column chromatography, so as to obtain 0.24 g of N-[3-(3-methylbenzyloxy)phenyl]methyl-2-aminonicotinic acid amide (hereinafter referred to as the present compound 145).

### The present compound 145

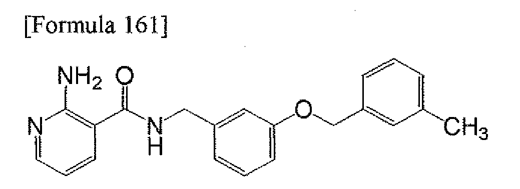

¹H-NMR (CDCl₃) δ: 2.36 (3H, s), 4.57 (2H, d, J = 5.6 Hz), 5.02 (2H, s), 6.29 (1H, br s), 6.35-6.38 (2H, br m), 6.58 (1H, dd, J = 7.8, 4.9 Hz), 6.90-6.96 (3H, m), 7.12-7.15 (1H, m), 7.20-7.29 (4H, m), 7.56 (1H, dd, J = 7.8, 1.7 Hz), 8.16 (1H, dd, J = 4.9, 1.7 Hz).

### Production example 131

A mixture of 0.24 g of N-(3-hydroxyphenyl)methyl-2-aminonicotinic acid amide, 0.16 g of 2-methoxyphenylmethyl chloride, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.30 g of N-[3-(2-methoxybenzyloxy)phenyl]methyl-2-aminonicotinic acid amide (hereinafter referred to as the present compound 146).

### The present compound 146

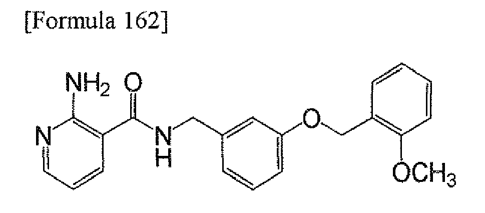

¹H-NNM (CDCl₃) δ: 3.85 (3H, s), 4.56 (2H, d, J = 5.6 Hz), 5.11 (2H, s), 6.29 (1H, br s), 6.35 (2H, br s), 6.57 (1H, dd, J = 7.6, 4.9 Hz), 6.89-6.98 (5H, m), 7.25-7.31 (2H, m), 7.43 (1H, d, J = 7.1 Hz), 7.56 (1H, d, J = 7.6 Hz), 8.15 (1H, d, J = 3.4 Hz).

### Production example 132

A mixture of 0.24 g of N-(3-hydroxyphenyl)methyl-2-aminonicotinic acid amide, 0.16 g of 3-methoxyphenylmethyl chloride, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.25 g of N-[3-(3-methoxybenzyloxy)phenyl]methyl-2-aminonicotinic acid amide (hereinafter referred to as the present compound 147).

### The present compound 147

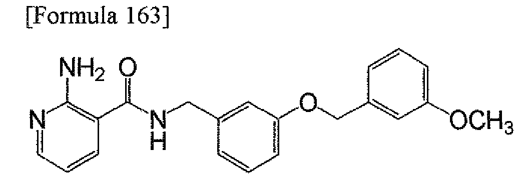

¹H-NMR (CDCl₃) δ: 3.81 (3H, s), 4.57 (2H, d, J = 5.6 Hz), 5.05 (2H, s), 6.26 (1H, br s), 6.36 (2H, br s), 6.58 (1H, dd, J = 7.6, 4.9 Hz), 6.85 (1H, dd, J = 8.2, 2.1 Hz), 6.90-7.00 (5H, m), 7.25-7.30 (2H, m), 7.56 (1H, dd, J = 7.6, 1.8 Hz), 8.16 (1H, dd, J = 4.9, 1.8 Hz).

### Production example 133

A mixture of 0.24 g ofN-(3-hydroxyphenyl)methyl-2-aminonicotinic acid amide, 0.16 g of 4-methoxybenzyl chloride, 0.42 g of cesium carbonate and 2 ml of DMF was stirred at a room temperature for 20 hours. After, water was added to the reaction mixture, it was then extracted with ethyl acetate. The organic layer was dried over anhydrous sodium sulfate, and it was then concentrated under reduced pressure, so as to obtain 0.30 g of N-[3-(4-methoxybenzyloxy)phenyl]methyl-2-aminonicotinic acid amide (hereinafter referred to as the present compound 148).

### The present compound 148

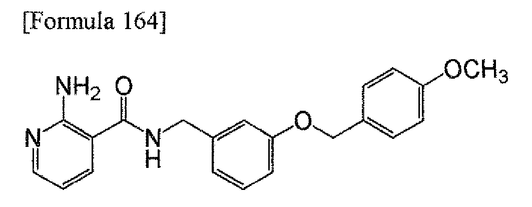

¹H-NMR (CDCl₃) δ: 3.81 (3H, s), 4.57 (2H, d, J = 5.6 Hz), 4.99 (2H, s), 6.26 (1H, br s), 6.36 (2H, br s), 6.58 (1H, dd, J = 7.8, 4.9 Hz), 6.87-6.95 (5H, m), 7.25-7.29 (1H, m), 7.32-7.36 (2H, m), 7.57 (1H, dd, J = 7.8, 1.7 Hz), 8.16 (1H, dd, J = 4.9, 1.7 Hz).

### Production example 134

A mixture of 248 mg of 2-aminonicotinic acid, 203 mg of 1-hydroxybenzotriazole, 430 mg of WSC, 333 mg of 4-(4-ethylphenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 243 mg of N-[4-(4-ethylphenoxy)phenyl]methyl-2-aminonicotinic acid amide (hereinafter referred to as the present compound 149).

### The present compound 149

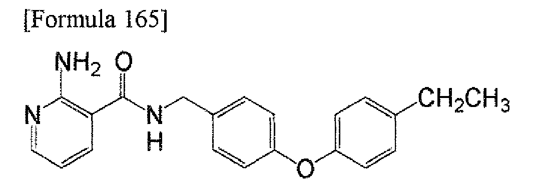

1H-NMR (CDCl3) δ: 1.24 (3H, t, J = 7.6 Hz), 2.64 (2H, q, J = 7.6 Hz), 4.56 (2H, d, J = 5.6 Hz), 6.28 (1H, br s), 6.36 (2H, br s), 6.58 (1H, dd, J = 7.8, 4.8 Hz), 6.91-6.99 (4H, m), 7.17 (2H, d, J = 8.6 Hz), 7.29 (2H, d, J = 8.6 Hz), 7.59 (1H, dd, J = 7.8, 1.7 Hz), 8.16 (1H, dd, J = 4.8, 1.7 Hz).

### Production example 135

A mixture of 0.25 g of 2-aminonicotinic acid, 0.20 g of 1-hydroxybenzotriazole, 0.43 g of WSC, 0.35 g of 4-(5,6,7,8-tetrahydronaphthalen-2-yloxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.10 g of N-[4-(5,6,7,8-tetrahydronaphthalen-2-yloxy)phenyl]methyl-2-aminonicotinic acid amide (hereinafter referred to as the present compound 150).

### The present compound 150

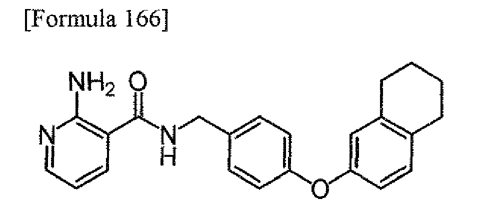

¹H-NMR (CDCl₃) δ: 1.76-1.82 (4H, m), 2.70-2.76 (4H, m), 4.56 (2H, d, J = 5.6 Hz), 6.25 (1H, br s), 6.36 (2H, br s), 6.59 (1H, dd, J = 7.7, 4.8 Hz), 6.71-6.77 (2H, m), 6.97 (2H, d, J = 8.7 Hz), 7.03 (1H, d, J = 8.1 Hz), 7.28 (2H, d, J = 8.7 Hz), 7.59 (1H, dd, J = 7.7, 1.8 Hz), 8.17 (1H, dd, J = 4.8, 1.8 Hz).

### Production example 136

A mixture of 0.25 g of 2-aminonicotinic acid, 0.20 g of 1-hydroxybenzotriazole, 0.43 g of WSC, 0.33 g of 4-(3-methylphenylthio)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.12 g of N-[4-(3-methylphenylthio)phenyl]methyl-2-aminonicotinic acid amide (hereinafter referred to as the present compound 151).

### The present compound 151

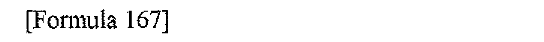

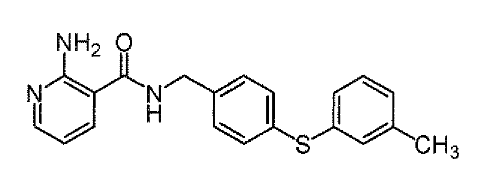

¹H-NMR (CDCl₃) δ: 2.32 (3H, s), 4.58 (2H, d, J = 5.6 Hz), 6.26-6.41 (3H, br m), 6.59 (1H, dd, J = 7.8, 4.8 Hz), 7.06-7.10 (1H, m), 7.13-7.17 (1H, m), 7.18-7.22 (2H, m), 7.22-7.32 (4H, m), 7.59 (1H, dd, J = 7.8, 1.8 Hz), 8.17 (1H, dd, J = 4.8, 1.8 Hz).

### Production example 137

A mixture of 0.25 g of 2-aminonicotinic acid, 0.20 g of 1-hydroxybenzotriazole, 0.43 g of WSC, 0.30 g of 4-(3-methoxyphenylthio)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.16 g of N-[4-(3-methoxyphenylthio)phenyl]methyl-2-aminonicotinic acid amide (hereinafter referred to as the present compound 152).

### The present compound 152

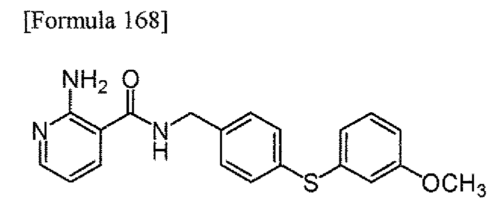

¹H-NMR (CDCl₃) δ: 3.77 (3H, s), 4.58 (2H, d, J = 5.8 Hz), 6.28-6.40 (3H, br m), 6.59 (1H, dd, J = 7.7, 4.9 Hz), 6.79 (1H, ddd, J = 8.3, 2.5, 0.8 Hz), 6.87-6.88 (1H, m), 6.90-6.93 (1H, m), 7.20-7.24 (1H, m), 7.25-7.30 (2H, m), 7.31-7.36 (2H, m), 7.60 (1H, dd, J = 7.7, 1.8 Hz), 8.17 (1H, dd, J = 4.9, 1.8 Hz).

### Production example 138

A mixture of 0.25 g of 2-aminonicotinic acid, 0.20 g of 1-hydroxybenzotriazole, 0.43 g of WSC, 0.38 g of 4-(4-methoxyphenylthio)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.14 g of N-[4-(4-methoxyphenylthio)phenyl]methyl-2-aminonicotinic acid amide (hereinafter referred to as the present compound 153).

### The present compound 153

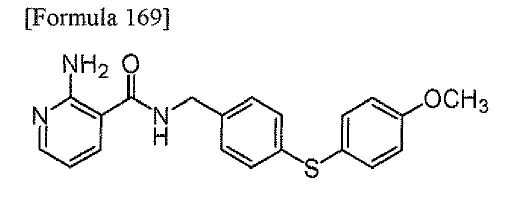

¹H-NMR (CDCl₃) δ: 3.83 (3H, s), 4.53 (2H, d, J = 5.6 Hz), 6.24 (1H, br s), 6.34 (2H, br s), 6.58 (1H, dd, J = 7.7, 4.9 Hz), 6.88-6.92 (2H, m), 7.14 (2H, d, J = 8.6 Hz), 7.21 (2H, d, J = 8.6 Hz), 7.40-7.43 (2H, m), 7.57 (1H, dd, J = 7.7, 1.7 Hz), 8.16 (1H, dd, J = 4.9, 1.7 Hz).

### Production example 139

A mixture of 248 mg of 2-aminonicotinic acid, 203 mg of 1-hydroxybenzotriazole, 430 mg of WSC, 324 mg of 4-(4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 146 mg of N-[4-(4-methylthiophenoxy)phenyl]methyl-2-aminonicotinic acid amide (hereinafter referred to as the present compound 154).

### The present compound 154

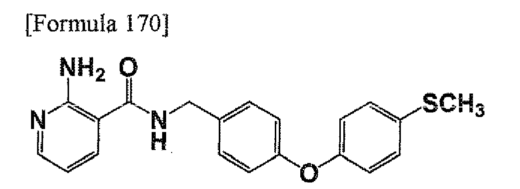

1H-NMR (CDCl3) δ: 2.48 (3H, s), 4.57 (2H, d, J = 5.6 Hz), 6.31 (1H, br s), 6.38 (2H, br s), 6.59 (1H, dd, J = 7.7, 4.8 Hz), 6.93-7.00 (4H, m), 7.25-7.32 (4H, m), 7.60 (1H, dd, J = 7.7, 1.8 Hz), 8.16 (1H, dd, J = 4.8, 1.8 Hz).

### Production example 140

A mixture of 248 mg of 2-aminonicotinic acid, 203 mg of 1-hydroxybenzotriazole, 430 mg of WSC, 369 mg of 4-(2-methyl-4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 171 mg of N-[4-(2-methyl-4-methylthiophenoxy)phenyl]methyl-2-aminonicotinic acid amide (hereinafter referred to as the present compound 155).

### The present compound 155

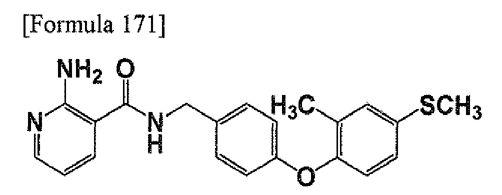

1H-NMR (CDCl3) δ: 2.20 (3H, s), 2.48 (3H, s), 4.55 (2H, d, J = 5.6 Hz), 6.28 (1H, br s), 6.37 (2H, br s), 6.58 (1H, dd, J = 7.7, 4.8 Hz), 6.83-6.89 (3H, m), 7.09 (1H, dd, J = 8.2, 2.1 Hz), 7.18 (1H, d, J = 1.8 Hz), 7.25-7.29 (2H, m), 7.59 (1H, dd, J = 7.7, 1.8 Hz), 8.16 (1H, dd, J = 4.8, 1.8 Hz).

### Production example 141

A mixture of 248 mg of 2-aminonicotinic acid, 203 mg of 1-hydroxybenzotriazole, 430 mg of WSC, 342 mg of 4-(2,3-dimethyl-4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, it was then dried over magnesium sulfate, followed by concentration under reduced pressure. The obtained residue was subjected to silica gel column chromatography, so as to obtain 109 mg of N-[4-(2,3-dimethyl-4-methylthiophenoxy)phenyl]methyl-2-aminonicotinic acid amide (hereinafter referred to as the present compound 156).

### The present compound 156

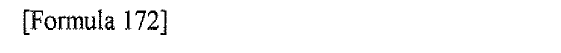

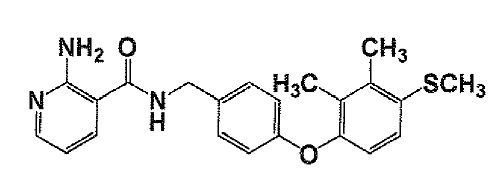

1H-NMR (CDCl3) δ: 2.16 (3H, s), 2.36 (3H, s), 2.44 (3H, s), 4.54 (2H, d, J = 5.6 Hz), 6.26 (1H, br s), 6.36 (2H, br s), 6.58 (1H, dd, J = 7.8, 4.8 Hz), 6.80 (1H, d, J = 8.6 Hz), 6.85 (2H, d, J = 8.6 Hz), 7.08 (1H, d, J = 8.6 Hz), 7.26 (2H, d, J = 8.6 Hz), 7.58 (1H, dd, J = 7.8, 1.6 Hz), 8.16 (1H, dd, J = 4.8, 1.8 Hz).

### Production example 142

A mixture of 248 mg of 2-aminonicotinic acid, 203 mg of 1-hydroxybenzotriazole, 430 mg of WSC, 349 mg of 4-(4-chloro-3,5-dimethylphenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 286 mg of N-[4-(4-chloro-3,5-dimethylphenoxy)phenyl]methyl-2-aminonicotinic acid amide (hereinafter referred to as the present compound 157).

### The present compound 157

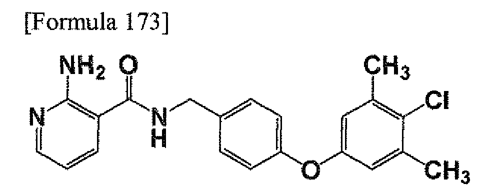

1H-NMR (CDCl3) δ: 2.34 (6H, s), 4.57 (2H, d, J = 5.6 Hz), 6.32-6.42 (3H, br m), 6.58 (1H, dd, J = 7.8, 4. 8 Hz), 6.74 (2H, s), 6.96 (2H, d, J = 8.7 Hz), 7.30 (2H, d, J = 8.7 Hz), 7.60 (1H, dd, J = 7.8, 1.8 Hz), 8.16 (1H, dd, J = 4.8, 1.8 Hz).

### Production example 143

A mixture of 248 mg of 2-aminonicotinic acid, 203 mg of 1-hydroxybenzotriazole, 430 mg of WSC, 391 mg of 4-(3-ethyl-4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 200 mg of N-[4-(3-ethyl-4-methylthiophenoxy)phenyl]methyl-2-aminonicotinic acid amide (hereinafter referred to as the present compound 158).

### The present compound 158

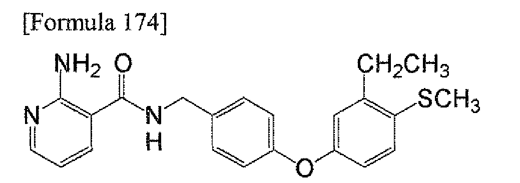

1H-NMR (CDCl3) δ: 1.22 (3H, t, J = 7.5 Hz), 2.45 (3H, s), 2.73 (2H, q, J = 7.5 Hz), 4.57 (2H, d, J = 5.6 Hz), 6.28-6.41 (3H, br m), 6.58 (1H, dd, J = 7.6, 4.8 Hz), 6.83 (1H, dd, J = 8.6, 2.8 Hz), 6.89 (1H, d, J = 2.5 Hz), 6.97 (2H, d, J = 8.6 Hz), 7.20 (1H, d, J = 8.6 Hz), 7.30 (2H, d, J = 8.6 Hz), 7.60 (1H, dd, J = 7.6, 1.8 Hz), 8.16 (1H, dd, J = 4.8, 1.8 Hz).

### Production example 144

A mixture of 248 mg of 2-aminonicotinic acid, 203 mg of 1-hydroxybenzotriazole, 430 mg of WSC, 339 mg of 3-(4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 124 mg of N-[3-(4-methylthiophenoxy)phenyl]methyl-2-aminonicotinic acid amide (hereinafter referred to as the present compound 159).

### The present compound 159

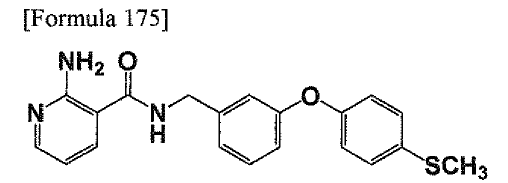

1H-NMR (CDCl3) δ: 2.48 (3H, s), 4.56 (2H, d, J = 5.6 Hz), 6.32-6.42 (3H, br m), 6.58 (1H, dd, J = 7.7, 4.8 Hz), 6.90 (1H, dd, J = 7.8, 2.0 Hz), 6.94-6.97 (3H, m), 7.06 (1H, d, J = 7.6 Hz), 7.24-7.33 (3H, m), 7.59 (1H, dd, J = 7.7, 1.8 Hz), 8.15 (1H, dd, J = 4.8, 1.8 Hz).

### Production example 145

A mixture of 248 mg of 2-aminonicotinic acid, 203 mg of 1-hydroxybenzotriazole, 430 mg of WSC, 349 mg of 4-(3-chloro-4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatograph, so as to obtain 179 mg of N-[4-(3-chloro-4-methylthiophenoxy)phenyl]methyl-2-aminonicotinic acid amide (hereinafter referred to as the present compound 160).

### The present compound 160

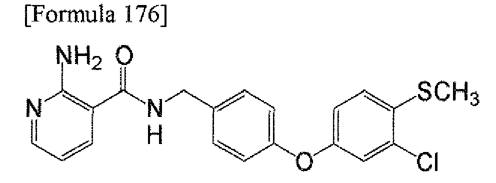

1H-NMR (CDCl3) δ: 2.47 (3H, s), 4.59 (2H, d, J = 5.6 Hz), 6.28-6.42 (3H, br m), 6.59 (1H, dd, J = 7.7, 4.9 Hz), 6.93 (1H, dd, J = 8.7, 2.6 Hz), 6.99 (2H, d, J = 8.7 Hz), 7.04 (1H, d, J = 2.6 Hz), 7.18 (1H, d, J = 8.7 Hz), 7.33 (2H, d, J = 8.7 Hz), 7.61 (1H, dd, J = 7.7, 1.8 Hz), 8.17 (1H, dd, J = 4.9, 1.8 Hz).

### Production example 146

A mixture of 248 mg of 2-aminonicotinic acid, 203 mg of 1-hydroxybenzotriazole, 430 mg of WSC, 404 mg of 4-(3-chloro-4-ethylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 278 mg of N-[4-(3-chloro-4-ethylthiophenoxy)phenyl]methyl-2-aminonicotinic acid amide (hereinafter referred to as the present compound 161).

### The present compound 161

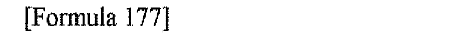

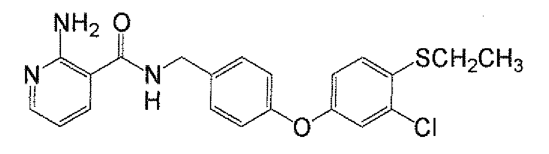

1H-NMR (CDCl3) δ: 1.32 (3H, t, J = 7.3 Hz), 2.93 (2H, q, J = 7.3 Hz), 4.58 (2H, d, J = 5.8 Hz), 6.34-6.41 (3H, br m), 6.59 (1H, dd, J = 7.7, 4.9 Hz), 6.88 (1H, dd, J = 8.6, 2.7 Hz), 7.00 (2H, d, J = 8.6 Hz), 7.04 (1H, d, J = 2.7 Hz), 7.30 (1H, d, J = 8.6 Hz), 7.33 (2H, d, J = 8.6 Hz), 7.62 (1H, dd, J = 7.7, 1.8 Hz), 8.16 (1H, dd, J = 4.9, 1.8 Hz).

### Production example 147

A mixture of 248 mg of 2-aminonicotinic acid, 203 mg of 1-hydroxybenzotriazole, 430 mg of WSC, 409 mg of 4-(3-methoxy-4-methylthiophenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, and followed by concentration under reduced pressure. The obtained residue was subjected to silica gel column chromatography, so as to obtain 260 mg of N-[4-(3-methoxy-4-methylthiophenoxy)phenyl]methyl-2-aminonicotinic acid amide (hereinafter referred to as the present compound 162).

### The present compound 162

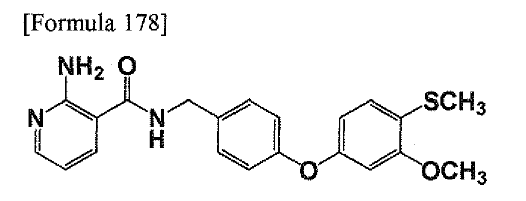

1H-NMR (CDCl3) δ: 2.42 (3H, s), 3.85 (3H, s), 4.58 (2H, d, J = 5.6 Hz), 6.27-6.41 (3H, br m), 6.55-6.61 (3H, m), 6.97-7.01 (2H, m), 7.15 (1H, d, J = 8.3 Hz), 7.31 (2H, d, J = 8.8 Hz), 7.60 (1H, dd, J = 7.8, 1.8 Hz), 8.17 (1H, dd, J = 4.8, 1.8 Hz).

### Production example 148

A mixture of 248 mg of 2-aminonicotinic acid, 203 mg of 1-hydroxybenzotriazole, 430 mg of WSC, 334 mg of 4-(2,6-dimethylphenoxy)benzylamine and 2 ml of DMF was stirred at 60°C for 5 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 295 mg of N-[4-(2,6-dimethylphenoxy)phenyl]methyl-2-aminonicotinic acid amide (hereinafter referred to as the present compound 163).

### The present compound 163

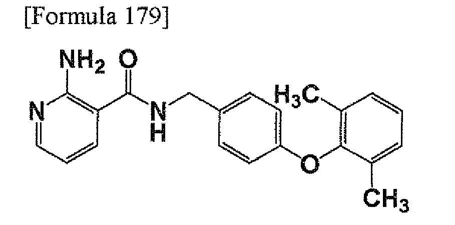

1H-NMR (CDCl3) δ: 2.12 (6H, s), 4.53 (2H, d, J = 5.6 Hz), 6.23 (1H, br s), 6.35 (2H, br s), 6.57 (1H, dd, J = 7.7, 4.8 Hz), 6.72-6.76 (2H, m), 7.04-7.12 (3H, m), 7.22 (2H, d, J = 8.8 Hz), 7.58 (1R, dd, J = 7.7, 1.7Hz), 8.15 (1H, dd, J = 4.8, 1.7 Hz).

### Production example 149

A mixture of 0.20 g of 2-aminonicotinic acid, 0.35 g of WSC, 0.50 g of 4-(4-bromophenoxy)benzylamine hydroxide, 2 ml of pyridine and 2 ml of DMF was stirred at a room temperature for 8 hours. Thereafter, water was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.26 g of N-[4-(4-bromophenoxy)phenyl]methyl-2-aminonicotinic acid amide (hereinafter referred to as the present compound 164).

### The present compound 164

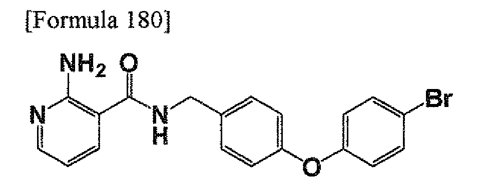

1H-NMR (CDCl3) δ: 4.58 (2H, d, J = 5.6 Hz), 6.29 (1H, br s), 6.36 (2H, br s), 6.59 (1H, dd, J = 7.6, 4.9 Hz), 6.86-6.90 (2H, m), 6.97-7.01 (2H, m), 7.30-7.34 (2H, m), 7.42-7.45 (2H, m), 7.60 (1H, dd, J = 7.6, 1.8 Hz), 8.17 (1H, dd, J = 4.9, 1.8 Hz).

### Production example 150

A mixture of 0.24 g of N-(3-hydroxyphenyl)methyl-2-aminonicotinic acid amide, 0.16 g of ethyl iodide, 0.42 g of cesium carbonate and 1 ml of DMF was stirred at a room temperature for 20 hours. Thereafter, water was added to the reaction mixture, and the precipitated solid was collected by filtration. The obtained solid was successively washed with water and hexane, so as to obtain 0.22 g of N-(3-ethoxyphenyl)methyl-2-aminonicotinic acid amide (hereinafter referred to as the present compound 165).

### The present compound 165

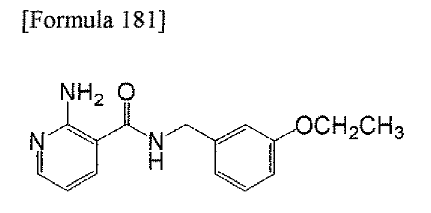

¹H-NMR (CDCl₃) δ: 1.41 (3H, t, J = 7.0 Hz), 4.03 (2H, q, J = 7.0 Hz), 4.57 (2H, d, J = 5.6 Hz), 6.28 (1H, br s), 6.36 (2H, br s), 6.58 (1H, dd, J = 7.8, 4.8 Hz), 6.82-6.91 (3H, m), 7.24-7.28 (1H, m), 7.59 (1H, dd, J = 7.8, 1.7 Hz), 8.16 (1H, dd, J = 4.8, 1.7 Hz).

### Production example 151

A mixture of 0.24 g of N-(3-hydroxyphenyl)methyl-2-aminonicotinic acid amide, 0.12 g of 1-bromopropane, 0.42 g of cesium carbonate and 2 ml of DMF was stirred at a room temperature for 20 hours. Thereafter, water was added to the reaction mixture, and the precipitated solid was collected by filtration. The obtained solid was successively washed with water and hexane, so as to obtain 0.25 g of N-(3-propoxyphenyl)methyl-2-aminonicotinic acid amide (hereinafter referred to as the present compound 166).

### The present compound 166

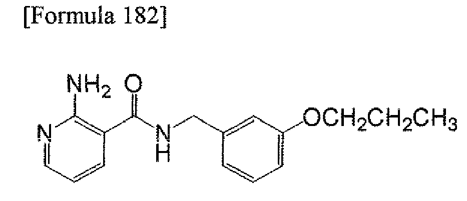

¹H-NMR (CDCl₃) δ: 1.03 (3H, t, J = 7.4 Hz), 1.76-1.85 (2H, m), 3.92 (2H, t, J = 6.5 Hz), 4.57 (2H, d, J = 5.6 Hz), 6.27 (1H, br s), 6.35 (2H, br s), 6.58 (1H, dd, J = 7.7, 4.8 Hz), 6.83-6.92 (3H, m), 7.24-7.29 (1H, m), 7.59 (1H, dd, J = 7.7, 1.6 Hz), 8.16 (1H, dd, J = 4.8, 1.6 Hz).

### Production example 152

A mixture of 0.24 g of N-(3-hydroxyphenyl)methyl-2-aminonicotinic acid amide, 0.18 g of 1-iodobutane, 0.42 g of cesium carbonate and 3 ml of DMF was stirred at a room temperature for 20 hours. Thereafter, water was added to the reaction mixture, and the precipitated solid was collected by filtration. The obtained solid was successively washed with water and hexane, so as to obtain 0.25 g of N-(3-butoxyphenyl)methyl-2-aminonicotinic acid amide (hereinafter referred to as the present compound 167).

### The present compound 167

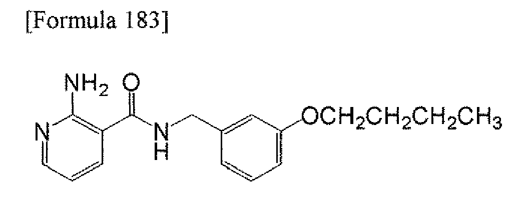

¹H-NMR (CDCl₃) δ: 0.97 (3H, t, J = 7.3 Hz), 1.44-1.54 (2H, m), 1.73-1.80 (2H, m), 3.96 (2H, t, J = 6.5 Hz), 4.57 (2H, d, J = 5.6 Hz), 6.26 (1H, br s), 6.36 (2H, br s), 6.58 (1H, dd, J = 7.6, 4.8 Hz), 6.82-6.91 (3H, m), 7.24-7.29 (1H, m), 7.59 (1H, dd, J = 7.6, 1.7 Hz), 8.16 (1H, dd, J = 4.8, 1.7 Hz).

### Production example 153

A mixture of 0.24 g of N-(3-hydroxyphenyl)methyl-2-aminonicotinic acid amide, 0.20 g of 1-iodopentane, 0.42 g of cesium carbonate and 2 ml of DMF was stirred at a room temperature for 20 hours. Thereafter, water was added to the reaction mixture, and the precipitated solid was collected by filtration. The obtained solid was successively washed with water and hexane, so as to obtain 0.31 g of N-(3-pentyloxyphenyl)methyl-2-aminonicotinic acid amide (hereinafter referred to as the present compound 168).

### The present compound 168

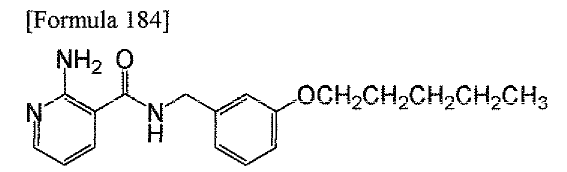

1H-NMR(CDCl₃) δ: 0.93 (3H, t, J = 7.1 Hz), 1.35-1.47 (4H, m), 1.75-1.81 (2H, m), 3.95 (2H, t, J = 6.6 Hz), 4.56 (2H, d, J = 5.6 Hz), 6.29 (1H, br s), 6.36 (2H, br s), 6.58 (1H, dd, J = 7.8, 4.9 Hz), 6.82-6.92 (3H, m), 7.25-7.28 (1H, m), 7.59 (1H, dd, J = 7.8, 1.7 z), 8.16 (1H, dd, J = 4.9, 1.7 Hz).

### Production example 154

A mixture of 0.24 g of N-(3-hydroxyphenyl)methyl-2-aminonicotinic acid amide, 0.21 g of 1-iodohexane, 0.42 g of cesium carbonate and 2 ml ofDMF was stirred at a room temperature for 20 hours. Thereafter, water was added to the reaction mixture, and the precipitated solid was collected by filtration. The obtained solid was successively washed with water and hexane, so as to obtain 0.27 g of N-(3-hoxyloxyphenyl)methyl-2-aminonicotinic acid amide (hereinafter referred to as the present compound 169).

### The present compound 169

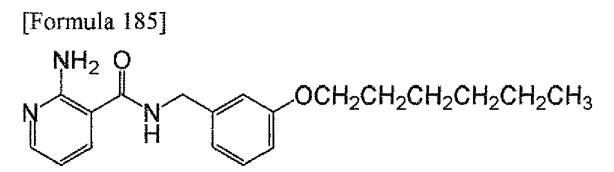

1H-NMR (CDCl3) δ: 0.90 (3H, t, J = 7.0 Hz), 1.31-1.37 (4H, m), 1.43-1.49 (2H, m), 1.74-1.81 (2H, m), 3.95 (2H, t, J = 6.5 Hz), 4.57 (2H, d, J = 5.4 Hz), 6.25 (1H, br s), 6.36 (2H, br s), 6.58 (1H, dd, J = 7.6, 4.9 Hz), 6.82-6.91 (3H, m), 7.24-7.29 (1H, m), 7.59 (1H, d, J = 6.3 Hz), 8.17 (1H, dd, J = 4.8, 1.6 Hz).

### Production example 155

A mixture of 0.24 g of N-(3-hydroxyphenyl)methyl-2-aminonicotinic acid amide, 0.18 g of 1-iodoheptane, 0.42 g of cesium carbonate and 2 ml of DMF was stirred at a room temperature for 20 hours. Thereafter, water was added to the reaction mixture, and the precipitated solid was collected by filtration. The obtained solid was successively washed with water and hexane, so as to obtain 0.29 g of N-(3-heptyloxyphenyl)methyl-2-aminonicotinic acid amide (hereinafter referred to as the present compound 170).

### The present compound 170

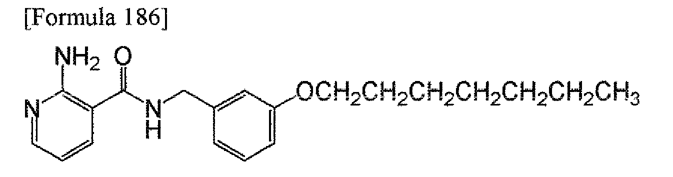

1H-NMR (CDCl3) δ: 0.89 (3H, t, J = 6.8 Hz), 1.25-1.48 (8H, m), 1.74-1.81 (2H, m), 3.95 (2H, t, J = 6.6 Hz), 4.57 (2H, d, J = 5.6 Hz), 6.25 (1H, br s), 6.36 (2H, br s), 6.58 (1H, dd, J = 7.6, 4.9 Hz), 6.82-6.92 (3H, m), 7.24-7.29 (1H, m), 7.59 (1H, dd, J = 7.7, 1.8 Hz), 8.16 (1H, dd, J=4.9, 1.7 Hz).

### Production example 156

A mixture of 0.24 g of N-(3-hydroxyphenyl)methyl-2-aminonicotinic acid amide, 0.10 g of 5-chloro-1-pentyne, 0.42 g of cesium carbonate and 2 ml of DMF was stirred at a room temperature for 20 hours. Thereafter, water was added to the reaction mixture, and it was then extracted with ethyl acetate. The organic layer was successively washed with a saturated sodium bicarbonate solution, water, and a saturated saline solution. The resultant was then concentrated under reduced pressure, so as to obtain 0.25 g of N-[3-(4-pentynyloxy)phenyl]methyl-2-aminonicotinic acid amide (hereinafter referred to as the present compound 171).

### The present compound 171

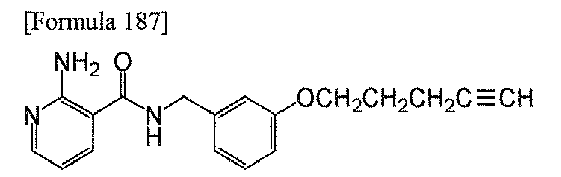

1H-NMR (CDCl3) δ: 1.96-2.03 (3H, m), 2.38-2.43 (2H, m), 4.05-4.09 (2H, m), 4.57 (2H, d, J = 5.4 Hz), 6.31-6.40 (3H, m), 6.56-6.60 (1H, m), 6.83-6.94 (3H, m), 7.25-7.29 (1H, m), 7.60 (1H, d, J = 7.8 Hz), 8.15-8.17 (1H, m).

### Production example 157

A mixture of 0.24 g of N-(4-hydroxyphenyl)methyl-2-aminonicotinic acid amide, 0.12 g of 6-chloro-1-hexyne, 0.42 g of cesium carbonate and 2 ml of DMF was stirred at 80°C for 6 hours. Thereafter, water was added to the reaction mixture, and the precipitated solid was collected by filtration. The obtained solid was successively washed with water and hexane, so as to obtain 0.29 g of N-[4-(5-hexynyloxy)phenyl]methyl-2-aminonicotinic acid amide (hereinafter referred to as the present compound 172).

### The present compound 172

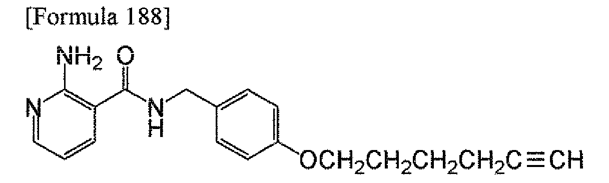

1H-NMR (CDCl3) δ: 1.69-1.76 (2H, m), 1.88-1.95 (2H, m), 1.97 (1H, t, J = 2.5 Hz), 2.28 (2H, td, J = 6.9, 2.6 Hz), 3.99 (2H, t, J = 6.3 Hz), 4.53 (2H, d, J = 5.3 Hz), 6.22 (1H, br s), 6.35 (2H, br s), 5.57 (1H, dd, J = 7.7, 4.8 Hz), 6.86-6.90 (2H, m), 7.24-7.28 (2H, m), 7.56-7.58 (1H, m), 8.15-8.17 (1H, m).

### Production example 158

A mixture of 0.24 g of N-(3-hydroxyphenyl)methyl-2-aminonicotinic acid amide, 0.15 g of 1-bromo-2-pentyne, 0.42 g of cesium carbonate and 2 ml of DMF was stirred at a room temperature for 20 hours. Thereafter, water was added to the reaction mixture, and the precipitated solid was collected by filtration. The obtained solid was successively washed with water and hexane, so as to obtain 0.25 g of N-[3-(2-hexynyloxy)phenyl]methyl-2-aminonicotinic acid amide (hereinafter referred to as the present compound 174).

### The present compound 174

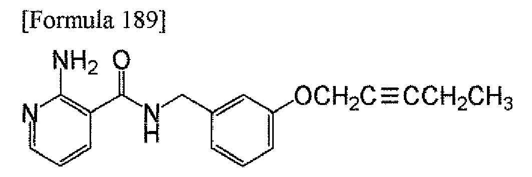

1H-NMR (CDCl3) δ: 1.12 (3H, t, J = 7.6 Hz), 2.18-2.25 (2H, m), 4.58 (2H, d, J = 5.6 Hz), 4.67 (2H, t, J = 2.2 Hz), 6.29 (1H, br s), 6.36 (2H, br s), 6.58 (1H, dd, J = 7.8, 4.9 Hz), 6.90-6.96 (3H, m), 7.26-7.31 (1H, m), 7.59 (1H, dd, J = 7.6, 1.7 Hz), 8.16 (1H, dd, J = 4.9, 1.7 Hz).

### Production example 159

A mixture of 248 mg of 2-aminonicotinic acid, 203 mg of 1-hydroxybenzotriazole, 430 mg of WSC, 235 mg of 4-(3-chlorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 129 mg of N-[4-(3-chlorophenoxy)phenyl]methyl-2-aminonicotinic acid amide (hereinafter referred to as the present compound 175).

### The present compound 175

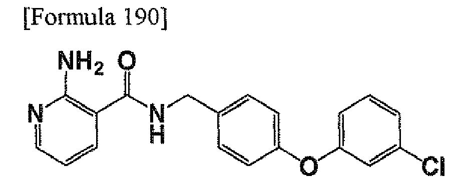

1H-NMR (CDCl3) δ: 4.59 (2H, d, J = 5.8 Hz), 6.27-6,44 (3H, br m), 6.59 (1H, dd, J = 7.7, 4.8 Hz), 6.87-6.91 (1H, m), 6.97-7.09 (4H, m), 7.23-7.27 (2H, m), 7.32-7.36 (2H, m), 7.61 (1H, dd, J = 7.7, 1.8 Hz), 8.17 (1H, dd, J = 4.8, 1.8 Hz).

### Production example 160

A mixture of 248 mg of 2-aminonicotinic acid, 203 mg of 1-hydroxybenzotriazole, 430 mg of WSC, 239 mg of 4-(3-fluorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 102 mg ofN-[4-(3-fluorophenoxy)phenyl]methyl-2-aminonicotinic acid amide (hereinafter referred to as the present compound 176).

### The present compound 176

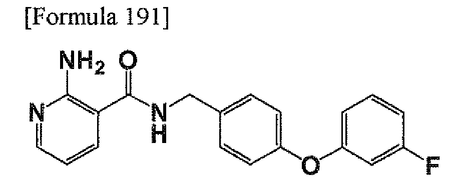

1H-NMR (CDCl3) δ: 4.59 (2H, d, J = 5.8 Hz), 6.28-6.42 (3H, br m), 6.59 (1H, dd, J = 7.7, 4.9 Hz), 6.67-6.71 (1H, m), 6.76-6.83 (2H, m), 7.00-7.05 (2H, m), 7.24-7.30 (1H, m), 7.34 (2H, d, J = 8.6 Hz), 7.61 (1H, dd, J = 7.7, 1.6 Hz), 8.17 (1H, dd, J = 4.9, 1.6 Hz).

### Production example 161

0.33 g of triethylamine, 0.24 g of 2-amino-6-methylnicotinic acid and 0.89 g of a BOP reagent were successively added to a mixture of 0.32 g of 2-fluoro-3-(4-pentynyloxy)benzylamine hydrochloride and 3 ml of DMF. The obtained mixture was stirred at a room temperature for 20 hours. Thereafter, water and a saturated sodium bicarbonate solution were added to the reaction mixture, and the obtained mixture was then extracted with ethyl acetate. The extract was dried over anhydrous sodium sulfate, and it was then concentrated under reduced pressure. The obtained residue was subjected to silica gel column chromatography, so as to obtain 0.23 g of N-[2-fluoro-3-(4-pentynyloxy)phenyl]methyl-2-amino-6-methylnicotinic acid amide (hereinafter referred to as the present compound 177).

### The present compound 177

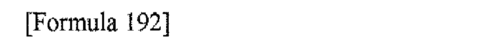

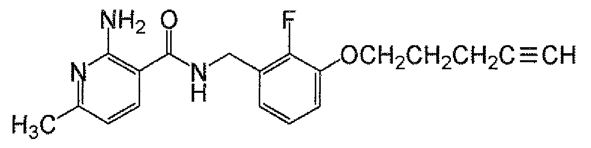

1H-NMR (CDCl3) δ: 1.98 (1H, t, J = 2.6 Hz), 2.01-2.07 (2H, m), 2.38 (3H, s), 2.44 (2H, td, J = 7.0, 2.6 Hz), 4.14 (2H, t, J = 6.2 Hz), 4.64 (2H, d, J = 5.9 Hz), 6.34 (3H, br s), 6.44 (1H, d, J = 7.8 Hz), 6.91-7.06 (3H, m), 7.48 (1H, d, J = 7.8 Hz).

### Production example 152

A mixture of 248 mg of 2-aminonicotinic acid, 203 mg of 1-hydroxybenzotriazole, 430 mg of WSC, 308 mg of 4-(3-triflooromethylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 227 mg of N-[4-(3-trifluoromethylphenoxy)phenyl]methyl-2-aminonicotinic acid amide (hereinafter referred to as the present compound 178).

### The present compound 178

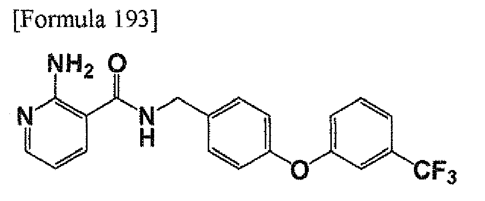

1H-NMR (CDCl3) δ: 4.60 (2H, d, J = 5.6 Hz), 6.31-6.42 (3H, br m), 6.60 (1H, dd, J = 7.8, 4.8 Hz), 7.00-7.04 (2H, m), 7.14-7.18 (1H, m), 7.22-7.25 (1H, m), 7.33-7.38 (3H, m), 7.42-7.47 (1H, m), 7.62 (1H, dd, J = 7.8, 1.8 Hz), 8.17 (1H, dd, J = 4.8, 1.8 Hz).

### Production example 163

A mixture of 248 mg of 2-aminonicotinic acid, 203 mg of 1-hydroxybenzotriazole, 430 mg of WSC, 293 mg of 4-(3-trifluoromethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 207 mg of N-[4-(3-trifluoromethoxyphenoxy)phenyl]methyl-2-aminonicotinic acid amide (hereinafter referred to as the present compound 179).

### The present compound 179

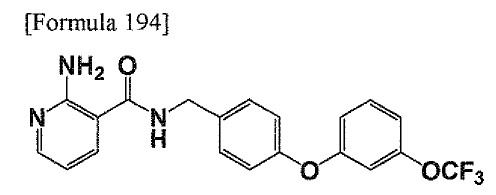

1H-NMR (CDCl3) δ: 4.60 (2H, d, J = 5.8 Hz), 6.31-6.40 (3H, br m), 6.59 (1H, dd, J = 7.7, 4.8 Hz), 6.84-6.87 (1H, m), 6.89-6.98 (2H, m), 7.00-7.05 (2H, m), 7.31-7.36 (3H, m), 7.61 (1H, dd, J = 7.7, 1.8 Hz), 8.17 (1H dd, J = 4.8, 1.8 Hz).

### Production example 164

A mixture of 248 mg of 2-aminonicotinic acid, 203 mg of 1-hydroxybenzotriazole, 430 mg of WSC, 296 mg of 4-(2-methylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 265 mg of N-[4-(2-methylphenoxy)phenyl]methyl-2-aminonicotinic acid amide (hereinafter referred to as the present compound 180).

### The present compound 180

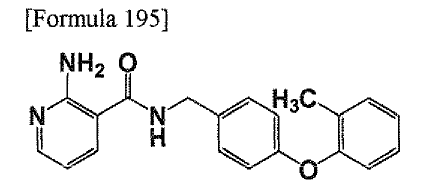

1H-NMR (CDCl3) δ: 2.23 (3H, s), 4.55 (2H, d, J = 5.6 Hz), 6.28 (1H, br s), 6.36 (2H, br s), 6.58 (1H, dd, J = 7.7, 4.8 Hz), 6.86-6.92 (3H, m), 7.06-7.10 (1H, m), 7.15-7.19 (1H, m), 7.24-7.29 (3H, m), 7.58 (1H, dd, J = 7.7, 1.7 Hz), 8.16 (1H, dd, J = 4.8, 1.7 Hz).

### Production example 165

A mixture of 248 mg of 2-aminonicotinic acid, 203 mg of 1-hydroxybenzotriazole, 430 mg of WSC, 311 mg of 4-(2-fluorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 190 mg of N-[4-(2-fluorophenoxy)phenyl]methyl-2-aminonicotinic acid amide (hereinafter referred to as the present compound 181).

### The present compound 181

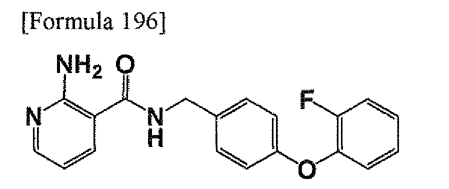

1H-NMR (CDCl3) δ: 4.56 (2H, d, J = 5.6 Hz), 6.31 (1H, br s), 6.36 (2H, br s), 6.58 (1H, dd, J = 7.7, 4.8 Hz), 6.96 (2H, d, J = 8.6 Hz), 7,04-7.21 (4H, m), 7.29 (2H, d, J = 8.6 Hz), 7.59 (1H, dd, J = 7. 7, 1.7 Hz), 8.16 (1H, dd, J = 4.8, 1.7 Hz).

### Production example 165

0.38 g of triethylamine, 0.21 g of 2-aminonicotinic acid and 0.86 g of a BOP reagent were successively added to a mixture of 0.36 g of [5-(2-methylphenyloxy)thiophen-2-yl]methylamine hydrochloride and 3 ml of DMF. The obtained mixture was stirred at a room temperature for 10 hours. Thereafter, water and a saturated sodium bicarbonate solution were added to the reaction mixture, and the obtained mixture was then extracted with ethyl acetate. The extract was dried over anhydrous sodium sulfate, and it was then concentrated under reduced pressure. The obtained residue was subjected to silica gel column chromatography, so as to obtain 0.12 g of N-[5-(2-methylphenyloxy)thiophen-2-yl]methyl-2-aminonicotinic acid amide (hereinafter referred to as the present compound 182).

### The present compound 182

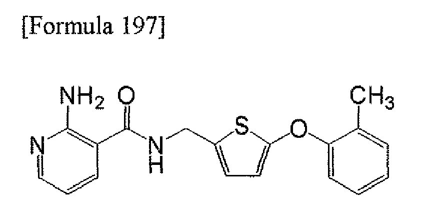

¹H-NMR (CDCl₃) δ: 2.31 (3H, s), 4.63 (2H, d, J = 5.6 Hz), 6.26 (1H, d, J = 3.9 Hz), 6.29 (1H, br s), 6.34 (2H, br s), 6,59 (1H, dd, J = 7.8, 4.9 Hz), 6.71 (1H, dd, J = 3.7, 0.7 Hz), 7.00-7.07 (2H, m), 7.13-7.23 (2H, m), 7.58 (1H, d, J = 7.8 Hz), 8.15-8.18 (1H, m).

### Production example 167

A mixture of 248 mg of 2-aminonicotinic acid, 203 mg of 1-hydroxybenzotriazole, 430 mg of WSC, 314 mg of 4-(2-trifluoromethylphenoxy)benzylamine and 2 ml ofDMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 183 mg of N-[4-(2-methoxyphenoxy)phenyl]methyl-2-aminonicotinic acid amide (hereinafter referred to as the present compound 183).

### The present compound 183

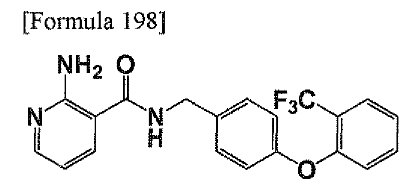

1H-NMR (CDCl3) δ: 4.58 (2H, d, J = 5.8 Hz), 6.33-6.45 (3H, br m), 6.56-6.60 (1H, m), 6.94 (1H, d, J = 8.3 Hz), 6.99-7.03 (2H, m), 7.16-7.21 (1H, m), 7.30-7.34 (2H, m), 7.43-7.48 (1H, m), 7.59-7.63 (1H, m), 7.66-7.70 (1H, m), 8.16 (1H, dd, J=4.9, 1.6 Hz).

### Production example 168

A mixture of 248 mg of 2-aminonicotinic acid, 203 mg of 1-hydroxybenzotriazole, 430 mg of WSC, 340 mg of 4-(4-chlorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 129 mg of N-[4-(4-chlorophenoxy)phenyl]methyl-2-aminonicotinic acid amide (hereinafter referred to as the present compound 184).

### The present compound 184

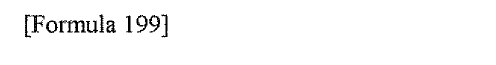

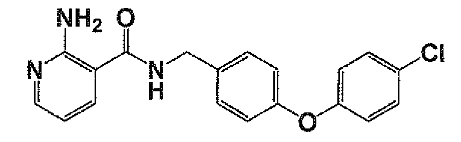

1H-NMR (CDCl3) δ: 4.58 (2H, d, J = 5.6 Hz), 6.29 (1H, br s), 6.36 (2H, br s), 6.59 (1H, dd, J = 7.7, 4.8 Hz), 6.91-7.00 (4H, m), 7.27-7.34 (4H, m), 7.60 (1H, dd, J = 7.7, 1.8 Hz), 8.17 (1H, dd, J = 4.8, 1.8 Hz).

### Production example 169

A mixture of 0.22 g of 2-amino-4,6-dimethylnicotinic acid hydrochloride, 0.20 g of 1-hydroxyhenzotriazole, 0.30 g of WSC, 0.25 g of 4-phenoxybenzylamine hydrochloride, 0.30 g of pyridine and 2 ml of DMF was stirred at a room temperature for 8 hours. After, water was added to the reaction mixture, it was then extracted with ethyl acetate. The organic layer was washed with a saturated saline solution, and it was then dried over magnesium sulfate, followed by concentration under reduced pressure. The obtained residue was subjected to silica gel column chromatography, so as to obtain 0.26 g of N-(4-phenoxyphenyl)methyl-2-amino-4,6-dimethylnicotinic acid amide (hereinafter referred to as the present compound 185).

### The present compound 185

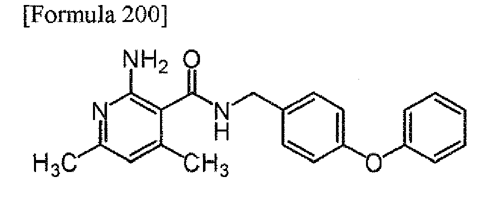

¹H-NMR (CDCl₃) δ: 2.26 (3H, s), 2.31 (3H, s), 4.60 (2H, d, J = 5.9 Hz), 5.06 (2H, br s), 6.02 (1H, br s), 6.35 (1H, s), 6.96-7.02 (4H, m), 7.09-7.14 (1H, m), 7.29-7.37 (4H, m).

### Production example 170

A mixture of 248 mg of 2-aminonicotinic acid, 203 mg of 1-hydroxybenzotriazole, 430 mg of WSC, 340 mg of 4-(4-ethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 263 mg of N-[4-(4-ethoxyphenoxy)phenyl]methyl-2-aminonicotinic acid amide (hereinafter referred to as the present compound 186).

### The present compound 186

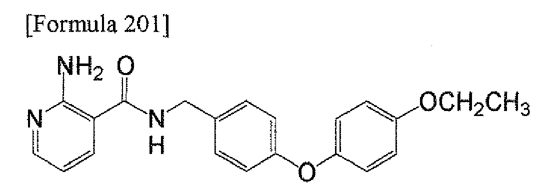

1H-NMR (CDCl3) δ: 1.42 (3H, t, J = 7.0 Hz), 4.02 (2H, q, J = 7.0 Hz), 4.55 (2H, d, J = 5.6 Hz), 6.26 (1H, br s), 6.35 (2H, br s), 6.58 (1H, dd, J = 7.7, 4.8 Hz), 6.86-6.97 (6H, m), 7.25-7.28 (2H, m), 7.58 (1H, dd, J = 7.7, 1.7 Hz), 8.16 (1H, dd, J = 4.8, 1.7 Hz).

### Production example 171

A mixture of 248 mg of 2-aminonicotinic acid, 203 mg of 1-hydroxybenzotriazole, 430 mg of WSC, 355 mg of 4-(4-propoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 217 mg of N-[4-(4-propoxyphenoxy)phenyl]methyl-2-aminonicotinic acid amide (hereinafter referred to as the present compound 187).

### The present compound 187

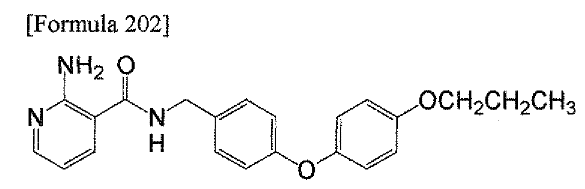

1H-NMR (CDCl3) δ: 1.04 (3H, t, J = 7.5 Hz), 1.76-1.86 (2H, m), 3.91 (2H, t, J = 6.6 Hz), 4.55 (2H, d, J = 5.6 Hz), 6.26 (1H, br s), 6.35 (2H, br s), 6.58 (1H, dd, J = 7.7, 4.8 Hz), 6.87-6.97 (6H, m), 7.25-7.28 (2H, m), 7.58 (1H, dd, J = 7.7, 1.8 Hz), 8.16 (1H, dd, J = 4.8, 1.8 Hz).

### Production example 172

A mixture of 248 mg of 2-aminonicotinic acid, 203 mg of 1-hydroxybenzotriazole, 430 mg of WSC, 367 mg of 4-(3-ethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 290 mg of N-[4-(3-ethoxyphenoxy)phenyl]methyl-2-aminonicotinic acid amide (hereinafter referred to as the present compound 188).

### The present compound 188

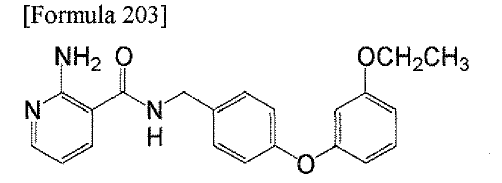

1H-NMR (CDCl3) δ: 1.40 (3H, t, J = 7.0 Hz), 4.00 (2H, q, J = 7.0 Hz), 4.58 (2H, d, J = 5.6 Hz), 6.27 (1H, br s), 6.37 (2H, br s), 6.54-6.67 (4H, m), 7.01 (2H, d, J = 8.6 Hz), 7.22 (1H, dd, J = 8.1, 8.1 Hz), 7.31 (2H, d, J = 8.6 Hz), 7.60 (1H, dd, J = 7.8, 1.8 Hz), 8.17 (1H, dd, J = 4.8, 1.8 Hz).

### Production example 173

A mixture of 248 mg of 2-aminonicotinic acid, 203 mg of 1-hydroxybenzotriazole, 430 mg of WSC, 349 mg of 4-(3-butoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 226 mg of N-[4-(3-butoxyphenoxy)phenyl]methyl-2-aminonicotinic acid amide (hereinafter referred to as the present compound 189).

### The present compound 189

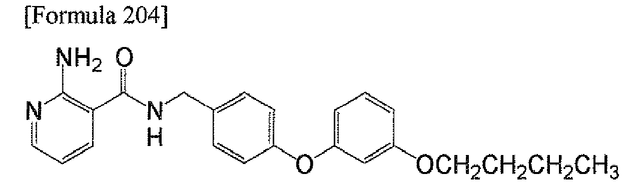

1H-NMR (CDCl3) δ: 0.96 (3H, t, J = 7.3 Hz), 1.42-1.52 (2H, m), 1.71.-1.78 (2H, m), 3.92 (2H, t, J = 6.6 Hz), 4.58 (2H, d, J = 5.6 Hz), 6.27 (1H, br s), 6.36 (2H, br s), 6.55-6.61 (3H, m), 6.63-6.67 (1H, m), 6.99-7.03 (2H, m), 7.19-7.23 (1H, m), 7.31 (2H, d, J = 8.6 Hz), 7.60 (1H, dd, J = 7.8, 1.8 Hz), 8.17 (1H, dd, J = 4,8, 1.8 Hz).

### Production example 174

A mixture of 0.25 g of 2-aminonicotinic acid, 0.20 g of 1-hydroxybenzotriazole, 0.43 g of WSC, 0.42 g of 4-(indan-5-yloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.29 g of N-[4-(indan-5-yloxy)]phenylmethyl-2-aminonicotinic acid amide (hereinafter referred to as the present compound 190).

### The present compound 190

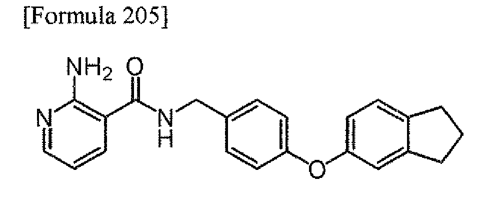

¹H-NMR (CDCl₃) δ: 2.06-2.14 (2H, m), 2.88 (4H, t, J = 7.5 Hz), 4.56 (2H, d, J = 5.6 Hz), 6.26 (1H, br s), 6.34-6.37 (2H, br s), 6.58 (1H, dd, J = 7.8, 4.8 Hz), 6.79 (1H, dd, J = 8.2, 2.1 Hz), 6.87 (1H, d, J = 2.1 Hz), 6.95-6.99 (2H, m), 7.17 (1H, d, J = 8.2 Hz), 7.26-7.31 (2H, m), 7.59 (1H, dd, J = 7.8, 1.8 Hz), 8.16 (1H, dd, J = 4.8, 1.8 Hz).

### Production example 175

A mixture of 0.25 g of 2-aminonicotinic acid, 0.20 g of 1-hydroxybenzotriazole, 0.43 g of WSC, 0.38 g of 4-(benzo[1,3]dioxol-5-yloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.19 g of N-[4-(benzo[1,3]dioxol-5-yloxy)phenyl]methyl-2-aminanicotinic acid amide (hereinafter referred to as the present compound 191).

### The present compound 191

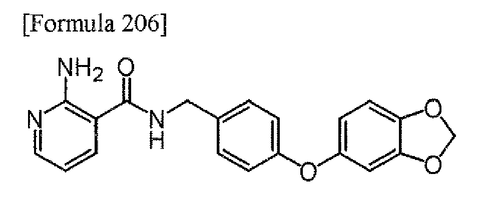

¹H-NMR (CDCl₃) δ: 4.56 (2H, d, J = 5.6 Hz), 5.98 (2H, s), 6.25 (1H, br s), 6.36 (2H, br s), 6.49 (1H, dd, J = 8.3, 2.3 Hz), 6.57-6.60 (2H, m), 6.76 (1H, d, J = 8.3 Hz), 6.92-6.96 (2H, m), 7.26-7.30 (2H, m), 7.59 (1H, dd, J = 7.8, 1.8 Hz), 8.16 (1H, dd, J = 4.8, 1.8 Hz).

### Production example 176

A mixture of 0.25 g of 2-aminonicotinic acid, 0.20 g of 1-hydroxybenzotriazole, 0.43 g of WSC, 0.39 g of 4-(2-naphthyloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.27 g of N-[4-(2-naphthyloxy)phenyl]methyl-2-aminonicotinic acid amide (hereinafter referred to as the present compound 192).

### The present compound 192

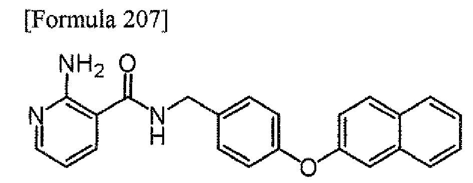

¹H-NMR (CDCl₃) δ: 4.60 (2H, d, J = 5.6 Hz), 6.29-6.41 (3H, br m), 6.59 (1H, dd, J = 7.7, 4.8 Hz), 7.03-7.08 (2H, m), 7.23-7.27 (1H, m), 7.30-7.37 (3H, m), 7.39-7.49 (2H, m), 7.61 (1H, dd, J = 7.7, 1.7 Hz), 7.70 (1H, d, J= 8.1 Hz), 7.83 (1H, d, J= 7.8 Hz), 7.84 (1H, d, J = 8.8 Hz), 8.17 (1H, dd, J = 4.8, 1.7 Hz).

### Production example 177

A mixture of 0.25 g of 2-aminonicotinic acid, 0.20 g of 1-hydroxybenzotriazole, 0.43 g of WSC, 0.33 g of 4-(pyridin-3-yloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.06 g of N-[4-(pyridin-3-yloxy)phenyl]methyl-2-aminonicotinic acid amide (hereinafter referred to as the present compound 193).

### The present compound 193

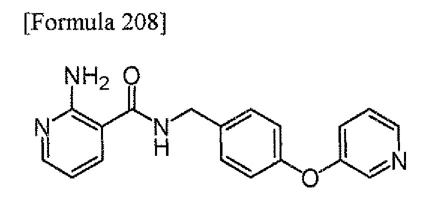

¹H-NMR (CDCl₃) δ: 4.59 (2H, d, J = 5.6 Hz), 6.37 (2H, br s), 6.45 (1H, br s), 6.59 (1H, dd, J = 7.6, 4.8 Hz), 6.99-7.03 (2H, m), 7.25-7.35 (4H, m), 7.62 (1H, dd, J = 7.6, 1.7 Hz), 8.16 (1H, dd, J =4.8, 1.7 Hz), 8.35-8.39 (2H, m).

### Production example 178

A mixture of 0.24 g of N-(3-hydroxyphenyl)methyl-2-aminonicotinic acid amide, 0.18 g of 4-methoxybutane methanesulfonate, 0.42 g of cesium carbonate and 3 ml of DMF was stirred at a room temperature for 20 hours. After, water was added to the reaction mixture, it was then extracted with ethyl acetate. The extract was dried over anhydrous sodium sulfate, and it was then concentrated under reduced pressure, so as to obtain 0.24 g of N-[3-(4-methoxybutoxy)phenyl]methyl-2-aminonicotinic acid amide (hereinafter referred to as the present compound 194).

### The present compound 194

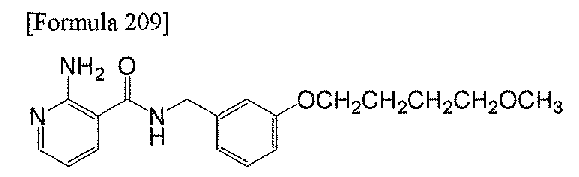

¹H-NMR (CDCl₃) δ: 1.72-1.89 (4H, m), 3.34 (3H, s), 3.44 (2H, t, J = 6.2 Hz), 3.98 (2H, t, J = 6.2 Hz), 4.57 (2H, d, J = 5.6 Hz), 6.26 (1H, br s), 6.36 (2H, br s), 6.59 (1H, dd, J = 7.7, 4.8 Hz), 6,82-6.93 (3H, m), 7.26-7.31 (1H, m), 7.59 (1H, d, J = 7.7 Hz), 8.17 (1H, d, J = 4.8 Hz).

### Production example 179

A mixture of 0.24 g of N-(3-hydroxyphenyl)methyl-2-aminonicotinic acid amide, 0.27 g of 4-ethoxybutan-p-toluenesulfonate, 0.42 g of cesium carbonate and 2 ml of DMF was stirred at a room temperature for 20 hours. After, water was added to the reaction mixture, it was then extracted with ethyl acetate. The extract was dried over anhydrous sodium sulfate, and it was then concentrated under reduced pressure, so as to obtain 0.26 g of N-[3-(4-ethoxybutoxy)phenyl]methyl-2-aminonicotinic acid amide (hereinafter referred to as the present compound 195).

### The present compound 195

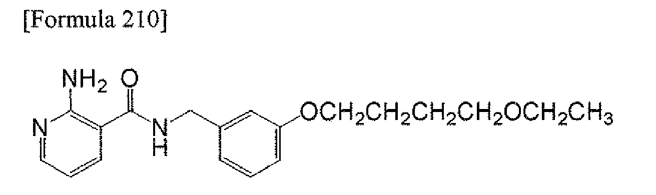

¹H-NMR (CDCl₃) δ: 1.20 (3H, t, J = 7.1 Hz), 1.72-1.90 (4H, m), 3.46-3.51 (4H, m), 3.99 (2H, t, J = 6.3 Hz), 4.57 (2H, d, J = 5.6 Hz), 6.25 (1H, br s), 6.36 (2H, br s), 6.59 (1H, dd, J = 7.7, 4.8 Hz), 6.82-6.32 (3H, m), 7.24-7.29 (1H, m), 7.59 (1H, dd, J = 7.7, 1.7 Hz), 8.17 (1H, dd, J = 4.8, 1.7 Hz).

### Production example 180

A mixture of 0.24 g ofN-(3-hydroxyphenyl)methyl-2-aminonicotinic acid amide, 0.18 g of 3-ethoxypropane methanesulfonate, 0.42 g of cesium carbonate and 2 ml of DMF was stirred at a room temperature for 20 hours. After, water was added to the reaction mixture, it was then extracted with ethyl acetate. The extract was dried over anhydrous sodium sulfate, and it was then concentrated under reduced pressure, so as to obtain 0.25 g of N-[3-(3-ethoxypropoxy)phenyl]methyl-2-aminonicatinrc acid amide (hereinafter referred to as the present compound 196).

### The present compound 196

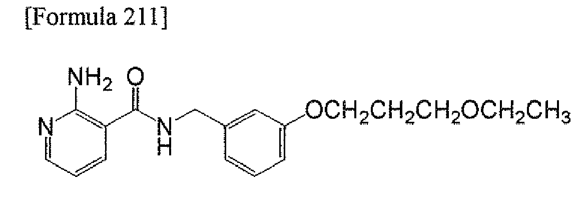

¹H-NMR (CDCl₃) δ: 1.20 (3H, t, J = 7.1 Hz), 2.02-2.08 (2H, m), 3.49 (2H, q, J = 7.1 Hz), 3.59 (2H, t, J = 6.2 Hz), 4.06 (2H, t, J = 6.2 Hz), 4.57 (2H, d, J = 5.6 Hz), 6.25 (1H, br s), 6.36 (2H, br s), 6.59 (1H, dd, J = 7.6, 4.9 Hz), 6.83-6.92 (3H, m), 7.24-7.29 (1H, m), 7.59 (1H, dd, J = 7.6, 1.7 Hz), 8.17 (1H, dd, J = 4.9, 1.7 Hz).

### Production example 181

0.55 g of a BOP reagent and 0.13 g of triethylamine were successively added to a mixture of 0.14 g of 2-aminonicotinic acid, 0.18 g of 3-phenylmethylbenzylamine and 2 ml of DMF. The obtained mixture was stirred at a room temperature for 20 hours. After, water was added to the reaction mixture, it was then extracted with ethyl acetate. The extract was dried over anhydrous sodium sulfate, and it was then concentrated under reduced pressure, so as to obtain 0.18 g of N-[(3-phenylmethyl)phenyl]methyl-2-aminonicotinic acid amide (hereinafter referred to as the present compound 197).

### The present compound 197

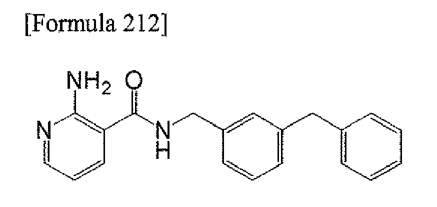

¹H-NMR (CDCl₃) δ: 3.98 (2H, s), 4.56 (2H, d, J = 5.6 Hz), 6.23 (1H, br s), 6.38 (2H, br s), 6.58 (1H, dd, J = 7.6, 4.9 Hz), 7.13-7.31 (9H, m), 7.56 (1H, dd, J = 7.6, 1.7 Hz), 8.15 (1H, dd, J = 4.9, 1.7 Hz).

### Production example 182

0.33 g of 2-chloro-6-methylnicotinic acid chloride, 0.30 g of 4-(3-methylphenoxy)benzylamine, 0.50 g of triethylamine and 10 ml of THF were stirred at a room temperature for 4 hours. Thereafter, the reaction mixture was concentrated under reduced pressure, and the obtained residue was then subjected to silica gel column chromatography, so as to obtain 0.40 g of N-[4-(3-methylphenoxy)phenyl]methyl-2-chloro-6-methylnicotinic acid amide. 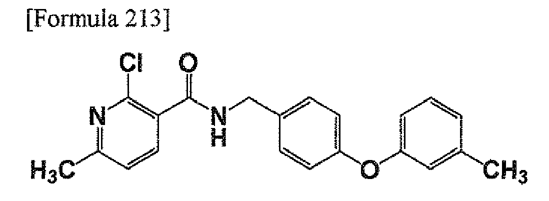 0.40 g of the thus obtained N-[4-(3-methylphenoxy)phenyl]methyl-2-chloro-6-methylnicotinic acid amide, 1 ml of 1,4-dioxane and 4 ml of 28% aqueous ammonia were mixed. The obtained mixture was subjected to a microwave reactor (production nave: Discover; manufactured by CEM) at 18 kgf/cm² at 120°C for 5 hours. Thereafter, the reaction mixture was concentrated under reduced pressure, and the obtained residue was then subjected to silica gel column chromatography, so as to obtain 0.27 g of N-[4-(3-methylphenoxy)phenyl]methyl-2-amino-6-methylnicotinic acid amide (hereinafter referred to as the present compound 198).

### The present compound 198

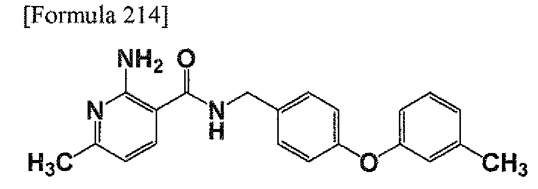

1H-NMR (CDCl3) δ: 2.33 (3H, s), 2.38 (3H, s), 4.56 (2H, d, J = 5.6 Hz), 6.23 (1H, br s), 6.38 (2H, br s), 6.44 (1H, d, J = 7.9 Hz), 6.78-6.84 (2H, m), 6.90-7.00 (3H, m), 7.19-7.30 (3H, m), 7.49 (1H, d, J = 7.9 Hz).

### Production example 183

A mixture of 0.24 g of N-(3-hydroxyphenyl)methyl-2-aminomcotinic acid amide, 0.15 g of 5-bromo-1-pentene, 0.42 g of cesium carbonate and 2 ml ofDMF was stirred at a room temperature for 20 hours. Thereafter, water was added to the reaction mixture, and it was then extracted with ethyl acetate. The extract was successively washed with a saturated sodium bicarbonate solution, water and a saturated saline solution, and it was then dried over anhydrous sodium sulfate, followed by concentration under reduced pressure, so as to obtain 0.26 g of N-[3-(4-heptenyloxy)phenyl]methyl-2-aminonicotinic acid amide (hereinafter referred to as the present compound 199).

### The present compound 199

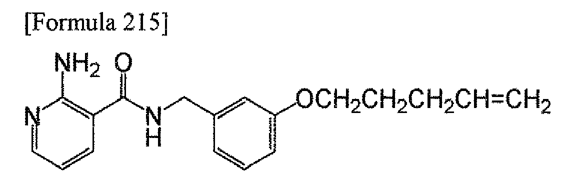

1H-NMR (CDC13) δ: 1.84-1.92 (2H, m), 2.20-2.26 (2H, m), 3.97 (2H, t, J = 6.4 Hz), 4.57 (2H, d, J = 5.6 Hz), 4.98-5.09 (2H, m), 5.79-5.89 (1H, m), 6.27 (1H, br s), 6.35 (2H, br s), 6.58 (1H, dd, J = 7.6, 5.0 Hz), 6.83-692 (3H, m), 7.24-7.29 (1H, m), 7.59 (1H, dd, J = 7.7, 1.7 Hz), 8.16 (1H, dd, J = 4.8, 1.7 Hz).

### Production example 184

A mixture of 0.24 g of N-(3-hydroxyphenyl)methyl-2-aminonicotinic acid amide, 0.15 g of 6-bromo-1-hexene, 0.42 g of cesium carbonate and 2 ml of DMF was stirred at a room temperature for 20 hours. Thereafter, water was added to the reaction mixture, and it was then extracted with ethyl acetate. The extract was successively washed with a saturated sodium bicarbonate solution, water and a saturated saline solution, and it was then dried over anhydrous sodium sulfate, followed by concentration under reduced pressure, so as to obtain 0.27 g of N-[3-(5-hexenyloxy)phenyl]methyl-2-aminonicotinic acid amide (hereinafter referred to as the present compound 200).

### The present compound 200

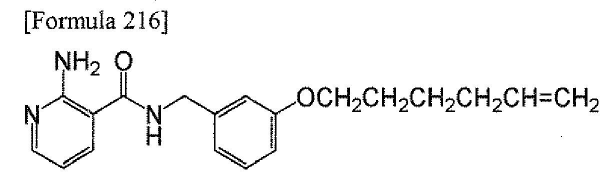

1H-NMR (CDCl3) δ: 1.53-1.61 (2H, m), 1.76-1.83 (2H, m), 2.10-2.15 (2H, m), 3.96 (2K t, J = 6.5 Hz), 4.56 (2H, d, J = 5.6 Hz), 4.95-5.05 (2H, m), 5.77-5.88 (1H, m), 6.30 (1H, br s), 6.36 (2H, br s), 6.58 (1H, dd, J = 7.5, 4.8 Hz), 6.82-6.92 (3H, m), 7.23-7.29 (1H, m), 7.59 (1H, dd, J = 7.7, 1.7 Hz), 8.16 (1H, dd, J = 4.8, 1.9 Hz).

### Production example 185

A mixture of 248 mg of 2-aminonicotinic acid, 203 mg of 1-hydroxybenzotriazole, 430 mg of WSC, 309 mg of 3-(2-methylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 163 mg of N-[3-(2-methylphenoxy)phenyl]methyl-2-aminonicotinic acid amide (hereinafter referred to as the present compound 201).

### The present compound 201

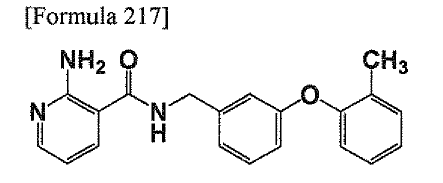

1H-NMR (CDC13) δ- 2.23 (3H, s), 4.56 (2H, d, J = 5.6 Hz), 6.26-6.38 (3H, br m), 6.59 (1H, dd, J = 7.8, 4.8 Hz), 6.77-6.82 (1H, m), 6.88-6.94 (2H, m), 7.00-7.03 (1H, m), 7.06-7.11 (1H, m), 7.15-7.20 (1H, m), 7.24-7.30 (2H, m), 7.58 (1H, dd, J = 7.8, 1.8 Hz), 8.17 (1H, dd, J = 4.8, 1.8 Hz).

### Production example 186

A mixture of 248 mg of 2-aminonicotinic acid, 203 mg of 1-hydroxybenzotriazole, 430 mg of WSC, 320 mg of 3-(2-fluorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 277 mg ofN-[3-(2-fluorophenoxy)phenyl]methyl-2-aminonicotinic acid amide (hereinafter referred to as the present compound 202).

### The present compound 202

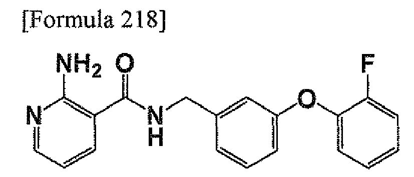

1H-NMR (CDCl3 δ: 4.57 (2H, d, J = 5.6 Hz), 6.27-6.41 (3H, br m), 6.59 (1H, dd, J = 7.7, 4.9 Hz), 6.86-6.90 (1H, m), 6.94-6.98 (1H, m), 7.03-7.22 (5H, m), 7.28-7.33 (1H, m), 7.59 (1H, dd, J = 7.7, 1.7 Hz), 8.16 (1H, dd, J = 4.9, 1.7 Hz).

### Production example 187

A mixture of 248 mg of 2-aminonicotinic acid, 203 mg of 1-hydroxybenzotriazole, 430 mg of WSC, 337 mg of 3-(2-chlorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 254 mg of N-[3-(2-chlorophenoxy)phenyl]methyl-2-aminonicotinic acid amide (hereinafter referred to as the present compound 203).

### The present compound 203

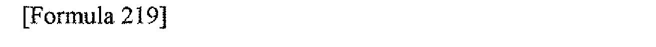

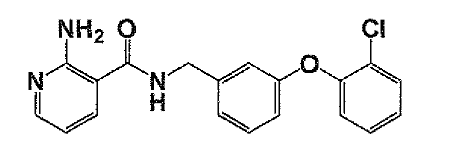

1H-NMR (CDCl3) δ : 4.58 (2H, d, J = 5.8 Hz), 6.27-6.42 (3H, br m), 6.59 (1H, dd, J = 7.7, 4.9 Hz), 6.89-6.99 (4H, m), 7.07-7.11 (1H, m), 7.27-7.35 (3H, m), 7.59 (1H, dd, J= 7.7, 1.8 Hz), 8.17 (1H, dd, J= 4. 9, 1.8 Hz).

### Production example 188

A mixture of 248 mg of 2-aminonicotinic acid, 203 mg of 1-hydroxybenzotriazole, 430 mg of WSC, 336 mg of 3-(3-chlorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 297 mg of N-[3-(3-chlorophenoxy)phenyl]methyl-2-aminonicotinic acid amide (hereinafter referred to as the present compound 204).

### The present compound 204

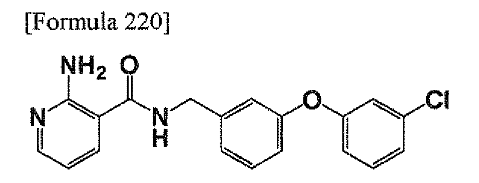

1H-NMR (CDCl3) δ 4.60 (2H, d, J = 5.8 Hz), 6.29-6.39 (3H, br m), 6.60 (1H, dd, J = 7.6, 4.8 Hz), 6.88-6.92 (1H, m), 6.92-6.96 (1H, m), 6.97-7.02 (2H, m), 7.06-7.15 (2H, m), 7.25-7.28 (1H, m), 7.32-7.37 (1H, m), 7.60 (1H, d, J = 7.8 Hz), 8.17 (1H, dd, J = 4.8, 1.8 Hz).

### Production example 189

A mixture of 248 mg of 2-aminonicotinic acid, 203 mg of 1-hydroxybenzotriazole, 430 mg of WSC, 389 mg of 3-(3-trifluoromethylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 259 mg of N-[3-(3-trifluoromethylphenoxy)phenyl]methyl-2-aminonicotinic acid amide (hereinafter referred to as the present compound 205).

### The present compound 205

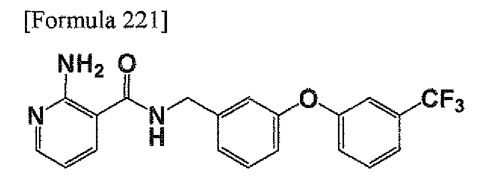

1H-NMR (CDCl3) δ: 4.60 (2H, d, J = 5.6 Hz), 6.32-6.40 (3H, br m), 6.59 (1H, dd, J = 7.8, 4.8 Hz), 6.93-6.97 (1H, m), 7.00-7.03 (1H, m), 7.12-7.19 (2H, m), 7.23-7.27 (1H, m), 7.34-7.39 (2H, m), 7.42-7.47 (1H, m), 7.60 (1H, dd, J = 7.8, 1.8 Hz), 8.17 (1H, dd, J = 4. 8, 1.8 Hz).

### Production example 190

A mixture of 248 mg of 2-aminonicotinic acid, 203 mg of 1-hydroxybenzotriazole, 430 mg of WSC, 401 mg of 3-(3-trifluoromethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 175 mg of N-[3-(3-trifluoromethoxyphenoxy)phenyl]methyl-2-aminonicotinic acid amide (hereinafter referred to as the present compound 206).

### The present compound 206

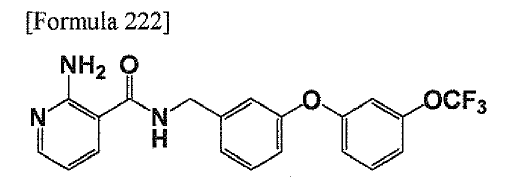

1H-NMR (CDCl3) δ: 4.60 (2H, d, J = 5.8 Hz), 6.30-6.41 (3H, br m), 6.59 (1H, dd, J = 7.8, 4.9 Hz), 6.85-6.87 (1H, m), 6.90-6.99 (3H, m), 7.01-7.03 (1H, m), 7.11-7.16 (1H, m), 7.32 (1H, d, J = 8.3 Hz), 7.37 (1H, d, J = 8.1 Hz), 7.60 (1H, dd, J = 7.8, 1.7 Hz), 8.17 (1H, dd, J = 4.9, 1.7 Hz).

### Production example 191

A mixture of 248 mg of 2-aminonicotinic acid, 203 mg of 1-hydroxybenzotriazole, 430 mg of WSC, 354 mg of 3-(3-ethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 269 mg of N-[3-(3-ethoxyphenoxy)phenyl]methyl-2-aminonicotinic acid amide (hereinafter referred to as the present compound 207).

### The present compound 207

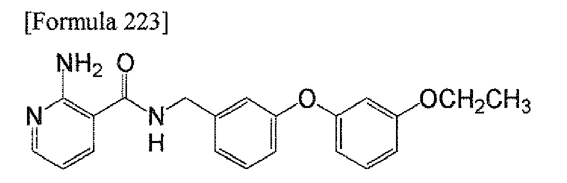

1H-NMR (CDCl3) δ: 1.39 (3H, t, J = 6.9 Hz), 3.99 (2H, q, J = 6.9 Hz), 4.58 (2H, d, J = 5.8 Hz), 6.27-6.38 (3H, br m), 6.55-6.60 (3H, m), 6.64-6.67 (1H, m), 6.92-6.96 (1H, m), 6.99-7.01 (1H, m), 7.05-7.09 (1H, m), 7.19-7.24 (1H, m), 7.29-7.34 (1H, m), 7.59 (1H, dd, J = 7.7, 1.7 Hz), 8.16 (1H, dd, J = 5.1, 1.7 Hz).

### Production example 192

A mixture of 248 mg of 2-aminonicotinic acid, 203 mg of 1-hydroxybenzotriazole, 430 mg of WSC, 336 mg of 3-(3-ethylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 160 mg of N-[3-(3-ethylphenoxy)phenyl]methyl-2-aminonicotinic acid amide (hereinafter referred to as the present compound 208).

### The present compound 208

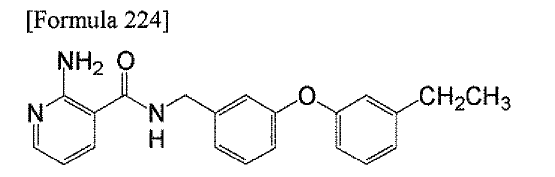

1H-NMR (CDCl3) δ: 1.22 (3H, t, J = 7.7 Hz), 2.63 (2H, q, J = 7.7 Hz), 4.57 (2H, d, J = 5.6 Hz), 6.29-6.39 (3H, br m), 6.58 (1H, dd, J = 7.8, 4.8 Hz), 6.80-6.84 (1H, m), 6.86-6.88 (1H, m), 6.90-6.99 (3H, m), 7.04-7.08 (1H, m), 7.22-7.27 (1H, m), 7.28-7.32 (1H, m), 7.58 (1H, dd, J = 7.8, 1.8 Hz), 8.16 (1H, dd, J = 4.8, 1.8 Hz).

### Production example 193

A mixture of 248 mg of 2-aminonicotinic acid, 203 mg of 1-hydroxybenzotriazole, 430 mg of WSC, 303 mg of 3-(3-fluorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 142 mg of N-[3-(3-fluorophenoxy)phenyl]methyl-2-aminonicotinic acid amide (hereinafter referred to as the present compound 209).

### The present compound 209

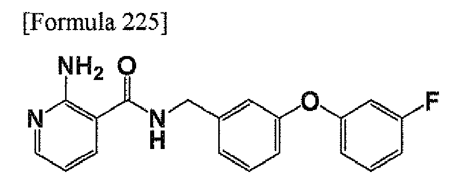

1H-NMR (CDCl3) δ: 4.60 (2H, d, J = 5.8 Hz), 6.29-6.40 (3H, br m), 6.59 (1H, dd, J = 7.7, 4.9 Hz), 6.68-6.72 (1H, m), 6.77-6.83 (2H, m), 6.94-6.98 (1H, m), 7.01-7.03 (1H, m), 7.11-7.14 (1H, m), 7.24-7.31 (1H, m), 7.32-7,37 (1H, m), 7.60 (1H, dd, J = 7.7, 1.6 Hz), 8.17 (1H, dd, J=4.9, 1.6 Hz).

### Production example 194

A mixture of 0.26 g of N-(2-fluoro-3-hydroxyphenyl)methyl-2-aminonicotinic acid amide, 0.10 g of 5-chloro-1-pentyne, 0.42 g of cesium carbonate and 2 ml of DMF was stirred at a room temperature for 20 hours. Thereafter, water and a saturated sodium bicarbonate solution were added to the reaction mixture, and the precipitated solid was then collected by filtration. The collected solid was successively washed with water and hexane, so as to obtain 0.22 g of N-[2-fluoro-3-(4-pentynyloxy)phenyl]methyl-2-aminonicotinic acid amide (hereinafter referred to as the present compound 210).

### The present compound 210

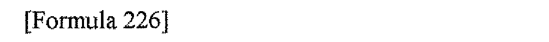

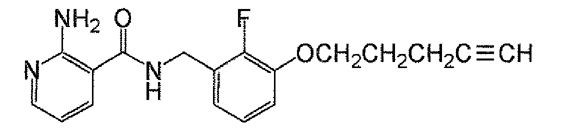

1H-NMR (CDCl3) δ: 1.98 (1H, t, J = 2.7 Hz), 2.01-2.07 (2H, m), 2.44 (2H, td, J= 6.9, 2.6 Hz), 4.15 (2H, t, J = 6.1 Hz), 4.65 (2H, d, J = 5.1 Hz), 6.33 (2H, br s), 6.38 (1H, br s), 6.59 (1H, dd, J = 7.7,4.8 Hz), 6.91-7.08 (3H, m), 7.59 (1H, dd, J = 7.7, 1.8 Hz), 8.16 (1H, dd, J = 4.8, 1.8 Hz).

### Production example 195

A mixture of 248 mg of 2-aminonicotinic acid, 203 mg of 1-hydroxybenzotriazole, 430 mg of WSC, 312 mg of 3-(4-fluorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 152 mg of N-[3-(4-fluorophenoxy)phenyl]methyl-2-aminonicotinic acid amide (hereinafter referred to as the present compound 211).

### The present compound 211

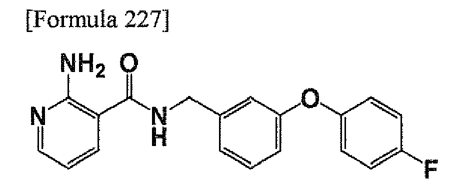

1H-NMR (CDCl3) δ: 4.57 (2H, d, J = 5.6 Hz), 6.29-6.39 (3H, br m), 6.58 (1H, dd, J = 7.7, 4.9 Hz), 6.85-6.89 (1H, m), 6.94-7.08 (6H, m), 7.28-7.32 (1H, m), 7.58 (1H, dd, J = 7.7, 1.7 Hz), 8.17 (1H, dd, J = 4.9, 1.7 Hz).

### Production example 196

A mixture of 248 mg of 2-aminonicotinic acid, 203 mg of 1-hydroxybenzotriazole, 430 mg of WSC, 339 mg of 3-(4-chlorophenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 145 mg ofN-[3-(4-chlorophenoxy)phenyl]methyl-2-aminonicotinic acid amide (hereinafter referred to as the present compound 212).

### The present compound 212

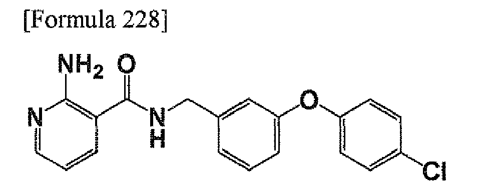

1H-NMR (CDCl3) δ: 4.58 (2H, d, J = 5.8 Hz), 6.29-6.37 (3H, br m), 6.59 (1H, dd, J = 7.8, 4.8 Hz), 6.89-6.98 (4H, m), 7.07-7.11 (1H, m), 7.26-7.34 (3H, m), 7.59 (1H, dd, J = 7.8, 1.8 Hz), 8.17 (1R, dd, J = 4.8, 1.8 Hz).

### Production example 197

A mixture of 248 mg of 2-aminonicotinic acid, 203 mg of 1-hydroxybenzotriazole, 430 mg of WSC, 349 mg of 3-(4-trifluoromethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 125 mg of N-[3-(4-trifluoromethoxyphenoxy)phenyl]methyl-2-aminonicotinic acid amide (hereinafter referred to as the present compound 213).

### The present compound 213

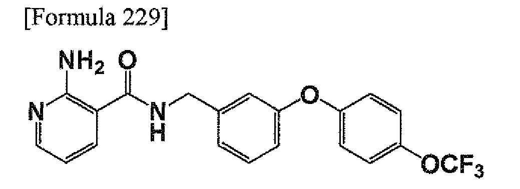

1H-NMR (CDCl3) δ: 4.59 (2H, d, J = 5.6 Hz), 6.31-6.40 (3H, br m), 6.59 (1H, dd, J = 7.8, 4.8 Hz), 6.90-6.94 (1H, m), 6.98-7.03 (3H, m), 7.09-7.12 (1H, m), 7.16-7.21 (2H, m), 7.31-7.36 (1H, m), 7.60 (1H, dd, J = 7.8, 1.8 Hz), 8.17 (1H, dd, J = 4.8, 1.8 Hz).

### Production example 198

A mixture of 248 mg of 2-aminonicotinic acid, 203 mg of 1-hydroxybenzotriazole, 430 mg of WSC, 329 mg of 3-(4-ethoxyphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 119 mg of N-[3-(4-ethoxyphenoxy)phenyl]methyl-2-aminonicotinic acid amide (hereinafter referred to as the present compound 214).

### The present compound 214

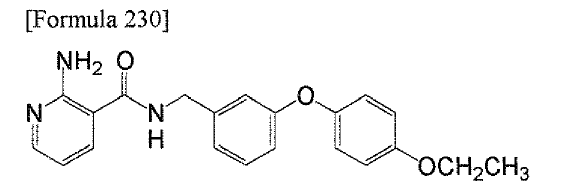

1H-NMR (CDCl3) δ: 1.42 (3H, t, J = 7.0 Hz), 4.02 (2H, q, J = 7.0 Hz), 4.55 (2H, d, J = 5.8 Hz), 6.24-6.37 (3H, br m), 6.58 (1H, dd, J = 7.6, 4.8 Hz), 6.83-6.92 (4H, m), 6.94-7.02 (3H, m), 7.25-7.29 (1H, m), 7.57 (1H, dd, J = 7.6, 1.8 Hz), 8.16 (1H, dd, J = 4.8, 1.8 Hz).

### Production example 199

A mixture of 248 mg of 2-aminonicotinic acid, 203 mg of 1-hydroxybenzotriazole, 430 mg of WSC, 328 mg of 3-(4-ethylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 136 mg of N-[3-(4-ethylphenoxy)phenyl]methyl-2-aminonicotinic acid amide (hereinafter referred to as the present compound 215).

### The present compound 215

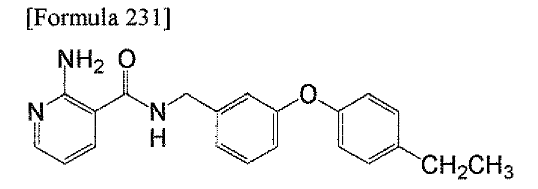

1H-NMR (CDCl3) δ: 1.24 (3H, t, J = 7.6 Hz), 2.64 (2H, q, J = 7.6 Hz), 4.57 (2H, d, J = 5.8 Hz), 6.26-6.38 (3H, br m), 6.58 (1H, dd, J = 7.6, 4.8 Hz), 6.88-6.97 (4H, m), 7.02-7.05 (1H, m), 7.15-7.19 (2H, m), 7,27-7.31 (1H, m), 7.58 (1H, dd, J = 7.6, 1.8 Hz), 8.16 (1H, dd, J = 4.8, 1.8 Hz).

### Production example 200

A mixture of 248 mg of 2-aminonicotinic acid, 203 mg of 1-hydroxybenzotriazole, 430 mg of WSC, 348 mg of 3-(4-propylphenoxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 232 mg of N-[3-(4-propylphenoxy)phenyl]methyl-2-aminonicotinic acid amide (hereinafter referred to as the present compound 216).

### The present compound 216

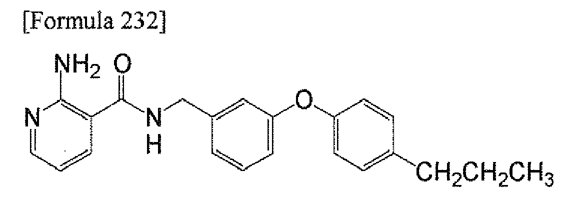

1H-NMR (CDCl3) δ 0.95 (3H, t, J = 7.3 Hz), 1.59-1.68 (2H, m), 2.55-2.59 (2H, m), 4.57 (2H, d, J = 5.8 Hz), 6.26-6.37 (3H, br m), 6.58 (1H, dd, J = 7.7, 4.9 Hz), 6.88-6.97 (4H, m), 7.02-7.06 (1H, m), 7.12-7.16 (2H, m), 7.27-7.31 (1H, m), 7.58 (1H, dd, J = 7.7, 1.8 Hz), 8.16 (1H, dd, J = 4.9, 1.8 Hz).

### Production example 201

A mixture of 0.25 g of 2-aminonicotinic acid, 0.20 g of 1-hydroxybenzotriazole, 0.43 g of WSC, 0.32 g of 3-phenylthiabenzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.26 g of N-(3-phenylthiophenyl)methyl-2-aminonicotinic acid amide (hereinafter referred to as the present compound 217).

### The present compound 217

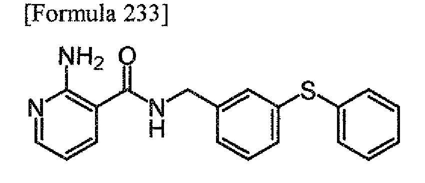

¹H-NMR (CDCl₃) δ: 4.55 (2H, d, J = 5.6 Hz), 6.22-6.38 (3H, br m), 6.58 (1H, dd, J = 7.7, 4.9 Hz), 7.18-7.39 (9H, m), 7.54 (1H, dd, J = 7.7, 1.8 Hz), 8.17 (1H, dd, J = 4.9, 1.8 Hz).

### Production example 202

A mixture of 0.25 g of 2-aminonicotinic acid, 0.20 g of 1-hydroxybenzotriazole, 0.43 g of WSC, 0.30 g of 4-phenylthiobenzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.24 g of N-(4-phenylthiophenyl)methyl-2-aminonicotinic acid amide (hereinafter referred to as the present compound 218).

### The present compound 218

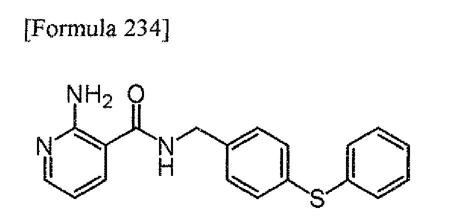

¹H-NMR (CDCl₃) δ: 4.58 (2H, d, J = 5.8 Hz), 6.26-6,39 (3H, br m), 6.59 (1H, dd, J = 7.8, 4.8 Hz), 7.23-7.39 (9H, m), 7.59 (1H, dd, J = 7.8, 1.7 Hz), 8.17 (1H, dd, J = 4.8, 1.7 Hz).

### Production example 203

A mixture of 0.25 g of 2-aminonicotinic acid, 0.20 g of 1-hydroxybenzotriazole, 0.43 g of WSC, 0.33 g of 3-(indan-5-yloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.24 g of N-[3-(indan-5-yloxy)phenyl]methyl-2-aminonicotinic acid amide (hereinafter preferred to as the present compound 219).

### The present compound 219

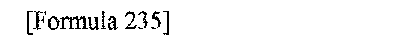

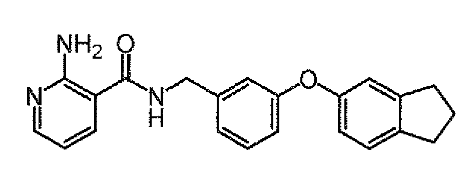

¹H-NMR (CDCl₃) δ: 2.05-2.14 (2H, m), 2.85-2.91 (4H, m), 4.56 (2H, d, J = 5.8 Hz), 6.26 (1H, br s), 6.34 (2H, br s), 6.58 (1H, dd, J = 7.7, 4.9 Hz), 6.78-6.82 (1H, m), 6.87-6.92 (2H, m), 6.95-6.96 (1H, m), 7.01-7.05 (1H, m), 7.15-7.19 (1H, m), 7.27-7.31 (1H, m), 7.58 (1H, dd, J = 7.7, 1.7 Hz), 8.17 (1H, dd, J = 4.9, 1.7 Hz).

### Production example 204

A mixture of 0.25 g of 2-aminonicotinic acid, 0.20 g of 1-hydroxybenzotriazole, 0.43 g of WSC, 0.37 g of 3-(5,6,7,8-tetrahydronaphthalen-2-yloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.18 g of N-[3-(5,6,7,8-tetrahydronaphthalen-2-yloxy)phenyl]methyl-2-aminonicotinic acid amide (hereinafter referred to as the present compound 220).

### The present compound 220

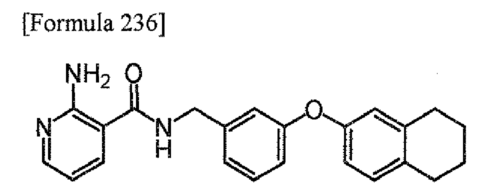

¹H-NMR (CDCl₃) δ: 1.76-1.82 (4H, m), 2.70-2.76 (4H, m), 4.56 (2H, d, J = 5.8 Hz), 6.27 (1H, br s), 6.34 (2H, br s), 6.58 (1H, dd, J = 7.6, 4.9 Hz), 6.72-6.78 (2H, m), 6.89-6.92 (1H, m), 6.95-6.97 (1H, m), 7.01-7.05 (2H, m), 7.27-7.31 (1H, m), 7.58 (1H, dd, J = 7.6, 1.8 Hz), 8.17 (1H, dd, J = 4.9, 1.8 Hz).

### Production example 205

A mixture of 0.25 g of 2-aminonicotinic acid, 0.20 g of 1-hydroxybenzotriazole, 0.43 g of WSC, 0.35 g of 3-[benzo[1,3]dioxol-5-yloxy]benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.16 g of N-[3-(benzo[1,3]dioxol-5-yloxy)phenyl]methyl-2-aminonicotinic acid amide (hereinafter referred to as the present compound 221).

### The present compound 221

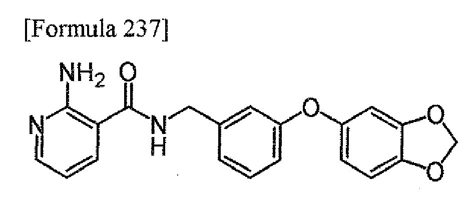

¹H-NMR (CDCl₃) δ: 4.56 (2H, d, J = 5.6 Hz), 5.98 (2H, s), 6.28 (1H, br s), 6.33 (2H, br s), 6.50 (1H, dd, J = 8.5, 2.4 Hz), 6.56-6.61 (2H, m), 6.76 (1H, d, J = 8.3 Hz), 6.87 (1H, dd, J = 8.0, 2.1 Hz), 6.92-6.94 (1H, m), 7.01-7.04 (1H, m), 7.26-7.31 (1H, m), 7.58 (1H, dd, J = 7.6, 1.8 Hz), 8.16 (1H, dd, J = 4.8, 1.8 Hz).

### Production example 206

A mixture of 0.25 g of 2-aminonicotinic acid, 0.20 g of 1-hydroxybenzotriazole, 0.43 g of WSC, 0.39 g of 3-(2-naphthyloxy)benzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.27 g of N-[3-(2-naphthyloxy)phenyl]methyl-2-aminonicotinic acid amide (hereinafter referred to as the present compound 222).

### The present compound 222

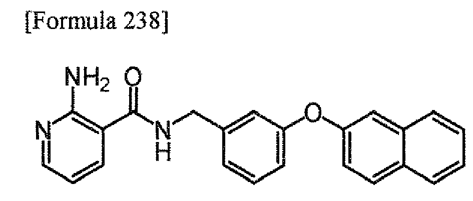

¹H-NNR (CDCl₃) δ: 4.59 (2H, d, J = 5.8 Hz), 6.26-6.34 (3H, br m), 6.56 (1H, dd, J = 7.7, 4.9 Hz), 6.97-7.01 (1H, m), 7.03-7.05 (1H, m), 7.09-7.13 (1H, m), 7.23-7.27 (1H, m), 7.32-7.37 (2H, m), 7.40-7.49 (2H, m), 7.57 (1H, dd, J = 7.7, 1.7 Hz), 7.71 (1H, d, J = 8.1 Hz), 7.81-7.86 (2H, m), 8.16 (1H, dd, J = 4.9, 1.7 Hz).

### Production example 207

A mixture of 0.25 g of 2-aminonicotinic acid, 0.20 g of 1-hydroxybenzotriazole, 0.43 g of WSC, 0.29 g of 3-(pyridin-3-yloxy)henzylamine and 2 ml of DMF was stirred at 60°C for 3 hours. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.05 g of N-[3-(pyridin-3-yloxy)phenyl]methyl-2-aminonicotinic acid amide (hereinafter referred to as the present compound 223).

### The present compound 223

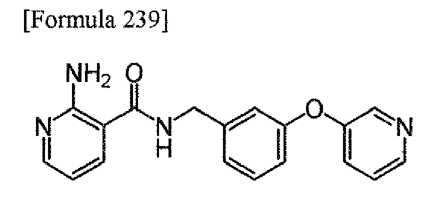

¹H-NMR (CDCl₃) δ: 4.60 (2H, d, J = 5.8 Hz), 6.34 (2H, br s), 6.40 (1H, br s), 6.59 (1H, dd, J = 7.7, 4.8 Hz), 6.94 (1H, dd, J = 7.8, 2.0 Hz), 7.01-7.02 (1H, m), 7.12-7.15 (1H, m), 7.26-7.37 (3H, m), 7.61 (1H, dd, J = 7.7, 1.8 Hz), 8.17 (1H, dd, J = 4.8, 1.8 Hz), 8.36-8.40 (2H, m).

### Production example 208

A mixture of 0.26 g of N-(2-fluoro-3-hydroxyphenyl)methyl-2-aminonicotinic acid amide, 0.18 g of 1-iodobutane, 0.42 g of cesium carbonate and 2 ml of DMF was stirred at a room temperature for 20 hours. Thereafter, water was added to the reaction mixture, and the precipitated solid was then collected by filtration. The collected solid was successively washed with water and hexane, so as to obtain 0.27 g of N-(2-fluoro-3-butoxyphenyl)methyl-2-aminonicotinic acid amide (hereinafter referred to as the present compound 210).

### The present compound 224

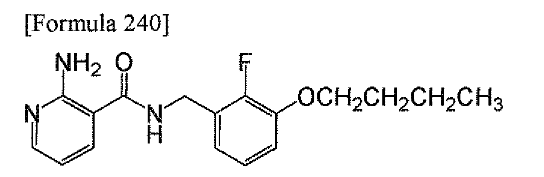

1H-NMR (CDCl3) δ: 0.98 (3H, t, J = 7.3 Hz), 1.47-1.56 (2H, m), 1.77-1.85 (2H, m), 4.03 (2H, t, J = 6.5 Hz), 4.64 (2H, d, J = 5.4 Hz), 6.32 (2H, br s), 6.39 (1H, br s), 6.58 (1H, dd, J = 7.8, 4.9 Hz), 6.90-7.05 (3H, m), 7.59 (1H, dd, J = 7.8, 1.7 Hz), 8.15 (1H, dd, J = 4.9, 1.7 Hz).

### Production example 209

A mixture or 0.26 g of N-(2-fluoro-3-hydroxyphenyl)methyl-2-aminonicotinic acid amide, 0.20 g of 1-iodopentane, 0.42 g of cesium carbonate and 2 ml of DMF was stirred at a room temperature for 20 hours. Thereafter, water and a saturated sodium bicarbonate solution were added to the reaction mixture, and the precipitated solid was then collected by filtration. The collected solid was successively washed with water and hexane, so as to obtain 0.25 g of N-(2-fluoro-3-pentyloxyphenyl)methyl-2-aminonicotinic acid amide (hereinafter referred to as the present compound 225).

### The present compound 225

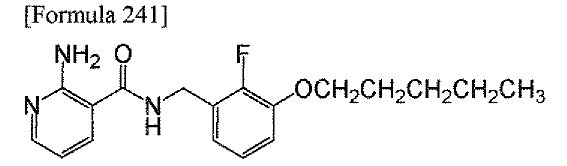

1H-NMR (CDCl3) δ: 0.94 (3H, t, J = 7.2 Hz), 1.34-1.50 (4H, m), 1.79-1.87 (2H, m), 4.02 (2H, t, J = 6.7 Hz), 4.64 (2H, d, J = 5.1 Hz), 6.33 (2H, br s), 6.39 (1H, br s), 6.58 (1H, dd, J = 7.8, 4.9 Hz), 6.89-7.05 (3H, m), 7.59 (1H, dd, J = 7.6, 1.7 Hz), 8.15 (1H, dd, J = 4.8, 1.8 Hz).

### Production example 210

A mixture of 0.26 g of N-(2-fluoro-3-hydroxyphenyl)methyl-2-aminonicotinic acid amide, 0.21 g of 1-iodohexane, 0.42 g of cesium carbonate and 2 ml of DMF was stirred at a room temperature for 20 hours. Thereafter, water was added to the reaction mixture, and it was then extracted with ethyl acetate. The organic layer was successively washed with a saturated sodium bicarbonate solution and water, and it was then dried over anhydrous sodium sulfate, followed by concentration under reduced pressure, so as to obtain 0.27 g of N-(2-fluoro-3-hexyloxyphenyl)methyl-2-aminonicotinic acid amide (hereinafter referred to as the present compound 226).

### The present compound 226

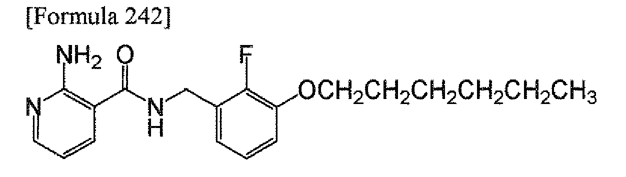

1H-NMR (CDCl3) δ: 0.91 (3H, t, J = 6.3 Hz), 1.33-1.49 (6H, m), 1.78-1.86 (2H, m), 4.02 (2H, t, J = 6.6 Hz), 4.65 (2H, d, J = 5.9 Hz), 6.33 (2H, br s), 6.39 (1H, br s), 6.58 (1H, dd, J = 7.7, 4.8 Hz), 6.89-7.05 (3H, m), 7.57-7.61 (1H, m), 8.14-8.17 (1H, m).

### Production example 211

A mixture of 0.26 g of N-(2-fluoro-3-hydroxyphenyl)methyl-2-aminonicotinic acid amide, 0.18 g of 1-iodoheptane, 0.42 g of cesium carbonate and 2 ml of DMF was stirred at a room temperature for 20 hours. Thereafter, water and a saturated sodium bicarbonate solution were added to the reaction mixture, and the precipitated solid was then collected by filtration. The collected solid was successively washed with water and hexane, so as to obtain 0.23 g ofN-(2-fluoro-3-heptyloxyphenyl)methyl-2-aminonicotinic acid amide (hereinafter referred to as the present compound 227).

### The present compound 227

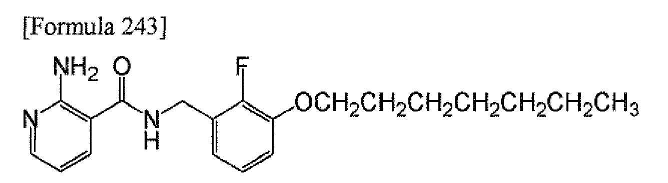

1H-NMR (CDCl3) δ: 0.89 (3H, t, J = 6.8 Hz), 1.25-1.50 (8H, m), 1.78-1.86 (2H, m), 4.02 (2H, t, J = 6.6 Hz), 4.64 (2H, d, J = 5.4 Hz), 6.32 (2H, br s), 6.39 (1H, br s), 6.58 (1H, dd, J = 7.7, 4.8 Hz), 6.89-7.05 (3H, m), 7.59 (1H, dd, J = 7.8, 1.7 Hz), 8.15 (1H, dd, J = 4.9, 1.7 Hz).

### Production example 212

A mixture of 0.25 g of 2-fluoro-3-phenoxybenzylamine hydrochloride, 0.13 g of 2-aminonicotinic acid, 0.24 g of WSC and 3 ml of pyridine was stirred at a room temperature for 8 hours. Thereafter, water was added to the reaction mixture, and the precipitated solid was collected by filtration. The obtained solid was successively washed with a sodium hydroxide aqueous solution, water and hexane, so as to obtain 0.16 g of N-(2-fluoro-3-phenoxyphenyl)methyl-2-aminonicotinic acid amide (hereinafter referred to as the present compound 228).

### The present compound 228

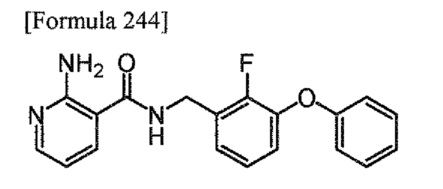

¹H-NMR (CDCl₃) δ: 4.69 (2H, d, J = 5.1 Hz), 6.33 (1H, br s), 6.43 (2H, br s), 6.60 (1H, dd, J = 7.2, 5.6 Hz), 7.00 (2H, d, J = 7.7 Hz), 7.05-7.9 (4H, m), 7.29-7.37 (2H, m), 7.61 (1H, d, J = 7.7 Hz), 8.17 (1H, d, J = 4.6 Hz).

### Production example 213

0.21 g of 2-aminonicotinic acid, 0.23 g of 2-fluorobenzylamine, 0.80 g of a BOP reagent and 0.21 g of triethylamine were added to 2 ml of DMF. The obtained mixture was stirred at a room temperature for 4 hours. After, water was added to the reaction mixture, it was then extracted with ethyl acetate. The organic layer was washed with a sodium bicarbonate aqueous solution, and it was then dried over magnesium sulfate, followed by concentration under reduced pressure. The obtained residue was subjected to silica gel column chromatography, so as to obtain 0.30 g of N-(2-fluorophenyl)methyl-2-aminonicotinic acid amide (hereinafter referred to as the present compound 229).

### The present compound 229

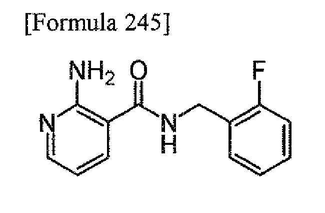

¹H-NMR (CDCl₃) δ: 4.65 (2H, d, J = 5.9 Hz), 6.26-6.48 (3H, br m), 6.59 (1H, dd, J = 7.7, 4.9 Hz), 7.05-7.15 (2H, m), 7.26-7.32 (1H, m), 7.37-7.43 (1H, m), 7.60 (1H, dd, J = 7.7, 1.8 Hz), 8.15 (1H, dd, J = 4.9, 1.8 Hz).

### Production example 214

0.21 g of 2-aminonicotinic acid, 0.26 g of 2-chlorobenzylamine, 0.80 g of a BOP reagent and 0.20 g of triethylamine were added to 3 ml of DMF. The obtained mixture was stirred at a room temperature for 4 hours. After, water was added to the reaction mixture, it was then extracted with ethyl acetate. The organic layer was washed with a sodium bicarbonate aqueous solution, and it was then dried over magnesium sulfate, followed by concentration under reduced pressure. The obtained residue was subjected to silica gel column chromatography, so as to obtain 0.32 g of N-(2-chlorophenyl)methyl-2-aminonicotinic acid amide (hereinafter referred to as the present compound 230).

### The present compound 230

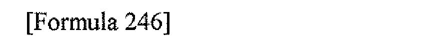

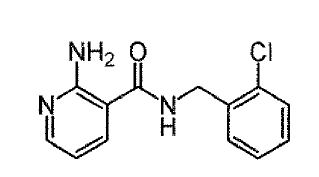

¹H-NMR (CDCl₃) δ: 4.68 (2H, d, J = 5.9 Hz), 6.33 (2H, br s), 6.54 (1H, br s), 6.59 (1H, dd, J = 7.7,4.9 Hz), 7.25-7.27 (2H, m), 7.38-7.45 (2H, m), 7.5 (1H, dd, J = 7.7, 1.7 Hz), 8.15 (1H, dd, J = 4.9, 1.7 Hz).

### Production example 215

0.21 g of 2-aminonicotinic acid, 0.32 g of 3-trifluoromethylbenzylamine, 0.80 g of a BOP reagent and 0.20 g of triethylamine were added to 2 ml ofDMF. The obtained mixture was stirred at a room temperature for 6 hours. After, water was added to the reaction mixture, it was then extracted with ethyl acetate. The organic layer was washed with a sodium bicarbonate aqueous solution, and it was then dried over magnesium sulfate, followed by concentration under reduced pressure. The obtained residue was subjected to silica gel column chromatography, so as to obtain 0.40 g of N-(3-trifluoromethylphenyl)methyl-2-aminonicotinic acid amide (hereinafter referred to as the present compound 231).

### The present compound 231

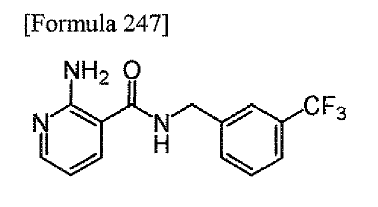

¹H-NMR (CDCl₃) δ: 4.66 (2H, d, J = 5.9 Hz), 6.37 (2H, br s), 6.42 (1H, br s), 6.60 (1H, dd, = 7.7, 4.9 Hz), 7.49-7.59 (4H, m), 7.62 (1H, dd, J = 7.7, 1.7 Hz), 8.18 (1H, dd, J = 4.9, 1.7 Hz).

### Production example 216

A mixture of 0.26 g of N-(2-fluoro-3-hydroxyphenyl)methyl-2-aminonicotinic acid amide, 0.19 g of 1-iodopropane, 0.42 g of cesium carbonate and 2 ml of DMF was stirred at a room temperature for 20 hours. Thereafter, water was added to the reaction mixture, and it was then extracted with ethyl acetate. The organic layer was successively washed with a saturated sodium bicarbonate solution and water, and it was then dried over anhydrous sodium sulfate, followed by concentration under reduced pressure, so as to obtain 0.21 g of N-(2-fluoro-3-propyloxyphenyl)methyl-2-aminonicotinic acid amide (hereinafter referred to as the present compound 232).

### The present compound 232

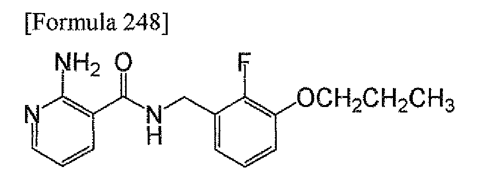

1H-NMR (CDCl3) δ: 1.06 (3H, t, J = 7.4 Hz), 1.83-1.89 (2H, m), 3.99 (2H, t, J = 6.6 Hz), 4.65 (2H, d, J = 5.6 Hz), 6.34 (2H, br s), 6.39 (1H, br s), 6.58 (1H, dd, J = 7.8, 4.9 Hz), 6.90-7.06 (3H, m), 7.60 (1H, d, J = 7.8 Hz), 8.15 (1H, dd, J = 4.9, 1.7 Hz).

### Production example 217

A mixture of 0.26 g of N-(2-fluoro-3-hydroxyphenyl)methyl-2-aminonicotinic acid amide, 0.13 g of 3-bromo-1-propene, 0.42 g of cesium carbonate and 2 ml of DMF was stirred at a room temperature for 20 hours. Thereafter, water was added to the reaction mixture, and it was then extracted with ethyl acetate. The organic layer was successively washed with a saturated sodium bicarbonate solution and water, and it was then dried over anhydrous sodium sulfate, followed by concentration under reduced pressure, so as to obtain 0.21 g of N-[2-fluoro-3-(2-propenyloxy)phenyl]methyl-2-aminonicotinic acid amide (hereinafter referred to as the present compound 233).

### The present compound 233

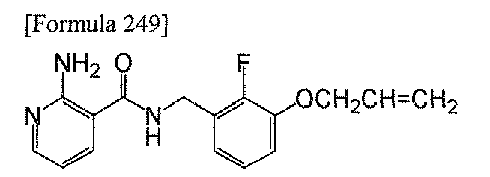

1H-NMR (CDCl3) δ: 4.61 (2H, dt, J = 5.4, 1.5 Hz), 4.65 (2H, d, J = 5.6 Hz), 5.30-5.34 (1H, m), 5.41-5.47 (1H, m), 6.01-6.11 (1H, m), 6.33 (2H, br s), 6.42 (1H, br s), 6.58 (1H, dd, J = 7.8, 4.9 Hz), 6.90-7.05 (3H, m), 7.59 (1H, dd, J = 7.8, 1.7 Hz), 8.15 (1H, dd, J = 4.9, 1.7 Hz).

### Production example 218

A mixture of 0.24 g of N-(3-hydroxyphenyl)methyl-2-aminonicotinic acid amide, 0.13 g of 3-bromo-1-propyne, 0.42 g of cesium carbonate and 2 ml ofDMF was stirred at a room temperature for 20 hours. After, water was added to the reaction mixture, it was then extracted with ethyl acetate. The organic layer was successively washed with a saturated sodium bicarbonate solution, water and a saturated saline solution. The resultant was dried over anhydrous sodium sulfate, and it was then concentrated under reduced pressure. The obtained residue was subjected to silica gel column chromatography, so as to obtain 0.23 g of N-[3-(2-propynyloxy)phenyl]methyl-2-aminonicotinic acid amide (hereinafter referred to as the present compound 234).

### The present compound 234

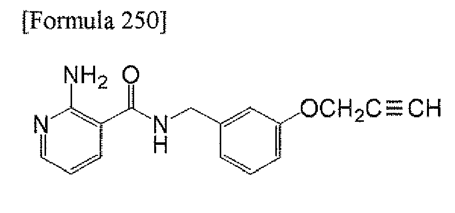

¹H-NMR (CDCl₃) δ: 2.51 (1H, t, J = 2.3 Hz), 4.59 (2H, d, J = 5.6 Hz), 4.70 (2H, d, J = 2.4 Hz), 6.30 (1H, br s), 6.36 (2H, br s), 6.59 (1H, dd, J = 7.8, 4.9 Hz), 6.90-6.99 (3H, m), 7.28-7.33 (1H, m), 7.60 (1H, dd, J = 7.8, 1.7 Hz), 8.17 (1H, dd, J = 4.9, 1.7 Hz).

### Production example 219

A mixture of 0.26 g of N-(2-fluoro-3-hydroxyphenyl)methyl-2-aminonicotinic acid amide, 0.13 g of 3-bromo-1-propyne, 0.42 g of cesium carbonate and 2 ml ofDMF was stirred at a room temperature for 20 hours. Thereafter, water was added to the reaction mixture, and it was then extracted with ethyl acetate. The organic layer was successively washed with a saturated sodium bicarbonate solution, water and a saturated saline solution. The resultant was dried over anhydrous sodium sulfate, and it was then concentrated under reduced pressure. The obtained residue was subjected to silica gel column chromatography, so as to obtain 0.13 g ofN-[2-fluoro-3-(2-propynyloxy)phenyl]methyl-2-aminonicotinic acid amide (hereinafter referred to as the present compound 235).

### The present compound 235

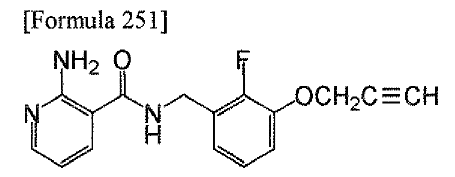

1H-NMR (CDCl3) δ: 2.55 (1H, t, J = 2.3 Hz), 4.66 (2H, m), 4.77 (2H, d, J = 2.4 Hz), 6.33 (1H, br s), 6.40 (2H, br s), 6.59 (1H, dd, J = 7.6, 4.9 Hz), 7.02-7.09 (3H, m), 7.59 (1H, dd, J = 7.7, 1.6 Hz), 8.16 (1H, dd, J = 4.9, 1.7 Hz).

### Production example 220

0.21 g of 2-aminonicotinic acid, 0.26 g of 2,6-difluorobenzylamine, 0. 80 g of a BOP reagent and 0.20 g of triethylamine were added to 2 ml of DMF. The obtained mixture was stirred at a room temperature for 3 hours. Thereafter, water was added to the reaction mixture, and the precipitated solid was collected by filtration. The obtained solid was washed with a sodium bicarbonate aqueous solution and MTBE, and it was then dried, so as to obtain 0.12 g of N-(2,6-difluorophenyl)methyl-2-aminonicotinic acid amide (hereinafter referred to as the present compound 237).

### The present compound 237

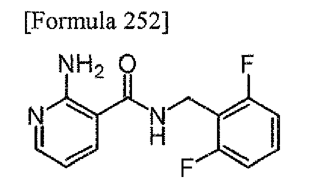

¹H-NMR (CHCl₃) δ: 4.71 (2H, d, J = 5.9 Hz), 6.32 (2H, br s), 6.36 (1H, br s), 6.58 (1H, dd, J = 7.7, 4.9 Hz), 6.90-6.96 (2H, m), 7.24-7.30 (1H, m), 7.57 (1H, dd, J = 7.7, 1.8 Hz), 8.15 (1H, dd, J = 4.9, 1.8 Hz).

### Production example 221

0.21 g of 2-aminonicotinic acid, 0.26 g of 3,5-difluorobenzylamine, 0.80 g of a BOP reagent and 0.20 g of triethylamine were added to 2 ml of DMF. The obtained mixture was stirred at a room temperature for 3 hours. Thereafter, water was added to the reaction mixture, and the precipitated solid was collected by filtration. The obtained solid was washed with a sodium bicarbonate aqueous solution and MTBE, and it was then dried, so as to obtain 0.12 g of N-(3,5-difluorophenyl)methyl-2-aminonicotinie acid amide (hereinafter referred to as the present compound 238).

### The present compound 238

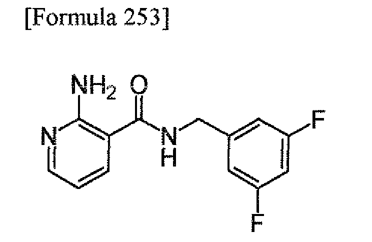

¹H-NMR (CDCl₃) δ: 4.59 (2H, d, J = 5.9 Hz), 6.37 (2H, br s), 6.40 (1H, br s), 6.61 (1H, dd, J = 7.7, 4.9 Hz), 6.74 (1H, tt, J = 8.9, 2.2 Hz), 6.86 (2H, d, J = 6.1 Hz), 7.63 (1H, dd, J = 7.7, 1.7 Hz), 8.19 (1H, dd, J = 4.9, 1.7 Hz).

### Production example 222

0.21 g of 2-aminonicotinic acid, 0.26 g of 3,4-difluorobenzylamine, 0.80 g of a BOP reagent and 0.20 g of triethylamine were added to 2 ml of DMF. The obtained mixture was stirred at a room temperature for 4 hours. Thereafter, water was added to the reaction mixture, and the precipitated solid was collected by filtration. The obtained solid was washed with a sodium bicarbonate aqueous solution and MTBE, and it was then dried, so as to obtain 0.12 g of N-(3,4-difluorophenyl)methyl-2-aminonicotinic acid amide (hereinafter referred to as the present compound 239).

### The present compound 239

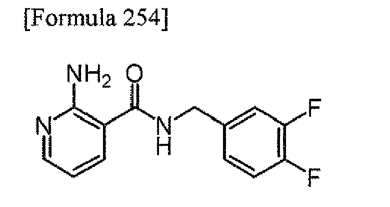

¹H-NMR (CDCl₃) δ: 4.56 (2H, d, J = 5.9 Hz), 6.35 (3H, br m), 6.60 (1H, dd, J = 7.7, 4.8 Hz), 7.04-7.08 (1H, m), 7.11-7.19 (2H, m), 7.61 (1H, dd, J = 7.7, 1.7 Hz), 8.18 (1H, dd, J = 4.8, 1.7 Hz).

### Production example 223

0.86 g of a BOP reagent and 0.20 g of triethylamine were successively added to a mixture of 0.23 g of 2-amino-6-methylnicotinic acid, 0.33 g of [5-(3-methylphenyloxy)thiophen-2-yl]methylamine and 2 ml of DMF. The obtained mixture was stirred at a room temperature for 10 hours. Thereafter, water was added to the reaction mixture, and the precipitated solid was collected by filtration. The obtained solid was subjected to silica gel column chromatography, so as to obtain 0.36 g of N-[5-(3-methylphenoxy)thiophen-2-yl]methyl-2-amino-6-methylnicotinic acid amide (hereinafter referred to as the present compound 241).

### The present compound 241

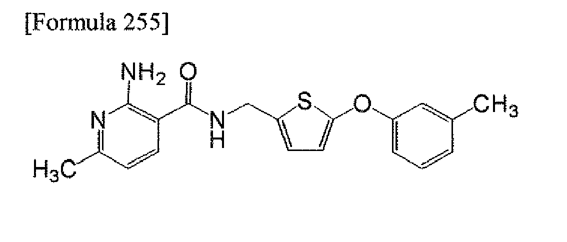

¹H-NMR (CDCl₃) δ: 2.33 (3H, s), 2.38 (3H, s), 4.64 (2H, d, J = 5.4 Hz), 6.28 (1H, br s), 6.35-6.38 (3H, m), 6.44 (1H, d, J = 7.8 Hz), 6.73 (1H, d, J = 3.9 Hz), 6.87-6.94 (3H, m), 7.18-7.22 (1H, m), 7.48 (1H, d, J = 7.8 Hz).

### Production example 224

0.58 g of a BOP reagent and 0.25 g of triethylamine were successively added to a mixture of 0.13 g of 2-aminonicotinic acid, 0.25 g of 2-fluoro-5-phonoxybenzylamine hydrochloride and 3 ml of DMF. The obtained mixture was stirred at a room temperature for 20 hours. Thereafter, water was added to the reaction mixture, and the precipitated solid was collected by filtration. The obtained solid was successively washed with water and hexane, so as to obtain 0.22 g of N-(2-fluoro-5-phenoxyphenyl)methyl-2-aminonicotinic acid amide (hereinafter referred to as the present compound 243).

### The present compound 243

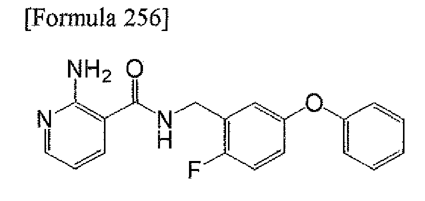

¹H-NMR (CDCl₃) δ: 4.61 (2H, d, J = 5.9 Hz), 6.31 (2H, br s), 6.41 (1H, br s), 6.59 (1H, dd, J = 7.8, 4.9 Hz), 6.88-7.12 (6H, m), 7.31-7.36 (2H, m), 7.58 (1H, dd, J = 7.8, 1.7 Hz), 8.15 (1H, dd, J = 4.9, 1.7 Hz).

### Production example 225

0.86 g of a BOP reagent and 0.20 g of triethylamine were successively added to a mixture of 0.23 g of 2-amino-6-methylnicotinic acid, 0.33 g of [5-(4-methylphenyloxy)thiophen-2-yl]methylamine and 3 ml of DMF. The obtained mixture was stirred at a room temperature for 10 hours. Thereafter, water and a saturated sodium bicarbonate solution were added to the reaction mixture, and the obtained mixture was then extracted with ethyl acetate. The obtained extract was dried over anhydrous sodium sulfate, and it was then concentrated under reduced pressure. The obtained residue was subjected to silica gel column chromatograph, so as to obtain 0.12 g of N-[5-(4-methytphenoxy)thiophen-2-yl]methyl-2-amino-6-methylnicotinic acid amide (hereinafter referred to as the present compound 244).

### The present compound 244

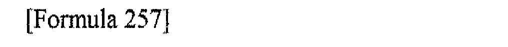

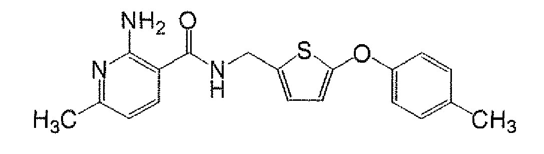

¹H-NMR (CDCl₃) δ: 2.32 (3H, s), 2.38 (3H, s), 4.63 (2H, d, J = 5.6 Hz), 6.25 (1H, br s), 6.34 (1H, d, J = 3.7 Hz), 6.37 (2H, br s), 6.44 (1H, d, J = 7.8 Hz), 6.71 (1H, d, J = 3.7 Hz), 6.97-7.01 (2H, m), 7,10-7.14 (2H, m), 7.48 (1H, d, J = 7.8 Hz).

### Production example 226

0.56 g of a BOP reagent and 0.13 g of triethylamine were successively added to a mixture of 0.14 g of 2-aminonicotinic acid, 0.27 g of 3-(4-trifluoromethylphenoxy)benzylamine and 3 ml of DMF. The obtained mixture was stirred at a room temperature for 10 hours. Thereafter, water and a saturated sodium bicarbonate solution were added to the reaction mixture, and the obtained mixture was then extracted with ethyl acetate. The obtained extract was dried over anhydrous sodium sulfate, and it was then concentrated under reduced pressure. The obtained residue was subjected to silica gel column chromatograph, so as to obtain 0.33 g of N-[3-(4-trifluoromethylphenoxy)phenyl]methyl-2-aminonicotinic acid amide (hereinafter referred to as the present compound 247).

### The present compound 247

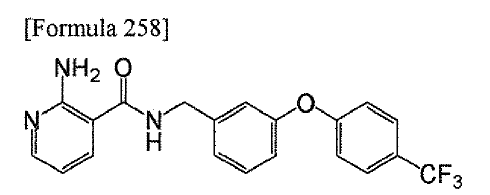

1H-NNM (CDCl3) δ: 4.60 (2H, d, J = 5.9 Hz), 6.38 (3H, br s), 6.60 (1H, dd, J = 7.6, 4.9 Hz), 6.97 (1H, dd, J = 7.9, 2.1 Hz), 7.03-7.07 (3H, m), 7.16 (1H, d, J = 8.0 Hz), 7.35-7.39 (1H, m), 7.56-7.63 (3H, m), 8.16 (1H, dd, J = 4.9, 1.7 Hz).

### Production example 227

0.58 g of a BOP reagent and 0.13 g of triethylamine were successively added to a mixture of 0.14 g of 2-aminonicotinic acid, 0.23 g of 4-(3,5-dimethylphenoxy)benzylamine and 3 ml of DMF. The obtained mixture was stirred at a room temperature for 10 hours. Thereafter, water and a saturated sodium bicarbonate solution were added to the reaction mixture, and the obtained mixture was then extracted with ethyl acetate. The obtained extract was dried over anhydrous sodium sulfate, and it was then concentrated under reduced pressure. The obtained residue was subjected to silica gel column chromatograph, so as to obtain 0.18 g of N-[4-(3,5-dimethylphenoxy)phenyl]methyl-2-aminonicotinic acid amide (hereinafter referred to as the present compound 248).

### The present compound 248

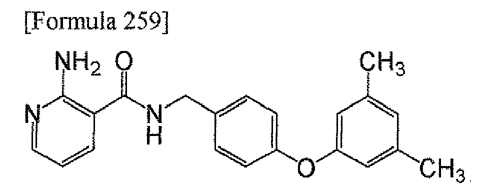

1H-NMR (CDCl3) δ: 2.28 (6H, d, J = 0.5 Hz), 4.57 (2H, d, J = 5.6 Hz), 6.27 (1H, br s), 6.37 (2H, br s), 6.59 (1H, dd, J = 7.6, 4.9 Hz), 6.62-6.63 (2H, m), 6.75-6.77 (1H, m), 6.96-7.01 (2H, m), 7.28-7.32 (2H, m), 7.60 (1H, dd, J = 7.6, 1.7 Hz), 8.16 (1H, dd, J = 4.9, 1.7 Hz).

### Production example 228

0.25 g of triethylamine was added to a mixture solution of 0.14 g of 2-aminonicotinic acid, 0.31 g of [5-(3-trifluoromethylphenyloxy)thiophen-2-yl]methylamine hydrochloride and 3 ml of DMF. Subsequently, 0.57 g of a BOP reagent was added to the mixture, and the obtained mixture was then stirred at a room temperature for 20 hours. After, water was added to the reaction mixture, it was then extracted with ethyl acetate. The organic layer was washed with a sodium bicarbonate aqueous solution, and it was then dried over anhydrous sodium sulfate, followed by concentration under reduced pressure. The obtained residue was washed with hexane, so as to obtain 0.30 g of N-[5-(3-trifluoromethylphenoxy)thiophen-2-yl]methyl-2-aminonicotinic acid amide (hereinafter referred to as the present compound 249).

### The present compound 249

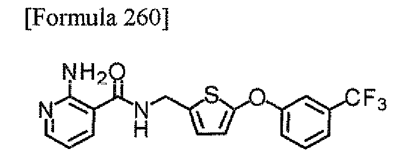

¹H-NMR (CDCl₃) δ: 4.67 (2H, d, J = 5.9 Hz), 6.35 (1H, br s), 6.40 (2H, br s), 6.45 (1H, d, J = 3.9 Hz), 6.60 (1H, dd, J = 7.8, 4.9 Hz), 6.78 (1H, d, J = 3.9 Hz), 7.24-7.46 (4H, m), 7.61 (1H, dd, J = 7.8, 1.7 Hz), 8.17 (1H, dd, J = 4.9, 1.7 Hz).

### Production example 229

0.81 ml of a 28% sodium methoxide in methanol was added to a mixture of 0.33 g of N-(4-phenoxyphenyl)methyl-2-amino-6-chloronicotinic acid amide and 3 ml of N-methyl-2-pyrrolidone. The obtained mixture was then stirred at 130°C for 12 hours. After, water was added to the reaction mixture, it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.17g of N-(4-phenoxyphenyl)methyl-2-amino-6-methoxynicotinic acid amide (hereinafter referred to as the present compound 250).

### The present compound 250

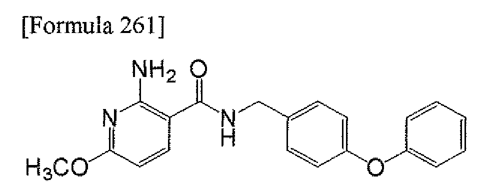

¹H-NMR (CDCl₃) δ: 3.87 (3H, s), 4.55 (2H, d, J = 5.6 Hz), 6.00 (1H, d, J = 8.5 Hz), 6.12 (1H, br s), 6.53 (2H, br s), 6.97-7.01 (4H, m), 7.10 (1H, t, J = 7.44 Hz), 7.29-7.35 (4H, m), 7.50 (1H, d, J = 8.5 Hz).

### Production example 230

A mixture of 0.29 g of N-(4-phenoxyphenyl)methyl-2-amino-6-chloronicotinic acid amide, 0.68 ml of propylamine and 2.5 ml of N-methyl-2-pyrrolidone was subjected to a microwave reactor (production name: Discover; manufactured by CEM) at 18 kgf/cm² at 150°C for 30 minutes. After, water was added to the reaction mixture, it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.11 g of N-(4-phenoxyphenyl)methyl-2-amino-6-propylaminonicotinic acid amide (hereinafter referred to as the present compound 251).

### The present compound 251

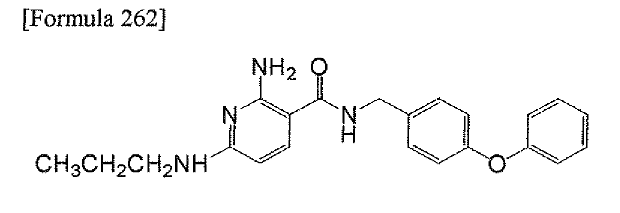

¹H-NMR (CDCl₃) δ: 0.97 (3H, t, J = 7.5 Hz), 1.57-1.64 (2H, m), 3.21 (2H, dd, J = 13.0, 7.0 Hz), 4.54 (2H, d, J = 5.6 Hz), 4.62 (1H, br s), 5.68 (1H, d, J = 8.7 Hz), 5.99 (1H, br s), 6.43 (2H, br s), 6.98-7.00 (4H, m), 7.09-7.11 (1H, m), 7.27-7.35 (5H, m).

### Production example 231

0.31 g of N-(4-phenoxyphenyl)methyl-2-amino-6-chloronicotinic acid amide was added to a mixture of 0.18 g of 60% sodium hydride (in oil), 0.66 ml of propyl alcohol and 3 ml of N-methyl-2-pyrrolidone. The obtained mixture was stirred at 130°C for 5 hours 30 minutes. Thereafter, water was added to the reaction mixture, and the precipitated crystal was then fitlrated. The obtained crystal was dried under reduced pressure, so as to obtain 0.23 g of N-(4-phenoxyphenyl)methyl-2-amino-6-propoxynicotinic acid amide (hereinafter referred to as the present compound 252).

### The present compound 252

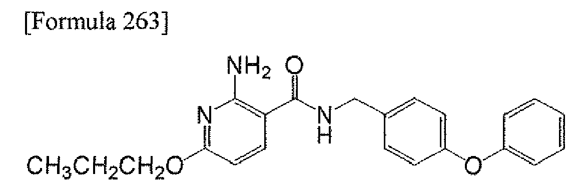

¹H-NMR (CDCl₃) δ: 1.00 (3H, t, J = 7.4 Hz), 1.74-1.78 (2H, m), 4.19 (2H, t, J = 6.8 Hz), 4.55 (2H, d, J = 5.6 Hz), 5.99 (1H, d, J = 8.5 Hz), 6.08 (1H, br s), 6.50 (2H, br s), 6.98-6.99 (4H, m), 7.10-7.1 (1H, m), 7.27-7.34 (4H, m), 7.49 (1H, d, J = 8.5 Hz).

### Production example 232

A mixture of 0.30 g of N-(4-hydroxyphenyl)methyl-2-aminonicotinic acid amide, 0.38 g of 2,4-dichlorothiazole, 0.60 g of cesium carbonate and 8 ml of DMF was heated to reflux for 2 hours. After, water was added to the reaction mixture, it was then extracted with ethyl acetate. The organic layer was washed with a saturated saline solution, and it was then dried over anhydrous magnesium sulfate, followed by concentration under reduced pressure. The obtained residue was subjected to silica gel column chromatography, so as to obtain 0.34 g ofN-4-(4-chlorothiazol-2-yloxy)phenylmethyl-2-aminonicotinic acid amide (hereinafter referred to as the present compound 253).

### The present compound 253

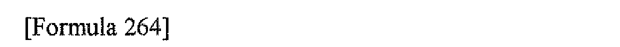

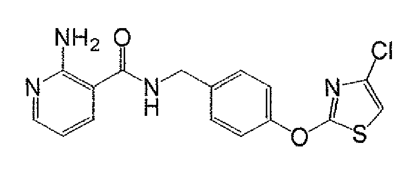

¹H-NMR (CDCl₃) δ: 4.60 (2H, d, J = 5.9 Hz), 6.37 (2H, br s), 6.43 (1H, br s), 6.60 (2H, dd, J = 7.9, 4.5 Hz), 7.24-7.27 (2H, m), 7.36-7.39 (2H, m), 7.63 (1H, dd, J = 7.6, 1.7 Hz), 8.17 (1H, dd, J = 4.9, 1.7 Hz).

### Production example 233

0.58 g of N-(4-phenoxyphenyl)methyl-2-amino-6-chloronicotinic acid amide was added to a mixture of 0.26 g of 60% sodium hydride (in oil), 0.75 ml of butyl alcohol and 5 ml of N-methyl-2-pyrrolidone. The obtained mixture was stirred at 120°C for 13 hours 30 minutes. After, water was added to the reaction mixture, it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.39 g of N-(4-phenoxyphenyl)methyl-2-amino-6-butoxynicotinic acid amide (hereinafter referred to as the present compound 254).

### The present compound 254

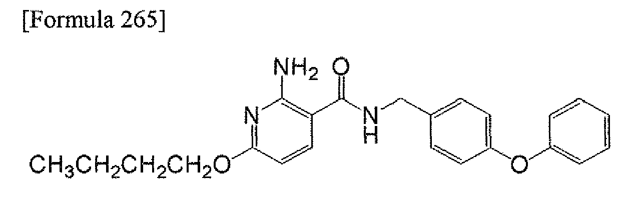

¹H-NMR (CDCl₃) δ: 0.96 (3H, t, J = 7.5 Hz), 1.45 (2H, m), 1.68-1.75 (2H, m), 4.23 (2H, t, J = 6.8 Hz), 4.55 (2H, d, J = 5.8 Hz), 5.38 (1H, d, J = 8.2 Hz), 6.07 (1H, br s), 6.50 (2H, br s), 6.99-7.00 (4H, m), 7.10-7.11 (1H, m), 7.24-7.36 (4H, m), 7.49 (1H, d, J = 8.2 Hz).

### Production example 234

0.32 g of 2-amino-3-cyano-5-fluoropyridine and 5 ml of concentrated sulfuric acid were added to 5 ml of water and the obtained mixture was heated to reflux for 6 hours 30 minutes. Thereafter, aqueous ammonia was added to the reaction mixture, so that the pH was adjusted to pH 10. Thereafter, the reaction mixture was concentrated under reduced pressure, so as to obtain crude 2-amino-5-fluoronicotinic acid.

The thus obtained crude 2-ainino-5-fluoronicotinic acid, 0.81 g of 4-phenoxybenzylamine hydrochloride and 0.85 ml of triethylamine were added to 5 ml of DNF. Thereafter, 1.22 g of a BOP reagent was added to the mixture, and the obtained mixture was then stirred at a room temperature for 5 hours. Thereafter, water was added to the reaction mixture, and the precipitated crystal was then filtrated. The obtained crystal was washed with a mixed solvent of hexane and MTBE, so as to obtain 0.43 g of N-(4-phenoxyphenyl)methyl-2-amino-5-fluoronicotinic acid amide (hereinafter referred to as the present compound 255).

### The present compound 255

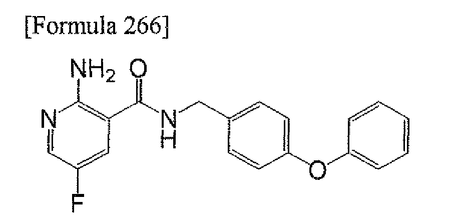

¹H-NMR (CDCl₃) δ: 4.57 (2H, d, J = 5.6 Hz), 6.18 (2H, br s), 6.24 (1H, br s), 6.97-7.02 (4H, m), 7.12 (1H, t, J = 7.4 Hz), 7.30-7.34 (5H, m), 8.07 (1H, d, J = 2.7 Hz).

### Production example 235

0.22 g of 2-amino-3-cyano-5-fluoropyridine and 1.5 ml of concentrated sulfuric acid were added to 4.5 ml of water, and the obtained mixture was heated to reflux for 8 hours. Thereafter, aqueous ammonia was added to the reaction mixture, so that the pH was adjusted to pH 10. The reaction mixture was concentrated under reduced pressure, so as to obtain crude 2-amino-5-fluoronicotinic acid.
The thus obtained crude 2-amino-5-fluoronicotinic acid, 0.47 g of 2-fluoro-3-(5-hexynyl)oxybenzylamine hydrochloride and 0.59 ml of triethylamine were added to 5 ml of DMF. Thereafter, 0.86 g of a BOP reagent was added to the mixture, and the obtained mixture was then stirred at a room temperature for 7 hours. Thereafter, water was added to the reaction mixture, and the precipitated crystal was then filtrated. The obtained crystal was washed with a mixed solvent of hexane and MTBE, and it was then subjected to silica gel column chromatography and recrystallization using a mixed solvent of hexane and ethyl acetate, so as to obtain 0.21 g of N-[2-fluoro-3-(4-hexynyl)oxy]methyl-2-amino-5-fluoronicotinic acid amide (hereinafter referred to as the present compound 256).

### The present compound 256

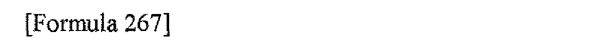

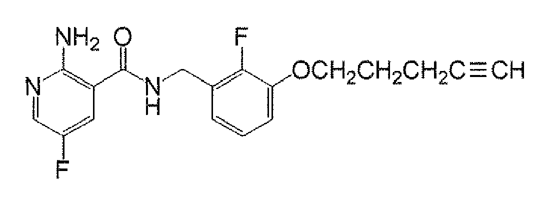

¹H-NMR (CDCl₃) δ: 1.99-2.06 (3H, m), 2.44-2.46 (2H, m), 4.15 (2H, t, J = 6.2 Hz), 4.64 (2H, d, J = 5.8 Hz), 6.15 (2H, br s), 6.38 (1H, br s), 6.95 (2H, m), 7.05 (1H, td, J = 7.9, 1.5 Hz), 7.38 (1H, dd, J = 8.3, 2.9 Hz), 8.06 (1H, d, J = 2.9 Hz).

### Production example 236

0.27 g of 2-amino-3-cyano-5-fluoropyridine and 2 ml of concentrated sulfuric acid were added to 4 ml of water, and the obtained mixture was heated to reflux for 7 hours 30 minutes. Thereafter, aqueous ammonia was added to the reaction mixture, so that the pH was adjusted to pH 10. Thereafter, the reaction mixture was concentrated under reduced pressure, so as to obtain crude 2-amino-5-fluoronicotinic acid.

The thus obtained crude 2-amino-5-fluoronicotinic acid, 0.34 g of 2-fluoro-3-methoxybenzylamine and 0.73 ml of triethylamine were added to 5 ml of DMF. Thereafter, 1.06 g of a BOP reagent was added to the mixture, and the obtained mixture was then stirred at a room temperature for 8 hours 30 minutes. Thereafter, water was added to the reaction mixture, and the precipitated crystal was then filtrated. The obtained crystal was washed with a mixed solvent of hexane and MTBE, so as to obtain 0.34 g of N-[(2-fluoro-3-methoxy)phenyl]methyl-2-amino-5-fluoronicotinic acid amide (hereinafter referred to as the present compound 257). The present compound 257 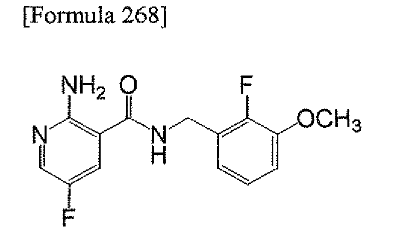 ¹H-NMR (CDCl₃) δ: 3.90 (3H, s), 4.65 (2H, d, J = 5.8 Hz), 6.13 (2H, br s), 6.36 (1H, br s), 6.93-6.96 (2H, m), 7.07 (1H, t, J = 7.1 Hz), 7.37 (1H, dd, J = 8.0, 2.9 Hz), 8.06 (1H, d, J = 2.9 Hz).

### Production example 237

0.27 g of 2-amino-3-cyano-5-fluoropyridine and 2 ml of concentrated sulfuric acid were added to 4 ml of water, and the obtained mixture was heated to reflux for 7 hours 30 minutes. Thereafter, aqueous ammonia was added to the reaction mixture, so that the pH was adjusted to pH 10. Thereafter, the reaction mixture was concentrated under reduced pressure, so as to obtain crude 2-amino-5-fluoronicotinic acid.

The thus obtained crude 2-amino-5-fluoronicotinic acid, 0.49 g of 5-phenoxythiophen-2-yl-methylamine and 0.73 ml of triethylamine were added to 5 ml of DMF. Thereafter, 1.05 g of a BOP reagent was added to the mixture, and the obtained mixture was then stirred at a room temperature for 10 hours. Thereafter, water was added to the reaction mixture, and the precipitated crystal was then filtrated. The obtained crystal was washed with a mixed solvent of hexane and MTBE, so as to obtain 0.61 g of N-(5-phenoxythiophen-2-yl)methyl-2-amino-5-fluoronicotinic acid amide (hereinafter referred to as the present compound 258).

### The present compound 258

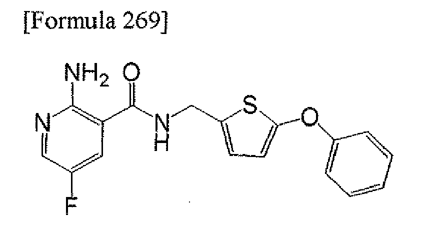

¹H-NMR (CDCl₃) δ: 4.65 (2H, d, J = 5.6 Hz), 6.15 (2H, br s), 6.27 (1H, br s), 6.40 (1H, d, J = 3.9 Hz), 6.75 (1H, d, J = 3.9 Hz), 7.09-7.14 (3H, m), 7.31-7.38 (3H, m), 8.08 (1H, d, J = 2.9 Hz).

### Production example 238

0.46 g of 2-chloro-3-carboxyl-6-methoxymethylpyridine and 5 ml of 28% aqueous ammonia were added to an autoclave, and they were then stirred under pressure for 6 hours. Thereafter, the reaction mixture was concentrated under reduced pressure, so as to obtain crude 2-amino-6-methoxymethylnicotinic acid.

The thus obtained crude 2-amino-6-methoxymethylnicotinic acid 0.57 g of 4-benzyloxybenzylamine hydrochloride, and 0.84 ml of triethylamine were added to 6 ml ofDMF. Thereafter, 1.21 g of a BOP reagent was added to the mixture, and the obtained mixture was then stirred at a room temperature for 9 hours 30 minutes. Thereafter, water was added to the reaction mixture, and the precipitated crystal was then filtrated. The obtained crystal was washed with a mixed solvent of hexane and MTBE, and it was then subjected to silica gel column chromatography, so as to obtain 0.22 g of N-[(4-benzyloxy)phenyl]methyl-2-amino-6-methoxymethylnicotinic acid amide (hereinafter referred to as the present compound 259).

### The present compound 259

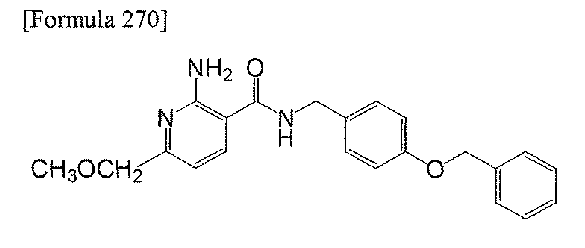

¹H-NMR (CDCl₃) δ: 3.45 (3H, s), 4.39 (2H, s), 4.52 (2H, d, J = 5.6 Hz), 5.07 (2H, s), 6.22 (1H, br s), 6.42 (2H, br s), 6.68 (1H, d, J = 8.0 Hz), 6.95-6.98 (2H, m), 7.25-7.44 (5H, m), 7.26-7.27 (2H, m), 7.58 (1H, d, J = 8.0 Hz).

### Production example 239

0.24 g of 2-chloro-3-carboxyl-6-methoxymethylpyridine and 4 ml of 28% aqueous ammonia were added to an autoclave, and they were then stirred under pressure for 10 hours. Thereafter, the reaction mixture was concentrated under reduced pressure, so as to obtain crude 2-amino-6-methoxymethylnicotinic acid.

The thus obtained crude 2-amino-6-methoxymethylnicotinic acid, 0.25 g of 5-phenoxythiophen-2-yl-methylamine and 0.45 ml of triethylamine were added to 4 ml of DMF. Thereafter, 0.60 g of a BOP reagent was added to the mixture, and the obtained mixture was then stirred at a room temperature for 9 hours 30 minutes. Thereafter, water was added to the reaction mixture, and the precipitated crystal was then filtrated. The obtained crystal was washed with a mixed solvent of hexane and MTBE, and it was then subjected to silica gel column chromatography, so as to obtain 0.22 g of N-(5-phenoxythiophen-2-yl)-methyl-2-amino-6-methoxymethylnicotinic acid amide (hereinafter referred to as the present compound 260). The present compound 260 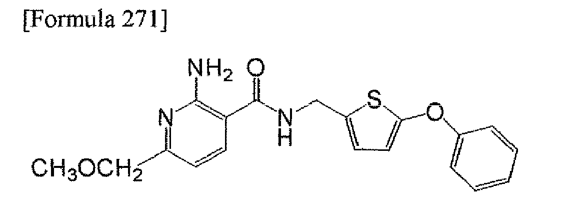 ¹H-NMR (CDCl₃) δ: 3.45 (3H, s), 4.39 (2H, s), 4.64 (2H, d, J = 5.6 Hz), 6.35-6.39 (4H, br m), 6.69-6.74 (2H, m), 7.08-7.13 (3H, m), 7.32-7.34 (2H, m), 7.61 (1H, d, J = 7.7 Hz).

### Production example 240

A mixture of 0.63 g of 2,6-difluoronicotinic acid and 15 ml of 28% aqueous ammonia was stirred at a room temperature for 18 hours. Thereafter, the reaction mixture was concentrated under reduced pressure, so as to obtain crude 2-amino-6-fluoronicotinic acid.

The thus obtained crude 2-amino-6-fluoronicotinic acid, 0.81 g of 5-phenoxythiophen-2-yl-methylamine and 1.45 ml of triethylamine were added to 10 ml of DMF. Thereafter, 1.92 g of a BOP reagent was added to the mixture, and the obtained mixture was then stirred at a room temperature for 9 hours 30 minutes. After water was added to the reaction mixture, the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.21 g of N-(5-phenoxythiophen-2-yl)-methyl-2-amino-6-fluoronicotinic acid amide (hereinafter referred to as the present compound 261).

### The present compound 261

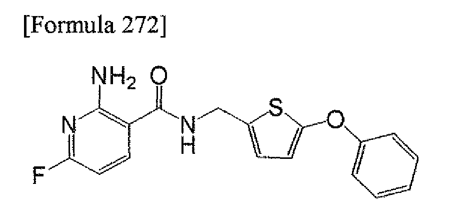

¹H-NMR (CDCl₃) δ: 4.64 (2H, d, J = 5.6 Hz), 6.16 (1H, dd, J = 8.1, 2.9 Hz), 6.21 (1H, br s), 6.39 (1H, d, J = 3.7 Hz), 6.58 (2H, br s), 6.74 (1H, t, J = 2.2 Hz), 7.09-7.12 (3H, m), 7.31-7.34 (2H, m), 7.68 (1H, t, J = 8.1 Hz).

### Production example 241

A mixture of 0.31 g of N-(4-phenoxyphenyl)methyl-2-amino-6-chloronicotinic acid amide, 0.91 ml of a 40% methylamine solution and 2.5 ml of N-methyl-2-pyrrolidone was subjected to a microwave reactor (production name: Discover; manufactured by CEM) at 18 kgf/cm² at 150°C for 10 minutes. After, water was added to the reaction mixture, it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.16 g of N-(4-phenoxyphenyl)methyl-2-amino-6-methylaminonicotinic acid amide (hereinafter referred to as the present compound 262).

### The present compound 262

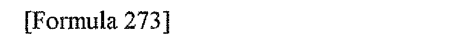

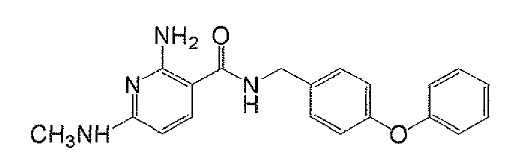

¹H-NMR (CDCl₃) δ: 2.90 (3H, d, J = 5.1 Hz), 4.54 (2H, d, J = 5.6 Hz), 4.61 (1H, br s), 5.69 (1H, d, J = 8.5 Hz), 6.00 (1H, br s), 6.45 (2H, br s), 6.98-7.01 (4H, m), 7.08-7.12 (1H, m), 7.25-7.40 (5H, m).

### Production example 242

1.0 g of N-(4-phenoxyphenyl)methyl-2-amino-6-methylnicotinic acid amide and 0.91 g of 2,4-bis(4-methoxyphenyl)-1,3,2,4-dithiadiphosphetan-2,4-disulfide (a Lawesson's reagent) were added to 10 ml of 1,4-dioxane. The obtained mixture was heated to reflux for 8 hours. Thereafter, a sodium bicarbonate aqueous solution was added to the reaction mixture, and the mixture was then extracted with ethyl acetate. The organic layer was washed with water and a saturated saline solution, and it was then dried over magnesium sulfate, followed by concentration under reduced pressure. The obtained residue was subjected to silica gel column chromatography, so as to obtain 197 mg of N-(4-phenoxyphenyl)methyl-2-amino-6-methyl-nicotinic acid thioamide (hereinafter referred to as the present compound 263).

### The present compound 112

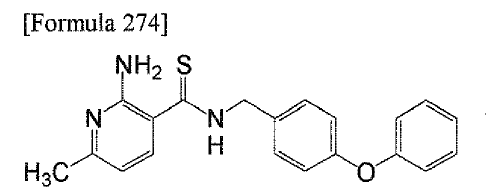

¹ H-NMR (CDCl₃ ) δ: 2.36 (3H, s), 4.91 (2H, d, J = 5.1 Hz), 5.95 (2H, br s), 6.48 (1H, d, J = 7.7 Hz), 6.99-7.04 (4H, m), 7.13 (1H, td, J = 7.4, 1.0 Hz), 7.31-7.38 (5H, m), 7.66 (1H, br s).

### Production example 243

0.44 g of a BOP reagent and 0.3 ml of triethylamine were added to a mixture of 0.11 g of 2-aminonicotinic acid, 0.20 g of 3-(3-ethynylphenyloxy)benzylamine hydrochloride and 5 ml of DMF, and the obtained mixture was then stirred at a room temperature for 4 hours. Thereafter, water was added to the reaction mixture, and it was then extracted with ethyl acetate. The organic layer was successively washed with a 5% sodium hydroxide aqueous solution and a saturated saline solution, and it was then dried over anhydrous sodium sulfate, followed by concentration under reduced pressure. The obtained residue was subjected to silica gel column chromatography, so as to obtain 0.22 g of N-[3-(3-ethynylphenyloxy)phenyl]methyl-2-aminonicotinic acid amide (hereinafter referred to as the present compound 264).

### The present compound 264

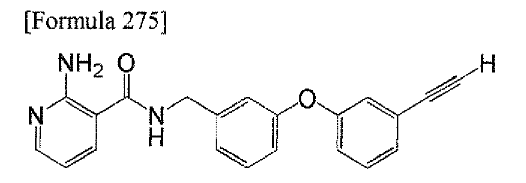

¹ H-NMR (CDCl₃ ) δ:3.07 (1H, s), 4.59 (2H, d, J = 5.6 Hz), 6.33 (3H, s), 6.59 (1H, dd, J = 7.6, 4.9 Hz), 6.93 (1H, d, J = 8.0 Hz), 6.99-7.03 (2H, m), 7.09-7.11 (2H, m), 7.23-7.35 (3H, m), 7.59 (1H, d, J = 8.0 Hz), 8.17 (1H, d, J = 4.9 Hz).

### Production example 244

0.44 g of triethylamine was added to a mixture solution of 0.20 g of 2-aminonicotinic acid, 0.39 g of 3-(2-trifluoromethylphenyloxy)benzylamine and 3 ml of DMF. Thereafter, 0.71 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate aqueous solution and a saturated saline solution, and it was then dried over magnesium sulfate, followed by concentration under reduced pressure. The obtained residue was subjected to silica gel column chromatography, so as to obtain 0.53 g of N-[3-(2-thfluoromethylphenyloxy)phcnyl]methyl-2-aminonicotinic acid amide (hereinafter referred to as the present compound 265).

### The present compound 265

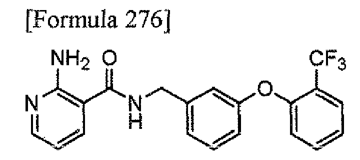

¹ H-NMR (DMSO-D₆) δ: 4.44 (2H, d, J = 6.1 Hz), 6.59 (1H, dd, J = 7.7, 4.8 Hz), 6.91 (1H, dd, J = 8.0, 2.4 Hz), 7.00-7.09 (4H, m), 7.15 (1H, d, J = 7.6 Hz), 7.29-7.34 (1H, m), 7.36-7.41 (1H, m), 7.62-7.66 (1H, m), 7.78 (1H, d, J = 7.6 Hz), 7.91 (1H, dd, J = 7.6, 1.7 Hz), 8.08 (1H, dd, J = 4.6, 1.7 Hz), 8.99 (1H, t, J = 5.9 Hz).

### Production example 245

0.25 g of 2-amino-6-methoxymethylnicotinic acid, 0.39 g of 3-phenoxybenzylamine hydrochloride, 0.70 g of triethylamine and 0.73 g of a BOP reagent were added to 10 ml of DMF. The obtained mixture was stirred at a room temperature for 16 hours. Thereafter, water was added to the reaction mixture, and the mixture was then extracted with ethyl acetate. The organic layer was washed with water, and it was then dried over sodium sulfate, followed by concentration under reduced pressure. The residue was subjected to silica gel column chromatography, so as to obtain 0.08 g of N-(3-phenoxyphenyl)methyl-2-amino-6-methoxymethylnicotinic acid amide (hereinafter referred to as the present compound 266).

### The present compound 266

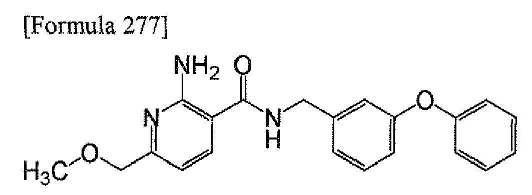

¹ H-NMR (CDCl₃ ) δ: 3.45 (3H, s), 4.39 (2H, s), 4.57 (2H, d, J = 5.6 Hz), 6.30 (1H, br s), 6.37 (2H, br s), 6.69 (1H, d, J = 7.8 Hz), 6.91-7.14 (6H, m), 7.26-7.36 (3H, m), 7.59 (1H, d, J = 7.8 Hz).

### Production example 246

0.54 g of 2-chloro-6-methoxymethylnicotinic acid and 10 ml of 28% aqueous ammonia were added to an autoclave, and they were then stirred under pressure for 10 hours. Thereafter, the reaction mixture was left to cool to around room temperature, and it was then concentrated under reduced pressure, so as to obtain 0.52 g of crude 2-amino-6-methoxymethylnicotinic acid.

0.26 g of the above crude 2-amino-6-methoxymethylnicotinic acid, 0.34 g of 3-(2-fluorophenyloxy)benzylamine and 0.49 ml of triethylamine were added to 5 ml of DMF. Thereafter, 0.65 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.32 g of N-[3-(2-fluorophenyloxy)phenyl]methyl-2-amino-6-methoxymethylnicotinic acid amide (hereinafter referred to as the present compound 267).

### The present compound 267

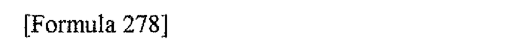

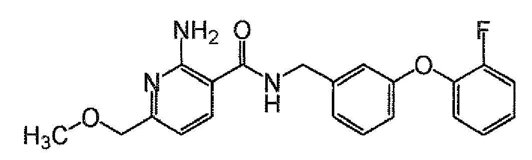

¹ H-NMR (CDCl₃) δ: 3.46 (3H, s), 4.40 (2H, s), 4.57 (2H, d, J = 5.6 Hz), 6.30 (1H, br s), 6.38 (2H, br s), 6.70 (1H, d, J = 7.7 Hz), 6.87-6.89 (1H, m), 6.96 (1H, s), 7.05-7.19 (5H, m), 7.26-7.32 (1H, m), 7.60 (1H, d, J = 7.7 Hz).

### Production example 247

0.26 g of the crude 2-amino-6-methoxymethylnicotinic acid which is the intermediate of Production example 246, 0.34 g of 3-(3-fluorophenyloxy)benzylamine and 0.49 ml of triethylamine were added to 5 ml of DMF. Thereafter, 0.65 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.36 g of N-[3-(3-fluorophenyloxy)phenyl]methyl-2-amino-6-methoxymethylnicotinic acid amide (hereinafter referred to as the present compound 268).

### The present compound 268

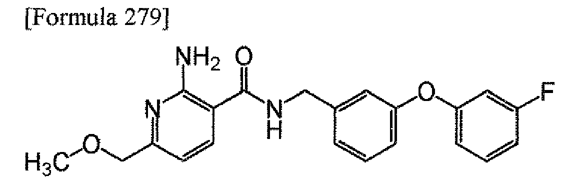

¹ H-NMR (CDCl₃ ) δ: 3.45 (3H, s), 4.39 (2H, s), 4.58 (2H, d, J = 5.6 Hz), 6.39 (3H, br s), 6.68-6.72 (2H, m), 6.77-6.81 (2H, m), 6.95 (1H, dd, J = 8.0, 2.2 Hz), 7.01 (1H, s), 7.12 (1H, d, J = 7.7 Hz), 7.28-7.32 (2H, m), 7.61 (1H, d, J = 7.7 Hz).

### Production example 248

5.94 g of 2-chloro-6-methoxymethylnicotinic acid and 60 ml of 28% aqueous ammonia were added to an autoclave, and they were then stirred under pressure for 10 hours. Thereafter, the reaction mixture was left to cool to around room temperature, and it was then concentrated under reduced pressure, so as to obtain 4.00 g of crude 2-amino-6-methoxymethylnicotinic acid.

0.40 g of the above crude 2-amino-6-methoxymethylnicotinic acid, 0.58 g of 3-(4-fluorophenyloxy)benzylamine and 0.83 ml of triethylamine were added to 6 ml of DMF. Thereafter, 1.10 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.21 g of N-[3-(4-ftuorophenyloxy)phenyl]methyl-2-amino-6-methoxymethylnicotinic acid amide (hereinafter referred to as the present compound 269).

### The present compound 269

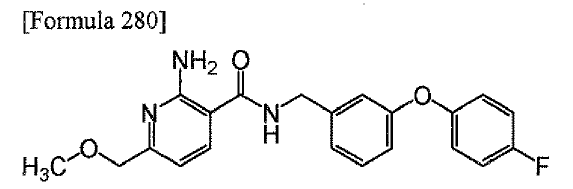

¹ H-NMR (CDCl₃ ) δ: 3.46 (3H, s), 4.40 (2H, s), 4.57 (2H, d, J = 5.6 Hz), 6.29 (1H, s), 6.38 (2H, br s), 6.70 (1H, d, J = 7.8 Hz), 6.87 (1H, t, J = 5.4 Hz), 6.95-7.07 (6H, m), 7.26-7.32 (1H, m), 7.60 (1H, d, J = 7.8 Hz).

### Production example 249

0.40 g of the crude 2-amino-6-methoxymethylnicotinic acid which is the intermediate of Production example 248, 0.61 g of 3-(4-trifluoromethylphenyloxy)benzylamine and 0.83 ml of triethylamine were added to 6 ml of DMF. Thereafter, 1.10 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.09 g of N-[3-(4-trifluoromethylphenyloxy)phenyl]methyl-2-amino-6-methoxymethylnicotinic acid amide (hereinafter referred to as the present compound 270).

### The present compound 270

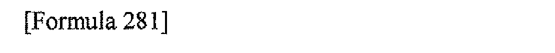

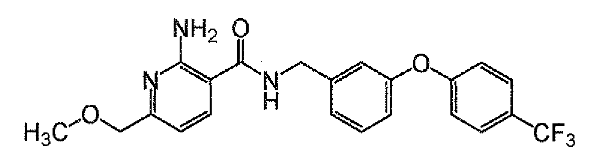

¹ H-NMR (CDCl₃ ) δ: 3.42 (3H, s), 4.35 (2H, s), 4.55 (2H, d, J = 5.9 Hz), 6.64 (1H, d, J = 7.8 Hz), 6.73 (2H, br s), 6.94 (1H, d, J = 8.0 Hz), 7.02-7.04 (3H, m), 7.13 (1H, d, J = 7.6 Hz), 7.34 (1H, t, J = 7.9 Hz), 7.54-7.57 (3H, m), 7.63 (1H, d, J = 7.8 Hz).

### Production example 250

0.40 g of the crude 2-amino-6-methoxymethylnicotinic acid which is the intermediate of Production example 248, 0.64 g of 3-(3-trifluoromethoxyphenyloxy)benzylamine and 0. 83 ml of triethylamine were added to 6 ml of DMF. Thereafter, 1.10 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.14 g of N-[3-(3-trifluoromethoxyphenyloxy)phenyl]methyl-2-amino-6-methoxymethylnicotinic acid amide (hereinafter referred to as the present compound 271).

### The present compound 271

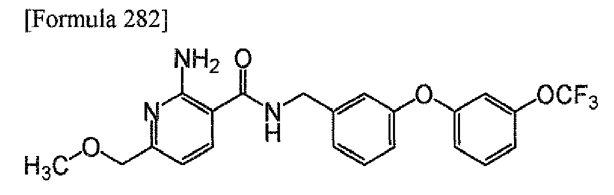

¹ H-NMR (CDCl₃ ) δ: 3.45 (3H, s), 4.39 (2H, s), 4.59 (2H, d, J = 5.8 Hz), 6.35-6.39 (3H, br m), 6.70 (1H, d, J = 8.0 Hz), 6.91-6.97 (4H, m), 7.13 (1H, d, J = 7.7 Hz), 7.34 (3H, m), 7.61 (1H, d, J = 8.0 Hz).

### Production example 251

0.40 g of the crude 2-amino-6-methoxymethylnicotinic acid which is the intermediate of Production example 248, 0.64 g of 3-(4-trifluoromethoxyphenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.29 g of N-[3-(4-trifluoromethoxyphenyloxy)phenyl]methyl-2-amino-6-methoxymethylnicotinic acid amide (hereinafter referred to as the present compound 272).

### The present compound 272

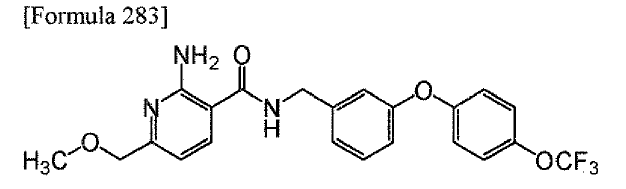

¹ H-NMR (CDCl₃ ) δ: 3.41 (3H, s), 4.3 (2H, s), 4.54 (2H, d, J = 5.8 Hz), 6.36 (1H, br s), 6.65 (1H, d, J = 7.7 Hz), 6.93-6.97 (2H, m), 7.08-7.18 (6H, m), 7.26-7.34 (2H, m), 7.61 (1H, d, J = 7.7 Hz).

### Production example 252

0.40 g of the crude 2-amino-6-methoxymethylnicotinic acid which is the intermediate of Production example 248, 0.64 g of 3-(4-chlorophenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.25 g of N-[3-(4-chlorophenyloxy)phenyl]methyl-2-amino-6-methoxymethylnicotinic acid amide (hereinafter referred to as the present compound 273).

### The present compound 273

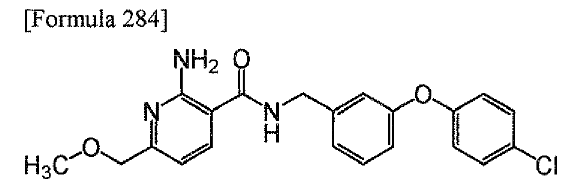

¹ H-NMR (CDCl₃ ) δ: 3.46 (3H, s), 4.39 (2H, s), 4.56 (2H, d, J = 5.7 Hz), 6.34-6.37 (3H, br m), 6.70 (1H, m), 6.87-7.11 (6H, m), 7.27-7.32 (2H, m), 7.60-7.61 (1H, m).

### Production example 253

0.40 g of the crude 2-amino-6-methoxymethylnicotinic acid which is the intermediate of Production example 248, 0.64 g of 3-(2-trifluoromethylphenyloxy)benzylamine and 0.83 ml of triethylamine were added to 6 ml of DMF. Thereafter, 1.10 g of a BOP reagent was added to the mixture, and the obtained mixture was then stirred at a room temperature for 10 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.10 g of N-[3-(2-trifluoromethylphenyloxy)phenyl]methyl-2-amino-6-methoxymethylnicotinic acid amide (hereinafter referred to as the present compound 274).

### The present compound 274

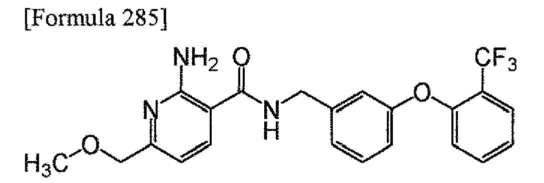

¹ H-NMR (CDCl₃ ) δ: 3.46 (3H, s), 4.40 (2H, s), 4.59 (2H, d, J = 5.6 Hz), 6.30 (1H, br s), 6.38 (2H, br s), 6.71 (1H, d, J = 7.8 Hz), 6.95-7.01 (3H, m), 7.12-7.36 (3H, m), 7.45-7.47 (1H, m), 7.61 (1H, d, J = 6.8 Hz), 7.68 (1H, d, J = 7.8 Hz).

### Production example 254

0.40 g of the crude 2-amino-6-methoxymethylnicotinic acid which is the intermediate of Production example 248, 0.48 g of 3-(4-methylphenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.13 g of N-[3-(4-methylphenyloxy)phenyl]methyl-2-amino-6-methoxymethylnicotinic acid amide (hereinafter referred to as the present compound 275).

### The present compound 275

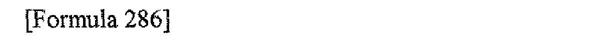

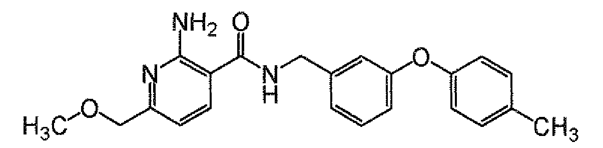

¹ H-NMR (CDCl₃ ) δ: 2.34 (3H, s), 3.46 (3H, s), 4.40 (2H, s), 4.56 (2H, d, J = 4.6 Hz), 6.28 (1H, br s), 6.37 (2H, br s), 6.69 (1H, d, J = 7.2 Hz), 6.99-7.18 (8H, m), 7.59 (1H, d, J = 7.2 Hz).

### Production example 255

0.40 g of the crude 2-amino-6-methoxymethylnicotinic acid which is the intermediate of Production example 248, 0.48 g of 3-(2-methoxyphenyloxy)benzylamine and 0.83 ml of triethylamine were added to 6 ml of DMF. Thereafter, 1.10 g of a BOP reagent was added to the mixture, and the obtained mixture was then stirred at a room temperature for 12 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.08 g of N-[3-(2-methoxyphenyloxy)phenyl]methyl-2-amino-6-methoxymethylnicotinic acid amide (hereinafter referred to as the present compound 276).

### The present compound 276

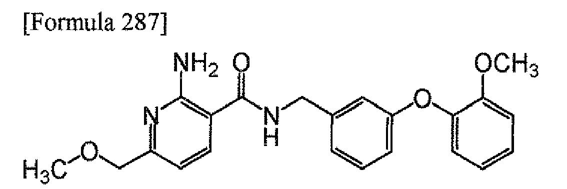

¹ H-NMR (CDCl₃ ) δ: 3.45 (3H, s), 3.81 (3H, s), 4.39 (2H, s), 4.54 (2H, d, J = 5.4 Hz), 6.38 (3H, br s), 6.67 (1H, d, J = 7.8 Hz), 6.82 (1H, d, J = 7.6 Hz), 6.97 (5H, m), 7.13-7.26 (2H, m), 7.59 (1H, d, J = 7.8 Hz).

### Production example 256

0.40 g of the crude 2-amino-6-methoxymethylnicotinic acid which is the intermediate of Production example 248, 0.48 g of 3-(2-methylphenyloxy)benzylamine and 0.83 ml of triethylamine were added to 6 ml of DMF. Thereafter, 1.10 g of a BOP reagent was added to the mixture, and the obtained mixture was then stirred at a room temperature for 9 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.13 g of N-[3-(2-methylphenyloxy)phenyl]methyl-2-amino-6-methoxymethylnicotinic acid amide (hereinafter referred to as the present compound 277).

### The present compound 277

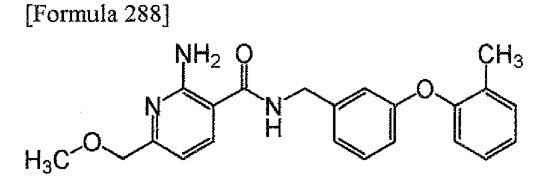

¹ H-NMR (CDCl₃ ) δ: 2.23 (3H, s), 3.46 (3H, s), 4.40 (2H, s), 4.56 (2H, d, J = 5.8 Hz), 6.33-6.38 (4H, br m), 6.83-7.15 (8H, m), 7.60 (1H, d, J = 8.0 Hz).

### Production example 257

0.40 g of the crude 2-amino-6-methoxymethylnicotinic acid which is the intermediate of Production example 248, 0.52 g of 3-(3-methoxyphenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.10 g of N-[3-(3-methoxyphenyloxy)phenyl]methyl-2-amino-6-methoxymethylnicotinic acid amide (hereinafter referred to as the present compound 278).

### The present compound 278

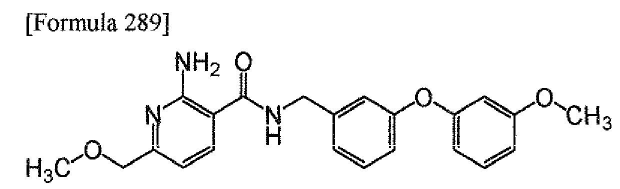

¹ H-NMR (CDCl₃ ) δ: 3.45 (3H, s), 3.78 (3H, s), 4.39 (2H, s), 4.56 (2H, d, J = 5.6 Hz), 6.47 (2H, br s), 6.57-6.59 (2H, m), 6.65-6.68 (2H, m), 6.91-7.09 (4H, m), 7.15-7.35 (2H, m), 7.72 (1H, d, J = 7.7 Hz).

### Production example 258

0.40 g of the crude 2-amino-6-methoxymethylnicotinic acid which is the intermediate of Production example 248, 0.52 g of 3-(3-methoxyphenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.12 g of N-[3-(4-methoxyphenyloxy)phenyl]methyl-2-amino-6-methoxymethylnicotinic acid amide (hereinafter referred to as the present compound 279).

### The present compound 279

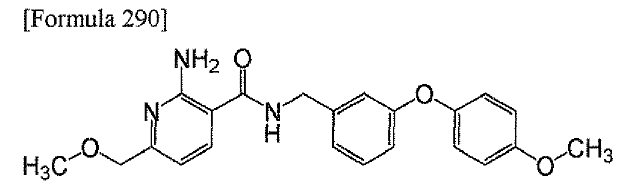

¹ H-NMR (CDCl₃ ) δ: 3.46 (3H, s), 3.78 (3H, s), 4.40 (2H, s), 4.58 (2H, d, J = 5.8 Hz), 6.29 (1H, br s), 6.41 (2H, br s), 6.59 (2H, m), 6.66-6.71 (2H, m), 6.94-7.09 (3H, m), 7.21-7.29 (2H, m), 7.61 (1H, d, J = 8.0 Hz).

### Production example 259

0.40 g of the crude 2-amino-6-methoxymethylnicotinic acid which is the intermediate of Production example 248, 0.48 g of 3-(3-methylphenyloxy)benzylamine and 0.83 ml of triethylamine were added to 6 ml of DMF. Thereafter, 1.10 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.12 g of N-[3-(3-methylphenyloxy)phenyl]methyl-2-amino-6-methoxymethylnicotinic acid amide (hereinafter referred to as the present compound 280).

### The present compound 280

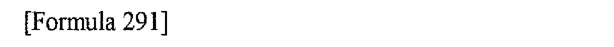

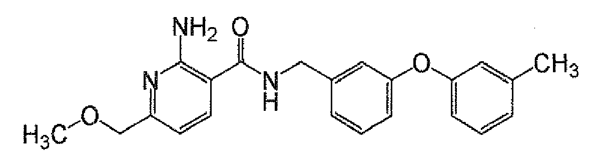

¹ H-NMR (CDCl₃ ) δ: 2.33 (3H, s), 3.46 (3H, s), 4.39 (2H, s), 4.57 (2H, d, J = 5.8 Hz), 6.28 (1H, br s), 6.39 (2H, br s), 6.70 (1H, d, J = 8.0 Hz), 6.81-6.82 (2H, m), 6.92-6.96 (3H, m), 7.05-7.07 (1H, m), 7.23-7.29 (2H, m), 7.60 (1H, d, J = 8.0 Hz).

### Production example 260

0.23 g of 2-amino-6-methoxymethylnicotinic acid, 0.28 g of 3-(3-trifluoromethylphenyloxy)benzylamine and 0.38 ml of triethylamine were added to 4 ml of DMF. Thereafter, 0.05 g of a BOP reagent was added to the mixture, and the obtained mixture was then stirred at 40°C for 3 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.28 g of N-[3-(3-trifluoromethylphenyloxy)phenyl]methyl-2-amino-6-methoxymethylnicotinic acid amide (hereinafter referred to as the present compound 281).

### The present compound 281

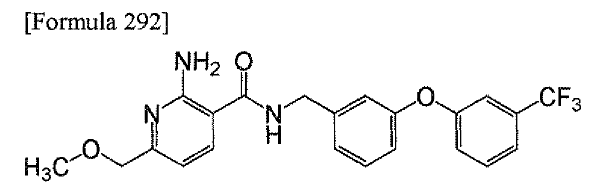

¹ H-NMR (CDCl₃ ) δ: 3.46 (3H, s), 4.40 (2H, s), 4.60 (2H, d, J = 5.8 Hz), 6.33-6.36 (3H, br m), 6.70 (1H, d, J = 8.0 Hz), 6.95 (1H, t, J = 3.9 Hz), 7.02 (1H, s), 7.16 (2H, t, J = 9.7 Hz), 7.31-7.40 (4H, m), 7.61 (1H, d, J = 8.0 Hz).

### Production example 261

A mixture of 0.64 g of 2,6-difluoronicotinic acid and 15 ml of 28% aqueous ammonia was stirred at a room temperature for 11 hours. Thereafter, the reaction mixture was concentrated under reduced pressure, so as to obtain crude 2-amino-6-fluoronicotinic acid.

The thus obtained crude 2-amino-6-fluoronicotinic acid, 0.94 g of 3-pheoxybenzylamine hydrochloride and 1.47 ml of triethylamine were added to 10 ml of DMF. Thereafter, 1.95 g of a BOP reagent was added to the mixture, and the obtained mixture was then stirred at a room temperature for 6 hours 30 minutes. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.14 g of N-(3-phenoxy)phenylmethyl-2-amino-6-fluoronicotinic acid amide (hereinafter referred to as the present compound 282).

### The present compound 282

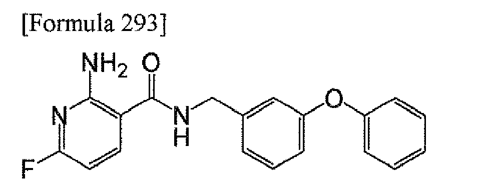

¹ H-NMR (CDCl₃ ) δ: 4.56 (2H, d, J = 5.8 Hz), 6.15 (1H, dd, J = 8.3, 2.8 Hz), 6.20 (1H, br s), 6.58 (2H, br s), 6.91-7.14 (6H, m), 7.29-7.36 (3H, m), 7.68 (1H, t, J = 8.1 Hz).

### Production example 262

A mixture of 0.63 g of 2,6-difluoronicotinic acid and 15 ml of 28% aqueous ammonia was stirred at a room temperature for 12 hours. Thereafter, the reaction mixture was concentrated under reduced pressure, so as to obtain crude 2-amino-6-fluoronicotinic acid.
The thus obtained crude 2-amino-6-fluoronicotinic acid, 1.01 g of 3-(2-fluorophenyloxy)benzylamine hydrochloride and 1.46 ml of triethylamine were added to 10 ml of DMF. Thereafter, 1.94 g of a BOP reagent was added to the mixture, and the obtained mixture was then stirred at a room temperature for 7 hours. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.26 g of N-[3-(2-fluorophenyloxy)phenyl]methyl-2-amino-6-fluoronicotinic acid amide (hereinafter preferred to as the present compound 283).

### The present compound 283

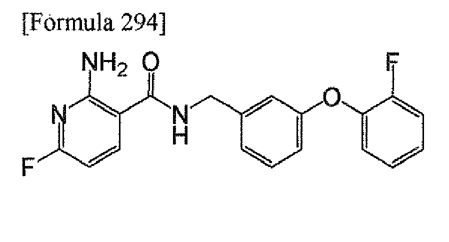

¹ H-NMR (CDCl₃ ) δ: 4.56 (2H, d, J = 5.4 Hz), 6.15-6.17 (2H, m), 6.59 (2H, br s), 6.88 (1H, d, J = 8.5 Hz), 6.96 (1H, s), 7.04-7.32 (6H, m), 7.68 (1H, t, J = 7.7 Hz).

### Production example 263

A mixture of 0.62 g of 2,6-difluoronicotinic acid and 15 ml of 28% aqueous ammonia was stirred at a room temperature for 9 hours. Thereafter, the reaction mixture was concentrated under reduced pressure, so as to obtain crude 2-amino-6-fluoronicotinic acid.

The thus obtained crude 2-amino-6-fluoronicotinic acid, 0.99 g of 3-(4-fluorophenyloxy)benzylamine hydrochloride and 1.43 ml of triethylamine were added to 10 ml of DMF. Thereafter, 1.89 g of a BOP reagent was added to the mixture, and the obtained mixture was then stirred at a room temperature for 12 hours. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.12 g of N-[3-(4-fluorophenyloxy)phenyl]methyl-2-amino-6-fluoronicotinic acid amide (hereinafter referred to as the present compound 284).

### The present compound 284

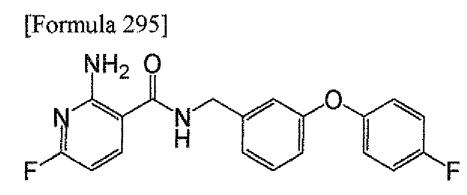

¹ H-NMR (CDCl₃ ) δ: 4.56 (2H, d, J = 5.9 Hz), 6.15 (1H, dd, J = 8.0, 2.7 Hz), 6.19 (1H, br s), 6.59 (2H, br s), 6.87-7.06 (7H, m), 7.27-7.31 (1H, m), 7.69 (1H, t, J = 8.0 Hz).

### Production example 264

A mixture of 0.61 g of 2,6-difluoronicotinic acid and 15 ml of 28% aqueous ammonia was stirred at a room temperature for 7 hours 30 minutes. Thereafter, the reaction mixture was concentrated under reduced pressure, so as to obtain crude 2-amino-6-fluoronicotinic acid.

The thus obtained crude 2-amino-6-fluoronicotinic acid, 0.97 g of 3-(3-fluorophenyloxy)benzylamine hydrochloride and 1.41 ml of triethylamine were added to 10 ml ofDMF. Thereafter, 1.87 g of a BOP reagent was added to the mixture, and the obtained mixture was then stirred at a room temperature for 9 hours 30 minutes. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.12 g of N-[3-(3-fluorophenyloxy)phenyl]methyl-2-amino-6-fluoronicotinic acid amide (hereinafter referred to as the present compound 285).

### The present compound 285

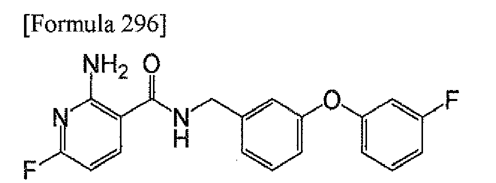

¹ H-NMR (CDCl₃) δ: 4.58 (2H, d, J = 5.8 Hz), 6.16 (1H, dd, J = 8.2, 2.7 Hz), 6.22 (1H, br s), 6.60 (2H, br s), 6.70 (1H, m), 6.80 (2H, m), 6.98 (3H, m), 7.12 (2H, m), 7.29-7.34 (1H, m), 7.69 (1H, t, J = 8.2 Hz).

### Production example 265

A mixture of 0.62 g of 2,6-difluoronicotinic acid and 15 ml of 28% aqueous ammonia was stirred at a room temperature for 14 hours 30 minutes. Thereafter, the reaction mixture was concentrated under reduced pressure, so as to obtain crude 2-amino-6-fluoronicotinic acid.

The thus obtained crude 2-amino-6-fluoronicotinic acid, 0.83 g of 3-(4-methylphenyloxy)benzylamine and 1.42 ml of triethylamine were added to 10 ml of DMF. Thereafter, 1.89 g of a BOP reagent was added to the mixture, and the obtained mixture was then stirred at a room temperature for 1 hour 30 minutes. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.12 g of N-[3-(4-methylphenyloxy)phenyl]methyl-2-amino-6-fluoronicotinic acid amide (hereinafter referred to as the present compound 286).

### The present compound 286

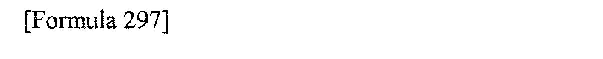

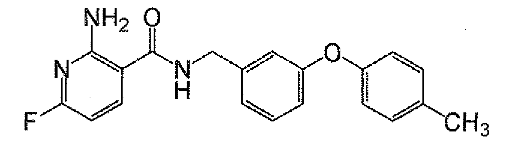

¹H-NMR (CDCl₃) δ: 2.34 (3H, s), 4.55 (2H, d, J = 5.6 Hz), 6.15 (1H, dd, J = 8.2, 2.9 Hz), 6.18 (1H, br s), 6.58 (2H, br s), 6.88-6.94 (4H, m), 7.03 (1H, d, J = 7.5 Hz), 7.14 (2H, d, J = 8.7 Hz), 7.26-7.31 (1H, m), 7.67 (1H, t, J = 8.2 Hz).

### Production example 266

A mixture of 0.61 g of 2,6-difluoronicotinic acid and 15 ml of 28% aqueous ammonia was stirred at a room temperature for 16 hours. Thereafter, the reaction mixture was concentrated under reduced pressure, so as to obtain crude 2-amino-6-fluoronicotinic acid.

The thus obtained crude 2-amino-6-fluoronicotinic acid, 1.03 g of 3-(3-trifluoromethylphenyloxy)benzylamine and 1.41 ml of triethylamine were added to 10 ml of DMF. Thereafter, 1.87 g of a BOP reagent was added to the mixture, and the obtained mixture was then stirred at a room temperature for 3 hours 30 minutes. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.17 g of N-[3-(3-trifluoromethylphenyloxy)phenyl]methyl-2-amino-6-fluoronicotinic acid amide (hereinafter referred to as the present compound 287).

### The present compound 287

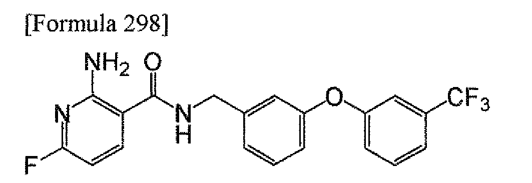

¹H-NMR (CDCl₃) δ 4.59 (2H, d, J = 5.8 Hz), 6.16 (1H, dd, J = 8.5,2.7 Hz), 6.21 (1H, br s), 6.59 (2H, br s), 6.95-7.00 (2H, m), 7.14-7.18 (2H, m), 7.24-7.26 (1H, m), 7.35-7.38 (2H, m), 7.44-7.46 (1H, m), 7.69 (1H, t, J = 8.5 Hz).

### Production example 267

0.18 g of 2-amino-6-fluoronicotinic acid, 0.25 g of 3-(3-methoxyphenyloxy)benzylamine and 0.40 ml of triethylamine were added to 4 ml of DMF. Thereafter, 0.53 g of a BOP reagent was added to the mixture, and the obtained mixture was then stirred at a room temperature for 7 hours. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.25 g of N-[3-(3-methoxyphenyloxy)phenyl]methyl-2-amino-6-fluoronicotinic acid amide (hereinafter referred to as the present compound 288).

### The present compound 288

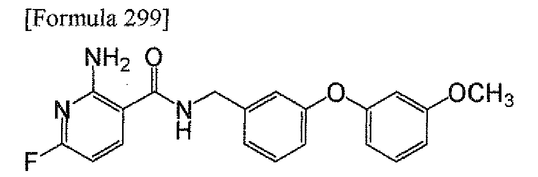

¹ H-NMR (CDCl₃) δ: 3.78 (3H, s), 4.57 (2H, d, J = 5.6 Hz), 6.14-6.16 (2H, m), 6.60-6.65 (4H, m), 6.95-6.98 (2H, m), 7.07 (1H, d, J = 7.7 Hz), 7.25-7.30 (3H, m), 7.68 (1H, t, J = 8.0 Hz).

### Production example 268

0.16 g of 2-amino-6-fluoronicotinic acid, 0.28 g of 3-(4-trifluoromethoxyphenyloxy)benzylamine and 0.36 ml of triethylamine were added to 4 ml of DMF. Thereafter, 0.48 g of a BOP reagent was added to the mixture, and the obtained mixture was then stirred at a room temperature for 7 hours. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.27 g of N-[3-(4-trifluoromethoxyphenyloxy)phenyl]methyl-2-amino-6-fluoronictinic acid amide (hereinafter referred to as the present compound 289).

### The present compound 289

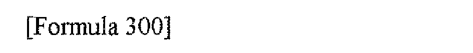

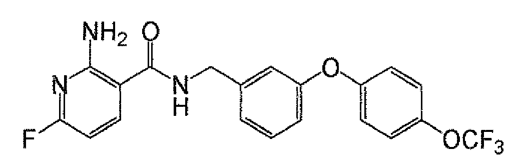

¹H-NMR (CDCl₃) δ: 4.59 (2H, d, J = 5.6 Hz), 6.16 (1H, dd, J = 8.3, 2.8 Hz), 6.22 (1H,br s), 6.59 (2H,br s), 6.93 (1H, m), 7.01 (3 H, m), 7.10 (1H, d, J = 7.5 Hz), 7.19 (2H, d, J = 9.2 Hz), 7.34 (1H, m), 7.69 (1H, t, J = 8.3 Hz).

### Production example 269

0.15 g of 2-amino-6-fluoronicotinic acid, 0.26 g of 3-(3-trifluoromethoxyphenyloxy)benzylamine and 0.34 ml of triethylamine were added to 4 ml of DMF. Thereafter, 0.45 g of a BOP reagent was added to the mixture, and the obtained mixture was then stirred at a room temperature for 7 hours. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.27 g of N-[3-(3-trifluoromethoxyphenyloxy)phenyl]methyl-2-amino-6-fluoronicotinic acid amide (hereinafter referred to as the present compound 290).

### The present compound 290

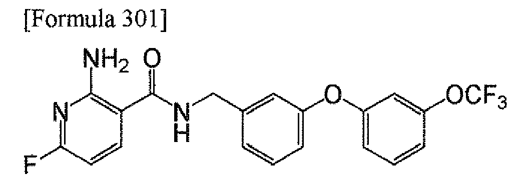

¹H-NMR (CDCl₃) δ: 4.58 (2H, d, J = 5.9 Hz), 6.15 (1H, dd, J = 8.3, 2.7 Hz), 6.24 (1H, br s), 6.60 (2H, br s), 6.85-7.01 (5H, m), 7.12-7.14 (1H, m), 7.33-7.35 (2H, m), 7.69 (1H, t, J = 8.3 Hz).

### Production example 270

0.16 g of 2-amino-6-fluoronicotinic acid, 0.22 g of 3-(4-methoxyphenyloxy)benzylamine and 0.36 ml of triethylamine were added to 4 ml of DMF. Thereafter, 0.47 g of a BOP reagent was added to the mixture, and the obtained mixture was then stirred at 30°C for 16 hours 30 minutes. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.26 g of N-[3-(4-methoxyphenyloxy)phenyl]methyl-2-amino-6-fluoronicotinic acid amide (hereinafter referred to as the present compound 291).

### The present compound 291

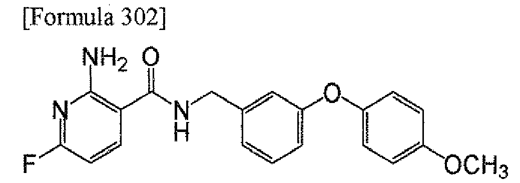

¹ H-NMR (CDCl₃) δ: 3.80 (3H, s), 4.58 (2H, d, J = 5.9 Hz), 6.15 (1H, dd, J = 8.3, 2.7 Hz), 6.24 (1H, br s), 6.60 (2H, br s), 6.85-7.01 (5H, m), 7.12-7.14 (1H, m), 7.33-7.35 (2H, m), 7.69 (1H, t, J = 8.0 Hz).

### Production example 271

0.17 g of 2-amino-6-fluoronicotinic acid, 0.28 g of 3-(2-trifluoromethylphenyloxy)benzylamine and 0.38 ml of triethylamine were added to 4 ml of DMF. Thereafter, 0.50 g of a BOP reagent was added to the mixture, and the obtained mixture was then stirred at 40°C for 3 hours. Thereafter, the reaction mixture was left to cool to around room temperature. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.31 g of N-[3-(2-trifluoromethylphenyloxy)phenyl]methyl-2-amino-6-fluoronicotinic acid amide (hereinafter referred to as the present compound 292).

### The present compound 292

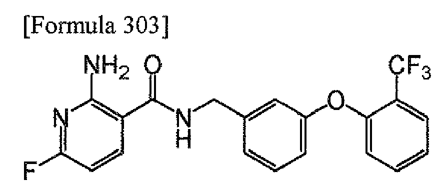

¹ H-NMR (CDCl₃) δ: 4.58 (2H, d, J = 5.3 Hz), 6.16 (1H, d, J = 7.5 Hz), 6.23 (1H, br s), 6.59 (2H, br s), 6.96-7.00 (3H, m), 7.18-7.29 (3H, m), 7.45-7.47 (1H, m), 7.68-7.71 (2H, m).

### Production example 272

0.17 g of 2-amino-b-fluoronieotinic acid, 0.24 g of 3-(2-methoxyphenyloxy)benzylamine and 0.38 ml of triethylamine were added to 4 ml of DMF. Thereafter, 0.50 g of a BOP reagent was added to the mixture, and the obtained mixture was then stirred at 40°C for 7 hours. Thereafter, the reaction mixture was left to cool to around room temperature. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.30 g of N-[3-(2-methoxyphenyloxy)phenyl]methyl-2-amino-6-fluoronicotinic acid amide (hereinafter referred to as the present compound 293).

### The present compound 292

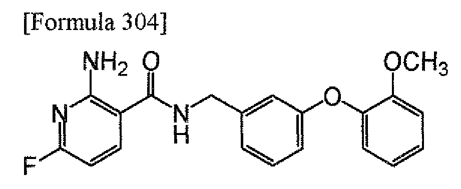

¹ H-NMR (CDCl₃) δ: 3.83 (3H, s), 4.55 (2H, d, J = 5.6 Hz), 6.14-6.16 (2H, m), 6.58 (2H, br s), 6.83 (1H, dd, J = 8.2, 2.4 Hz), 6.92-6.94 (2H, m), 6.99-7.01 (3H, m), 7.14-7.18 (1H, m), 7.23-7.29 (1H, m), 7.67 (1H, t, J = 8.2 Hz).

### Production example 273

0.17 g of 2-amino-6-fluoronicotinic acid, 0.22 g of 3-(3-methylphenyloxy)benzylamine and 0.38 ml of triethylamine were added to 4 ml of DMF, Thereafter, 0.50 g of a BOP reagent was added to the mixture, and the obtained mixture was then stirred at 40°C for 7 hours. Thereafter, the reaction mixture was left to cool to around room temperature. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.25 g of N-[3-(3-methylphenyloxy)phenyl]methyl-2-amino-6-fluoronicotinic acid amide (hereinafter referred to as the present compound 294).

### The present compound 294

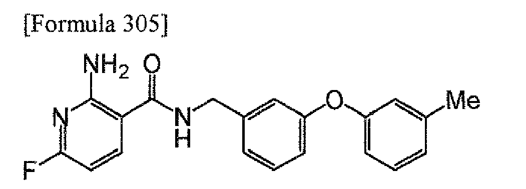

¹ H-NMR (CDCl₃) δ: 2.33 (3H, s), 4.56 (2H, d, J = 5.6 Hz), 6.15 (1H, dd, J = 8.3, 2.5 Hz), 6.18 (1H, br s), 6.59 (2H, br s), 6.81-6.82 (2H, m), 6.92-6.98 (3H, m), 7.05 (1H, d, J = 7.7 Hz), 7.23-7.30 (2H, m), 7.68 (1H, t, J = 8.3 Hz).

### Production example 274

0.17 g of 2-amino-6-fluoronicotinic acid, 0.24 g of 3-(4-chlorophenyloxy)benzylamine and 0.38 ml of triethylamine were added to 4 ml of DMF. Thereafter, 0.50 g of a BOP reagent was added to the mixture, and the obtained mixture was then stirred at 40°C for 8 hours. Thereafter, the reaction mixture was left to cool to around room temperature. Thereafter, a saturated sodium bicarbonate aqueous solution was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.17 g of N-[3-(4-chlorophenyloxy)phenyl]methyl-2-amino-6-fluoronicotinic acid amide (hereinafter referred to as the present compound 295).

### The present compound 295

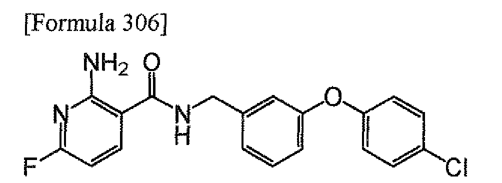

¹ H-NMR (CDCl₃) δ: 4.57 (2H, d, J = 5.8 Hz), 6.16 (1H, dd, J = 8.0, 2.7 Hz), 6.20 (1H, br s), 6.59 (2H, br s), 6.90-6.97 (4H, m), 7.08 (1H, d, J = 7.2 Hz), 7.28-7.33 (3H, m), 7.68 (1H, t, J = 8.0 Hz).

### Production example 275

0.40 g of triethylamine was added to a mixture solution of 0.20 g of 2-amino-6-methylnicotinic acid, 0.33 g of 3-(2-fluorophenyloxy)benzylamine hydroxide and 5 ml of DMF. Thereafter, 0.64 g of a BOP reagent was added to the mixture, and the obtained mixture was then stirred at a room temperature for 3 hours. Thereafter, water was added to the reaction mixture, and the precipitated solid was collected by filtration. The obtained solid was successively washed with a saturated sodium bicarbonate aqueous solution, water and a mixed solution of MTBE and hexane, and it was then dried, so as to obtain 0.36 g of N-[3-(2-fluorophenyloxy)phenyljmethyl-2-amino-6-methylnicotinic acid amide (hereinafter referred to as the present compound 296).

### The present compound 296

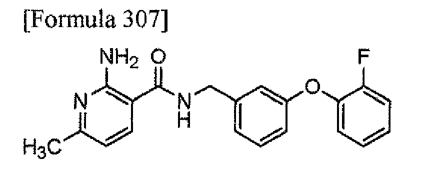

¹ H-NMR (DMSO-D₆) δ: 2.28 (3H, s), 4.40 (2H, d, J = 5.6 Hz), 6.45 (1H, d, J = 7.8 Hz), 6.81 (1H, d, J = 8.0 Hz), 6.92 (1H, s), 7.03-7.08 (3H, m), 7.17-7.25 (3H, m), 7.30-7.42 (2H, m), 7.82 (1H, d, J = 7.8 Hz), 8.87 (1H, t, J = 5.7 Hz).

### Production example 276

0.40 g of triethylamine was added to a mixture solution of 0.20 g of 2-amino-6-methylnicotinic acid, 0.33 g of 3-(3-fluorophenyloxy)benzylamine hydroxide and 5 ml of DMF, Thereafter, 0.64 g of a BOP reagent was added to the mixture, and the obtained mixture was then stirred at a room temperature for 3 hours. Thereafter, water was added to the reaction mixture, and the precipitated solid was collected by filtration. The obtained solid was successively washed with a saturated sodium bicarbonate aqueous solution, water and a mixed solution of MTBE and hexane, and it was then dried, so as to obtain 0.34 g of N-[3-(3-fluorophenytoxy)phenyl]methyl-2-amino-6-methylnicotinic acid amide (hereinafter referred to as the present compound 297).

### The present compound 297

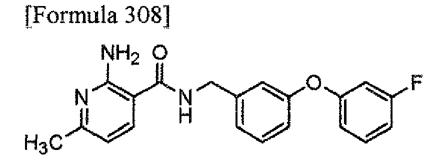

¹ H-NMR (DMSO-D₆) δ: 2.28 (3H, s), 4.43 (2H, d, J = 5.9 Hz), 6.46 (1H, d, J = 7.8 Hz), 6.80-6.88 (2H, m), 6.91-7.16 (6H, m), 7.35-7.43 (2H, m), 7.85 (1H, d, J= 7.8 Hz), 8.89 (1H, t, J= 5.0 Hz).

### Production example 277

0.40 g of triethylamine was added to a mixture solution of 0.20 g of 2-amino-6-methylnicotinic acid, 0.33 g of 3-(4-fluorophenyloxy)benzylamine hydroxide and 5 ml of DMF. Thereafter, 0.64 g of a BOP reagent was added to the mixture, and the obtained mixture was then stirred at a room temperature for 3 hours. Thereafter, water was added to the reaction mixture, and the precipitated solid was collected by filtration. The obtained solid was successively washed with a saturated sodium bicarbonate aqueous solution, water and a mixed solution of MTBE and hexane, and it was then dried, so as to obtain 0.37 g of-[3-(4-fluorophenyloxy)phenyl]methyl-2-amino-6-methylnicotinic acid amide (hereinafter referred to as the present compound 298).

### The present compound 298

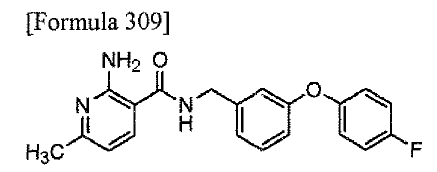

¹ H-NMR (DMSO-D₆) δ: 2.27 (3H, s), 4.40 (2H, d, J = 5.9 Hz), 6.45 (1H, d, J = 7.8 Hz), 6.84 (1H, d, J = 8.0 Hz), 6.92 (1H, s), 7.03-7.09 (5H, m), 7.19-7.25 (2H, m), 7.30-7.35 (1H, m), 7.83 (1H, d, J = 7.8 Hz), 8.87 (1H, t, J = 5.9 Hz).

### Production example 278

0.40 g of triethylamine was added to a mixture solution of 0.20 g of 2-amino-6-methylnicotinic acid, 0.31 g of 3-(2-chlorophenyloxy)benzylamine and 5 ml of DMF. Thereafter, 0.64 g of a BOP reagent was added to the mixture, and the obtained mixture was then stirred at a room temperature for 3 hours. Thereafter, water was added to the reaction mixture, and the precipitated solid was collected by filtration. The obtained solid was successively washed with a saturated sodium bicarbonate aqueous solution, water and a mixed solution of MTBE and hexane, and it was then dried, so as to obtain 0.41 g of N-[3-(2-chlorophenyloxy)phenyl]methyl-2-amino-6-methylnicotinic acid amide (hereinafter referred to as the present compound 299).

### The present compound 299

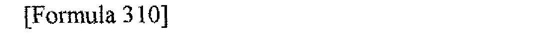

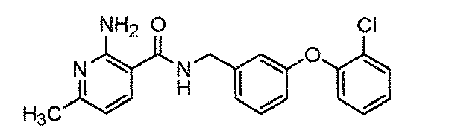

¹ H-NMR (DMSO-D₆) δ: 2.27 (3H, s), 4.40 (2H, d, J = 5.9 Hz), 6.45 (1H, d, J = 7.8 Hz), 6.79 (1H, dd, J = 8.3, 2.2 Hz), 6.91 (1H, s), 7.02-7.11 (4H, m), 7.19-7.25 (1H, m), 7.30-7.38 (2H, m), 7.59 (1H, d, J = 8.0 Hz), 7.82 (1H, d, J = 7.8 Hz), 8.87 (1H, t, J = 6.0 Hz).

### Production example 279

0.40 g of triethylamine was added to a mixture solution of 0.20 g of 2-amino-6-methylnicotinic acid, 0.31 g of 3-(4-ehlarolahenylaxy)benzylamine and 5 ml of DMF. Thereafter, 0.64 g of a BOP reagent was added to the mixture, and the obtained mixture was then stirred at a room temperature for 3 hours. Thereafter, ice water was added to the reaction mixture, and the mixture was then extracted with ethyl acetate. The organic layer was successively washed with a saturated sodium bicarbonate aqueous solution and a saturated saline solution, and it was then dried over magnesium sulfate, followed by concentration under reduced pressure. Ethyl acetate and hexane were added to the obtained residue, and the precipitated solid was then collected, so as to obtain 0.33 g of N-[3-(4-chlorophenyloxy)phenyl]methyl-2-amino-6-methylnicotinic acid amide (hereinafter referred to as the present compound 300).

### The present compound 300

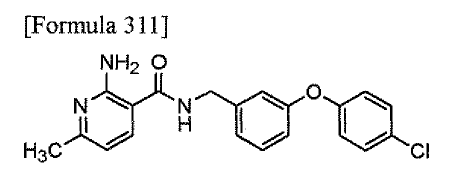

¹ H-NMR (DMSO-D₆) δ: 2.28 (3H, s), 4.41 (2H, d, J = 5.8 Hz), 6.45 (1H, d, J = 7.7 Hz), 6.88-7.15 (7H, m), 7.33-7.38 (1H, m), 7.42 (2H, d, J = 8.5 Hz), 7.84 (1H, d, J = 7.7 Hz), 8.88 (1H, t, J = 5.8 Hz).

### Production example 280

0.40 g of triethylamine was added to a mixture solution of 0.20 g of 2-amino-6-methylnicotinic acid, 0.28 g of 3-(2-methylphenyloxy)benzylamine and 5 ml of DMF. Thereafter, 0.64 g of a BOP reagent was added to the mixture, and the obtained mixture was then stirred at a room temperature for 3 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.36 g of N-[3-(2-methylphenyloxy)phenyl]methyl-2-amino-6-methylnicotinic acid amide (hereinafter referred to as the present compound 301).

### The present compound 301

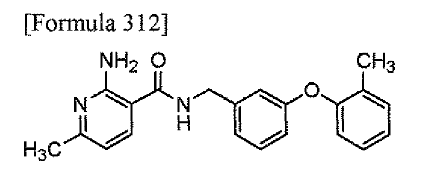

¹ H-NMR (DMSO-D₆) δ: 2.15 (3H, s), 2.27 (3H, s), 4.38 (2H, d, J = 5.6 Hz), 6.45 (1H, d, J = 7.7 Hz), 6.72 (1H, d, J = 7.2 Hz), 6.84 (1H, s), 6.89 (1H, d, J = 8.0 Hz), 6.99-7.13 (4H, m), 7.18-7.23 (1H, m), 7.25-7.34 (2H, m), 7.81 (1H, d, J = 7.7 Hz), 8.86 (1H, t, J = 5.6 Hz).

### Production example 281

0.40 g of triethylamine was added to a mixture solution of 0.20 g of 2-amino-6-methylnicotinic acid, 0.28 g of 3-(4-methylphenyloxy)benzylamine and 5 ml ofDMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.38 g of N-[3-(4-methylphenyloxy)phenyl]methyl-2-amino-6-methylnicotinic acid amide (hereinafter referred to as the present compound 302234).

### The present compound 302

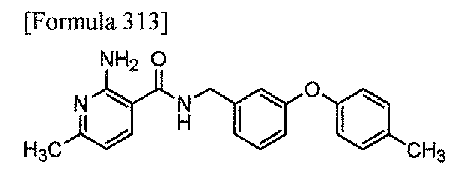

¹ H-NMR (DMSO-D₆) δ: 2.28 (6H, s), 4.39 (2H, d, J = 5.9 Hz), 6.45 (1H, d, J = 7.8 Hz), 6.82 (1H, d, J = 8.0 Hz), 6.89-6.93 (3H, m), 7.02-7.08 (3H, m), 7.18 (2H, d, J = 8.3 Hz), 7.27-7.34 (1H, m), 7.82 (1H, d, J = 7.8 Hz), 8.86 (1H, t, J = 5.6 Hz).

0.40 g of triethylamine was added to a mixture solution of 0.20 g of 2-amino-6-methylnicotinic acid, 0.35 g of 3-(2-trifluoromethylphenyloxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.42 g of N-[3-(2-trifluoromethylphenyloxy)phenyl]methyl-2-amino-6-methylnicotinic acid amide (hereinafter referred to as the present compound 303).

### The present compound 303

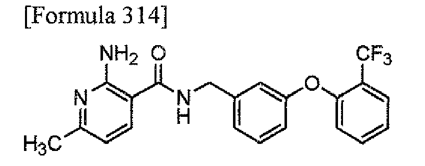

¹ H-NMR (DMSO-D₆) δ: 2.27 (3H, s), 4.43 (2H, d, J = 5.9 Hz), 6.45 (1H, d, J = 7.8 Hz), 6.91 (1H, d, J = 8.0 Hz), 6.98-7.09 (4H, m), 7.14 (1H, d, J = 7.3 Hz), 7.29-7.41 (2H, m), 7.60-7.68 (1H, m), 7.78 (1H, d, J = 7.6 Hz), 7.83 (1H, d, J = 7.8 Hz), 8.88 (1H, t, J = 5.6 Hz).

### Production example 283

0.40 g of triethylamine was added to a mixture solution of 0.20 g of 2-amino-6-methylnicotinic acid, 0.35 g of 3-(3-trifluaromethylphenyloxy)benylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.43 g of N-[3-(3-trifluoromethylphenyloxy)phenyl]methyl-2-amino-6-methylnicotinic acid amide (hereinafter referred to as the present compound 304).

### The present compound 304

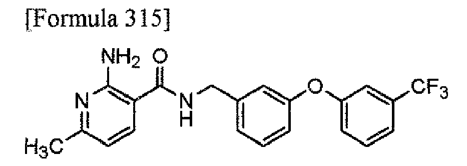

¹ H-NMR (DMSO-D₆) δ: 2.27 (3H, s), 4.43 (2H, d, J = 5.4 Hz), 6.45 (1H, d, J = 7.6 Hz), 6.97 (1H, d, J = 8.3 Hz), 7.02-7.09 (3H, m), 7.16 (1H, d, J = 7.6 Hz), 7.26-7.32 (2H, m), 7.37-7.43 (1H, m), 7.49 (1H, d, J = 7.3 Hz), 7.59-7.65 (1H, m), 7.84 (1H, d, J = 7.6 Hz), 8.89 (1H, s).

### Production example 284

0.40 g of triethylamine was added to a mixture solution of 0.20 g of 2-amino-6-methylnicotinic acid, 0.35 g of 3-(4-trifluoromethylphenyloxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.43 g of N-[3-(4-trifluoromethylphenyloxy)phenyl]methyl-2-amino-6-methylnicotinic acid amide (hereinafter referred to as the present compound 305).

### The present compound 305

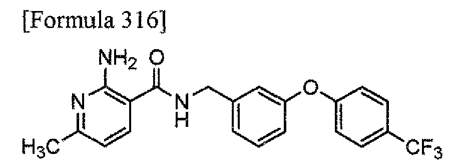

¹ H-NMR (DMSO-D₆) δ: 2.27 (3H, s), 4.44 (2H, d, J = 5.6 Hz), 6.45 (1H, d, J = 7.8 Hz), 7.00 (1H, d, J = 8.3 Hz), 7.04-7.07 (3H, m), 7.14 (2H, d, J = 8.5 Hz), 7.18 (1H, d, J = 7.6 Hz), 7.39-7.43 (1H, m), 7.73 (2H, d, J = 8.5 Hz), 7.84 (1H, d, J = 7.8 Hz), 8.89 (1H, t, J = 5.4 Hz).

### Production example 285

0.40 g of triethylamine was added to a mixture solution of 0.20 g of 2-amino-6-methylnicotinic acid, 0.30 g of 3-(2-methoxyphenytoxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.39 g of N-[3-(2-methoxyphenyloxy)phenyl]methyl-2-amino-6-methylnicotinic acid amide (hereinafter referred to as the present compound 306).

### The present compound 306

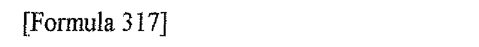

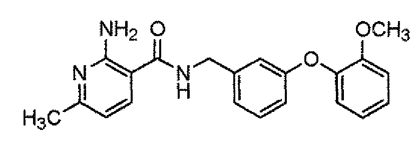

¹ H-NMR (DMSO-D₆) δ: 2.27 (3H, s), 3.71 (3H, s), 4.36 (2H, d, J = 5.9 Hz), 6.45 (1H, d, J = 7.8 Hz), 6.63-6.66 (1H, m), 6.79 (1H, s), 6.94-6.98 (2H, m), 7.00-7.06 (3H, m), 7.13-7.26 (3H, m), 7.81 (1H, d, J = 7.8 Hz), 8.85 (1H, t, J = 5.7 Hz).

### Production example 286

0.40 g of triethylamine was added to a mixture solution of 0.20 g of 2-amino-6-methylnicotinic acid, 0.30 g of 3-(3-methoxyphenyloxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.34 g of N-[3-(3-methoxyphenyloxy)phenyl]methyl-2-amino-6-methylnicotinic acid amide (hereinafter referred to as the present compound 307).

### The present compound 307

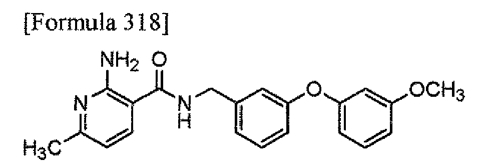

¹ H-NMR (DMSO-D₆) δ: 2.27 (3H, s), 3.72 (3H, s), 4.41 (2H, d, J = 5.6 Hz), 6.45 (1H, d, J = 7.8 Hz), 6.51-6.58 (2H, m), 6.71 (1H, d, J = 8.0 Hz), 6.88 (1H, d, J = 7.8 Hz), 6.96 (1H, s), 7.02-7.11 (3H, m), 7.24-7.30 (1H, m), 7.31-7.37 (1H, m), 7.83 (1H, d, J = 7.8 Hz), 8.88 (1H, t, J = 5.4 Hz).

### Production example 287

0.40 g of triethylamine was added to a mixture solution of 0.20 g of 2-amino-6-methylnicotinic acid, 0.37 g of 3-(3-trifluoromethoxyphenyloxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.42 g of N-[3-(3-trifluoromethoxyphenyloxy)phenyl]methyl-2-amino-6-methylnicotinic acid amide (hereinafter referred to as the present compound 308).

### The present compound 308

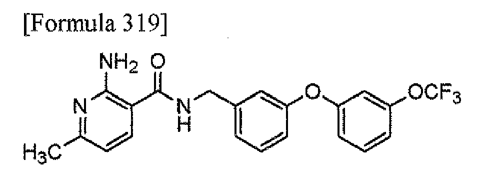

¹ H-NMR (DMSO-D₆) δ: 2.27 (3H, s), 4.43 (2H, d, J = 5.6 Hz), 6.45 (1H, d, J = 7.8 Hz), 6.94-7.17 (8H, m), 7.36-7.41 (1H, m), 7.47-7.53 (1H, m), 7.84 (1H, d, J = 7.8 Hz), 8.89 (1H, t, J = 5.6 Hz).

### Production example 288

0.40 g of triethylamine was added to a mixture solution of 0.20 g of 2-amino-6-methylnicotinic acid, 0.37 g of 3-(4-trifluoromethoxyphenyloxy)benzylamine and 5 ml of DMF. Thereafter, 0.64 g of a BOP reagent was added to the mixture, and the obtained mixture was then stirred at a room temperature for 24 hours. Thereafter, water was added to the reaction mixture, and the precipitated solid was then collected by filtration. The obtained solid was successively washed with a saturated sodium bicarbonate aqueous solution, water and a mixed solution of MTBE and hexane, and it was then dried, so as to obtain 0.43 g of N-[3-(4-trifluoromethoxyphenytoxy)phenyl]ntethyl-2-amino-6-methylnicotinic acid amide (hereinafter referred to as the present compound 309).

### The present compound 309

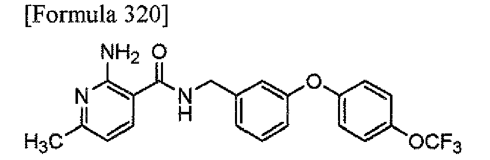

¹ H-NMR (DMSO-D₆) δ: 2.27 (3H, s), 4.42 (2H, d, J = 5.6 Hz), 6.45 (1H, d, J = 7.8 Hz), 6.92 (1H, d, J = 8.0 Hz), 7.00 (1H, s), 7.03-7.15 (5H, m), 7.33-7.42 (3H, m), 7.84 (1H d, J = 7.8 Hz), 8.88 (1H, t, J = 5.4 Hz).

### Production example 289

0.60 g of 4-fluorobenzonitrile, 0.30 g ofN-(4-hydroxyphenylmethyl)-2-aminonicotinic acid amide and 0.60 g of cesium carbonate were added to 8 ml of DMF, and the mixture was then heated to reflux for 2 hours. Thereafter, the reaction mixture was left to cool to around room temperature. Thereafter, diluted hydrochloric acid was added to the reaction mixture, and the mixture was then extracted with ethyl acetate. The organic layer was washed with a saturated saline solution, and it was then dried over magnesium sulfate. The resultant was concentrated by centrifugation under reduced pressure. The obtained residue was subjected to silica gel column chromatography, so as to obtain 0.10 g of N-[4-(4-cyanophenyloxy)phenyl]methyl-2-aminonicotinic acid amide (hereinafter referred to as the present compound 310).

### The present compound 310

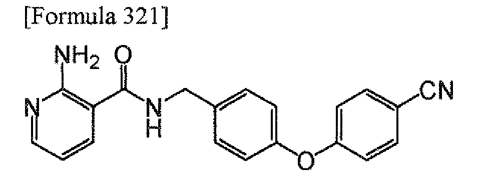

¹ H-NMR (CDCl₃) δ: 4.62 (2H, d, J = 5.9 Hz), 6.37 (3H, br s), 6.60 (1H, dd, J = 7.6, 4.9 Hz), 7.01-7.06 (4H, m), 7.38-7.40 (2H, m), 7.59-7.62 (3H, m), 8.18 (1H, dd, J = 4.9, 1.7 Hz).

### Production example 290

1.0 g of 2-fluorobenzonitrile, 0.50 g of N-(4-hydroxyphenylmethyl)-2_ aminonicotinic acid amide and 1.0 g of cesium carbonate were added to 10 ml of DMF, and the mixture was then stirred at a room temperature for 4 hours. Thereafter, diluted hydrochloric acid was added to the reaction mixture, and the mixture was then extracted with ethyl acetate. The organic layer was washed with a saturated saline solution, and it was then dried over magnesium sulfate. The resultant was concentrated by centrifugation under reduced pressure. The obtained residue was subjected to silica gel column chromatography, so as to obtain 0.47 g of N-[4-(2-cyanophenyloxy)phenyl]methyl-2-aminonicotimc acid amide (hereinafter referred to as the present compound 311).

### The present compound 311

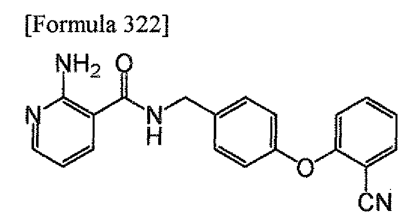

¹ H-NMR (CDCl₃) δ: 4.60 (2H, d, J = 5.6 Hz), 6.38 (2H, br s), 6.46 (1H, br s), 6.59 (1H, dd, J = 7.6, 4.9 Hz), 6.88 (1H, d, J = 8.5 Hz), 7.04-7.06 (2H, m), 7.14-7.16 (1H, m), 7.36-7.37 (2H, m), 7.46-7.49 (1H, m), 7.64-7.66 (2H, m), 8.16 (1H, dd, J = 4.9,1.7 Hz).

### Production example 291

1.0 g of 3-fluorobenzonitrile, 0.50 g of N-(4-hydroxyphenylmethyl)-2-aminonicotinic acid amide and 1.0 g of cesium carbonate were added to 10 ml of DMF, and the mixture was then stirred at a room temperature for 4 hours. Thereafter, diluted hydrochloric acid was added to the reaction mixture, and the mixture was then extracted with ethyl acetate. The organic layer was washed with a saturated saline solution, and it was then dried over magnesium sulfate. The resultant was concentrated by centrifugation under reduced pressure. The obtained residue was subjected to silica gel column chromatography, so as to obtain 0.41 g of N-[4-(3-cyanophenyloxy)phenyl]methyl-2-aminonicotinic acid amide (hereinafter referred to as the present compound 312).

### The present compound 312

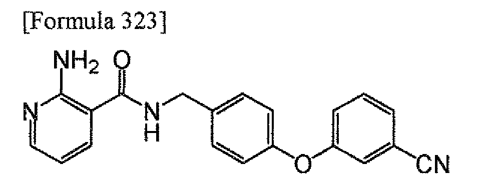

¹ H-NMR (CDCl₃ ) δ: 4.61 (2H, d, J = 5.6 Hz), 6.38 (3H, br s), 6.59 (1H, dd, J = 7.8, 4.8 Hz), 7.01-7.03 (2H, m), 7.21-7.24 (3H, m), 7.35-7.44 (3H, m), 7.63 (1H, dd, J = 7.8,1.8 Hz), 8.17 (1H, dd, J = 4.8, 1.8 Hz).

### Production example 292

A mixture of 0.25 g of 2-aminonicotinic acid, 0.20 g of 1-hydroxybenzotriazole, 0.43 g of WSC, 0.36 g of 4-(2-chloro-4-trifluoromethylphenyloxy)benzylamine and 2 ml of DMF was stirred at 60°C for 3 hours. Thereafter, the reaction mixture was left to cool to around room temperature. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.21 g of N-[4-(2-chloro-4-trifluoromethylphenyloxy)phenyl]methyl-2-aminonicotinic acid amide (hereinafter referred to as the present compound 313).

### The present compound 313

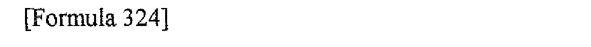

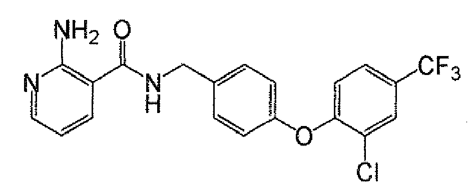

¹ H-NMR (CDCl₃ ) δ: 4.60 (2H, d, J = 5.8 Hz), 6.37 (3H, br s), 6.59 (1H, dd, J = 7.6, 4.8 Hz), 6.98-7.03 (3H, m), 7.35-7.37 (3H, m), 7.57-7.61 (2H, m), 8.17 (1H, dd, J = 4.8, 1.8 Hz).

### Production example 293

A mixture of 0.25 g of 2-aminonicotinic acid, 0.20 g of 1-hydroxybenzotriazale, 0.43 g of WSC, 0.26 g of 4-(3-bromophenyloxy)benzylamine and 2 ml of DMF was stirred at 60°C for 3 hours. Thereafter, the reaction mixture was left to cool to around room temperature. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.11 g of N-[4-(3-bromophenyloxy)phenyl]methyl-2-aminonicotinic acid amide (hereinafter referred to as the present compound 314).

### The present compound 314

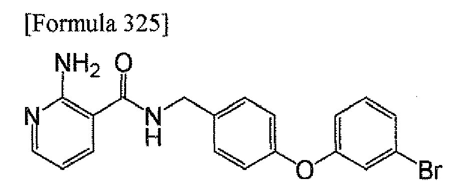

¹ H-NMR (CDCl₃ ) δ: 4.58 (2H, d, J = 6.3 Hz), 6.35-6.38 (3H, br m), 6.57-6.61 (1H, m), 6.95-7.02 (3H, m), 7.10-7.13 (1H, m), 7.31-7.35 (4H, m), 7.59-7.62 (1H, m), 8.16 (1H, dd, J = 4.8, 1.8 Hz).

### Production example 294

A mixture of 0.25 g of 2-aminonicotinic acid, 0.20 g of 1-hydroxybenzomazole, 0.43 g of WSC, 0.20 g of 4-(2-bromophenyloxy)benzylamine and 2 ml of DMF was stirred at 60°C for 3 hours. Thereafter, the reaction mixture was left to cool to around room temperature. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.17 g of N-[4-(2-bromophenyloxy)phenyl]methyl-2-aminonicotinic acid amide (hereinafter referred to as the present compound 315).

### The present compound 315

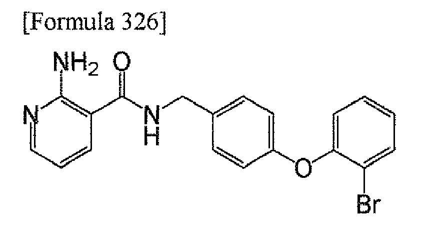

¹ H-NMR (CDCl₃ ) δ: 4.57 (2H, d, J = 5.6 Hz), 6.31-6.37 (3H, br m), 6.58 (1H, dd, J = 7.8, 4.8 Hz), 6.98-7.02 (3H, m), 7.11 (1H, t, J = 7.5 Hz), 7.29-7.36 (4H, m), 7.60 (1H, dd, J = 7.8, 1.8 Hz), 8.16 (1H, dd, J = 4.8, 1.8 Hz).

### Production example 295

A mixture of 0.25 g of 2-aminonicotinic acid, 0.20 g of 1-hydroxybenzotriazole, 0.43 g of WSC, 0.39 g of 4-(4-pentylphenyloxy)benzylamine and 2 ml of DMF was stirred at 60°C for 3 hours. Thereafter, the reaction mixture was left to cool to around room temperature. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.19 g of N-[4-(4-pentylphenyloxy)phenyl]methyl-2-aminonicotinic acid amide (hereinafter referred to as the present compound 316).

### The present compound 316

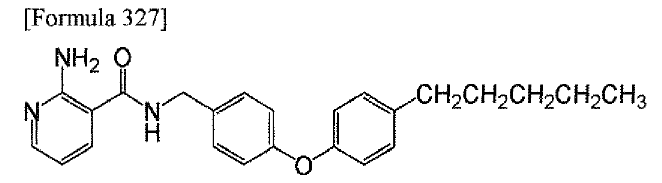

¹ H-NMR (CDCl₃ ) δ: 0.90 (3H, t, J = 6.9 Hz), 1.32-1.33 (4H, m), 1.60-1.66 (2H, m), 2.58 (2H, t, J = 7.8 Hz), 4.56 (2H, d, J = 5.6 Hz), 6.30 (1H, br s), 6.36 (2H, br s), 6.58 (1H, dd, J = 7.8, 4.8 Hz), 6.92-6.97 (4H, m), 7.14 (2H, d, J = 8.6 Hz), 7.27-7.29 (2H, m), 7.59 (1H, dd, J = 7.8, 1.8 Hz), 8.16 (1H, dd, J = 4.8, 1.8 Hz).

### Production example 296

A mixture of 0.25 g of 2-aminonicotinic acid, 0.20 g of 1-hydroxybenzotriazole, 0.43 g of WSC, 0.39 g of 4-(4-chloro-3,5-dimethylphenyloxy)benzylamine and 2 ml of DMF was stirred at 60°C for 3 hours. Thereafter, the reaction mixture was left to cool to around room temperature. Thereafter, a sodium bicarbonate aqueous solution was added to the reaction mixture, and it was then extracted with ethyl acetate twice. The organic layer was washed with a saturated saline solution, and it was then dried over magnesium sulfate, followed by concentration under reduced pressure. The obtained residue was subjected to silica gel column chromatography, so as to obtain 0.28 g of N-[4-(4-chloro-3,5-dimethylphenyloxy)phenyl]methyl-2-aminonicotinic acid amide (hereinafter referred to as the present compound 317).

### The present compound 317

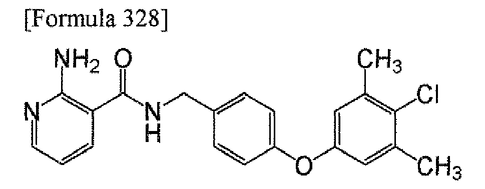

¹ H-NMR (CDCl₃ ) δ: 2.34 (6H, s), 4.58 (2H, d, J = 5.6 Hz), 6.30 (1H, br s), 6.37 (2H, br s), 6.59 (1H, dd, J = 7.6, 4.8 Hz), 6.74 (2H, s), 6.97 (2H, d, J = 8.6 Hz), 7.29-7.32 (2H, m), 7.60 (1H, dd, J = 7.6, 1.6 Hz), 8.17 (1H, dd, J = 4.8, 1.8 Hz).

### Production example 297

0.40 g of triethylamine was added to a mixture solution of 0.20 g of 2-amino-6-methylnicotinic acid, 0.33 g of 4-(2-fluorophenyloxy)benzylamine hydroxide and 3 ml of DMF. Thereafter, 0.64 g of a BOP reagent was added to the mixture, and the obtained mixture was then stirred at a room temperature for 6 hours. Thereafter, water was added to the reaction mixture, and the precipitated solid was then collected by filtration. The obtained solid was washed with a saturated sodium bicarbonate aqueous solution, water and a mixed solution of MTBE and hexane, and it was then dried, so as to obtain 0.36 g of N-[4-(2-fluorophenyloxy)phenyl]methyl-2-amino-6-methylnicotinic acid amide (hereinafter referred to as the present compound 318). The present compound 318 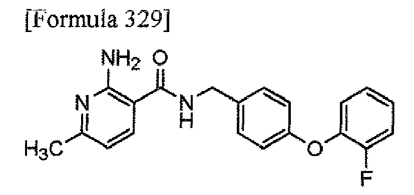 ¹ H-NMR (DMSO-D₆ ) δ: 2.27 (3H, s), 4.39 (2H, d, J = 5.9 Hz), 6.45 (1H, d, J = 8.0 Hz), 6.94 (2H, d, J = 8.5 Hz), 7.08 (2H, s), 7.10-7.17 (1H, m), 7.18-7.27 (2H, m), 7.31 (2H, d, J = 8.5 Hz), 7.34-7.41 (1H, m), 7.87 (1H, d, J = 7.8 Hz), 8.86 (1H, t, J = 5.4 Hz).

### Production example 298

0.40 g of triethylamine was added to a mixture solution of 0.20 g of 2-amino-6-methylnicotinic acid, 0.29 g of 4-(3-fluorophenyloxy)benzylamine and 3 ml of DMF. Thereafter, 0.64 g of a BOP reagent was added to the mixture, and the obtained mixture was then stirred at a room temperature for 6 hours. Thereafter, water was added to the reaction mixture, and the precipitated solid was then collected by filtration. The obtained solid was washed with a saturated sodium bicarbonate aqueous solution, water and a mixed solution of MTBE and hexane, and it was then dried, so as to obtain 0.40 g of N-[4-(3-fluorophenyloxy)phenyl]methyl-2-amino-6-methylnicotinic acid amide (hereinafter referred to as the present compound 319).

### The present compound 319

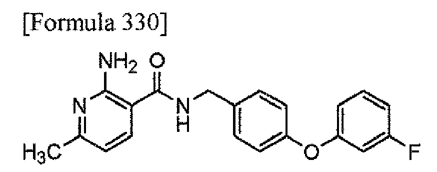

¹ H-NMR (DMSO-D₆ ) δ: 2.27 (3H, s), 4.42 (2H, d, J = 5.9 Hz), 6.46 (1H, d, J = 7.8 Hz), 6.77-6.85 (2H, m), 6.92-6.97 (1H, m), 7.04 (2H, d, J = 8.3 Hz), 7.09 (2H, s), 7.36 (2H, d, J = 8.3 Hz), 7.38-7.42 (1H, m), 7.88 (1H, d, J = 7.8 Hz), 8.89 (1H, t, J = 5.7 Hz).

### Production example 299

0.40 g of triethylamine was added to a mixture solution of 0.20 g of 2-amino-6-methylnicotinic acid, 0.35 g of 4-(3-trifluoromethylphenyloxy)benzylamine and 3 ml of DMF. Thereafter, 0.64 g of a BOP reagent was added to the mixture, and the obtained mixture was then stirred at a room temperature for 3 hours. Thereafter, water was added to the reaction mixture, and the precipitated solid was then collected by filtration. The obtained solid was washed with a saturated sodium bicarbonate aqueous solution, water and a mixed solution of MTBE and hexane, and it was then dried, so as to obtain 0.37 g of N-[4-(3-trifluoromethylphenyloxy)phenyl]methyl-2-amino-6-methylnicotinic acid amide (hereinafter referred to as the present compound 320).

### The present compound 320

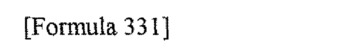

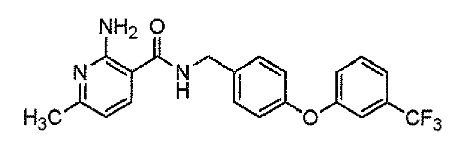

¹ H-NMR (DMSO-D₆ ) δ: 2.28 (3H, s), 4.44 (2H, d, = 5.6 Hz), 6.46 (1H, d, J = 8.0 Hz), 7.05-7.13 (4H, m), 7.27 (2H, s), 7.38 (2H, d, J = 8.2 Hz), 7.47 (1H, d, J = 7.5 Hz), 7.58-7.63 (1H, m), 7.88 (1H, d, J = 8.0 Hz), 8.90 (1H, t, J = 5.4 Hz).

### Production example 300

0.40 g of triethylamine was added to a mixture solution of 0.20 g of 2-amino-6-methylnicotinic acid, 0.30 g of 4-(4-methoxyphenyloxy)benzylamine and 3 ml of DMF. Thereafter, 0.64 g of a BOP reagent was added to the mixture, and the obtained mixture was then stirred at a room temperature for 3 hours. Thereafter, water was added to the reaction mixture, and the precipitated solid was then collected by filtration. The obtained solid was washed with a saturated sodium bicarbonate aqueous solution, water and a mixed solution of MTBE and hexane, and it was then dried, so as to obtain 0.32 g of N-[4-(4-methoxyphenyloxy)phenyl]methyl-2-amino-6-methylnicotinic acid amide (hereinafter referred to as the present compound 321).

### The present compound 321

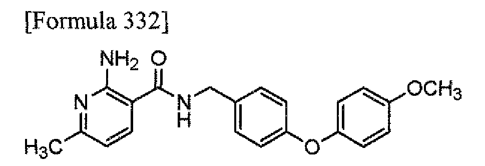

¹ H-NMR (DMSO-D₆ ) δ: 2.27 (3H, s), 3.74 (3H, s), 4.38 (2H, d, J = 5.6 Hz), 6.45 (1H, d, J = 7.7 Hz), 6.88 (2H, d, J = 8.2 Hz), 6.92-7.00 (4H, m), 7.08 (2H, s), 7.28 (2H, d, J = 8.2 Hz), 7.86 (1H, d, J = 7.7 Hz), 8.85 (1H, t, J = 5.3 Hz).

### Production example 301

0.40 g of triethylamine was added to a mixture solution of 0.20 g of 2-amino-6-methylnicotinic acid, 0.37 g of 4-(3-trifluoromethoxyphenyloxy)benzylamine and 3 ml of DMF. Thereafter, 0.64 g of a BOP reagent was added to the mixture, and the obtained mixture was then stirred at a room temperature for 3 hours. Thereafter, water was added to the reaction mixture, and the precipitated solid was then collected by filtration. The obtained solid was washed with a saturated sodium bicarbonate aqueous solution, water and a mixed solution of MTBE and hexane, and it was then dried, so as to obtain 0.45 g of N-[4-(3-trifluoromethoxyphenyloxy)phenyl]methyl-2-amino-6-methylnicotinic acid amide (hereinafter referred to as the present compound 322).

### The present compound 322

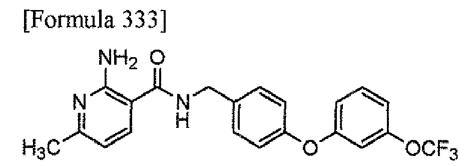

¹ H-NMR (DMSO-D₆ ) δ: 2.28 (3H, s), 4.43 (2H, d, J = 5.8 Hz), 6.46 (1H, d, J = 7.7 Hz), 6.95-6.99 (2H, m), 7.04-7.13 (5H, m), 7.37 (2H, d, J = 8.2 Hz), 7.46-7.51 (1H, m), 7.88 (1H, d, J = 7.7 Hz), 8.89 (1H, t, J = 5.6 Hz).

### Production example 302

0.40 g of triethylamine was added to a mixture solution of 0.20 g of 2-amino-6-methylnicotinic acid, 0.42 g of 4-(4-trifluoromethoxyphenyloxy)benzylamine hydrochloride and 3 ml of DMF. Thereafter, 0.64 g of a BOP reagent was added to the mixture, and the obtained mixture was then stirred at a room temperature for 3 hours. Thereafter, ice water was added to the reaction mixture, and the mixture was then extracted with ethyl acetate. The organic layer was successively washed with a saturated sodium bicarbonate aqueous solution and a saturated saline solution, and it was then dried over magnesium sulfate, followed by concentration under reduced pressure. The precipitated solid was dried, so as to obtain 0.38 g of -[4-(4-trifluoromethoxyphenyloxy)phenyl]methyl-2-amino-6-methylnicotinic acid amide (hereinafter referred to as the present compound 323).

### The present compound 323

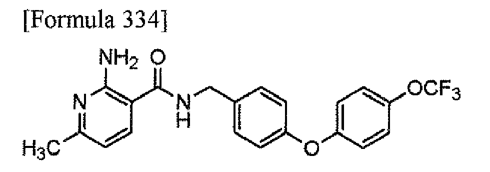

¹ H-NMR (DMSO-D₆ ) δ: 2.28 (3H, s), 4.42 (2H, d, J = 5.8 Hz), 6.46 (1H, d, J = 7.7 Hz), 7.02-7.14 (6H, m), 7.33-7.43 (4H, m), 7.88 (1H, d, J = 7.7 Hz), 8.89 (1H, t, J = 5.6 Hz).

### Production example 303

3.00 g of 2-chloro-6-methoxymethylnicotinic acid and 45 ml of 28% aqueous ammonia were added to an autoclave, and they were then stirred at 180°C under pressure for 18 hours. Thereafter, the reaction mixture was left to cool to around room temperature, and it was then concentrated under reduced pressure, so as to obtain 0.52 g of crude 2-amino-6-methoxymethylnicotinic acid.

0.23 g of the above crude 2-amino-6-methoxymethylnicotinic acid, 0.23 g of 4-(3-fluorophenyloxy)benzylamine and 0.39 ml of triethylamine were added to 4 ml of DMF. Thereafter, 0.51 g of a BOP reagent was added to the mixture, and the obtained mixture was then stirred at 40°C for 2 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.26 g of N-[4-(3-fluorophenyloxy)phenyl]methyl-2-amino-6-methoxymethylnicotinic acid amide (hereinafter referred to as the present compound 324).

### The present compound 324

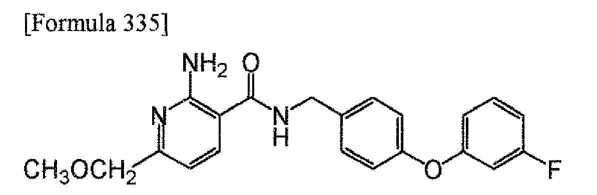

¹ H-NMR (CDCl₃ ) δ: 3.46 (3H, s), 4.40 (2H, s), 4.59 (2H, d, J = 5.6 Hz), 6.28 (1H, br s), 6.41 (2H, br s), 6.72-6.77 (4H, m), 7.02 (2H, d, J = 8.2 Hz), 7.27-7.33 (3H, m), 7.62 (1H, d, J = 7.7 Hz).

### Production example 304

0.23 g of the crude 2-amino-6-methoxymethylnicotinic acid which is the production intermediate of Production example 303, 0.30 g of 4-(3-trifluoromethoxyphenyloxy)benzylamine and 0.39 ml of triethylamine were added to 4 ml of DMF. Thereafter, 0.51 g of a BOP reagent was added to the mixture, and the obtained mixture was then stirred at 40°C for 3 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.33 g of N-[4-(3-trifluoromethylphenyloxy)phenyl]methyl-2-amino-6-methoxymethylnicotinic acid amide (hereinafter referred to as the present compound 325).

### The present compound 325

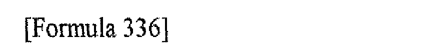

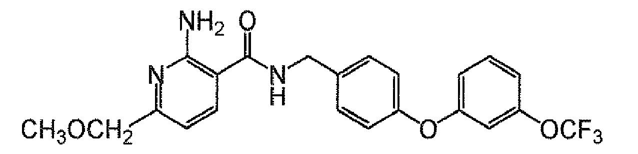

¹ H-NMP (CDCl₃ ) δ: 3.46 (3H, s), 4.40 (2H, s), 4.60 (2H, d, J = 5.6 Hz), 6.30 (1H, br s), 6.41 (2H, br s), 6.71 (1H, d, J = 8.0 Hz), 6.84-6.87 (2H, m), 6.91-6.96 (2H, m), 7.03 (2H, d, J = 8.5 Hz), 7.31-7.36 (2H, m), 7.63 (1H, d, J = 8.0 Hz).

### Production example 305

0.22 g of the crude 2-amino-6-methoxymethylnicotinic acid which is the production intermediate of Production example 303, 0.33 g of 4-(4-trifluoromethoxyphenyloxy)benzylamine and 0.37 ml of triethylamine were added to 4 ml of DMF. Thereafter, 0.50 g of a BOP reagent was added to the mixture, and the obtained mixture was then stirred at 40°C for 3 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.34 g of N-[4-(4-trifluoromethoxyphenyloxy)phenyl]methyl-2-amino-6-methoxymethylnicotinic acid amide (hereinafter referred to as the present compound 326).

### The present compound 326

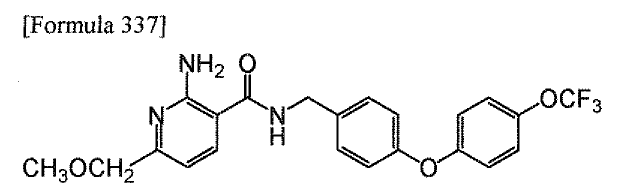

¹ H-NMR (CDCl₃ ) δ: 3.46 (3H, s), 4.40 (2H, s), 4.58 (2H, d, J = 5.8 Hz), 6.71 (1H, d, J = 8.0 Hz), 7.00-7.01 (4H, m), 7.18 (2H, d, J = 9.2 Hz), 7.33 (2H, d, = 8.2 Hz), 7.62 (1H, d, J = 8.0 Hz).

### Production example 306

0.23 g of the crude 2-amino-6-methoxymethylnicotinic acid which is the production intermediate of Production example 303, 0.26 g of 4-(2-fluorophenyloxy)benzylamine and 0.38 ml of triethylamine were added to 4 ml of DMF. Thereafter, 0.50 g of a BOP reagent was added to the mixture, and the obtained mixture was then stirred at 40°C for 5 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.30 g of N-[4-(2-fluorophenyloxy)phenyl]methyl-2-amino-6-methoxymethylnicotinic acid amide (hereinafter referred to as the present compound 327).

### The present compound 327

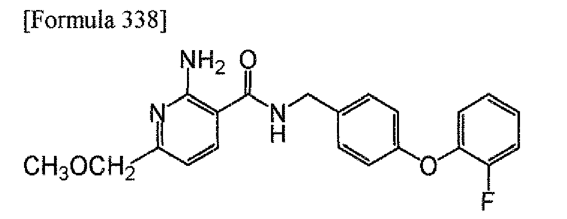

¹ H-NMR (CDCl₃ ) δ: 3.45 (3H, s), 4.40 (2H, s), 4.56 (2H, d, J = 5.6 Hz), 6.25 (1H, br s), 6.40 (2H, br s), 6.70 (1H, d, J = 8.0 Hz), 6.96 (2H, d, J = 8.7 Hz), 7.45-7.21 (3H, m), 7.27-7.30 (3H, m), 7.60 (1H, d, J = 8.0 Hz).

### Production example 307

0.23 g of the crude 2-amino-6-methoxymethylnicotinic acid which is the production intermediate of Production example 303, 0.28 g of 4-(3-trifluoromethylphenyloxy)benzylamine and 0.38 ml of triethylamine were added to 4 ml of DMF. Thereafter, 0.51 g of a BOP reagent was added to the mixture, and the obtained mixture was then stirred at 0°C for 1 hour 30 minutes. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.29 g of N-[4-(3-trifluoromethylphenyloxy)phenyl]methyl-2-amino-6-methoxymethylnicotinic acid amide (hereinafter referred to as the present compound 328).

### The present compound 328

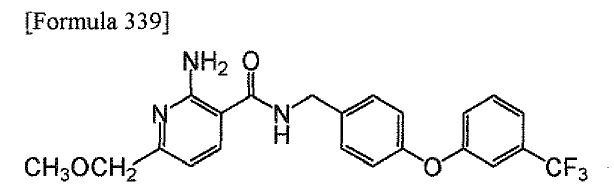

¹ H-NMR (CDCl₃) δ: 3.46 (3H, s), 4.40 (2H, s), 4.60 (2H, d, J = 5.6 Hz), 6.31 (1H, br s), 6.41 (2H, br s), 6.71 (1H, d, J = 7.7 Hz), 7.02 (2H, d, J = 7.5 Hz), 7.17 (1H, d, J = 8.0 Hz), 7.24-7.26
(1H, m), 7.31-7.36 (3H, m), 7.44 (1H, t, J = 7.6 Hz), 7.63 (1H, d, J = 8.0 Hz).

### Production example 308

0.24 g of the crude 2-amino-6-methoxymethylnicotinic acid which is the production intermediate of Production example 303, 0.25 g of 4-(3-methoxyphenyloxy)benzylamine and 0.40 ml of triethylamine were added to 4 ml of DMF. Thereafter, 0.53 g of a BOP reagent was added to the mixture, and the obtained mixture was then stirred at 40°C for 45 minutes. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.10 g of N-[4-(3-methoxyphenyloxy)phenyl]methyl-2-amino-6-methoxymethylnicotinic acid amide (hereinafter referred to as the present compound 329).

### The present compound 329

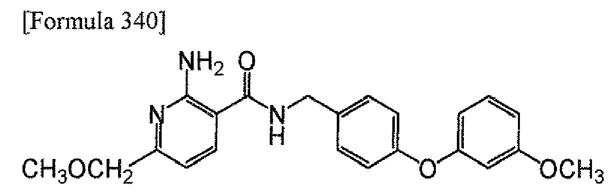

¹ H-NMR (CDCl₃ ) δ: 3.46 (3H, s), 3.78 (3H, s), 4.40 (2H, s), 4.57 (2H, d, J = 5.3 Hz), 6.27 (1H, s), 6.40 (2H, br s), 6.58 (2H, d, J = 7.0 Hz), 6.65-6.71 (2H, m), 7.00-7.02 (2H, m), 7.21-7.32 (3H, m), 7.61 (1H, d, J = 7.7 Hz).

### Production example 309

0.23 g of the crude 2-amino-6-methoxymethylnicotinic acid which is the production intermediate of Production example 303, 0.25 g of 4-(4-methoxyphenyloxy)benzylamine and 0.39 ml of triethylamine were added to 4 ml of DMF. Thereafter, 0.52 g of a BOP reagent was added to the mixture, and the obtained mixture was then stirred at 40°C for 45 minutes. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.33 g of N-[4-(4-methoxyphenyloxy)phenyl]methyl-2-amino-6-methoxymethylnicotinic acid amide (hereinafter referred to as the present compound 330).

### The present compound 330

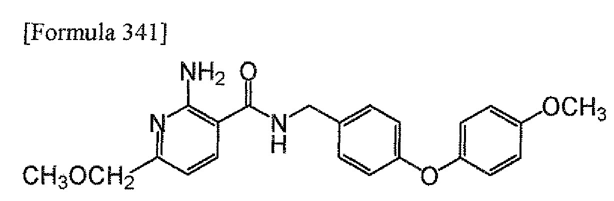

¹ H-NMR (CDCl₃ ) δ: 3.45 (3H, s), 3.81 (3H, s), 4.40 (2H, d, J = 5.8 Hz), 4.55 (2H, d, J = 5.6 Hz), 6.23 (1H, br s), 6.40 (2H, br s), 6.69 (1H, d, J = 8.0 Hz), 6.87-6.99 (7H, m), 7.27-7.28 (1H, m), 7.59 (1H, d, J = 8.0 Hz).

### Production example 310

0.22 g of the crude 2-amino-6-methoxymethylnicotinic acid which is the production intermediate of Production example 303, 0.22 g of 4-(2-methylphenyloxy)benzylamine and 0.37 ml of triethylamine were added to 4 ml of DMF. Thereafter, 0.49 g of a BOP reagent was added to the mixture, and the obtained mixture was then stirred at 40°C for 2 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.29 g of N-[4-(2-methylphenyloxy)phonyl]methyl-2-amino-6-methoxymethylnicotinic acid amide (hereinafter referred to as the present compound 331).

### The present compound 331

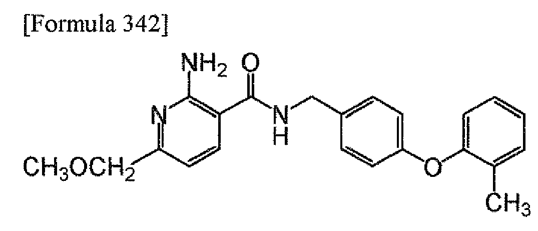

¹ H-NMR (CDCl₃ ) δ: 2.23 (3H, s), 3.45 (3H, s), 4.39 (2H, s), 4.55 (2H, d, J = 5.6 Hz), 6.25 (1H, br s), 6.40 (2H, br s), 6.69 (1H, d, J = 8.0 Hz), 6.88-6.91 (3H, m), 7,08 (1H, t, J = 7.1 Hz), 7.17 (1H, t, J = 7.6 Hz), 7.26-7.27 (3H, m), 7.60 (1H, d, J = 8.0 Hz).

### Production example 311

0.23 g of the crude 2-amino-6-methoxymethylnicotinic acid which is the production intermediate of Production example 303, 0.22 g of 4-(3-methylphenyloxy)benzylamine and 0.38 ml of triethylamine were added to 4 ml of DMF. Thereafter, 0.50 g of a BOP reagent was added to the mixture, and the obtained mixture was then stirred at 40°C for 2 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.27 g of N-[4-(3-mothylphenyloxy)phenyl]methyl-2-amino-6-methoxymethylnicotinic acid amide (hereinafter referred to as the present compound 332).

### The present compound 332

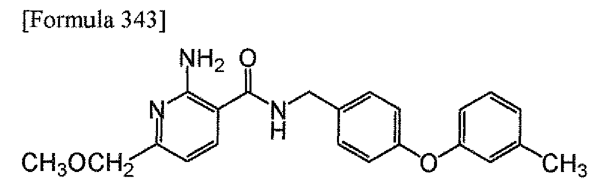

¹ H-NMR (CDCl₃ ) δ: 2.33 (3H, s), 3.46 (3H, s), 4.39 (2H, s), 4.57 (2H, d, J = 5.8 Hz), 6.28 (1H, br s), 6.39 (2H, br s), 6.70 (1H, d, J = 8.0 Hz), 6.81-6.82 (2H, m), 6.92-6.96 (3H, m), 7.45-7.07 (1H, m), 7.23-7.29 (2H, m), 7.60 (1H, d, J = 8.0 Hz).

### Production example 312

0.22 g of the crude 2-amino-6-methoxymethylnicotinic acid which is the production intermediate of Production example 303, 0.25 g of 4-(4-methylphenyloxy)benzylamine and 0.36 ml of triethylamine were added to 4 ml of DMF. Thereafter, 0.48 g of a BOP reagent was added to the mixture, and the obtained mixture was then stirred at 40°C for 4 hours. Thereafter, the reaction mixture was left to cool to around room temperature. Thereafter, a saturated sodium bicarbonate aqueous solution was added to the reaction mixture, and the precipitated solid was then filtrated. The obtained solid was washed with a mixed solution of MTBE and hexane, so as to obtain 0.29 g of N-[4-(4-methylphenyloxy)phenyl]methyl-2-amino-6-methoxymethylnicotinic acid amide (hereinafter referred to as the present compound 333).

### The present compound 333

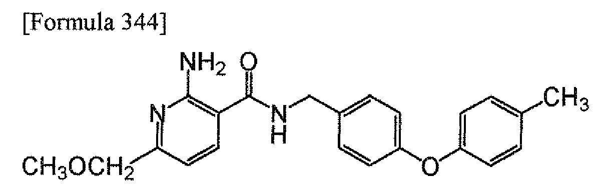

¹ H-NMR (CDCl₃ ) δ: 2.33 (3H, s), 3.45 (3H, s), 4.39 (2H, s), 4.55 (2H, d, J = 5.6 Hz), 6.43 (2H, br s), 6.69 (1H, d, J = 8.0 Hz), 6.76 (1H, br s), 6.90-6.95 (4H, m), 7.14 (2H, d, J = 8.0 Hz), 7.26-7.29 (2H, m), 7.68 (1H, d, J = 8.0 Hz).

### Production example 313

0.39 g of triethylamine was added to a mixture solution of 0.20 g of 2-amino-6-fluoronicotinic acid, 0.33 g of 4-(2-fluorophenyloxy)benzylamine hydrochloride and 3 ml of DMF. Thereafter, 0.62 g of a BOP reagent was added to the mixture, and the obtained mixture was then stirred at a room temperature for 5 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.25 g of N-[4-(2-fluorophenyloxy)phenyl]methyl-2-amino-6-fluoronicotinic acid amide (hereinafter referred to as the present compound 334).

### The present compound 334

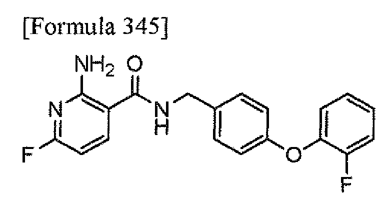

¹ H-NMR (DMSO-D₆) δ: 4.40 (2H, d, J = 5.8 Hz), 6.26 (1H, dd, J = 8.3, 2.8 Hz), 6.94 (2H, d, J = 8.5 Hz), 7.11-7.16 (1H, m), 7.19-7.25 (2H, m), 7.32 (2H, d, J = 8.2 Hz), 7.35-7.41 (1H, m), 7.56 (2H, s), 8.12-8.18 (1H, m), 8.94 (1H, t, J = 5.8 Hz).

### Production example 314

0.39 g of triethylamine was added to a mixture solution of 0.20 g of 2-amino-6-fluoronicotinic acid, 0.28 g of 4-(3-fluorophenyloxy)benzylamine and 3 ml of DMF. Thereafter, 0.62 g of a BOP reagent was added to the mixture, and the obtained mixture was then stirred at a room temperature for 5 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. Hexane and MTBE were added to the obtained residue, and the precipitated solid was collected by filtration, so as to obtain 0.30 g of N-[4-(3-fluorophenyloxy)phenyl]methyl-2-amino-6-fluoronicotinic acid amide (hereinafter referred to as the present compound 335).

### The present compound 335

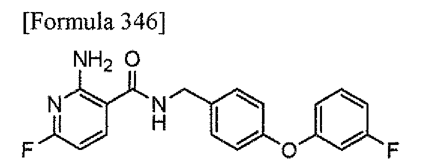

¹ H-NMR (DMSO-D₆ ) δ: 4.44 (2H, d, J = 5.8 Hz), 6.27 (1H, dd, J = 8.2, 2.4 Hz), 6.77-6.85 (2H, m), 6.93-6.98 (1H, m), 7.05 (2H, d, J = 8.5 Hz), 7.34-7.43 (3H, m), 7.57 (2H, s), 8.14-8.19 (1H, m), 8.97 (1H, t, J = 5.7 Hz).

### Production example 315

0.39 g of triethylamine was added to a mixture solution of 0.20 g of 2-amino-6-fluoronicotinic acid, 0.36 g of 4-(3-trifluoromethoxyphenyloxy)benzylamine and 3 ml of DMF. Thereafter, 0.62 g of a BOP reagent was added to the mixture, and the obtained mixture was then stirred at a room temperature for 5 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.27 g of N-[4-(3-trifluoromethoxyphenyloxy)phenyl]methyl-2-amino-6-fluoronicotinic acid amide (hereinafter referred to as the present compound 336).

### The present compound 336

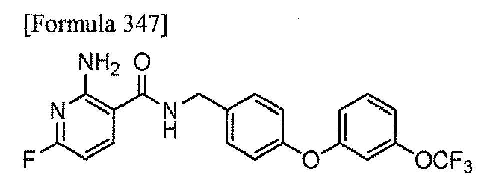

¹ H-NMR (DMSO-D₆ ) δ: 4.44 (2H, d, J = 5.8 Hz), 6.27 (1H, dd, J = 8.3, 2.8 Hz), 6.95-7.00 (2H, m), 7.05-7.13 (3H, m), 7.38 (2H, d, J = 8.7 Hz), 7.47-7.52 (1H, m), 7.58 (2H, s), 8.15-8.19 (1H, m), 8.97 (1H, t, J = 5.8 Hz).

### Production example 316

0.39 g of triethylamine was added to a mixture solution of 0.20 g of 2-amino-6-fluoronicotinic acid, 0.41 g of 4-(4-trifluoromethoxyphenyloxy)benzylamine hydrochloride and 3 ml of DMF. Thereafter, 0.62 g of a BOP reagent was added to the mixture, and the obtained mixture was then stirred at a room temperature for 5 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.16 g of N-[4-(4-trifluoromethoxyphenyloxy)phenyl]methyl-2-amino-6-fluoronicotinic acid amide (hereinafter referred to as the present compound 337).

### The present compound 337

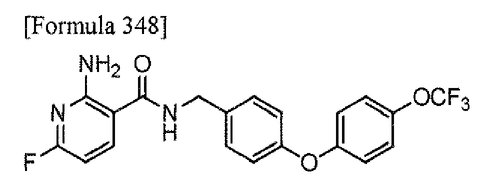

¹ H-NMR (DMSO-D₆ ) δ: 4.43 (2H, d, J = 5.6 Hz), 6.27 (1H, dd, J = 8.5, 2.4 Hz), 7.02-7.09 (4H, m), 7.34-7.40 (4H, m), 7.57 (2H, s), 8.14-8.19 (1H, m), 8.97 (1H, t, J = 5.8 Hz).

### Production example 317

0.39 g of triethylamine was added to a mixture solution of 0.20 g of 2-amino-6-fluoronicotinic acid, 0.34 g of 4-(3-trifluoromethylphenyloxy)benzylamine and 3 ml of DMF. Thereafter, 0.62 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.25 g of N-[4-(3-trifluoromethylphenyloxy)phenyl]methyl-2-amino-6-fluoronicotinic acid amide (hereinafter referred to as the present compound 338).

### The present compound 338

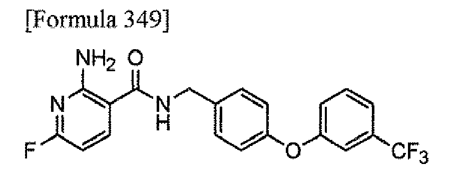

¹ H-NMR (DMSO-D₆ ) δ: 4.44 (2H, d, J = 5.9 Hz), 6.27 (1H, dd, J = 8.3, 2.7 Hz), 7.08 (2H, d, J = 8.5 Hz), 7.24-7.28 (2H, m), 7.38 (2H, d, J = 8.5 Hz), 7.47 (1H, d, J = 8.0 Hz), 7.55-7.63 (3H, m), 8.14-8.19 (1H, m), 8.97 (1H, t, J = 5.9 Hz).

### Production example 318

0.39 g of triethylamine was added to a mixture solution of 0.20 g of 2-amino-6-fluoronicotinic acid, 0.29 g of 4-(3-methoxyphenyloxy)benzylamine and 3 ml of DMF. Thereafter, 0.62 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.17 g of N-[4-(3-methoxyphenyloxy)phenyl]methyl-2-amino-6-fluoronicotinic acid amide (hereinafter referred to as the present compound 339).

### The present compound 339

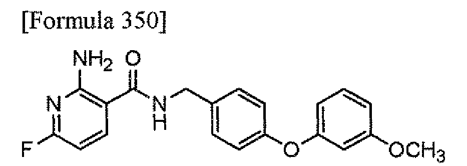

¹ H-NMR (DMSO-D₆ ) δ: 3.73 (3H, s), 4.42 (2H, d, J = 5.9 Hz), 6.26 (1H, dd, J = 8.3, 2.7 Hz), 6.51 (1H, dd, J = 7.8, 2.0 Hz), 6.55 (1H, t, J = 2.3 Hz), 6.70 (1H, dd, J = 8.3, 2.4 Hz), 6.99 (2H, d, J = 8.5 Hz), 7.24-7.29 (1H, m), 7.33 (2H, d, J = 8.5 Hz), 7.57 (2H, s), 8.13-8.18 (1H, m), 8.95 (1H, t, J = 5.9 Hz).

### Production example 319

0.39 g of triethylamine was added to a mixture solution of 0.24 g of 2-amino-6-fluoronicotinic acid, 0.29 g of 4-(4-methoxyphenyloxy)benzylamine and 3 ml of DMF. Thereafter, 0.62 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.27 g of N-[4-(4-methoxyphenyloxy)phenyl]methyl-2-amino-6-fluoronicotinic acid amide (hereinafter referred to as the present compound 340).

### The present compound 340

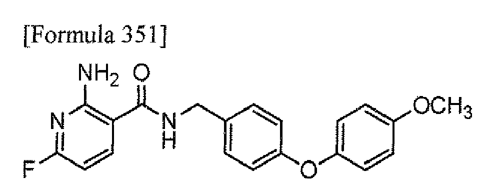

¹H-NMR (DMSO-D₆) δ: 3.74 (3H, s), 4.39 (2H, d, J = 5.8 Hz), 6.26 (1H, dd, J = 8.5, 1.9 Hz), 6.89 (2H, d, J = 7.7 Hz), 6.93-7.01 (4H, m), 7.28 (2H, d, J = 8.5 Hz), 7.56 (2H, s), 8.12-8.17 (1H, m), 8.92 (1H, t, J = 5.8 Hz).

### Production example 320

0.39 g of triethylamine was added to a mixture solution of 0.20 g of 2-amino-6-fluoronicotinic acid, 0.27 g of 4-(3-methylphenyloxy)benzylamine and 3 ml of DMF. Thereafter, 0.62 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.22 g of N-[4-(3-methylphenyloxy)phenyl]methyl-2-amino-6-fluoronicotinic acid amide (hereinafter referred to as the present compound 341).

### The present compound 341

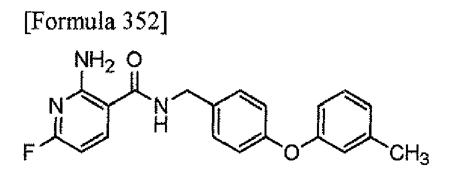

¹ H-NMR (DMSO-D₆) δ: 2.27 (3H, s), 4.41 (2H, d, J = 5.6 Hz), 6.26 (1H, dd, J = 8.5, 2.9 Hz), 6.73-6.81 (2H, m), 6.90-6.98 (3H, m), 7.21-7.27 (1H, m), 7.32 (2H, d, J = 8.7 Hz), 7.56 (2H, s), 8.11-8.18 (1H, m), 8.95 (1H, t, J = 5.1 Hz).

### Production example 321

0.39 g of triethylamine was added to a mixture solution of 0.20 g of 2-amino-6-fluoronicotinic acid, 0.32 g of 4-(4-methylphenyloxy)benzylamine and 3 ml of DMF. Thereafter, 0.62 g of a BOP reagent was added to the mixture, and the obtained mixture was then stirred at a room temperature for 4 hours. Thereafter, ice water was added to the reaction mixture, and the mixture was then extracted with ethyl acetate. The organic layer was successively washed with a saturated sodium bicarbonate and a saturated saline solution, and it was then dried over magnesium sulfate, followed by concentration under reduced pressure. The obtained residue was subjected to silica gel chromatography, so as to obtain 0.31 g of N-[4-(4-methylphenyloxy)phenyl]methyl-2-amino-6-fluoronicotinic acid amide (hereinafter referred to as the present compound 342).

### The present compound 342

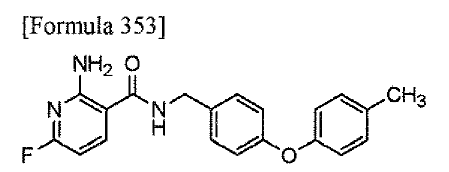

¹ H-NMR (DMSO-D₆) δ: 2.28 (3H, s), 4.40 (2H, d, J = 5.8 Hz), 6.26 (1H, dd, J = 8.5, 2.7 Hz), 6.89 (2H, d, J = 8.5 Hz), 6.93 (2H, d, J = 8.5 Hz), 7.18 (2H, d, J = 8.5 Hz), 7.31 (2H, d, J = 8.5 Hz), 7.56 (2H, s), 8.12-8.18 (1H, m), 8.94 (1H, t, J = 5.8 Hz).

### Production example 322

1.50 ml of a 20% sodium ethoxide ethanol solution was added to a mixture of 0.31 g of N-(4-phenoxyphenyl)methyl-2-amino-6-chloronicotinic acid amide and 3 ml of N-methyl-2-pyrrolidone. The obtained mixture was stirred at 130°C for 1 hour. After, water was added to the reaction mixture, it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.19 g of N-(4-phenoxyphenyl)methyl-2-amino-6-ethoxynicotinic acid amide (hereinafter referred to as the present compound 343).

### The present compound 343

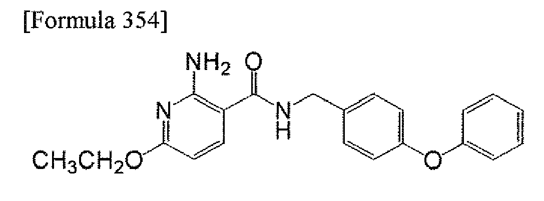

¹H-NMR (CDCl₃) δ: 1.35 (3H, t, J = 7.1 Hz), 4.29 (2H, q, J = 7.1 Hz), 4.55 (2H, d, J = 5.6 Hz), 5.98 (1H, d, J = 8.5 Hz), 6.11 (1H, br s), 6.50 (2H, br s), 6.97-7.02 (4H, m), 7.08-7.12 (1H, m), 7.29-7.35 (4H, m), 7.49 (1H, d, J = 8.5 Hz).

### Production example 323

0.31 g of 2-chloro-6-methoxymethylnicotinic acid and 5 ml of 28% aqueous ammonia were added to an autoclave, and they were then stirred under pressure for 10 hours. Thereafter, the reaction mixture was concentrated under reduced pressure, so as to obtain crude 2-amino-6-methoxymethylnicotinic acid.

The above crude 2-amino-6-methoxymethylnicotinic acid, 0.37 g of 2-fluoro-3-(4-pentynyloxy)benzylamine hydrochloride and 0.56 ml of triethylamine were added to 5 ml of DMF. Thereafter, 0.74 g of a BOP reagent was added to the mixture, and the obtained mixture was then stirred at a room temperature for 8 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.09 g of N-{3-[2-fluoro-3-(4-pentynyloxy)phenyl]}methyl-2-amino-6-methoxymethylnicotinic acid amide (hereinafter referred to as the present compound 344).

### The present compound 344

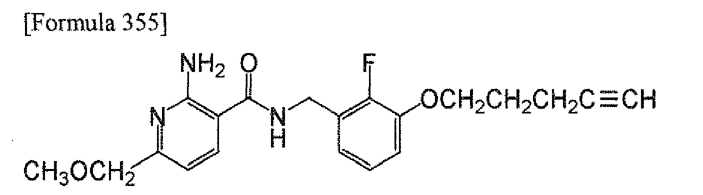

¹ H-NMR (CDCl₃) δ: 2.00-2.04 (3H, m), 2.43-2.45 (2H, m), 3.45 (3H, s), 4.14 (2H, t, J = 6.0 Hz), 4.39 (2H, s), 4.64 (2H, d, J = 5.8 Hz), 6.40 (3H, br s), 6.70 (1H, d, J = 8.0 Hz), 6.94-7.01 (3H, m), 7.61 (1H, d, J = 8.0 Hz).

### Production example 324

0.29 g of 2-chloro-6-methoxymethylnicotinic acid and 50 ml of 28% aqueous ammonia were added to an autoclave, and they were then stirred under pressure for 16 hours. Thereafter, the reaction mixture was concentrated under reduced pressure, so as to obtain crude 2-amino-6-methoxymethylnicotinic acid.

The above crude 2-amino-6-methoxymethylnicotinic acid, 0.27 g of 2-fluoro-3-methoxybenzylamine and 0.52 ml of triethylamine were added to 5 ml of DMF. Thereafter, 0.69 g of a BOP reagent was added to the mixture, and the obtained mixture was then stirred at a room temperature for 11 hours. Thereafter, water was added to the reaction mixture, and the mixture was then extracted with ethyl acetate. The extract was washed with a saturated saline solution, and it was then dried over anhydrous sodium sulfate. Thereafter, the resultant was concentrated under reduced pressure, and it was then subjected to silica gel column chromatography, so as to obtain 0.16 g of N-[3-(2-fluoro-3-methoxy)phenyl]methyl-2-amino-6-methoxymethylnicotinic acid amide (hereinafter referred to as the present compound 345). The present compound 345 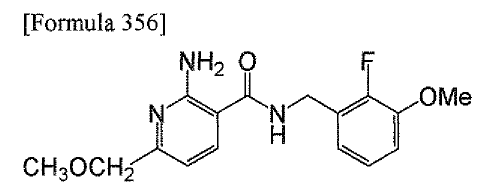 ¹ H-NMR (CDCl₃) δ: 3.45 (3H, s), 3.90 (3H, s), 4.39 (2H, s), 4.65 (2H, d, J = 5.6 Hz), 6.36-6.38 (3H, br m), 6.69 (1H, d, J = 8.0 Hz), 6.93-6.97 (2H, m), 7.05 (1H, m), 7.60 (1H, d, J = 8.0 Hz).

### Production example 325

A mixture of 0.60 g of 2,6-difluoronicotinic acid and 15 ml of 28% aqueous ammonia was stirred at a room temperature for 12 hours. Thereafter, the reaction mixture was concentrated under reduced pressure, so as to obtain crude 2-amino-6-methoxymethylnicotinic acid.

The obtained crude 2-amino-6-fluoronicotinic acid, 0.72 g of 2-fluoro-3-methoxybenzylamine and 1.39 ml of triethylamine were added to 10 ml of DMF. Thereafter, 1.84 g of a BOP reagent was added to the mixture, and the obtained mixture was then stirred at a room temperature for 7 hours 30 minutes. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.26 g of N-[3-(2-fluoro-3-methoxy)phenyl]methyl-2-amino-6-fluoronicotinic acid amide (hereinafter referred to as the present compound 346).

### The present compound 346

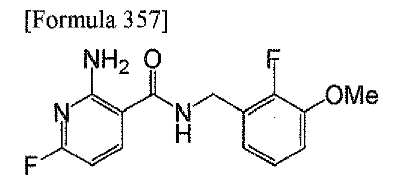

¹ H-NMR (CDCl₃) δ: 3.90 (3H, s), 4.64 (2H, d, J = 5.6 Hz), 6.15 (1H, dd, J = 8.3, 2.8 Hz), 6.28 (1H, br s), 6.57 (2H, br s), 6.91-7.09 (3H, m), 7.68 (1H, t, J = 8.3 Hz).

### Production example 326

A mixture of 0.62 g of 2,6-difluoronicotinic acid and 15 ml of 28% aqueous ammonia was stirred at a room temperature for 11 hours. Thereafter, the reaction mixture was concentrated under reduced pressure, so as to obtain crude 2-amino-6-fluoronicotinic acid.
The obtained crude 2-amino-6-fluoronicotinic acid, 0.94 g of2-fluoro-3-(4-pentynyloxy)benzylamine hydrochloride and 1.42 ml of triethylamine were added to 10 ml of DMF. Thereafter, 1.88 g of a BOP reagent was added to the mixture, and the obtained mixture was then stirred at a room temperature for 7 hours. Thereafter, water was added to the reaction mixture, and the mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, and it was then washed with a mixed solution of MTBE and hexane, so as to obtain 0.26 g of N-{3-[2-fluoro-3-(4-pentynyloxy)]phenyl}methyl-2-amino-6-fluoronicotinic acid amide (hereinafter referred to as the present compound 347).

### The present compound 347

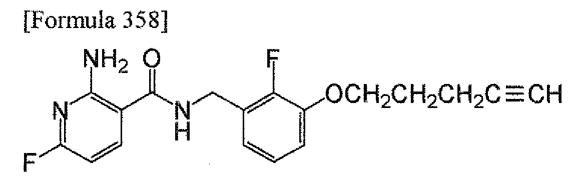

¹H-NMR (CDCl₃) δ: 1.99-2.04 (3H, m), 2.43-2.46 (2H, m), 4.15 (2H, t, J = 6.0 Hz), 4.63 (2H, d, J = 5.6 Hz), 6.15 (1H, d, J = 8.3 Hz), 6.28 (1H, br s), 6.58 (2H, br s), 6.96-7.03 (3H, m), 7.69 (1H, t, J = 8.3Hz).

Next, with regard to production of the intermediate of the present compound, reference production examples will be given below.

### Reference production example 1

12.5 g of triethylamine was added to a mixture of 10.1 g of 3-hydroxybenzylamine hydrobromide and 100 ml of DMF. Subsequently, 6.8 g of 2-aminonicotinic acid was added thereto, and 25.0 g of a BOP reagent was further added thereto. The obtained mixture was stirred at a room temperature for 30 minutes, and then at 80°C for 5 hours. Thereafter, the reaction mixture was cooled to a room temperature, and water was then added thereto, followed by extraction with ethyl acetate. The extract was dried over anhydrous sodium sulfate, and it was then concentrated under reduced pressure. The obtained residue was washed with water, hexane, and MTBE, so as to obtain 10.9 g of N-(3-hydroxyphenylmethyl)-2-aminonicotinic acid amide.

### N-(3-hydroxyphenylmethyl)-2-aminonicotinic acid amide

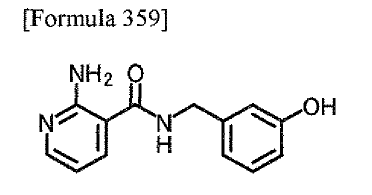

¹H-NMR (DMSO-D₆) δ: 4.36 (2H, d, J = 5.8 Hz), 6.58-6.64 (2H, m), 6.69-6.74 (2H, m), 7.06-7.14 (3H, m), 7.95 (1H, dd, J = 7.7, 1.4 Hz), 8.08 (1H, dd, J = 4.8, 1.7 Hz), 8.94 (1H, t, J = 5.9 Hz), 9.33 (1H, s).

### Reference production example 2

A mixture of 11.97 g of butyltriphenylphosphonium bromide and 60 ml of DMF was stirred at -10°C or lower. Thereafter, 1.04 g of 60% sodium hydride (in oil) was added to the mixture, and a mixture solution of 2.62 g of 3-cyanobenzaldehyde and 20 ml of DMF was further added thereto. The obtained mixture was stirred at a room temperature over a day and a night. After, water was added to the reaction mixture, it was then extracted with ethyl acetate. The obtained organic layer was successively washed with diluted hydrochloric acid, water, and a saturated saline solution, and it was then dried over magnesium sulfate, followed by concentration under reduced pressure. The obtained residue was subjected to silica gel chromatography, so as to obtain 3-(1-pentenyl)benzonitrile.

A mixture of the thus obtained 3-(1-pentenyl)benzonitrile, 0.1 g of 10% palladium on carbon, and 30 ml of ethanol was stirred under a hydrogen atmosphere. Three hours later, the reaction product was filtrated through Celite (registered trade mark), and the resultant was then concentrated under reduced pressure, so as to obtain 3-pentylbenzonitrile.

A mixture of 1.0 g of lithium aluminum hydride and 30 ml of THF was stirred under cooling on ice. A mixture solution of the above-obtained 3-pentylbenzonitrile and 10 ml of THF was added to the reaction mixture. The obtained mixture was stirred at a room temperature for 30 minutes, and then under heating to reflux for 2 hours. Thereafter, the reaction mixture solution was cooled to 0°C, and a sodium hydroxide aqueous solution was then added thereto. The obtained mixture was filtrated through Celite (registered trade mark), and the resultant was then concentrated under reduced pressure. MTBE was added to the residue, and the mixture was then dried over magnesium sulfate, followed by concentration under reduced pressure, so as to obtain 2.7 g of 3-pentylbenzylamine.

### 3-pentylbenzylamine

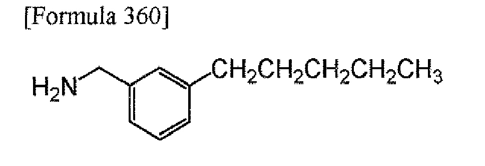

¹H-NMR (CDCl₃) δ: 0.89 (3H, t, J = 7.0 Hz), 1.30-1.35 (4H, m), 1.45 (2H, br s), 1.58-1.66 (2H, m), 2.60 (2H, t, J = 7.8 Hz), 3.85 (2H, s), 7.05-7.26 (4H, m).

### Reference production example 3

A mixture of 6.0 g of 3-fluorobenzonitrile, 6.0 g of 3-methylphenol, 17 g of cesium carbonate and 50 ml of DMF was heated to reflux for 2 hours. Thereafter, diluted hydrochloric acid was added to the reaction mixture, and it was then extracted with ethyl acetate. The organic layer was successively washed with water and a saturated saline solution, and it was then dried over magnesium sulfate, followed by concentration under reduced pressure. The obtained residue was subjected to silica gel column chromatography, so as to obtain 8.1 g of 3-(3-methylphenoxy)benzonitrile.

### 3-(3-methylphenoxy)benzonitrile

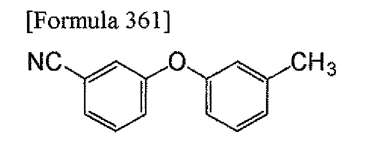

1H-NMR (CDCl3) δ: 2.36 (3H, s), 6.81-6.86 (2H, m), 7.00-7.03 (1H, m), 7.18-7.49 (5H, m).

8.1 g of 3-(3-methylphenoxy)benzonitrile was added dropwise at 0°C to a mixture solution of 1.8 g of lithium aluminum hydride and 50 ml of THF. The obtained solution was stirred at a room temperature for 3 hours. Thereafter, water, a 15% sodium hydroxide aqueous solution and water were successively added to the reaction mixture, and the obtained mixture was then stirred at a room temperature for 4 hours. The reaction mixture was filtrated with Celite (registered trade mark), and the filtrate was then concentrated under reduced pressure. MTBE and potassium carbonate were added to the residue, and the mixture was then filtrated with Celite (registered trade mark), followed by concentration under reduced pressure, so as to obtain 7.5 g of 3-(3-methylphenoxy)benzylamine.

### 3-(3-methylphenoxy)benzylamine

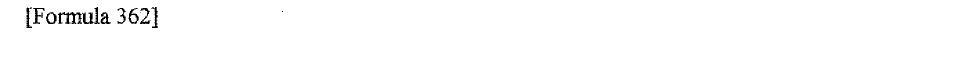

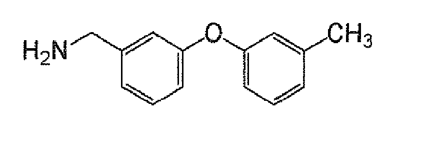

1H-NMR (CDCl3) δ: 1.44 (2H, br s), 2.32 (3H, s), 3.84 (2H, s), 6.79-6.96 (5H, m), 7.01-7.06 (1H, m), 7.19-7.30 (2H, m).

### Reference production example 4

24.2 g of diisopropyl azodicarboxylate (40% toluene solution) was added dropwise at 0°C to a mixture of 4.8 g of phenethyl alcohol, 4.8 g of 3-hydroxybenzaldehyde, 12.6 g of triphenylphosphine and 200 ml of THF. The obtained mixture was stirred at a room temperature for 8 hours. The reaction mixture solution was concentrated under reduced pressure, and the residue was subjected to silica gel chromatography, so as to obtain 3.9 g of 3-(2-phenylethoxy)benzaldehyde.

### 3-(2-phenylethoxy)benzaldehyde

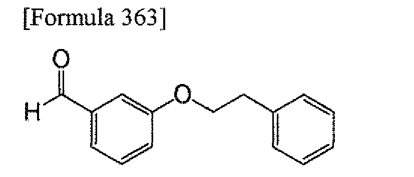

1H-NMR (CDCl₃) δ: 3.12 (2H, t, J = 7.0 Hz), 4.24 (2H, t, J = 7.0 Hz), 7.14-7.46 (9H, m), 9.96 (1H, s).

2.1 g of methoxyamine hydrochloride was added to a mixture solution of 3.9 g 3-(2-phenylethoxy)benzaldehyde, 30 ml of tetrahydrofuran, 5 ml of water and 2.4 ml of pyridine. The obtained mixture was stirred at a room temperature for 2 hours. Thereafter, the reaction mixture was concentrated under reduced pressure. Thereafter, diluted hydrochloric acid was added to the reaction mixture, followed by extraction with ethyl acetate. The organic layer was washed with a saturated saline solution, and it was then dried over magnesium sulfate, followed by concentration under reduced pressure. The obtained residue was subjected to silica gel chromatography, so as to obtain 3.4 g of a mixture of 3-(2-phenylethoxy)benzaldehyde-O-methyl-oxime isomers.

### Mixture of 3-(2-phenylethoxy)benzaldehyde-O-methyl-oxime isomers

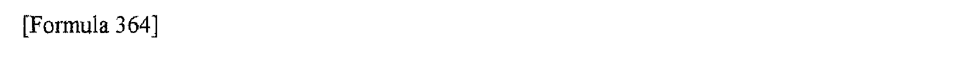

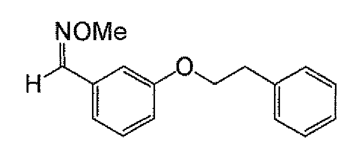

¹ H-NMR (CDCl₃) δ: 3.11 (2.0H, t, J = 7.0 Hz), 3.96 (2.7H, s), 4.02 (0.3H, s), 4.20 (2.0H, t, J = 7.1 Hz), 6.90-6.93 (1.0H, m), 7.08-7.11 (1.0H, m), 7.15-7.16 (1.0H, m), 7.24-7.34 (6.0H, m), 7.48 (0.1H, s), 8.01 (0.9H, s).

A mixture of 0.53 g of lithium aluminum hydride and 50 ml of THF was stirred under cooling on ice. Thereafter, a mixture solution of 3.0 of the mixture of 3-(2-phenylethoxy)benzaldehyde-O-methyl-oxime isomers and 20 ml of THF was added to the reaction mixture. The obtained mixture was stirred at a room temperature for 8 hours. Thereafter, the reaction mixture solution was cooled to 0°C. 0.5 ml of water, 0.5 ml of a 15% sodium hydroxide aqueous solution, and 1.5 ml of water were successively added to the reaction mixture. Thereafter, the reaction mixture was filtrated through Celite (registered trade mark), and it was then concentrated under reduced pressure, so as to obtain 2.0 g of 3-(2-phenylethoxy)benzylamine.

### 3-(2-phenylethoxy)benzylamine

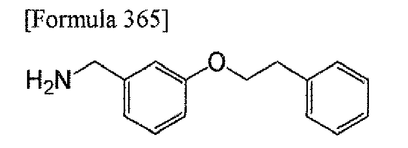

1H-NMR (CDCl3) δ: 1.43 (2H, br s), 3.10 (2H, t, J = 7.1 Hz), 3.82 (2H, s), 4.18 (2H, t, J = 7.1 Hz), 6.76-6.79 (1H, m), 6.86-6.89 (2H, m), 7.21-7.34 (6H, m).

### Reference production example 5

5.0 g of 4-fluoro-3-phenoxybenzaldehyde, 2.4 g of hydroxylamine hydrochloride and 3.5 g of triethylamine were added to 10 ml of ethanol. The obtained mixture was stirred at a room temperature for 4 hours. Thereafter, diluted hydrochloric acid was added to the reaction mixture, and it was then extracted with ethyl acetate. The organic layer was dried over magnesium sulfate, and it was then concentrated under reduced pressure. The obtained residue was subjected to silica gel column chromatography, so as to obtain 3.5 g of 4-fluoro-3-phenoxybenzaldehyde oxime.

### 4-fluoro-3-phenoxybenzaldehyde oxime

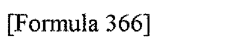

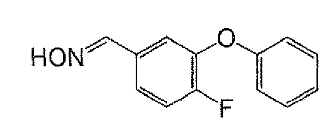

¹H-NMR (CDCl₃) δ: 6.98-7.02 (2H, m), 7.10-7.21 (2H, m), 7.25-7.36 (4H, m), 7.87 (1H, br s), 8.02 (1H, s).

1.2 g of lithium aluminum hydride was added to 50 ml of THF. A mixture solution of 3.5 g of 4-fluoro-3-phenoxybenzaldehyde oxime and 5 ml of THF was added dropwise to the above mixture at 0°C. The obtained mixture was stirred at a room temperature for 8 hours. Thereafter, water, 15% sodium hydroxide and water were successively added to the reaction mixture, and the obtained mixture was then stirred at a room temperature for 2 hours. Thereafter, the reaction mixture was fitlrated with Celite (registered trade mark), and the filtrate was then concentrated under reduced pressure, so as to obtain 2.9 g of 4-fluoro-3-phenoxybenzylamine.

### 4-fluoro-3-phenoxybenzylamine

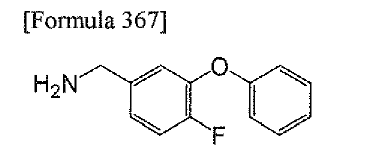

¹H-NMR (CDCl₃) δ: 1.47 (2H, br s), 3.79 (2H, s), 6.96-7.15 (6H, m), 7.29-7.34 (2H, m).

### Reference production example 6

3.0 g of 2-chlorothiazolylmethylamine hydrobromide and 4.4 g of potassium 1,1-dimethylethoxide were added to 10 ml of n-butanol, and the obtained mixture was heated to reflux for 1 hour. Thereafter, diluted hydrochloric acid was added to the reaction mixture, and the obtained mixture was then washed with MTBE. The water layer was converted to be alkaline with sodium hydroxide, and it was then extracted with MTBE twice. The organic layer was dried over magnesium sulfate, and it was then concentrated under reduced pressure, so as to obtain 1.5 g of 2-butoxythiazol-5-ylmethylamine.

### 2-butoxythiazol-5-ylmethylamine

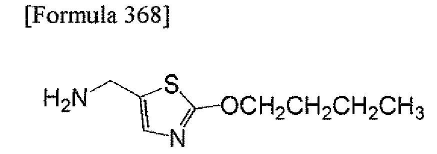

¹H-NMR (CDCl₃) δ: 0.96 (3H, t, J = 7.4 Hz), 1.38-1.56 (4H, m), 1.75-1.79 (2H, m), 3.91 (2H, s), 4.36 (2H, t, J = 6.6 Hz), 6.90 (1H, s).

### Reference production example 7

0.95 g of 4-(2-methoxyphenoxy)benzonitrile and 0.25 g of lithium aluminum hydride were added to 20 ml of THF. The obtained mixture was stirred at a room temperature for 4 hours. Thereafter, water, a 15% sodium hydroxide aqueous solution and water were successively added to the reaction mixture, and the obtained mixture was then stirred at a room temperature for 4 hours. Thereafter, the reaction mixture was filtrated with Celite (registered trade mark), and the filtrate was then concentrated under reduced pressure. MTBE was added to the residue, and magnesium sulfate was then added to the mixture. The obtained mixture was dried, and it was then filtrated with Celite (registered trade mark). The filtrate was concentrated under reduced pressure, so as to obtain 1.0 g of 4-(2-methoxyphenoxy)benzylamine.

### 1.0 g of 4-(2-methoxyphenoxy)benzylamine

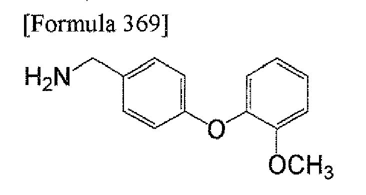

1H-NMR (CDCl3) δ: 1.64 (2H, br s), 3.84 (2H, s), 6.89-7.05 (5H, m), 7.10-7.14 (1H, m), 7.21-7.26 (2H, m).

### Reference production example 8

2.0 g of potassium carbonate was added to a mixture of 2.0 g of 2-fluoro-4-hydroxybenzonitrile, 2.4 g of benzylbromide and 30 ml of acetonitrile. The obtained mixture was stirred at 50°C for 3 hours. Thereafter, the reaction mixture was cooled to a room temperature, and it was then filtrated through Celite (registered trade mark), followed by concentration under reduced pressure. The obtained residue was collected by filtration, and it was then washed with hexane and was then dried, so as to obtain 2.8 g of 4-benzyloxy-2-fluorobenzonitrile.

### 4-benzyloxy-2-fluorobenzonitrile

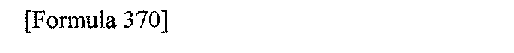

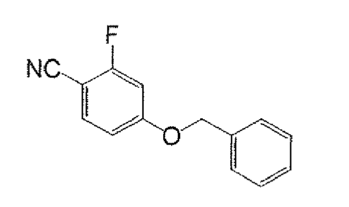

¹H-NMR (CDCl₃) δ: 5.11 (2H, s), 6.81 (2H, m), 7.36-7.44 (5H, m), 7.52 (1H, dd, J = 8.6, 7.6 Hz).

A mixture of 0.93 g of lithium aluminum hydride and 30 ml ofTHF was stirred under cooling on ice. Thereafter, a mixture solution of 2.8 g of 4-benzyloxy-2-fluorobenzonitrile and 10 ml of THF was added dropwise to the reaction mixture. The obtained mixture was stirred at a room temperature for 6 hours. Thereafter, the reaction mixture solution was cooled to 0°C. 0.9 ml of water, 0.9 ml of a 15% sodium hydroxide aqueous solution, and 2.7 ml of water were successively added to the reaction mixture, and the obtained mixture was stirred at a room temperature for 1 hour. Thereafter, the reaction mixture was filtrated through Celite (registered trade mark), and it was then concentrated under reduced pressure, so as to obtain 2.5 g of 4-benzyloxy-2-fluorobenzylamine.

### 4-benzyloxy-2-fluorobenzylamine

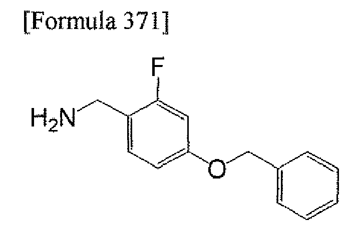

¹H-NMR (CDCl₃) δ: 3.82 (2H, s), 5.04 (2H, s), 6.67-6.75 (2H, m), 7.18-7.24 (1H, m), 7.32-7.45 (5H, m).

### Reference production example 9

A mixture of 5.0 g of 3,4-difluorobenzonitrile, 3.7 g of phenol, 50 ml of DMF and 14 g of cesium carbonate was stirred at a room temperature for 1 hour, and then at 80°C for 3 hours. Thereafter, the reaction mixture solution was cooled to a room temperature, and water was then added thereto, followed by extraction with ethyl acetate. The organic layer was successively washed with a 15% sodium hydroxide aqueous solution, diluted hydrochloric acid, and a saturated saline solution. The resultant was dried over magnesium sulfate, and it was then concentrated under reduced pressure, so as to obtain 5.5 g of 3-fluoro-4-phenoxybenzonitrile.

### 3-fluoro-4-phenoxybenzonitrile

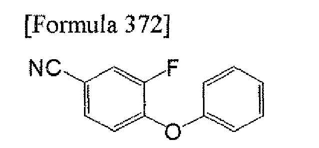

¹H-NMR (CDCl₃) δ: 6.96 (1H, t, J = 8.3 Hz), 7.04-7.08 (2H, m), 7.21-7.25 (1H, m), 7.35-7.44 (3H, m), 7.48 (1H, dd, J = 10.0, 2.0 Hz).

A mixture of 1.7 g of lithium aluminum hydride and 40 ml ofTHF was stirred under cooling on ice. A mixture solution of 5.0 g of 3-fluoro-4-phenoxybenzonitrile and 20 ml of THF was added dropwise to the reaction mixture, and the obtained mixture was stirred at a room temperature for 4 hours. Thereafter, the reaction mixture was cooled to 0°C. 1.7 ml of water, 1.7 ml of a 15% sodium hydroxide aqueous solution and 5.1 ml of water were successively added to the reaction mixture. The obtained mixture was stirred at a room temperature for 1 hour. The reaction mixture was filtrated through Celite (registered trade mark), and the resultant was then concentrated under reduced pressure, so as to obtain 4.3 g of 3-fluoro-4-phenoxybenzylamine.

### 3-fluoro-4-phenoxybenzylamine

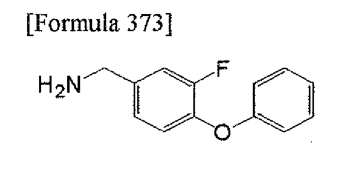

¹H-NMR (CDCl₃) δ: 3.87 (2H, s), 6.96-7.10 (5H, m), 7.15-7.18 (1H, m), 7.29-7.34 (2H, m).

### Reference production example 10

386 mg of 4-(4-chloro-3-ethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 332 mg of 4-(4-chloro-3-ethylphenoxy)benzylamine. 4-(4-chloro-3-ethylphenoxy)benzylamine 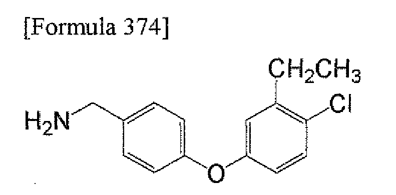 1H-NMR (CDCl3) δ: 1.20 (3H, t, J = 7.5 Hz), 1.65 (2H, br s), 2.70 (2H, q, J = 7.5 Hz), 3.86 (2H, s), 6.70-6.77 (1H, m), 6.89 (1H, d, J = 2.8 Hz), 6.95 (2H, d, J = 8.3 Hz), 7.23-7.31 (3H, m).

### Reference production example 11

335 mg of 4-(2,4-dimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 292 mg of 4-(2,4-dimethylphenoxy)benzylamine. 4-(2,4-dimethylphenoxy)benzylamine 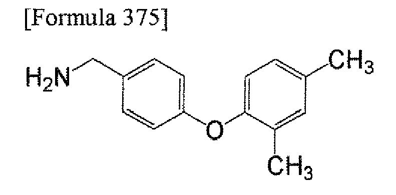 1H-NMR (CDCl3) δ: 1.83 (2H, br s), 2.17 (3H, s), 2.31 (3H, s), 3.81 (2H, s), 6.77-6.85 (3H, m), 6.93-6.97 (1H, m), 7.05 (1H, s), 7.22 (2H, d, J = 8.3 Hz).

### Reference production example 12

356 mg of 4-(2,4,6-trimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 311 mg of 4-(2,4,6-trimethylphenoxy)benzylamine. 4-(2,4,6-trimethylphenoxy)benzylamine 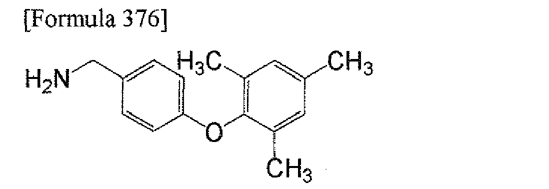 1H-NMR (CDCl3) δ: 1.60 (2H, br s), 2.07 (6H, s), 2.30 (3H, s), 3.80 (2H, s), 6.71 (2H, d, J = 8.7 Hz), 6.89 (2H, s), 7.18 (2H, d, J = 8.7 Hz).

### Reference production example 13

356 mg of 4-(2,3,6-trimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 316 mg of 4-(2,3,6-trimethylphenoxy)benzylamine. 4-(2,3,6-trimethylphenoxy)benzylamine 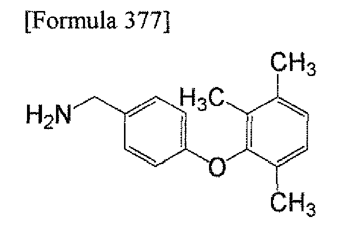 1H-NMR (CDCl3) δ: 1.55 (2H, br s), 2.03 (3H, s), 2.07 (3H, s), 2.27 (3H, s), 3.80 (2H, s), 6.70 (2H, d, J = 8.6 Hz), 6.95 (1H, d, J = 7.8 Hz), 6.99 (1H, d, J = 7.6 Hz), 7.18 (2H, d, J = 8.6 Hz).

### Reference production example 14

356 mg of 4-(4-propylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 302 mg of 4-(4-propylphenoxy)benzylamine. 4-(4-propylphenoxy)benzylamine 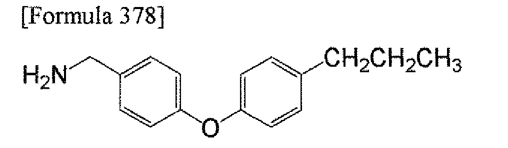 1H-NMR (CDCl3) δ: 0.94 (3H, t, J = 7.3 Hz), 1.53-1.73 (4H, m), 2.53-2.58 (2H, m), 3.84 (2H, s), 6.90 (2H, d, J = 8.3 Hz), 6.95 (2H, d, J = 8.3 Hz), 7.12 (2H, d, J = 8.3 Hz), 7.26 (2H, d, J = 8.3 Hz).

### Reference production example 15

378 mg of 4-(4-butylphenoxy)benzonitrile was added to I ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 330 mg of 4-(4-butylphenoxy)benzylamine.

### 4-(4-butylphenoxy)benzylamine

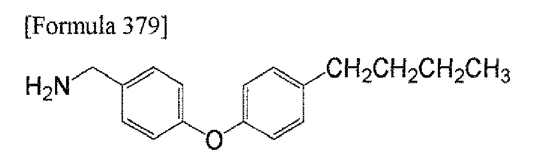

1H-NMR (CDCl3) δ: 0.93 (3H, t, J = 7.3 Hz), 1.31-1.41 (2H, m), 1.50-1.68 (4H, m), 2.58 (2H, t, J = 7.7 Hz), 3.84 (2H, s), 6.91 (2H, d, J = 8.6 Hz), 6.95 (2H, d, J = 8.6 Hz), 7.12 (2H, d, J = 8.3 Hz), 7.26 (2H, d, J = 8.3 Hz).

### Reference production example 16

394 mg of 4-(3,5-dichlorophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 296 mg of 4-(3,5-dichlorophenoxy)benzylamine. 4-(3,5-dichlorophenoxy)benzylamine 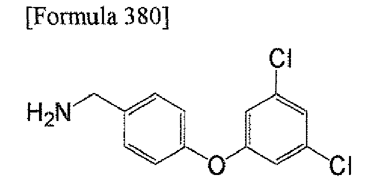 1H-NMR (CDCl3) δ: 1.58 (2H, br s), 3.89 (2H, s), 6.84 (2H, d, J = 1.8 Hz), 7.00 (2H, d, J = 8.4 Hz), 7.05 (1H, t, J = 1.8 Hz), 7.34 (2H, d, J = 8.4 Hz).

### Reference production example 17

386 mg of 4-(2-chloro-4,5-dimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 293 mg of 4-(2-chloro-4,5-dimethylphenoxy)benzylamine.

### 4-(2-chloro-4,5-dimethylphenoxy)benzylamine

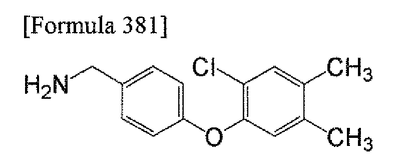

1H-NMR (CDCl3) δ: 1.43 (2H, br s), 2.18 (3H, s), 2.23 (3H, s), 3.84 (2H, s), 6.80 (1H, s), 6.87-6.91 (2H, m), 7.21 (1H, s), 7.23-7.27 (2H, m).

### Reference production example 18

419 mg of 4-(4-trifluoromethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 361 mg of 4-(4-trifluoromethoxyphenoxy)benzylamine. 4-(4-trifluoromethoxyphenoxy)benzylamine 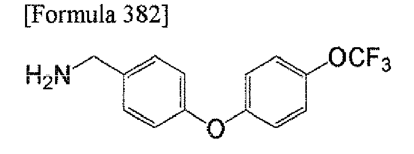 1H-NMR (CDCl3) δ: 1.61 (2H, br s), 3.87 (2H, s), 6.95-7.00 (4H, m), 7.16 (2H, d, J = 8.6 Hz), 7.31 (2H, d, J = 8.3 Hz).

### Reference production example 19

335 mg of 4-(2,5-dimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 2 hours. Thereafter, 1 ml of ethanol, 2 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 285 mg of 4-(2,5-dimethylphenoxy)benzylamine. 4-(2,5-dimethylphenoxy)benzylamine 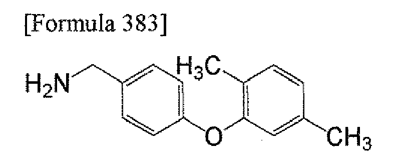 1H-NMR (CDCl3) δ: 1.64 (2H, br s), 2.18 (3H, s), 2.26 (3H, s), 3.83 (2H, s), 6.70 (1H, s), 6.83-6.89 (3H, m), 7.11 (1H, d, J = 7.6 Hz), 7.24 (2H, d, J = 8.6 Hz).

### Reference production example 20

A mixture of 14.5 g of propyltriphenylphosphonium bromide and 100 ml of DMF was stirred at -10°C or lower. Thereafter, 1.32 g of 60% sodium hydride (in oil) was added to the mixture, and a mixture solution of 1.97 g of 3-cyanobenzaldehyde and 10 ml of DMF was further added thereto. The obtained mixture was stirred at a room temperature over a day and a night. After, water was added to the reaction mixture, it was then extracted with ethyl acetate. The obtained organic layer was successively washed with diluted hydrochloric acid, water and a saturated saline solution, and it was then dried over magnesium sulfate, followed by concentration under reduced pressure. The obtained residue was subjected to silica gel chromatography, so as to obtain 3-(1-butenyl)benzonitrile.

A mixture of the thus obtained 3-(1-butenyl)benzonitrile, 0.1 g of 10% palladium on carbon and 30 ml of ethanol was stirred under a hydrogen atmosphere. Three hours later, the reaction product was filtrated through Celite (registered trade mark), and the resultant was then concentrated under reduced pressure, so as to obtain 3-butylbenzonitrile.

A mixture of 0.63 g of lithium aluminum hydride and 20 ml of THF was stirred under cooling on ice. A mixture solution of the above-obtained 3-butylbenzonitrile and 10 ml of THF was added to the reaction mixture, and the obtained mixture was stirred at a room temperature for 30 minutes, and then under heating to reflux for 2 hours. Thereafter, the reaction mixture solution was cooled to 0°C, and a sodium hydroxide aqueous solution was then added thereto. The obtained mixture was filtrated through Celite (registered trade mark), and the resultant was then concentrated under reduced pressure. MTBE was added to the residue, and the mixture was then dried over magnesium sulfate, followed by concentration under reduced pressure, so as to obtain 1.6 g of 3-butylbenzylamine.

### 3-butylbenzylamine

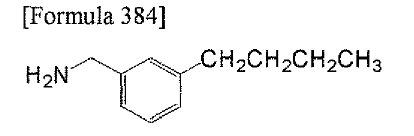

¹H-NMR (CDCl₃) δ: 0.93 (3H, t, J = 7.4 Hz), 1.33-1.39 (2H, m), 1.46 (2H, br s), 1.57-1.64 (2H, m), 2.61 (2H, t, J = 7.7 Hz), 3.84 (2H, s), 7.05-7.26 (4H, m).

### Reference production example 21

A mixture of 12.4 g of pentyltriphenylphosphonium bromide and 30 ml of DMF was stirred at -10°C or lower. Thereafter, 1.06 g of 60% sodium hydride (in oil) was added to the mixture, and a mixture solution of 2.62 g of 3-cyanobenzaldehyde and 5 ml of DMF was further added thereto. The obtained mixture was stirred at a room temperature over a day and a night. After, water was added to the reaction mixture, it was then extracted with ethyl acetate. The obtained organic layer was successively washed with diluted hydrochloric acid, water and a saturated saline solution, and it was then dried over magnesium sulfate, followed by concentration under reduced pressure. The obtained residue was subjected to silica gel chromatography, so as to obtain 3 -(1 -hexenyl)benzonitrile.

A mixture of the thus obtained 3-(1-hexenyl)benzonitrile, 0.1 g of 10% palladium on carbon, and 50 ml of ethanol was stirred under a hydrogen atmosphere. Three hours later, the reaction product was filtrated through Celite (registered trade mark), and the resultant was then concentrated under reduced pressure, so as to obtain 3-hexylbenzonitrile.

A mixture of 0.91 g of lithium aluminum hydride and 30 ml of THF was stirred under cooling on ice. A mixture solution of the above-obtained 3-hexylbenzonitrile and 10 ml ofTHF was added to the reaction mixture, and the obtained mixture was stirred at a room temperature for 30 minutes, and then under heating to reflux for 2 hours. Thereafter, the reaction mixture solution was cooled to 0°C, and a sodium hydroxide aqueous solution was then added thereto. The obtained mixture was filtrated through Celite (registered trade mark), and the resultant was then concentrated under reduced pressure. MTBE was added to the residue, and the mixture was then dried over magnesium sulfate, followed by concentration under reduced pressure, so as to obtain 2.5 g of 3-hexylbenzylamine.

### 3-hexylbenzylamine

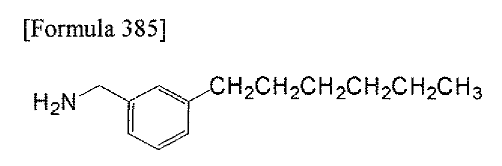

¹H-NMR (CDCl₃) δ: 0.88 (3H, t, J = 6.7 Hz), 1.30-1.39 (8H, m), 1.57-1.65 (2H, m), 2.60 (2H, t, J = 7.8 Hz), 3.84 (2H, s), 7.11-7.20 (4H, m).

### Reference production example 22

0.37 g of 4-(5,6,7,8-tetrahydronaphthalen-2-yloxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.35 g of 4-(5,6,7,8-tetrahydronaphthalen-2-yloxy)benzylamine.

### 4-(5,6,7,8-tetrahydronaphthalen-2-yloxy)benzylamine

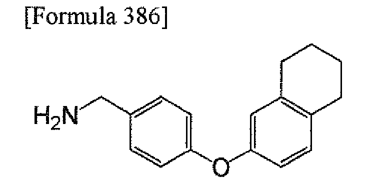

¹H-NMR (CDCl₃) δ: 1.47 (2H, br s), 1.76-1.81 (4H, m), 2.70-2.75 (4H, m), 3.84 (2H, s), 6.71 (1H, d, J = 2.5 Hz), 6.75 (1H, dd, J = 8.2, 2.5 Hz), 6.94-6.98 (2H, m), 7.01 (1H, d, J = 8.2 Hz), 7.24-7.27 (2H, m).

### Reference production example 23

0.34 g of 4-(3-methylphenylthio)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.33 g of 4-(3-methylphenylthio)benzylamine.

### 4-(3-methylphenylthio)benzylamine

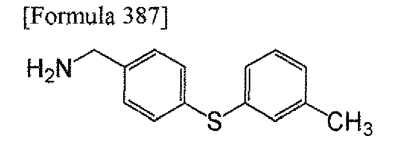

¹H-NMR (CDCl₃) δ: 1.46 (2H, br s), 2.30 (3H, s), 3.86 (2H, s), 7.02-7.06 (1H, m), 7.09-7.12 (1H, m), 7.15-7.20 (2H, m), 7.24-7.27 (2H, m), 7.31-7.34 (2H, m).

### Reference production example 24

0.36 g of 4-(3-methoxyphenylthio)benzontrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.30 g of 4-(3-methoxyphenylthio)benzylamine.

### 4-(3-methoxyphenylthio)benzylamine

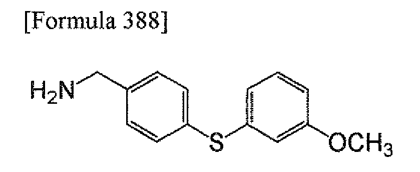

¹H-NMR (CHCl₃) δ: 1.43 (2H, br s), 3.76 (3H, s), 3.87 (2H, s), 6.76 (1H, ddd, J = 8.3, 2.5, 0.8 Hz), 6.82-6.88 (2H, m), 7.19 (1H, dd, J = 8.3, 8.0 Hz), 7.24-7.30 (2H, m), 7.35-7.38 (2H, m).

### Reference production example 25

383 mg of 4-(2-methyl-4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 369 mg of 4-(2-methyl-4-methylthiophenoxy)benzylamine.

### 4-(2-methyl-4-methylthiophenoxy)benzylamine

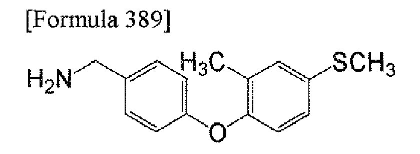

¹H-NMR (CDCl3) δ: 1.41 (2H, br s), 2.21 (3H, s), 2.48 (3H, s), 3.83 (2H, s), 6.83 (1H, d, J = 8.3 Hz), 6.84-6.87 (2H, m), 7.08 (1H, dd, J = 8.3, 2.1 Hz), 7.18 (1H, d, J = 2.1 Hz), 7.22-7.25 (2H, m).

### Reference production example 26

404 mg of 4-(2,3-dimethyl-4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 342 mg of 4-(2,3-dimethyl-4-methylthiophenoxy)benzylamine.

### 4-(2,3-dimethyl-4-mothylthiophenoxy)benzylamine

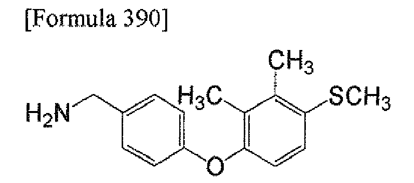

¹H-NMR (CDCl3) δ: 1.39 (2H, br s), 2.17 (3H, s), 2.37 (3H, s), 2.43 (3H, s), 3.82 (2H, s), 6.79 (1H, d, J = 8.6 Hz), 6.84 (2H, d, J = 8.6 Hz), 7.07 (1H, d, J = 8.6 Hz), 7.23 (2H, d, J = 8.6 Hz).

### Reference production example 27

387 mg of 4-(4-chloro-3,5-dimethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 386 mg of 4-(4-chloro-3,5-dimethylphenoxy)benzylamine.

### 4-(4-chloro-3,5-dimethylphenoxy)benzylamine

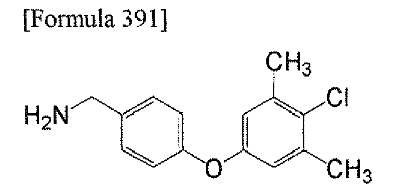

¹H-NMR (CDCl3) δ: 1.40 (2H, br s), 2.33 (6H, s), 3.86 (2H, s), 6.73 (2H, s), 6.94-6.97 (2H, m), 7.28 (2H, d, J = 8.6 Hz).

### Reference production example 28

410 mg of 4-(3-ethyl-4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 391 mg of 4-(3-ethyl-4-methylthiophenoxy)benzylamine.

### 4-(3-ethyl-4-methylthiophenoxy)benzylamine

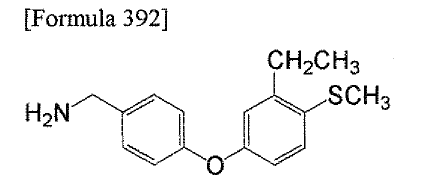

¹H-NMR (CDCl3) δ: 1.21 (3H, t, J = 7.5 Hz), 1.51 (2H, br s), 2.44 (3H, s), 2.73 (2H, q, J = 7.5 Hz), 3.85 (2H, s), 6.82 (1H, dd, J = 8.6, 2.8 Hz), 6.88 (1H, d, J = 2.8 Hz), 6.95-6.98 (2H, m), 7.19 (1H, d, J = 8.6 Hz), 7.25-7.29 (2H, m).

### Reference production example 29

362 mg of3-(4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 339 mg of 3-(4-methylthiophenoxy)benzylamine.

### 3-(4-methylthiophenoxy)benzylamine

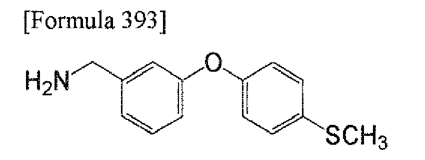

¹H-NMR (CDCl3) δ: 1.43 (2H, br s), 2.48 (3H, s), 3.84 (2H, s), 6.86 (1H, dd, J = 8.0, 1.9 Hz), 6.94-6.97 (3H, m), 7.03-7.06 (1H, m), 7.24-7.31 (3H, m).

### Reference production example 30

413 mg of 4-(3-chloro-4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 349 mg of 4-(3-chloro-4-methylthiophenoxy)benzylamine.

### 4-(3-chloro-4-methylthiophenoxy)benzylamine

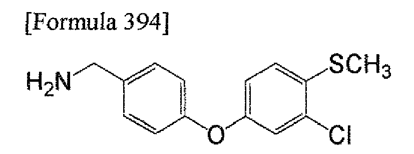

¹H-NMR (CDCl3) δ: 1.45 (2H, br s), 2.46 (3H, s), 3.86 (2H, s), 6.91 (1H, dd, J = 8.7, 2.8 Hz), 6.96-6.99 (2H, m), 7.03 (1H, d, J = 2.8 Hz), 7.18 (1H, d, J = 8.7 Hz), 7.28-7.32 (2H, m).

### Reference production example 31

434 mg of 4-(3-chloro-4-ethylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 404 mg of 4-(3-chloro-4-ethylthiophenoxy)benzylamine.

### 4-(3-chloro-4-ethylthiophenoxy)benzylamine

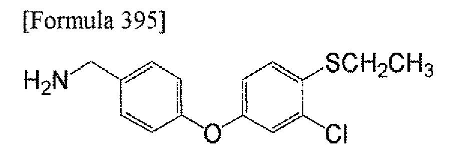

¹H-NMR (CDCl3) δ: 1.32 (3H, t, J = 7.3 Hz), 1.53 (2H, br s), 2.92 (2H, q, J = 7.3 Hz), 3.87 (2H, s), 6.87 (1H, dd, J = 8.6, 2.7 Hz), 6.97-7.00 (2H, m), 7.03 (1H, d, J = 2.7 Hz), 7.27-7.34 (3H, m).

### Reference production example 32

407 mg of 4-(3-methoxy-4-methylthiophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 409 mg of 4-(3-methoxy-4-methylthiophenoxy)benzylamine.

### 4-(3-methoxy-4-methylthiophenoxy)benzylamine

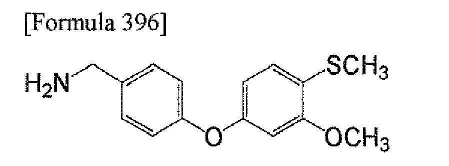

¹H-NMR (CDCl3) δ: 1.64 (2H, br s), 2.41 (3H, s), 3.84 (3H, s), 3.85 (2H, s), 6.55 (1H, dd, J = 8.3, 2.4 Hz), 6.59 (1H, d, J = 2.4 Hz), 6.98 (2H, d, J = 8.6 Hz), 7.15 (1H, d, J = 8.3 Hz), 7.28 (2H, d, J = 8.6 Hz).

### Reference production example 33

335 mg of 4-(2,6-dimethylphenoxy)benzonitrile was added to 1 ml of THF. Thereafter, 1 ml ofa THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 0.5 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 334 mg of 4-(2,6-dimethylphenoxy)benzylamine.

### 4-(2,6-dimethylphenoxy)benzylamine

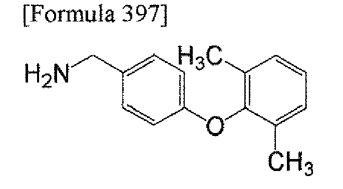

¹H-NMR (CDCl3) δ: 1.51 (2H, br s), 2.12 (6H, s), 3.80 (2H, s), 6.70-6.73 (2H, m), 7.03-7.11 (3H, m), 7.16-7.20 (2H, m).

### Reference production example 34

726 mg of 4-fluorobenzonitrile, 890 mg of 3-trifluoromethoxyphenol, and 1.95 g of cesium carbonate were added to 6 ml of DMF. The obtained mixture was stirred at 100°C for 4 hours. Thereafter, diluted hydrochloric acid was added to the reaction mixture, and it was then extracted with ethyl acetate. The organic layer was washed with a saturated saline solution, and it was then dried over magnesium sulfate. The resultant was concentrated by centrifugation under reduced pressure. Sodium hydroxide was added to the residue, and the mixture was then extracted with MTBE. The organic layer was washed with water. The resultant was dried over sodium sulfate, and it was then concentrated by centrifugation under reduced pressure, so as to obtain 1.32 g of 4-(3-trifluoromethoxyphenoxy)benzonitrile.

### 4-(3-trifluoromethoxyphenoxy)benzonitrile

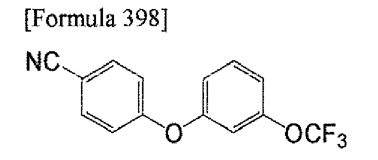

427 mg of 4-(3-trifluoromethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure. A saturated saline solution was added to the obtained residue, and the mixture was then extracted with MTBE. Thereafter, the organic layer was dried over magnesium sulfate, and the resultant was concentrated by centrifugation under reduced pressure, so as to obtain 293 mg of 4-(3-trifluoromethoxyphenoxy)benzylamine. 4-(3-trifluoromethoxyphenoxy)benzylamine 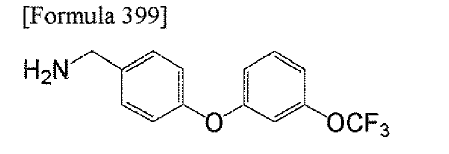 ¹H-NMR (CDCl3) δ: 1.68 (2H, br s), 3.87 (2H, s), 6.81-7.03 (5H, m), 7.27-7.37 (3H, m).

### Reference production example 35

605 mg of 4-fluorobenzonitrile, 759 mg of 4-ethoxyphenol, and 1.95 g of cesium carbonate were added to 5 ml of DMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 953 mg of 4-(4-ethoxyphenoxy)benzonitrile.

### 4-(4-ethoxyplienoxy)benzonitrile

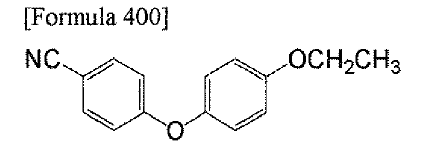

359 mg of 4-(4-ethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 340 mg of 4-(4-ethoxyphenoxy)benzylamine.

### 4-(4-ethoxyphenoxy)benzylamine

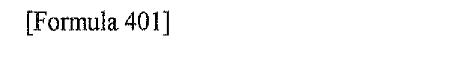

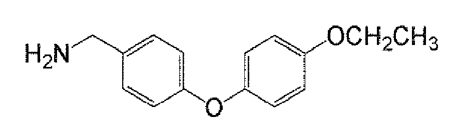

¹H-NMR (CDCl3) δ: 1.37 (2H, br s), 1.42 (3H, t, J = 7.0 Hz), 3.83 (2H, s), 4.02 (2H, q, J = 7.0 Hz), 6.85-6.97 (6H, m), 7.22-7.26 (2H, m).

### Reference production example 36

605 mg of 4-fluorobenzonitrile, 836 mg of 4-propoxyphenol, and 1.95 g of cesium carbonate were added to 5 ml of DMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1010 mg of 4-(4-propoxyphenoxy)benzonitrile.

### 4-(4-propoxyphenoxy)benzonitrile

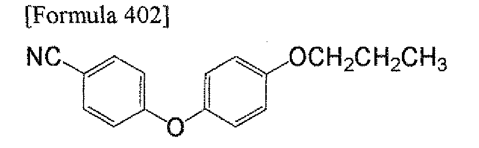

380 mg of 4-(4-propoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 355 mg of 4-(4-propoxyphenoxy)benzylamine.

### 4-(4-propoxyphenoxy)benzylamine

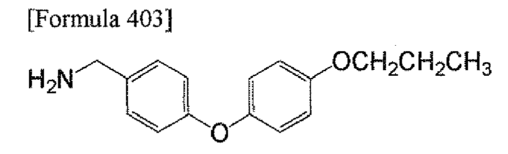

¹H-NMR (CDCl3) δ: 1.04 (3H, t, J = 7.3 Hz), 1.36 (2H, br s), 1.76-1.85 (2H, m), 3.83 (2H, t, J = 6.9 Hz), 3.90 (2H, t, J = 6.6 Hz), 6.85-7.00 (6H, m), 7.22-7.26 (2H, m).

### Reference production example 37

605 mg of 4-fluorobenzonitrile, 759 mg of 3-ethoxyphenol, and 1.95 g of cesium carbonate were added to 5 ml of DMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 948 mg of 4-(3-ethoxyphenoxy)benzonitrile.

### 4-(3-ethoxyphenoxy)benzonitrile

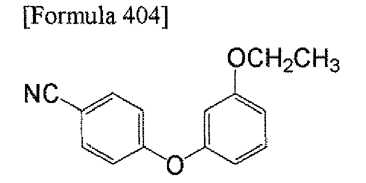

359 mg of 4-(3-ethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 367 mg of 4-(3-ethoxyphenoxy)benzylamine.

### 4-(3-ethoxyphenoxy)benzylamine

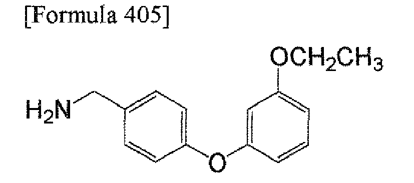

¹H-NMR (CDCl3) δ: 1.39 (3H, t, J = 7.0 Hz), 1.42 (2H, br s), 3.85 (2H, s), 3.99 (2H, q, J = 7.0 Hz), 6.54-6.58 (2H, m), 6.63 (1H, ddd, J = 8.2, 2.4, 1.0 Hz), 6.98-7.01 (2H, m), 7.18-7.22 (1H, m), 7.26-7.30 (2H, m).

### Reference production example 38

605 mg of 4-fluorobenzonitrile, 914 mg of 3-butoxyphenol, and 1.95 g of cesium carbonate were added to 5 ml ofDMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 949 mg of 4-(3-butoxyphenoxy)benzonitrile.

### 949 mg of 4-(3-butoxyphenoxy)benzonitrile

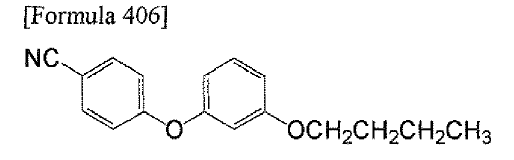

458 mg of 4-(3-butoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 349 mg of 4-(3-butoxyphenoxy)benzylamine.

### 4-(3-butoxyphenoxy)benzylamine

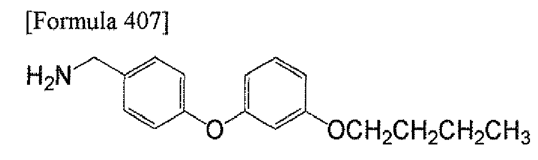

¹H-NMR (CDCl3) δ: 0.96 (3H, t, J = 7.5 Hz), 1.39 (2H, br s), 1.41-1.52 (2H, m), 1.71-1.78 (2H, m), 3.82-3.88 (2H, br m), 3.92 (2H, t, J = 6.4 Hz), 6.54-6.57 (2H, m), 6.61-6.65 (1H, m), 6.98-7.01 (2H, m), 7.17-7.22 (1H, m), 7.26-7.29 (2H, m).

### Reference production example 39

0.61 g of 4-fluorobenzonitrile, 0.74 g of 5-hydroxyindane, and 1.95 g of cesium carbonate were added to 5 ml of DMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.88 g of 4-(indan-5-yloxy)benzonitrile.

### 4-(indan-5-yloxy)benzonitrile

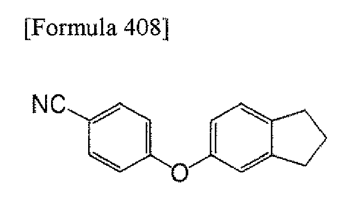

0.42 g of 4-(indan-5-yloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.42 g of 4-(indan-5-yloxy)benzylamine. 4-(indan-5-yloxy)benzylamine 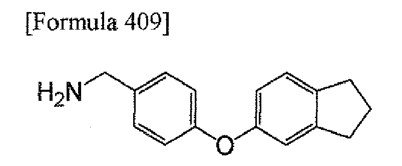 ¹H-NMR (CDCl₃) δ: 1.42 (2H, br s), 2.06-2.13 (2H, m), 2.87 (4H, t, J = 7.3 Hz), 3.84 (2H, s), 6.79 (1H, dd, J = 8.2, 2.2 Hz), 6.86 (1H, d, J = 2.2 Hz), 6.94-6.97 (2H, m), 7.16 (1H, d, J = 8.2 Hz), 7.23-7.27 (2H, m).

### Reference production example 40

0.61 g of 4-fluorobenzonitrile, 0.79 g of2-hydroxynaphthalene and 1.95 g of cesium carbonate were added to 5 ml of DMF. The obtained mixture was stirred at 100°C for 7 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.48 g of 4-(2-naphthyloxy)benzonitrile.

### 4-(2-naphthyloxy)benzonitrile

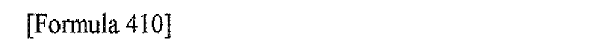

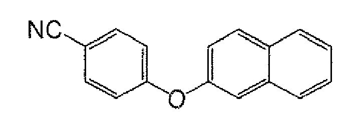

0.37 g of 4-(2-naphthyloxy)benzonitrile was added to 1 ml ofTHF. 1 ml of a THE solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and I ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.39 g of 4-(2-naphthyloxy)benzylamine. 4-(2-naphthyloxy)benzylamine 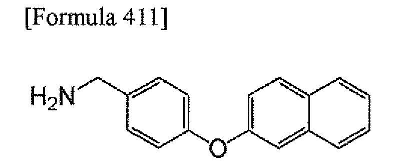 ¹H-NMR (CDCl₃) δ: 1.43 (2H, br s), 3.88 (2H, s), 7.03-7.06 (2H, m), 7.24-7.33 (4H, m), 7.37-7.47 (2H, m), 7.69 (1H, d, J = 8.1 Hz), 7.82 (1H, d, J = 8.1 Hz), 7.83 (1H, d, J = 8.6 Hz).

### Reference production example 41

605 mg of 3-fluorobenzonitrile, 594 mg of 2-methylphenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 866 mg of 3-(2-methylphenoxy)benzonitrile.

### 3-(2-methylphenoxy)benzonitrile

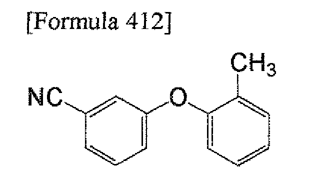

312 mg of 3-(2-methylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 309 mg of 3-(2-methylphenoxy)benzylamine.

### 3-(2-methylphenoxy)benzylamine

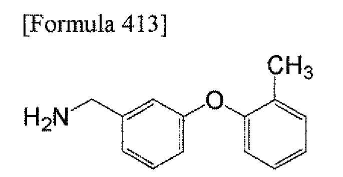

¹H-NMR (CDCl3) δ: 1.40 (2H, br s), 2.24 (3H, s), 3.83 (2H, s), 6.76 (1H, dd, J = 8.1, 2.0 Hz), 6.87-6.93 (2H, m), 6.98-7.01 (1H, m), 7.05-7.10 (1H, m), 7.14-7.20 (1H, m), 7.24-7.28 (2H, m).

### Reference production example 42

605 mg of 3-fluorobenzonitrile, 616 mg of 2-fluorophenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 895 mg of 3-(2-fluorophenoxy)benzonitrile.

### 3-(2-fluorophenoxy)benzonitrile

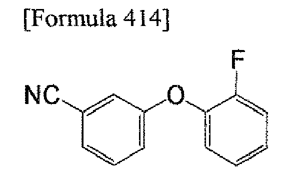

320 mg of 3-(2-fluorophenoxy)benzonitrile was added to ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, I ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 320 mg of 3-(2-fluorophenoxy)benzylamine.

### 3-(2-fluorophenoxy)benzylamine

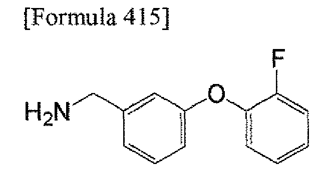

¹H-NMR (CDCl3) δ: 1.43 (2H, br s), 3.85 (2H, s), 6.84 (1H, dd, J = 8.2, 2.1 Hz), 6.94-6.96 (1H, m), 7.03-7.21 (5H, m), 7.26-7.30 (1H, m).

### Reference production example 43

605 mg of 3-fluorobenzonitrile, 704 mg of 2-chlorophenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 992 mg of 3-(2-chlorophenoxy)benzonitrile.

### 3-(2-chlorophenoxy)benzonitrile

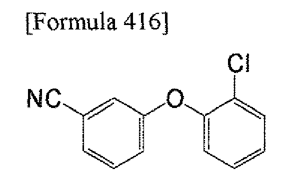

344 mg of 3-(2-chlorophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C The reaction mixture was filtrated through Celite (registered trade mark), and the filtrate was then concentrated by centrifugation under reduced pressure, so as to obtain 337 mg of 3-(2-chlorophenoxy)benzylamine.

### 3-(2-chlorophenoxy)benzylamine

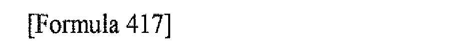

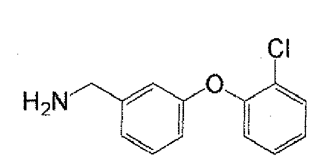

¹H-NMR (CDCl3) δ: 1.45 (2H, br s), 3.86 (2H, s), 6.87 (1H, dd, J = 8.1, 2.0 Hz), 6.92-6.97 (3H, m), 7.06-7.09 (1H, m), 7.26-7.32 (3H, m).

### Reference production example 44

605 mg of 3-fluorobenzonitrile, 704 mg of 3-chlorophenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 968 mg of 3-(3-chlorophenoxy)benzonitrile.

### 3-(3-chlorophenoxy)benzonitrile

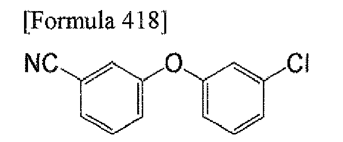

344 mg of 3-(3-chlorophenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 336 mg of 3-(3-chlorophenoxy)benzylamine.

### 3-(3-chlorophenoxy)benzylamine

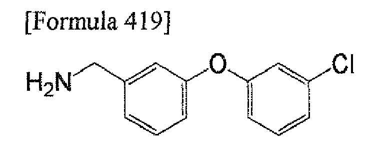

¹H-NMR (CDCl3) δ: 1.45 (2H, br s), 3.87 (2H, s), 6.87-6.92 (2H, m), 6.97-7.01 (2H, m), 7.05-7.12 (2H, m), 7.22-7.26 (1H, m), 7.30-7.34 (1H, m).

### Reference production example 45

605 mg of 3-fluorobenzonitrile, 979 mg of 3-trifluoromethoxyphenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1100 mg of 3-(3-trifluoromethoxyphenoxy)benzonitrile.

### 3-(3-trifluoromethoxyphenoxy)benzonitrile

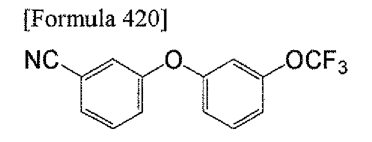

419 mg of 3-(3-trifluoromethoxyphenoxy)benzonitrile was added to 1 ml of THF. Thereafter, 1 ml of a THE solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 401 mg of 3-(3-trifluoromethoxyphenoxy)benzylamine.

### 3-(3-trifluoromethoxyphenoxy)benzylamine

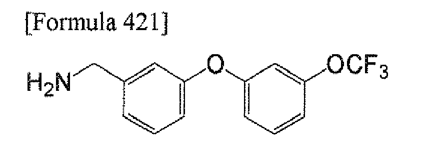

¹H-NMR (CDCl3) δ: 1.43 (2H, br s), 3.88 (2H, s), 6.84-6.87 (1H, m), 6.89-6.97 (3H, m), 7.00-7.03 (1H, m), 7.10-7.14 (1H, m), 7.30-7.36 (2H, m).

### Reference production example 46

605 mg of 3-fluorobenzonitrile, 759 mg of 3-ethoxyphenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 991 mg of 3-(3-ethoxyphenoxy)benzonitrile.

### 3-(3 -ethoxyphenoxy)benzonitrile

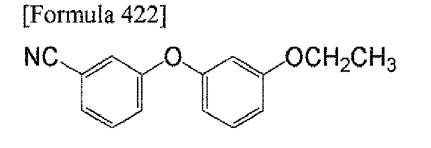

359 mg of 3-(3-ethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 354 mg of 3-(3-ethoxyphenoxy)benzylamine.

### 3-(3-ethoxyphenoxy)benzylamine

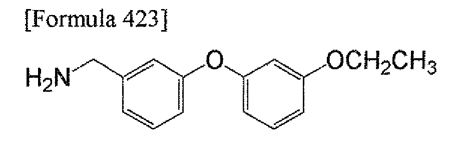

¹H-NMR (CDCl3) δ: 1.32-1.49 (2H, br m), 1.40 (3H, t, J = 7.0 Hz), 3.85 (2H, s), 4.00 (2H, q, J = 7.0 Hz), 6.55-6.59 (2H, m), 6.64 (1H, ddd, J = 8.3, 2.0, 1.0 Hz), 6.90 (1H, dd, J = 8.0, 2.0 Hz), 6.97-6.99 (1H, m), 7.04-7.07 (1H, m), 7.19-7.23 (1H, m), 7.27-7.31 (1H, m).

### Reference production example 47

605 mg of 3-fluorobenzonitrile, 671 mg of 3-ethylphenol, and 1.95 g of cesium carbonate were added to 5 ml of DMF. The obtained mixture was heated to reflux for 20 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 928 mg of 3-(3-ethylphenoxy)benzonitrile.

### 3-(3-ethylphenoxy)benzonitrile

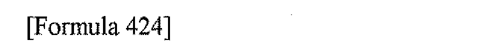

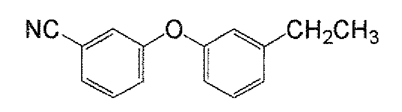

335 mg of 3-(3-ethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 336 mg of 3-(3-ethylphenoxy)benzylamine.

### 3-(33-ethylphenoxy)benzylamine

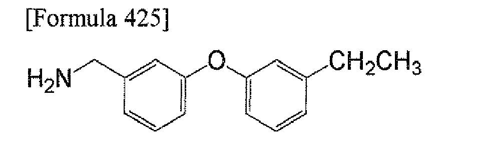

1H-NMR (CDCl3) δ: 1.22 (3H, t, J = 7.6 Hz), 1.40 (2H, br s), 2.63 (2H, q, J = 7.6 Hz), 3.85 (2H, s), 6.81 (1H, dd, J = 8.1, 1.8 Hz), 6.86-6.90 (2H, m), 6.93-6.98 (2H, m), 7.03-7.06 (1H, m), 7.22-7.31 (2H, m).

### Reference production example 48

605 mg of 3-fluorobenzonitrile, 979 mg of 4-trifluoromethoxyphenol, and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1130 mg of 3-(4-trifluoromethoxyphenoxy)benzonitrile.

### 3-(4-tfifluoromethoxyphenoxy)benzonitrile

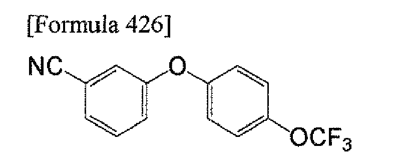

419 mg of 3-(4-trifluoromethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 349 mg of 3-(4-trifluoromethoxyphenoxy)benzylamine.

### 3-(4-trifluoromethoxyphenoxy)benzylamine

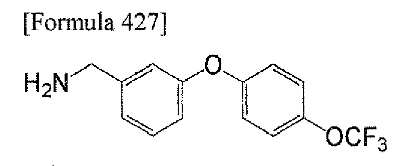

1H-NMR (CDCl3) δ: 1.50 (2H, br s), 3.87 (2H, s), 6.89 (1H, dd, J = 8.1, 1.8 Hz), 6.98-7.02 (3H, m), 7.08-7.11 (1H, m), 7.16-7.20 (2H, m), 7.30-7.34 (1H, m).

### Reference production example 49

605 mg of 3-fluorobenzonitrile, 759 mg of 4-ethoxyphenol, and 1.95 g of cesium carbonate were added to 5 ml of DMF, The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 941 mg of 3-(4-ethoxyphenoxy)benzonitrile.

### 3-(4-ethoxyphenoxy)benzonitrile

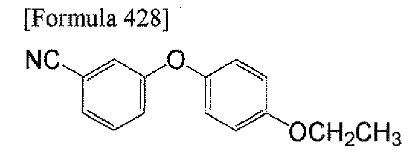

359 mg of 3-(4-ethoxyphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 329 mg of 3-(4-ethoxyphenoxy)benzylamine.

### 3-(4-ethoxyphenoxy)benzylamine

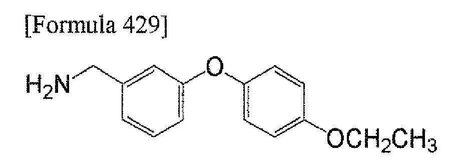

1H-NMR (CDCl3) δ: 1.42 (3H, t, J = 7.0 Hz), 1.52 (2H, br s), 3.82 (2H, s), 4.02 (2H, q, J = 7.0 Hz), 6.81 (1H, dd, J = 8.2, 1.9 Hz), 6.85-6.90 (3H, m), 6.95-7.00 (3H, m), 7.23-7.27 (1H, m).

### Reference production example 50

605 mg of 3-fluorobenzonitrile, 671 mg of 4-ethylphenol, and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 994 mg of 3-(4-ethylphenoxy)benzonitrile.

### 3-(4-ethylphenoxy)benzonitrile

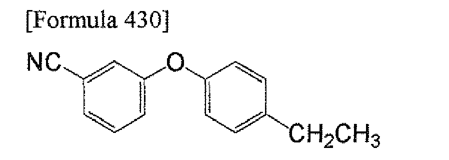

335 mg of 3-(4-ethylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 328 mg of 3-(4-ethylphenoxy)benzylamine.

### 3-(4-ethylphenoxy)benzylamine

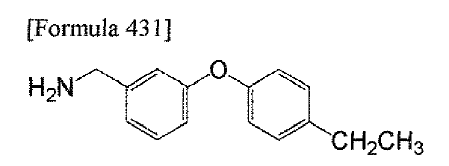

1H-NMR (CDCl3) δ: 1.24 (3H, t, J = 7.7 Hz), 1.48 (2H, br s), 2.64 (2H, q, J = 7.7 Hz), 3.84 (2H, s), 6.86 (1H, dd, J = 8.1, 2.0 Hz), 6.92-6.96 (3H, m), 7.00-7.04 (1H, m), 7.15-7.18 (2H, m), 7.25-7.30 (1H, m).

### Reference production example 51

605 mg of 3-fluorobenzonitrile, 748 mg of 4-propylphenol, and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1010 mg of 3-(4-propylphenoxy)benzonitrile.

### 3-(4-propylphenoxy)benzonitrile

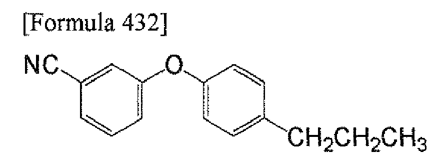

356 mg of 3-(4-propylphenoxy)benzonitrile was added to 1 ml of THF. Thereafter, 1 ml of a THF solution of lithium aluminum hydride (2.0 M) was added dropwise to the mixture solution at 0°C. The obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 348 mg of 3-(4-propylphenoxy)benzylamine.

### 3-(4-propylphenoxy)benzylamine

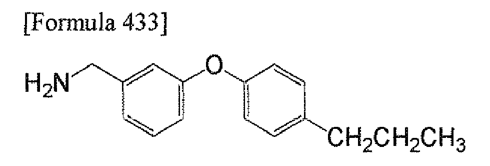

1H-NMR (CDCl3) δ: 0.95 (3H, t, J = 7.3 Hz), 1.45 (2H, br s), 1.59-1.69 (2H, m), 2.57 (2H, t, J = 7.7 Hz), 3.84 (2H, s), 6.86 (1H, dd, J = 7.8, 2.0 Hz), 6.91-6.96 (3H, m), 7.00-7.04 (1H, m), 7.12-7.16 (2H, m), 7.25-7.30 (1H, m).

### Reference production example 52

0.61 g of 3-fluorobenzonitrile, 0.74 g of 5-hydroxyindane, and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.90 g of 3-(indan-5-yloxy)benzonitrile.

### 3-(indan-5-yloxy)benzonitrile

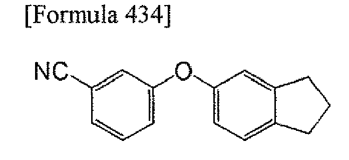

0.3 g of 3-(indan-5-yloxy)benzonitrile was added to 1 ml of THF. 1 ml of a THF solution of lithium aluminum hydride (2.0 M) was added dropwise to the mixture at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.33 g of 3-(indan-5-yloxy)benzylamine, 3-(indan-5-yloxy)henzylamine 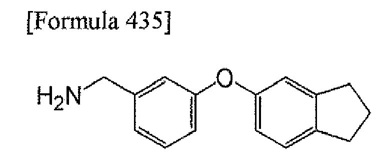 ¹H-NMR (CDCl₃) δ: 1.44 (2H, br s), 2.06-2.14 (2H, m), 2.88 (4H, t, J = 7.5 Hz), 3.83 (2H, s), 6.80 (1H, dd, J = 8.1, 2.3 Hz), 6.84-6.89 (2H, m), 6.93-6.95 (1H, m), 6.99-7.03 (1H, m), 7.16 (1H, d, J = 8.3 Hz), 7.25-7.29 (1H, m).

### Reference production example 53

0.61 g of 3-fluorobenzonitrile, 0.76 g of 2-hydroxy-5,6,7,8-tetrahydronaphthalene, and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1.07 g of 3-(5,6,7,8-tetrahydronaphthalen-2-yloxy)benzonitrile.

### 3-(5,6,7,8-tetrahydronaphthalen-2-yloxy)benzonitrile

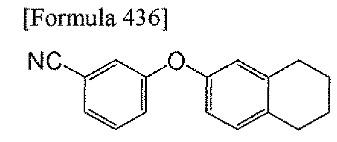

0.37 g of 3-(5,6,7,8-tetrahydronaphthalen-2-yloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 4.38 g of 3-(5,6,7,8-tetrahydronaphthalen-2-yloxy)benzylamine.

### 3-(5,6,7,8-tetrahydronaphthalen-2-yloxy)benzylamine

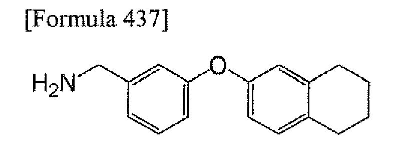

¹H-NMR (CDCl₃) δ: 1.42 (2H, br s), 1.76-1.82 (4H, m), 2.71-2.76 (4H, m), 3.83 (2H, s), 6.72-6.78 (2H, m), 6.86 (1H, dd, J = 8.0, 1.9 Hz), 6.93-6.95 (1H, m), 7.00-7.04 (2H, m), 7.25-7.29 (1H, m).

### Reference production example 54

0.61 g of 3-fluorobenzonitrile, 0.76 g of 5-hydroxybenzo[1,3]dioxole and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.89 g of 3-(benzo[1,3]dioxol-5-yloxy)benzonitrile.

### 3-(benzo[1,3]dioxol-5-yloxy)benzonitrile

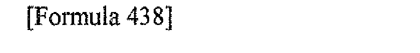

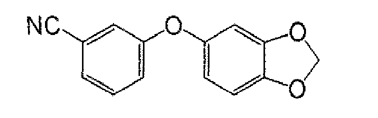

0.36 g of 3-(benzo[1,3]dioxol-5-yloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.35 g of 3-(benzo[1,3]dioxol-5-yloxy)benzylamine.

### 3-(benzo[1,3]dioxol-5-yloxy)benzylamine

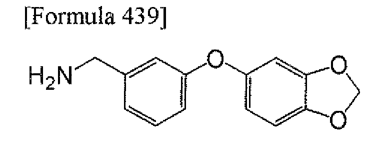

¹H-NMR (CDCl₃) δ: 1.53 (2H, br s), 3.83 (2H, s), 5.98 (2H, s), 6.50 (1H, dd, J = 8.3, 2.4 Hz), 6.58 (1H, d, J = 2.4 Hz), 6.76 (1H, d, J = 8.3 Hz), 6.83 (1H, dd, J = 8.1, 2.3 Hz), 6.91-6.92 (1H, m), 6.99-7.03 (1H, m), 7.24-7.29 (1H, m).

### Reference production example 55

0.61 g of 3-fluorobenzonitrile, 0.79 g of 2-hydroxynaphthalene and 1.95 g of cesium carbonate were added to 5 ml of DMF. The obtained mixture was heated to reflux for 8 hours. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1.3 g of 3-(2-naphthyloxy)benzonitrile.

### 3-(2-naphthyloxy)benzonitrile

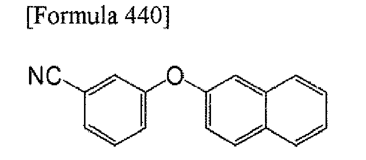

0.37 g of 3-(2-naphthyloxy)benzonitrile was added to 1 ml of THF. 1 ml of a THF solution of lithium aluminum hydride (2.0 M) was added dropwise to the mixture solution at 0°C and the obtained mixture was stirred at a room temperature for 3 hours. Thereafter, 1 ml of ethanol, I ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.39 g of 3-(2-naphthyloxy)benzylamine. 3-(2-naphthyloxy)benzylamine 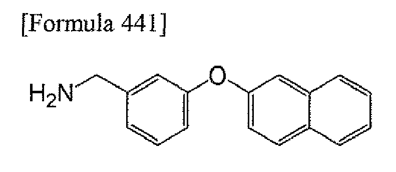 ¹H-NMR (CDCl₃) δ: 1.61 (2H, br s), 3.85 (2H, s), 6.95 (1H, dd, J = 8.0, 1.9 Hz), 7.01-7.03 (1H, m), 7.07-7.10 (1H, m), 7.24-7.35 (3H, m), 7.38-7.48 (2H, m), 7.69-7.72 (1H, m), 7.81-7.85 (2H, m).

### Reference production example 56

8.0 g of triethylamine was added to a mixture of 7.0 g of2-fluoro-3-hydroxybenzylamine hydrobromide and 70 ml of DMF. Subsequently, 7.7 g of 2-aminonicotinic acid was added thereto, and 18.1 g of a BOP reagent was further added thereto. The obtained mixture was stirred at a room temperature for 10 hours. Thereafter, 30 ml of pyridine was added to the reaction mixture, and the obtained mixture was stirred at 110°C for 3 hours. Thereafter, the reaction mixture was cooled to a room temperature, and water was then added thereto, followed by extraction with ethyl acetate. The organic layer was successively washed with a saturated sodium bicarbonate solution, water and a saturated saline solution, and it was then dried over anhydrous sodium sulfate, followed by concentration under reduced pressure. The obtained residue was washed with hexane and MTBE, so as to obtain 5.4 g ofN-(2-fluoro-3-hydroxyphenylmethyl)-2-aminonicotinic acid amide.

### N-(2-fluoro-3-hydroxyphenylmethyl)-2-aminonicotinic acid amide

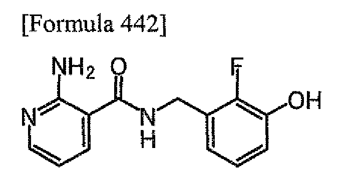

1H-NMR (DMSO-D6) δ: 4.44 (2H, d, J = 5.6 Hz), 6.59 (1H, dd, = 7.7, 4.8 Hz), 6.71-6.75 (1H, m), 6.84 (1H, td, J = 8.2,1.7 Hz), 6.90-6.94 (1H, m), 7.06 (2H, br s), 7.95 (1H, dd, J = 7.7, 1.9 Hz), 8.08 (1H, dd, J = 4.7, 1.8 Hz), 8.91 (1H, t, J = 5.8 Hz), 9.77 (1H, s).

### Reference production example 57

A mixture of 22 g of 2-fluorophenol, 2.8 g of copper (I) bromide, 23 g of potassium (1,1-dimethylethoxide), and 125 g of bromobenzene was stirred under heating at 150°C, so that 1,1-dimethylethanol was removed from the reaction system. Thereafter, the mixture was heated to reflux for 2 hours. Thereafter, the reaction mixture was concentrated under reduced pressure, and ethyl acetate was then added to the residue, followed by filtration with Celite (registered trade mark). The filtrate was concentrated under reduced pressure, and the residue was then subjected to silica gel column chromatography. The obtained 2-fluorodiphenyl ether was distilled under an ordinary pressure, so as to obtain 22 g of 2-fluorodiphenyl ether.

### 2-fluorodiphenyl ether

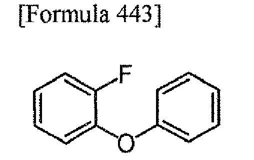

¹H-NMR (CDCl₃) δ: 6.96-7.00 (2H, m), 7.03-7.21 (5H, m), 7.29-7.35 (2H, m).

To a mixture of 14 g of 2-fluorodiphenyl ether, 17 ml of N,N,N',N",N"-pentamethyldiethylenetriamine and 200 ml of THF, 48.5 ml of a hexane solution of 1.6 mol/liter n-butyllithium was added at -70°C, and the obtained mixture was then stirred at -70°C for 2 hours. Thereafter, dry ice was mixed with the reaction mixture, and the temperature of the mixture was then gradually raised to a room temperature. THF was distilled under reduced pressure, and 5% hydrochloric acid was then added to the reaction mixture at 0°C, followed by extraction with ethyl acetate. The organic layer was washed with a saturated saline solution, and it was then dried over magnesium sulfate, followed by concentration under reduced pressure. The obtained residue was collected by filtration, and it was then washed with hexane. The resultant was dried under reduced pressure, so as to obtain 15 g of 2-fluoro-3-phenoxybenzenecarboxylic acid.

### 2-fluoro-3-phenoxybenzenecarboxylic acid

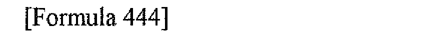

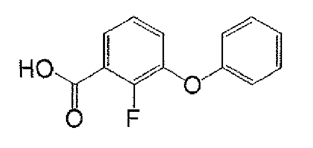

¹H-NMR (CDCl₃) δ: 7.00 (2H, d, J = 8.5 Hz), 7.11-7.20 (2H, m), 7.26-7.30 (1H, m), 7.35 (2H, dd, J = 7.9, 7.7 Hz), 7.79 (1H, ddd, J = 7.9, 6.2, 1.5 Hz).

10 g of 2-fluoro-3-phenoxybenzenecarboxylic acid, 3.1 ml of thionyl chloride, 1 drop of DMF and 30 ml oftoluene were stired at 80°C for 1 hour, and then at 110°C for 2 hours. Thereafter, the reaction mixture was cooled to a room temperature, and it was then concentrated under reduced pressure, so as to obtain 11 g of 2-fluoro-3-phenoxybenzenecarboxylic acid chloride.

### 2-fluoro-3-phenoxybenzenecarboxylic acid chloride

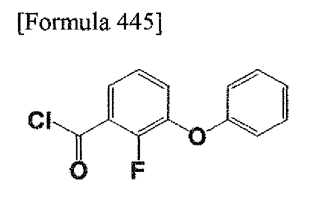

¹H-NMR (CDCl₃) δ: 7.00 (2H, d, J = 8.0 Hz), 7.16 (1H, t, J = 7.1 Hz), 7.22 (1H, td, J = 8.2, 1.0 Hz), 7.30-7.39 (3H, m), 7.84 (1H, ddd, J = 7.8, 6.2, 1.5 Hz).

The 2-fluoro-3-phenoxybenzenecarboxylic acid chloride was added dropwise to a mixture of 20 ml of 28% aqueous ammonia and 50 ml of THF at 4°C. The obtained mixture was stirred at a room temperature for 1 hour. Thereafter, the reaction mixture was concentrated under reduced pressure, and the obtained residue was then collected by filtration. The resultant was washed with water and hexane, and it was then dried under reduced pressure, so as to obtain 8.9 g of 2-fluoro-3-phenoxybenzamide.

### 2-fluoro-3-phenoxybenzamide

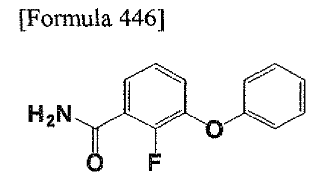

¹H-NMR (CDCl₃) δ: 6.06 (1H, s), 6.64 (1H, s), 7.00 (2H, d, J = 7.2 Hz), 7.12-7.27 (3H, m), 7.36 (2H, t, J = 7.2 Hz), 7.85-7.89 (1H, m).

A mixture of 4.4 g of 2-fluoro-3-phenoxybenzamide and 20 ml of THF was added dropwise to a mixture of 58 ml of a THF solution of 1 mol/liter borane-THF complex and 20 ml ofTHF. The obtained mixture was stirred under heating to reflux for 7 hours. Thereafter, 20 ml of a THF solution of 1 mol/liter borane-THF complex was added to the reaction mixture, and the obtained mixture was stirred under heating to reflux again for 2 hours. The reaction mixture was cooled to 0°C, and diluted hydrochloric acid was added to the mixture. The obtained mixture was further stirred under heating to reflux for 30 minutes. The reaction mixture was cooled to a room temperature, and it was then concentrated under reduced pressure. A 15% sodium hydroxide aqueous solution was added to the obtained residue, and the mixture was then extracted with MTBE. Concentrated hydrochloric acid was added to the organic layer, followed by concentration, so as to obtain 4.0 g of 2-fluoro-3-phenoxybenzylamine hydrochloride.

### 2-fluoro-3-phenoxybenzylamine hydrochloride

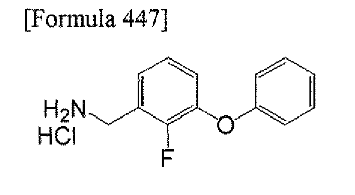

¹H-NMR (DMSO-d₆) δ: 4.10 (2H, s), 7.00 (2H, d, J = 8.5 Hz), 7.13-7.21 (2H, m), 7.27 (1H, t, J = 8.0 Hz), 7.37-7.42 (2H, m), 7.46-7.50 (1H, m), 8.73 (3H, s).

### Reference production example 58

To a mixture of 3.04 g of 4-fluorodiphenyl ether, 3.08 g of N,N,N', N",N"-pentamethyldiethylenetriamine and 30 ml of THF, 11 ml of a hexane solution of 1.6 mol/liter n-butyllithium was added at -78°C. The obtained mixture was stirred at -78°C for 2 hours. Thereafter, dry ice was mixed with the mixture, and the temperature of the mixture was then gradually raised to a room temperature. 5% hydrochloric acid was added to the reaction mixture at 0°C, and it was then extracted with ethyl acetate. The organic layer was washed with a saturated saline solution, and it was then dried over anhydrous sodium sulfate, followed by concentration under reduced pressure. The obtained residue was collected by filtration, and it was then washed with hexane, so as to obtain 3.52 g of 2-fluoro-5-phenoxybenzenecarboxylic acid.

### 2-fluoro-5-phenoxybenzenecarboxylic acid

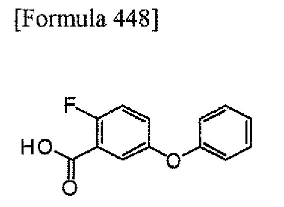

¹H-NMR (CDCl₃) δ: 6.98-7.01 (2H, m), 7.12-7.17 (2H, m), 7.21-7.25 (1H, m), 7.34-7.39 (2H, m), 7.62 (1H, dd, J = 5.9, 3.2 Hz).

2.94 g of thionyl chloride was added to a mixture of 3.82 g of 2-fluoro-5-phenoxybenzenecarboxylic acid and 30 ml of toluene at a room temperature. They were blended at 50°C for 30 minutes, then at 80°C for 2 hours, and then at 110°C for 1 hour. Thereafter, the temperature of the reaction mixture was cooled to a room temperature, and the mixture was then concentrated under reduced pressure, so as to obtain crude 2-fluoro-5-phenoxybenzenecarboxylic acid chloride.

The thus obtained crude 2-fluoro-5-phenoxybenzenecarboxylic acid chloride was added dropwise to a mixture of 20 ml of 28% aqueous ammonia and 50 ml of THF at 0°C and the obtained mixture was stirred at a room temperature for 1 hour. Thereafter, the reaction mixture was concentrated under reduced pressure, and the obtained residue was then collected by filtration. The residue was washed with water and hexane, and it was then dried under reduced pressure, so as to obtain 3.0 g of 2-fluoro-5-phenoxybenzamide.

### 2-fluoro-5-phenoxybenzamide

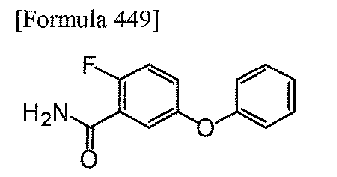

¹H-NMR (CDCl₃) δ: 5.95 (1H, br s), 6.69 (1H, br s), 6.97-7.01 (2H, m), 7.09-7.18 (3H, m), 7.32-7.37 (2H, m), 7.73 (1H, dd, J = 6.3, 2.9 Hz).

20 ml of a borane-THF-complex-containing THF solution (0.99 M) was added dropwise to a mixture of 1.5 g of 2-fluoro-5-phenoxybenzamide and 10 ml of THF at 0°C. The obtained mixture was stirred for 30 minutes and it was then stirred under heating to reflux for 3 hours. Thereafter, the reaction mixture was cooled to 5°C, and diluted hydrochloric acid was then added thereto. The obtained mixture was further heated to reflux for 3 hours. Thereafter, the reaction mixture was concentrated under reduced pressure, and the obtained residue was then successively washed with water and hexane, so as to obtain 1.0 g of 2-fluoro-5-phenoxybezylamine hydrochloride.

### 2-fluoro-5-phenoxybezylamine hydrochloride

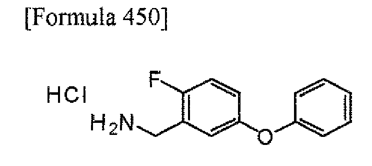

¹H-NMR (DMSO-D₆) δ: 4.04 (2H, q, J = 5.7 Hz), 7.00-7.42 (8H, m), 8.56 (3H, br s).

### Reference production example 59

A mixture of 4.84 g of 4-fluorobenzonitrile, 9.77 g of 3,5-dimethylphenol, 26.1 g of cesium carbonate and 100 ml of DMF was stirred at 130°C for 6.5 hours.
Thereafter, the reaction mixture was cooled to a room temperature, and it was then filtrated. Thereafter, water was added to the obtained filtrate, followed by extraction with ethyl acetate. The extract was dried over magnesium sulfate, followed by concentration under reduced pressure. The obtained residue was subjected to silica gel column chromatography, so as to obtain 8.40 g of 4-(3,5-dimetylphenoxy)-benzonitrile.

### 4-(3,5-dimetylphenoxy)-benzonitrile

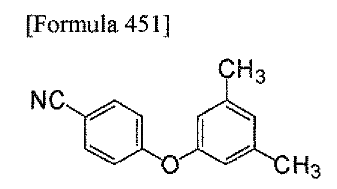

1H-NMR (CDCl3) δ: 2.32 (6H, d, J = 0.5 Hz), 6.66-6.68 (2H, m), 6.85-6.87 (1H, m), 6.96-7.00 (2H, m), 7.56-7.61 (2H, m).

A mixture solution of 8.3 g of 4-(3,5-dimethylphenoxy)-benzonitrile and 20 ml of THF was added dropwise to a mixture solution of 2.11 g of lithium aluminum hydride and 50 ml ofTHF at 0°C. The obtained mixture was stirred at a room temperature for 10 hours. A small amount of ethyl acetate and water was successively added to the reaction mixture. Thereafter, the reaction mixture was filtrated through Celite (registered trade mark), and the filtrate was then concentrated under reduced pressure, so as to obtain 7.1 g of 4-(3,5-dimethylphenoxy)benzylamine.

### 4-(3,5-dimethylphenoxy)benzylamine

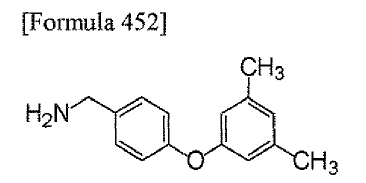

1H-NMR (CDCl3) δ: 2.28 (6H, d, J = 0.5 Hz), 2.28 (3H, s), 2.28 (3H, s), 3.85 (2H, s), 6.61-6.63 (2H, m), 6.72-6.74 (1H, m), 6.95-6.98 (2H, m), 7.25-7.28 (2H, m).

### Reference production example 60

A mixture of 7.57 g of 2-methylphenol and 15 ml of DMF was slowly added to a mixture of 2.94 g of 60% sodium hydride (in oil) and 35 ml of DMF. Subsequently, 5.39 g of 5-nitrothiophen-2-carbonitrile was slowly added thereto, and the obtained mixture was then stirred at a room temperature for 2 days. Thereafter, the reaction mixture was added to ice water, and it was then extracted with ethyl acetate. The organic layer was dried over magnesium sulfate, and it was then concentrated under reduced pressure. The obtained residue was subjected to silica gel column chromatography, so as to obtain 2.50 g of 5-(2-methylphenyloxy)-thiophen-2-carbonitrile.

### 5-(2-methylphenyloxy)-thiophen-2-carbonitrile

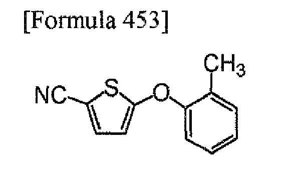

¹H-NMR (CDCl₃) δ: 2.27 (3H, s), 6.32 (1H, d, J = 4.1 Hz), 7.09 (1H, dd, J = 7.8, 1.5 Hz), 7.16-7.30 (3H, m), 7.34 (1H, d, J = 4.1 Hz).

18 ml of a borane-THF-complex-containing THF solution (0.99 M) was added dropwise to a mixture of 2.5 g of 5-(2-methylphenyloxy)-thiophen-2-carbonitrile and 20 ml of THF at 0°C. The obtained mixture was stirred for 30 minutes, and it was then stirred under heating to reflux for 3 hours. Thereafter, the reaction mixture was cooled to 5°C, and diluted hydrochloric acid was then added thereto. The obtained mixture was further heated to reflux for 3 hours. Thereafter, the reaction mixture was concentrated under reduced pressure, and the obtained residue was then successively washed with water and hexane, so as to obtain 2.53 g of [5-(2-methylphenyloxy)thiophen-2-yl]methylamine hydrochloride.

### [5-(2-methylphenyloxy)thiophen-2-yl]methylamine hydrochloride

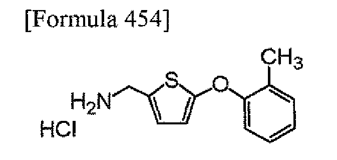

¹H-NMR (DMSO-D₆) δ: 2.26 (3H, s), 4.08-4.14 (2H, m), 6.47 (1H, d, J = 3.6 Hz), 6.98 (1H, d, J = 3.6 Hz), 7.03-7.06 (1H, m), 7.12-7.16 (1H, m), 7.22-7.26 (1H, m), 7.32-7.34 (1H, m), 8.34 (3H, br s).

### Reference production example 61

A mixture of 27 g of 4-chlorobenzotrifluoride, 12 g of 3-hydraxybenzaldebyde, 12.3 g of potassium 1,1-dimethylethoxide, 4.3 g of copper (I) bromide and 150 ml of DMF was heated to reflux for 2 hours. Thereafter, water and ethyl acetate were added to the reaction mixture. Thereafter, insoluble matter was removed by Celite (registered trade mark), and the organic layer was then separated. The organic layer was successively washed with hydrochloric acid, water and a saturated saline solution, and it was then dried over magnesium sulfate, followed by concentration under reduced pressure. The obtained residue was subjected to silica gel column chromatography, so as to obtain 6.5 g of 3-(4-trifluorometlhylphenoxy)benzaldehyde.

### 3-(4-trifluoromethylphenoxy)benzaldehyde

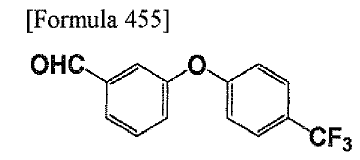

1H-NMR (CDCl3) δ: 7.09 (2H, d, J = 8.5 Hz), 7.33 (1H, ddd, J = 8.1, 2.5, 1.0 Hz), 7.53-7.71 (5H, m), 9.99 (1H, s).

6.5 g of 3-(4-trifluoromethylphenoxy)benzaldehyde, 2.5 g of hydroxylamine hydrochloride, 50 ml of ethanol and 2.4 g of water were blended. The obtained mixture was stirred at a room temperature for 2 hours. Thereafter, the reaction mixture was left overnight. Subsequently, 2.5 ml of 10 N hydrochloric acid and 3.0 g of 10% palladium on carbon were added to the reaction mixture, and the obtained mixture was then stirred under an ordinary pressure in a hydrogen atmosphere for 10 hours. Thereafter, the reaction mixture was filtrated through Celite (registered trade mark), and the filtrate was then concentrated under reduced pressure. The residue was washed with water and MTBE, so as to obtain 4.9 g of 3-(4-trifluoromethylphenoxy)benzylamine hydrochloride.

### 3-(4-trifluoromethylphenoxy)benzylamine hydrochloride

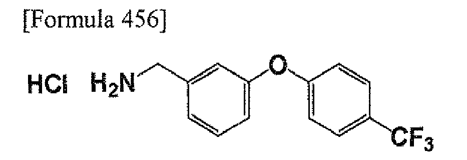

1H-NMR (CDCl3) δ: 1.52 (2H, br s), 3.88 (2H, s), 6.93 (1H, dd, J = 8.0, 2.0 Hz), 7.02-7.06 (3H, m), 7.14 (1H, dd, J = 7.6, 0.5 Hz), 7.34 (1H, dd, J = 8.0, 7.6 Hz), 7.57 (2H, d, J = 8.5 Hz).

### Reference production example 62

20 ml of a borane-THF-complex-containing THF solution (0.93 M) was added dropwise to a solution produced by adding 3.5 g of 4-(4-bromophenoxy)benzonitrile and 50 ml of THF at 0°C. The obtained mixture was stirred under heating to reflux for 6 hours. Thereafter, diluted hydrochloric acid was then added the reaction mixture. The obtained mixture was further heated to reflux for 1 hour. Thereafter, the reaction mixture was concentrated under reduced pressure, and the obtained residue was then successively washed with water and chloroform, so as to obtain 3.5 g of 4-(4-bromophenoxy)benzylamine hydrochloride.

### 4-(4-bromophenoxy)benzylamine hydrochloride

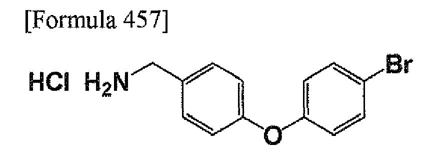

1H-NMR (DMSO-D6) δ: 4.00 (2H, s), 6.94-6.98 (2H, m), 7.07-7.10 (2H, m), 7.52-7.60 (4H, m), 8.45 (3H, br s).

### Reference production example 63

A mixture of 12.4 g of 4-fluorobenzaldehyde, 12.0 g of phenol, 18.0 g of potassium carbonate and 60 ml of DMF was heated to reflux for 1 hour. After, water was added to the reaction mixture, it was then extracted with ethyl acetate. The organic layer was successively washed with diluted hydrochloric acid, water and a saturated saline solution, and it was then dried over magnesium sulfate, followed by concentration under reduced pressure. The obtained residue was subjected to silica gel column chromatography, so as to obtain 21.0 g of 4-phenoxybenzaldehyde.

### 4-phenoxybenzaldehyde

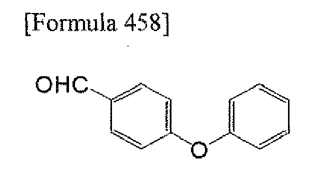

21.0 g of 4-phenoxybenzaldehyde, 10.5 g of hydroxylamine hydrochloride, 200 ml of ethanol and 10 ml of water were blended. The obtained mixture was stirred at a room temperature for 2 hours. Thereafter, the reaction mixture was left overnight. Subsequently, 10 ml of 10 N hydrochloric acid and 3.2 g of 10% palladium on carbon were added to the reaction mixture, and the obtained mixture was then stirred under an ordinary pressure in a hydrogen atmosphere for 6 hours. Thereafter, the reaction mixture was filtrated through Celite (registered trade mark), and the filtrate was then concentrated under reduced pressure. The residue was washed with water and chloroform, so as to obtain 19.3 g of 4-phenoxybenzylamine hydrochloride.

### 4-phenoxybenzylamine hydrochloride

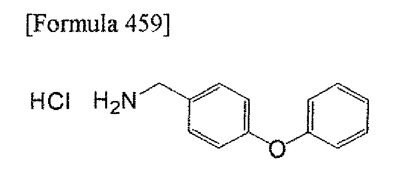

¹H-NMR (DMSO-D₆) δ: 3.99 (2H, s), 6.99-7.04 (4H, m), 7.14-7.9 (1H, m), 7.39-7.44 (2H, m), 7.52-7.56 (2H, m), 8.56 (3H, br s).

### Reference production example 64

35.0 g of 3-phenoxybenzaldehyde, 18.5 g of hydroxylamine hydrochloride, 200 ml of ethanol, and 18.2 g of water were blended. The obtained mixture was stirred at a room temperature for 2 hours. Thereafter, the reaction mixture was left overnight. Subsequently, 18 ml of 10 N hydrochloric acid and 2.5 g of 10% palladium on carbon were added to the reaction mixture, and the obtained mixture was then stirred under an ordinary pressure in a hydrogen atmosphere for 6 hours. Thereafter, the reaction mixture was filtrated through Celite (registered trade mark), and the filtrate was then concentrated under reduced pressure. The residue was washed with water, so as to obtain 33.5 g of 3-phenoxybenzylamine hydrochloride. 3-phenoxybenzylamine hydrochloride 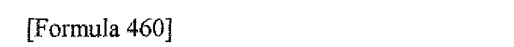 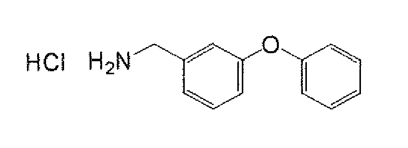 ¹H-NMR (DMSO-D₆) δ: 4.00 (2H, s), 6.97-7.05 (3H, m), 7.14-7.19 (1H, m), 7.22-7.25 (1H, m), 7.28-7.3 (1H, m), 7.38-7.44 (3H, m), 8.59 (3H, br s).

### Reference production example 65

A mixture of 10 g of 4-fluorobenzonitrile, 11 g of 3-methylphenol, 35 g of cesium carbonate and 100 ml of DMF was heated to reflux for 2 hours. Thereafter, ethyl acetate was added to the reaction mixture. Thereafter, insoluble matter was removed by Celite (registered trade mark), and the filtrate was then concentrated under reduced pressure. The obtained residue was subjected to silica gel column chromatography, so as to obtain 17.5 g of 4-(3-methylphenoxy)benzonitrile.

### 4-(3-methylphenoxy)benzonitrile

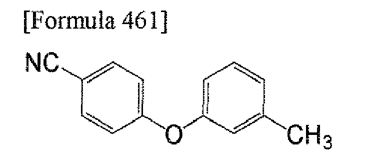

1H-NMR (CDC13) δ: 2.36 (3H, s), 6.84-6.89 (2H, m), 6.97-7.06 (3H, m), 7.26-7.31 (1H, m), 7.57-7.61 (2H, m).

A solution produced by dissolving 17.5 g of 4-(3-methylphenoxy)benzonitrile in 10 ml of THF was added dropwise to a mixture solution of 3.8 g of lithium aluminum hydride and 100 ml of THF at 0°C. The obtained mixture was stirred at a room temperature for 4 hours. Thereafter, water, 15% sodium hydroxide aqueous solution and water were successively added to the reaction mixture, and the obtained mixture was then left overnight. Thereafter, the reaction mixture was filtrated through Celite (registered trade mark), and the filtrate was then concentrated under reduced pressure. MTBE and potassium carbonate were added to the residue. The resultant was filtrated through Celite (registered trade mark), and the filtrate was then concentrated under reduced pressure so as to obtain 16 g of crude 4-(3-methylphenoxy)benzylamine.

### Crude 4-(3-methylphenoxy)benzylamine

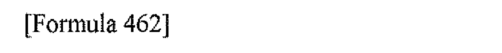

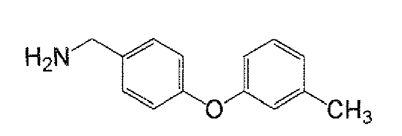

1H-NMR (CDCl3) δ: 1.43 (2H, br s), 2.32 (3H, s), 3.85 (2H, s), 6.77-6.83 (2H, m), 6.88-6.92 (1H, m), 6.95-6.99 (2H, m), 7.17-7.22 (1H, m), 7.25-7.29 (2H, m).

### Reference production example 66

A mixture of 5.0 g of 3-fluorobenzonitrile, 5.3 g of 4-methylphenol, 17.5 g of cesium carbonate and 30 ml of DMF was heated to reflux for 4 hours. Thereafter, ethyl acetate was added to the reaction mixture. Thereafter, insoluble matter was removed by Celite (registered trade mark), and the filtrate was then concentrated under reduced pressure. The obtained residue was subjected to silica gel column chromatography, so as to obtain 8.0 g of 3-(4-methylphenoxy)benzonitrile.

### 3-(4-methylphenoxy)benzonitrile

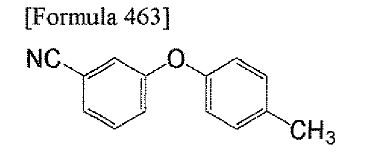

1H-NMR (CDCl3) δ: 2.37 (3H, s), 6,91-6.95 (2H, m), 7.16-7.22 (4H, m), 7.31-7.41 (2H, m).

A solution produced by dissolving 8.0 g of 3-(4-methylphenoxy)benzonitrile in 5 ml ofTHF was added dropwise to a mixture solution of 1.8 g of lithium aluminum hydride and 50 ml of THF at 0°C. The obtained mixture was stirred at a room temperature for 4 hours. Thereafter, water, 15% sodium hydroxide aqueous solution and water were successively added to the reaction mixture, and the obtained mixture was then left overnight. Thereafter, the reaction mixture was filtrated through Celite (registered trade mark), and the filtrate was then concentrated under reduced pressure. MTBE and potassium carbonate were added to the residue. The resultant was filtrated through Celite (registered trade mark), and the filtrate was then concentrated under reduced pressure so as to obtain 7.0 g of crude 3-(4-methylphenoxy)benzylamine.

### 3-(4-methylphenoxy)benzylamine

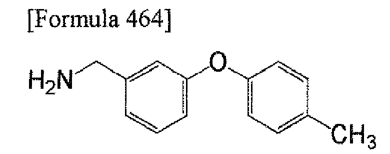

1H-NMR (CDCl3) δ: 1.40 (2H, br s), 2.33 (3H, s), 3.82 (2H, s), 6.82-6.87 (1H, m), 6.89-6.95 (3H, m), 6.99-7.03 (1H, m), 7.11-7.15 (2H, m), 7.24-7.28 (1H, m).

### Reference production example 67

A mixture of 6.0 g of 4-fluorobenzonitrile, 6.0 g of 3-fluorophenol, 16 g of cesium carbonate and 50 ml of DMF was heated to reflux for 4 hours. Thereafter, ethyl acetate was added to the reaction mixture. Thereafter, insoluble matter was removed by Celite (registered trade mark), and the filtrate was then concentrated under reduced pressure. The obtained residue was subjected to silica gel column chromatography, so as to obtain 10.0 g of 4-(3-fluorophenoxy)benzonitrile.

### 4-(3-fluorophenoxy)benzonitrile

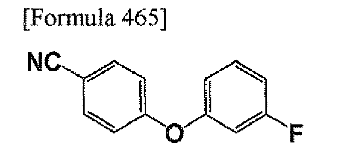

1H-NMR (CDCl3) δ: 6.77-6.81 (1H, m), 6.83-6.87 (1H, m), 6.91-6.96 (1H, m), 7.03-7.07 (2H, m), 7.33-7.40 (1H, m), 7.62-7.65 (2H, m).

10.0 g of 4-(3-fluorophenoxy)benzonitrile was added dropwise to a mixture solution of 2.0 g of lithium aluminum hydride and 100 ml of THF at 0°C. The obtained mixture was stirred at a room temperature for 4 hours. Thereafter, water, 15% sodium hydroxide aqueous solution and water were successively added to the reaction mixture. The obtained mixture was stirred at a room temperature for 2 hours, and it was then left overnight. Thereafter, the reaction mixture was filtrated through Celite (registered trade mark), and the filtrate was then concentrated under reduced pressure. MTBE and potassium carbonate were added to the residue. The resultant was filtrated through Celite (registered trade mark), and the filtrate was then concentrated under reduced pressure so as to obtain 7.5 g of 4-(3-fluorophenoxy)benzylamine.

### 4-(3-fluorophenoxy)benzylamine

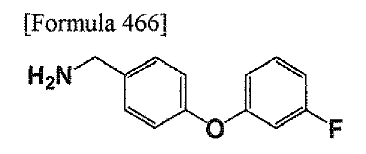

1H-NMR (CDCl3) δ: 1.45 (2H, br s), 3.87 (2H, s), 6.66-6.83 (3H, m), 6.99-7.05 (2H, m), 7.22-7.35 (3H, m).

### Reference production example 68

A mixture of 7.0 g of 4-chlorobenzonitrile, 6.0 g of 4-methylphenol, 10 g of cesium carbonate and 100 ml of DMF was heated to reflux for 2 hours. Thereafter, diluted hydrochloric acid was added to the reaction mixture, and the obtained mixture was then extracted with ethyl acetate. The organic layer was successively washed with water and a saturated saline solution, and it was then dried over magnesium sulfate, followed by concentration under reduced pressure. The obtained residue was subjected to silica gel column chromatography, so as to obtain 9.1 g of 4-(4-methylphenoxy)benzonitrile.

### 4-(4-methylphenoxy)benzonitrile

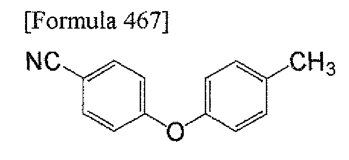

1H-MMR (CDCl3) δ: 2.37 (3H, s), 6.94-6.99 (4H, m), 7.21 (2H, d, J = 8.0 Hz), 7.56-7.59 (2H, m).

9.0 g of 4-(4-methylphenoxy)benzonitrile was added dropwise to a mixture solution of 2.0 g of lithium aluminum hydride and 100 ml of THF at 0°C. The obtained mixture was stirred at a room temperature for 3 hours. Thereafter, water, 15% sodium hydroxide aqueous solution and water were successively added to the reaction mixture. The obtained mixture was stirred at a room temperature for 4 hours. Thereafter, the reaction mixture was filtrated through Celite (registered trade mark), and the filtrate was then concentrated under reduced pressure. MTBE and potassium carbonate were added to the residue. The resultant was filtrated through Celite (registered trade mark), and the filtrate was then concentrated under reduced pressure so as to obtain 8.5 g of 4-(4-methylphenoxy)benzylamine.

### 4-(4-methylphenoxy)benzylamine

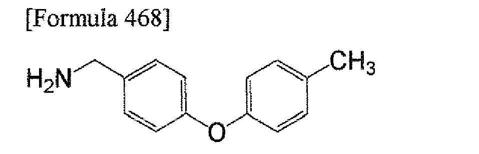

1H-NMR (CDCl3) δ: 1.48 (2H, br s), 2.33 (3H, s), 3.83 (2H, s), 6.88-6.97 (4H, m), 7.10-7.14 (2H, m), 7.23-7.27 (2H, m).

### Production example 69

6.4 g of 2-chloro-6-methylnicotinic acid and 50 ml of 28% aqueous ammonia were added to an autoclave, and they were then stirred at 180°C under pressure for 7 hours. Thereafter, the reaction mixture was left to cool to a room temperature, and it was then concentrated under reduced pressure. Hydrochloric acid was added to the obtained residue, and the precipitated solid was collected by filtration, so as to obtain 3.4 g of 2-amino-6-methylnicotinic acid.

### 2-amino-6-methylnicotinic acid

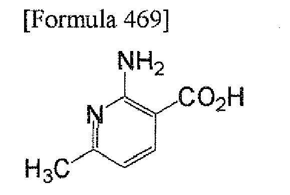

1H-NMR (DMSO-D6) δ: 2.30 (3H, s), 6.47 (1H, d, J = 7.8 Hz), 7.15 (2H, br s), 7.91 (1H, d, J = 7.8 Hz).

### Reference production example 70

48 g of pivaloyl chloride was added dropwise at 0°C to a solution produced by adding 20 g of 2,6-diaminopyridine and 46 g of triethylamine to 200 ml of chloroform. The obtained mixture was stirred at a room temperature for 4 hours. Thereafter, a sodium bicarbonate aqueous solution was added to the reaction mixture, and it was then extracted with chloroform. The organic layer was dried over magnesium sulfate, and it was then concentrated under reduced pressure. The obtained residue was subjected to silica gel column chromatography, so as to obtain 31 g of N-[6-(2,2-dimethylpropionylamino)pyridin-2-yl]-2,2-dimethylpropionic acid amide.

### N-[6-(2,2-dimethylpropionylamino)pyridin-2-yl]-2,2-dimethylpropionic acid amide

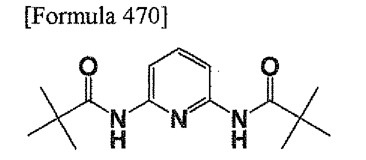

¹H-NMR (CDCl₃) δ: 1.32 (18H, s), 7.69 (1H, t, J = 8.0 Hz), 7.74 (2H, br s), 7.92 (2H, d, J = 8.0 Hz).

200 ml of a hexane solution of 1.58 M n-butyllithium was added dropwise at - 70°C to a solution produced by adding 25 g of N-(6-(2,2-dimethylpropionylamino)pyridin-2-yl)-2,2-dimethylpropionic acid amide to 250 ml of THF. The obtained mixture was stirred at 0°C for 8 hours, and 25 g of dry ice was then added to the reaction mixture at -60°C. The obtained mixture was stirred at a room temperature for 2 hours, and 30 ml of 10 N hydrochloric acid was then added thereto, followed by extraction with ethyl acetate. The organic layer was successively washed with water and a saline solution, and it was then dried over magnesium sulfate, followed by concentration under reduced pressure. The obtained residue was subjected to silica gel column chromatography, so as to obtain 33 g of 2,6-di(2,2-dimethylpropionylamino)nicotinic acid.

### 2,6-di(2,2-dimethylpropionylamino)nicotinic acid

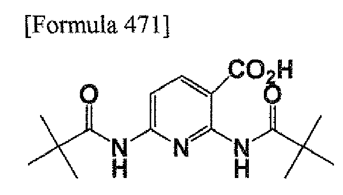

¹H-NMR (CDCl₃) δ: 1.35 (9H, s), 1.37 (9H, s), 7.66 (1H, d, J = 6.5 Hz), 8.59 (1H, d, J = 6.5 Hz).

33 g of 2,6-di(2,2-dimethylpropionylamino)nicotinic acid and 25 g of sodium hydroxide were added to 175 g of water. The obtained mixture was heated to reflux for 2 hours. Thereafter, 50 ml of 10 N hydrochloric acid was added to the reaction mixture, and the precipitated solid was collected by filtration. The obtained solid was washed with water, and it was then dried under reduced pressure at 60°C. The obtained solid was successively washed with MTBE and ethyl acetate, and it was then dried under reduced pressure at 80°C, so as to obtain 13 g of 2,6-diaminonicotinic acid hydrochloride.

### 2,6-diaminonicotinic acid hydrochloride

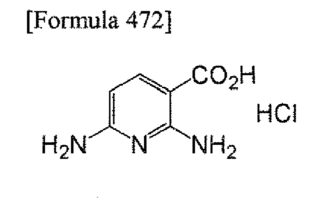

¹H-NMR (DMSO-D₆) δ: 5.84 (1H, d, J = 8.7 Hz), 7.14 (2H, br s), 7.39 (2H, br s), 7.78 (1H, d, J = 8.7 Hz).

### Reference production example 71

21.6 g of 2-amino-6-methylpyridine and 24 g of triethylamine were added to 200 ml of chloroform, and 26 g of pivaloyl chloride was added dropwise at 0°C to the mixture. The obtained mixture was stirred at a room temperature for 1 day. Thereafter, a sodium bicarbonate aqueous solution was added to the reaction mixture, and it was then extracted with chloroform twice. The organic layer was dried over magnesium sulfate, and it was then concentrated under reduced pressure. The obtained residue was subjected to silica gel column chromatography, so as to obtain 36.8 g of N-(6-methylpyridin-2-yl)-2,2-dimethylpropionic acid amide.

### N-(6-methylpyridin-2-yl)-2,2-dimethylpropionic acid amide

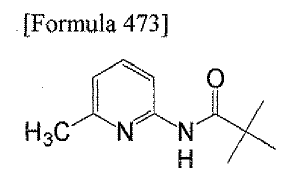

1H-NMR (CDCl3) δ: 1.33 (9H, s), 2.45 (3H, s), 6.88 (1H, d, J = 7.7 Hz), 7.58 (1H, dd, J = 8.1, 7.7 Hz), 7.94 (1H, br s), 8.05 (1H, d, J = 8.1 Hz).

73 ml of a pentane solution of 1.5 mol/l 1,1-dimethylethyllithium was added dropwise at -78°C to a solution produced by adding 10.0 g of N-(6-methylpyridin-2-yl)-2,2-dimethylpropionic acid amide to 200 ml of diethyl ether. The obtained mixture was stirred at - 78°C for 3 hours, and then at 0°C for 30 minutes. Thereafter, 10 g of dry ice was then added to the reaction mixture at -78°C. The reaction mixture was stirred until it reached a room temperature, and a citric acid aqueous solution was added to the reaction mixture until the mixture becomes acidic. The obtained mixture was extracted with ethyl acetate 10 times, and it was then washed with a saturated saline solution. The organic layer was dried over magnesium sulfate, followed by concentration under reduced pressure, so as to obtain 6.4 g of 2-(2,2-dimethylpropionylamino)-6-methylnicotinic acid.

### 2-(2,2-dimethylpropionylamino)-6-methylnicotinic acid

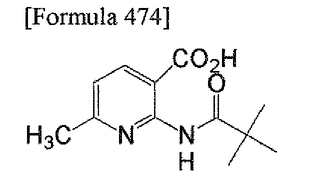

1H-NMR (DMSO-D6) δ: 1.22 (9H, s), 2.46 (3H, s), 7.08 (1H, d, J = 7.8 Hz), 8.08 (1H, d, J = 7.8 Hz), 10.83 (1H, br s).

6.4 g of 2-(2,2-dimethylpropionylamino)-6-methylnicotinic acid was added to 50 ml of a 12.5% sodium hydroxide aqueous solution. The obtained mixture was heated to reflux for 2 hours. Thereafter, diluted hydrochloric acid was added to the reaction mixture, so that the pH thereof was adjusted to pH 3, and the precipitated solid was then collected by filtration. The obtained solid was added to methanol. The obtained mixture was concentrated under reduced pressure, and it was then dried, so as to obtain 2.2 g of 2-amino-6-methylnicotinic acid.

### 2-amino-6-methylnicotinic acid

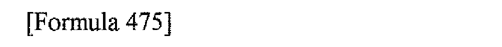

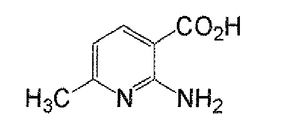

### Reference production example 72

5.0 g of WSC and 3.5 g of 1-hydroxybenzotriazole were added to a mixture of 3.0 g of 2-aminonicotinic acid, 6.5 g of 4-benzyloxybenzylamine hydrochloride and 50 ml of pyridine. The obtained mixture was stirred at a room temperature for 3 hours, and it was then heated to reflux for 4 hours. Thereafter, the reaction mixture was concentrated under reduced pressure, and water was then added thereto. The obtained crystal was washed with hexane and was then dried, so as to obtain N-(4-benzyloxyphenyl)methyl-2-aminonicotinic acid amide.

A mixture of the thus obtained N-(4-benzyloxyphenyl)methyl-2-aminonicotinic acid amide, 10% palladium on carbon 2 ml of concentrated hydrochloric acid, and 20 ml of ethanol was stirred under a hydrogen atmosphere. After completion of the reaction, the reaction product was filtrated through Celite (registered trade mark), and the resultant was concentrated under reduced pressure and was then washed with MTBE, so as to obtain 1.2 g of N-(4-hydroxyphenyl)methyl-2-aminonicotinic acid amide.

### N-(4-hydroxyphenyl)methyl-2-aminonicotinic acid amide

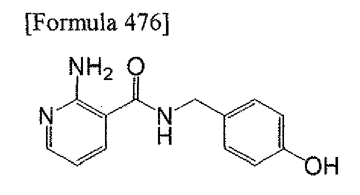

¹H-NMR (DMSO-D₆) δ: 3.74 (2H, d, J = 5.9 Hz), 6.00 (1H, dd, J = 7.7, 4.8 Hz), 6.13 (2H, d, J = 8.5 Hz), 6.52-6.54 (4H, m), 7.34 (1H, t, J = 3.9 Hz), 7.49 (1H, dd, J = 4.8, 1.8 Hz), 8.32 (1H, t, J = 5.7Hz), 8.77 (1H, br s).

### Reference production example 73

4.62 g of 5-nitrothiophen-2-carbonitrile was slowly added to a mixture of 7.29 g of 3-trifluoromethylphenol and 40 ml of DMF under cooling on ice. Subsequently, 19.5 g of cesium carbonate was added thereto, and the obtained mixture was then stirred at a room temperature for 2 days. Thereafter, the reaction mixture was added to ice water, and it was then extracted with ethyl acetate. The organic layer was dried over anhydrous sodium sulfate, and it was then concentrated under reduced pressure. The obtained residue was subjected to silica gel column chromatography, so as to obtain 3.0 g of 5-(3-trifluoromethylphenyloxy)-thiophen-2-carbonitrile.

### 5-(3-trifluoromethylphenyloxy)-thiophen-2-carbonitrile

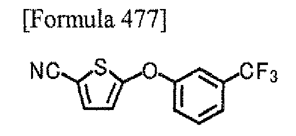

¹H-NMR (CDCl₃) δ: 6.51 (1H, d, J = 4.1 Hz), 7.31-7.35 (1H, m), 7.39-7.41 (1H, m), 7.42 (1H, d, J = 4.1 Hz), 7.49-7.56 (2H, m).

17 ml of a borane-THF-complex in THF solution (0.99 M) was added dropwise to a mixture of 3.0 g of 5-(3-trifluoromethylphenyloxy)-thiophen-2-carbonitrile and 20 ml of THF at 0°C. The obtained mixture was stirred for 30 minutes, and it was then stirred under heating to reflux for 3 hours. Thereafter, the reaction mixture was cooled to 5°C, and hydrochloric acid was then added thereto. The obtained mixture was further heated to reflux for 2 hours. Thereafter, the reaction mixture was concentrated under reduced pressure, and the obtained residue was then successively washed with hexane, so as to obtain 2.53 g of [5-(3-trifluoromethylphenyloxy)thiophen-2-yl]methylamine hydrochloride.

### [5-(3-trifluoromethylphenyloxy)thiophen-2-yl]methylamine hydrochloride

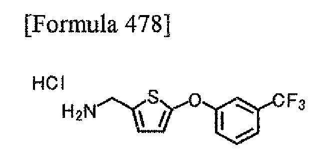

¹H-NMR (DMSO-D₆) δ: 4.16 (2H, s), 6.75 (1H, d, J = 3.9 Hz), 7.10 (1H, d, J = 3.9 Hz), 7.43-7.45 (2H, m), 7.55-7.57 (1H, m), 7.66-7.69 (1H, m), 8.52 (3H, br s).

### Reference production example 74

5.0 g of 2,6-dichloronicotinic acid and 40 ml of 28% aqueous ammonia were added to an autoclave, and they were then stirred under pressure for 5 hours. Thereafter, concentrated hydrochloric acid was added to the reaction mixture, so that the pH was adjusted to be pH 1. The resultant was extracted with ethyl acetate, and it was washed with a saturated saline solution and was then dried over anhydrous sodium sulfate. Thereafter, the resultant was concentrated under reduced pressure, so as to obtain 4.2 g of 2-amino-6-chloronicotinic acid.

### 2-amino-6-chloronicotinic acid

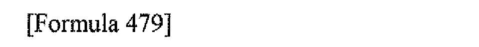

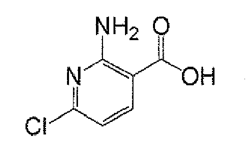

¹H-NMR (DMSO-D₆) δ: 6.63 (1H, d, J = 8.2 Hz), 7.55 (2H, br s), 8.03 (1H, d, J = 8.2 Hz).

### Reference production example 75

A mixture of 101 g of 2-chloro-6-methylnicotinic acid, 85.4 g of potassium carbonate, 40.3 ml of methyl iodide and 11 of acetonitrile was heated to reflux for 4 hours 30 hours. Thereafter, the reaction mixture solution was cooled to a room temperature, and it was then filtrated through Celite. The solution was concentrated under reduced pressure, so as to obtain crude 2-chloro-6-methylnicotinic acid methyl ester.

### 2-chloro-6-methylnicotinic acid methyl ester

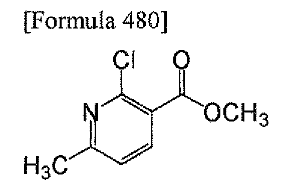

¹ H-NMR (CDCl₃) δ: 2.62 (3H, s), 3.97 (3H, s), 7.18 (1H, d, J = 8.0 Hz), 8.10 (1H, d, J = 8.0 Hz).

A mixture of the crude 2-chloro-6-methylnicotinic acid methyl ester, 21.1 g of 4,4'-thiobis(6-tertiary butyl-3-cresol), 174 g of 70% 3-chloroperbenzoic acid, and 800 ml of chloroform was heated to reflux for 6 hours. Further, the reaction mixture was left to cool to around room temperature, and 14.5 g of 70% 3-chloroperbenzoic acid was then added to the reaction mixture. The obtained mixture was heated to reflux for 3 hours. Thereafter, the reaction mixture was left to cool to around room temperature, and a saturated sodium bicarbonate aqueous solution was added to the reaction mixture, followed by extraction with chloroform. The organic layer was washed with a saturated saline solution, and it was then dried over anhydrous sodium sulfate, followed by concentration under reduced pressure. Crude 2-chloro-6-methylniconitic acid methyl ester-N-oxide was obtained.

### 2-chloro-6-methylniconitic acid methyl ester-N-oxide

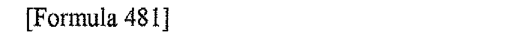

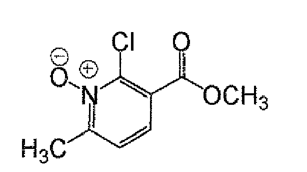

¹ H-NMR (CDCl₃) δ: 2.62 (3H, s), 3.99 (3H, s), 7.28 (1H, d, J = 8.2 Hz), 7.62 (1H, d, J = 8.2 Hz).

A mixture of the crude 2-chloro-6-methylniconitic acid methyl ester-N-oxide and 500 ml of acetic anhydride was stirred at 60°C for 3 hours. Thereafter, the reaction mixture was left to cool to around room temperature, and it was then concentrated under reduced pressure, so as to obtain crude 2-chloro-6-acetoxymethylnicotinic acid methyl ester.

### 2-chloro-6-acetoxymethylnicotinic acid methyl ester

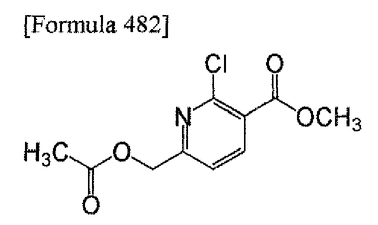

¹H-NMR (CDCl₃) δ: 1.64 (3H, s), 3.40 (3H, s), 4.67 (2H, s), 6.81 (1H, d, J = 8.1 Hz), 7.64 (1H, d, J = 8.1 Hz).

A mixture of the 2-chloro-6-acetoxymethylnicotinic acid methyl ester, 48.4 g of potassium carbonate and 500 ml of methanol was stirred at a room temperature for 45 minutes. Thereafter, the reaction mixture solution was filtrated through Celite, and the solution was then concentrated under reduced pressure, followed by extraction with ethyl acetate. The extract was washed with a saturated saline solution, and it was then dried over anhydrous sodium sulfate. Thereafter, the resultant was concentrated under reduced pressure, so as to obtain 28.8 g of 2-chloro-6-hydroxymethylnicotinic acid methyl ester.

### 2-chloro-6-hydroxymethylnicotinic acid methyl ester

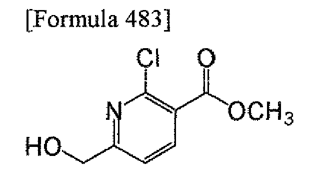

¹H-NMR (CDCl₃) δ: 2.96 (1H, t, J = 5.6 Hz), 3.95 (3H, s), 4.80 (2H, s), 7.35-7.38 (1H, d, J = 7.8 Hz), 8.19 (1H, d, J = 7.8 Hz).

A mixture of 2-chloro-6-hydroxymethylnicotinic acid methyl ester, 36.4 g of silver (I) oxide, 9.8 ml of methyl iodide and 400 ml of toluene was stirred at a room temperature for 5 hours 30 minutes. Thereafter, the reaction mixture solution was filtrated through Celite, and the solution was then concentrated under reduced pressure. Thereafter, the resultant was subjected to silica gel column chromatography, so as to obtain 25.7 g of 2-chloro-6-methoxymethylnicotinic acid methyl ester.

### 2-chloro-6-methoxymethylnicotinic acid methyl ester

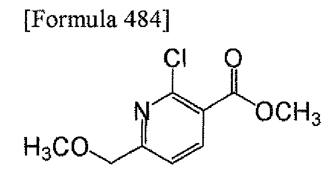

¹ H-NMR (CDCl₃) δ: 3.49 (3H, s), 3.95 (3H, s), 4.58 (2H, s), 7.47 (1H, d, J = 7.8 Hz), 8.20 (1H, d, J = 7.8 Hz).

A mixture of 25.7 g of 2-chloro-6-methoxymethylnicotinic acid methyl ester, 44 ml of a 6 mol/L sodium hydroxide aqueous solution, and 250 ml of methanol was heated to reflux for 20 minutes. Thereafter, 30 ml of concentrated hydrochloric acid was added to the reaction mixture solution, and the obtained solution was then concentrated under reduced pressure. Thereafter, the precipitated solid was filtrated, and the obtained solid was then washed with a mixed solvent of hexane and MTBE, so as to obtain 22.3 g of 2-chloro-6-methoxymethylnicotinic acid.

### 2-chloro-6-methoxymethylnicotinic acid

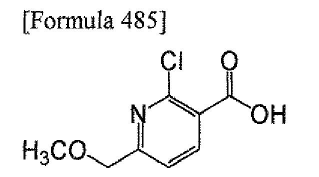

¹ H-NMR (DMSO-D₆) δ: 3.51 (3H, s), 4.62 (2H, s), 7.54 (1H, d, J = 7.8 Hz), 8.38 (1H, d, J = 7.8 Hz).

### Reference production example 76

3.5 ml of bromine was added to a mixture of 5.11 g of 2-amino-5-fluoropyridine and 20 ml of acetic acid, and the obtained mixture was stirred at 80°C for 30 minutes. Thereafter, a saturated sodium bisulfite aqueous solution and a saturated sodium bicarbonate aqueous solution were added to the reaction mixture, and the obtained mixture was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 6.07 g of 2-amino-3-bromo-5-fluoropyridine.

### 2-amino-3-bromo-5-fluoropyridine

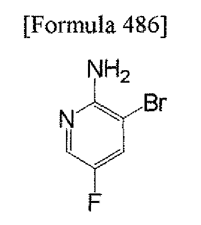

¹H-NMR (CDCl₃) δ: 4.80 (2H, br s), 7.50 (1H, dd, J = 7.5, 2.4 Hz), 7.93 (1H, d, J = 2.4 Hz).

0.59 g of copper(I) cyanide was added to a mixture of 1.04 g of the 2-amino-3-bromo-5-fluoropyridine and 20 ml of N-methyl-2-pyrrolidone, and the obtained mixture was stirred at 150°C for 5 hours. Thereafter, 28% aqueous ammonia was added to the reaction mixture, and it was then extracted with ethyl acetate. The organic layer was washed with a saturated saline solution, and it was then dried over anhydrous sodium sulfate, followed by concentration under reduced pressure. The obtained residue was subjected to silica gel column chromatography, so as to obtain 0.52 g of 2-amino-3-cyano-5-fluoropyridine.

### 2-amino-3-cyano-5-fluoropyridine

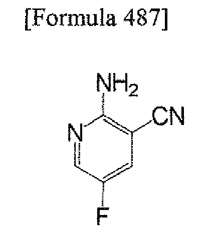

¹H-NMR (CDCl₃) δ: 5.10 (2H, br s), 7.45 (1H, dd, J = 7.4, 3.0 Hz), 8.16 (1H, d, J = 3.0 Hz). Reference production example 77

12.3 ml of N,N-diisopropylamine was mixed with 100 ml of THF. Thereafter, 50 ml of a hexane solution containing 1.6 mol/liter n-butyllithium was mixed therewith at -78°C. The obtained mixture was stirred at -78°C for 20 minutes. Thereafter, 10.1 g of 2,6-difluoropyridine dissolved in 50 ml of THF was added to the reaction mixture at -78°C over 10 minutes. The obtained mixture was stirred for 30 minutes. Thereafter, dry ice was added to the reaction mixture, and the obtained mixture was stirred for 4 hours, while the temperature thereof was gradually raised to a room temperature. Thereafter, water was added to the reaction mixture, followed by partition with MTBE. Subsequently, concentrated hydrochloric acid was added to the water layer, so that the pH thereof was adjusted to pH 1, followed by extraction with ethyl acetate. The organic layer was washed with a saturated saline solution, and it was then dried over sodium sulfate, followed by concentration under reduced pressure. The obtained residue was washed with a mixed solvent of hexane and MTBE, so as to obtain 8.69 g of 2,6-difluoronicotinic acid.

### 2,6-difluoronicotinic acid

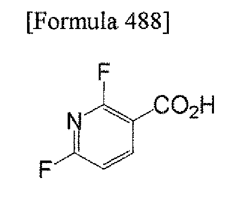

¹H-NMR (DMSO-D₆) δ: 7.30 (1H, dd, J = 8.2, 2.4 Hz), 8.59 (1H, dd, J = 8.2, 4.1 Hz).

### Reference production example 78

A mixture of 11 g of 3-iodophenol, 5.5 g of 3-fluorobenzonitrile and 100 ml of DMF was stirred at 120°C for 5 hours. Thereafter, water was added to the reaction mixture, and the obtained mixture was then extracted with ethyl acetate. The organic layer was successively washed with a 5% sodium hydroxide aqueous solution, water and a saturated saline solution, and it was then dried over anhydrous sodium sulfate, followed by concentration under reduced pressure, so as to obtain 17 g of 3-(3-iodophenyloxy)benzonitrile.

100 ml of a borane-THF-complex-containing THF solution (1 M) was added dropwise to the mixture of 17 g of the obtained 3-(3-iodophenyloxy)benzonitrile and 100 ml of THF. The obtained mixture was stirred under heating to reflux for 8 hours. Thereafter, the reaction mixture was left to cool to around room temperature, and 5% hydrochloric acid was then added the reaction mixture. The obtained mixture was further heated to reflux for 2 hours. Thereafter, the reaction mixture was left to cool to around room temperature, and it was then concentrated under reduced pressure. Thereafter, water was added to the resultant, 27% sodium hydroxide aqueous solution was added thereto, so that the pH thereof became 13 or more, followed by extraction with chloroform. The chloroform layer was dried over anhydrous potassium carbonate, so as to obtain 14 g of [3-(3-iodophenyloxy)phenyl]methylamine.

A mixture of 7 g of the obtained [3-(3-iodophenyloxy)phenyl]methylamine, 11 g of di-tertiary butyl dicarbonate, 9 ml of triethylamine, 0.1 g of dimethylaminopyridine and 200 ml of THF was stirred at a room temperature for 8 hours. Thereafter, water was added to the reaction mixture, and the obtained mixture was then extracted with MTBE. The organic layer was successively washed with a saturated saline solution, and it was then dried over anhydrous sodium sulfate, followed by concentration under reduced pressure. The obtained residue was subjected to silica gel column purification, so as to obtain 6.0 g of N-[3-(3-iodophenyloxy)phenyl]methylcarbamic acid tertiary butyl ester.

### N-[3-(3-iodophenyloxy)phenyl]methylcarbamic acid tertiary butyl ester

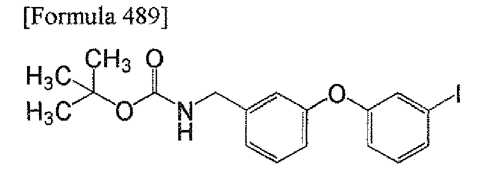

¹H-NMR (CDCl₃) δ: 1.45 (9H, s), 4.31 (2H, d, J = 5.1 Hz), 4.85 (1H, s), 6.88-6.97 (3H, m), 7.04-7.06 (2H, m), 7.28-7.34 (2H, m), 7.43 (1H, dd, J = 7.8, 1.0 Hz).

### Reference production example 79

A mixture of 7.0 g of N-[3-(3-iodophenyloxy)phenyl]methylcarbamic acid tertiary butyl ester, 0.16 g of copper iodide, 4.9 g of trimethylsilylacetylene, 0.95 g of tetrakis(triphenylphosphine)paradium(0), 4.6 ml of triethylamine and 50 ml of DMF was stirred at 90°C for 6 hours. Thereafter, the reaction mixture was left to cool to around room temperature. Thereafter, water was added to the reaction mixture, and the obtained mixture was then extracted with MTBE. The organic layer was washed with a saturated saline solution, and it was then dried over anhydrous sodium sulfate, followed by concentration under reduced pressure. The obtained residue was subjected to silica gel column purification, so as to obtain 6 g of N-[3-(3-trimethylsilylethynylphenyloxy)phenyl]methylcarbamic acid tertiary butyl ester.

### N-[3-(3-trimethylsilylethynylphenyloxy)phenyl]methylcarbamic acid tertiary butyl ester

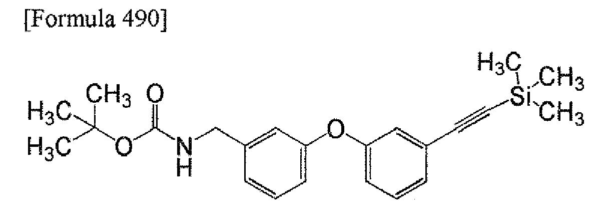

¹ H-NMR (CDCl₃) δ: 0.23 (9H, s), 1.45 (9H, s), 4.30 (2H, d, J = 5.3 Hz), 4.83 (1H, s), 6.87-6.91 (2H, m), 6.96-6.98 (1H, m), 7.03-7.07 (2H, m), 7.19-7.31 (3H, m).

### Reference production example 80

A mixture of 5.8 g of N-[3-(3-trimethylsilylethynylphenyloxy)phenyl]methylcarbamic acid tertiary butyl ester, 4.1 g of potassium carbonate and 70 ml of methanol was stirred at a room temperature for 2 hours. Thereafter, MTBE was added to the reaction mixture, and the obtained mixture was filtrated. The filtrate was concentrated under reduced pressure. The obtained residue was subjected to silica gel column purification, so as to obtain 4.6 g of N-[3-(3-ethynylphenyloxy)phenyl]methylcarbamic acid tertiary butyl ester.

A mixture of 4.4 g of N-[3-(3-ethynylphenyloxy)phenyl]methylcarbamic acid tertiary butyl ester, 4.4 ml of trifluoroacetic acid and 40 ml of chloroform was stirred at 50°C for 8 hours. Thereafter, the reaction mixture was left to cool around room temperature, followed by concentration under reduced pressure. 10 ml of ethanol and 1.5 ml of 36% hydrochloric acid were added to the obtained residue, followed by concentration under reduced pressure. The obtained crystal was washed with hexane, and it was then dried, so as to obtain 2.3 g of 3-(3-ethynylphenyloxy)benzylamine hydrochloride.

### 3-(3-ethynylphenyloxy)benzylamine hydrochloride

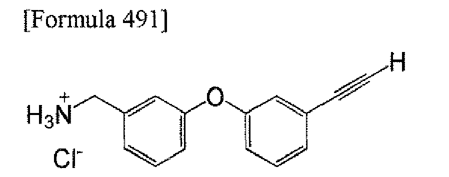

¹ H-NMR (DMSO-D6) δ: 4.02-4.05 (2H, m), 4.27 (1H, s), 7.03-7.10 (3H, m), 7.21-7.30 (3H, m), 7.40-7.48 (2H, m), 8.33 (3H, s).

### Reference production example 81

A mixture of 5.4 g of 3-fluorobenzonitrile, 5.8 g of 3-methoxyphenol, 15.9 g of cesium carbonate and 30 ml of DMF was stirred at 140°C for 3 hours. Thereafter the reaction mixture was left to cool to around room temperature. Thereafter, water was added to the reaction mixture, and the obtained mixture was then extracted with ethyl acetate. The organic layer was successively washed with a 15% sodium hydroxide aqueous solution, diluted hydrochloric acid and a saturated saline solution, and it was then dried over magnesium sulfate, followed by concentration under reduced pressure. The obtained residue was subjected to silica gel column chromatography, so as to obtain 1.1 g of 3-(3-methoxyphenyloxy)benzonitrile.

### 3-(3-methoxyphenyloxy)benzonitrile

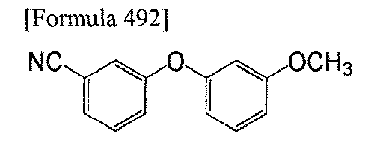

¹ H-NMR (CDCl₃) δ: 3.80 (3H, s), 6.58-6.61 (2H, m), 6.75 (1H, ddd, J = 8.4, 2.4, 0.8 Hz), 7.23-7.44 (5H, m).

### Reference production example 82

0.61 g of 3-fluorobenzonitrile, 0.91 g of 3-butoxyphenol and 1.95 g of cesium carbonate were added to 5 ml of DMF. The obtained mixture was heated to reflux for 8 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1.09 g of 3-(4-butoxyphenyloxy)benzonitrile.

0.41 g of 3-(3-butoxyphenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.39 g of 3-(3-butoxyphenyloxy)benzylamine.

### 3-(3-butoxyphenyloxy)benzylamine

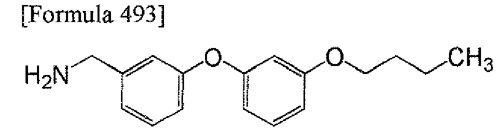

¹H-NMR (CDCl₃) δ: 0.96 (3H, t, J = 7.5 Hz), 1.39 (2H, br s), 1.45-1.49 (2H, m), 1.71-1.78 (2H, m), 3.85 (2H, s), 3.92 (2H, t, J = 6.4 Hz), 6.56-6.58 (2H, m), 6.63-6.66 (1H, m), 6.90 (1H, d, J = 7.6 Hz), 6.98 (1H, s), 7.05 (1H, d, J = 7.6 Hz), 7.19-7.22 (1H, m), 7.29 (1H, t, J = 7.8 Hz).

### Reference production example 83

0.61 g of 3-fluorobenzonitrile, 0.89 g of 2-trifluoromethylphenol and 1.95 g of cesium carbonate were added to 5 ml of DMF. The obtained mixture was heated to reflux for 20 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.43 g of 3-(2-trifluoromethylphenyloxy)benzonitrile.

0.40 g of 3-(2-trifluoromethylphenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, I ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.32 g of 3-(2-trifluoromethylphenyloxy)benzylamine.

### 3-(2-trifluoromethylphenyloxy)benzylamine

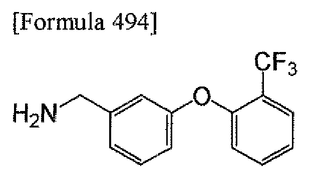

¹ H-NMR (CDCl₃) δ: 1.78 (2H, br s), 3.88 (2H, s), 6.94-6.96 (2H, m), 7.03-7.08 (4H, m), 7.28-7.30 (2H, m).

### Reference production example 84

0.61 g of 3-fluorobenzonitrile, 0.62 g of 4-fluorophenol and 1.95 g of cesium carbonate were added to 5 ml of DMF. The obtained mixture was heated to reflux for 20 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.92 g of 3-(4-fluorophenyloxy)benzonitrile.

0.32 g of 3-(4-fluorophenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.31 g of 3-(4-fluorophenyloxy)benzylamine.

### 3-(4-fluorophenyloxy)benzylamine

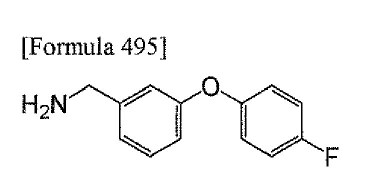

¹ H-NMR (CDCl₃) δ: 1.51 (2H, br s), 3.85 (2H, s), 6.84 (1H, dd, J = 8.2, 4.1 Hz), 6.93-7.06 (6H, m), 7.27-7.30 (1H, m).

### Reference production example 85

0.61 g of 3-fluorobenzonitrile, 0.62 g of 3-fluorophenol and 1.95 g of cesium carbonate were added to 5 ml of DMF. The obtained mixture was heated to reflux for 20 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 0.86 g of 3-(3-fluorophenyloxy)benzonitrile.

0.33 g of 3-(3-fluorophenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.30 g of 3-(3-fluorophenyloxy)benzylamine.

### 3-(3-fluorophenyloxy)benzylamine

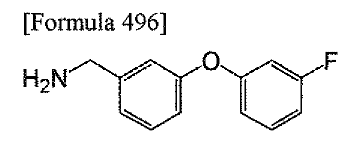

¹ H-NMR (CDCl₃) δ: 1.43 (2H, br s), 3.86 (2H, d, J = 5.1 Hz), 6.69 (1H, m), 6.78-6.80 (2H, m), 6.91 (1H, dd, J = 8.1, 2.3 Hz), 7.01 (1H, s), 7.10 (1H, d, J = 7.6 Hz), 7.24-7.34 (2H, m).

### Reference production example 86

0.61 g of 3-fluorobenzonitrile, 0.70 g of 4-chlorophenol and 1.95 g of cesium carbonate were added to 5 ml of DMF. The obtained mixture was heated to reflux for 20 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1.00 g of 3-(4-chlorophenyloxy)benzonitrile.

0.34 g of 3-(4-chlorophenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.34 g of 3-(4-chlorophenyloxy)benzylamine.

### 3-(4-chlorophenyloxy)benzylamine

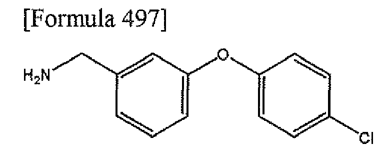

¹ H-NMR (CDCl₃) δ: 1.43 (2H, br s), 3.86 (2H, s), 6.86-6.88 (1H, m), 6.92-6.96 (3H, m), 7.07 (1H, d, J = 7.6 Hz), 7.28-7.32 (3H, m).

### Reference production example 87

0.61 g of 3-fluorobenzonitrile, 0.89 g of 2-trifluoromethylphenol and 1.95 g of cesium carbonate were added to 5 ml of DMF. The obtained mixture was heated to reflux for 20 hours. Thereafter, the reaction mixture was left to cool to around room temperature. Thereafter, diluted hydrochloric acid was added to the reaction mixture, and it was then extracted with diethyl ether. The organic layer was successively washed with a sodium hydroxide aqueous solution and a saturated saline solution, and it was then dried over magnesium sulfate. The resultant was concentrated by centrifugation under reduced pressure, so as to obtain 1.10 g of 3-(3-trifluoromethylphenyloxy)benzonitrile.

0.40 g of 3-(3-trifluoromethylphenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The mixture solution was filtrated through Celite (registered trade mark), and the filtrate was then concentrated by centrifugation under reduced pressure, so as to obtain 0.32 g of 3-(3-trifluoromethylphenyloxy)benzylamine.

### 3-(3-trifluoromethylphenyloxy)benzylamine

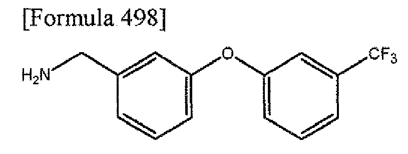

¹H-NMR (CDCl₃) δ: 1.43 (2H, br s), 3.88 (2H, s), 6.90 (1H, dd, J = 8.1, 2.0 Hz), 7.01 (1H, s), 7.13-7.16 (2H, m), 7.24 (1H, s), 7.32-7.36 (2H, m), 7.43-7.45 (1H, m).

### Reference production example 88

12.3 ml of N,N-diisopropylamine was mixed with 100 ml of THF. Thereafter, 50 ml of a hexane solution containing 1.6 mol/liter n-butyllithium was mixed therewith at -78°C. The obtained mixture was stirred at -78°C for 20 minutes. Thereafter, 10.1 g of 2,6-difluoropyridine dissolved in 50 ml of THF was added to the reaction mixture at -78°C over 10 minutes. The obtained mixture was stirred for 30 minutes. Thereafter, dry ice was added to the reaction mixture, and the obtained mixture was stirred for 4 hours, while the temperature thereof was gradually raised to a room temperature. Thereafter, water was added to the reaction mixture, followed by partition with MTBE. Subsequently, concentrated hydrochloric acid was added to the water layer, so that the pH thereof was adjusted to pH 1, followed by extraction with ethyl acetate. The organic layer was washed with a saturated saline solution, and it was then dried over sodium sulfate, followed by concentration under reduced pressure. The obtained residue was washed with a mixed solvent of hexane and MTBE, so as to obtain 8.69 g of 2,6-difluoronicotinic acid.

### 2,6-difluoronicotinic acid

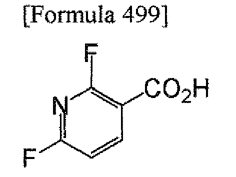

¹H-NMR (DMSO-D₆) δ: 7.30 (1H, dd, J = 8.2, 2.4 Hz), 8.59 (1H, dd, J = 8.2, 4.1 Hz).

### Reference production example 89

0.45 g of 4-(2-chloro-4-trifluoromethylphenyloxy)benzonitrile was added to 1 ml of THF. 1 ml of a THF solution of lithium aluminum hydride (2.0 M) was added dropwise to the mixture solution at 0°C, and the obtained mixture was stirred at a room temperature for 3 hours. Thereafter, 1 ml of ethanol, 1 ml of water, and 1 ml of a 15% sodium hydroxide aqueous solution were successively added dropwise to the reaction mixture at 0°C. The reaction mixture was filtrated through Celite (registered trade mark), and the filtrate was then concentrated by centrifugation under reduced pressure, so as to obtain 0.36 g of 4-(2-chloro-4-trifluoromethylphenyloxy)benzylamine.

### 4-(2-chloro-4-trifluoromethylphenyloxy)benzylamine

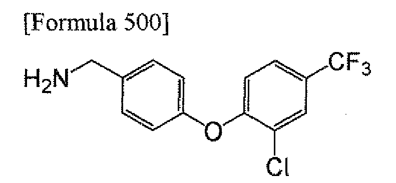

¹H-NMR (CDCl₃) δ: 1.52 (2H, br s), 3.89 (2H, s), 6.96-7.04 (2H, m), 7.30-7.36 (2H, m), 7.41-7.43 (1H, m), 7.56-7.58 (1H, m), 7.73 (1H, d, J = 2.0 Hz).

### Reference production example 90

A mixture solution of 10 g of 2-fluoro-3-methoxybenzaldehyde and 80 ml of ethanol was added to a mixture solution of 1.8 g of 10% palladium on carbon, 10 ml of water, 6.5 ml of 10N hydrochloric acid and 50 ml of ethanol. Thereafter, 5.4 g of hydroxylamine hydrochloride was added to the mixture. The obtained mixture was stirred at a room temperature for 2 hours. The mixture was stirred at a room temperature under a hydrogen atmosphere at about 1 atm for 3 hours. Thereafter, the reaction mixture was filtrated through Celite (registered trade mark), and the filtrate was then concentrated under reduced pressure. Thereafter, water was added to the residue, followed by extraction with chloroform. 15% sodium hydroxide aqueous solution was added to the extract until the pH of the obtained water layer was adjusted to pH 11, followed by extraction with chloroform. The organic layer was dried over potassium carbonate, followed by concentration under reduced pressure, so as to obtain 8.0 g of 2-fluoro-3-methoxybenzylamine.

### 2-fluoro-3-methoxybenzylamine

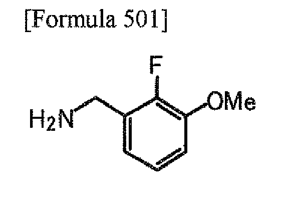

¹ H-NMR (CDCl₃) δ: 1.55 (2H, br s), 3.89 (3H, s), 3.90 (2H, br s), 6.86-6.91 (2H, m), 7.02-7.06 (1H, m).

### Reference production example 91

15 ml of 48% hydrobromic acid was added to 4 g of 2-fluoro-3-methoxybenzylamine hydrochloride. The obtained mixture was heated to reflux for 5 hours. Thereafter, the reaction mixture was left to cool to around room temperature, and it was then concentrated under reduced pressure, so as to obtain 4.0 g of 2-fluoro-3-hydroxybenzylamine hydrobromide.

### 2-fluoro-3-hydroxybenzylamine hydrobromide

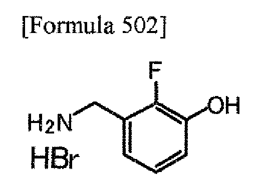

¹ H-NMR (DMSO-d₆) δ: 4.04 (2H, q, J = 5.5 Hz), 6.90-6.94 (1H, m), 6.97-7.06 (2H, m), 8.23 (3H, br s), 10.05 (1H, br s).

### Reference production example 92

A mixture of 26 g of 2-fluoro-3-hydroxybenzylamine hydrobromide, 49 g of di-tert-butyl dicarbonate, 64 ml of triethylamine, about 0.1 g of 4-dimethylaminopyridine and 300 ml of tetrahydrofuran was stirred at a room temperature for 6 hours. Thereafter, water was added to the reaction mixture, and it was then extracted with ethyl acetate. The organic layer was successively washed with 5% hydrochloric acid, water, a saturated sodium bicarbonate aqueous solution and a saturated saline solution, and it was then dried over magnesium sulfate, followed by concentration under reduced pressure, so as to obtain about 20 g of [2-fluoro-3-(4-hydroxy)phenyl]methylcarbamic acid 1,1-dimethylethyl.

A mixture of about 20 g of the thus obtained [2-fluoro-3-(4-hydroxy)phenyl]methylcarbamic acid 1,1-dimethylethyl, 11 g of 5-chloro-1-pentyne, 44 g of cesium carbonate and 200 ml of DMF was stirred at 80°C for 4 hours, and then at 100°C for 2 hours. Thereafter, the reaction mixture was left to cool to around room temperature. Thereafter, water was added to the reaction mixture, and it was then extracted with ethyl acetate. The organic layer was successively washed with 3% sodium hydroxide solution, 5% hydrochloric acid, water, a saturated sodium bicarbonate aqueous solution and a saturated saline solution, and it was then dried over magnesium sulfate, followed by concentration under reduced pressure. The obtained residue was subjected to silica gel column chromatography, so as to obtain 18g of [2-fluoro-3-(4-pentynyloxy)phenyl]methylcarbamic acid 1,1-dimethylethyl.

### [2-fluoro-3-(4-pentynyloxy)phenyl]methylcarbamic acid 1,1-dimethylethyl

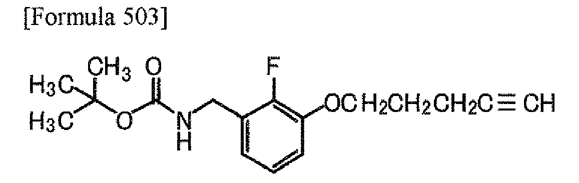

¹ H-NMR (CDCl₃) δ: 1.45 (9H, s), 1.97 (1H, t, J = 2.7 Hz), 2.00-2.06 (2H, m), 2.43 (2H, td, J = 7.0, 2.7 Hz), 4.13 (2H, t, J = 6.1 Hz), 4.35-4.37 (2H, m), 4.88 (1H, s), 6.89-6.92 (1H, m), 6.99-7.03 (1H, m), 7.07-7.14 (1H, m).

### Reference production example 93

17 g of [2-fluoro-3-(4-pentynyloxy)phenyl]methylcarbamic acid 1,1-dimethylethyl was mixed with 17 ml of trifluoroacetic acid and 50 ml of chloroform at a room temperature for 5 hours. The obtained reaction mixture was concentrated under reduced pressure. Thereafter, a mixture of 100 ml of ethanol and 6 ml of acetyl chloride was added to the residue, followed by concentration under reduced pressure, so as to obtain 8.7 g of [2-fluoro-3-(4-pentynyloxy)phenyl]methylamine hydrochloride.

### [2-fluoro-3-(4-pentynyloxy)phenyl]methylamine hydrochloride

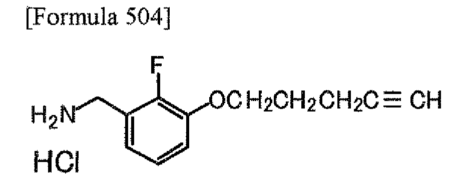

¹H-NMR (DMSO-D₆) δ: 1.88-1.95 (2H, m), 2.34 (2H, td, J = 7.0, 2.6 Hz), 2.84 (1H, dd, J = 2.7, 1.9 Hz), 4.01-4.04 (2H, m), 4.13 (2H, t, J = 6.0 Hz), 7.12-7.24 (3H, m), 8.51 (3H, s).

### Reference production example 94

8.0 g of triethylamine was added to a mixture of 7.0 g of 2-fluoro-3-hydroxybenzylamine hydrobromide and 70 ml of DMF. Subsequently, 7.7 g of 2-aminonicotinic acid was added thereto, and 18.1 g of a BOP reagent was further added thereto. The obtained mixture was stirred at a room temperature for 10 hours. Thereafter, 30 ml of pyridine was added to the reaction mixture, and the obtained mixture was stirred at 110°C for 3 hours. Thereafter, the reaction mixture was cooled to a room temperature, and water was then added thereto, followed by extraction with ethyl acetate. The organic layer was successively washed with a saturated sodium bicarbonate solution, water and a saturated saline solution, and it was then dried over anhydrous sodium sulfate, followed by concentration under reduced pressure. The obtained residue was washed with hexane and MTBE, so as to obtain 5.4 g of N-(2-fluoro-3-hydroxyphenylmethyl)-2-aminonicotinic acid amide.

### N-(2-fluoro-3-hydroxyphenylmethyl)-2-aminonicotinic acid amide

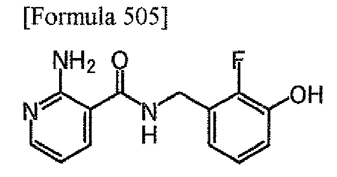

¹ H-NMR (DMSO-D₆) δ: 4.44 (2H, d, J = 5.6 Hz), 6.59 (1H, dd, J = 7.7, 4.8 Hz), 6.71-6.75 (1H, m), 6.84 (1H, td, J = 8.2, 1.7 Hz), 6.90-6.94 (1H, m), 7.06 (2H, br s), 7.95 (1H, dd, J = 7.7, 1.9 Hz), 8.08 (1H, dd, J = 4.7, 1.8 Hz), 8.91 (1H, t, J = 5.8 Hz), 9.77 (1H, s).

Next, formulation examples will be given below. It is to be noted that the term "part" indicates "part by weight."

### Formulation example 1

50 parts of each of the present compounds 1 to 347, 3 parts of calcium lignosulfonate, 2 parts of magnesium lauryl sulfate, and 45 parts of synthetic hydrous silicon oxide were fully crushed and mixed, so as to obtain various types of wettable powders.

### Formulation example 2

20 parts of each of the present compounds 1 to 347 and 1.5 parts of sorbitan trioleate were mixed into 28.5 parts of an aqueous solution that contained 2 parts of polyvinyl alcohol, and the mixture solution was then subjected to fine grinding according to a wet grinding method. Thereafter, 40 parts of an aqueous solution that contained 0.05 part of xanthan gum and 0.1 part of aluminum magnesium silicate was added to the resultant, and 10 parts of propylene glycol was further added thereto. The obtained mixture was blended by stirring, so as to obtain various types of flowable formulations.

### Formulation example 3

2 parts of each of the present compounds 1 to 347, 88 parts of kaoline clay, and 10 parts of talc were fully crushed and mixed, so as to obtain various types of powder products.

### Formulation example 4

5 parts of each of the present compounds 1 to 347, 14 parts of polyoxyethylene styryl phenyl ether, 6 parts of calcium dodecylbenzenesulfonate, and 75 parts of xylene were fully mixed, so as to obtain various types of emulsions.

### Formulation example 5

2 parts of each of the present compounds 1 to 347, 1 part of synthetic hydrous silicon oxide, 2 parts of calcium lignosulfonate, 30 parts of bentonite, and 65 parts of kaoline clay were fully crushed and mixed. Thereafter, water was added to the mixture, and they were fully blended, followed by granulation and drying, so as to obtain various types of granules.

### Formulation example 6

10 parts of each of the present compounds 1 to 347, 35 parts of white carbon that contained 50 parts of polyoxyethylene alkyl ether sulfate ammonium salts, and 55 parts of water were mixed, and the obtained mixture was then subjected to fine grinding according to a wet grinding method, so as to obtain various types of formulations.

Next, test examples will be given to demonstrate that the present invention is useful for the control of plant diseases.
Such control effect was evaluated by visually observing the area of blotch on a test plant during a test and then comparing the area of the blotch of a plant treated with the controlling reagent of the present invention with the area of the blotch of an untreated plant.

### Test example 1

### Test regarding effects of preventing infection by cucumber powdery mildew (Sphaerotheca fuliginea)

A plastic pot was filled with sandy soil, and cucumber (variety: Sagami-Hanjiro) was then seeded. The cucumber was allowed to grow in a green house for 12 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned cucumber plants. After completion of the foliage application, the plants were air-dried. Thereafter, the spores of the pathogenic microbes were applied onto the plant leaf surface. After such inoculation, the plants were left in a green house at 23°C for 10 days. Thereafter, the affected areas thereof were then examined. As a result, it was found that the affected areas of plants which had been treated with the present compounds as indicated below were 30% or less of the affected areas of untreated plants.
7, 10, 11, 20, 23, 24, 26, 27, 28, 29, 31, 38, 46, 48, 49, 50, 51, 52, 58, 62, 72, 73, 74, 80, 82, 85, 86, 90, 91, 92, 97, 98, 100, 102, 103, 108, 109, 112, 115, 116, 122, 123, 125, 126, 127, 128, 131, 132, 133, 134, 135, 136, 137, 141, 143, 145, 147, 155, 156, 157, 159, 160, 161, 162, 164, 165, 166, 167, 168, 169, 170, 171, 172, 173, 174, 175, 176, 177, 178, 179, 181, 183, 188, 189, 191, 193, 194, 195, 199, 201, 202, 203, 204, 205, 2t36, 207, 208, 209, 210, 211, 212, 213, 214, 215, 216, 219, 220, 221, 222, 224, 225, 226, 227, 228, 231, 232, 233, 235, 238, 243, 247, 248, 255, 263, 264, 265, 267, 272, 278, 279, 280, 283, 284, 286, 287, 297, 298, 300, 301, 302, 304, 305, 305, 306, 307, 308, 309, 312, 314, 315, 318, 319, 320, 321, 322, 323, 344, and 347.

### Test example 2

### Test regarding effects of preventing infection by wheat leaf blotch (Septoria tritici)

A plastic pot was filled with sandy soil, and wheat (variety: Apogee) was then seeded. The wheat was allowed to grow in a green house for 10 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned wheat plants. After completion of the foliage application, the plants were air-dried. Two days later, a water suspension containing the wheat leaf blight spores was inoculated into the cotyledona surface by spraying it. After such inoculation, the plants were left at 23°C at a high humidity for 3 days, and then under illumination for 14 to 18 days. Thereafter, the affected areas thereof were then examined. As a result, it was found that the affected areas of plants which had been treated with the present compounds as indicated below were 30% or less of the affected areas of untreated plants.
20, 29, 54, 62, 92, 115, 122, 127, 134, 175, 176, 179, 183, 185, 203, 204, 205, 206, 208, 211, 212, 213, 229, 238, 247, 249, 252, 260, 265, 266, 268, 269, 272, 273, 275, 276, 282, 284, 287, 297, 298, 300, 302, 304, 305, 307, 308, 309, 313, 343, and 344.

### Test example 3

### Test regarding effects of preventing infection by cucumber gray mold (Botrytis cinerea)

A plastic pot was filled with sandy soil, and cucumber (variety: Sagami-Hanjiro) was then seeded. The cucumber was allowed to grow in a green house for 12 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned cucumber plants. After completion of the foliage application, the plants were air-dried. Thereafter, a *Botrytis cinerea* spore-containing PDA medium was placed on the plant leaf surface. After such inoculation, the plants were left at 12°C at a high humidity for 4 days. Thereafter, the affected areas thereof were then examined. As a result, it was found that the affected areas of plants which had been treated with the present compounds as indicated below were 30% or less of the affected areas of untreated plants.
3, 11, 16, 17, 19, 20, 21, 22, 23, 28, 29, 31, 34, 35, 37, 38, 39, 40, 46, 48, 54, 55, 57, 59, 61, 62, 77, 82, 83, 84, 87, 90, 92, 94, 95, 96, 98, 100, 112, 115, 116, 118, 119, 122, 126, 132, 135, 149, 152, 171, 173, 175, 176, 178, 179, 180, 181, 182, 183, 188, 190, 191, 198, 199, 210, 218, 225, 227, 236, 240, 241, 242, 244, 245, 246, 249, 250, 251, 255, 257, 258, 259, 260, 261, 262, 263, 280, 282, 286, 308, 309, 314, 315, 318, 319, 320, 321, 323, 346, and 347.

### Test example 4

### Test regarding effects of preventing infection by cucumber white mold (Sclerotinia sclerotiorum)

A plastic pot was filled with sandy soil, and cucumber (variety: Sagami-Hanjiro) was then seeded. The cucumber was allowed to grow in a green house for 12 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned cucumber plants. After completion of the foliage application, the plants were air-dried. Thereafter, a cucumber *Sclerotinia sclerotiorum* hypha-containing PDA medium was placed on the cucumber leaf surface. After such inoculation, the plants were left at 18°C at a high humidity for 4 days. Thereafter, the affected areas thereof were then examined. As a result, it was found that the affected areas of plants which had been treated with the present compounds as indicated below were 30% or less of the affected areas of untreated plants.
3, 7, 8, 10, 11, 14, 16, 17, 18, 19, 20, 21, 23, 25, 27, 28, 29, 31, 32, 33, 34, 35, 36, 37, 38, 39, 40, 41, 43, 46, 47, 48, 49, 51, 52, 53, 54, 55, 57, 58, 59, 60, 61, 62, 65, 66, 67, 68, 73, 77, 78, 79, 80, 82, 83, 84, 86, 87, 88, 89, 90, 92, 94, 95, 96, 97, 98, 99, 100, 101, 102, 103, 106, 107, 109, 110, 111, 112, 113, 115, 116, 117, 118, 119, 122, 123, 124, 126, 127, 128, 131, 132, 133, 134, 135, 139, 141, 142, 145, 149, 150, 151, 152, 153, 154, 164, 165, 167, 168, 169, 170, 171, 172, 173, 174, 175, 176, 177, 178, 179, 180, 181, 182, 183, 184, 186, 188, 190, 191, 194, 195, 196, 197, 198, 199, 200, 202, 203, 205, 206, 208, 209, 210, 211, 212, 215, 218, 219, 221, 222, 224, 225, 226, 227, 228, 232, 233, 235, 236, 240, 241, 242, 243, 244, 245, 246, 248, 249, 250, 251, 254, 262, 263, 264, 266, 314, 315, and 343.

### Test example 5

### Test regarding effects of preventing infection by Japanese radish sooty spot (Alternaria brassicicola)

A plastic pot was filled with sandy soil, and Japanese radish (variety: Wase-Shijunichi) was then seeded. The Japanese radish was allowed to grow in a green house for 5 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned Japanese radish plants. After completion of the foliage application, the plants were air-dried. Thereafter, a water suspension containing the Japanese radish black spot spores was sprayed onto the plant leaf surface. After such inoculation, the plants were first left at 24°C at a high humidity for 1 day, and then in a green house for 3 days. Thereafter, the affected areas thereof were then examined. As a result, it was found that the affected areas of plants which had been treated with the present compounds as indicated below were 30% or less of the affected areas of untreated plants.
5, 10, 11, 27, 29, 48, 50, 51, 52, 72, 73, 74, 102, 122, 133, 134, 137, 139, 145, 149, 156, 159, 161, 162, 167, 168, 169, 170, 172, 175, 176, 178, 179, 183, 187, 188, 189, 191, 193, 194, 195, 199, 200, 206, 207, 208, 210, 213, 214, 216, 219, 227, 231, 232, 233, 247, and 249.

### Test example 6

### Test regarding effects of treating grape downy mildew (Plasmopara viticola)

A plastic pot was filled with sandy soil, and grape (variety: Berry-A or Chardonnay seedling) was then seeded. The grape plants were allowed to grow in a green house for 40 days. A water suspension of zoosporangium of grape *Plasmopara viticola* was inoculated to the aforementioned pot by spaying it. Thereafter, the grape plants were left at 23°C at a high humidity for 1 day, and they were then air-dried, so as to obtain grape downy mildew-infected nursery plants. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned nursery grape plants. After completion of the foliage application, the plants were subjected to air-drying, and they were then left at 23°C in a green house for 5 days. Thereafter, the plants were further left at 23°C at a high humidity for 1 day. Thereafter, the affected areas thereof were examined. As a result, it was found that the affected areas of plants which had been treated with the present compound 236 were 30% or less of the affected areas of untreated plants.

### Test example 7

### Test regarding effects of preventing infection by tomato late blight (Phytophthora infestans)

A plastic pot was filled with sandy soil, and tomato (variety: Patio) was then seeded. The tomato was allowed to grow in a green house for 20 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned nursery tomato plants. The plants were subjected to air-drying to such an extent that the diluted solution on the leave surface could be dried. Thereafter, a *Phytophthora infestans* spore-containing water suspension was inoculated into the nursery tomato plants by spraying it. After completion of the inoculation, the plants were first left at 23 °C at a high humidity for 1 day, and they were then allowed to grow in a green house for 4 days. Thereafter, the affected areas thereof were examined. As a result, it was found that the affected areas of plants which had been treated with the present compounds were 30% or less of the affected areas of untreated plants.
1, 2, 8, 9, 10, 11, 12, 13, 16, 17, 18, 19, 20, 21, 22, 23, 24, 25, 26, 27, 29, 31, 32, 34, 35, 39, 41, 43, 44, 48, 49, 51, 52, 64, 71, 75, 85, 86, 89, 90, 92, 95, 96, 97, 98, 102, 103, 104, 105, 106, 108, 110, 119, 124, 133, 134, 135, 138, 139, 140, 141, 143, 144, 146, 147, 148, 149, 152, 153, 156, 157, 158, 159, 160, 161, 162, 163, 173, 176, 183, 184, 186, 187, 188, 189, 190, 191, 193, 199, 201, 202, 203, 208, 203, 212, 213, 216, 224, 230, 247, 248, 253, 256, 257, 283, 296, 297, 298, 300, 301, 302, 305, 307, 310, 311, 312, 315, 317, 319, 321, 323, 343, 346, and 347.

### Test example 8

### Test regarding effects of preventing infection by rice blast disease (Magnaporthe grisea)

A plastic pot was filled with soil, and rice (variety: Nihonbare) was then seeded. The rice plants were allowed to grow in a green house for 12 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned rice plants. After completion of the foliage application, the plants were subjected to air-drying. Thereafter, pots containing leaves inflected with rice blast disease were left at rest around the applied rice plants. All the rice plants were left at a high humidity only during the night. Five days after the inoculation, the affected areas thereof were examined. As a result, it was found that the affected areas of plants which had been treated with the present compounds as indicated below were 30% or less of the affected areas of untreated plants.
3, 8, 11, 17, 18, 19, 20, 21, 23, 28, 29, 31, 34, 35, 36, 37, 39, 40, 41, 44, 46, 47, 48, 49, 51, 52, 53, 58, 59, 61, 62, 69, 71, 72, 73, 74, 76, 77, 79, 82, 90, 91, 92, 93, 94, 95, 96, 97, 104, 112, 113, 115, 116, 118, 119, 122, 126, 127, 128, 130, 132, 135, 136, 138, 140, 141, 142, 143, 165, 166, 167, 168, 171, 172, 173, 174, 175, 176, 177, 179, 180, 181, 182, 183, 188, 189, 193, 194, 195, 196, 199, 200, 201, 202, 203, 205, 206, 207, 208, 209, 210, 211, 212, 218, 219, 221, 224, 225, 228, 229, 232, 233, 234, 235, 236, 237, 240, 241, 242, 243, 244, 245, 246, 247, 248, 249, 250, 255, 256, 257, 258, 259, 260, 261, 263, 365, 266, 268, 269, 271, 273, 279, 280, 282, 293, 284, 285, 286, 297, 298, 300, 301, 311, 312, 314, 315, 318, 319, 320, 343, 344, 345, 346, and 347.

### Test example 9

### Test regarding effects of preventing infection by wheat leaf rust (Puccinia triticina)

A plastic pot was filled with sandy soil, and wheat (variety: Shirogane) was then seeded. The wheat was allowed to grow in a green house for 10 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned wheat plants. Five days later, spores of wheat brown leaf rust microbes were inoculated into the wheat plants by spraying it. After completion of the inoculation, the plants were first left at 18°C at a high humidity in a dark place for 1 day, and they were then left under illumination for 9 days. Thereafter, the affected areas thereof were examined. As a result, it was found that the affected areas of plants which had been treated with the present compounds as indicated below were 30% or less of the affected areas of untreated plants.
70, 115, 117, 122, 127, 134, 157, 176, 178, 179, 183, 188, 203, 205, 206, 207, 208, 212, 213, 214, 215, 216, 219, 229, 239, 247, 248, 249, 269, 271, 273, 298, 305, 309, and 317.

### Test example 10

### Test regarding effects of preventing infection by tomato wilt by soil treatment (drench)

A plastic pot was filled with soil contaminated with tomato wilt *(Fusarium oxysporum*), and tomato (variety: Patio) was then seeded. Flowable formulations were produced from the present compounds in accordance with Formulation example 6. The prepared flowable formulations were then diluted with water. Thereafter, the aforementioned solution was applied to the soil by a soil drench treatment, such that 10 mg of the present compound could be applied to each plastic pot. The tomato plants were then allowed to grow in a green house for 1 month. Thereafter, the growing condition of the plants was examined. As a result, it could be confirmed that when compared with plants grown in soil that had not been subjected to a soil drench treatment with the present compounds 1 to 347 (untreated group), plants grown in soil treated with the present compounds 1 to 347 (treated group) had reduced tomato wilt symptoms.

### Test example 11

### Test regarding effects of preventing infection by potato blue stem by soil treatment (drench)

A plastic pot was filled with soil contaminated with potato blue stem (*Verticillium albo-atrum, V. dahliae, V. nigrescens*), and potato (variety: Danshaku) was then planted. Flowable formulations were produced from the present compounds in accordance with Formulation example 6. The prepared flowable formulations were then diluted with water. Thereafter, the aforementioned solution was applied to the soil by a soil drench treatment, such that 10 mg of the present compound could be applied to each plastic pot. The potato plants were then allowed to grow in a green house for 2 months. Thereafter, the growing condition of the plants was examined. As a result, it could be confirmed that when compared with plants grown in soil that had not been subjected to a soil drench treatment with the present compounds 1 to 347 (untreated group), plants grown in soil treated with the present compounds 1 to 347 (treated group) had reduced potato blue stem symptoms.

### Test example 12

### Test regarding seed treatment of rice bakanae disease

Flowable formulations were produced from the present compounds in accordance with Formulation example 6. The prepared formulations were diluted with water to 2000 ppm. Thereafter, unhulled rice contaminated with rice bakanae disease (*Gibberella fujikuroi*) was subjected to a seed treatment by an immersion method. Thereafter, the aforementioned contaminated unhulled rice that had been subjected to the seed treatment was seeded in a nursery box filled with soil, and it was then allowed to grow in a green house for 1 month. Thereafter, the growing condition of the plants was examined. As a result, it could be confirmed that when compared with plants that had not been subjected to a seed treatment with the present compounds 1 to 347 (untreated group), plants subjected to such a seed treatment with the present compounds 1 to 347 (treated group) had reduced rice bakanae disease symptoms.

### Test example 13

### Test regarding seed treatment of malt damping off

Flowable formulations were produced from the present compounds in accordance with Formulation example 6. Thereafter, wheat seeds contaminated with malt damping off (*Gaeumannomyces graminis*) were subjected to a seed treatment by a smear method with a seed dresser. That is, they were treated with the aforementioned flowable formulations, such that 200 g of the present compound could be applied to 100 kg of the contaminated seeds. Thereafter, the aforementioned contaminated seeds that had been subjected to the seed treatment were seeded in a plastic pot filled with sandy soil, and they were then allowed to grow in a green house for 1 month. Thereafter, the growing condition of the plants was examined. As a result, it could be confirmed that when compared with plants that had not been subjected to a seed treatment with the present compounds 1 to 347 (untreated group), plants subjected to such a seed treatment with the present compounds 1 to 347 (treated group) had reduced malt damping off symptoms.

### Test example 14

A plastic pot was filled with sandy soil, and kidney beans (variety: Nagauzura) were then seeded. The kidney bean plants were allowed to grow in a green house for 8 days. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned kidney bean plants. After completion of the foliage application, the plants were air-dried. Thereafter, a kidney bean *Sclerotinia sclerotiorum* hypha-containing PDA medium was placed on the kidney bean leaf surface. After such inoculation, all the kidney bean plants were left at a high humidity only during the night. Five days after the inoculation, the affected areas thereof were then examined. As a result, it was found that the affected areas of plants which had been treated with the present compounds as indicated below were 30% or less of the affected areas of untreated plants.
255, 256, 257, 267, 269, 282, 296, 297, 298, 301, 304, 305, 309, 320, 322, 344, 345, and 346.

### Test example 15

### Test regarding effects of treating cucumber downy mildew (Pseudoperonospora cubensis)

A plastic pot was filled with sandy soil, and cucumber (variety:Sagami-Hanjiro) was then seeded. The cucumber plants were allowed to grow in a green house for 12 days. A water suspension of zoosporangium of cucumber *Pseudoperonospora cubensis* was inoculated to the aforementioned pot by spraying it. Thereafter, the cucumber plants were left at 23°C at a high humidity for 1 day, and they were then air-dried, so as to obtain cucumber downy mildew-infected nursery plants. Flowable formulations were produced from the present compounds in accordance with Formulation example 6. The prepared flowable formulations were set to a predetermined concentration (500 ppm) by diluting them with water, and they were then subjected to foliage application such that they could be sufficiently attached to the leaves of the aforementioned nursery cucumber plants. After completion of the foliage application, the plants were subjected to air-drying, and they were then left at 23°C in a green house for 5 days. Thereafter, the plants were further left at 23°C at a high humidity for 1 day. Thereafter, the affected areas thereof were examined. As a result, it was found that the affected areas of plants which had been treated with the present compounds 298, 300, 305, 309, 318, 319, 320, 321, 323, 346 and 347 were 30% or less of the affected areas of untreated plants.

### INDUSTRIAL APPLICABILITY

According to the present invention, plant diseases caused by plant pathogenic microbes (except for Aspergillus) can be controlled or prevented.

## Claims

1. Agricultural composition for controlling plant diseases caused by plant pathogenic microbes (except for Aspergillus), comprising a compound represented by formula (1): 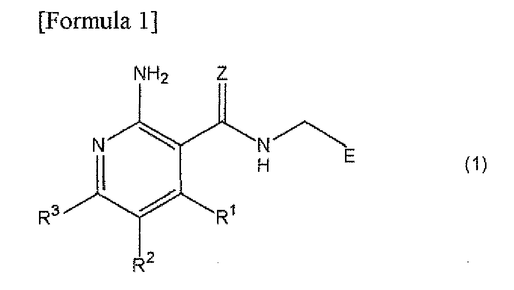 wherein Z represents an oxygen atom, a sulfur atom, or NR^{Z} wherein R^{Z} represents a C1-6 alkoxy group or a cyano group;
E represents a furyl group that may optionally have one or two substituents selected from the following substituent group a-1 and substituent group a-2, a thienyl group that may optionally have one or two substituents selected from the following substituent group a-1 and substituent group a-2, a pyrrolyl group that may optionally have one or two substituents selected from the following substituent group a-1 and substituent group a-2, a tetrazolyl group that may optionally have one or two substituents selected from the following substituent group a-1 and substituent group a-2, a thiazolyl group that may optionally have one or two substituents selected from the following substituent group a-1 and substituent group a-2, a pyrazolyl group that may optionally have one or two substituents selected from the following substituent group a-1 and substituent group a-2 or a phenyl group that may optionally have one or two substituents selected from the following substituent group a-1 and substituent group a-2;
each of R¹, R² and R³ independently represents a hydrogen atom or a group selected from the substituent group a-1 and the substituent group a-2:
[Substituent group a-1]
halogen atom, amino group, hydroxyl group, mercapto group, cyano group, formyl group, carboxyl group, C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C3-8 cycloalkylidene C1-6 alkyl group, C6-10 aryl C1-6 alkyl group, C6-10 aryl C2-6 alkenyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5- to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-C1-8 alkylamino group, C1-8 alkylcarbonyl group, C6-10 arylcarbonyl group, C1-8 alkoxycarbonyl group, C1-8 alkylsulfonyl group, C1-8 alkylsulfinyl group, a group represented by a formula - C(=N-R^{a1})R^{a2} (wherein R^{a1} represents a hydroxyl group or a C1-8 alkoxy group; and R^{a2} represents a hydrogen atom or a C1-8 alkyl group), C6-10 aryloxy C1-6 alkyl group, 5- to 10-membered heterocyclic oxy C1-6 alkyl group and C1-3 trialkylsilyl C2-9 alkynyl group; and
[Substituent group a-2]
C1-8 alkyl group, C2-9 alkenyl group, C2-9 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, 5- to 10-membered heterocyclic C1-6 alkyl group, C1-8 alkoxy group, C3-9 alkenyloxy group, C3-9 alkynyloxy group, C3-8 cycloalkoxy group, C6-10 aryloxy group, 5- to 10-membered heterocyclic oxy group, C3-8 cycloalkyl C1-6 alkoxy group, C6-10 aryl C1-6 alkoxy group, 5- to 10-membered heterocyclic C1-6 alkoxy group, C1-8 alkylthio group, C3-9 alkenylthio group, C3-9 alkynylthio group, C3-8 cycloalkylthio group, C6-10 arylthio group, C3-8 cycloalkyl C1-6 alkylthio group, C6-10 aryl C1-6 alkylthio group, 5- to 10-membered heterocyclic C1-6 alkylthio group, mono-C1-8 alkylamino group, mono-C3-9 alkenylamino group, mono-C3-9 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group, mono-5- to 10-membered heterocyclic C1-6 alkylamino group, di-C1-6 alkylamino group, N-C3-9 alkenyl-N-C1-8 alkylamino group, N-C3-9 alkynyl-N-C1-8 alkylamino group, N-C3-8 cycloalkyl-N-C1-8 alkylamino group, N-C6-10 aryl-N-C1-8 alkylamino group, N-C3-8 cycloalkyl C1-6 alkyl-N-C1-8 alkylamino group, N-C6-10 aryl C1-6 alkyl-N-C1-8 alkylamino group, N-5- to 10-membered heterocyclic C1-6 alkyl-N-C1-8 alkylamino group, C6-10 aryloxy C1-6 alkyl group and 5- to 10-membered heterocyclic oxy C1-6 alkyl group;
wherein each group described in the substituent group a-2 has one to three substituents selected from the following substituent group b:
[Substituent group b]
halogen atom, hydroxyl group, mercapto group, cyano group, carboxyl group, amino group, carbamoyl group, nitro group, C1-6 alkyl group, C3-8 cycloalkyl group, C6-10 aryl group, 5- to 10-membered heterocyclic group, C1-6 alkoxy group, C6-10 aryloxy group, 5- to 10-membered heterocyclic oxy group, C1-6 alkoxycarbonyl group, C1-6 alkylthio group, C1-6 alkylsulfonyl group, trifluoromethyl group, trifluoromethoxy group, mono-C1-6 alkylamino group, di-C1-6 alkylamino group, mono-C6-10 arylamino group optionally having one amino group or one aminosulfonyl group and N-C6-10 aryl C1-6 alkyl-N-C1-6 alkylamino group optionally having one amino group;
a salt thereof or a hydrate thereof

2. The agricultural composition according to claim 1, wherein each of R¹, R² and R³ in formula (1) independently represents a hydrogen atom or a group selected from the following substituent group c-1 and substituent group c-2:
[Substituent group c-1]
halogen atom, amino group, C1-6 alkyl group, C2-6 alkenyl group, C2-6 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, C6-10 aryl C2-6 alkenyl group, 5- to 10-membered heterocyclic C1-6 alkyl group, C1-6 alkoxy group, C3-6 alkenyloxy group, C3-6 alkynyloxy group, C3-8 cycloalkyl C1-6 alkoxy group, C6-10 aryl C1-6 alkoxy group, 5- to 10-membered heterocyclic C1-6 alkoxy group, mono-C1-6 alkylamino group, mono-C3-6 alkenylamino group, mono-C3-6 alkynylamino group, mono-C3-8 cycloalkylamino group, mono-C1-6 arylamino group, mono-C6-10 cycloalkyl C1-6 alkylamino group, mono-C1-6 aryl C1-6 alkylamino group, mono-5- to 10-membered heterocyclic C 1-6 alkylamino group, C2-6 alkylcarbonyl group and a group represented by a formula -C(=N-OH)R^{a2} wherein R^{a2} has the same meanings as defined above; and
[Substituent group c-2]
C1-6 alkyl group, C2-6 alkenyl group, C2-6 alkynyl group, C3-8 cycloalkyl group, C6-10 aryl group, 5- to 10-membered heterocyclic group, C3-8 cycloalkyl C1-6 alkyl group, C6-10 aryl C1-6 alkyl group, 5- to 10-membered heterocyclic C1-6 alkyl group, C1-6 alkoxy group, C3-6 alkenyloxy group, C3-6 alkynyloxy group, C3-8 cycloalkyl C₁₋₆ alkoxy group, C6-10 aryl C1-6 alkoxy group, 5- to 10-membered heterocyclic C1-6 alkoxy group, mono-C1-6 alkylamino group, mono-C3-6 alkenylamino group, mono-C3-6 alkynylamino group, mono-C3-8 cycloalkylamino group, mono-C6-10 arylamino group, mono-C3-8 cycloalkyl C1-6 alkylamino group, mono-C6-10 aryl C1-6 alkylamino group and mono-5- to 10-membered heterocyclic C1-6 alkylamino group; wherein each group described in the substituent group c-2 has one to three substituents selected from the following substituent group d:
[Substituent group d]
halogen atom, hydroxyl group, carboxyl group, amino group, carbamoyl group, C1-6 alkyl group, C1-6 alkoxy group, C1-6 alkylthio group, mono-C1-6 alkylamino group, di-C1-6 alkylamino group, mono-C5-10 arylamino group optionally having one amino group or one aminosulfonyl group, N-C6-10 aryl C1-6 alkyl-N-C1-6 alkylamino group optionally having one amino group, cyano group, C6-10 aryl group, 5- to 10-membered heterocyclic group and C1-6 alkoxycarbonyl group.

3. The agricultural composition according to claim 1, wherein each of R¹, R² and R³ in formula (1) independently represents a hydrogen atom or a group selected from the following substituent group c-11 and substituent group c-12:
[Substituent group c-11]
halogen atom, amino group, C1-6 alkyl group, C2-6 alkenyl group, C2-6 alkynyl group, C3-8 cycloalkyl group, C3-8 cycloalkyl C1-6 alkyl group, C1-6 alkoxy group, C3-5 alkenyloxy group, C3-6 alkynyloxy group, C3-8 cycloalkyl C1-6 alkoxy group, mono-C1-6 alkylamino group, mono-C3-6 alkenylamino group, mono-C3-6 alkynylamino group, mono-C3-8 cycloalkylamino group and mono-C3-8 cycloalkyl C1-6 alkylamino group; and
[Substituent group c-12]
C1-6 alkyl group, C2-6 alkenyl group, C2-6 alkynyl group, C3-8 cycloalkyl group, C3-8 cycloalkyl C1-6 alkyl group, C1-6 alkoxy group, C3-6 alkenyloxy group, C3-6 alkenyloxy group, C3-8 cycloalkyl C1-6 alkoxy group, mono-C1-6 alkylamino group, mono-C3-6 alkenylamino group, mono-C3-6 alkynylamino group, mono-C3-8 cycloalkylamino group and mono-C3-8 cycloalkyl C1-6 alkylamino group;
wherein each group described in the substituent group c-12 has one to three substituents selected from the following substituent group d1:
[Substituent group d1]
halogen atom, hydroxyl group, carboxyl group, amino group, carbamoyl group, C1-6 alkyl group, C1-6 alkoxy group, C1-6 alkylthio group, mono-C1-6 alkylamino group, di-C1-6 alkylamino group and cyano group.

4. The agricultural composition according to claim 1, wherein each of R¹, R² and R³ in formula (1) independently represents a hydrogen atom or a group selected from the following substituent group c-21 and substituent group c-22:
[Substituent group c-21]
halogen atom, amino group, C1-6 alkyl group, C1-6 alkoxy group, and mono-C1-6 alkylamino group; and
[Substituent group c-22]
C1-6 alkyl group, C1-6 alkoxy group and mono-C1-6 alkylamino group;
wherein each group described in the substituent group c-22 has one to three substituents selected from the following substituent group d2:
[Substituent group d2]
halogen atom, C1-6 alkoxy group and C1-6 alkylthio group.

5. The agricultural composition according to claim 1, wherein in formula (1) R¹ represents a hydrogen atom, R² represents a hydrogen atom or a halogen atom, and R³ represents a hydrogen atom or a group selected from the following substituent group c-21 and substituent group c-22:
[Substituent group c-21]
halogen atom, amino group, C₁₋₆ alkyl group, C₁₋₆ alkoxy group and mono-C₁₋₆ alkylamino group; and
[Substituent group c-22]
C1-6 alkyl group, C1-6 alkoxy group and mono-C1-6 alkylamino group;
wherein each group described in the substituent group c-22 has one to three substituents selected from the following substituent group d2:
[Substituent group d2]
halogen atom, C1-6 alkoxy group and C 1-6 alkylthio group.

6. The agricultural composition according to claim 1, wherein each of R¹, R² and R³ in formula (1) represents a hydrogen atom.

7. The agricultural composition according to any one of claims 1 to 6, wherein E in formula (1) represents a furyl group that may optionally have one or two substituents selected from the substituent group a-1 and the substituent group a-2, a thienyl group that may optionally have one or two substituents selected from the substituent group a-1 and the substituent group a-2, a pyrrolyl group that may optionally have one or two substituents selected from the substituent group a-1 and the substituent group a-2 or a phenyl group that may optionally have one or two substituents selected from the substituent group a-1 and the substituent group a-2.

8. The agricultural composition according to any one of claims 1 to 6, wherein E in formula (1) represents a furyl group, a thienyl group, a pyrrolyl group, or a phenyl group wherein E may optionally have one or two substituents selected from the following substituent group e-1 and substituent group e-2:
[Substituent group e-1]
halogen atom, C1-6 alkyl group, C2-6 alkenyl group, C2-6 alkynyl group, C6-10 aryl group, C3-8 cycloalkyl C1-6 alkyl group, C3-8 cycloalkylidene C1-6 alkyl group, C6-10 aryl C1-6 alkyl group, C6-10 aryl C2-6 alkenyl group, 5- to 10-membered heterocyclic C1-6 alkyl group, C1-6 alkoxy group, C3-6 alkenyloxy group, C3-6 alkynyloxy group, C6-10 aryloxy group, C3-8 cycloalkyl C1-6 alkoxy group, C6-10 aryl C1-6 alkoxy group, 5- to 10-membered heterocyclic C1-6 alkoxy group, C6-10 arylthio group, C6-10 aryl C1-6 alkylthio group, mono-C6-10 arylamino group, mono-C6-10 aryl C1-6 alkylamino group, N-C6-10 aryl-N-C1-6 alkylamino group, N-C6-10 aryl C1-6 alkyl-N-C1-6 alkylamino group, C6-10 aryloxy C1-6 alkyl group and 5- to 10-membered heterocyclic oxy C1-6 alkyl group; and
[Substituent group e-2]
C1-6 alkyl group, C2-6 alkenyl group, C2-6 alkynyl group, C6-10 aryl group, C3-8 cycloalkyl C1-6 alkyl group, C6-10 aryl C1-6 alkyl group, 5- to 10-membered heterocyclic C1-6 alkyl group, C1-6 alkoxy group, C3-6 alkenyloxy group, C3-6 alkynyloxy group, C6-10 aryloxy group, C3-8 cycloalkyl C1-6 alkoxy group, C6-10 aryl C1-6 alkoxy group, 5- to 10-membered heterocyclic C1-6 alkoxy group, C6-10 arylthio group, C6-10 aryl C1-6 alkylthio group, mono-C6-10 arylamino group, mono-C6-10 aryl C1-6 alkylamino group, N-C6-10 aryl-N-C1-6 alkylamino group, N-C6-10 aryl C1-6 alkyl-N-C1-6 alkylamino group, C6-10 aryloxy C1-6 alkyl group and 5- to 10-membered heterocyclic oxy C1-6 alkyl group;
wherein each group described in the substituent group e-2 has one to three substituents selected from the following substituent group f:
[Substituent group f]
halogen atom, hydroxyl group, cyano group, amino group, nitro group, C3-8 cycloalkyl group, C1-6 alkoxy group, C1-6 alkylthio group, C6-10 aryloxy group, 5- to 10-membered heterocyclic oxy group, C1-6 alkoxycarbonyl group, C1-6 alkylsulfonyl group, mono-C6-10 arylamino group, trifluoromethyl group, trifluoromethoxy group and C1-6 alkyl group.

9. The agricultural composition according to any one of claims 1 to 6, wherein E in formula (1) represents a furyl group that may optionally have one substituent selected from the following substituent group g-1 and substituent group g-2, a thienyl group that may optionally have one substituent selected from the following substituent group g-1 and substituent group g-2, a pyrrolyl group that may optionally have one substituent selected from the following substituent group g-1 and substituent group g-2, or a phenyl group that may optionally have one substituent selected from the following substituent group g-1 and substituent group g-2:
[Substituent group g-1]
C1-6 alkyl group, C2-6 alkenyl group, C2-6 alkynyl group, C3-8 cycloalkyl C1-6 alkyl group, phenyl C1-6 alkyl group, furyl C1-6 alkyl group, thienyl C1-6 alkyl group, benzofuryl C1-6 alkyl group, benzothienyl C1-6 alkyl group, C1-6 alkoxy group, C3-6 alkenyloxy group, C3-6 alkynyloxy group, phenoxy group, C3-8 cycloalkyl C1-6 alkoxy group, phenyl C1-6 alkoxy group, furyl C1-6 alkoxy group, thienyl C1-6 alkoxy group, pyridyl C1-6 alkoxy group, phenoxy C1-6 alkyl group and pyridyloxy C1-6 alkyl group; and
[Substituent group g-2]
C1-6 alkyl group, C2-6 alkenyl group, C2-6 alkynyl group, C3-8 cycloalkyl C1-6 alkyl group, phenyl C1-6 alkyl group, furyl C1-6 alkyl group, thienyl C1-6 alkyl group, benzofuryl C1-6 alkyl group, benzothienyl C1-6 alkyl group, C1-6 alkoxy group, C3-6 alkenyloxy group, C3-6 alkynyloxy group, phenoxy group, C3-8 cycloalkyl C1-6 alkoxy group, phenyl C1-6 alkoxy group, furyl C1-6 alkoxy group, thienyl C1-6 alkoxy group, pyridyl C1-6 alkoxy group, phenoxy C1-6 alkyl group and pyridyloxy C1-6 alkyl group;
wherein each group described in the substituent group g-2 has one to three substituents selected from the following substituent group h:
[Substituent group h]
halogen atom, hydroxyl group, cyano group, trifluoromethyl group, C1-6 alkyl group, C1-6 alkoxy group and C1-6 alkylthio group.

10. The agricultural composition according to any one of claims 1 to 6, wherein E in formula (1) represents a 2-furyl group that may optionally have one substituent selected from the substituent group g-1 and the substituent group g-2, a 2-thienyl group that may optionally have one substituent selected from the substituent group g-1 and the substituent group g-2, a 3-pyrrolyl group that may optionally have one substituent selected from the substituent group g-1 and the substituent group g-2 or a phenyl group that may optionally have one substituent selected from the substituent group g-1 and the substituent group g-2.

11. The agricultural composition according to any one of claims 1 to 6, wherein E in formula (1) represents a 2-furyl group that may optionally have one substituent selected from the substituent group g-1 and the substituent group g-2 or a 2-thienyl group that may optionally have one substituent selected from the substituent group g-1 and the substituent group g-2.

12. The agricultural composition according to any one of claims 1 to 6, wherein E in formula (1) represents a phenyl group that may optionally have one substituent selected from the substituent group g-1 and the substituent group g-2.

13. The agricultural composition according to any one of claims 1 to 12, wherein Z in formula (1) represents an oxygen atom.

14. The agricultural composition according to any one of claims 1 to 13, wherein the plant pathogenic microbes are plant pathogenic filamentous fungi (except for Aspergillus).

15. A method for controlling or preventing plant diseases caused by plant pathogenic microbes (except for Aspergillus), which comprises applying an effective amount of the agricultural composition according to any one of claims 1 to 13 to useful crops.

16. The method according to claim 15, wherein the application is foliage application, soil treatment or seed disinfection.

17. Use of the compound represented by formula (1), a salt thereof or a hydrate thereof, for the manufacture of the agricultural composition according to claim 1.
